(19) Europäisches Patentamt
European Patent Office
Office européen des brevets

(11) **EP 3 707 711 B1**

(12) **EUROPEAN PATENT SPECIFICATION**

(45) Date of publication and mention
of the grant of the patent:
**06.09.2023 Bulletin 2023/36**

(21) Application number: **18796463.0**

(22) Date of filing: **08.11.2018**

(51) International Patent Classification (IPC):
**G10L 19/02** (2013.01)    **G10L 19/022** (2013.01)
**G06F 17/14** (2006.01)    **G10L 25/45** (2013.01)

(52) Cooperative Patent Classification (CPC):
**G10L 19/0212; G06F 17/147; G10L 19/022;
G10L 25/45**

(86) International application number:
**PCT/EP2018/080532**

(87) International publication number:
**WO 2019/092061 (16.05.2019 Gazette 2019/20)**

(54) **ANALYSIS/SYNTHESIS WINDOWING FUNCTION FOR MODULATED LAPPED TRANSFORMATION**

ANALYSE-/SYNTHESE-FENSTERFUNKTION FÜR MODULIERTE GELÄPPTE TRANSFORMATION

FONCTION DE FENÊTRAGE D'ANALYSE/DE SYNTHÈSE POUR UNE TRANSFORMATION CHEVAUCHANTE MODULÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2017 EP 17201086**

(43) Date of publication of application:
**16.09.2020 Bulletin 2020/38**

(73) Proprietor: **Fraunhofer-Gesellschaft zur
Förderung
der angewandten Forschung e.V.
80686 München (DE)**

(72) Inventors:
• **SCHNELL, Markus
90409 Nürnberg (DE)**
• **LUTZKY, Manfred
90427 Nürnberg (DE)**
• **TSCHEKALINSKIJ, Alexander
90429 Nürnberg (DE)**
• **GEIGER, Ralf
91052 Erlangen (DE)**

(74) Representative: **Zinkler, Franz et al
Schoppe, Zimmermann, Stöckeler
Zinkler, Schenk & Partner mbB
Patentanwälte
Radlkoferstrasse 2
81373 München (DE)**

(56) References cited:
**US-A1- 2017 011 747    US-B2- 8 847 795**

• **HENRIQUE S MALVAR: "Biorthogonal and
Nonuniform Lapped Transforms for Transform
Coding with Reduced Blocking and Ringing
Artifacts", IEEE TRANSACTIONS ON SIGNAL
PROCESSING, IEEE SERVICE CENTER, NEW
YORK, NY, US, vol. 46, no. 4, April 1998 (1998-04),
XP011058114, ISSN: 1053-587X**
• **ANONYMOUS: "ISO/IEC 14496-3:2005/FDAM 9,
AAC-ELD", 82. MPEG MEETING;22-10-2007 -
26-10-2007; SHENZHEN; (MOTION PICTURE
EXPERT GROUP OR ISO/IEC JTC1/SC29/WG11),,
no. N9499, 21 February 2008 (2008-02-21),
XP030015994,**

- David Virette: "Low Delay Transform for High Quality Low Delay Audio Coding", , 10 December 2012 (2012-12-10), pages 1-195, XP055261425, Universit? de Rennes 1 Retrieved from the Internet: URL:https://hal.inria.fr/tel-01205574/docu ment [retrieved on 2016-03-30]

**Description**

1. Background

Lapped transforms have been developed for several audiocoding applications. These transforms are normally performed on consecutive blocks of a larger dataset (e.g., two consecutive frames) for an audio signal. Subsequent blocks may be overlapped. Accordingly, a last part of one block coincides with a first part of a subsequent block. A windowing function may be used.

Asymmetric modified discrete cosine transform (MDCT) windows, asymmetric modified discrete sine transform (MDST), time to frequency transformations, have been developed which embody modulated lapped transforms.

Asymmetric modified discrete cosine transform (MDCT) windows, asymmetric modified discrete sine transform (MDST) windows and other types of windows have been developed in the past years as they provide improved frequency responses compared to symmetric shapes, esp. for low delay signal applications, such as audio coding applications.

The first generation of window shapes just focused on the design of the frequency response, e.g. the G.718 or MPEG-4 AAC-ELD window. Recent developments also take the temporal shape of the window into account which is responsible for the temporal modulation of the quantization error, e.g. the ALDO window as used in the 3GPP EVS codec.

However, the design approach presented there comes along with the problem that the window shapes show a non-continuous differentiation which leads to a suboptimal frequency response. The described invention in this document presents a solution to overcome this problem.

HENRIQUE S MALVAR, "Biorthogonal and Nonuniform Lapped Transforms for Transform Coding with Reduced Blocking and Ringing Artifacts", IEEE TRANSACTIONS ON SIGNAL PROCESSING, IEEE SERVICE CENTER, NEW YORK, NY, US, vol. 46, no. 4, April 1998 discloses a method comprising performing a modified cosine transformation, MDCT, analysis for transforming a time domain, TD, representation of an information signal, or a processed version thereof, into a frequency domain, FD, representation using an analysis windowing function having a meandering portion which passes a linear function in correspondence of at least four points.

"ISO/IEC 14496-3:2005/FDAM 9, AAC-ELD", 82. MPEG MEETING;22-10-2007 - 26-10-2007; SHENZHEN; (MOTION PICTURE EXPERT GROUP OR ISO/IEC JTC1/SC29/WG11), no. N9499, 21 February 2008 discloses a technique for synthesis windows with a meandering portion.

US 2017/011747 A1 (FAURE JULIEN [FR] ET AL) 12 January 2017 discloses a symmetric synthesis window with a meandering portion and a corresponding analysis window.

David Virette, "Low Delay Transform for High Quality Low Delay Audio Coding", 10 December 2012, pages 1-195 discloses techniques based on advanced transforms for low delay audio coding.

2. Summary of the invention

The invention is defined in the independent claims.

3. Description of the drawings

Fig. 1 and 2 show schemes according to the prior art.

Fig. 3 to 12 show schemes of functions according to examples.

Figs. 13 and 13A show encoders according to examples.

Fig. 14 and 14A shows decoders according to examples.

Figs. 15 and 16 show methods according to examples.

Figs. 17 and 18 show apparatus according to examples.

Fig. 19 shows a scheme according to examples.

Fig. 20 shows a scheme according to the prior art.

Figs. 21 to 25 shows schemes according to examples.

Figs. 26 to 31 show schemes of functions according to examples.

4. Examples

An audio signal (hereinbelow referred to as "information signal") may be described in the time domain, TD, as a succession of samples (e.g., $x_b(n)$ for a block b and index, e.g., instant, n). The TD representation may be made of a plurality of frames, each associated to a plurality of samples. In the frequency domain, FD, a frame may be represented as a succession of bins (e.g., X (k), each associated to a particular frequency (each frequency being associated to an index k).

It is possible to convert a TD representation into an FD representation using a modulated lapped transform technique (such as a modified discrete cosine transform, MDCT, technique or a modified discrete sine transform, MDST, technique, for example). Such a technique may be implemented, for example, at an encoder side, so as to transform sampled values into frequency values.

It is possible to convert an FD representation into a TD representation using an inverse modulated lapped transform technique (such as an inverse modified discrete cosine transform, IMDCT, technique or an inverse modified discrete sine, IMDST, technique). Such a technique may be implemented, for example, at a decoder side, so as to transform frequency values into TD values (e.g., for performing reproduction).

The table below indicates symbols used in the following sections.

| Symbol | Description |
|---|---|
| $N$ or $N_F$ | Frame size; number of sample processed in one frame |
| $f_s$ | Sampling rate |
| $x_b(n)$ | Time domain sample of block b and index n |
| $X_b(k)$ | Frequency domain bin of block b and frequency index k |
| $Z$ or $L_Z$ | Number of leading zeros in MDCT window |

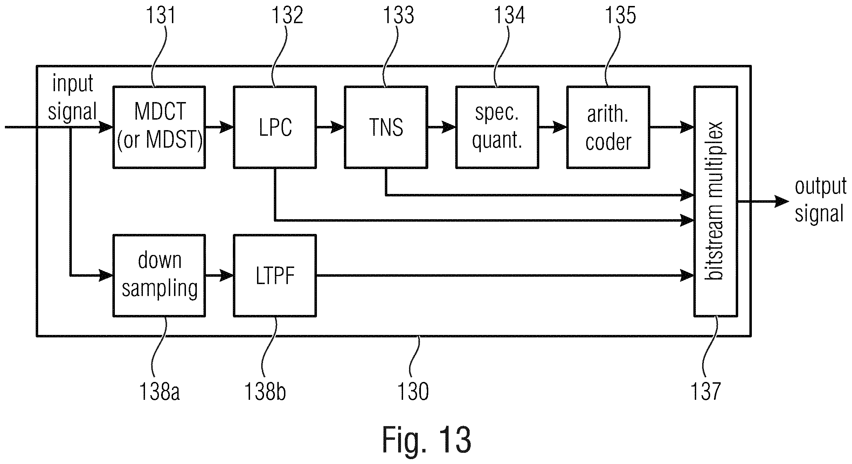

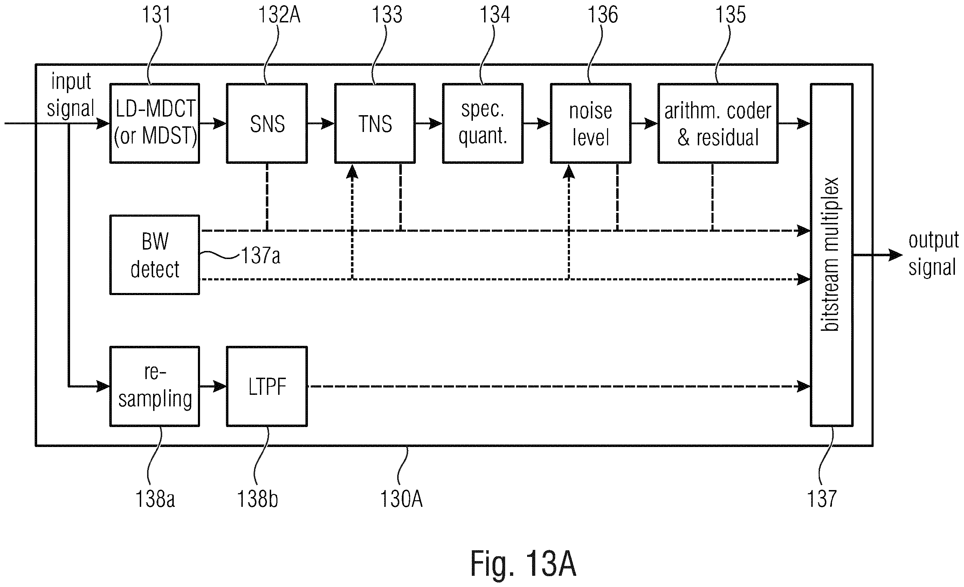

Figs. 13 and 13A show encoder apparatus 130 and 130A, respectively. Each of the encoder apparatus 130 or 130A may comprise a plurality of tools, such as functional blocks capable of performing signal processing techniques. Each of these blocks may be a standalone device or may be a functional block which divides a hardware structure with other tools of the encoder apparatus 130 and 130A.

The encoder apparatus 130 or 130A comprises a modulated lapped transform tool 131 (such as a low delay modified discrete cosine transform, MDCT, tool, or a low delay modified discrete sine transform, MDST, tool, or another type of modulated lapped transform tool) which converts an information signal (e.g., an audio signal) from a time domain, TD, representation to a frequency domain, FD, representation. The modulated lapped transform tool 131 (e.g., MDCT or MDST tool) performs modulated lapped transform analysis (e.g., an MDCT analysis, MDST analysis).

Other tools are provided. e.g., downstream to the modulated lapped transform tool 131 or operating in TD. Some of them are here mentioned.

The encoder apparatus 130 may comprise a linear predictive coding, LPC, tool 132 for performing an LPC analysis in the FD. The encoder apparatus 130A may comprise a spectral noise shaping, SNS, tool 132A for performing an LPC analysis in the FD.

SNS may be seen as a generalization of LPC and, therefore, in some examples, the LPC block 132 may be seen as a particular example of the SNS tool 132A (and the encoder apparatus 130 may be seen as a particular example of the encoder apparatus 130A).

Each of the encoder apparatus 130 and 130A may comprise a temporal noise shaping, TNS, tool 133, to control the temporal shape of noise within each window of the information signal (e.g., as output by the modulated lapped transform tool) in the FD.

Each of the encoder apparatus 130 and 130A may comprise a spectral quantizer 134 processing signals in the in the FD. The signal as output by the TNS tool 133 may be quantized, e.g., using dead-zone plus uniform thresholds scalar quantization.

Each of the encoder apparatus 130 and 130A may comprise a noise level estimator 136, e.g., downstream to the spectral quantizer 134.

Each of the encoder apparatus 130 and 130A may comprise a coder 135 processing signals in the FD, for example, to perform entropy coding, e.g., to compress a bitstream. The coder 135 may, for example, perform entropy coding.

Each of the encoder apparatus 130 and 130A may comprise a bandwidth detector 137a which may control, for example, a bandwidth controller at the decoder.

Each of the encoder apparatus 130 and 130A may comprise tools which process signals in the time domain, TD. For example, the encoder apparatus 130 or 130A may comprise a re-sampling tool 138a (e.g., a downsampler) and/or a long term postfiltering, LTPF, tool 138b, for controlling an LTPF active in TD at the decoder side.

Each of the encoder apparatus 130 and 130A comprises a bitstream multiplexer tool (bitstream writer) 137 to prepare a bitstream with data obtained from TD and/or FD tools placed upstream. The bitstream may comprise a digital representation of an information signal together with control data to be used at the decoder side. The bitstream may be compressed or include portions which are compressed.

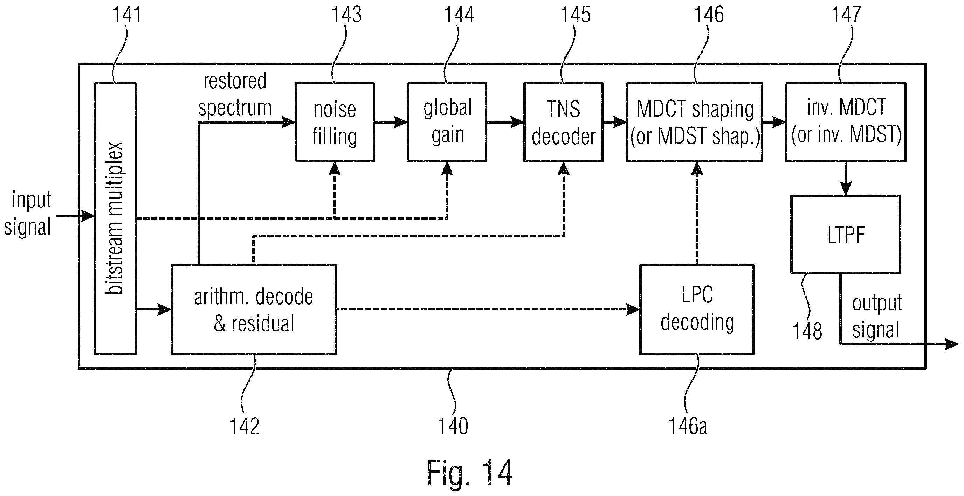

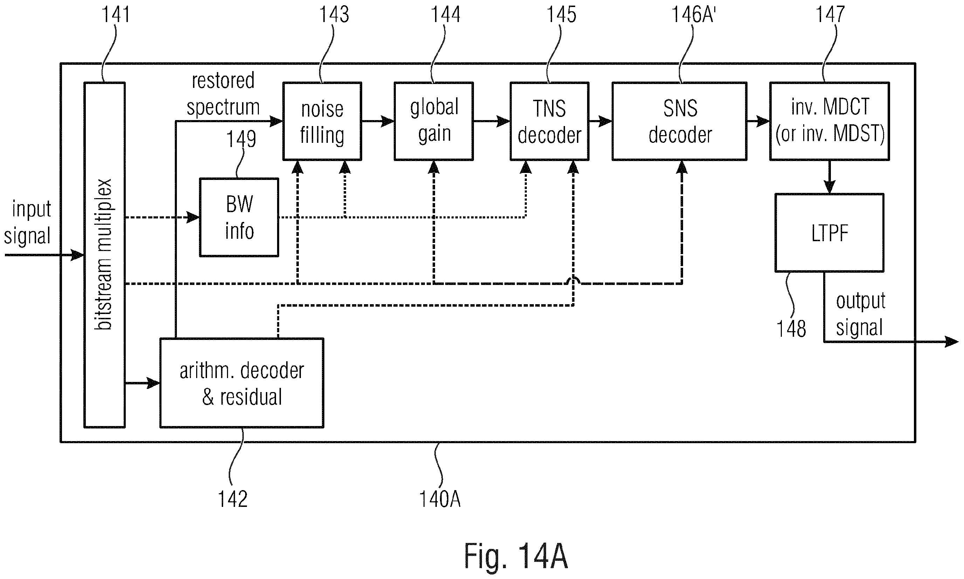

Fig. 14 and 14A show decoder apparatus 140 and 140A, respectively. Each of them may decode a digital representation of an information signal, e.g., as encoded by the encoder 130 or 130A, for example.

Each of the decoder apparatus 140 and 140A comprises an inverse modulated lapped transform tool 147 (e.g., a low delay inverse MDCT tool or a low delay inverse DMST tool) to transform signal representations from FD to TD. The modulated lapped transform tool 147 performs a modulated lapped transform synthesis (e.g., an MDCT synthesis and/or an MDST synthesis, etc.).

Other tools are provided, e.g., upstream to the inverse modulated lapped transform tool 147 or operating in TD. Some of them are here mentioned.

Each of the decoder apparatus 140 and 140A comprises a bitstream multiplex tool 141 to obtain a bitstream (e.g., by transmission) from an encoder apparatus (e.g., the apparatus 130 or 130A). For example, an output from the encoder apparatus 130 or 130A may be provided as an input signal to the decoder apparatus 140 or 140A.

Each of the decoder apparatus 140 and 140A may comprise a decoder 142 which may, for example, decompress data in the bitstream. Arithmetic decoding may be performed. A residual decoding may be performed.

Each of the decoder apparatus 140 and 140A may comprise a noise filling tool 143 processing signals in the FD.

Each of the decoder apparatus 140 and 140A may comprise a global gain tool 144 processing signals in the FD.

Each of the decoder apparatus 140 and 140A may comprise a TNS decoder tool 145 processing signals in the FD.

The decoder apparatus 140 may comprise an MDCT (or MDST) shaping tool 146 (other lapped transformation tools are possible). The MDCT (or MDST) shaping tool 146 may process signals by applying gain factors computed from decoded LP filter coefficients (obtained from an LPC decoding tool 146a, for example) transformed to the FD spectrum (e.g., MDCT or MDST spectrum, etc.).

The decoder apparatus 140A may comprise an SNS decoder tool 146A', for example, obtaining LPC coefficients from the SNS tool 132A.

Each of the decoder apparatus 140 and 140A may comprise an LTPF tool 148 for performing a postfilter in the TD.

The decoder apparatus 140A may comprise a decoder bandwidth controller 149 which may obtain bandwidth information from the bandwidth detector 137a, for example.

The encoder apparatus 130 (or 130A) and the decoder apparatus 140 (or 140A) may be composed to each other to form a system.

Basically, the tools downstream to the modulated lapped transform tool 131 in the encoder apparatus 130 or 130A and the tools upstream to the inverse modulated lapped transform tool 147 in the decoder apparatus 140 or 140A may perform signal processing in the FD and are therefore FD tools.

Techniques are here discussed regarding the conversion techniques, e.g., at the tools 131 and 147.

In general terms, the MDCT, MDST, etc., are discrete transforms which have the additional property of being lapped transforms. One of these transforms is performed on consecutive blocks of a larger dataset (e.g., two consecutive frames). Subsequent blocks may be overlapped. Accordingly, a last part of one block may coincide with a first part of a subsequent block. A windowing function $w_n$ (n = 0, ..., 2N-1) may be used. In particular, the windowing function may be used as a weight. An advantage is that it is possible to avoid or reduce discontinuities at the borders of the blocks.

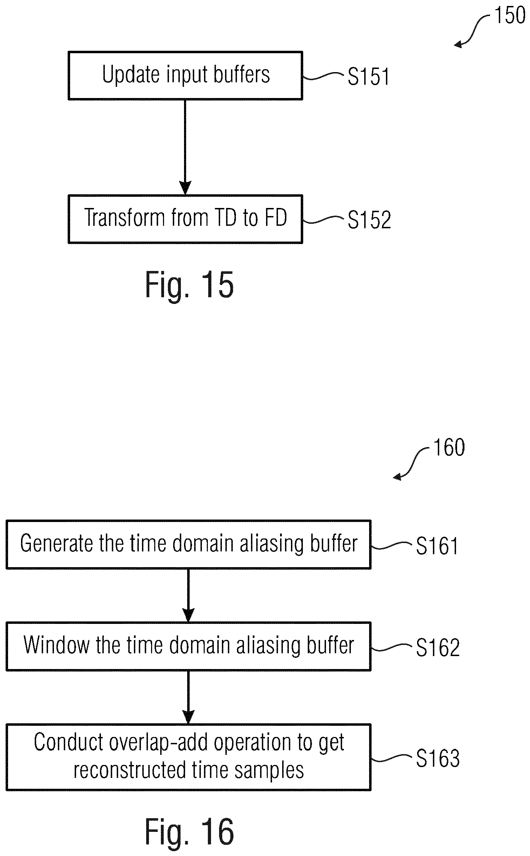

Fig. 15 shows a method 150 for performing a modulated lapped transform analysis, e.g., at the modulated lapped transform tool 131 (which may be a MDCT tool). The input signal $x_b(n)$ of the current frame b may consist of N audio samples, where the newest one is located at $x_b(N - 1)$.

At step S151, input buffers may be updated. The time input buffer for the modulated lapped transform t may be updated according to

$$t(n) = x_{b-1}(Z + n) \text{ for } n = 0..N - 1 - Z$$

$$t(N - Z + n) = x_b(n) \text{ for } n = 0..N - 1$$

$$t(2N - Z + n) = 0 \text{ for } n = 0..Z - 1$$

The latter is an initialization just required for consistency.

At step S152, a block of N time samples may be transformed to frequency coefficients X(k) using the following equation:

$$X(k) = \sqrt{\frac{2}{N}} \sum_{n=0}^{2N-1} w_N(n) \cdot t(n) \cos\left[\frac{\pi}{N}\left(n + \frac{1}{2} + \frac{N}{2}\right)\left(k + \frac{1}{2}\right)\right] \text{ for } k = 0..N-1$$

where $w_N$ is an asymmetric modulated lapped transform window (e.g., MDCT window) according to the used frame size.

Fig. 16 shows a method 160 for performing a modulated lapped transform synthesis (e.g., MDCT synthesis), e.g., at the modulated lapped transform tool 147 (which may be an IMDCT tool). Here, a spectrum $\widehat{X_b}(k)$ (i.e., a representation in the FD) may be transformed to TD by the following steps:

At step S161, a generation of time domain aliasing buffer $\widehat{x_{T,b}}(n)$ of frame b may be performed. For example:

$$\widehat{x_{T,b}}(n) = \sqrt{\frac{2}{N}} \sum_{k=0}^{N-1} \widehat{X_b}(k) \cos\left[\frac{\pi}{N}\left(n + \frac{1}{2} + \frac{N}{2}\right)\left(k + \frac{1}{2}\right)\right] \text{ for } n = 0..2N-1$$

At step S162, windowing of time domain aliasing buffer may be performed. For example:

$$\widehat{x_{w,b}}(n) = w_N(2N - 1 - n) \cdot \widehat{x_{T,b}}(n) \text{ for } n = 0..2N-1$$

At step S163, overlap-add operation to get reconstructed time samples $\widehat{x_b}(n)$ of frame b may be conducted. For example:

$$\widehat{x_b}(n) = \widehat{x_{w,b-1}}(N + Z + n) + \widehat{x_{w,b}}(Z + n) \text{ for } n = 0..N - Z - 1$$

$$\widehat{x_b}(n) = \widehat{x_{w,b}}(Z + n) \text{ for } n = N - Z..N - 1$$

Notably, the windowing function $w_N(n)$ at the analysis (analysis windowing function) and the windowing function $w_N(2N - 1 - n)$ at the synthesis (synthesis windowing function) may be defined so as to be time reversed with each other. The window coefficients of the analysis and synthesis window are time reversed versions of each other.

It has been noted that a particularly effective windowing function (e.g., synthesis windowing function) may be an analysis windowing function having a meandering portion crossing a linear function in correspondence of four points.

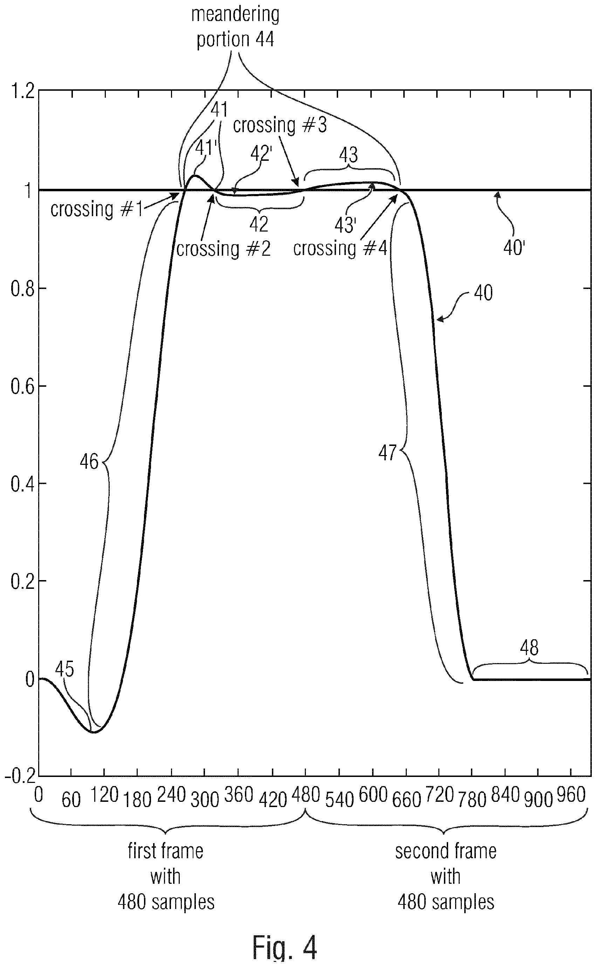

Fig. 4 shows an analysis windowing function 40. The analysis windowing function 40 may be defined between 0 and 2N or between 0 and a value intermediate between the 80% and the 85% or 90% of 2N (e.g., 81.25%). In some examples, the analysis windowing function 40 may be defined in a different (e.g., broader) range.

The analysis windowing function 40 is defined, at least for one portion, with reference to a linear function 40'. As shown in Fig. 4, the linear function 40' is a constant function whose value is 1. However, in examples useful to understand the invention, the linear function 40' may be in general a linear function, e.g., defined in terms of y = an + b, where n is the index between the 0 and 2N (or its non-zero portion) and a and b are constants.

The analysis windowing function 40 comprises a crossing portion (here also referred to as "meandering portion") 44. The meandering portion 44 is so that the analysis windowing function 40 encounters and/or crosses the linear function 40' at four points #1, #2, #3, #4.

The meandering portion 44 may be so that the analysis windowing function 40 is different from the linear function 40' at the majority of indexes e.g., for more than the 99% of the indexes.

The meandering portion 44 may be so that, at least at one index immediately preceding one of the indexes associated to the points (crossing points #1, #2, #3, #4, the value of the analysis windowing function 40 is greater than the value of the linear function (e.g., 1) at the crossing point (#1, #2, #3, of #4), and, at least at the index immediately subsequent the same index (associated to the crossing point), the value of the analysis windowing function 40 is smaller than the value of the linear function at the crossing point.

The meandering portion 44 may be so that, at least at one index immediately preceding one of the indexes associated to the crossing points #1, #2, #3, #4, the value of the analysis windowing function 40 is smaller than the value of the linear function (which is 1) at the crossing point (#1, #2, #3, of #4), and, at least at the index immediately subsequent the same index (associated to the crossing point), the value of the analysis windowing function 40 is greater than the value of the linear function at the crossing point.

The meandering portion 44 may be such that each of the crossing points #1, #2, #3, #4 is not immediately consecutive with the previous and the following ones. For example, between two crossing points #1, #2, #3, and #4, there is at least one index of the analysis windowing function 40 whose value does not coincide with the value of the analysis windowing function 40 at the same index.

The analysis windowing function 40 is defined so as to be, in correspondence to the meandering portion 44:

- greater than the linear function 40' in a first interval 41 between a first crossing point #1 and a second crossing point #2;

- lower than the linear function 40' in a second interval 42 between the second crossing point #2 and a third crossing point #3;

- greater than the linear function 40' in a third interval 43 between the third crossing point #3 and a fourth crossing point #4.

The first crossing point #1 precedes the second crossing point #2, which precedes the third crossing point #3, which precedes the fourth crossing point #4.

The meandering portion 44 may extend between the first and the last (e.g., fourth) crossing point. The crossing points may be only four, in some examples.

The analysis windowing function 40 may also comprise an initial decreasing portion 45, in which a negative minimum may be reached. The negative minimum may be localized between the 6.25% of 2N and the 18.75% of 2N. The analysis windowing function 40 may also comprise a rapidly increasing portion 46, rapidly increasing from the negative minimum towards the meandering portion 44 (e.g., towards the first crossing point #1). The analysis windowing function 40 may also comprise a rapidly decreasing portion 47, rapidly decreasing from the meandering portion 44 to 0. The analysis windowing function 40 may also comprise a constantly null portion 48, which may start between the 80% and the 85% or 90% of 2N (size of two frames) and continue to the end of 2N.

The absolute maximum value 41' is in the first interval 41 (or in the third interval).

The analysis windowing function 40 may, in the meandering portion 44, have a relative maximum value 43' in the third interval 43 (or in the first interval) and a relative minimum value 42' is in the second interval 42.

The analysis windowing function 40 may, in the meandering portion 44, have the values of the meandering window function 40 in correspondence to the second interval 42 greater than 0.9. The second interval 42 may be above 0.9.

The analysis windowing function 40 may present, in the meandering portion 44, a value lower than the linear function 40' in an interval comprised of the 30% and 50% of two frames (2N). In examples, after the 50% of two frames (2N), the windowing function 40 may greater than the linear function 40'. Hence, point #3 may be in correspondence to the last index of the first frame or in correspondence to the first index of the second frame. In the interval 30% to 50% *of two frames*, the meandering window portion 44 may be below the linear function.

The maximum 41' of the meandering window function 44 may be less than 25% (and preferably less than 5% or 3%) greater than the value of the linear function 40' at the same index n.

The analysis windowing function 40 may present a first numerical differentiation between 0.02 and -0.02. The second numerical differentiation may be between $-5*10^{-4}$ and $+5*10^{-4}$, and preferably between $-3*10^{-4}$ and $+3*10^{-4}$. The third numerical differentiation may be between $-2*10^{-5}$ and $+2*10^{-5}$.

The analysis windowing function is defined so as to be asymmetric.

In some examples, the analysis windowing function may be such that some of the interval (subsections) of the meandering portion 44 are in reverse order with respect to the description above.

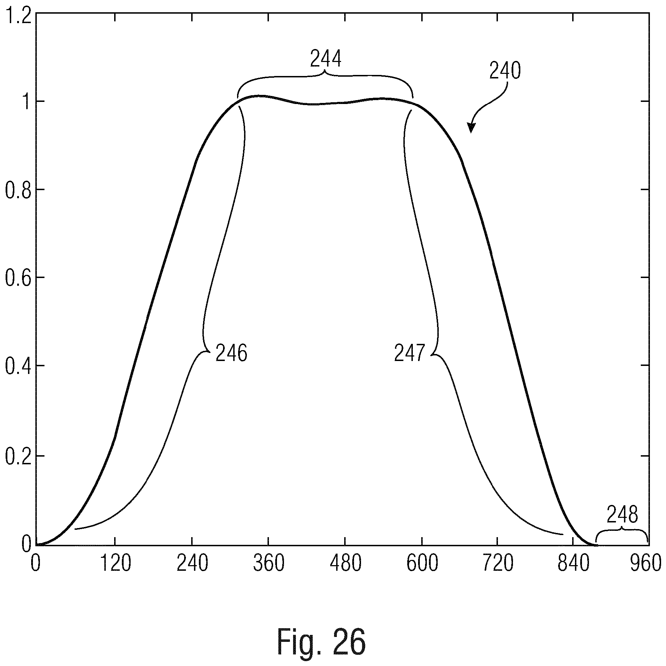

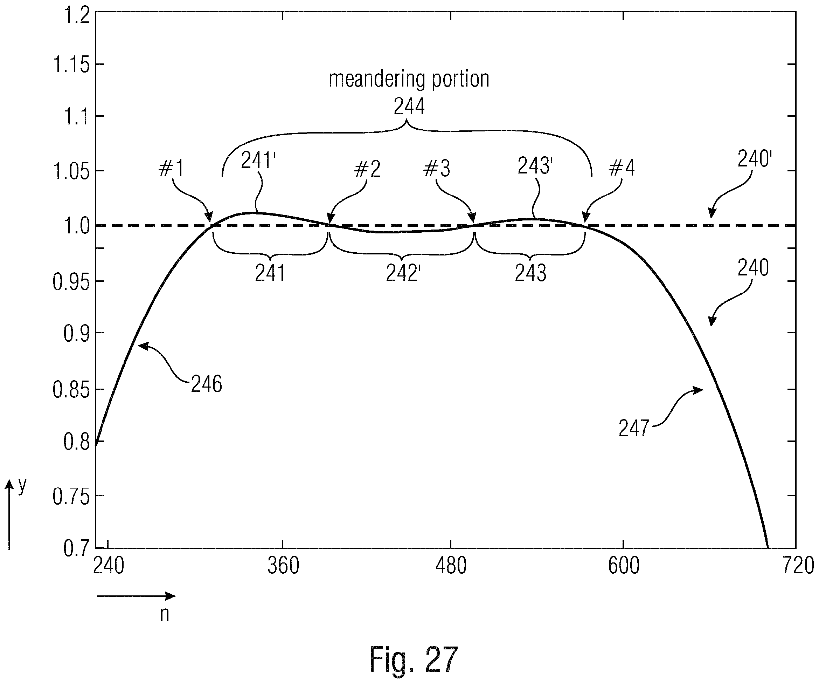

*Figs. 26 and 27 show an analysis windowing function 40 (Fig. 27 is an enlarged view of a portion of Fig. 26). The analysis windowing function 240 may be defined between 0 and 2N or between 0 and a value intermediate between the 80% and the 85% or 90% of 2N (e.g., 81.25%). In some examples, the analysis windowing function 40 may be defined in a different (e.g., broader) range.*

*The analysis windowing function 40 is defined, at least for one portion, with reference to a linear function 240'. As shown in Fig. 27, the linear function 240' is a constant function whose value is 1. The linear function 40' may be, in examples useful to understand the invention, a linear function, e.g., defined in terms of y = an + b, where n is the index between the 0 and 2N (or its non-zero portion) and a and b are constants (e.g., a=0, b=1).*

*The analysis windowing function 240 comprises a crossing portion (also referred to as "meandering portion") 244. The meandering portion 244 is so that the analysis windowing function 240 encounters and/or crosses the linear function 240' at four points #1, #2, #3, #4.*

*The meandering portion 244 may be so that the analysis windowing function 240 is different from the linear function 240' at the majority of indexes e.g., for more than the 99% of the indexes.*

*The meandering portion 244 may be so that, at least at one index immediately preceding one of the indexes associated to the points (crossing points) #1, #2, #3, #4, the value of the analysis windowing function 240 is greater than the value of the linear function 240' at the crossing point (#1, #2, #3, of #4), and, at least at the index immediately subsequent the same index (associated to the crossing point), the value of the analysis windowing function 240 is smaller than the value of the linear function 240' at the crossing point (#1, #2, #3, of #4).*

*The meandering portion 244 may be so that, at least at one index immediately preceding one of the indexes associated to the crossing points #1, #2, #3, #4, the value of the analysis windowing function 40 is smaller than the value of the linear function 240' at the crossing point (#1, #2, #3, of #4), and, at least at the index immediately subsequent the same index (associated to the crossing point), the value of the analysis windowing function 40 is greater than the value of the linear function 240' at the crossing point.*

*The meandering portion 244 may be such that each of the crossing points #1, #2, #3, #4 is not immediately consecutive with the previous and the following ones. For example, between two crossing points #1, #2, #3, and #4, there is at least one index of the analysis windowing function 240 whose value does not coincide with the value of the analysis windowing function 240 at the same index.*

*The analysis windowing function 240 is defined so as to be, in correspondence to the meandering portion 244:*

- *greater than the linear function 240' in a first interval 241 between a first crossing point #1 and a second crossing point #2;*

- *lower than the linear function 240' in a second interval 242 between the second crossing point #2 and a third crossing point #3;*

- *greater than the linear function 240' in a third interval 243 between the third crossing point #3 and a fourth crossing point #4.*

*The first crossing point #1 precedes the second crossing point #2, which precedes the third crossing point #3, which precedes the fourth crossing point #4.*

*The meandering portion 244 may extend between the first and the last (e.g., fourth) crossing point. The crossing points may be only four, in some examples.*

*The analysis windowing function 240 may have all positive values. The minimum may be a 0 value, which may be at the first index of the analysis windowing function 240 and/or at the last indexes of the analysis windowing function 240. The analysis windowing function 240 may comprise a rapidly increasing portion 246, rapidly increasing towards the meandering portion 244 (e.g., the first crossing point #1). The analysis windowing function 240 may also comprise a rapidly decreasing portion 247, rapidly decreasing from the meandering portion 244 to 0. The analysis windowing function 240 may comprise a constantly null portion 248, which may start between the 84% and the 90% of 2N (size of two frames) and continue to the end of 2N.*

*The absolute maximum value 241' is in the first interval 41 (or in the third interval).*

*The analysis windowing function 240 may, in the meandering portion 244, have a relative maximum value 243' in the third interval 243 (or in the first interval) and/or a relative minimum value 242' is in the second interval 242.*

*The analysis windowing function 240 may, in the meandering portion 244, have the values of the meandering window function 240 in correspondence to the second interval 242 greater than 0.95. The second interval 242 may be above 0.95. The first and/or third interval 241 and/or 243 may be less than 1.05.*

*The analysis windowing function 240 may present, in the meandering portion 244, a value lower than the linear function 240' in an interval comprised of the 30% and 50% of two frames (2N). In examples, after the 50% of two frames (2N), the windowing function 240 may greater than the linear function 240'. Hence, point #3 may be in correspondence to the last index of the first frame or in correspondence to the first index of the second frame. In the interval 30% to 50% of two frames, the meandering window portion 244 may be below the linear function.*

*The maximum 241' of the meandering window function 244 may be less than 25% (and preferably less than 5% or 3%) greater than the value of the linear function 240' at the same index n.*

*The analysis windowing function 240 may present a first numerical differentiation between -0.01 and +0.01. The second numerical differentiation may be between $-10^{-4}$ and $+10^{-4}$. The third numerical differentiation may be between $-10^{-5}$ and $+10^{-5}$.*

*The analysis windowing function is defined so as to be asymmetric.*

*In some examples, the analysis windowing function 240 may be such that some of the interval (subsections) of the meandering portion 244 are in reverse order with respect to the description above.*

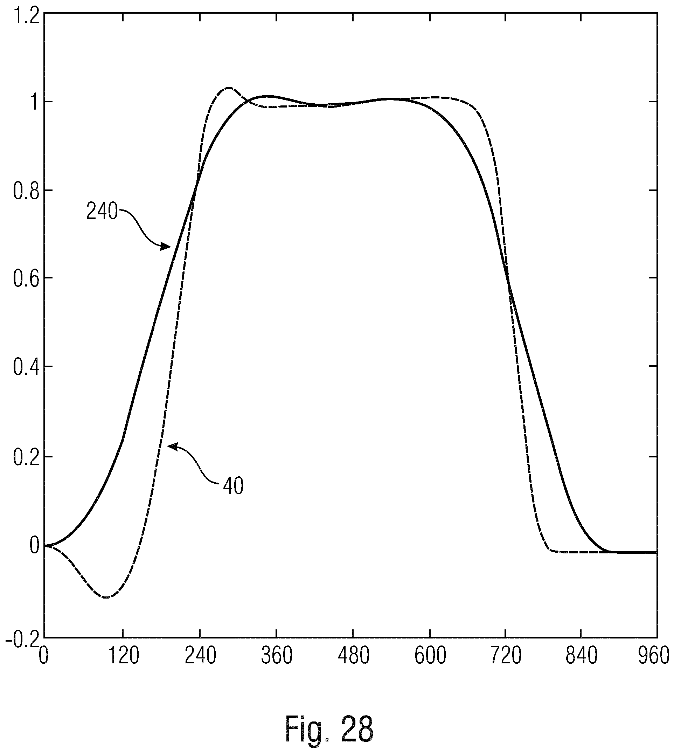

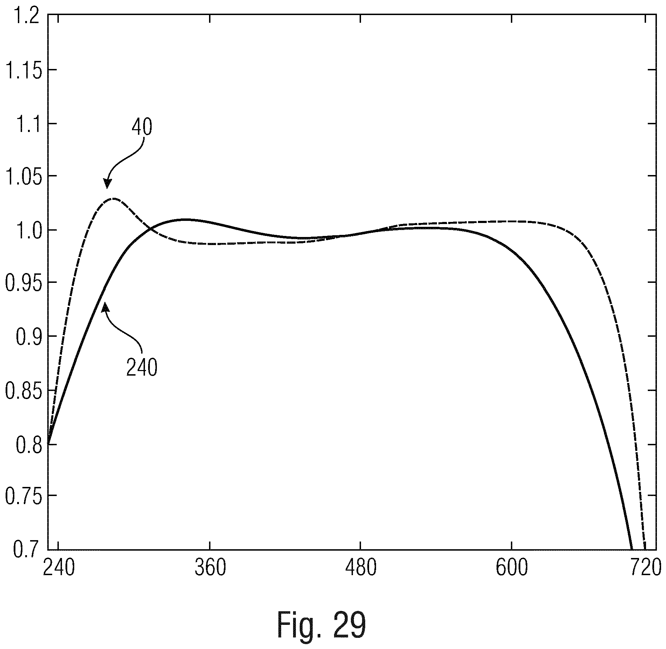

Figs. 28 and 29 compare the analysis windowing functions 40 and 240.

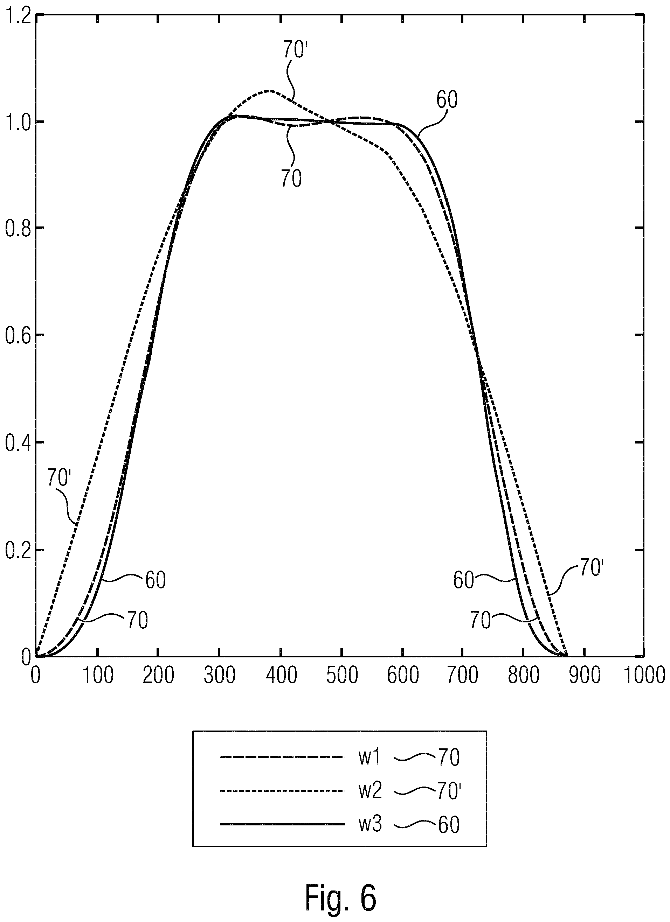

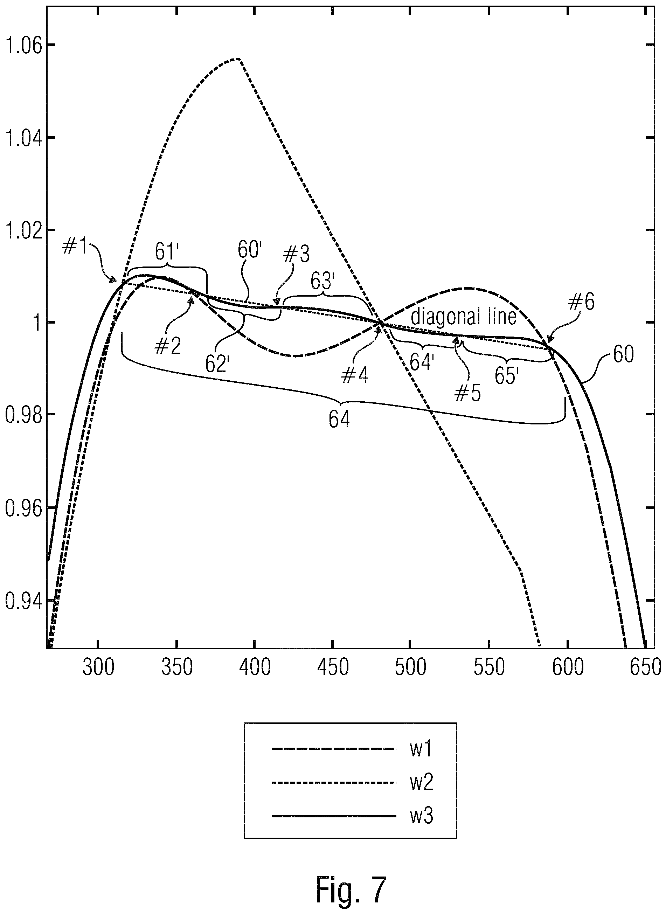

Fig. 6 shows another example of analysis windowing function 60 useful to understand the invention. Fig. 7 shows an enlarged view of the analysis windowing function 60 in correspondence of a meandering portion 64.

In this case, the analysis windowing function 60 may be defined, at least for one portion, with reference to a linear function 60'. In Fig. 7, the linear function 60' is a linear decreasing function ("diagonal line").

The meandering portion 64 may be so that the analysis windowing function 60 encounters and/or crosses the linear function 60' at four points.

The analysis windowing function 40 may be defined so as to be, in correspondence to the meandering portion 64:

- greater than the linear function 60' in a first interval 61' between a first crossing point #1' and a second crossing point #2';

- lower than the linear function 60' in a second interval 62' between the second crossing #2' point and a third crossing point #3';

- greater than the linear function 60' in a third interval 63' between the third crossing point #3' and a fourth crossing point #4';

- lower than the linear function 60' in a fourth interval 64' between the fourth crossing point #4' and a fifth crossing point #5';

- greater than the linear function 60' in a fifth interval 65' between the fifth crossing point #5' and a sixth crossing point #6'.

The absolute maximum value may be in the first interval 61' (in other examples, e.g., where the linear function is increasing, may be in the fifth interval).

The analysis windowing function 60 may, in the meandering portion 64, have a relative maximum value in the third interval 63' and/or in the fifth interval 65', a relative minimum value being in the second interval 62' and/or in the fourth interval 64'.

The analysis windowing function 60 may, in the meandering portion 64, have the value of the windowing function in correspondence to at least one of the first and third interval greater than 0.9 and in particular 0.95 (in other examples, e.g., where the linear function is increasing, may be in the third and fifth interval).

The analysis windowing function 60 may present, in the meandering portion 64, a value greater than the linear function 60' in an interval comprised of the 30% and 50% of two frames (2N).

The maximum of the windowing function 60 may be less than 25% (and preferably less than 5%) greater than the value of the linear function 60 at the same index n. The linear function 60' may be a non-increasing function, in particular a strictly decreasing function.

The analysis windowing function may be defined so as to be asymmetric.

In examples, the analysis windowing function may have the intervals which are reversed with respect to Fig. 6.

In examples, a synthesis windowing function may be construed to be symmetric with respect to the analysis windowing function. For example, the symmetry axis may be in the middle of the 2N range (479 or 480, for example).

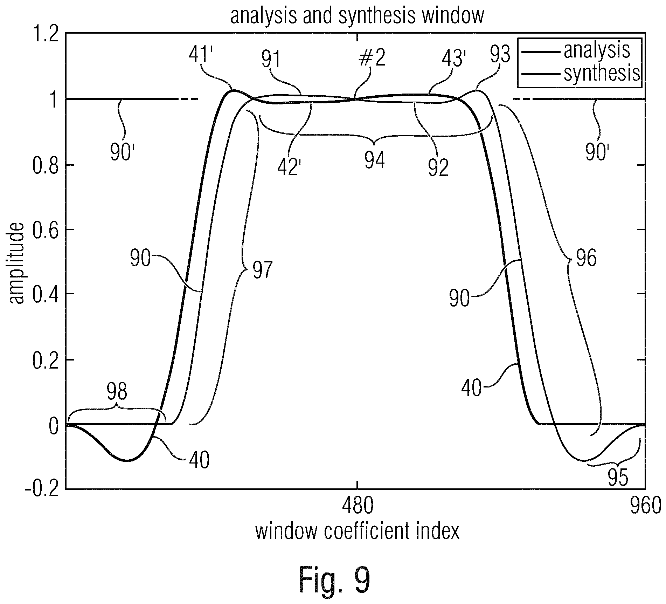

An example of synthesis windowing function 90 according to the invention is provided in Fig. 9 (e.g., the synthesis windowing function associated to the analysis windowing function 40 of Fig. 4). The synthesis windowing function 90 may be defined between 0 and 2N or between a value intermediate between the 10% or 15% and the 20% of 2N and 2N.

The synthesis windowing function 90 is defined, at least for one portion, with reference to a linear function. As shown in Fig. 9, the linear function is a constant function whose value is 1. However, in examples useful to understand the invention, the linear function may be in general a linear function, e.g., defined in terms of y=an+b.

The synthesis windowing function 90 comprises a crossing portion (also referred to as "meandering portion") 94. The meandering portion 94 is so that the synthesis windowing function 90 encounters and/or crosses the linear function 90' (constant 1, only partially shown for the sake of clarity) at four crossing points #1, #2, #3, #4 (only #2 being illustrated). The *synthesis windowing function may cross* the value 1 in the middle of the window (point #2), i.e. between sample N-1 and N.

The meandering portion 94 may be so that the synthesis windowing function 90 is different from the linear function 90' at the majority of indexes e.g., for more than the 99% of the indexes.

The meandering portion 94 may be so that, at least at one index immediately preceding one of the indexes associated to the points #1, #2, #3, #4, the value of the synthesis windowing function 90 is greater than the value of the linear function (e.g., 1) at the point (#1, #2, #3, of #4), and, at least at the index immediately subsequent the same index (associated to the point), the value of the synthesis windowing function 90 is smaller than the value of the linear function at the crossing point. The meandering portion 94 may be so that, at least at one index immediately preceding one of the indexes associated to the points #1, #2, #3, #4, the value of the synthesis windowing function 90 is smaller than the value of the linear function at the point (#1, #2, #3, of #4), and, at least at the index immediately subsequent the same index (associated to the crossing point), the value of the synthesis windowing function 90 is greater than the value of the linear function at the crossing point (#1, #2, #3, of #4).

The meandering portion 94 may be such that each of the points #1, #2, #3, #4 is not immediately consecutive with another of the points #1, #2, #3, #4. For example, between two points of #1, #2, #3, and #4, there may be at least one index of the synthesis windowing function 90 whose value does not coincide with the value of the synthesis windowing function 90 at the same index.

The synthesis windowing function 90 is defined so as to be, in correspondence to the meandering portion 94:

- greater than the linear function 90' in a first interval 91 between a first crossing point #1 (not shown in Fig. 9, but representable as symmetrical to point #4 in Fig. 4) and a second crossing point #2 (which, in this case, is at the 480th sample, e.g., in the middle of the 2N range);
- lower than the linear function 90' in a second interval 92 between the second crossing point #2 and a third crossing point #3 (not shown in Fig. 9, but representable as symmetrical to point #3 in Fig. 4);
- greater than the linear function 90' in a third interval 93 between the third crossing point #3 and a fourth crossing point #4 (not shown in Fig. 9, but representable as symmetrical to point #1 in Fig. 4).

The synthesis windowing function 90 comprises a constantly null portion 98, which may be located between the 10% and the 15% of 2N. The synthesis windowing function 90 may also comprise a rapidly increasing portion 97, rapidly increasing towards the meandering portion 94 from 0. The synthesis windowing function 90 may also comprise a rapidly decreasing portion 96, rapidly decreasing towards a negative minimum from the meandering portion 94. The negative minimum may be localized between the 81.25% of 2N and the 93.7% of 2N. The synthesis windowing function 90 may also comprise a final increasing portion 95, which reaches 0 from the negative minimum.

The absolute maximum value may be in the third interval 93 (or in the first interval).

The synthesis windowing function 90 may, in the meandering portion 94, have a relative maximum value in the first interval 91 (or in the third interval) and a relative minimum value is in the second interval.

The synthesis windowing function 90 may, in the meandering portion 94, have the value of the meandering window function in correspondence to at least one of the first and third interval (91, 93) greater than 0.9. The third interval may be above 0.9.

The synthesis windowing function 90 may present, in the meandering portion 94, a value greater than the linear function in an interval comprised of the 30% and 50% of two frames (2N).

The maximum of the synthesis windowing function 90 may be less than 25% (and preferably less than 5%) greater than the value of the linear function at the same index n.

The synthesis windowing function 90 may present a numerical differentiation between 0.02 and -0.02. The second numerical differentiation may be between $-5*10^{-4}$ and $+5*10^{-4}$, and preferably between $-3*10^{-4}$ and $+3*10^{-4}$. The third numerical differentiation may be between $-2*10^{-5}$ and $+2*10^{-5}$,

The synthesis linear function 90 may be a non-increasing function. In other examples, the synthesis linear function 90 may be a non-decreasing function. The synthesis linear function may 90 have a value which is constant or varies of maximum +2% or -2%.

The synthesis windowing function 90 is defined so as to be asymmetric.

In some examples, the synthesis windowing function 90 may be a function symmetrical with respect to the shape shown in Fig. 9. E.g., the value at 0 would be the value which is at 960 in Fig. 9; the value at 1 would be the value which is at 959 in Fig. 9, and so on.

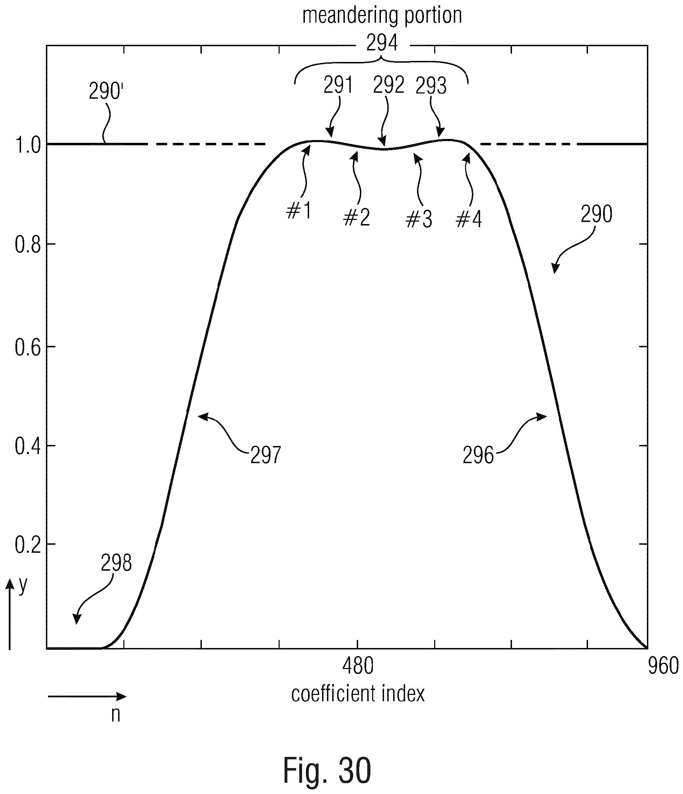

*An example of synthesis windowing function 290 is provided in Fig. 30 (e.g., the synthesis windowing function associated to the analysis windowing function 240 of Figs. 26 to 29). The synthesis windowing function 290 may be defined between 0 and 2N or between a value intermediate between the 10% or 15% and the 20% of 2N and 2N.*

*The synthesis windowing function 290 is defined, at least for one portion, with reference to a linear function 290' (which is a constant value 1).*

*In Fig. 30, the linear function 290' is a constant function whose value is 1.*

*However, in examples useful to understand the invention, the linear function may be in general a linear function, e.g., defined in terms of y=an+b.*

*The synthesis windowing function 290 comprises a meandering portion 294. The meandering portion 294 is so that the synthesis windowing function 290 encounters and/or crosses the linear function 290' (constant 1, only partially shown for the sake of clarity) at four crossing points #1, #2, #3, #4 (only #2 being illustrated). The synthesis windowing function crosses the value 1 in the middle of the window (point #2), i.e. between sample N-1 and N.*

The meandering portion 294 may be so that the synthesis windowing function 290 is different from the linear function 290' at the majority of indexes e.g., for more than the 99% of the indexes.

The meandering portion 294 may be so that, at least at one index immediately preceding one of the indexes associated to the points #1, #2, #3, #4, the value of the synthesis windowing function 90 is greater than the value of the linear function (e.g., 1) at the point (#1, #2, #3, of #4), and, at least at the index immediately subsequent the same index (associated to the crossing point), the value of the synthesis windowing function 90 is smaller than the value of the linear function at the crossing point.

The meandering portion 294 may be so that, at least at one index immediately preceding one of the indexes associated to the points #1, #2, #3, #4, the value of the synthesis windowing function 290 is smaller than the value of the linear function at the crossing point (#1, #2, #3, of #4), and, at least at the index immediately subsequent the same index (associated to the crossing point), the value of the synthesis windowing function 290 is greater than the value of the linear function at the crossing point (#1, #2, #3, of #4).

The meandering portion 294 may be such that each of the crossing points #1, #2, #3, #4 is not immediately consecutive with another of the points #1, #2, #3, #4. For example, between two crossing points of #1, #2, #3, and #4, there may be at least one index of the synthesis windowing function 290 whose value does not coincide with the value of the synthesis windowing function 290 at the same index.

The synthesis windowing function 290 is defined so as to be, in correspondence to the meandering portion 294:

- greater than the linear function 290' (e.g., greater than 1) in a first interval 291 between a first crossing point #1 and a second crossing point #2 (which, in this case, is at the 480th sample, e.g., in the middle of the 2N range);

- lower than the linear function 290' in a second interval 292 between the second crossing point #2 and a third crossing point #3;

- greater than the linear function 290' in a third interval 293 between the third crossing point #3 and a fourth crossing point #4.

The synthesis windowing function 290 may comprise a constantly null portion 298, which may be located. at one border of the window (2N samples) and may comprise between 10% and 15% of the samples. The synthesis windowing function 290 may also comprise a rapidly increasing portion 297, rapidly increasing towards the meandering portion 294 from 0. The synthesis windowing function 290 may comprise a rapidly decreasing portion 296, rapidly decreasing towards 0 from the meandering portion 294.

The absolute maximum value may be in the third interval 293 (or in the first interval).

The synthesis windowing function 290 may, in the meandering portion 294, have a relative maximum value in the first interval 291 (or in the third interval) and a relative minimum value is in the second interval.

The synthesis windowing function 290 may, in the meandering portion 294, have the value of the meandering window function in correspondence to at least one of the first and third interval (291, 293) greater than 0.9 or 0.95. The third interval may be above 0.95.

The synthesis windowing function 290 may present, in the meandering portion 294, a value greater than the linear function in an interval comprised of the 30% and 50% of two frames (2N).

The maximum of the synthesis windowing function 290 may be less than 25% (and preferably less than 5% or 3%) greater than the value of the linear function at the same index n.

The synthesis windowing function 290 may present a numerical differentiation between -0.01 and +0.01. The second numerical differentiation may be between $-10^{-4}$ and $+10^{-4}$. The third numerical differentiation may be between $-10^{-5}$ and $+10^{-5}$.

The synthesis linear function 90 may be a non-increasing function. In other examples, the synthesis linear function 90 may be a non-decreasing function. The synthesis linear function may 90 have a value which is constant or varies of maximum +2% or -2%.

The synthesis windowing function 90 is defined so as to be asymmetric.

In some examples, the synthesis windowing function 90 may be a function symmetrical with respect to the shape shown in Fig. 9. E.g., the value at 0 would be the value which is at 960 in Fig. 9; the value at 1 would be the value which is at 959 in Fig. 9, and so on.

5. Discussion

It has been noted that this function has particularly interesting features which are extremely suited for the MDCT (or MOST or other) and IMDCT (or IMDST or other) techniques, in particular for audio coding.

As a metric for the smoothness of MDCT window shape, we use the numerical differentiation (numerical de-

rivative) like

$$dw(t) = \frac{w(t + h) - w(t - h)}{2h} \qquad for\ t = h..2N - 1 - h$$

Another metric in order to assess the quality of MDCT window is temporal shape of the quantization error which is described by

$$S_q(t) = w^2\,(t + N) + w^2\,(t) \qquad for\ t = 0..N - 1$$

The quantization error may be introduced in the spectral domain as part of an audio coding process.

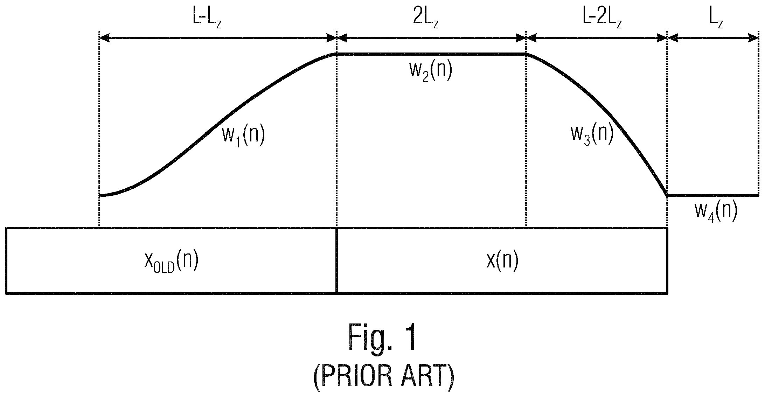

The ALDO window is here discussed. ALDO is a design approach for asymmetric window providing an improved temporal shape. The design process of the ALDO window as used in the EVS codec is described in (3GPP) and [2]. Fig. 1 shows a schematic window shape for a ALDO window scheme.

An ALDO window consists of four sections, a raising function, a section of strict ones, a decay function and zeros. The number of zeros in $w_4$ also determines the number of ones in $w_2$, with $w_2=2*w_4$. How to obtain $w_1$ and $w_3$ is described in [1] and [2].

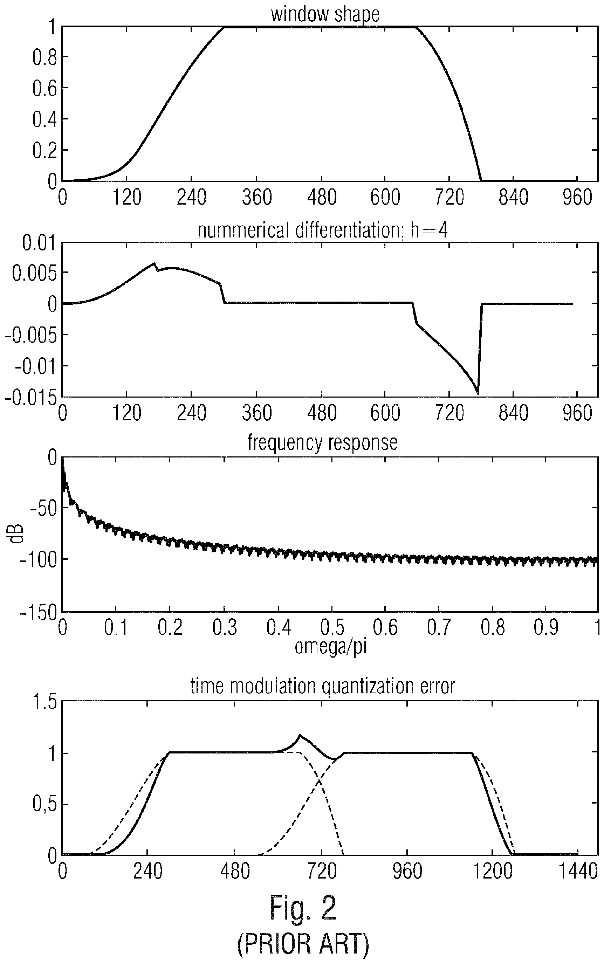

Figure 2 shows an ALDO window designed according to [1] and [2] for parameters Lz=180 (number of leading zeroes in the MDCT window, $W_4(n)$ in Fig. 1) and the total window length is 960 samples.

As can be seen in the fourth subplot of Fig. 2 ("Time modulation quantization error"), the ALDO shows a good temporal shape of the quantization error which mean the energy sum of two subsequent overlapping synthesis windows is close to one. The optimal result would require only ones which are achieved by symmetric window shapes.

The drawbacks of this design approach are mainly visible in the second subplot of Fig. 2 ("Numerical differentiation"), where the numerical differentiation is outlined. It can be seen that the window shape is a not a continuously differentiable mathematical function and is therefore non-optimal regarding the frequency response. Due to static ones in the window shape, smooth transitions coming from the raise function and going to the decay function are not possible.

The present invention breaks up with the design constraint to maintain a section of strict ones in order to optimize the temporal shape. Instead, the ones are replaced by a sequence of values meandering around a linear function (a constant value, such as "1"). This solution allows the smooth and continuous window shape while keeping the temporal shape close to an optimal state.

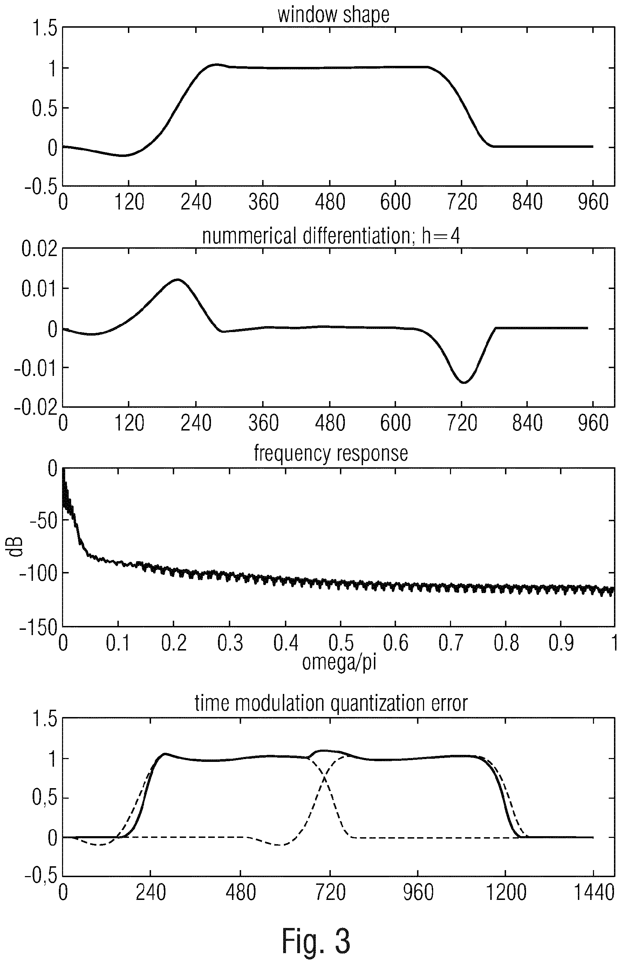

Fig. 3 shows an example window designed with a meandering section (portion) according to the invention. As can be seen in the fourth subplot of Fig. 3 ("Time modulation quantization error"), the window's property regarding the temporal shaping of the quantization error is similar to the ALDO window. However, comparing the second subplot of Fig. 3 ("Numerical differentiation") to second subplot of Fig. 2 (ALDO window), it may be understood that the invention permits to generate window shapes which are continuously differentiable. This enables for instance the design of window shapes with higher stop band attenuation, so far not possible with design process used for the ALDO window.

Fig. 4 outlines an example window shape 40 in more detail. In this example, the meandering section is based on crossing, in correspondence of four points, a linear function (a constant value "1"). Even a higher number of crossings is possible but four is considered as the minimum number.

Such a window can be the result of a mathematical optimization process combining one error function for the frequency response with and error function representing the deviation from the optimal temporal shaping of the quantization noise.

Some implementation required specific data formats, e.g. fix-point implementations. For such implementation, the value range of the window coefficients might be scales as values above one require a different scaling. In such cases, the meandering section might not be around one. Only after descaling, the values get into the obvious range.

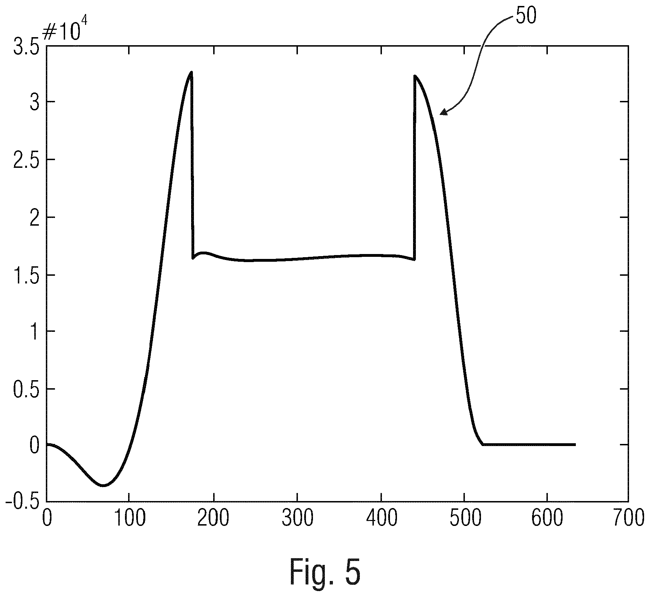

Fig. 5 shows an example how the MDCT window coefficients 50 are represented inside an fix-point implementation. It is an example representation where some values are scaled by $2^x$ and other by $2^{x-1}$ due to fix point architecture.

In examples useful to understand the invention, the window does not necessarily meander around 1 but may meander around a virtual diagonal line without crossing the one. Fig. 6 shows three different windows, i.e.

- $w_1$: New optimized meandering around 1 (windowing function 70);

- $w_2$: G.718 window (not meandering at all) (windowing function 70');

- $w_3$: New optimized window for special case (example useful to understand the invention): Meandering around a diagonal (windowing function 60).

The described MDCT window fulfils the perfect reconstruction property. For that, we consider the MDCT to be decomposed as a windowing operation, a time domain alias cancellation (TDAC) step and a discrete cosine transform (DCT) type IV kernel, as for instance described in [3].

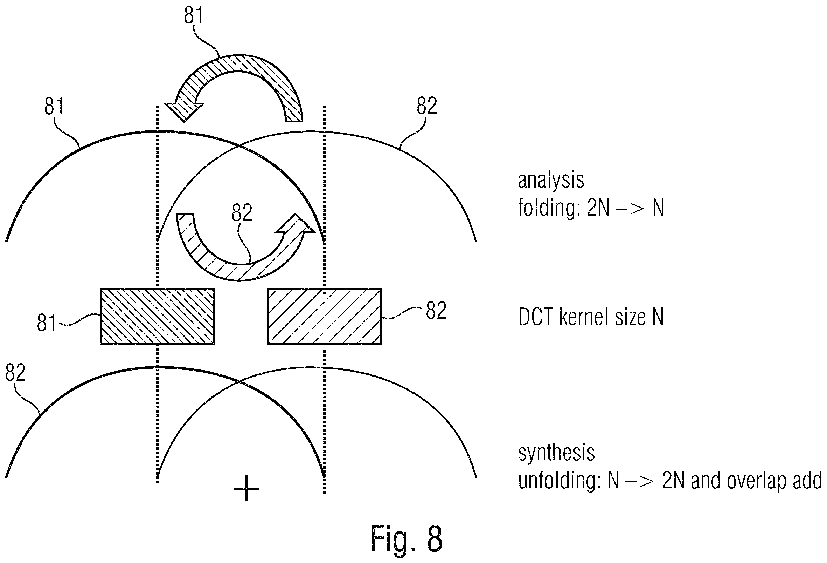

Therefore, the windowing and TDAC can be seen as a folding step on analysis and an unfolding step on synthesis side. At the latter one, the unfolded sequences of two blocks are combined in the overlap-and-add operation. See Fig. 8, which refers to a scheme of a block 1 (81) and a block 2 (82).

For the overlapping region on the analysis side, the windowing and TDAC of block 1 can be described as

$$P_1(n) = w_a(N+n) - w_a(2N-1-n) \qquad \text{for } n=0\ldots N-1$$

and block 2

$$P_2(n) = w_a(N+n) + w_a(N-1-n) \qquad \text{for } n=0\ldots N-1$$

For the syntheses side, P1 and P2 are folded-out, windowed and overlap-and-add is performed:

$$O(n) = w_s(N+n)P_1(n) + w_s(n)P_2(n) \qquad \text{for } n=0\ldots N-1$$

This can be written as

$$O(n) = w_a(N+n)w_s(N+n) - w_a(2N-1-n)w_s(N+n) + w_a(n)w_s(n) + w_a(N-1-n)w_s(n)$$

for n=0... N-1
which can be separated into two components:

PR1: Perfect reconstruction component

$$w_a(N+n)w_s(N+n) + w_a(n)w_s(n) = 1$$

for n=0...N-1

- PR2: Alias cancellation component

$$w_a(N-1-n)w_s(n) - w_a(2N-1-n)w_s(N+n) = 0$$

for n=0... N-1

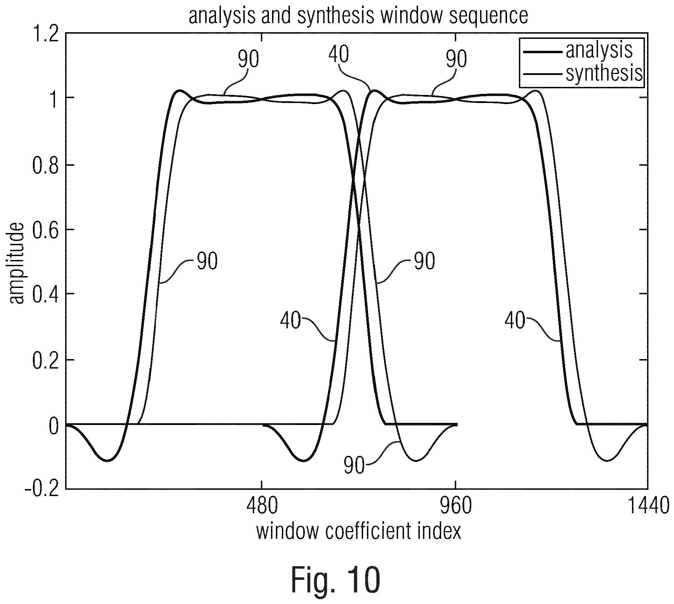

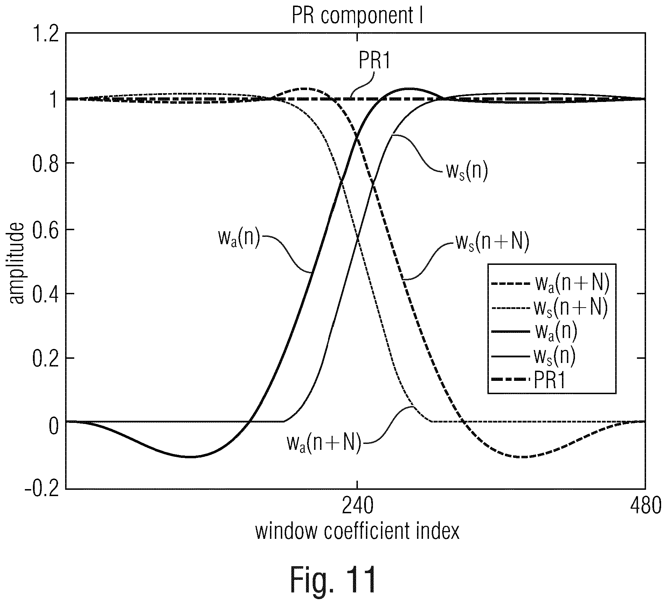

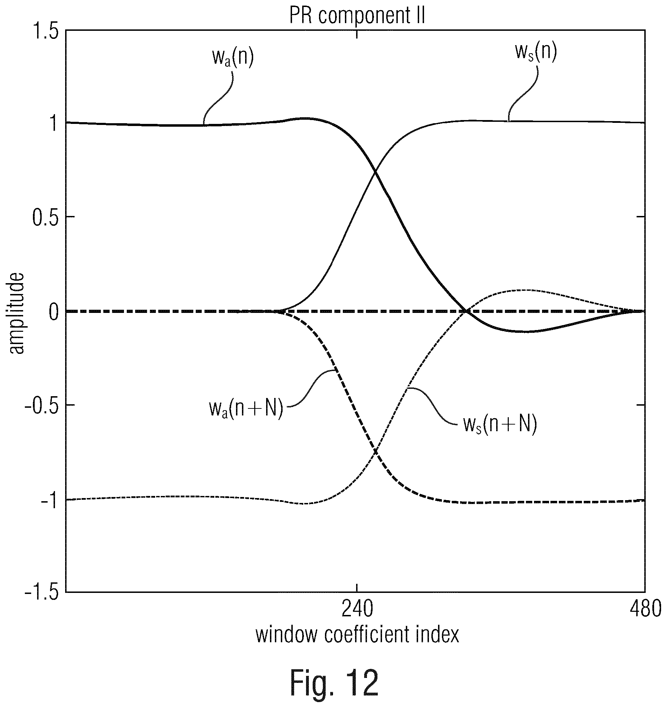

Figs. 9-12 show analysis and synthesis sequences.

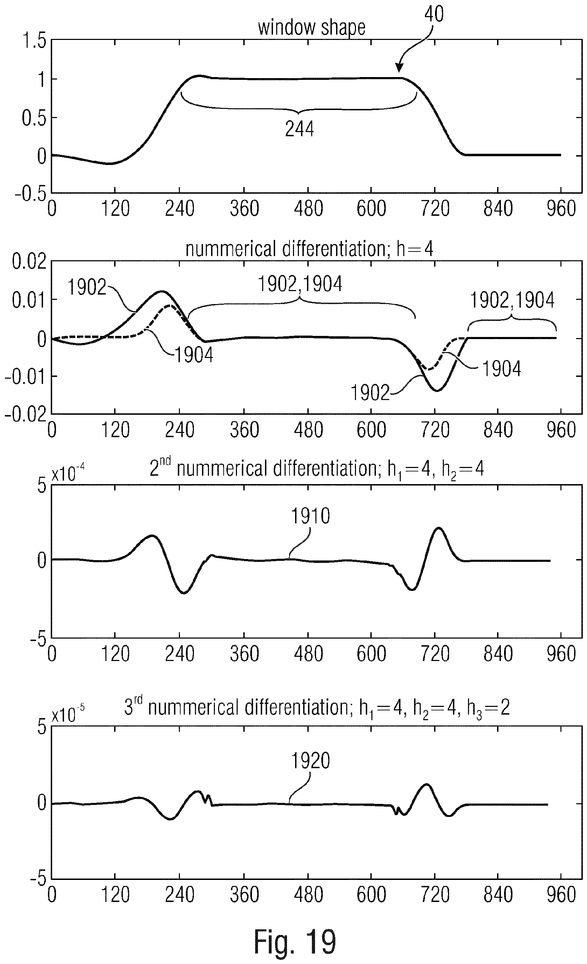

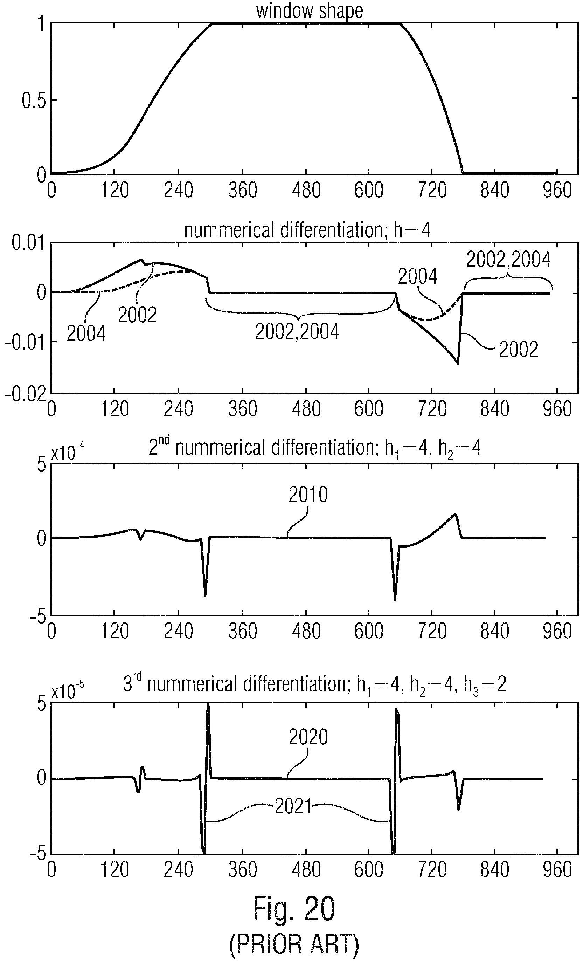

Reference is now made to Figs. 19 and 20 with reference to the numerical differentiation of the present analysis and synthesis windowing functions.

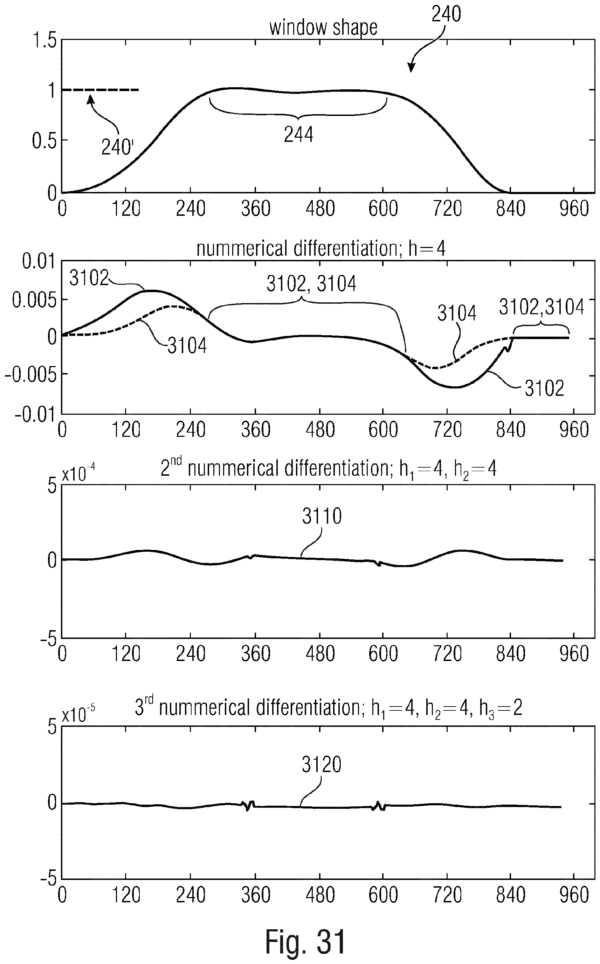

By considering also the 2nd and 3rd numerical differentiation, it is possible to clearly distinguish the properties of present examples (e.g., Fig. 19 with reference to the example of Fig. 4, and Fig. 31 with reference to the example of Fig. 26) with those of the prior art (ALDO, Fig. 20).

As a metric for the smoothness of modulated lapped transform window shape (e.g., MDCT or MDST window shape), we may use the numerical differentiation like:

$$dw(t) = \frac{w(t+h) - w(t-h)}{2h} \qquad for \ t = h..2N - 1 - h$$

In order to weight the importance of each coefficient, i.e. higher amplitudes have a higher weight, the following describes a weighted

$$wdw(t) = dw(t)\ \frac{w(t+h) + w(t-h)}{2}\ \ \ for\ t = h..2N - 1 - h$$

This allows neglecting low level window coefficients in the analysis of the continuity of the window shape.

In Figs. 19 and 20 and 31, the 1st numerical differentiation is plotted in the regular and weighted version (dashed). 1902 and 3102 refer to the 1st numerical differentiation for the inventive windowing function; 1904 and 3104 (dashed) refer to the weighted version of the 1st numerical differentiation for the inventive windowing function. 2002 refers to the 1st numerical differentiation for the ALDO windowing function; 2004 (dashed) refers to the weighted version of the 1st numerical differentiation for the ALDO windowing function.

For the 2nd and 3rd numerical differentiation (ND), the weighted version of the 1st one is used. 1910 and 3110 refer to the weighted version of the 2nd numerical differentiation for the inventive windowing function. 2010 refers to the weighted version of the 2nd numerical differentiation for the ALDO windowing function. 1920 refers to the weighted version of the 3rd numerical differentiation for the inventive windowing function. 2020 and 3120 refer to the weighted version of the 3rd numerical differentiation for the ALDO windowing function.

As can be observed, the 2nd ND version shows some clear peaks 2021 for the ALDO window while the inventive windows show only moderate changes. For the 3rd ND, also the amplitude level of both windows clear differentiate and can be expressed.

An analysis of the degree of freedom for window design for ALDO and for the inventive window function is here presented.

The ALDO design approach [2] offers only the parameters C1, C2 and the number of zeros Lz as degree of freedom. Any focus regarding near field or far field attenuation is not possible by the proposed method as the given degree of freedom in the design process is very limited.

In order to extend the ALDO algorithm and allowing a higher degree of freedom, the design approach in [2] has to be given up and has to be exchanged by a numerical optimization method. In a first step the section of strict ones in the middle of the window is maintained while the free window coefficients (or design parameter) are optimized.

Assuming that analysis and synthesis window are always time reversed versions of each other, the perfect reconstruction constraint can be expressed by

$$w_a(N+n)w_s(N+n)+w_a(n)w_s(n)=1 \quad for\ n=0\ldots N-1$$

$$\rightarrow w(N+n)w(2N-n)+w(n)w(N+n)=1 \quad for\ n=0\ldots N-1$$

This can always be fulfilled by restricting the number of free coefficients to 1.5N, e.g. by

$$w(2N-n) = (1-\ w(n)w(N+n))\ /\ w(N+n) \quad for\ n=0\ldots N-1$$

The zero section is located inside w(2N-n). For the constraint of the strict ones in the middle, 2*Lz of the window coefficients are considered as non-free coefficients. For a transformation length of N=480 and a window size of 2N and Lz=180, this leads to a degree of freedom of 1.5N-2*Lz = 360 free coefficients. This window is referred to as intermediate window.

The new invention increases the degree of freedom to the maximum by exchanging the portion of strict ones by a meandering section (e.g., 44, 64, 94) around one or around any other linear (e.g., diagonal) line (e.g., 40', 60', 90'). Thus, only half of the middle section needs to be excluded from the free coefficients. Consequently, the number of available coefficients is increased to 1.5*480-180=540 free coefficients. This allows to maximally optimize the frequency response towards any indented focus.

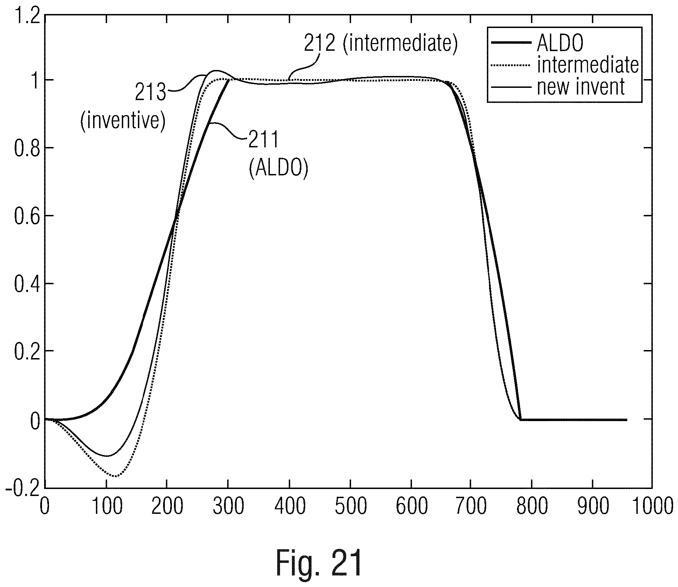

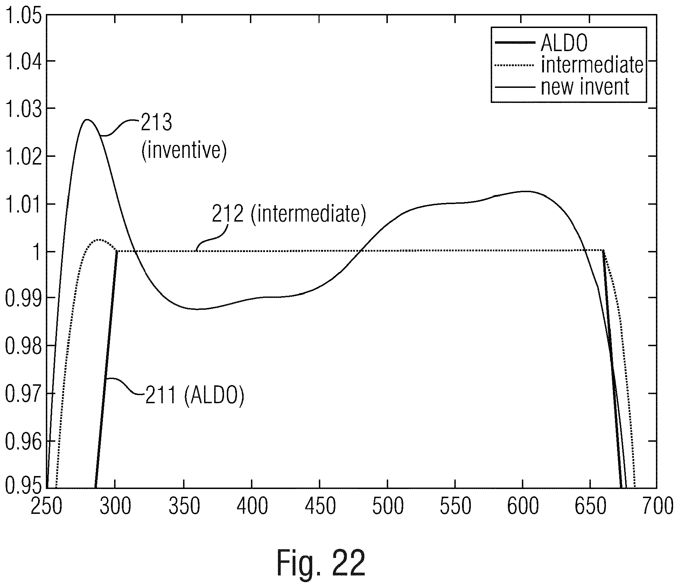

Figs. 21 and 22 show a comparison of the design approaches. In particular, Fig. 21 shows a comparison window shape ALDO (211) vs intermediate (212) vs new invention (213). Fig. 22 shows a zoom (enlarged view) of window shapes ALDO (211), intermediate (212), new invention (213).

The intermediate window and the new invention window are optimized towards the same focus.

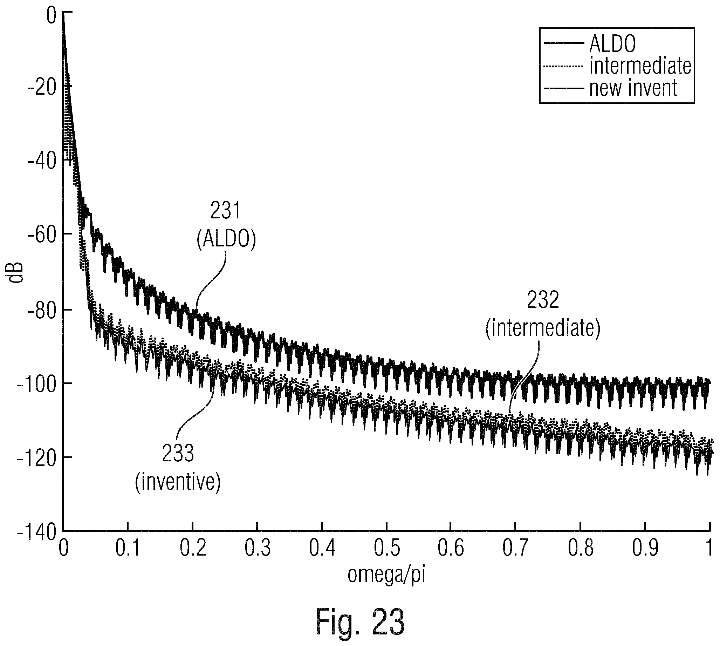

Fig. 23 shows a plot frequency response with ALDO (231), intermediate (232), new invention (233). The intermediate (231) and new invention window (233) can focus on different areas, achieving in this case a better far field attenuation. This is required for instance to avoid any aliasing distortions caused by band limited signals or whenever signals are resampled through a filter bank. This focus is impossible for the ALDO window, as there are only two parameters available controlling the shape. Comparing the intermediate and the new invention window, it becomes evident that the new invention achieves much less fluctuations in the response due to the very continuous shape in the time domain.

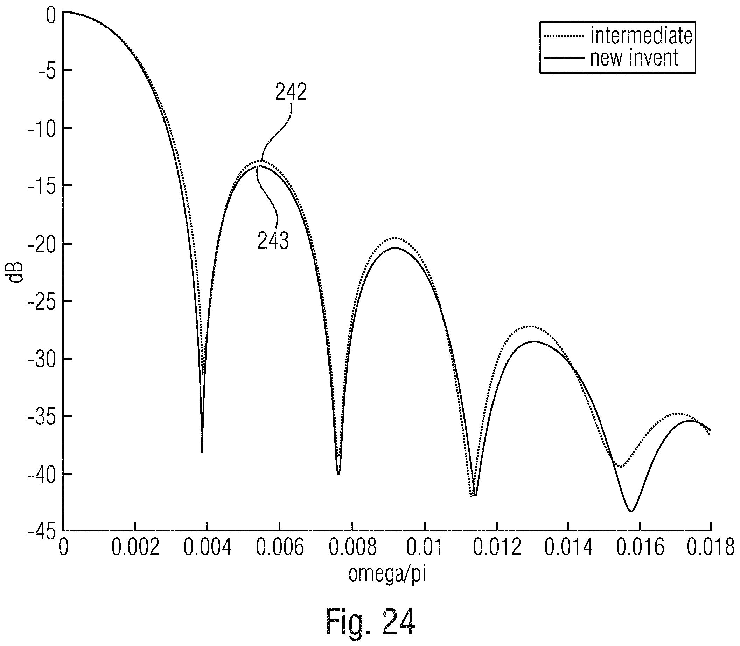

Fig. 24 shows a zoom (enlarged view) of frequency response comparing intermediate (242) and new invention (243). As can be observed, the new invention window (243) always shows a significant higher attenuation of all side lopes. This confirms that the meandering portion (44, 64, 94) is beneficial in the window design over a portion of strict ones.

With reference of the time modulation of window, it is noted that the main motivation for the ALDO window was to combine an asymmetric shape with a maximum amplitude of 1, in order to avoid large temporal fluctuations of the quantization error. The quantization error is added in the frequency domain and its temporal shape is controlled by the synthesis window shape.

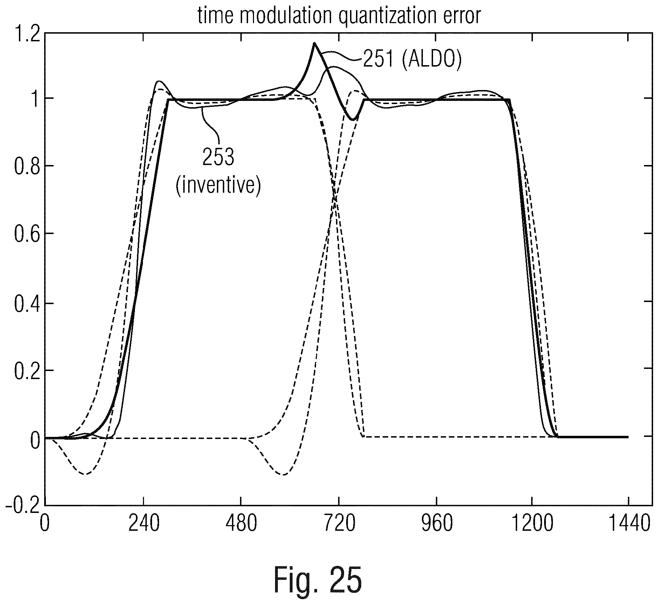

Actually, here also the meandering sequence even improves this window property. Fig. 25 shows a direct comparison the time modulation of the quantization error caused by an ALDO window (253) and a proposed invention (251). As can be seen, the maximum temporal distortion is lower for the new invention and therefore provides less noticeable distortions.

In examples above, the meandering portion may be, for example, in correspondence (at least partial) with the DCT kernel. In examples, at least one first crossing point (e.g., #1) is in the first frame, while at least another crossing point (e.g., #3) is in the subsequent frame. In examples, one crossing point (e.g., #2) at the border between the first and the subsequent frames.

In examples, "meandering" refers to the fact that there are at least four intersections with a linear function (the meandering portion crosses the linear function in at least two or in some cases in at least four points). For example, a meandering portion may have an increasing part, followed by a decreasing part, followed by an increasing part, and so on, or a decreasing part, followed by an increasing part, followed by a decreasing part, and so on.

## 6. Other examples

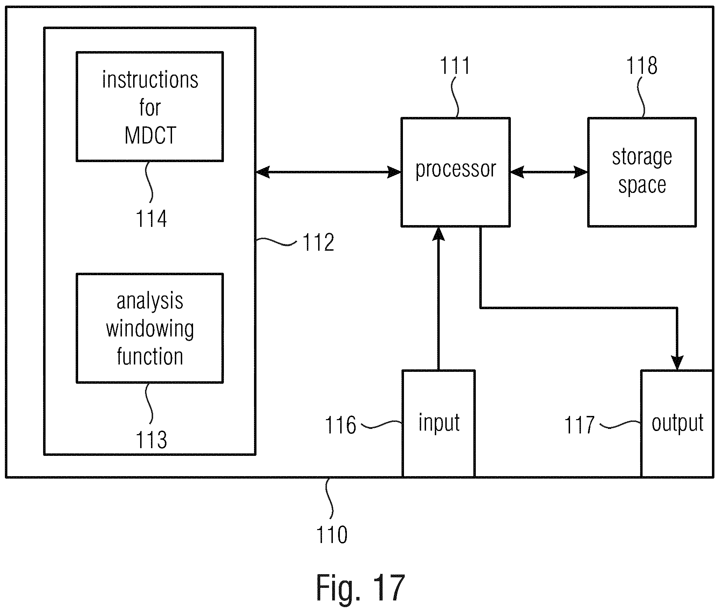

Fig. 17 shows an apparatus 110 which may implement the encoder apparatus 130 (or 130A) and/or MDCT tool 131 and/or perform at least some steps of the method 150. The apparatus 110 comprises a processor 111 and a non-transitory memory unit 112 with a block 114 storing instructions which, when executed by the processor 111, cause the processor 111 to perform a MDCT synthesis. The non-transitory memory unit 112 also stores, in block 113, an analysis windowing function, e.g., as discussed above. The apparatus 110 may comprise an input unit 116, which may obtain an input information signal (e.g., an audio signal). A transitory storage space 118 may be reserved for saving data to be updated (e.g., input buffers).

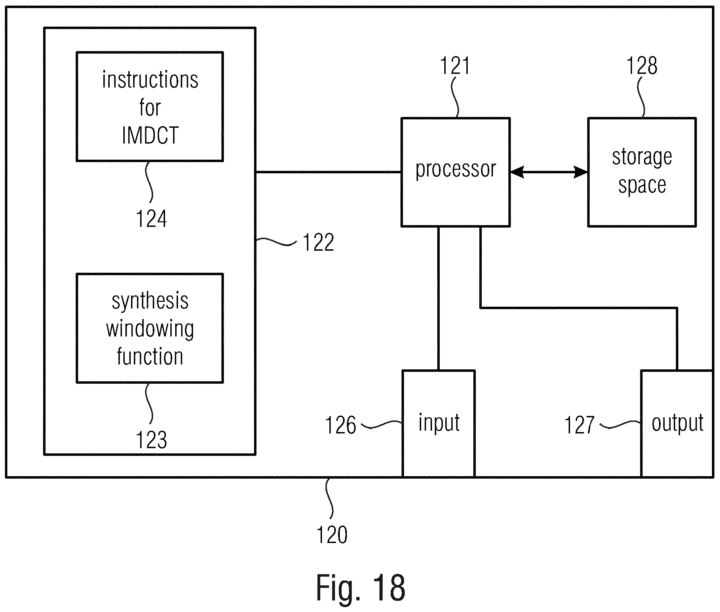

Fig. 18 shows an apparatus 120 which may implement the decoder apparatus 140 (or 140A) and/or the IMDCT 147 and/or perform the method 160. The apparatus 120 comprises a processor 121 and a non-transitory memory unit 122 with a block 124 storing instructions which, when executed by the processor 121, cause the processor 121 to perform, inter alia, an MDCT synthesis process. The apparatus 120 may comprise an input unit 126, which may obtain a decoded representation of an information signal (e.g., an audio signal) in the FD. The processor 121 may therefore perform processes to obtain a TD representation of the information signal. This decoded representation may be provided to external units using an output unit 127. The output unit 127 may comprise, for example, a communication unit to communicate to external devices (e.g., using wireless communication, such as Bluetooth) and/or external storage spaces. The processor 121 may save the decoded representation of the audio signal in a local storage space 128.

In examples, the apparatus 110 and 120 may be the same device. In examples, the apparatus 110 and 120 exchange information signals and/or control data e.g., wirelessly, e.g., using protocol Bluetooth.

Depending on certain implementation requirements, examples may be implemented in hardware. The implementation may be performed using a digital storage medium, for example a floppy disk, a Digital Versatile Disc (DVD), a Blu-Ray Disc, a Compact Disc (CD), a Read-only Memory (ROM), a Programmable Read-only Memory (PROM), an Erasable and Programmable Read-only Memory (EPROM), an Electrically Erasable Programmable Read-Only Memory (EEPROM) or a flash memory, having electronically readable control signals stored thereon, which cooperate (or are capable of cooperating) with a programmable computer system such that the respective method is performed. Therefore, the digital storage medium may be computer readable.

Generally, examples may be implemented as a computer program product with program instructions, the program instructions being operative for performing one of the methods when the computer program product runs on a computer. The program instructions may for example be stored on a machine readable medium.

Other examples comprise the computer program for performing one of the methods described herein, stored on a machine-readable carrier. In other words, an example of method is, therefore, a computer program having a program instruction for performing one of the methods described herein, when the computer program runs on a computer.

A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory.

A further example comprises a processing unit, for example a computer, or a programmable logic device performing one of the methods described herein.

A further example comprises a computer having installed thereon the computer program for performing one of the methods described herein.

A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus.

The above described examples are illustrative for the principles discussed above. It is understood that modifications and variations of the arrangements and the details described herein will be apparent. It is the intent, therefore, to be limited by the scope of the impending patent claims and not by the specific details presented by way of description and explanation of the examples herein.

7. Some examples of windowing functions

Numerical examples are here provided. As no mathematical formula in closed form for obtaining the function has been found, examples are herewith provided. The values hereinbelow may be provided in backword or forward order, in the sense that in some examples the first value is associated to the time instant n=0 and the last value is associated to the last time instant n=2N-1 (forward direction), while in some examples the first value is associated to the time instant n=2N-1 and the last value is associated to the first time instant n=0 (backward direction). In some cases, the analysis windowing function and the synthesis windowing function are taken from the same list, but the analysis windowing function is read in the backward (or forward) direction, while the synthesis windowing function is read in the forward (or backward) direction.

In order to embody at least one of the examples below, it is possible to extract a sub-succession of at least 10 values (e.g., consecutive values), when the 10 values are different from 0 (e.g., all the samples or at least the majority thereof may form the at least 10 values). A tolerance or $\pm$ 1% may be possible; in some cases + 0.5%, $\pm$ 0.05%, in other cases, $\pm$ 2%, $\pm$ 5%, in other cases 0%.

7.1 Examples associated to Figs. 4 and 9

In the examples, a notation such as -7.078546706512391e-04f means $-7.078546706512391*10^{-4}$. "f" refers to the notation in floating point (in some cases, it may be omitted).

A numerical example of windowing function $w_{80}$, for frame size N=80, is herewith provided by the 160 entries for n = 0...2N-1. As explained above, the last values may be constantly 0.

-7.078546706512391e-04f,   -2.098197727900724e-03f,   -4.525198076002370e-03f,   -8.233976327300612e-03f,
-1.337713096257934e-02f,   -1.999721557401502e-02f,   -2.800909464274782e-02f,   -3.721502082245055e-02f,
-4.731768261606175e-02f,   -5.794654834034055e-02f,   -6.867606753531441e-02f,   -7.904647440788692e-02f,
-8.859705468085925e-02f,   -9.688303623049199e-02f,   -1.034961241263523e-01f,   -1.080766457616878e-01f,
-1.103242262600913e-01f,   -1.099809851424550e-01f,   -1.068172142230882e-01f,   -1.006190418791648e-01f,
-9.116452506492527e-02f,   -7.820617483254730e-02f,   -6.146688124166948e-02f,   -4.063362855701623e-02f,
-1.536329520788766e-02f,   +1.470155068746303e-02f,   +4.989736509080558e-02f,   +9.050369257152079e-02f,
+1.366911019414417e-01f,   +1.884686389218322e-01f,   +2.456568803467095e-01f,   +3.077789078889820e-01f,
+3.741642373060188e-01f,   +4.438114799213576e-01f,   +5.154735456539700e-01f,   +5.876661722564289e-01f,
+6.587619767809000e-01f,   +7.270576699841359e-01f,   +7.908752989295335e-01f,   +8.486643364959733e-01f,
+8.991320235484349e-01f,   +9.413348145272842e-01f,   +9.747634827941575e-01f,   +9.994114730415857e-01f,
+1.015760373791603e+00f,   +1.024736164069697e+00f,   +1.027634294456205e+00f,   +1.025991493983836e+00f,
+1.021427210603284e+00f,   +1.015439859549357e+00f,   +1.009366925499550e+00f,   +1.003508162416449e+00f,
+9.988898206257559e-01f,   +9.953133902427869e-01f,   +9.925943919208190e-01f,   +9.905771957917731e-01f,
+9.891371616557014e-01f,   +9.881790747212391e-01f,   +9.876249269174586e-01f,   +9.874056275509585e-01f,
+9.874524849192456e-01f,   +9.876951134084213e-01f,   +9.880640617030884e-01f,   +9.884926873551375e-01f,
+9.889230031022089e-01f,   +9.893074965384659e-01f,   +9.896146331889107e-01f,   +9.898319269347060e-01f,
+9.899693102025342e-01f,   +9.900603352632121e-01f,   +9.901575015155720e-01f,   +9.903255289051605e-01f,
+9.906303787150326e-01f,   +9.911298894709990e-01f,   +9.918665491182922e-01f,   +9.928619727154252e-01f, +9.941156069136238e-01f, +9.956033775539884e-01f, +9.972793109558521e-01f, +9.990784840729244e-01f,
+1.000922365901945e+00f, +1.002728111386909e+00f, +1.004416038098237e+00f, +1.005919224127911e+00f,
+1.007189345025525e+00f, +1.008200146369426e+00f, +1.008949493525753e+00f, +1.009458241425143e+00f,
+1.009768980817384e+00f, +1.009940336228694e+00f, +1.010039453539107e+00f, +1.010132323996401e+00f,
+1.010272524848519e+00f, +1.010494354532353e+00f, +1.010808068774316e+00f, +1.011201071127927e+00f,
+1.011641272406023e+00f, +1.012080125934687e+00f, +1.012458183122033e+00f, +1.012706955800289e+00f,
+1.012755013843985e+00f, +1.012530134411619e+00f, +1.011962331100864e+00f, +1.010982135506986e+00f,
+1.009512438049510e+00f, +1.007460860286395e+00f, +1.004708677491086e+00f, +1.001111413242302e+00f,
+9.965041017623596e-01f, +9.907199995730845e-01f, +9.823765865983288e-01f, +9.708821747608998e-01f,
+9.546732976073705e-01f, +9.321553861564006e-01f, +9.018003682081348e-01f, +8.623984077953557e-01f,
+8.132817365236141e-01f, +7.544551974836834e-01f, +6.866580716267418e-01f, +6.113488038789190e-01f,
+5.306181649316597e-01f, +4.471309850999502e-01f, +3.639114681156236e-01f, +2.841647033392408e-01f,
+2.110209448747969e-01f, +1.472287968327703e-01f, +9.482665349502291e-02f, +5.482436608328477e-02f,
+2.701461405056264e-02f, +9.996743588367519e-03f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f
+0.000000000000000e+00f, +0.000000000000000e+00f, +0.000000000000000e+00f, +0.000000000000000e+00f

A numerical example of windowing function $w_{160}$, for frame size N=160, is herewith provided by the 320 entries for n = 0... 2N-1. As explained above, the last values may be constantly 0.

-4.619898752628163e-04f, -9.747166718929050e-04f, -1.664473096973725e-03f, -2.597106916737789e-03f,
-3.806285163352241e-03f, -5.324608721716763e-03f, -7.175885277771099e-03f, -9.382480860899108e-03f,
-1.195270300743193e-02f, -1.489528159506296e-02f, -1.820666399965468e-02f, -2.187570925786862e-02f,
-2.588471937157619e-02f, -3.020862738245264e-02f, -3.481597793538342e-02f, -3.967067992672979e-02f,
-4.472698045914417e-02f, -4.994225863256500e-02f, -5.526334794593565e-02f, -6.063717235243996e-02f,
-6.600961519440657e-02f, -7.131966266443390e-02f, -7.651178225890490e-02f, -8.152964005319532e-02f,
-8.631137544905677e-02f, -9.080411291245728e-02f, -9.495377758870335e-02f, -9.870736514214426e-02f,
-1.020202684361974e-01f, -1.048438825017798e-01f, -1.071382314127799e-01f, -1.088690135027248e-01f,
-1.099969655786929e-01f, -1.104898474883336e-01f, -1.103225838568563e-01f, -1.094621746650760e-01f,
-1.078834293141886e-01f, -1.055612509762041e-01f, -1.024650162703341e-01f, -9.857014566194629e-02f,
-9.384684920715425e-02f, -8.826309993000785e-02f, -8.178792716809512e-02f, -7.438785600211463e-02f,
-6.602189797715241e-02f, -5.665655641133161e-02f, -4.624456893420224e-02f, -3.474585776145929e-02f,
-2.211581608120528e-02f, -8.310425696208936e-03f, +6.717697635290676e-03f, +2.300642061077823e-02f,
+4.060106462625085e-02f, +5.953239090915557e-02f, +7.983354189816511e-02f, +1.015233140203748e-01f,
+1.246171387327525e-01f, +1.491152519299797e-01f, +1.750067399059861e-01f, +2.022699854906251e-01f,
+2.308655379767671e-01f, +2.607365124918583e-01f, +2.918144694729168e-01f, +3.240095704645023e-01f,
+3.572175180786021e-01f, +3.913146885756875e-01f, +4.261571642320424e-01f, +4.615925445090212e-01f,
+4.974471592901086e-01f, +5.335326819631583e-01f, +5.696546730080154e-01f, +6.056083823929643e-01f,
+6.411830842823245e-01f, +6.761653499550255e-01f, +7.103400549562944e-01f, +7.434943718765665e-01f,
+7.754281892901473e-01f, +8.059437233154637e-01f, +8.348589373399948e-01f, +8.620108336276733e-01f,
+8.872599706865123e-01f, +9.104863121445679e-01f, +9.315962496426278e-01f, +9.505220861927248e-01f,
+9.672366712325431e-01f, +9.817397501303696e-01f, +9.940557180662704e-01f, +1.004247514102417e+00f,
+1.012407428282884e+00f, +1.018650990561848e+00f, +1.023118841384460e+00f, +1.025972450969440e+00f,
+1.027397523939210e+00f, +1.027585830688143e+00f, +1.026738673647482e+00f, +1.025061777648234e+00f,
+1.022756514615106e+00f, +1.020009139549275e+00f, +1.016996499560845e+00f, +1.013915946100629e+00f,
+1.011044869639164e+00f, +1.007773858455400e+00f, +1.004848753962734e+00f, + 1. 002245009135684e+00f,
+9.999393169239009e-01f, +9.979055415627330e-01f, +9.961203379971326e-01f, +9.945597525471822e-01f,
+9.932031606606762e-01f, +9.920297273323891e-01f, +9.910230654424902e-01f, +9.901668953434221e-01f,
+9.894488374513719e-01f, +9.888556356037892e-01f, +9.883778520531268e-01f, +9.880051626345804e-01f,
+9.877295459610343e-01f, +9.875412739766566e-01f, +9.874329809802893e-01f, +9.873949921033299e-01f,
+9.874197049003676e-01f, +9.874973205882319e-01f, +9.876201238703241e-01f, +9.877781920433015e-01f,
+9.879637979933339e-01f, +9.881678007807095e-01f, +9.883835200189653e-01f, +9.886022219397892e-01f,
+9.888182771263505e-01f, +9.890247977602895e-01f, +9.892178658748239e-01f, +9.893923680007577e-01f,
+9.895463342815009e-01f, +9.896772011542693e-01f, +9.897859195209235e-01f, +9.898725363809847e-01f,
+9.899410789223559e-01f, +9.899945557067980e-01f, +9.900394023736973e-01f, +9.900814722948890e-01f, +9.901293790312005e-01f, +9.901902265696609e-01f, +9.902734448815004e-01f, +9.903862280081246e-01f,
+9.905379830873822e-01f, +9.907348826312993e-01f, +9.909842592301273e-01f, +9.912905118607647e-01f,
+9.916586940166509e-01f, +9.920906151219310e-01f, +9.925887208794144e-01f, +9.931516528513824e-01f,
+9.937790866568735e-01f, +9.944668184371617e-01f, +9.952116634297566e-01f, +9.960068616185641e-01f,
+9.968461329825753e-01f, +9.977203369515556e-01f, +9.986213520769593e-01f, +9.995382582242990e-01f,
+1.000461955079660e+00f, +1.001380551217109e+00f, +1.002284871786226e+00f, +1.003163845364970e+00f,
+1.004009147462043e+00f, +1.004811375053364e+00f, +1.005563968008037e+00f, +1.006259855360867e+00f,
+1.006895570408563e+00f, +1.007466616298057e+00f, +1.007972441990187e+00f, +1.008411468616852e+00f,
+1.008786009787269e+00f, +1.009097763850333e+00f, +1.009351762546296e+00f, +1.009552401900961 e+00f,
+1.009707093778162e+00f, +1.009822090220407e+00f, +1.009906958448099e+00f, +1.009969021400474e+00f,
+1.010017890428877e+00f, +1.010060809299530e+00f, +1.010106564965965e+00f, +1.010161131093372e+00f,
+1.010231078494249e+00f, +1.010319484524512e+00f, +1.010430470494512e+00f, +1.010564099281000e+00f,
+1.010721360243234e+00f, +1.010899655674578e+00f, +1.011096993993037e+00f, +1.011308167670753e+00f,
+1.011529185153809e+00f, +1.011753008569803e+00f, +1.011973876511603e+00f, +1.012182837094955e+00f,
+1.012373028737774e+00f, +1.012535058602453e+00f, +1.012660975529858e+00f, +1.012740575296603e+00f,
+1.012765922449960e+00f, +1.012726958954961 e+00f, +1.012615904116265e+00f, +1.012422888521601e+00f,
+1.012140460211194e+00f, +1.011758810583150e+00f, +1.011269960947744e+00f, +1.010663676735228e+00f,
+1.009930754807923e+00f, +1.009058249873833e+00f, +1.008034308295421 e+00f, +1.006843352506855e+00f,
+1.005470005637052e+00f, +1.003894772403371 e+00f, +1.002098854400575e+00f, +1.000060686758758e+00f,
+9.977600196406868e-01f, +9.951746430061121e-01f, +9.922861082472264e-01f, +9.890757868707590e-01f,
+9.847362453480265e-01f, +9.798613526271561e-01f, +9.741378617337759e-01f, +9.673331975559332e-01f,
+9.592539757044516e-01f, +9.496984081652284e-01f, +9.384634163826711e-01f, +9.253567968750328e-01f,
+9.101986790930605e-01f, +8.928338316495705e-01f, +8.731437835983047e-01f, +8.510420440685049e-01f,
+8.264839911291133e-01f, +7.994681492797084e-01f, +7.700431275216928e-01f, +7.383028603058783e-01f,
+7.043814340356083e-01f, +6.684616478236647e-01f, +6.307755329382612e-01f, +5.915799587176216e-01f,
+5.511703155400274e-01f, +5.098915423728179e-01f, +4.681017110047964e-01f, +4.26177297149301 0e-01f,
+3.845172335531009e-01f, +3.435228672445613e-01f, +3.036004651973099e-01f, +2.651434678028531e-01f,
+2.285283969438072e-01f, +1.941021906320984e-01f, +1.621735416384830e-01f, +1.330015240938615e-01f,
+1.067840430193724e-01f, +8.365057236623041e-02f, +6.365188111381356e-02f, +4.676538412257621e-02f,
+3.288072750732215e-02f, +2.183057564646270e-02f, +1.336381425803019e-02f, +6.758124889697787e-03f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+oof, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f

A numerical example of windowing function $w_{240}$, for frame size N=240, is herewith provided (480 samples):
-3.613496418928369e-04f, -7.078546706512391e-04f, -1.074443637110903e-03f, -1.533478537964509e-03f,
-2.098197727900724e-03f, -2.778420871815740e-03f, -3.584129920673041e-03f, -4.525198076002370e-03f,
-5.609327243712055e-03f, -6.843234536105624e-03f, -8.233976327300612e-03f, -9.785314755557023e-03f,
-1.149880303071551e-02f, -1.337713096257934e-02f, -1.542181679511618e-02f, -1.762979910961727e-02f,
-1.999721557401502e-02f, -2.252080561390149e-02f, -2.519406300389030e-02f, -2.800909464274782e-02f,
-3.095765092956728e-02f, -3.402996266948349e-02f, -3.721502082245055e-02f, -4.050053247568393e-02f,
-4.387219218706189e-02f, -4.731768261606175e-02f, -5.082325342672667e-02f, -5.437166635159518e-02f,
-5.794654834034055e-02f, -6.153426201732499e-02f, -6.511708163113709e-02f, -6.867606753531441e-02f,
-7.219447805250771e-02f, -7.565695975592170e-02f, -7.904647440788692e-02f, -8.234442557322251e-02f,
-8.553324579905185e-02f, -8.859705468085925e-02f, -9.152091100798199e-02f, -9.428847446755965e-02f,
-9.688303623049198e-02f, -9.929123258537813e-02f, -1.015008467688577e-01f, -1.034961241263523e-01f,
-1.052637003544443e-01f, -1.067939984687745e-01f, -1.080766457616878e-01f, -1.090997300590506e-01f, -1.098524491515805e-01f, -1.103242262600913e-01f, -1.105084619148789e-01f, -1.103977408741932e-01f,
-1.099809851424550e-01f, -1.092492774392824e-01f, -1.081974227416502e-01f, -1.068172142230882e-01f,
-1.050995803285455e-01f, -1.030360111111103e-01f, -1.006190418791648e-01f, -9.784120023411771e-02f,
-9.469304216883027e-02f, -9.116452506492527e-02f, -8.724644532866996e-02f, -8.293043914044632e-02f,
-7.820617483254730e-02f, -7.306142427456862e-02f, -6.748468182105991e-02f, -6.146688124166948e-02f,
-5.499497258200362e-02f, -4.805444424454820e-02f, -4.063362855701623e-02f, -3.272045590229335e-02f,
-2.430122582451853e-02f, -1.536329520788766e-02f, -5.891434269890659e-03f, +4.126595858583295e-03f,
+1.470155068746303e-02f, +2.584738191459814e-02f, +3.757652772246801e-02f, +4.989736509080558e-02f,
+6.282034030592902e-02f, +7.635397728566121e-02f, +9.050369257152079e-02f, +1.052747118478660e-01f,
+1.206703467513333e-01f, +1.366911019414417e-01f, +1.533343890681390e-01f, +1.705954709184399e-01f,
+1.884686389218322e-01f, +2.069449962574092e-01f, +2.260093000067393e-01f, +2.456456803467095e-01f,
+2.658346019332584e-01f, +2.865543814049772e-01f, +3.077789078889820e-01f, +3.294769437072290e-01f,
+3.516171481750350e-01f, +3.741642373060188e-01f, +3.970739591211551e-01f, +4.203043046885219e-01f,
+4.438114799213576e-01f, +4.675442291623012e-01f, +4.914498631045615e-01f, +5.154735456539700e-01f,
+5.395557644293222e-01f, +5.636399817032525e-01f, +5.876661722564289e-01f, +6.115695310143157e-01f,
+6.352890592874099e-01f, +6.587619767809000e-01f, +6.819230974423550e-01f, +7.047092819314779e-01f,
+7.270576699841359e-01f, +7.489068963384272e-01f, +7.701990187606995e-01f, + 7.908752989295335e-01f,
+8.108788692151807e-01f, +8.301579139160681e-01f, +8.486643364959733e-01f, +8.663548164329093e-01f,
+8.831896853053627e-01f, +8.991320235484349e-01f, +9.141540563656075e-01f, +9.282282546151819e-01f,
+9.413348145272842e-01f, +9.534619388400459e-01f, +9.646048250501910e-01f, +9.747634827941575e-01f,
+9.839435385219192e-01f, +9.921529097154242e-01f, +9.994114730415857e-01f, +1.005746084650236e+00f,
+1.011183971347815e+00f, +1.015760373791603e+00f, +1.019515072412387e+00f, +1.022490937034641 e+00f,
+1.024736164069697e+00f, +1.026304095700693e+00f, +1.027250978292214e+00f, +1.027634294456205e+00f,
+1.027511063644843e+00f, +1.026942795115598e+00f, +1.025991493983836e+00f, +1.024716149969084e+00f,
+1.023175976163407e+00f, +1.021427210603284e+00f, +1.019521566634239e+00f, +1.017510118327508e+00f,
+1.015439859549357e+00f, +1.013460916839174e+00f, +1.011654901040475e+00f, +1.009366925499550e+00f,
+1.007263182132894e+00f, +1.005313192386866e+00f, +1.003508162416449e+00f, +1.001840787319378e+00f,
+1.000303927234380e+00f, +9.988898206257559e-01f, +9.975915283480670e-01f, +9.964015284765968e-01f,
+9.953133902427869e-01f, +9.943201078053212e-01f, +9.934158959186011e-01f, +9.925943919208190e-01f,
+9.918510277326026e-01f, +9.911797988363887e-01f, +9.905771957917731e-01f, +9.900381047643838e-01f,
+9.895594394179152e-01f, +9.891371616557014e-01f, +9.887684373604154e-01f, +9.884497924570929e-01f,
+9.881790747212391e-01f, +9.879528358230726e-01f, +9.877691368590689e-01f, +9.876249269174586e-01f,
+9.875179947346887e-01f, +9.874458127312921e-01f, +9.874056275509585e-01f, +9.873951115886979e-01f,
+9.874115368168944e-01f, +9.874524849192456e-01f, +9.875149888347144e-01f, +9.875968894760857e-01f,
+9.876951134084213e-01f, +9.878075819424549e-01f, +9.879311998177238e-01f, +9.880640617030884e-01f,
+9.882032571565917e-01f, +9.883471084085503e-01f, +9.884926873551375e-01f, +9.886386592120545e-01f,
+9.887825578295630e-01f, +9.889230031022089e-01f, +9.890581715933395e-01f, +9.89186767428461 0e-01f,
+9.893074965384659e-01f, +9.894196399062921e-01f, +9.895220757174378e-01f, +9.896146331889107e-01f,
+9.896970346678272e-01f, +9.897692596535289e-01f, +9.898319269347060e-01f, +9.898852572653667e-01f,
+9.899307640365727e-01f, +9.8996931 02025343e-01f, +9.900025692522435e-01f, +9.900321562263099e-01f,
+9.900603352632121e-01f, +9.900889812894406e-01f, +9.901206586012907e-01f, +9.901575015155720e-01f,
+9.902023946214220e-01f, +9.902575406142213e-01f, +9.903255289051605e-01f, +9.904087914462694e-01f,
+9.905096491583045e-01f, +9.906303787150326e-01f, +9.907727108894024e-01f, +9.909387444078919e-01f,
+9.911298894709990e-01f, +9.913476318763218e-01f, +9.915928560402563e-01f, +9.918665491182922e-01f,
+9.921691315380984e-01f, +9.925010851461232e-01f, +9.928619727154252e-01f, +9.932519181564613e-01f,
+9.936700207375173e-01f, +9.941156069136238e-01f, +9.945873147903244e-01f, +9.950837402063278e-01f,
+9.956033775539884e-01f, +9.961439922621166e-01f, +9.967034533921340e-01f, +9.972793109558521e-01f,
+9.978690858367024e-01f, +9.984697087896268e-01f, +9.990784840729244e-01f, +9.996919011206490e-01f,
+1.000308193833526e+00f, +1.000922365901945e+00f, +1.001532636590676e+00f, + 1.002135464655177e+00f,
+1.002728111386909e+00f, +1.003307449770187e+00f, +1.003870934089686e+00f, +1.004416038098237e+00f,
+1.004940548815171 e+00f, +1.005442141810160e+00f, +1.005919224127911 e+00f, +1.006370303149314e+00f,
+1.006793927824538e+00f, +1.007189345025525e+00f, +1.007555573455895e+00f, +1.007892674961336e+00f,
+1.008200146369426e+00f, +1.008478423284851e+00f, +1.008727884997619e+00f, +1.008949493525753e+00f,
+1.009144112734761e+00f, +1.009313224929575e+00f, +1.009458241425143e+00f, +1.009581280555682e+00f,
+1.009684090687164e+00f, +1.009768980817384e+00f, +1.009838308708799e+00f, +1.009894548257807e+00f,
+1.009940336228694e+00f, +1.009977916643680e+00f, +1.010010230290263e+00f, +1.010039453539107e+00f,
+1.010068202038694e+00f, +1.010098388689342e+00f, +1.010132323996401 e+00f, +1.010171656775640e+00f,
+1.010218096148412e+00f, +1.010272524848519e+00f, +1.010336490294771e+00f, +1.010410221483215e+00f, +1.010494354532353e+00f, +1.010588873699422e+00f, +1.010693501186928e+00f, +1.010808068774316e+00f, +1.010931436739342e+00f, +1.011062876503041e+00f, +1.011201071127927e+00f, +1.011344700694417e+00f, +1.011491904228184e+00f, +1.011641272406023e+00f, +1.011790282474963e+00f, +1.011937567254485e+00f, +1.012080125934687e+00f, +1.012216235487353e+00f, +1.012342907951334e+00f, +1.012458183122033e+00f, +1.012558879696851e+00f, + 1.012642857380847e+00f, +1.012706955800289e+00f, +1.012748952907404e+00f, +1.012765799894453e+00f, +1.012755013843985e+00f, +1.012713798678211e+00f, +1.012639775003457e+00f, +1.012530134411619e+00f, +1.012382309473470e+00f, +1.012194068117524e+00f, +1.011962331100864e+00f, +1.011685173724601e+00f, +1.011359143572147e+00f, +1.010982135506986e+00f, +1.01 0550715971368e+00f, +1.010062133151922e+00f, +1.009512438049510e+00f, +1.008898689394160e+00f, +1.008215923600973e+00f, +1.007460860286395e+00f, +1.006627741823389e+00f, +1.005712337656749e+00f, +1.004708677491086e+00f, +1.003611467285588e+00f, +1.002414286392268e+00f, +1.001111413242302e+00f, +9.996961651093181e-01f, +9.981625949525345e-01f, +9.965041017623596e-01f, +9.947148884277037e-01f, +9.927891912841345e-01f, +9.907199995730845e-01f, +9.884793707533194e-01f, +9.855347660016696e-01f, +9.823765865983286e-01f, +9.789747333404933e-01f, +9.751623811486372e-01f, +9.708821747608998e-01f, +9.660805524695870e-01f, +9.606976399184645e-01f, +9.546732976073706e-01f, +9.479479345282376e-01f, +9.404609052933396e-01f, +9.321553861564006e-01f, +9.229775478442888e-01f, +9.128745354570823e-01f, +9.018003682081348e-01f, +8.897163275605041e-01f, +8.765908974996186e-01f, +8.623984077953557e-01f, +8.471200801854385e-01f, +8.307479727020245e-01f, +8.132817365236141e-01f, +7.947291447585267e-01f, +7.751108841891807e-01f, +7.544551974836834e-01f, +7.327963552921717e-01f, +7.101790843209148e-01f, +6.866580716267418e-01f, +6.622962432368731e-01f, +6.371684119604742e-01f, +6.113488038789190e-01f, +5.849206604934815e-01f, +5.579747428663487e-01f, +5.306181649316717e-01f, +5.029523957059122e-01f, +4.750868825511614e-01f, +4.471309850999535e-01f, +4.192049917945288e-01f, +3.914252910998820e-01f, +3.639114681156252e-01f, +3.367837772954476e-01f, +3.101627843160973e-01f, +2.841647033392418e-01f, +2.589033711808454e-01f, +2.344880603710975e-01f, +2.110209448747974e-01f, +1.885997642296488e-01f, +1.673100807904834e-01f, +1.472287968327706e-01f, +1.284223074167396e-01f, +1.109422548710344e-01f, +9.482665349502306e-02f, +8.009914366829558e-02f, +6.676765847398403e-02f, +5.482436608328485e-02f, +4.424588851571281e-02f, +3.499361000717621e-02f, +2.701461405056267e-02f, +2.024370180670145e-02f, +1.460796755137538e-02f, +9.996743588367531e-03f, +5.305235098871444e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0. 000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f}

A numerical example of windowing function $w_{320}$, for frame size N=320, is herewith provided (640 samples):

-3.021153494057143e-04f, -5.867737487939294e-04f, -8.366504004139796e-04f, -1.126635355725494e-03f, -1.470492941694331e-03f, -1.873473391018495e-03f, -2.339292362082021e-03f, -2.872008069419264e-03f, -3.476256385086407e-03f, -4.155963816705528e-03f, -4.914563787665504e-03f, -5.755172503953251e-03f, -6.680623380533122e-03f, -7.693816924650567e-03f, -8.796760749750191e-03f, -9.990503073705982e-03f, -1.127574117138621e-02f, -1.265334152129685e-02f, -1.412438986522702e-02f, -1.568889620430290e-02f, -1.734512089366117e-02f, -1.909097368362797e-02f, -2.092546711168754e-02f, -2.284684792818856e-02f, -2.485207716234951e-02f, -2.693746704328349e-02f, -2.909952486193999e-02f, -3.133504629493832e-02f, -3.363960728361352e-02f, -3.600820974457969e-02f, -3.843601741746971e-02f, -4.091746034850161e-02f,
-4.344654894948344e-02f, -4.601786724624048e-02f, -4.862598509282497e-02f, -5.126474204655663e-02f,
-5.392644753556616e-02f, -5.660384311081047e-02f, -5.929116747072080e-02f, -6.198268202511926e-02f,
-6.467025548071184e-02f, -6.734542216184526e-02f, -7.000099017198280e-02f, -7.263057011354321e-02f,
-7.522784961377151e-02f, -7.778525942347714e-02f, -8.029480247839878e-02f, -8.274924535373614e-02f,
-8.514125464087215e-02f, -8.746379123238275e-02f, -8.971069341834263e-02f, -9.187564084638347e-02f,
-9.395176975347193e-02f, -9.593137735886889e-02f, -9.780843257659243e-02f, -9.957851303827886e-02f,
-1.012361165314596e-01f, -1.027741036495644e-01f, -1.041861222641119e-01f, -1.054680247057000e-01f,
-1.066160875985523e-01f, -1.076255384835563e-01f, -1.084912299471198e-01f, -1.092087422379003e-01f,
-1.097736146613313e-01f, -1.101808861640070e-01f, -1.104271876052675e-01f, -1.105108362290460e-01f,
-1.104281465492726e-01f, -1.101739218186236e-01f, -1.097437360338336e-01f, -1.091353125572511e-01f,
-1.083467335729228e-01f, -1.073739938306107e-01f, -1.062130155324388e-01f, -1.048606145834788e-01f,
-1.033132401525343e-01f, -1.015673163469357e-01f, -9.962005506126154e-02f, -9.746803229469267e-02f,
-9.510723623306666e-02f, -9.253303383231506e-02f, -8.974125216128212e-02f, -8.672877689119252e-02f,
-8.349213839083708e-02f, -8.002639902061687e-02f, -7.632679536516856e-02f, -7.238806162166744e-02f,
-6.820576796149519e-02f, -6.377611429172260e-02f, -5.909386001558149e-02f, -5.415316322402774e-02f,
-4.894812724598650e-02f, -4.347347112195197e-02f, -3.772461300253332e-02f, -3.169587609244436e-02f,
-2.538179830690266e-02f, -1.877689096555516e-02f, -1.187461378850388e-02f, -4.669099247423082e-03f,
+2.844096748870385e-03f, +1.066976124794342e-02f, +1.881355950582949e-02f, +2.728156010437695e-02f,
+3.607810469851272e-02f, +4.520702759803914e-02f, +5.467238802204326e-02f, +6.447866054615346e-02f,
+7.462862199422061e-02f, +8.512490568723846e-02f, +9.596983987496970e-02f, +1.071650779014335e-01f,
+1.187115850305241e-01f, +1.306101067250375e-01f, +1.428596447589721e-01f, +1.554584725339102e-01f,
+1.684041609371527e-01f, +1.816947894623263e-01f, +1.953273880886783e-01f, +2.092963206850239e-01f,
+2.235945635254679e-01f, +2.382160219461597e-01f, +2.531529721334063e-01f, +2.683961570569586e-01f,
+2.839361392493072e-01f, +2.997624255177811e-01f, +3.158619077906196e-01f, +3.322210551086769e-01f,
+3.488264676990591e-01f, +3.656640377499646e-01f, +3.827152968157059e-01f, +3.999611859760947e-01f,
+4.173843265025887e-01f, +4.349669624916473e-01f, +4.526876397402144e-01f, +4.705242008503956e-01f,
+4.884539254831315e-01f, +5.064545550235134e-01f, +5.245006748662190e-01f, +5.425674372882107e-01f,
+5.606312044701524e-01f, +5.786672646386708e-01f, +5.966477035050948e-01f, +6.145458904162185e-01f,
+6.323361944662236e-01f, +6.499926319211774e-01f, +6.674874032292857e-01f, +6.847932667399612e-01f,
+7.018835463513400e-01f, +7.187322544823347e-01f, +7.353128213893310e-01f, +7.516001985652684e-01f,
+7.675699252273948e-01f, + 7.831974571624924e-01f, +7.984583859818390e-01f, +8.133295347030278e-01f,
+8.277892271515950e-01f, +8.418178561101360e-01f, +8.553961300139363e-01f, +8.685068980898102e-01f,
+8.811334436653052e-01f, +8.932596784799233e-01f, +9.048748835980528e-01f, +9.159657608120536e-01f,
+9.265215299450000e-01f, +9.365339988633418e-01f, +9.459977028429117e-01f, +9.549088408436811e-01f,
+9.632658122557368e-01f, +9.710688896122810e-01f, +9.783204156360773e-01f, +9.850226760127131e-01f,
+9.911792082081333e-01f, +9.967989944502682e-01f, +1.001894024615659e+00f, +1.006474342231823e+00f,
+1.010552057109195e+00f, +1.014142538208007e+00f, +1.017262593268930e+00f, +1.019928842669923e+00f,
+1.022159867011177e+00f, +1.023976320927187e+00f, +1.025400734608122e+00f, +1.026455340400072e+00f,
+1.027164510654160e+00f, +1.027552729180790e+00f, +1.027644462380432e+00f, +1.027463246660797e+00f,
+1.027035903410657e+00f, +1.026389068000259e+00f, +1.025548201799728e+00f, +1.024537134749709e+00f,
+1.023380803775376e+00f, +1.022103695693341e+00f, +1.020728359657958e+00f, +1.019275334687329e+00f,
+1.017765178792830e+00f, +1.016217355867531e+00f, +1.014665311686846e+00f, +1.013249071090664e+00f,
+1.011948006992127e+00f, +1.010189090179223e+00f, +1.008557961167850e+00f, +1.007011287608451e+00f,
+1.005548764575910e+00f, +1.004168417268956e+00f, +1.002867268893035e+00f, +1.001641769115897e+00f,
+1.000489068954641e+00f, +9.994060799749374e-01f, +9.983898865406841e-01f, +9.974370849972721e-01f,
+9.965444836911705e-01f, +9.957098545943852e-01f, +9.949302413030897e-01f, +9.942024045863540e-01f,
+9.935241604969254e-01f, +9.928930430130044e-01f, +9.923068103443909e-01f, +9.917633778190438e-01f,
+9.912597642374404e-01f, +9.907954498484041e-01f, +9.903677893656558e-01f, +9.899751611066148e-01f,
+9.896160337369861e-01f, +9.892890160408989e-01f, +9.889928511129679e-01f, +9.887260333430423e-01f,
+9.884868721088945e-01f, +9.882751039537586e-01f, +9.880892168751595e-01f, +9.879277114724612e-01f,
+9.877898261218510e-01f, +9.876743442038471e-01f, +9.875807496078497e-01f, +9.875072021876561e-01f,
+9.874529447589979e-01f, +9.874169741527905e-01f, +9.873984685207834e-01f, +9.873958301311858e-01f,
+9.874080027710336e-01f, +9.874343401290739e-01f, +9.874736235387018e-01f, +9.875243137719285e-01f,
+9.875856201221135e-01f, +9.876563785063032e-01f, +9.877358921155149e-01f, +9.878225576787804e-01f,
+9.879150968481590e-01f, +9.880132731565830e-01f, +9.881156946084619e-01f, +9.882211314188272e-01f,
+9.883289032519310e-01f, +9.884378310018685e-01f, +9.885476787868710e-01f, +9.886568414746639e-01f,
+9.887645868459630e-01f, +9.888708540445242e-01f, +9.889744320992592e-01f, +9.890747269455915e-01f, +9.891710038703801e-01f, +9.892631024032380e-01f, +9.893507219573624e-01f, +9.894330645494204e-01f,
+9.895096919388534e-01f, +9.895810813422480e-01f, +9.896467469067676e-01f, +9.897067365020641e-01f,
+9.897606930400666e-01f, +9.898094478563998e-01f, +9.898530133261707e-01f, +9.898914705684924e-01f,
+9.899254194103574e-01f, +9.899554202030650e-01f, +9.899824494486951e-01f, +9.900065116928948e-01f,
+9.900284805353695e-01f, +9.900497484789281e-01f, +9.900709561632662e-01f, +9.900928358611601e-01f,
+9.901163920607219e-01f, +9.901427479709606e-01f, +9.901734275350572e-01f, +9.902087332329851e-01f,
+9.902498637985275e-01f, +9.902983686695558e-01f, +9.903548501470234e-01f, +9.904205084933333e-01f,
+9.904959297726740e-01f, +9.905825150202904e-01f, +9.906812569810133e-01f, +9.907922087340426e-01f,
+9.909165464981378e-01f, +9.910550740962871e-01f, +9.912084614290896e-01f, +9.913768610980639e-01f,
+9.915605826937839e-01f, +9.917604214872976e-01f, +9.919767175562684e-01f, +9.922091101818779e-01f,
+9.924579135466506e-01f, +9.927231225056266e-01f, +9.930049538427406e-01f, +9.933027281437943e-01f,
+9.936161084869942e-01f, +9.939453714404443e-01f, +9.942895145656371e-01f, +9.946481676207727e-01f,
+9.950203031067961e-01f, +9.954058173659507e-01f, +9.958038713694317e-01f, +9.962130271017117e-01f,
+9.966324689957675e-01f, +9.970615306490058e-01f, +9.974990583293081e-01f, +9.979437430375855e-01f,
+9.983940572002874e-01f, +9.988493116887893e-01f, +9.993083430214909e-01f, +9.997689221333534e-01f,
+1.000231131275969e+00f, +1.000692135698996e+00f, +1.001152013920163e+00f, +1.001608526000461e+00f,
+1.002060493867275e+00f, +1.002507212061815e+00f, +1.002947129400411e+00f, +1.003378909587027e+00f,
+1.003801368578070e+00f, +1.004213810320699e+00f, +1.004615386562846e+00f, +1.005004618375781 e+00f,
+1.005380628601598e+00f, +1.005743282364652e+00f, +1.006091510392348e+00f, +1.006424907424988e+00f,
+1.006742427727669e+00f, +1.007044321511378e+00f, +1.007330218597112e+00f, +1.007599401798709e+00f,
+1.007852064386603e+00f, +1.008088176165563e+00f, +1.008308033204578e+00f, +1.008511247273756e+00f,
+1.008698144207627e+00f, + 1.008869515256392e+00f, +1.009025659761512e+00f, +1.009166718967367e+00f,
+1.009293362609020e+00f, +1.009406398832440e+00f, +1.009507017171120e+00f, +1.009595264293017e+00f,
+1.009672145744679e+00f, +1.009739084785160e+00f, +1.009796675060142e+00f, +1.009846137382005e+00f,
+1.009888083631667e+00f, +1.009924092276850e+00f, +1.009955384765721 e+00f, +1.009982268770147e+00f,
+1.010006298177305e+00f, +1.010028618428735e+00f, +1.010050254076988e+00f, +1.010071952131355e+00f,
+1.010094366238073e+00f, +1.010118917317053e+00f, +1.010146497096682e+00f, +1.010177110711677e+00f,
+1.010211755260102e+00f, +1.010251003469427e+00f, +1.010295468653759e+00f, +1.010345234996637e+00f,
+1.010400316698172e+00f, +1.010461564316351 e+00f, +1.010528615445659e+00f, +1.010601521285347e+00f,
+1.010679788081867e+00f, +1.010763905869062e+00f, +1.010853429760676e+00f, +1.010947547074519e+00f,
+1.011045953108263e+00f, +1.011148486293359e+00f, +1.011254397791134e+00f, +1.011363082075863e+00f,
+1.011473302008831e+00f, +1.011584996312149e+00f, +1.011697416504599e+00f, +1.011808919793469e+00f,
+1.011919264025716e+00f, +1.012027240794153e+00f, +1.012132151631041e+00f, +1.012232734564333e+00f,
+1.012327560477901e+00f, +1.012416383754384e+00f, +1.012497890726292e+00f, +1.012570434021054e+00f,
+1.012633295255708e+00f, +1.012685277016726e+00f, +1.012725564992284e+00f, +1.012752577651415e+00f,
+1.012765062889864e+00f, +1.012762356719162e+00f, +1.012743376077777e+00f, +1.012706484200181e+00f,
+1.012650842226435e+00f, +1.012575427778520e+00f, +1.012479473490919e+00f, +1.012361105121003e+00f,
+1.012219809594718e+00f, +1.012054359992419e+00f, +1.011864000215460e+00f, +1.011647223869087e+00f,
+1.011402518267713e+00f, +1.011129654652857e+00f, +1.010826951260377e+00f, +1.010492924436361e+00f,
+1.010126353960416e+00f, +1.009725892479312e+00f, +1.009290060983833e+00f, +1.008817301052548e+00f,
+1.008305027555130e+00f, +1.007752833675443e+00f, +1.007157827358150e+00f, + 1.006518049344503e+00f,
+1.005831403532018e+00f, +1.005095592119373e+00f, +1,004308630055050e+00f, +1.003467498305776e+00f,
+1.002569500413888e+00f, +1.001612710105563e+00f, +1.000594272975683e+00f, +9.995111701168786e-01f,
+9.983609218719522e-01f, +9.971409288327860e-01f, +9.958488863050556e-01f, +9.944818543153893e-01f,
+9.930375282832211e-01f, +9.915146560759479e-01f, +9.899136802423638e-01f, +9.881930623810997e-01f,
+9.859422591203311e-01f, +9.835667898378924e-01f, +9.811423034808365e-01f, +9.785214441250228e-01f,
+9.756636036109838e-01f, +9.725453442532574e-01f, +9.691456634185092e-01f, +9.654406178310209e-01f,
+9.614043615076308e-01f, +9.570113065179300e-01f, +9.522367669696690e-01f, +9.470548839544214e-01f,
+9.414403740008491e-01f, +9.353691612846549e-01f, +9.288190093977164e-01f, +9.217662887169115e-01f,
+9.141896283466009e-01f, +9.060694681113471e-01f, +8.973891675497357e-01f, +8.881332000806269e-01f,
+8.782893885841422e-01f, +8.678469565343039e-01f, +8.567970644671067e-01f, +8.451334654019180e-01f,
+8.328542805780399e-01f, +8.199594783897041e-01f, +8.064511006873497e-01f, +7.923346478686025e-01f, +
7.776204488292163e-01f, + 7.623206183595970e-01f, + 7.464486491227057e-01f, +7.300205729992958e-01f,
+7.130567383226717e-01f, +6.955805444755916e-01f, +6.776173229836567e-01f, +6.591955305148172e-01f,
+6.403486426892321e-01f, +6.211072197441818e-01f, +6.015049275244730e-01f, +5.815787608870452e-01f,
+5.613674511156324e-01f, +5.409188627354076e-01f, +5.202736834971303e-01f, +4.994780733459294e-01f,
+4.785774177949064e-01f, +4.576172599874928e-01f, +4.366490208265804e-01f, +4.157221460415995e-01f,
+3.948856590950757e-01f, +3.741903189229770e-01f, +3.536868899553974e-01f, +3.334260017756462e-01f, +3.134586473252229e-01f, +2.938337904395871e-01f, +2.745992637590817e-01f, +2.558030636168172e-01f,
+2.374902188466697e-01f, +2.197036032185785e-01f, +2.024855415115456e-01f, +1.858749915117319e-01f,
+1.699067802117410e-01f, +1.546132267478873e-01f, +1.400238206749695e-01f, +1.261637395672913e-01f,
+1.130534434072719e-01f, +1.007084973747940e-01f, +8.914024389873081e-02f, +7.835612100141792e-02f,
+6.835821233920988e-02f, +5.914211536028976e-02f, +5.069893012340832e-02f, +4.301717763585550e-02f,
+3.608020726673359e-02f, +2.986316337017630e-02f, +2.433722657129812e-02f, +1.947675241971700e-02f,
+1.525710171255895e-02f, +1.163787492636240e-02f, +8.433087782643718e-03f, +4.449668997344735e-03f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f

A numerical example of windowing function $w_{480}$, for frame size N=480, is herewith provided (960 samples):
-2.353032150516754e-04f, -4.619898752628163e-04f, -6.262931535610879e-04f, -7.929180432976445e-04f,
-9.747166718929050e-04f, -1.180256894474562e-03f, -1.409209039594871e-03f, -1.664473096973725e-03f,
-1.946591608170231e-03f, -2.257081732588478e-03f, -2.597106916737789e-03f, -2.967607624839524e-03f,
-3.370454877988472e-03f, -3.806285163352241e-03f, -4.276873767639064e-03f, -4.782469904501813e-03f,
-5.324608721716763e-03f, -5.903403814095400e-03f, -6.520419726599805e-03f, -7.175885277771099e-03f,
-7.871422820642307e-03f, -8.606586039759667e-03f, -9.382480860899108e-03f, -1.019827182163307e-02f,
-1.105520547739066e-02f, -1.195270300743193e-02f, -1.289205910303846e-02f, -1.387263484323160e-02f,
-1.489528159506296e-02f, -1.595856621933800e-02f, -1.706288556735433e-02f, -1.820666399965468e-02f,
-1.939065975232718e-02f, -2.061355417582714e-02f, -2.187570925786862e-02f, -2.317526315266411e-02f,
-2.451227449041489e-02f, -2.588471937157619e-02f, -2.729263737090799e-02f, -2.873390902713615e-02f,
-3.020862738245264e-02f, -3.171440372994384e-02f, -3.325098858986303e-02f, -3.481597793538342e-02f,
-3.640892406933019e-02f, -3.802742318209150e-02f, -3.967067992672979e-02f, -4.133575417353826e-02f,
-4.302203371734278e-02f, -4.472698045914417e-02f, -4.645022292934329e-02f, -4.818891490266687e-02f,
-4.994225863256500e-02f, -5.170690802826666e-02f, -5.348162036097223e-02f, -5.526334794593565e-02f,
-5.705123152423822e-02f, -5.884271749745559e-02f, -6.063717235243996e-02f, -6.243104027829089e-02f,
-6.422303545004304e-02f, -6.600961519440657e-02f, -6.778962269634495e-02f, -6.955996868581379e-02f,
-7.131966266443390e-02f, -7.306581273272733e-02f, -7.479758913001458e-02f, -7.651178225890490e-02f,
-7.820711420768856e-02f, -7.988010693411644e-02f, -8.152964005319532e-02f, -8.315237353264004e-02f,
-8.474728946770714e-02f, -8.631137544905677e-02f, -8.784374452959058e-02f, -8.934164364321417e-02f,
-9.080411291245728e-02f, -9.222795761428432e-02f, -9.361232867223340e-02f, -9.495377758870335e-02f, -9.625155313139856e-02f, -9.750284620437569e-02f, -9.870736514214426e-02f, -9.986271288271026e-02f,
-1.009680221406219e-01f, -1.020202684361974e-01f, -1.030183804850491e-01f, -1.039596356759290e-01f,
-1.048438825017798e-01f, -1.056686838192766e-01f, -1.064342821660323e-01f, -1.071382314127799e-01f,
-1.077799961121537e-01f, -1.083570625865931e-01f, -1.088690135027248e-01f, -1.093135588677235e-01f,
-1.096903559498340e-01f, -1.099969655786929e-01f, -1.102332261219973e-01f, -1.103972812085189e-01f,
-1.104898474883336e-01f, -1.105086416532167e-01f, -1.104537426996073e-01f, -1.103225838568563e-01f,
-1.101145827722143e-01f, -1.098276928170364e-01f, -1.094621746650760e-01f, -1.090163960055733e-01f,
-1.084908852561722e-01f, -1.078834293141886e-01f, -1.071937180231978e-01f, -1.064196358069465e-01f,
-1.055612509762041e-01f, -1.046162812518618e-01f, -1.035849043557610e-01f, -1.024650162703341e-01f,
-1.012568997532046e-01f, -9.995864571932928e-02f, -9.857014566194627e-02f, -9.708911135857967e-02f,
-9.551545820689084e-02f, -9.384684920715425e-02f, -9.208300062891550e-02f, -9.022171021406450e-02f,
-8.826309993000785e-02f, -8.620493821803937e-02f, -8.404742152815330e-02f, -8.178792716809512e-02f,
-7.942625026703617e-02f, -7.695980775819990e-02f, -7.438785600211463e-02f, -7.170797002873608e-02f,
-6.891994783815969e-02f, -6.602189797715241e-02f, -6.301349420724424e-02f, -5.989191912667712e-02f,
-5.665655641133161e-02f, -5.330406164482222e-02f, -4.983427241976235e-02f, -4.624456893420224e-02f,
-4.253455686336916e-02f, -3.870195772538443e-02f, -3.474585776145929e-02f, -3.066341518682682e-02f,
-2.645425077642105e-02f, -2.211581608120528e-02f, -1.764740541599136e-02f, -1.304581363895818e-02f,
-8.310425696208936e-03f, -3.438268661133170e-03f, +1.570315476576933e-03f, +6.717697635290676e-03f,
+1.200477020244778e-02f, +1.743398319747869e-02f, +2.300642061077823e-02f, +2.872481423270595e-02f,
+3.458896350634671e-02f, +4.060106462625085e-02f, +4.676102915752826e-02f, +5.307133911821893e-02f,
+5.953239090915557e-02f, +6.614647812869151e-02f, +7.291293184312803e-02f, +7.983354189816511e-02f,
+8.690807412770696e-02f, +9.413813765275064e-02f, +1.015233140203748e-01f, +1.090651518336202e-01f,
+1.167626546016197e-01f, +1.246171387327525e-01f, +1.326272948938113e-01f, +1.407938190608664e-01f,
+1.491152519299797e-01f, +1.575921408388593e-01f, +1.662224799248571e-01f, +1.750067399059861e-01f,
+1.839431938620024e-01f, +1.930318183054904e-01f, +2.022699854906251e-01f, +2.116567430906184e-01f,
+2.211888523410642e-01f, +2.308655379767671e-01f, +2.406837992341654e-01f, +2.506420640291662e-01f,
+2.607365124918583e-01f, +2.709659073501196e-01f, +2.813259021832532e-01f, +2.918144694729168e-01f,
+3.024270279840051e-01f, +3.131603499997996e-01f, +3.240095704645023e-01f, +3.349719592361666e-01f,
+3.460422935204829e-01f, +3.572175180786021e-01f, +3.684915649120530e-01f, +3.798595119591716e-01f,
+3.913146885756875e-01f, +4.028532873867052e-01f, +4.144688328137527e-01f, +4.261571642320424e-01f,
+4.379113897565727e-01f, +4.497256320417501e-01f, +4.615925445090212e-01f, +4.735067030065239e-01f,
+4.854600184866710e-01f, +4.974471592901086e-01f, +5.094597228333853e-01f, +5.214909841729947e-01f,
+5.335326819631583e-01f, +5.455789811615239e-01f, +5.576217157959890e-01f, +5.696546730080154e-01f,
+5.816685576268035e-01f, +5.936560624526468e-01f, +6.056083823929643e-01f, +6.175192060085208e-01f,
+6.293796611336280e-01f, +6.411830842823245e-01f, +6.529203544876097e-01f, +6.645840786371451e-01f,
+6.761653499550255e-01f, +6.876573952173626e-01f, +6.990511539119996e-01f, +7.103400549562944e-01f,
+7.215149331458728e-01f, +7.325691772738999e-01f, +7.434943718765665e-01f, +7.542846327442048e-01f,
+7.649313654540612e-01f, +7.754281892901473e-01f, +7.857670170752049e-01f, +7.959414651061612e-01f,
+8.059437233154637e-01f, +8.157687070715176e-01f, +8.254086223972127e-01f, +8.348589373399948e-01f,
+8.441125827416620e-01f, +8.531651194538425e-01f, +8.620108336276733e-01f, +8.706456337542150e-01f,
+8.790631561061171e-01f, +8.872599706865123e-01f, +8.952313288619367e-01f, +9.029751680353524e-01f,
+9.104863121445679e-01f, +9.177625550620636e-01f, +9.247997426966093e-01f, +9.315962496426278e-01f,
+9.381494858921667e-01f, +9.444588390359354e-01f, +9.505220861927248e-01f, +9.563402921286364e-01f,
+9.619114522936701e-01f, +9.672366712325431e-01f, +9.723156637834687e-01f, +9.771501187120180e-01f,
+9.817397501303696e-01f, +9.860865871353246e-01f, +9.901906380163595e-01f, +9.940557180662704e-01f,
+9.976842395284637e-01f, +1.001080961257010e+00f, +1.004247514102417e+00f, +1.007188578458507e+00f,
+1.009906654565108e+00f, +1.012407428282884e+00f, +1.014694702432600e+00f, +1.016774659209400e+00f,
+1.018650990561848e+00f, +1.020330464463111e+00f, +1.021817328911793e+00f, +1.023118841384460e+00f,
+1.024240262467000e+00f, +1.025189721888128e+00f, +1.025972450969440e+00f, +1.026596938589443e+00f,
+1.027069179375841e+00f, +1.027397523939210e+00f, +1.027587902203109e+00f, +1.027648951922701e+00f,
+1.027585830688143e+00f, +1.027408519661012e+00f, +1.027122986826984e+00f, +1.026738673647482e+00f,
+1.026261663878092e+00f, +1.025701002415063e+00f, +1.025061777648234e+00f, +1.024353980976701e+00f,
+1.023582385618774e+00f, +1.022756514615106e+00f, +1.021880604350422e+00f, +1.020963871317665e+00f,
+1.020009139549275e+00f, +1.019027285501251e+00f, +1.018019442784231e+00f, +1.016996499560845e+00f,
+1.015957433206324e+00f, +1.014923441259795e+00f, +1.013915946100629e+00f, +1.013047565149327e+00f,
+1.012216130365610e+00f, +1.011044869639164e+00f, +1.009914592130044e+00f, +1.008824888092573e+00f,
+1.007773858455400e+00f, +1.006761700412993e+00f, +1.005786648810854e+00f, +1.004848753962734e+00f,
+1.003946083413733e+00f, + 1.003078846506546e+00f, +1.002245009135684e+00f, +1.001444733905817e+00f, +1.000676188436651 e+00f, +9.999393169239009e-01f, +9.992320848298057e-01f, +9.985548127155425e-01f,
+9.979055415627330e-01f, +9.972842679758880e-01f, +9.966890948441745e-01f, +9.961203379971326e-01f,
+9.955761256313581e-01f, +9.950565724564597e-01f, +9.945597525471822e-01f, +9.940860378486615e-01f,
+9.936337788972491e-01f, +9.932031606606759e-01f, +9.927921871265732e-01f, +9.924015177880798e-01f,
+9.920297273323891e-01f, +9.916767775088281e-01f, +9.913408767719142e-01f, +9.910230654424902e-01f,
+9.907216425865902e-01f, +9.904366799536263e-01f, +9.901668953434221e-01f, +9.899131011580791e-01f,
+9.896735637374597e-01f, +9.894488374513719e-01f, +9.892374835404283e-01f, +9.890401927796704e-01f,
+9.888556356037892e-01f, +9.886843467692753e-01f, +9.885247606051014e-01f, +9.883778520531268e-01f,
+9.882423270582524e-01f, +9.881185638915363e-01f, +9.880051626345804e-01f, +9.879032023766432e-01f,
+9.878111744348976e-01f, +9.877295459610343e-01f, +9.876571983429736e-01f, +9.875949843246187e-01f,
+9.875412739766566e-01f, +9.874969061399389e-01f, +9.874606249127551e-01f, +9.874329809802893e-01f,
+9.874126414437681e-01f, +9.874004750404033e-01f, +9.873949921033299e-01f, +9.873969162747074e-01f,
+9.874049060317581e-01f, +9.874197049003676e-01f, +9.874399717110517e-01f, +9.874663281231737e-01f,
+9.874973205882319e-01f, +9.875338926695315e-01f, +9.875746535410983e-01f, +9.876201238703241e-01f,
+9.876689801932402e-01f, +9.877221556193183e-01f, +9.877781920433015e-01f, +9.878376489591358e-01f,
+9.878991990245439e-01f, +9.879637979933339e-01f, +9.880300303653743e-01f, +9.880984675859855e-01f,
+9.881678007807095e-01f, +9.882390300097154e-01f, +9.883107693992456e-01f, +9.883835200189653e-01f,
+9.884560159878955e-01f, +9.885294200392185e-01f, +9.886022219397892e-01f, +9.886749404176028e-01f,
+9.887466261142505e-01f, +9.888182771263505e-01f, +9.888882480852147e-01f, +9.889574384705896e-01f,
+9.890247977602895e-01f, +9.890911247701029e-01f, +9.891551701556196e-01f, +9.892178658748239e-01f,
+9.892779555818088e-01f, +9.893365186903538e-01f, +9.893923680007577e-01f, +9.894462830852175e-01f,
+9.894972124952000e-01f, +9.895463342815009e-01f, +9.895923617530382e-01f, +9.896362652966239e-01f,
+9.896772011542693e-01f, +9.897162195263046e-01f, +9.897520286480039e-01f, +9.897859195209235e-01f,
+9.898170267411330e-01f, +9.898462068764986e-01f, +9.898725363809847e-01f, +9.898975138787787e-01f,
+9.899200050208486e-01f, +9.899410789223559e-01f, +9.899600605054418e-01f, +9.899782261038060e-01f,
+9.899945557067980e-01f, +9.900103500807507e-01f, +9.900248320990181e-01f, +9.900394023736973e-01f,
+9.900532105829365e-01f, +9.900674746047259e-01f, +9.900814722948890e-01f, +9.900966926051257e-01f,
+9.901122448734595e-01f, +9.901293790312005e-01f, +9.901474648912307e-01f, +9.901680598867444e-01f,
+9.901902265696609e-01f, +9.902151896501201e-01f, +9.902424418296485e-01f, +9.902734448815004e-01f,
+9.903071270768942e-01f, +9.903448913950654e-01f, +9.903862280081246e-01f, +9.904324484666853e-01f,
+9.904825650601110e-01f, +9.905379830873822e-01f, +9.905980602136440e-01f, +9.906640366554630e-01f,
+9.907348826312993e-01f, +9.908120376822228e-01f, +9.908947858311721e-01f, +9.909842592301273e-01f,
+9.910795247770178e-01f, +9.911819240108124e-01f, +9.912905118607647e-01f, +9.914064705361564e-01f,
+9.915288011543961e-01f, +9.916586940166509e-01f, +9.917952720685562e-01f, +9.919396217291009e-01f,
+9.920906151219310e-01f, +9.922495028313456e-01f, +9.924152398352751e-01f, +9.925887208794144e-01f,
+9.927688708468421e-01f, +9.929569112537944e-01f, +9.931516528513824e-01f, +9.933539244159140e-01f,
+9.935626893131695e-01f, +9.937790866568735e-01f, +9.940016434044485e-01f, +9.942312024833810e-01f,
+9.944668184371617e-01f, +9.947093441694513e-01f, +9.949572854565533e-01f, +9.952116634297566e-01f,
+9.954712635321227e-01f, +9.957367951478069e-01f, +9.960068616185641e-01f, +9.962823025614079e-01f,
+9.965617986382630e-01f, +9.968461329825753e-01f, +9.971338271912752e-01f, +9.974256691222113e-01f,
+9.977203369515556e-01f, +9.980185087055744e-01f, +9.983185871761977e-01f, +9.986213520769593e-01f,
+9.989255426466267e-01f, +9.992317314100975e-01f, +9.995382582242990e-01f, +9.998461160718275e-01f,
+1.000153907612080e+00f, +1.000461955079660e+00f, +1.000768859280338e+00f, +1.001075613053728e+00f,
+1.001380551217109e+00f, +1.001684244734497e+00f, +1.001985425397567e+00f, +1.002284871786226e+00f,
+1.002580975161843e+00f, +1.002874411368430e+00f, +1.003163845364970e+00f, +1.003450063374329e+00f,
+1.003731570287893e+00f, +1.004009147462043e+00f, +1.004281457582935e+00f, +1.004549339226336e+00f,
+1.004811375053364e+00f, +1.005068272394360e+00f, +1.005318795748286e+00f, +1.005563968008037e+00f,
+1.005802269635282e+00f, +1.006034554002353e+00f, +1.006259855360867e+00f, +1.006479018139540e+00f,
+1.006690541428116e+00f, +1.006895570408563e+00f, +1.007093045696527e+00f, +1.007283799246233e+00f,
+1.007466616298057e+00f, +1.007642728426847e+00f, +1.007811036585595e+00f, +1.007972441990187e+00f,
+1.008125875904472e+00f, +1.008272602383284e+00f, +1.008411468616852e+00f, +1.008543573152632e+00f,
+1.008668018334797e+00f, +1.008786009787269e+00f, +1.008896526233555e+00f, +1.009000766336071e+00f,
+1.009097763850333e+00f, +1.009188880897370e+00f, +1.009273163797313e+00f, +1.009351762546296e+00f,
+1.009423944949143e+00f, +1.009491175244507e+00f, +1.009552401900961 e+00f, +1.009608886895764e+00f,
+1.009659973830751 e+00f, +1.009707093778162e+00f, +1.009749238562067e+00f, +1.009787744284661e+00f,
+1.009822090220407e+00f, +1.009853706282597e+00f, +1.009881498943010e+00f, +1.009906958448099e+00f,
+1.009929567021562e+00f, +1.009950573483366e+00f, +1.009969021400474e+00f, +1.009986499185054e+00f,
+1.010002363879044e+00f, +1.010017890428877e+00f, +1.010032170180360e+00f, +1.010046722045583e+00f, +1.010060809299530e+00f, +1.010075674445289e+00f, +1.010090449982098e+00f, +1.010106564965965e+00f,
+1.010123226584120e+00f, +1.010141762173145e+00f, +1.010161131093372e+00f, +1.010182635897876e+00f,
+1.010205587931660e+00f, +1.010231078494249e+00f, +1.010257950227988e+00f, +1.010287732968580e+00f,
+1.010319484524512e+00f, +1.010354079663767e+00f, +1.010390635488037e+00f, +1.010430470494512e+00f,
+1.010472266495074e+00f, +1.010517096381509e+00f, +1.010564099281000e+00f, +1.010614266894512e+00f,
+1.010666285876455e+00f, +1.010721360243234e+00f, +1.010778416755264e+00f, +1.010838252644461e+00f,
+1.010899655674578e+00f, +1.010963729626641e+00f, +1.011029191301694e+00f, +1.011096993993037e+00f,
+1.011165861239173e+00f, +1.011236610341260e+00f, +1.011308167670753e+00f, +1.011381453638912e+00f,
+1.011454785713102e+00f, +1.011529185153809e+00f, +1.011603680910505e+00f, +1.011678803938046e+00f, +
1. 0 117 53008569803e+00f, +1.011827484797985e+00f, +1.011900936547881 e+00f, +1.011973876511603e+00f,
+1.012044885003304e+00f, +1.012114985644919e+00f, +1.012182837094955e+00f, +1.012249023976742e+00f,
+1.012312095063070e+00f, +1.012373028737774e+00f, +1.012430463679316e+00f, +1.012484972246822e+00f,
+1.012535058602453e+00f, +1.012581678169188e+00f, +1.012623472898504e+00f, +1.012660975529858e+00f,
+1.012692758750213e+00f, + 1.012719789201144e+00f, +1.012740575296603e+00f, + 1,012755753887085e+00f,
+1.012763948841204e+00f, +1.012765922449960e+00f, +1.012760298661069e+00f, +1.012747819936584e+00f,
+1.012726958954961 e+00f, +1.012698607692183e+00f, +1.012661400539405e+00f, +1.012615904116265e+00f,
+1.012560833005713e+00f, +1.012497050269805e+00f, +1.012422888521601 e+00f, +1.012339226241367e+00f,
+1.012244921966297e+00f, +1.012140460211194e+00f, +1.012024302085441e+00f, +1.011897560567707e+00f,
+1.011758810583150e+00f, +1.011608449127642e+00f, +1.011445162723270e+00f, +1.011269960947744e+00f,
+1.011081255645969e+00f, +1.010879608424312e+00f, +1.010663676735228e+00f, +1.010434184200640e+00f,
+1.010189681124657e+00f, +1.009930754807923e+00f, +1.009655660215271e+00f, +1.009365251564694e+00f,
+1.009058249873833e+00f, +1.008734758578989e+00f, +1.008393079963091 e+00f, +1.008034308295421 e+00f,
+1.007656661215973e+00f, +1.007260142622887e+00f, +1.006843352506855e+00f, +1.006407009542103e+00f,
+1.005949145170711e+00f, +1.005470005637052e+00f, +1.004967986424467e+00f, +1.004443531995945e+00f,
+1.003894772403371e+00f, +1.003321903663793e+00f, +1.002723127308148e+00f, +1.002098854400575e+00f,
+1.001447278873483e+00f, +1.000768505317086e+00f, +1.000060686758758e+00f, +9.993242684851855e-01f,
+9.985573503390627e-01f, +9.977600196406868e-01f, +9.969306036935497e-01f, +9.960694269553644e-01f,
+9.951746430061121e-01f, +9.942466438407230e-01f, +9.932837131068657e-01f, +9.922861082472264e-01f,
+9.912523092989319e-01f, +9.901827419790691e-01f, +9.890757868707590e-01f, +9.879313024174022e-01f,
+9.863553220272523e-01f, +9.847362453480265e-01f, +9.831750948772566e-01f, +9.815583336011345e-01f,
+9.798613526271561e-01f, +9.780617486993630e-01f, +9.761574317374303e-01f, +9.741378617337759e-01f,
+9.719990112065752e-01f, +9.697327413658168e-01f, +9.673331975559332e-01f, +9.647915124057732e-01f,
+9.621011497566145e-01f, +9.592539757044516e-01f, +9.562427177295731e-01f, +9.530600909726344e-01f,
+9.496984081652284e-01f, +9.461498120176854e-01f, +9.424071613625743e-01f, +9.384634163826711e-01f,
+9.343112966094085e-01f, +9.299449872197452e-01f, +9.253567968750328e-01f, +9.205404627076625e-01f,
+9.154896280575360e-01f, +9.101986790930605e-01f, +9.046620597741508e-01f, +8.988755194372424e-01f,
+8.928338316495705e-01f, +8.865337190368053e-01f, +8.799712722567934e-01f, +8.731437835983047e-01f,
+8.660476534563131e-01f, +8.586812520174252e-01f, +8.510420440685049e-01f, +8.431297226886574e-01f,
+8.349435141989714e-01f, +8.264839911291133e-01f, +8.177505366573690e-01f, +8.087449817124315e-01f, +
7.994681492797084e-01f, +7.899235162194718e-01f, + 7.801137731566502e-01f, + 7.700431275216928e-01f,
+7.597145736971065e-01f, +7.491330971820804e-01f, +7.383028603058783e-01f, +7.272298755824693e-01f,
+7.159201919962611e-01f, + 7.043814340356083e-01f, +6.926196927377140e-01f, +6.806438831866077e-01f,
+6.684616478236647e-01f, +6.560830137986515e-01f, +6.435179268559957e-01f, +6.307755329382612e-01f,
+6.178641647786525e-01f, +6.047954625702541e-01f, +5.915799587176216e-01f, +5.782289366005894e-01f,
+5.647535885752191e-01f, +5.511703155400274e-01f, +5.374905090437071e-01f, +5.237263500445715e-01f,
+5.098915423728255e-01f, +4.960008074926423e-01f, +4.820662943337458e-01f, +4.681017110048007e-01f,
+4.541216995958746e-01f, +4.401421815729068e-01f, +4.261772971493010e-01f, +4.122417888542512e-01f,
+3.983499612526493e-01f, +3.845172335531009e-01f, +3.707583717376236e-01f, +3.570886786795506e-01f,
+3.435228672445627e-01f, +3.300763764703638e-01f, +3.167640325043893e-01f, +3.036004651973109e-01f,
+2.905996158436682e-01f, +2.777758503744847e-01f, +2.651434678028531e-01f, +2.527161881181577e-01f,
+2.405069849650012e-01f, +2.285283969438072e-01f, +2.167933432162879e-01f, +2.053139897833021e-01f,
+1.941021906320988e-01f, +1.831680872008943e-01f, +1.725221947208913e-01f, +1.621735416384834e-01f,
+1.521320683467849e-01f, +1.424052801149985e-01f, +1.330015240938615e-01f, +1.239260664828526e-01f,
+1.151858295527293e-01f, +1.067840430193724e-01f, +9.872637505002878e-02f, +9.101379000888035e-02f,
+8.365057236623055e-02f, +7.663508305536153e-02f, +6.997033405748826e-02f, +6.365188111381365e-02f,
+5.768176015814392e-02f, +5.205244216987966e-02f, +4.676538412257621e-02f, +4.180950541438362e-02f,
+3.718640251368464e-02f, +3.288072750732215e-02f, +2.889548499582958e-02f, +2.520980565928884e-02f,
+2.183057564646272e-02f, +1.872896194002638e-02f, +1.592127815153420e-02f, +1.336381425803020e-02f, +1.108558877807282e-02f,    +8.943474189364638e-03f,    +6.758124889697787e-03f,    +3.504438130619497e-03f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+1.108558877807282e-02f,    +8.943474189364638e-03f,    +6.758124889697787e-03f,    +3.504438130619497e-03f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f,    +0.000000000000000e+00f,    +0.000000000000000e+00f,    +0.000000000000000e+00f,
+0.000000000000000e+00f, +0.000000000000000e+00f, +0.000000000000000e+00f, +0.000000000000000e+00f

A numerical example of windowing function $w_{960}$, for frame size N=960, is herewith provided (1920 samples):

-1.596869453315999e-04,    -3.021153494057143e-04,    -4.142323860121641e-04,    -5.058484031439142e-04,
-5.867737487939294e-04,    -6.666034929771656e-04,    -7.499813122143762e-04,    -8.366504004139794e-04,
-9.273096237893370e-04,    -1.023773491532728e-03,    -1.126635355725494e-03,    -1.235247794937702e-03,
-1.349627853510606e-03,    -1.470492941694331e-03,    -1.598145399394582e-03,    -1.732450700747454e-03,
-1.873473391018495e-03,    -2.021493133113876e-03,    -2.176721793926887e-03,    -2.339292362082021e-03,
-2.509298051958086e-03,    -2.686801873698675e-03,    -2.872008069419264e-03,    -3.065254982136409e-03,
-3.266686736002951e-03,    -3.476256385086407e-03,    -3.694123506258334e-03,    -3.920651988943251e-03,
-4.155963816705528e-03,    -4.399940204176431e-03,    -4.652692827862344e-03,    -4.914563787665504e-03,
-5.185653529531935e-03,    -5.465821495567872e-03,    -5.755172503953251e-03,    -6.054056765330685e-03,
-6.362583863449497e-03,    -6.680623380533122e-03,    -7.008304674718039e-03,    -7.346013465075499e-03,
-7.693816924650567e-03,    -8.051465262788033e-03,    -8.419001443263380e-03,    -8.796760749750191e-03, -9.184751507972289e-03, -9.582657230262597e-03, -9.990503073705982e-03, -1.040865597419619e-02,
-1.083716113754551e-02, -1.127574117138621e-02, -1.172444049589271e-02, -1.218362542421523e-02,
-1.265334152129685e-02, -1.313331245904876e-02, -1.362355747138776e-02, -1.412438986522702e-02,
-1.463576680723352e-02, -1.515729094197161e-02, -1.568889620430290e-02, -1.623084814367250e-02,
-1.678306524600559e-02, -1.734512089366117e-02, -1.791696516251699e-02, -1.849892453107246e-02,
-1.909097368362797e-02, -1.969273308274951e-02, -2.030414376031160e-02, -2.092546711168754e-02,
-2.155660557689242e-02, -2.219710359529686e-02, -2.284684792818856e-02, -2.350606779320675e-02,
-2.417463749934085e-02, -2.485207716234951e-02, -2.553826580898371e-02, -2.623344061522424e-02,
-2.693746704328349e-02, -2.764983997782559e-02, -2.837043858580717e-02, -2.909952486193998e-02,
-2.983695676902939e-02, -3.058218787751172e-02, -3.133504629493832e-02, -3.209573641742117e-02,
-3.286409853195186e-02, -3.363960728361352e-02, -3.442207835192332e-02, -3.521166997276568e-02,
-3.600820974457969e-02, -3.681119317395579e-02, -3.762042487257546e-02, -3.843601741746971e-02,
-3.925772507976759e-02, -4.008494689009130e-02, -4.091746034850161e-02, -4.175542154425013e-02,
-4.259863408038441e-02, -4.344654894948344e-02, -4.429899287523113e-02, -4.515616616948602e-02,
-4.601786724624048e-02, -4.688349274164030e-02, -4.775281564045485e-02, -4.862598509282498e-02,
-4.950274425624717e-02, -5.038242975874127e-02, -5.126474204655663e-02, -5.214974857230398e-02,
-5.303718358615044e-02, -5.392644753556616e-02, -5.481729406855359e-02, -5.570983057565210e-02,
-5.660384311081047e-02, -5.749879655200370e-02, -5.839451321393058e-02, -5.929116747072080e-02,
-6.018848884279070e-02, -6.108576415855094e-02, -6.198268202511926e-02, -6.287933502598060e-02,
-6.377542359879805e-02, -6.467025548071184e-02, -6.556352962710620e-02, -6.645533804325808e-02,
-6.734542216184526e-02, -6.823317113969737e-02, -6.911832800881393e-02, -7.000099017198280e-02,
-7.088091415536939e-02, -7.175751581450866e-02, -7.263057011354321e-02, -7.350020923324756e-02,
-7.436618116832702e-02, -7.522784961377151e-02, -7.608493286734087e-02, -7.693750413779520e-02,
-7.778525942347714e-02, -7.862751920094575e-02, -7.946399769633587e-02, -8.029480247839879e-02,
-8.111965623403654e-02, -8.193789640255647e-02, -8.274924535373614e-02, -8.355381170261278e-02,
-8.435134905678848e-02, -8.514125464087215e-02, -8.592328028689659e-02, -8.669753354886602e-02,
-8.746379123238275e-02, -8.822149831804039e-02, -8.897043074644968e-02, -8.971069341834263e-02,
-9.044201341183719e-02, -9.116374329727489e-02, -9.187564084638347e-02, -9.257786640497777e-02,
-9.327014538321736e-02, -9.395176975347193e-02, -9.462246851310178e-02, -9.528240981433814e-02,
-9.593137735886889e-02, -9.656876884228789e-02, -9.719438533739366e-02, -9.780843257659243e-02,
-9.841075978146442e-02, -9.900085534600200e-02, -9.957851303827886e-02, -1.001438325530028e-01,
-1.006965654660066e-01, -1.012361165314596e-01, -1.017622262660318e-01, -1.022749718234132e-01,
-1.027741036495644e-01, -1.032590485916072e-01, -1.037296416381658e-01, -1.041861222641119e-01,
-1.046283222746241e-01, -1.050556674062305e-01, -1.054680247057000e-01, -1.058657014776354e-01,
-1.062485747526411e-01, -1.066160875985523e-01, -1.069680384993124e-01, -1.073045851468520e-01,
-1.076255384835563e-01, -1.079303623240916e-01, -1.082188709931267e-01, -1.084912299471198e-01,
-1.087472718159103e-01, -1.089864959432877e-01, -1.092087422379003e-01, -1.094141900597718e-01,
-1.096026598727515e-01, -1.097736146613313e-01, -1.099268894481712e-01, -1.100626919008929e-01,
-1.101808861640070e-01, -1.102809952914802e-01, -1.103629709312858e-01, -1.104271876052675e-01,
-1.104735471815890e-01, -1.105014789286600e-01, -1.105108362290460e-01, -1.105018987914554e-01,
-1.104745246005427e-01, -1.104281465492726e-01, -1.103625464011331e-01, -1.102778601442104e-01,
-1.101739218186236e-01, -1.100502639286607e-01, -1.099067826823344e-01, -1.097437360338336e-01,
-1.095610353779043e-01, -1.093582462693348e-01, -1.091353125572511e-01, -1.088925531745051e-01,
-1.086298673699289e-01, -1.083467335729228e-01, -1.080429791821427e-01, -1.077187842899125e-01,
-1.073739938306107e-01, -1.070081184450032e-01, -1.066210413471652e-01, -1.062130155324388e-01,
-1.057838954855888e-01, -1.053331389663558e-01, -1.048606145834788e-01, -1.043666017588026e-01,
-1.038509823636319e-01, -1.033132401525343e-01, -1.027532566706549e-01, -1.021713124102434e-01,
-1.015673163469357e-01, -1.009408032844788e-01, -1.002916459024019e-01, -9.962005506126154e-02,
-9.892587447037898e-02, -9.820858231161539e-02, -9.746803229469267e-02, -9.670445315437526e-02,
-9.591769653314886e-02, -9.510723623306666e-02, -9.427290387369003e-02, -9.341489003828900e-02,
-9.253303383231506e-02, -9.162682426346705e-02, -9.069614104466586e-02, -8.974125216128212e-02,
-8.876201954716677e-02, -8.775790063882420e-02, -8.672877689119252e-02, -8.567495161533510e-02,
-8.459627389188201e-02, -8.349213839083708e-02, -8.236235749389448e-02, -8.120716401834208e-02,
-8.002639902061687e-02, -7.881950797067065e-02, -7.758626878445929e-02, -7.632679536516856e-02,
-7.504088747769501e-02, -7.372803129789816e-02, -7.238806162166744e-02, -7.102116211954443e-02,
-6.962720872934396e-02, -6.820576796149519e-02, -6.675671622392269e-02, -6.528023606863240e-02,
-6.377611429172260e-02, -6.224374611498080e-02, -6.068292908100376e-02, -5.909386001558149e-02,
-5.747627430502456e-02, -5.582945016301614e-02, -5.415316322402774e-02, -5.244768784057990e-02, -5.071287102956145e-02, -4.894812724598650e-02, -4.715324945932696e-02, -4.532841381541464e-02,
-4.347347112195197e-02, -4.158794238398249e-02, -3.967162909873025e-02, -3.772461300253332e-02,
-3.574664020854284e-02, -3.373712599806719e-02, -3.169587609244436e-02, -2.962308489442885e-02,
-2.751857552683018e-02, -2.538179830690266e-02, -2.321255714428171e-02, -2.101100771772769e-02,
-1.877689096555516e-02, -1.650953674438219e-02, -1.420871083118669e-02, -1.187461378850388e-02,
-9.507008996713286e-03, -7.105225746748432e-03, -4.669099247423082e-03, -2.198970714838444e-03,
+3.052506679844099e-04, +2.844096748870384e-03, +5.417800316971459e-03, +8.026287894631955e-03,
+1.066976124794342e-02, +1.334869917032908e-02, +1.606331521084708e-02, +1.881355950582949e-02,
+2.159970134663663e-02, +2.442232147839131e-02, +2.728156010437695e-02, +3.017712138573929e-02,
+3.310912443052597e-02, +3.607810469851272e-02, +3.908419391833869e-02, +4.212712008909140e-02,
+4.520702759803914e-02, +4.832447852355055e-02, +5.147966118159461e-02, +5.467238802204326e-02,
+5.790284080082958e-02, +6.117156717220185e-02, +6.447866054615346e-02, +6.782376212130986e-02,
+7.120692575100979e-02, +7.462862199422061e-02, +7.808896236959446e-02, +8.158769578329894e-02,
+8.512490568723846e-02, +8.870101069974845e-02, +9.231608110264714e-02, +9.596983987496970e-02,
+9.966236893806717e-02, +1.033941063338643e-01, +1.071650779014335e-01, +1.109748994439795e-01,
+1.148235927259266e-01, +1.187115850305241e-01, +1.226388834300689e-01, +1.266050731283809e-01,
+1.306101067250375e-01, +1.346543064817742e-01, +1.387376249190578e-01, +1.428596447589721e-01,
+1.470203170721216e-01, +1.512199592605080e-01, +1.554584725339102e-01, +1.597353438179875e-01,
+1.640504702561671e-01, +1.684041609371527e-01, +1.727963503982179e-01, +1.772265953627290e-01,
+1.816947894623263e-01, +1.862011624788949e-01, +1.907455489457267e-01, +1.953273880886783e-01,
+1.999464539304762e-01, +2.046028558464008e-01, +2.092963206850239e-01, +2.140261955702662e-01,
+2.187922274259156e-01, +2.235945635254679e-01, +2.284329840640989e-01, +2.333068981094213e-01,
+2.382160219461597e-01, +2.431603785542250e-01, +2.481396077816722e-01, +2.531529721334063e-01,
+2.582001739497298e-01, +2.632813508034234e-01, +2.683961570569586e-01, +2.735437630266799e-01,
+2.787237550375912e-01, +2.839361392493072e-01, +2.891805257722012e-01, +2.944561228780392e-01,
+2.997624255177811e-01, +3.050992195689690e-01, +3.104659867604553e-01, +3.158619077906196e-01,
+3.212865260033979e-01, +3.267397428773339e-01, +3.322210551086769e-01, +3.377295561726898e-01,
+3.432647335893443e-01, +3.488264676990591e-01, +3.544142074632647e-01, +3.600269556734629e-01,
+3.656640377499646e-01, +3.713250061671226e-01, +3.770091190097118e-01, +3.827152968157059e-01,
+3.884429045609680e-01, +3.941917466962361e-01, +3.999611859760947e-01, +4.057501420991821e-01,
+4.115579429637846e-01, +4.173843265025887e-01, +4.232286297916428e-01, +4.290897820858789e-01,
+4.349669624916473e-01, +4.408596056709005e-01, +4.467668696607166e-01, +4.526876397402144e-01,
+4.586211456831769e-01, +4.645669547719424e-01, +4.705242008503956e-01, +4.764915897192549e-01,
+4.824682887794052e-01, +4.884539254831315e-01, +4.944476636179056e-01, +5.004481977619742e-01,
+5.064545550235134e-01, +5.124661018959751e-01, +5.184818933365749e-01, +5.245006748662190e-01,
+5.305215796893860e-01, +5.365441251369431e-01, +5.425674372882107e-01, +5.485902506852811e-01,
+5.546116774259739e-01, +5.606312044701524e-01, +5.666478652857275e-01, +5.726602391687222e-01,
+5.786672646386708e-01, +5.846682453966959e-01, +5.906621680078100e-01, +5.966477035050948e-01,
+6.026239249993590e-01, +6.085903032056262e-01, +6.145458904162185e-01, +6.204893201838491e-01,
+6.264196163765745e-01, +6.323361944662236e-01, +6.382380808188793e-01, +6.441239094712802e-01,
+6.499926319211775e-01, +6.558435212204078e-01, +6.616755522321309e-01, +6.674874032292857e-01,
+6.732781108033908e-01, +6.790470657166684e-01, +6.847932667399612e-01, +6.905153235578969e-01,
+6.962122668445681e-01, +7.018835463513400e-01, +7.075281787629503e-01, +7.131447476468400e-01,
+7.187322544823347e-01, +7.242901217843889e-01, +7.298174107967581e-01, +7.353128213893310e-01,
+7.407754721062685e-01, +7.462048970975652e-01, +7.516001985652684e-01, +7.569600449843341e-01,
+7.622834795152550e-01, +7.675699252273948e-01, +7.728184915997067e-01, +7.780279710901641e-01,
+7.831974571624924e-01, +7.883263448127340e-01, +7.934137241269077e-01, +7.984583859818390e-01,
+8.034595539057413e-01, +8.084168767164887e-01, +8.133295347030278e-01, +8.181962433248811e-01,
+8.230162284197827e-01, +8.277892271515950e-01, +8.325145336568091e-01, +8.371909942430671e-01,
+8.418178561101360e-01, +8.463947757326752e-01, +8.509211545601609e-01, +8.553961300139363e-01,
+8.598190417223652e-01, +8.641894434050258e-01, +8.685068980898102e-01, +8.727709688046102e-01,
+8.769788376631916e-01, +8.811334436653052e-01, +8.852318659908962e-01, +8.892739843568178e-01,
+8.932596784799233e-01, +8.971888108843806e-01, +9.010608486625941e-01, +9.048748835980528e-01,
+9.086304531070754e-01, +9.123275405380156e-01, +9.159657608120536e-01, +9.195443573144829e-01,
+9.230629478622332e-01, +9.265215299450000e-01, +9.299198500625820e-01, +9.332574012340955e-01,
+9.365339988633418e-01, +9.397497768500882e-01, +9.429045261728636e-01, +9.459977028429117e-01,
+9.490292643083790e-01, +9.519996619967281e-01, +9.549088408436811e-01, +9.577562383751640e-01,
+9.605417649811824e-01, +9.632658122557368e-01, +9.659284562011029e-01, +9.685294510301206e-01, +9.710688896122810e-01, +9.735472021876628e-01, +9.759644676274450e-01, +9.783204156360773e-01,
+9.806151639385083e-01, +9.828492160865892e-01, +9.850226760127131e-01, +9.871352538808781e-01,
+9.891871802564161e-01, +9.911792082081333e-01, +9.931117453856605e-01, +9.949848494122985e-01,
+9.967989944502682e-01, +9.985550647085534e-01, +1.000253445050194e+00, +1.001894024615659e+00,
+1.003477185929786e+00, +1.005003807883761e+00, +1.006474342231823e+00, +1.007888812850102e+00,
+1.009247722934429e+00, +1.010552057109195e+00, +1.011802420624526e+00, +1.012999036304394e+00,
+1.014142538208007e+00, +1.015233969130880e+00, +1.016273931967023e+00, +1.017262593268930e+00,
+1.018200610205248e+00, +1.019089129704898e+00, +1.019928842669923e+00, +1.020719983374545e+00,
+1.021463262031346e+00, +1.022159867011177e+00, +1.022810581114847e+00, +1.023415781467653e+00,
+1.023976320927187e+00, +1.024493524092612e+00, +1.024968218100715e+00, +1.025400734608122e+00,
+1.025791922603958e+00, +1.026143150540689e+00, +1.026455340400072e+00, +1.026728963502498e+00,
+1.026964914246647e+00, +1.027164510654160e+00, +1.027328632612924e+00, +1.027457725038440e+00,
+1.027552729180790e+00, +1.027615074932096e+00, +1.027645580283665e+00, +1.027644462380432e+00,
+1.027612681261584e+00, +1.027551936393756e+00, +1.027463246660797e+00, +1.027346944848234e+00,
+1.027203976311704e+00, +1.027035903410657e+00, +1.026843704381356e+00, +1.026627771359327e+00,
+1.026389068000259e+00, +1.026129124951269e+00, +1.025848782597774e+00, +1.025548201799728e+00,
+1.025228357342061e+00, +1.024891029860151e+00, +1.024537134749709e+00, +1.024166724015001e+00,
+1.023780698019775e+00, +1.023380803775376e+00, +1.022967885528204e+00, +1.022541888689137e+00,
+1.022103695693341e+00, +1.021655115592693e+00, +1.021196819229254e+00, +1.020728359657958e+00,
+1.020250686272421e+00, +1.019766121526662e+00, +1.019275334687329e+00, +1.018777362174335e+00,
+1.018273081302452e+00, +1.017765178792830e+00, +1.017253984284701e+00, +1.016737542074604e+00,
+1.016217355867531e+00, +1.015698328083719e+00, +1.015181679856847e+00, +1.014665311686846e+00,
+1.014158817803440e+00, +1.013683181980586e+00, +1.013249071090664e+00, +1.012854331657942e+00,
+1.012450620480768e+00, +1.011948006992127e+00, +1.011349594569779e+00, +1.010750807770724e+00,
+1.010189090179223e+00, +1.009640487251585e+00, +1.009094771053394e+00, +1.008557961167850e+00,
+1.008032659941965e+00, +1.007517375307989e+00, +1.007011287608451e+00, +1.006514430011155e+00,
+1.006026890813957e+00, +1.005548764575910e+00, +1.005079874697786e+00, +1.004619788163424e+00,
+1.004168417268956e+00, +1.003726014625139e+00, +1.003292461479605e+00, +1.002867268893035e+00,
+1.002450315292720e+00, +1.002041847623544e+00, +1.001641769115897e+00, +1.001249637387833e+00,
+1.000865334924641e+00, +1.000489068954641e+00, +1.000120698237067e+00, +9.997597357106623e-01,
+9.994060799749374e-01, +9.990600138594018e-01, +9.987214414655692e-01, +9.983898865406841e-01,
+9.980652196577338e-01, +9.977476599094836e-01, +9.974370849972721e-01, +9.971330321102652e-01,
+9.968354071802502e-01, +9.965444836911705e-01, +9.962601672340514e-01, +9.959819947971522e-01,
+9.957098545943852e-01, +9.954439865572462e-01, +9.951842733288886e-01, +9.949302413030897e-01,
+9.946817924874576e-01, +9.944392047205887e-01, +9.942024045863540e-01, +9.939709658067042e-01,
+9.937448009691057e-01, +9.935241604969254e-01, +9.933089182704574e-01, +9.930985748592784e-01,
+9.928930430130044e-01, +9.926926485907741e-01, +9.924973655191176e-01, +9.923068103443909e-01,
+9.921208874284833e-01, +9.919397899901643e-01, +9.917633778190438e-01, +9.915911837376036e-01,
+9.914231780519580e-01, +9.912597642374404e-01 , +9.911009195707438e-01, +9.909461904886675e-01,
+9.907954498484041e-01, +9.906489032572322e-01, +9.905064710654814e-01, +9.903677893656558e-01,
+9.902328499802091e-01, +9.901019951653361e-01, +9.899751611066148e-01, +9.898518794779545e-01,
+9.897320682428268e-01, +9.896160337369861e-01, +9.895037256870947e-01, +9.893947359604699e-01,
+9.892890160408989e-01, +9.891868774704359e-01, +9.890882840931410e-01, +9.889928511129679e-01,
+9.889005321235379e-01, +9.888116182908468e-01, +9.887260333430423e-01, +9.886433365303475e-01,
+9.885634927535989e-01, +9.884868721088945e-01, +9.884134697413018e-01, +9.883429020724473e-01,
+9.882751039537586e-01, +9.882103306444820e-01, +9.881485041748238e-01, +9.880892168751595e-01,
+9.880324626554831e-01, +9.879786335149536e-01, +9.879277114724612e-01, +9.878792663495038e-01,
+9.878332150629403e-01, +9.877898261218510e-01, +9.877490592657352e-01, +9.877105653505679e-01,
+9.876743442038471e-01, +9.876407405135295e-01, +9.876096955295567e-01, +9.875807496078497e-01,
+9.875538464766127e-01, +9.875293349435258e-01, +9.875072021876561e-01, +9.874870704481152e-01,
+9.874688908826080e-01, +9.874529447589979e-01, +9.874391758112012e-01, +9.874271920836210e-01,
+9.874169741527905e-01, +9.874088727307169e-01, +9.874028477167635e-01, +9.873984685207834e-01,
+9.873956821201697e-01, +9.873948143463702e-01, +9.873958301311858e-01, +9.873983326194351e-01,
+9.874022834012905e-01, +9.874080027710336e-01, +9.874154551873394e-01, +9.874242488204272e-01,
+9.874343401290739e-01, +9.874460335035745e-01, +9.874592688338504e-01, +9.874736235387018e-01,
+9.874890696412385e-01, +9.875059727945840e-01, +9.875243137719285e-01, +9.875436862847529e-01,
+9.875640274936844e-01, +9.875856201221136e-01, +9.876084084448705e-01, +9.876319996758224e-01,
+9.876563785063032e-01, +9.876819048329899e-01, +9.877085492327816e-01, +9.877358921155149e-01, +9.877638696088412e-01, +9.877927754855115e-01, +9.878225576787804e-01, +9.878528193014621e-01,
+9.878835445497628e-01, +9.879150968481590e-01, +9.879474521328961e-01, +9.879801976843903e-01,
+9.880132731565830e-01, +9.880469724750991e-01, +9.880812445673735e-01, +9.881156946084619e-01,
+9.881503106987573e-01, +9.881854620136666e-01, +9.882211314188272e-01, +9.882569137253582e-01,
+9.882927446902245e-01, +9.883289032519310e-01, +9.883653317154473e-01, +9.884016382257884e-01,
+9.884378310018685e-01, +9.884743146700878e-01, +9.885110753693968e-01, +9.885476787868710e-01,
+9.885840418353093e-01, +9.886204379327659e-01, +9.886568414746639e-01, +9.886929275063397e-01,
+9.887287200468966e-01, +9.887645868459630e-01, +9.888004757085318e-01, +9.888359174300858e-01,
+9.888708540445242e-01, +9.889056416611736e-01, +9.889402846310907e-01, +9.889744320992592e-01,
+9.890080679866394e-01, +9.890415110770159e-01, +9.890747269455915e-01, +9.891073295256775e-01,
+9.891393036472682e-01, +9.891710038703801e-01, +9.892024062799223e-01, +9.892331093959095e-01,
+9.892631024032380e-01, +9.892927650908963e-01, +9.893220982848433e-01, +9.893507219573624e-01,
+9.893786032000026e-01, +9.894060580815116e-01, +9.894330645494204e-01, +9.894592636950934e-01,
+9.894846746832306e-01, +9.895096919388534e-01, +9.895343083314785e-01, +9.895581152602352e-01,
+9.895810813422480e-01, +9.896035553161019e-01, +9.896255512296797e-01, +9.896467469067676e-01,
+9.896671650245172e-01, +9.896871706698203e-01, +9.897067365020641e-01, +9.897254458138418e-01,
+9.897432947038028e-01, +9.897606930400666e-01, +9.897776834824588e-01, +9.897939374675170e-01,
+9.898094478563998e-01, +9.898245305815332e-01, +9.898391682249337e-01, +9.898530133261707e-01,
+9.898661175792055e-01, +9.898789278944983e-01, +9.898914705684924e-01, +9.899033504013042e-01,
+9.899145471163803e-01, +9.899254194103574e-01, +9.899359976303029e-01, +9.899459823437818e-01,
+9.899554202030650e-01, +9.899647016766845e-01, +9.899738352794291e-01, +9.899824494486951e-01,
+9.899905595941995e-01, +9.899985686323577e-01, +9.900065116928948e-01, +9.900140555182825e-01,
+9.900212405447888e-01, +9.900284805353695e-01, +9.900358124222742e-01, +9.900428956722681e-01,
+9.900497484789281e-01, +9.900567489573141e-01, +9.900639252344197e-01, +9.900709561632662e-01,
+9.900778969424803e-01, +9.900851772980046e-01, +9.900928358611601e-01, +9.901005198590931e-01,
+9.901082439265390e-01, +9.901163920607219e-01, +9.901250018173793e-01, +9.901337646053293e-01,
+9.901427479709606e-01, +9.901523931998540e-01, +9.901627402679979e-01, +9.901734275350572e-01,
+9.901844600451093e-01, +9.901962127540933e-01, +9.902087332329851e-01, +9.902217409846106e-01,
+9.902353097103640e-01, +9.902498637985275e-01, +9.902654188005916e-01, +9.902815836378273e-01,
+9.902983686695558e-01, +9.903161882791064e-01, +9.903351096966241e-01, +9.903548501470234e-01,
+9.903754652821575e-01, +9.903973477947732e-01, +9.904205084933333e-01, +9.904445786599008e-01,
+9.904695808487622e-01, +9.904959297726740e-01, +9.905236810016560e-01, +9.905525289918011e-01,
+9.905825150202904e-01, +9.906140262079994e-01, +9.906470660818262e-01, +9.906812569810133e-01,
+9.907166224339236e-01, +9.907535876784416e-01, +9.907922087340426e-01, +9.908321697026107e-01,
+9.908734943143861e-01, +9.909165464981378e-01, +9.909613313790248e-01, +9.910074971074613e-01,
+9.910550740962871e-01, +9.911044737993845e-01, +9.911557226040716e-01, +9.912084614290896e-01,
+9.912627029879084e-01, +9.913188323156490e-01, +9.913768610980639e-01, +9.914364276145792e-01,
+9.914975411562229e-01, +9.915605826937839e-01, +9.916255751593622e-01, +9.916921826078263e-01,
+9.917604214872976e-01, +9.918306597984429e-01, +9.919028873284097e-01, +9.919767175562684e-01,
+9.920521593387949e-01, +9.921296166135889e-01, +9.922091101818779e-01, +9.922902757201201e-01,
+9.923730982524657e-01, +9.924579135466506e-01, +9.925447043512063e-01, +9.926331018900273e-01,
+9.927231225056266e-01, +9.928151658609977e-01, +9.929092387372991e-01, +9.930049538427406e-01,
+9.931022798104318e-01, +9.932015434077218e-01, +9.933027281437943e-01, +9.934054751445924e-01,
+9.935098037935540e-01, +9.936161084869942e-01, +9.937243666117925e-01, +9.938341389810342e-01,
+9.939453714404443e-01, +9.940583985614073e-01, +9.941732232809857e-01, +9.942895145656371e-01,
+9.944072763730046e-01, +9.945268452163670e-01, +9.946481676207727e-01, +9.947708034711511e-01,
+9.948947222146535e-01, +9.950203031067961e-01, +9.951475444242728e-01, +9.952760608735062e-01,
+9.954058173659507e-01, +9.955371298969039e-01, +9.956699511040611e-01, +9.958038713694317e-01,
+9.959388575029996e-01, +9.960752523364563e-01, +9.962130271017117e-01, +9.963517811272741e-01,
+9.964914827801233e-01, +9.966324689957675e-01, +9.967746939976430e-01, +9.969177298776669e-01,
+9.970615306490058e-01, +9.972064329530154e-01, +9.973524075591346e-01, +9.974990583293081e-01,
+9.976463479353705e-01, +9.977945971317506e-01, +9.979437430375855e-01, +9.980933404947205e-01,
+9.982433336615963e-01, +9.983940572002874e-01, +9.985454907974421e-01, +9.986972567262494e-01,
+9.988493116887893e-01, +9.990019468868200e-01, +9.991550977367476e-01, +9.993083430214909e-01,
+9.994615765165296e-01, +9.996150231216515e-01, +9.997689221333534e-01, +9.999235128481329e-01,
+1.000076493002599e+00, +1.000231131275969e+00, +1.000385125142624e+00, +1.000538713539491e+00,
+1.000692135698996e+00, +1.000845616726739e+00, +1.000999050218361e+00, +1.001152013920163e+00,
+1.001304442627610e+00, +1.001456627881216e+00, +1.001608526000461e+00, +1.001759757645423e+00, +1.001910301800365e+00, +1.002060493867275e+00, +1.002210277420412e+00, +1.002359204811906e+00,
+1.002507212061815e+00, +1.002654620794815e+00, +1.002801392925948e+00, +1.002947129400411e+00,
+1.003091799884742e+00, +1.003235742261295e+00, +1.003378909587027e+00, +1.003520870253791e+00,
+1.003661577107433e+00, +1.003801368578070e+00, +1.003940212001390e+00, +1.004077702628435e+00,
+1.004213810320699e+00, +1.004348879757933e+00, +1.004482876599046e+00, +1.004615386562846e+00,
+1.004746360645254e+00, +1.004876116715471e+00, +1.005004618375781e+00, +1.005131475392675e+00,
+1.005256684766584e+00, +1.005380628601598e+00, +1.005503275059852e+00, +1.005624178100742e+00,
+1.005743282364652e+00, +1.005860927032197e+00, +1.005977115074116e+00, +1.006091510392348e+00,
+1.006204114728125e+00, +1.006315265680367e+00, +1.006424907424988e+00, +1.006532594023395e+00,
+1.006638301298317e+00, +1.006742427727669e+00, +1.006844991973082e+00, +1.006945629196305e+00,
+1.007044321511378e+00, +1.007141399219649e+00, +1.007236829559076e+00, +1.007330218597112e+00,
+1.007421572075267e+00, +1.007511294570522e+00, +1.007599401798709e+00, +1.007685518441567e+00,
+1.007769625953741e+00, +1.007852064386603e+00, +1.007932817703069e+00, +1.008011514905126e+00,
+1.008088176165563e+00, +1.008163211111724e+00, +1.008236628017949e+00, +1.008308033204578e+00,
+1.008377415429783e+00, +1.008445148098658e+00, +1.008511247273756e+00, +1.008575370579197e+00,
+1.008637540589491e+00, +1.008698144207627e+00, +1.008757190321980e+00, +1.008814310258779e+00,
+1.008869515256392e+00, +1.008923196622113e+00, +1.008975366811245e+00, +1.009025659761512e+00,
+1.009074101779034e+00, +1.009121111323685e+00, +1.009166718967367e+00, +1.009210565968291e+00,
+1.009252657087366e+00, +1.009293362609020e+00, +1.009332706372757e+00, +1.009370366213570e+00,
+1.009406398832440e+00, +1.009441237185677e+00, +1.009474905002031e+00, +1.009507017171120e+00,
+1.009537576990303e+00, +1.009566978740742e+00, +1.009595264293017e+00, +1.009622122007090e+00,
+1.009647608302352e+00, +1.009672145744679e+00, +1.009695757189383e+00, +1.009718066587100e+00,
+1.009739084785160e+00, +1.009759212016967e+00, +1.009778504921465e+00, +1.009796675060142e+00,
+1.009813790867919e+00, +1.009830274807737e+00, +1.009846137382005e+00, +1.009860979702382e+00,
+1.009874817539016e+00, +1.009888083631667e+00, +1.009900853103284e+00, +1.009912839830312e+00,
+1.009924092276850e+00, +1.009934992836975e+00, +1.009945546632798e+00, +1.009955384765721e+00,
+1.009964547970550e+00, +1.009973486342123e+00, +1.009982268770147e+00, +1.009990580458388e+00,
+1.009998459694088e+00, +1.010006298177305e+00, +1.010014110835447e+00, +1.010021537788250e+00,
+1.010028618428735e+00, +1.010035791136646e+00, +1.010043112228827e+00, +1.010050254076988e+00,
+1.010057245369122e+00, +1.010064471863242e+00, +1.010071952131355e+00, +1.010079338752086e+00,
+1.010086669402375e+00, +1.010094366238073e+00, +1.010102470533325e+00, +1.010110642277138e+00,
+1.010118917317053e+00, +1.010127706776959e+00, +1.010137026407425e+00, +1.010146497096682e+00,
+1.010156127541843e+00, +1.010166316200025e+00, +1.010177110711677e+00, +1.010188205550670e+00,
+1.010199631706068e+00, +1.010211755260102e+00, +1.010224555569669e+00, +1.010237629352925e+00,
+1.010251003469427e+00, +1.010265134075557e+00, +1.010280073997043e+00, +1.010295468653759e+00,
+1.010311300308220e+00, +1.010327891493345e+00, +1.010345234996637e+00, +1.010362995486892e+00,
+1.010381216558204e+00, +1.010400316698172e+00, +1.010420292023388e+00, +1.010440717183162e+00,
+1.010461564316351e+00, +1.010483206256578e+00, +1.010505666262059e+00, +1.010528615445659e+00,
+1.010552068219883e+00, +1.010576380809038e+00, +1.010601521285347e+00, +1.010627072440648e+00,
+1.010653027053931e+00, +1.010679788081867e+00, +1.010707375229772e+00, +1.010735421976626e+00,
+1.010763905869062e+00, +1.010793149909083e+00, +1.010823120603859e+00, +1.010853429760676e+00,
+1.010884078284304e+00, +1.010915454361544e+00, +1.010947547074519e+00, +1.010979946214537e+00,
+1.011012627395599e+00, +1.011045953108263e+00, +1.011079907971760e+00, +1.011114097416553e+00,
+1.011148486293359e+00, +1.011183400596362e+00, +1.011218823992338e+00, +1.011254397791134e+00,
+1.011290126474096e+00, +1.011326374295525e+00, +1.011363082075863e+00, +1.011399769951629e+00,
+1.011436384522522e+00, +1.011473302008831e+00, +1.011510547051838e+00, +1.011547787220495e+00,
+1.011584996312149e+00, +1.011622454130127e+00, +1.011660075693276e+00, +1.011697416504599e+00,
+1.011734462313348e+00, +1.011771627262926e+00, +1.011808919793469e+00, +1.011845938738977e+00,
+1.011882624964772e+00, +1.011919264025716e+00, +1.011955790122897e+00, +1.011991788266365e+00,
+1.012027240794153e+00, +1.012062525726662e+00, +1.012097630839309e+00, +1.012132151631041 e+00,
+1.012166035659198e+00, +1.012199583936457e+00, +1.012232734564333e+00, +1.012265064558555e+00,
+1.012296549102454e+00, +1.012327560477901e+00, +1.012358082400925e+00, +1.012387708001513e+00,
+1.012416383754384e+00, +1.012444410627777e+00, +1.012471723038292e+00, +1.012497890726292e+00,
+1.012522883349504e+00, +1.012547069718292e+00, +1.012570434021054e+00, +1.012592573402938e+00,
+1.012613430563370e+00, +1.012633295255708e+00, +1.012652102923549e+00, +1.012669436800254e+00,
+1.012685277016726e+00, +1.012699998432300e+00, +1.012713572256585e+00, +1.012725564992284e+00,
+1.012735914876099e+00, +1.012744934005791e+00, +1.012752577651415e+00, +1.012758443858682e+00,
+1.012762496111508e+00, +1.012765062889864e+00, +1.012766104774385e+00, +1.012765214703761e+00, +1.012762356719162e+00, +1.012757865052107e+00, +1.012751685362581e+00, +1.012743376077777e+00,
+1.012732896174196e+00, +1.012720605477780e+00, +1.012706484200181e+00, +1.012690130527749e+00,
+1.012671486975730e+00, +1.012650842226435e+00, +1.012628146441024e+00, +1.012603012552473e+00,
+1.012575427778520e+00, +1.012545750134419e+00, +1.012513922299362e+00, +1.012479473490919e+00,
+1.012442344023191e+00, +1.012402887777359e+00, +1.012361105121003e+00, +1.012316638832887e+00,
+1.012269448366181e+00, +1.012219809594718e+00, +1.012167638122170e+00, +1.012112494069630e+00,
+1.012054359992419e+00, +1.011993638380370e+00, +1.011930323929956e+00, +1.011864000215460e+00,
+1.011794588601900e+00, +1.011722351640686e+00, +1.011647223869087e+00, +1.011568814072372e+00,
+1.011487118812239e+00, +1.011402518267713e+00, +1.011314978002071e+00, +1.011224048846073e+00,
+1.011129654652857e+00, +1.011032094993283e+00, +1.010931324278397e+00, +1.010826951260377e+00,
+1.010718941241622e+00, +1.010607614747097e+00, +1.010492924436361e+00, +1.010374455963019e+00,
+1.010252160684281e+00, +1.010126353960416e+00, +1.009996954741022e+00, +1.009863488188648e+00,
+1.009725892479312e+00, +1.009584519851048e+00, +1.009439365159565e+00, +1.009290060983833e+00,
+1.009136529912757e+00, +1.008978985140192e+00, +1.008817301052548e+00, +1.008651020208035e+00,
+1.008480124067563e+00, +1.008305027555130e+00, +1.008125704897790e+00, +1.007941686009594e+00,
+1.007752833675443e+00, +1.007559349517223e+00, +1.007361141859567e+00, +1.007157827358150e+00,
+1.006949385806640e+00, +1.006736153885735e+00, +1.006518049344503e+00, +1.006294572836803e+00, + 1 .
006065603926773e+00, +1.005831403532018e+00, +1.005591890638477e+00, +1.005346642064537e+00,
+1.005095592119373e+00, +1.004839030117511e+00, +1.004576865704429e+00, +1.004308630055050e+00,
+1.004034214698496e+00, +1.003753871618025e+00, +1.003467498305776e+00, +1.003174639260358e+00,
+1.002875211027427e+00, +1.002569500413888e+00, +1.002257424578396e+00, +1.001938530973887e+00,
+1.001612710105563e+00, +1.001280195339107e+00, +1.000940870545871e+00, +1.000594272975683e+00,
+1.000240322030139e+00, +9.998793163292398e-01, +9.995111701168786e-01, +9.991354132324841e-01,
+9.987519222567783e-01, +9.983609218719522e-01, +9.979623130227679e-01, +9.975556740764708e-01,
+9.971409288327860e-01, +9.967183432488375e-01, +9.962878170229250e-01, +9.958488863050556e-01,
+9.954014561350919e-01, +9.949458000048871e-01, +9.944818543153893e-01, +9.940092149931687e-01,
+9.935277331184579e-01, +9.930375282832211e-01, +9.925387139793089e-01, +9.920313495175566e-01,
+9.915146560759479e-01, +9.909871983144850e-01, +9.904515643208522e-01, +9.899136802423638e-01,
+9.893635427366756e-01, +9.887777731550811e-01, +9.881930623810997e-01, +9.877024911349694e-01,
+9.867719346048082e-01, +9.859422591203311e-01, +9.851327817259932e-01, +9.843446542813931e-01,
+9.835667898378924e-01, +9.827784388364600e-01, +9.819697981806308e-01, +9.811423034808365e-01,
+9.802944493567077e-01, +9.794214312173470e-01, +9.785214441250228e-01, +9.775957513212234e-01,
+9.766438929361375e-01, +9.756636036109838e-01, +9.746537914797736e-01, +9.736145835187847e-01,
+9.725453442532574e-01, +9.714446445280863e-01, +9.703115557563614e-01, +9.691456634185093e-01,
+9.679460697948364e-01, +9.667113883637859e-01, +9.654406178310210e-01, +9.641331517728559e-01,
+9.627881167626269e-01, +9.614043615076308e-01, +9.599808797353324e-01, +9.585168210361295e-01,
+9.570113065179300e-01, +9.554634210701282e-01, +9.538722275164798e-01, +9.522367669696690e-01,
+9.505560524788548e-01, +9.488290728836637e-01, +9.470548839544214e-01, +9.452326100986821e-01,
+9.433613907645669e-01, +9.414403740008491e-01, +9.394686283754716e-01, +9.374451520790944e-01,
+9.353691612846549e-01, +9.332400814902009e-01, +9.310570687016885e-01, +9.288190093977164e-01,
+9.265249985708898e-01, +9.241743479451956e-01, +9.217662887169116e-01, +9.192999665754161e-01,
+9.167746294201033e-01, +9.141896283466009e-01, +9.115442516266717e-01, +9.088377281110291e-01,
+9.060694681113471e-01, +9.032390575925977e-01, +9.003458895224528e-01, +8.973891675497357e-01,
+8.943683555809617e-01, +8.912831789317232e-01, +8.881332000806269e-01, +8.849178157571976e-01,
+8.816366171218113e-01, +8.782893885841422e-01, +8.748757216290605e-01, +8.713950183935990e-01,
+8.678469565343039e-01, +8.642314881034361e-01, +8.605483499580321e-01, +8.567970644671067e-01,
+8.529774446610170e-01, +8.490895965655302e-01, +8.451334654019179e-01, +8.411088323972666e-01,
+8.370156984112052e-01, +8.328542805780399e-01, +8.286245548070180e-01, +8.243262611129502e-01,
+8.199594783897041e-01, +8.155246236571582e-01, +8.110218607207131e-01, +8.064511006873497e-01,
+8.018126046593852e-01, +7.971069856439827e-01, +7.923346478686025e-01, +7.874957820910923e-01,
+7.825908231062452e-01, +7.776204488292163e-01, +7.725851026241404e-01, +7.674849949914248e-01,
+7.623206183595970e-01, +7.570927486638241e-01, +7.518019652814979e-01, +7.464486491227057e-01,
+7.410334206850239e-01, +7.355571439110484e-01, +7.300205729992958e-01, +7.244243523154849e-01,
+7.187693676298663e-01, +7.130567383226717e-01, +7.072872946666678e-01, +7.014615845640527e-01,
+6.955805444755916e-01, +6.896454997760704e-01, +6.836575016451227e-01, +6.776173229836567e-01,
+6.715260316843978e-01, +6.653849997460716e-01, +6.591955305148172e-01, +6.529588449241264e-01,
+6.466761515320369e-01, +6.403486426892321e-01, +6.339773402000435e-01, +6.275631129756770e-01,
+6.211072197441818e-01, +6.146113064454106e-01, +6.080768062101946e-01, +6.015049275244732e-01, +5.948969938609885e-01, +5.882544536827298e-01, +5.815787608870452e-01, +5.748713693712827e-01,
+5.681329838024681e-01, +5.613674511156831e-01, +5.545756384163615e-01, +5.477589552377587e-01,
+5.409188627354240e-01, +5.340568757452271e-01, +5.271745849688633e-01, +5.202736834971303e-01,
+5.133560289814199e-01, +5.064236063322167e-01, +4.994780733459294e-01, +4.925207788759675e-01,
+4.855532972838063e-01, +4.785774177949064e-01, +4.715949057752619e-01, +4.646075325068186e-01,
+4.576172599874965e-01, +4.506262048599546e-01, +4.436362416499966e-01, +4.366490208265834e-01,
+4.296663370497900e-01, +4.226901117060164e-01, +4.157221460416020e-01, +4.087641442756610e-01,
+4.018179771137481e-01, +3.948856590950779e-01, +3.879690747948260e-01, +3.810699982632091e-01,
+3.741903189229788e-01, +3.673320150150139e-01, +3.604969483256886e-01, +3.536868899553974e-01,
+3.469037339648918e-01, +3.401494735467201e-01, +3.334260017756462e-01, +3.267351352184045e-01,
+3.200787300572631e-01, +3.134586473252229e-01, +3.068766522215559e-01, +3.003344428572218e-01,
+2.938337904395881e-01, +2.873765136803315e-01, +2.809644064498411e-01, +2.745992637590826e-01,
+2.682828578001429e-01, +2.620169058204753e-01, +2.558030636168179e-01, +2.496429506725780e-01,
+2.435381581076193e-01, +2.374902188466703e-01, +2.315007158769866e-01, +2.255713139320687e-01,
+2.197036032185791e-01, +2.138990608950040e-01, +2.081591884177564e-01, +2.024855415115456e-01,
+1.968794982265323e-01, +1.913422230760984e-01, +1.858749915117319e-01, +1.804792270036454e-01,
+1.751561592043750e-01, +1.699067802117410e-01, +1.647322739698192e-01, +1.596340539111631e-01,
+1.546132267478876e-01,+1.496705434426226e-01, +1.448069879076800e-01, +1.400238206749698e-01,
+1.353218971490514e-01, +1.307016182576054e-01, +1.261637395672916e-01, +1.217094187032866e-01,
+1.173392980385558e-01, +1.130534434072722e-01, +1.088524061173192e-01, +1.047372831131808e-01,
+1.007084973747942e-01, +9.676572618933918e-02, +9.290929444691418e-02, +8.914024389873081e-02,
+8.545874375771015e-02, +8.186400751918757e-02, +7.835612100141792e-02, +7.493612463933132e-02,
+7.160392900131578e-02, +6.835821233920988e-02, +6.519882821193619e-02, +6.212691236769909e-02,
+5.914211536028985e-02, +5.624247476796568e-02, +5.342762364238927e-02, +5.069893012340838e-02,
+4.805577285587748e-02, +4.549537570011979e-02, +4.301717763585556e-02, +4.062301532941800e-02,
+3.831198264259714e-02, +3.608020726673365e-02, +3.392698736873631e-02, +3.185504779821543e-02,
+2.986316337017634e-02, +2.794584821783607e-02, +2.610239043507366e-02, +2.433722657129812e-02,
+2.264871565562373e-02, +2.102867478775550e-02, +1.947675241971700e-02, +1.800101670620712e-02,
+1.659903330901047e-02, +1.525710171255895e-02, +1.397610119023076e-02, +1.277238121584596e-02,
+1.163787492636242e-02, +1.053809096662833e-02, +9.464262017505555e-03, +8.433087782643726e-03,
+7.364501936162659e-03, +6.073847663871269e-03, +4.449668997344740e-03, +2.485333612762431e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,

```
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
+0.000000000000000e+00,    +0.000000000000000e+00,    +0.000000000000000e+00,    +0.000000000000000e+00,
```

+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

7.2 Examples associated to Figs. 26 to 30

A numerical example of windowing function $w_{40}$, for frame size N=40, is herewith provided by the 80 entries for n = 0... 2N-1. As explained above, the last values may be zeros. +9.959086585790517e-04, +3.819056787237678e-03, +9.540832613229890e-03, +1.921659800166160e-02, +3.382719081038548e-02, +5.424831667522354e-02, +8.120777668775610e-02, +1.152171887125930e-01, +1.564942331034909e-01, +2.049363422022628e-01, +2.601166575816199e-01, +3.212814164616093e-01, +3.873472997948746e-01, +4.569497078592333e-01, +5.285192958868393e-01, +6.003522489375573e-01, +6.706896380227332e-01, +7.378044458510402e-01, +8.000925313431716e-01, +8.561409184410547e-01, +9.048272294524792e-01, +9.453685031730190e-01, +9.773507430600533e-01, +1.000800872826561e+00, +1.016171590112097e+00, +1.024315247630982e+00, +1.026415431432931e+00, +1.023858366571912e+00, +1.018135705524407e+00, +1.010794822557756e+00, +1.003406509762925e+00, +9.967831265986109e-01, +9.920995520917141e-01, +9.892206942816891e-01, +9.879658322200813e-01, +9.881273531631907e-01, +9.894805541465801e-01, +9.917849916000535e-01, +9.947847580943504e-01, +9.982119669301160e-01, +1.001791235858836e+00, +1.005242583245485e+00, +1.008283053756130e+00, +1.010631281038659e+00, +1.012015300253356e+00, +1.012180753005270e+00, +1.010896765282633e+00, +1.007963362035220e+00, +1.003227255072391e+00, +9.966050551498514e-01, +9.868284225039941e-01, +9.731250287581631e-01, +9.540636479502398e-01, +9.283864275822276e-01, +8.950916858157935e-01, +8.534769362643825e-01, +8.032090930429980e-01, +7.444735201251689e-01, +6.780787033699449e-01, +6.053970453856138e-01, +5.282077505750667e-01, +4.486552956056635e-01, +3.691875990296312e-01, +2.924566408966777e-01, +2.210718537110463e-01, +1.573148583944309e-01, +1.030525757797768e-01, +5.982732244758054e-02, +2.871831923385133e-02, +9.683884928956490e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

A numerical example of windowing function $w_{80}$, for frame size N=80, is herewith provided by the 160 entries for n = 0... 2N-1. As explained above, the last values may be zeros. +6.143388180964179e-04, +1.489582832987000e-03, +2.884104959764029e-03, +4.934298832466617e-03, +7.779130464154915e-03, +1.154910606525086e-02, +1.637155619860352e-02, +2.237116158648752e-02, +2.966159685753317e-02, +3.835663329277230e-02, +4.855610986150206e-02, +6.035055738891727e-02, +7.382288203064732e-02, +8.903563687211119e-02, +1.060356225286319e-01, +1.248534855777947e-01, +1.454931890869180e-01, +1.679435556337752e-01, +1.921728622634411e-01, +2.181238261985594e-01, +2.457259744642953e-01, +2.748839432649996e-01, +3.054824712370942e-01, +3.373873799614014e-01, +3.704415932452488e-01, +4.044749630814483e-01, +4.393004362003260e-01, +4.747225454237193e-01, +5.105341492548225e-01, +5.465201916422433e-01, +5.824658100332457e-01, +6.181452662624718e-01, +6.533411462740817e-01, +6.878367295965062e-01, +7.214176027060971e-01, +7.538887973483771e-01, +7.850546571907628e-01, +8.147397447696774e-01, +8.427819363777799e-01, +8.690376742017057e-01, +8.933935477349644e-01, +9.157483563218768e-01, +9.360270196617569e-01, +9.541731142261065e-01, +9.701635474343885e-01, +9.840036439809510e-01, +9.957199420334376e-01, +1.005374268639838e+00, +1.013046655758663e+00, +1.018843380560658e+00, +1.022896948293643e+00, +1.025355286710874e+00, +1.026382881625701e+00, +1.026155530733488e+00, +1.024853974580724e+00, +1.022664602721801e+00, +1.019779396547454e+00, +1.016391686789653e+00, +1.012697033320358e+00, +1.008885191761748e+00, +1.005378742804807e+00, +1.001563778373068e+00, +9.982531564931281e-01, +9.954346644968789e-01, +9.930950268060122e-01, +9.912170911359961e-01, +9.897805192546195e-01, +9.887624937408933e-01, +9.881383235740961e-01, +9.878819413827574e-01, +9.879662130250981e-01, +9.883630508181326e-01, +9.890434070785485e-01, +9.899772316163624e-01, +9.911334564321237e-01, +9.924800441092685e-01, +9.939841207305906e-01, +9.956121471675398e-01, +9.973300590248015e-01, +9.991033633647473e-01, +1.000897441314013e+00, +1.002677088643863e+00, +1.004407190937699e+00, +1.006052289109999e+00, +1.007576934100958e+00, +1.008945862447015e+00, +1.010124241309341e+00, +1.011077969726137e+00, +1.011773962181442e+00, +1.012180362866919e+00, +1.012266707295288e+00, +1.012004064757857e+00, +1.011365223023975e+00, +1.010324996851905e+00, +1.008860731864438e+00, +1.006952983357691e+00, +1.004586273379809e+00, +1.001749900308864e+00, +9.984386632116344e-01, +9.946500332901397e-01, +9.895756853352172e-01, +9.838303127859196e-01, +9.769999155793757e-01, +9.689141159310996e-01, +9.594038121639412e-01, +9.483086322505029e-01, +9.354860218216989e-01, +9.208101305030523e-01, +9.041732260327581e-01, +8.854882249661838e-01, +8.646864947605046e-01, +8.417237467711145e-01, +8.165875713256009e-01, +7.892986353718001e-01, +7.599171886893816e-01, +7.285474515411827e-01, +6.953282935906302e-01, +6.604334017809461e-01, +6.240661431421666e-01, +5.864461424698465e-01, +5.478160663871147e-01, +5.084499758302218e-01, +4.686361426418982e-01, +4.286789889246253e-01, +3.889032719013045e-01, +3.496431418636314e-01, +3.112360816586544e-01, +2.740128472224535e-01, +2.382847225401666e-01, +2.043379825955252e-01, +1.724305860483632e-01, +1.427939789949265e-01, +1.156385879569741e-01, +9.115821766571995e-02, +6.952749039054593e-02, +5.088975408628225e-02, +3.533430192568954e-02, +2.286680405144430e-02, + 1.3380050 16725895e-02, +6.640506529168652e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

A numerical example of windowing function $w_{120}$, for frame size N=120, is herewith provided by the 240 entries for n = 0... 2N-1. As explained above, the last values may be zeros.

+5.087227626168386e-04, +9.959086585790517e-04, +1.682208006328800e-03, +2.609697259047744e-03, +3.819056787237678e-03, +5.349319592933909e-03, +7.243906383895192e-03, +9.540832613229890e-03, +1.227637642543709e-02, +1.548950238899404e-02, +1.921659800166160e-02, +2.349369619441617e-02, +2.835199581667961e-02, +3.382719081038548e-02, +3.994939538719628e-02, +4.674775238543380e-02, +5.424831667522354e-02, +6.247770776443612e-02, +7.145835917501348e-02, +8.120777668775610e-02, +9.174400412319896e-02, +1.030764959637497e-01, +1.152171887125930e-01, +1.281665713944242e-01, +1.419264381068653e-01, +1.564942331034909e-01, +1.718593189799504e-01, +1.880134254543744e-01, +2.049363422022628e-01, +2.226123055761096e-01, +2.410151242797736e-01, +2.601166575816199e-01, +2.798871008989962e-01, +3.002880135563586e-01, +3.212814164616093e-01, +3.428208463088390e-01, +3.648596557863134e-01, +3.873472997948746e-01, +4.102294951869188e-01, +4.334494534591082e-01, +4.569497078592333e-01, +4.806696403251166e-01, +5.045473815014847e-01, +5.285192958868393e-01, +5.525196099932443e-01, +5.764872452085427e-01, +6.003522489375573e-01, +6.240509872809882e-01, +6.475182586093196e-01, +6.706896380227332e-01, +6.935029068990036e-01, +7.158927516396895e-01, +7.378044458510402e-01, +7.591787241845952e-01, +7.799586608897265e-01, +8.000925313431716e-01, +8.195318652294690e-01, +8.382288957404715e-01, +8.561409184410547e-01, +8.732316951214179e-01, +8.894702022170831e-01, +9.048272294524792e-01, +9.192736375782965e-01, +9.327940405054362e-01, +9.453685031730190e-01, +9.569883933538136e-01, +9.676486424195593e-01, +9.773507430600533e-01, +9.861027831072527e-01, +9.939122412655677e-01, +1.000800872826561e+00, +1.006787811971719e+00, +1.011901269172423e+00, +1.016171590112097e+00, +1.019636414864842e+00, +1.022336613864005e+00, +1.024315247630982e+00, +1.025621299895396e+00, +1.026303439275662e+00, +1.026415431432931e+00, +1.026007933174836e+00, +1.025137435167917e+00, +1.023858366571912e+00, +1.022226936424625e+00, +1.020300550334848e+00, +1.018135705524407e+00, +1.015792146756340e+00, +1.013325966774524e+00, +1.010794822557756e+00, +1.008265131568879e+00, +1.006046874304407e+00, +1.003406509762925e+00, +1.000977398831985e+00, +9.987704535700208e-01, +9.967831265986109e-01, +9.950118905889862e-01, +9.934523971504882e-01, +9.920995520917141e-01, +9.909475998606236e-01, +9.899902426925508e-01, +9.892206942816891e-01, +9.886318043013834e-01, +9.882160904669929e-01, +9.879658322200813e-01, +9.878730767519871e-01, +9.879296932443894e-01, +9.881273531631907e-01, +9.884575535474619e-01, +9.889115869213529e-01, +9.894805541465801e-01, +9.901553455166457e-01, +9.909266562913843e-01, +9.917849916000535e-01, +9.927206838643636e-01, +9.937239208721489e-01, +9.947847580943504e-01, +9.958931493776203e-01, +9.970389567617592e-01, +9.982119669301160e-01, +9.994020338838508e-01, +1.000598323893564e+00, +1.001791235858836e+00, +1.002969837054169e+00, +1.004123786397111e+00, +1.005242583245485e+00, +1.006315717067918e+00, +1.007332693127034e+00, +1.008283053756130e+00, +1.009156423082384e+00, +1.009942535308151e+00, +1.010631281038659e+00, +1.011212744622770e+00, +1.011677230257499e+00, +1.012015300253356e+00, +1.012217779097186e+00, +1.012275790821109e+00, +1.012180753005270e+00, +1.011924425888915e+00, +1.011498917644724e+00, +1.010896765282633e+00, +1.010110965619444e+00, +1.009135094671655e+00, +1.007963362035220e+00, +1.006590756505588e+00, +1.005013115379014e+00, +1.003227255072391e+00, +1.001231060075500e+00, +9.990235555436858e-01, +9.966050551498514e-01, +9.939894706113089e-01, +9.904539200261149e-01, +9.868284225039941e-01, +9.827716736909488e-01, +9.782206672373213e-01, +9.731250287581631e-01, +9.674323528812744e-01, +9.610947043524248e-01, +9.540636479502398e-01, +9.462952991190324e-01, +9.377489107516087e-01, +9.283864275822276e-01, +9.181762606422500e-01, +9.070861558801854e-01, +8.950916858157935e-01, +8.821696237804294e-01, +8.683025287048570e-01, +8.534769362643825e-01, +8.376852006833730e-01, +8.209275259764013e-01, +8.032090930429980e-01, +7.845450482523652e-01, +7.649554851899686e-01,
+7.444735201251689e-01, +7.231348066419057e-01, +7.009860555207412e-01, +6.780787033699450e-01,
+6.544686506489734e-01, +6.302212149502727e-01, +6.053970453856138e-01, +5.800715766089168e-01,
+5.543129276657669e-01, +5.282077505750727e-01, +5.018369724442092e-01, +4.752902962082383e-01,
+4.486552956056652e-01, +4.220281118338883e-01, +3.955057965950340e-01, +3.691875990296320e-01,
+3.431732847389720e-01, +3.175633015043183e-01, +2.924566408966782e-01, +2.679463783886042e-01,
+2.441231331518492e-01, +2.210718537110466e-01, +1.988719153219592e-01, +1.775967625327044e-01,
+1.573148583944310e-01, +1.380903364946733e-01, +1.199837497591550e-01, +1.030525757797769e-01,
+8.735085011789188e-02, +7.292811584897502e-02, +5.982732244758056e-02, +4.808178837444506e-02,
+3.771135297837851e-02, +2.871831923385135e-02, +2.108352028641225e-02, +1.476289412849005e-02,
+9.683884928956495e-03, +5.642168789286858e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

A numerical example of windowing function $w_{160}$, for frame size N=160, is herewith provided by the 320 entries for n = 0... 2N-1. As explained above, the last values may be 0.

+4.595886345493055e-04, +7.919323614002698e-04, +1.227927169310031e-03, +1.783653266717233e-03,
+2.479549413444207e-03, +3.329799454594261e-03, +4.353535478916468e-03, +5.564965156664018e-03,
+6.986108359341676e-03, +8.629882322202329e-03, +1.051343406844975e-02, +1.265082642578719e-02,
+1.506090447446532e-02, +1.775591229287213e-02, +2.075475983187825e-02, +2.406813715401559e-02,
+2.771207863541604e-02, +3.169933248543932e-02, +3.604609640533871e-02, +4.076128638095439e-02,
+4.586038120884381e-02, +5.135136676471998e-02, +5.724780220726930e-02, +6.355854744461048e-02,
+7.029450733434550e-02, +7.745987198268531e-02, +8.506635369887924e-02, +9.311641620512773e-02,
+1.016162955027316e-01, +1.105690806271684e-01, +1.199789286645804e-01, +1.298417294090302e-01,
+1.401623800497866e-01, +1.509371564593891e-01, +1.621632295622287e-01, +1.738354123649302e-01,
+1.859520359191026e-01, +1.985008828937603e-01, +2.114778554475382e-01, +2.248732557074316e-01,
+2.386763947872762e-01, +2.528729453658238e-01, +2.674547009618951e-01, +2.824031465430401e-01,
+2.977050145264297e-01, +3.133419120661713e-01, +3.292976696294886e-01, +3.455490160824131e-01,
+3.620795045342974e-01, +3.788648665671841e-01, +3.958851576591690e-01, +4.131143794748322e-01,
+4.305308301005456e-01, +4.481076715576617e-01, +4.658227790464821e-01, +4.836466393241829e-01,
+5.015564851667653e-01, +5.195228071176610e-01, +5.375197039843709e-01, +5.555183841040963e-01,
+5.734957812557457e-01, +5.914186654649489e-01, +6.092622887527459e-01, +6.269981160888640e-01,
+6.446002007776794e-01, +6.620384583071039e-01, +6.792906550106088e-01, +6.963256426589250e-01,
+7.131194393772130e-01, +7.296469905863920e-01, +7.458864594794676e-01, +7.618094719403713e-01,
+7.773958448163656e-01, +7.926208751337592e-01, +8.074666387233143e-01, +8.219101564897180e-01,
+8.359343163788637e-01, +8.495180470826319e-01, +8.626485837105826e-01, +8.753083234662220e-01,
+8.874884715160425e-01, +8.991737724042251e-01, +9.103527429187326e-01, +9.210144133066616e-01,
+9.311556192776946e-01, +9.407644740241826e-01, +9.498382236872068e-01, +9.583732599601223e-01,
+9.663690412284377e-01, +9.738235617865406e-01, +9.807442506043361e-01, +9.871297972052695e-01,
+9.929872268444632e-01, +9.983241398929388e-01, +1.003150760219063e+00, +1.007473713377193e+00,
+1.011309151636166e+00, +1.014666681083198e+00, +1.017563337333301e+00, +1.020014681326785e+00,
+1.022039872150903e+00, +1.023654257342442e+00, +1.024881624147540e+00, +1,025739288978437e+00,
+1.026250709375593e+00, +1.026436666375082e+00, +1.026320857404224e+00, +1.025922917798664e+00,
+1.025269979527211e+00, +1.024382188798244e+00, +1.023284940887058e+00, +1.022000829220643e+00,
+1.020555973231408e+00, +1.018971390778550e+00, +1.017275179369116e+00, +1.015489129111694e+00,
+1.013639356938881e+00, +1.011747750709711e+00, +1.009840844244693e+00, +1.007939764480188e+00,
+1.006407400915498e+00, +1.004374825095777e+00, +1.002469814737132e+00, +1.000689073754539e+00,
+9.990346001249977e-01, +9.975024904153303e-01, +9.960941547576162e-01, +9.948051243621099e-01,
+9.936362728142866e-01, +9.925826537087717e-01, +9.916447007525191e-01, +9.908170758245324e-01,
+9.900998445795673e-01, +9.894873685512386e-01, +9.889794323427195e-01, +9.885701787626714e-01,
+9.882591911282058e-01, +9.880404423341358e-01, +9.879133688360181e-01, +9.878718098237022e-01,
+9.879150762106034e-01, +9.880368938846610e-01, +9.882364564839506e-01, +9.885073687439192e-01,
+9.888487088987707e-01, +9.892539488627546e-01, +9.897220412447528e-01, +9.902463287269285e-01,
+9.908256340476208e-01, +9.914531811725067e-01, +9.921276814881759e-01, +9.928422499725458e-01, +9.935955098307742e-01, +9.943804814776256e-01, +9.951957244449919e-01, +9.960341878404958e-01,
+9.968943831870675e-01, +9.977692009836100e-01, +9.986571134591464e-01, +9.995509738170480e-01,
+1.000449227898040e+00, +1.001344692310058e+00, +1.002235786606954e+00, +1.003115291715261e+00,
+1.003981602446902e+00, +1.004827468041713e+00, +1.005651275972376e+00, +1.006445772052972e+00,
+1.007209352772459e+00, +1.007934783656087e+00, +1.008620496650569e+00, +1.009259314290145e+00,
+1.009849742422788e+00, +1.010384692193296e+00, +1.010862783160582e+00, +1.011277044709547e+00,
+1.011626247430694e+00, +1.011903571699736e+00, +1.012107954864219e+00, +1.012232755709885e+00,
+1.012277089047072e+00, +1.012234505114778e+00, +1.012104319978655e+00, +1.011880293122688e+00,
+1.011561972516341e+00, +1.011143373963981e+00, +1.010624321020038e+00, +1.009999148545101e+00,
+1.009268031808824e+00, +1.008425698479647e+00, +1.007472774447058e+00, +1.006404483571931e+00,
+1.005222003295591e+00, +1.003921160689206e+00, +1.002503762756151e+00, +1.000966332772540e+00,
+9.993114007411373e-01, +9.975362702189898e-01, +9.956442306333592e-01, +9.936333924912825e-01,
+9.908677480361242e-01, +9.882326326262749e-01, +9.853620567056602e-01, +9.822305093671991e-01,
+9.788185853162172e-01, +9.751026333215268e-01, +9.710631852370086e-01, +9.666759668947944e-01,
+9.619242192293307e-01, +9.567841986369235e-01, +9.512394303101863e-01, +9.452700238623795e-01,
+9.388615698236068e-01, +9.319946435581106e-01, +9.246592033932568e-01, +9.168383396399868e-01,
+9.085218034087421e-01, +8.996967011299613e-01, +8.903562054918268e-01, +8.804877931535187e-01,
+8.700884209228057e-01, +8.591492134848259e-01, +8.476686394755906e-01, +8.356428970797861e-01,
+8.230753889817990e-01, +8.099649296155544e-01, +7.963204506324437e-01, +7.821460539775005e-01,
+7.674541821769616e-01, +7.522563457568547e-01, +7.365702052057368e-01, +7.204090552899627e-01,
+7.037975107157410e-01, +6.867542812151157e-01, +6.693041888771051e-01, +6.514710959179395e-01,
+6.332854832820911e-01, +6.147685389896460e-01, +5.959553778639692e-01, +5.768737955463938e-01,
+5.575534287167304e-01, +5.380320138068979e-01, +5.183454027643563e-01, +4.985259415650634e-01,
+4.786156067459849e-01, +4.586473038370941e-01, +4.386643656872842e-01, +4.187046888325280e-01,
+3.988123056192917e-01, +3.790262923635886e-01, +3.593914828698096e-01, +3.399474132903109e-01,
+3.207392420889753e-01, +3.018061113177048e-01, +2.831905952786929e-01, +2.649288369241889e-01,
+2.470608550624402e-01, +2.296201119084317e-01, +2.126433716126151e-01, +1.961601816145380e-01,
+1.802035203864437e-01, +1.647996883470626e-01, +1.499787548077656e-01, +1.357643522991611e-01,
+1.221842534547464e-01, +1.092601994264172e-01, +9.701788451015501e-02, +8.547680283183663e-02,
+7.465976378295235e-02, +6.458254322751883e-02, +5.526281189874138e-02, +4.670976978373095e-02,
+3.893244425578719e-02, +3.192976013776996e-02, +2.569810636390756e-02, +2.022259265088492e-02,
+1.548317776486452e-02, +1.144924909653903e-02, +8.076482660383199e-03, +5.300044080947794e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

A numerical example of windowing function $w_{240}$ for frame size N=240, is herewith provided (480 samples):
+4.090106504820579e-04, +6.143388180964179e-04, +8.571759876954877e-04, +1.147015057857495e-03,
+1.489582832987000e-03, +1.889770382231583e-03, +2.353000800169909e-03, +2.884104959764029e-03,
+3.488213786635855e-03, +4.170040431489613e-03, +4.934298832466617e-03, +5.787076505403503e-03,
+6.733811743137561e-03, +7.779130464154915e-03, +8.927044958757816e-03, +1.018202888968871e-02,
+1.154910606525086e-02, +1.303349217699797e-02, +1.463951288465963e-02, +1.637155619860352e-02,
+1.823455383898077e-02, +2.023309488998589e-02, +2.237116158648752e-02, +2.465237348403478e-02,
+2.708101935270475e-02, +2.966159685753317e-02, +3.239884850877327e-02, +3.529601774976465e-02,
+3.835663329277230e-02, +4.158447932459513e-02, +4.498322421745353e-02, +4.855610986150206e-02,
+5.230596475016741e-02, +5.623624576084146e-02, +6.035055738891727e-02, +6.465186317477950e-02,
+6.914195749790462e-02, +7.382288203064732e-02, +7.869709331995660e-02, +8.376761638427657e-02,
+8.903563687211118e-02, +9.450199243028472e-02, +1.001680193006426e-01, +1.060356225286319e-01,
+1.121060220821844e-01, +1.183788547045326e-01, +1.248534855777947e-01, +1.315302847610869e-01,
+1.384103079528939e-01, +1.454931890869180e-01, +1.527772946853750e-01, +1.602608842337125e-01,
+1.679435556337752e-01, +1.758245615079801e-01, +1.839020119821303e-01, +1.921728622634411e-01,
+2.006344295681524e-01, +2.092853879977170e-01, +2.181238261985594e-01, +2.271462264407930e-01, +2.363479205237173e-01, +2.457259744642953e-01, +2.552771551741124e-01, +2.649981094228982e-01,
+2.748839432649996e-01, +2.849296444030153e-01, +2.951306505827265e-01, +3.054824712370942e-01,
+3.159799638238941e-01, +3.266169794538543e-01, +3.373873799614014e-01, +3.482855915638277e-01,
+3.593057693987583e-01, +3.704415932452488e-01, +3.816862385160692e-01, +3.930329782788047e-01,
+4.044749630814483e-01, +4.160051103939122e-01, +4.276159595085598e-01, +4.393004362003260e-01,
+4.510516333434032e-01, +4.628616046119925e-01, +4.747225454237193e-01, +4.866266705542529e-01,
+4.985664508456704e-01, +5.105341492548225e-01, +5.225212793188740e-01, +5.345190505841265e-01,
+5.465201916422433e-01, +5.585172769552711e-01, +5.705021536899105e-01, +5.824658100332457e-01,
+5.943991720381216e-01, +6.062948176207270e-01, +6.181452662624718e-01, +6.299422016714543e-01,
+6.416768736044914e-01, +6.533411462740817e-01, +6.649277540000037e-01, +6.764292700223311e-01,
+6.878367295965062e-01, +6.991421467689277e-01, +7.103379606632721e-01, +7.214176027060971e-01,
+7.323746102405828e-01, +7.432008025932804e-01, +7.538887973483771e-01, +7.644315495717613e-01,
+7.748223151443820e-01, +7.850546571907628e-01, +7.951223518167163e-01, +8.050193862201107e-01,
+8.147397447696774e-01, +8.242774413707643e-01, +8.336267114335371e-01, +8.427819363777799e-01,
+8.517386186427548e-01, +8.604920874939698e-01, +8.690376742017057e-01, +8.773720451249032e-01,
+8.854927938913381e-01, +8.933935477349644e-01, +9.010727088526728e-01, +9.085249398881980e-01,
+9.157483563218768e-01, +9.227413839712016e-01, +9.295017469413066e-01, +9.360270196617569e-01,
+9.423143052164881e-01, +9.483629792665091e-01, +9.541731142261065e-01, +9.597438382130120e-01,
+9.650738394220176e-01, +9.701635474343885e-01, +9.750143364412617e-01, +9.796277191617885e-01,
+9.840036439809510e-01, +9.881426772731259e-01, +9.920470446911211e-01, +9.957199420334376e-01,
+9.991640812275709e-01, +1.002381307710643e+00, +1.005374268639838e+00, +1.008146718214831e+00,
+1.010703123647275e+00, +1.013046655758663e+00, +1.015181271161417e+00, +1.017111643578857e+00,
+1.018843380560658e+00, +1.020381713994816e+00, +1.021731101971518e+00, +1.022896948293643e+00,
+1.023885455671576e+00, +1.024702974608899e+00, +1.025355286710874e+00, +1.025848243050604e+00,
+1.026188366261215e+00, +1.026382881625701e+00, +1.026438102255574e+00, +1.026360125820994e+00,
+1.026155530733488e+00, +1.025831456886557e+00, +1.025395432284244e+00, +1.024853974580724e+00,
+1.024213482124578e+00, +1.023481184943025e+00, +1.022664602721801e+00, +1.021770903480975e+00,
+1.020806917660529e+00, +1.019779396547454e+00, +1.018695995335235e+00, +1.017564416918053e+00,
+1.016391686789653e+00, +1.015184918030332e+00, +1.013950835315021e+00, +1.012697033320358e+00,
+1.011430749860716e+00, +1.010158346781076e+00, +1.008885191761748e+00, +1.007592718305943e+00,
+1.006805603478092e+00, +1.005378742804807e+00, +1.004049051787112e+00, +1.002778356298787e+00,
+1.001563778373068e+00, +1.000404915291105e+00, +9.993014844615166e-01, 9.982531564931281e-01,
+9.972595460676951e-01, +9.963202131848272e-01, +9.954346644968789e-01, +9.946023543844607e-01,
+9.938226881029791e-01, +9.930950268060122e-01, +9.924186919309267e-01, +9.917929657090736e-01,
+9.912170911359961e-01, +9.906902760441473e-01, +9.902117003786811e-01, +9.897805192546193e-01,
+9.893958602389157e-01, +9.890568243690241e-01, +9.887624937408933e-01, +9.885119364350415e-01,
+9.883042028597552e-01, +9.881383235740961e-01, +9.880133161159576e-01, +9.879281898513085e-01,
+9.878819413827574e-01, +9.878735508484809e-01, +9.879019873841568e-01, 9259582959+5696965e-01,
+9.880651778500144e-01, +9.881978162133899e-01, +9.883630508181326e-01, +9.885597957603544e-01,
+9.887869526128024e-01, +9.890434070785485e-01, +9.893280319166613e-01, +9.896396899060125e-01,
+9.899772316163624e-01, +9.903394929409673e-01, +9.907252968668226e-01, +9.911334564321237e-01,
+9.915627747807666e-01, +9.920120436855326e-01, +9.924800441092685e-01, +9.929655482846576e-01,
+9.934673212537685e-01, +9.939841207305906e-01, +9.945146969322154e-01, +9.950577931942117e-01,
+9.956121471675398e-01, +9.961764915534302e-01, +9.967495543671935e-01, +9.973300590248015e-01,
+9.979167245036720e-01, +9.985082643417953e-01, +9.991033633647473e-01, +9.997003478609010e-01,
+1.000299741957418e+00, +1.000897441314013e+00, +1.001493964257960e+00, +1.002087624593489e+00,
+1.002677088643863e+00, +1.003261045483858e+00, +1.003838183774652e+00, +1.004407190937699e+00,
+1.004966753528881 e+00, +1.005515557572658e+00, +1.006052289109999e+00, +1.006575635258931 e+00,
+1.007084285781611e+00, +1.007576934100958e+00, +1.008052277555815e+00, +1.008509017718116e+00,
+1.008945862447015e+00, +1.009361528531177e+00, +1.009754742820913e+00, +1.010124241309341e+00,
+1.010468769795370e+00, +1.010787087537248e+00, +1.011077969726137e+00, +1.011340205650538e+00,
+1.011572597114216e+00, +1.011773962181442e+00, +1.011943138906979e+00, +1.012078982659783e+00,
+1.012180362866919e+00, +1.012246166897464e+00, +1.012275305013586e+00, +1.012266707295288e+00,
+1.012219319453278e+00, +1.012132107622966e+00, +1.012004064757857e+00, +1.011834207632025e+00,
+1.011621572933544e+00, +1.011365223023975e+00, +1.011064253702468e+00, +1.010717792733157e+00,
+1.010324996851905e+00, +1.009885057526159e+00, +1.009397209381147e+00, +1.008860731864438e+00,
+1.008274947065247e+00, +1.007639223374887e+00, +1.006952983357691e+00, +1.006215708265639e+00,
+1.005426938305289e+00, +1.004586273379809e+00, +1.003693377657581 e+00, +1.002747984657666e+00, +1.001749900308864e+00, +1.000699003803502e+00, +9.995952485989262e-01, +9.984386632116344e-01,
+9.972293415774932e-01, +9.959672769174924e-01, +9.946500332901397e-01, +9.932403996813470e-01,
+9.912511516117244e-01, +9.895756853352172e-01, +9.877713214760662e-01, +9.858577479051078e-01,
+9.838303127859196e-01, +9.816822625580078e-01, +9.794074486605805e-01, +9.769999155793757e-01,
+9.744528356359687e-01, +9.717597500340699e-01, +9.689141159310996e-01, +9.659101618500662e-01,
+9.627421831412876e-01, +9.594038121639412e-01, +9.558889978382734e-01, +9.521922434090249e-01,
+9.483086322505029e-01, +9.442332539187503e-01, +9.399607238929982e-01, +9.354860218216989e-01,
+9.308052967663477e-01, +9.259146970284931e-01, +9.208101305030523e-01, +9.154873597416558e-01,
+9.099426066529104e-01, +9.041732260327581e-01, +8.981763729936715e-01, +8.919490241013392e-01,
+8.854882249661838e-01, +8.787919436722827e-01, +8.718585835568161e-01, +8.646864947605047e-01,
+8.572738135700366e-01, +8.496195859658071e-01, +8.417237467711145e-01, +8.335862715770727e-01,
+8.252074428838668e-01, +8.165875713256009e-01, +8.077280370477699e-01, +7.986311592191131e-01,
+7.892986353718001e-01, +7.797330954210866e-01, +7.699379531983687e-01, +7.599171886893816e-01,
+7.496758423734833e-01, +7.392176841476761e-01, +7.285474515411827e-01, +7.176714478163359e-01,
+7.065962311464494e-01, +6.953282935906302e-01, +6.838739059112046e-01, +6.722395305539791e-01,
+6.604334017809461e-01, +6.484643596235256e-01, +6.363395004626368e-01, +6.240661431421666e-01,
+6.116530334821534e-01, +5.991098644638286e-01, +5.864461424698465e-01, +5.736694851703749e-01,
+5.607881029948401e-01, +5.478160663871271e-01, +5.347619788897301e-01, +5.216365147692703e-01,
+5.084499758302256e-01, +4.952135086430446e-01, +4.819387562519412e-01, +4.686361426419003e-01,
+4.553170769563941e-01, +4.419939954454178e-01, +4.286789889246267e-01, +4.153837786572842e-01,
+4.021211063103491e-01, +3.889032719013054e-01, +3.757425439137077e-01, +3.62651518377631Oe-01,
+3.496431418636322e-01, +3.367290822653354e-01, +3.239228075238623e-01, +3.112360816586549e-01,
+2.986807941537710e-01, +2.862694673284843e-01, +2.740128472224539e-01, +2.619228330079575e-01,
+2.500098438708934e-01, +2.382847225401669e-01, +2.267578490199104e-01, +2.154390996938547e-01,
+2.043379825955254e-01, +1.934636765792024e-01, +1.828250319214460e-01, +1.724305860483634e-01,
+1.622886348529314e-01, +1.524071880359812e-01, +1.427939789949266e-01, +1.334565845242183e-01,
+1.244023922999665e-01, +1.156385879569742e-01, +1.071721547807196e-01, +9.900985872728905e-02,
+9.115821766572002e-02, +8.362344855837105e-02, +7.641140367416376e-02, +6.952749039054598e-02,
+6.297656454790079e-02, +5.676284244020858e-02, +5.088975408628229e-02, +4.535983304624439e-02,
+4.017457306236873e-02, +3.533430192568957e-02, +3.083806062123772e-02, +2.668355420358626e-02,
+2.286680405144430e-02, +1.938236337675363e-02, +1.622312720409645e-02, +1.338005016725895e-02,
+1.084218595595746e-02, +8.596753980908744e-03, +6.640506529168652e-03, +5.172703110468352e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

A numerical example of windowing function $w_{320}$, for frame size N=320, is herewith provided (640 samples). As explained above, the last values may be zeros. +3.821992968116373e-04, +5.337292962876158e-04, +7.010318350640769e-04, +8.910357994632938e-04, +1.107726421735994e-03, +1.354305556720234e-03, +1.632968062524617e-03, +1.944392065549996e-03, +2.291251920978034e-03, +2.676357471188558e-03, +3.102160324883627e-03, +3.569302917352426e-03, +4.080147004222224e-03, +4.637409387087253e-03, +5.243697651112320e-03, +5.900394401532485e-03, +6.609908124535202e-03, +7.375089966000295e-03, +8.197610411215884e-03, +9.078195201482999e-03, +1.001888876231112e-02, +1.102272421949215e-02, +1.209201783148431e-02, +1.322773320467288e-02, +1.443170227861997e-02, +1.570673344965518e-02, +1.705481769961258e-02, +1.847711280171765e-02, +1.997546609433320e-02, +2.155255505248360e-02, +2.320993080187466e-02, +2.494800748775296e-02, +2.676898100961685e-02, +2.867550388692567e-02, +3.066976865911597e-02, +3.275241094528637e-02, +3.492474656851959e-02, +3.718932683936013e-02, +3.954748420753697e-02, +4.200013716597904e-02, +4.454866443036003e-02, +4.719547798640356e-02,
+4.994161943600844e-02, +5.278755308483513e-02, +5.573471840677637e-02, +5.878567633813699e-02,
+6.194176167634657e-02, +6.520301218579141e-02, +6.857009288032996e-02, +7.204473108503576e-02,
+7.562815385274406e-02, +7.932038618419741e-02, +8.312281225703541e-02, +8.703660776989294e-02,
+9.106251913073614e-02, +9.519952848393795e-02, +9.944854075501454e-02, +1.038112769854394e-01,
+1.082885168352610e-01, +1.128793060660070e-01, +1.175834766182813e-01, +1.224015773361210e-01,
+1.273338065186211e-01, +1.323793987456491e-01, +1.375389612590117e-01, +1.428131506368226e-01,
+1.482015069292479e-01, +1.537021065265166e-01, +1.593143180431248e-01, +1.650390046254505e-01,
+1.708759773387028e-01, +1.768238156096776e-01, +1.828814674176937e-01, +1.890485613515956e-01,
+1.953239376543276e-01, +2.017057139908492e-01, +2.081934824879514e-01, +2.147873518665726e-01,
+2.214861559453727e-01, +2.282869811837961e-01, +2.351877543503455e-01, +2.421885165595468e-01,
+2.492877833071390e-01, +2.564833108170047e-01, +2.637736050921935e-01, +2.711575593740559e-01,
+2.786328295517739e-01, +2.861965981859126e-01, +2.938469307293017e-01, +3.015829286213736e-01,
+3.094025219039914e-01, +3.173023310827802e-01, +3.252796888787393e-01, +3.333329987313211e-01,
+3.414597523183469e-01, +3.496568059948401e-01, +3.579215403419018e-01, +3.662523018706806e-01,
+3.746461722601965e-01, +3.830993933108193e-01, +3.916090507233831e-01, +4.001732470818926e-01,
+4.087890872349265e-01, +4.174524354370054e-01, +4.261601728427663e-01, +4.349103424521226e-01,
+4.436999665749521e-01, +4.525250566690236e-01, +4.613821390145840e-01, +4.702690556535691e-01,
+4.791821288489955e-01, +4.881175853001019e-01, +4.970720120437943e-01, +5.060433154467696e-01,
+5.150277508616620e-01, +5.240208300352607e-01, +5.330187387865785e-01, +5.420196856030712e-01,
+5.510201184135838e-01, +5.600165101133929e-01, +5.690047761849362e-01, +5.779823098049300e-01,
+5.869449780892492e-01, +5.958886225335936e-01, +6.048099568741729e-01, +6.137068698395559e-01,
+6.225761217125432e-01, +6.314128591964590e-01, +6.402134772829997e-01, +6.489754897736506e-01,
+6.576959114103553e-01, +6.663704870510495e-01, +6.749962795110787e-01, +6.835701860237697e-01,
+6.920890588499607e-01, +7.005478826218464e-01, +7.089444008783498e-01, +7.172765338080037e-01,
+7.255415386736762e-01, +7.337354140683028e-01, +7.418546544582220e-01, +7.498972580176051e-01,
+7.578599326607545e-01, +7.657390988438872e-01, +7.735317637507610e-01, +7.812362247368221e-01,
+7.888499478365373e-01, +7.963691608881653e-01, +8.037915368847273e-01, +8.111154166403033e-01,
+8.183384161720055e-01, +8.254567363530231e-01, +8.324682688387346e-01, +8.393715063470556e-01,
+8.461645428100565e-01, +8.528442051510350e-01, +8.594088830061699e-01, +8.658575289268042e-01,
+8.721883611259660e-01, +8.783992457627015e-01, +8.844895714000796e-01, +8.904559910537616e-01,
+8.962997945931150e-01, +9.020168984242400e-01, +9.076056139480890e-01, +9.130664170641334e-01,
+9.183979162084582e-01, +9.235994678560167e-01, +9.286692422352107e-01, +9.336076279434850e-01,
+9.384129048732400e-01, +9.430836933050435e-01, +9.476197145049868e-01, +9.520221006942875e-01,
+9.562904165806793e-01, +9.604235518327253e-01, +9.644205605875820e-01, +9.682827690312492e-01,
+9.720106722663890e-01, +9.756042291745447e-01, +9.790638238608151e-01, +9.823902028722666e-01,
+9.855837812929384e-01, +9.886436665180195e-01, +9.915714515450228e-01, +9.943692859110803e-01,
+9.970385179500313e-01, +9.995787919228785e-01, +1.001991256344717e+00, +1.004277707367492e+00,
+1.006439806897506e+00, +1.008478224880801e+00, +1.010395057449511e+00, +1.012192316076366e+00,
+1.013871638199171e+00, +1.015433826923486e+00, +1.016881083871244e+00, +1.018216717878600e+00,
+1.019442870837515e+00, +1.020560853084751e+00, +1.021572361827679e+00, +1.022480682703848e+00,
+1.023288268237906e+00, +1.023997104737320e+00, +1.024609726504572e+00, +1.025129444345768e+00,
+1.025558707847599e+00, +1.025899187425550e+00, +1.026153736073730e+00, +1.026326400217514e+00,
+1.026419755159132e+00, +1.026435753513555e+00, +1.026376745497183e+00, +1.026246413164014e+00,
+1.026047802601159e+00, +1.025783163725466e+00, +1.025455636062312e+00, +1.025068712226252e+00,
+1.024625269765159e+00, +1.024127035189888e+00, +1.023577282345944e+00, +1.022979990313458e+00,
+1.022338337695996e+00, +1.021654354624439e+00, +1.020930844259280e+00, +1.020171385028845e+00,
+1.019379551852598e+00, +1.018557222865231e+00, +1.017708008483692e+00, +1.016835630605444e+00,
+1.015943000562828e+00, +1.015032211107897e+00, +1.014106040189062e+00, +1.013168810057302e+00,
+1.012223533569952e+00, +1.011272160610958e+00, +1.010317161995333e+00, +1.009363573682324e+00,
+1.008418957730006e+00, +1.007443035427814e+00, +1.006980582693088e+00, +1.005880191360173e+00,
+1.004870660907557e+00, +1.003887307826199e+00, +1.002933862630671e+00, +1.002012456628431e+00,
+1.001122929266782e+00, +1.000264200804259e+00, +9.994361518334981e-01, +9.986396025239043e-01,
+9.978744044020248e-01, +9.971394126637049e-01, +9.964344374346332e-01, +9.957602381261346e-01,
+9.951165794460692e-01, +9.945022689695088e-01, +9.939170480434331e-01, +9.933616056210112e-01,
+9.928356667510468e-01, +9.923379640068731e-01, +9.918682011153984e-01, +9.914270132578689e-01,
+9.910140670228395e-01, +9.906280727376265e-01, +9.902686735168059e-01, +9.899364775767996e-01,
+9.896311064950427e-01, +9.893512408407925e-01, +9.890965020344753e-01, +9.888674481881904e-01, +9.886636955343167e-01, +9.884838850803949e-01, +9.883276240055705e-01, +9.881954463086439e-01, +9.880869460773882e-01, +9.880007538329854e-01, +9.879364462155417e-01, +9.878945575956836e-01, +9.878746493979034e-01, +9.878753499522159e-01, +9.878962158879177e-01, +9.879377642109470e-01, +9.879995488718708e-01, +9.880801746803725e-01, +9.881791937541983e-01, +9.882970966792446e-01, +9.884334355024147e-01, +9.885867883714737e-01, +9.887566952073135e-01, +9.889436358294569e-01, +9.891471384894399e-01, +9.893657732439902e-01, +9.895990550550585e-01, +9.898474573387898e-01, +9.901104832002432e-01, +9.903866926546286e-01, +9.906755858999687e-01, +9.909776136318341e-01, +9.912922749689899e-01, +9.916181054602099e-01, +9.919545975686356e-01, +9.923021872317422e-01, +9.926603609120486e-01, +9.930276450366935e-01, +9.934035125599263e-01, +9.937883997783191e-01, +9.941817792665538e-01, +9.945821646067609e-01, +9.949890245456261e-01, +9.954027843196593e-01, +9.958229139376651e-01, +9.962479146150113e-01, +9.966772475112751e-01, +9.971113385049125e-01, +9.975496462958124e-01, +9.979906675056988e-01, +9.984338592613343e-01, +9.988796523949821e-01, +9.993275431378141e-01, +9.997753812452573e-01, +1.000224669219663e+00, +1.000672909364706e+00, +1.001121604191588e+00, +1.001568597382930e+00, +1.002013378040221e+00, +1.002456372686098e+00, +1.002897030034197e+00, +1.003333829980590e+00, +1.003766216551067e+00, +1.004194607298016e+00, +1.004618447680436e+00, +1.005036211788027e+00, +1.005447348229275e+00, +1.005852270535212e+00, +1.006250425365265e+00, +1.006640290029854e+00, +1.007021310029137e+00, +1.007393907701933e+00, +1.007757528772291e+00, +1.008110655922241e+00, +1.008452744553207e+00, +1.008784215564761e+00, +1.009104530964226e+00, +1.009412177137242e+00, +1.009706620067364e+00, +1.009988296223056e+00, +1.010256673981368e+00, +1.010510261597171e+00, +1.010748529051234e+00, +1.010971938438940e+00, +1.011179974034890e+00, +1.011371154144579e+00, +1.011544976893053e+00, +1.011701915457469e+00, +1.011841483052088e+00, +1.011962209203063e+00, +1.012063621581602e+00, +1.012146211141323e+00, +1.012209509774826e+00, +1.012252080651208e+00, +1.012273461473019e+00, +1.012274179329824e+00, +1.012253779830287e+00, +1.012210860152664e+00, +1.012144976732521e+00, +1.012056685871527e+00, +1.011945565763788e+00, +1.011810229432951e+00, +1.011650280893217e+00, +1.011466289818154e+00, +1.011257880752579e+00, +1.011023694799342e+00, +1.010763375755366e+00, +1.010477533938561e+00, +1.010165826445586e+00, +1.009826955798404e+00, +1.009460591235290e+00, +1.009067412134881e+00, +1.008647118373303e+00, +1.008198467170796e+00, +1.007721196075366e+00, +1.007216031301935e+00, +1.006682757156533e+00, +1.006120180721864e+00, +1.005528123164754e+00, +1.004907385380564e+00, +1.004257813991292e+00, +1.003578321293819e+00, +1.002868793771428e+00, +1.002130123378852e+00, +1.001362250678481e+00, +1.000564166270619e+00, +9.997358689793686e-01, +9.988783302889642e-01, +9.979915852192069e-01, +9.970747197397686e-01, +9.961277448216609e-01, +9.951529474418550e-01, +9.941541831614942e-01, +9.930678080460911e-01, +9.914646039976289e-01, +9.902352352689523e-01, +9.889131869680553e-01, +9.875383274623817e-01, +9.861028679251979e-01, +9.846041087188396e-01, +9.830394337851476e-01, +9.814052410296346e-01, +9.796987091039431e-01, +9.779184677896273e-01, +9.760616740194450e-01, +9.741245958128935e-01, +9.721043782586516e-01, +9.699991325531057e-01, +9.678068213341133e-01, +9.655234943873925e-01, +9.631470850364502e-01, +9.606758082762421e-01, +9.581070287387355e-01, +9.554372064329766e-01, +9.526641870716750e-01, +9.497868942084339e-01, +9.468034353946915e-01, +9.437103240778303e-01, +9.405054771915659e-01, +9.371877218082764e-01, +9.337553821450042e-01, +9.302057763482381e-01, +9.265373496318979e-01, +9.227494594741956e-01, +9.188401295674290e-01, +9.148067377557749e-01, +9.106476709258303e-01, +9.063629680720371e-01, +9.019514987490371e-01, +8.974108808873397e-01, +8.927398817643528e-01, +8.879382683346716e-01, +8.830050715882986e-01, +8.779385355821995e-01, +8.727379973888942e-01, +8.674038889082810e-01, +8.619352566808824e-01, +8.563305243162549e-01, +8.505893287555129e-01, +8.447127297770400e-01, +8.387007637143140e-01, +8.325523768291013e-01, +8.262677444285360e-01, +8.198478927378535e-01, +8.132935411236417e-01, +8.066040997239516e-01, +7.997809105802602e-01, +7.928255537687610e-01, +7.857391245481645e-01, +7.785212684545030e-01, +7.711744403395434e-01, +7.637008160854790e-01, +7.561026668755407e-01, +7.483805701761127e-01, +7.405363749469933e-01, +7.325730245135402e-01, +7.244930008228270e-01, +7.162980305440977e-01, +7.079910089690906e-01, +6.995757887359807e-01, +6.910546259244099e-01, +6.824295471401947e-01, +6.737031265887281e-01, +6.648801659515325e-01, +6.559637902883004e-01, +6.469573547411541e-01, +6.378629377753962e-01, +6.286855280775698e-01, +6.194273058858271e-01, +6.100922809170846e-01, +6.006842631336996e-01, +5.912087588215279e-01, +5.816678990293079e-01, +5.720650011081139e-01, +5.624031153715043e-01, +5.526906296747590e-01, +5.429296335729603e-01, +5.331253296256703e-01, +5.232805923025862e-01, +5.134010079652535e-01, +5.034916218473681e-01, +4.935565059779637e-01, +4.835996679580253e-01, +4.736270399539165e-01, +4.636428606356920e-01, +4.536519115376573e-01, +4.436589520558524e-01, +4.336702110092904e-01, +4.236905139305571e-01, +4.137241358370227e-01, +4.037764981593496e-01, +3.938536636599411e-01, +3.839608678121244e-01, +3.741023650337649e-01, +3.642834353302138e-01, +3.545105744959439e-01, +3.447887254766501e-01, +3.351225758795436e-01, +3.255174149216463e-01, +3.159783340225490e-01,
+3.065118829951374e-01, +2.971215837581699e-01, +2.878124834032541e-01, +2.785898831431837e-01,
+2.694592444601873e-01, +2.604240268886858e-01, +2.514886909115454e-01, +2.426587307354934e-01,
+2.339385917103926e-01, +2.253316454409216e-01, +2.168420127437019e-01, +2.084745870335012e-01,
+2.002332724591125e-01, + 1.921209969418307e-01, +1.841414579810840e-01, +1.762991374092108e-01,
+1.685975427109672e-01, +1.610392647455030e-01, +1.536276387455411e-01, +1.463667950599712e-01,
+1.392599476606262e-01, +1.323093893293405e-01, +1.255182155111708e-01, +1.188903216873086e-01,
+1.124286726877977e-01, +1.061353122093495e-01, +1.000130754353283e-01, +9.406556557413207e-02,
+8.829543394466104e-02, +8.270438757849530e-02, +7.729486433686703e-02, +7.206998099643687e-02,
+6.703183558090599e-02, +6.218153160076208e-02, +5.752079270262547e-02, +5.305187265543024e-02,
+4.877591488398974e-02, +4.469299727922282e-02, +4.080367800167831e-02, +3.710883802024244e-02,
+3.360819061792393e-02, +3.030027537135876e-02, +2.718416076819826e-02, +2.425872983336823e-02,
+2.152170070657780e-02, +1.896992105664512e-02, +1.660053693426304e-02, +1.441002712765955e-02,
+1.239334766429038e-02, +1.054549096241532e-02, +8.862485552559351e-03, +7.329085750247888e-03,
+5.896299968476346e-03, +4.914753459788711e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00.

A numerical example of windowing function $w_{480}$, for frame size N=480, is herewith provided (960 samples). As explained above, the last values may be zeros. +3.538498803770035e-04, +4.595886345493055e-04,
+5.595519647227489e-04, +6.718404887323839e-04, +7.919323614002698e-04, +9.254835101516548e-04,
+1.069418485858920e-03, +1.227927169310031e-03, +1.398277791978983e-03, +1.584491535026729e-03,
+1.783653266717233e-03, +1.999873692180148e-03, +2.230687004705732e-03, +2.479549413444207e-03,
+2.744274680521470e-03, +3.028517203082985e-03, +3.329799454594260e-03, +3.651493788541270e-03,
+3.991659081158673e-03, +4.353535478916468e-03, +4.734803493964832e-03, +5.139354888882466e-03,
+5.564965156664017e-03, +6.015065135312130e-03, +6.487669532207667e-03, +6.986108359341676e-03,
+7.507986430774601e-03, +8.056692238103912e-03, +8.629882322202329e-03, +9.230898632007642e-03,
+9.857619542786990e-03, +1.051343406844975e-02, +1.119617236058772e-02, +1.190938692951881e-02,
+1.265082642578719e-02, +1.342375201935177e-02, +1.422598597626579e-02, +1.506090447446532e-02,
+1.592611511144210e-02, +1.682519266177794e-02, +1.775591229287213e-02, +1.872166356881472e-02,
+1.972014746423546e-02, +2.075475983187825e-02, +2.182299926812682e-02, +2.292828566629717e-02,
+2.406813715401559e-02, +2.524583465017564e-02, +2.645943128544517e-02, +2.771207863541604e-02,
+2.900157039370381e-02, +3.033143686044867e-02, +3.169933248543932e-02, +3.310834554878132e-02,
+3.455615910816914e-02, +3.604609640533871e-02, +3.757564512209753e-02, +3.914808612511974e-02,
+4.076128638095439e-02, +4.241834056741758e-02, +4.411695502674887e-02, +4.586038120884381e-02,
+4.764607953574337e-02, +4.947719681327219e-02, +5.135136676471998e-02, +5.327183246133368e-02,
+5.523619574402436e-02, +5.724780220726930e-02, +5.930419525733627e-02, +6.140861916695377e-02,
+6.355854744461048e-02, +6.575698564821578e-02, +6.800132774040281e-02, +7.029450733434550e-02,
+7.263424529955659e-02, +7.502357150869594e-02, +7.745987198268531e-02, +7.994662730757418e-02,
+8.248121208201259e-02, +8.506635369887924e-02, +8.769965758141890e-02, +9.038399472465716e-02,
+9.311641620512773e-02, +9.590005739506280e-02, +9.873233942897164e-02, +1.016162955027316e-01, +1.045493607096311e-01, +1.075345731608719e-01, +1.105690806271684e-01, +1.136556251529813e-01,
+1.167913767515824e-01, +1.199789286645804e-01, +1.232155302990620e-01, +1.265040684552515e-01,
+1.298417294090302e-01, +1.332315661550852e-01, +1.366709127560524e-01, +1.401623800497866e-01,
+1.437031543339276e-01, +1.472957921567060e-01, +1.509371564593891e-01, +1.546298983040232e-01,
+1.583709932021852e-01, +1.621632295622287e-01, +1.660038996795837e-01, +1.698955982096184e-01,
+1.738354123649302e-01, +1.778260015982545e-01, +1.818640789446629e-01, +1.859520359191026e-01,
+1.900868218108653e-01, +1.942708017706291e-01, +1.985008828937603e-01, +2.027798260494142e-01,
+2.071046414574582e-01, +2.114778554475382e-01, +2.158964254821512e-01, +2.203627179356420e-01,
+2.248732557074316e-01, +2.294303802774835e-01, +2.340304946493155e-01, +2.386763947872762e-01,
+2.433647632018021e-01, +2.480980084587409e-01, +2.528729453658238e-01, +2.576919809402799e-01,
+2.625518239753811e-01, +2.674547009618951e-01, +2.723969864831702e-01, +2.773809014717047e-01,
+2.824031465430401e-01, +2.874658392896952e-01, +2.925657097525320e-01, +2.977050145264297e-01,
+3.028802866809923e-01, +3.080937708388026e-01, +3.133419120661713e-01, +3.186267330325243e-01,
+3.239446274586855e-01, +3.292976696294886e-01, +3.346822587497995e-01, +3.401004975161905e-01,
+3.455490160824131e-01, +3.510297825670005e-01, +3.565392648316303e-01, +3.620795045342974e-01,
+3.676468198385683e-01, +3.732431609065464e-01, +3.788648665671841e-01, +3.845139947587731e-01,
+3.901867575702975e-01, +3.958851576591690e-01, +4.016055596175310e-01, +4.073498814407726e-01,
+4.131143794748322e-01, +4.189008731078437e-01, +4.247056871121635e-01, +4.305308301005456e-01,
+4.363724468005679e-01, +4.422326205247767e-01, +4.481076715576617e-01, +4.539992478845187e-01,
+4.599036262256764e-01, +4.658227790464821e-01, +4.717526717360889e-01, +4.776951277513855e-01,
+4.836466393241829e-01, +4.896089037533445e-01, +4.955781691142885e-01, +5.015564851667653e-01,
+5.075397341675292e-01, +5.135297950483941e-01, +5.195228071176610e-01, +5.255203889406241e-01,
+5.315186369941947e-01, +5.375197039843709e-01, +5.435197203416460e-01, +5.495204053284317e-01,
+5.555183841040963e-01, +5.615153912741460e-01, +5.675072245552497e-01, +5.734957812557457e-01,
+5.794770758870604e-01, +5.854526176188222e-01, +5.914186654649489e-01, +5.973773282523112e-01,
+6.033245382283379e-01, +6.092622887527459e-01, +6.151869491458284e-01, +6.211002315674210e-01,
+6.269981160888640e-01, +6.328823912226461e-01, +6.387491304847892e-01, +6.446002007776794e-01,
+6.504316924413531e-01, +6.562457600042717e-01, +6.620384583071039e-01, +6.678117513456276e-01,
+6.735619658538692e-01, +6.792906550106088e-01, +6.849937204005565e-01, +6.906734235708962e-01,
+6.963256426589250e-01, +7.019517880051427e-01, +7.075491663942173e-01, +7.131194393772130e-01,
+7.186585770351414e-01, +7.241690155466505e-01, +7.296469905863920e-01, +7.350940240070911e-01,
+7.405065029424016e-01, +7.458864594794676e-01, +7.512298245353598e-01, +7.565387020584289e-01,
+7.618094719403713e-01, +7.670441227603888e-01, +7.722388831102434e-01, +7.773958448163656e-01,
+7.825113901786742e-01, +7.875876391562497e-01, +7.926208751337592e-01, +7.976131629355570e-01,
+8.025610715609228e-01, +8.074666387233143e-01, +8.123261531893655e-01, +8.171419338595847e-01,
+8.219101564897180e-01, +8.266329452432137e-01, +8.313069432125857e-01, +8.359343163788637e-01,
+8.405111871797961e-01, +8.450403211238631e-01, +8.495180470826319e-01, +8.539464819668052e-01,
+8.583225792686004e-01, +8.626485837105826e-01, +8.669206756254478e-01, +8.711415846800790e-01,
+8.753083234662220e-01, +8.794234355078734e-01, +8.834826778788665e-01, +8.874884715160425e-01,
+8.914384774585629e-01, +8.953346996622868e-01, +8.991737724042251e-01, +9.029574074899029e-01,
+9.066828541224163e-01, +9.103527429187326e-01, +9.139638342168577e-01, +9.175184878836662e-01,
+9.210144133066616e-01, +9.244537632557187e-01, +9.278332160151861e-01, +9.311556192776946e-01,
+9.344176283021008e-01, +9.376215186479845e-01, +9.407644740241826e-01, +9.438492190005341e-01,
+9.468728540294310e-01, +9.498382236872068e-01, +9.527426712456687e-01, +9.555885737210712e-01,
+9.583732599601223e-01, +9.610993609218629e-01, +9.637636503225360e-01, +9.663690412284377e-01,
+9.689132689491541e-01, +9.713988678700001e-01, +9.738235617865406e-01, +9.761902903500818e-01,
+9.784963361871022e-01, +9.807442506043361e-01, +9.829315352320943e-01, +9.850609512273165e-01,
+9.871297972052695e-01, +9.891408802831312e-01, +9.910923625580078e-01, +9.929872268444632e-01,
+9.948228821209419e-01, +9.966027455323081e-01, +9.983241398929388e-01, +9.999898494568836e-01,
+1.001597808884145e+00, +1.003150760219063e+00, +1.004646500318265e+00, +1.006088248744700e+00,
+1.007473713377193e+00, +1.008806248810530e+00, +1.010083776257753e+00, +1.011309151636166e+00,
+1.012480196393275e+00, +1.013600067830152e+00, +1.014666681083198e+00, +1.015683082766535e+00,
+1.016647533889674e+00, +1.017563337333301e+00, +1.018428468753963e+00, +1.019246216134229e+00,
+1.020014681326785e+00, +1.020736921761459e+00, +1.021410866072808e+00, +1.022039872150903e+00,
+1.022622059577585e+00, +1.023160749941404e+00, +1.023654257342442e+00, +1.024105973101631e+00,
+1.024514004504684e+00, +1.024881624147540e+00, +1.025207065371760e+00, +1.025493542877243e+00,
+1.025739288978437e+00, +1.025947636692103e+00, +1.026116939910040e+00, +1.026250709375593e+00,
+1.026347260729698e+00, +1.026409787584788e+00, +1.026436666375082e+00, +1.026431212267978e+00, +1.026391488022762e+00, +1.026320857404224e+00, +1.026217843764236e+00, +1.026085730009027e+00,
+1.025922917798664e+00, +1.025733019213987e+00, +1.025514292433933e+00, +1.025269979527211e+00,
+1.024998528084259e+00, + 1 . 024 703212795365e+00, + 1 .024382188798244e+00, + 1 .024039051426278e+00,
+1.023672163232710e+00, +1.023284940887058e+00, +1.022875917162315e+00, +1.022448453314994e+00,
+1.022000829220643e+00, +1.021536599728231e+00, +1.021053875701803e+00, +1.020555973231408e+00,
+1.020041434676317e+00, +1.019513866799503e+00, +1.018971390778550e+00, +1.018417599116053e+00,
+1.017851066303933e+00, +1.017275179369116e+00, +1.016688023745155e+00, +1.016093242802983e+00,
+1.015489129111694e+00, +1.014878956980025e+00, +1.014261064091392e+00, +1.013639356938881e+00,
+1.013011559583153e+00, +1.012381741769641e+00, +1.011747750709711e+00, +1.011113332101179e+00,
+1.010476167900044e+00, +1.009840844244693e+00, +1.009204021773819e+00, +1.008572045006596e+00,
+1.007939764480188e+00, +1.007331850775798e+00, +1.007112182697132e+00, +1.006407400915498e+00,
+1.005715372118122e+00, +1.005038785533845e+00, +1.004374825095777e+00, +1.003726291405694e+00,
+1.003090358040736e+00, +1.002469814737132e+00, +1.001861838147367e+00, +1.001269198108365e+00,
+1.000689073754539e+00, +1.000124220942757e+00, +9.995718119556711e-01, +9.990346001249977e-01,
+9.985097406611592e-01, +9.979999918405413e-01, +9.975024904153303e-01, +9.970199948970832e-01,
+9.965496346682551e-01, +9.960941547576162e-01, +9.956506910018569e-01, +9.952219662800089e-01,
+9.948051243621099e-01, +9.944028741276870e-01, +9.940123528373235e-01, +9.936362728142866e-01,
+9.932717517525477e-01, +9.929215102130406e-01, +9.925826537087717e-01, +9.922578948824415e-01,
+9.919443474477135e-01, +9.916447007525191e-01, +9.913560821234982e-01, +9.910811659133294e-01,
+9.908170758245324e-01, +9.905664908867821e-01, +9.903265196045258e-01, +9.900998445795673e-01,
+9.898835741176714e-01, +9.896803735870122e-01, +9.894873685512386e-01, +9.893072032520545e-01,
+9.891370094863634e-01, +9.889794323427195e-01, +9.888315884970242e-01, +9.886961351016699e-01,
+9.885701787626714e-01, +9.884563716748773e-01, +9.883518302777313e-01, +9.882591911282058e-01,
+9.881755763473004e-01, +9.881036242002076e-01, +9.880404423341358e-01, +9.879886826752381e-01,
+9.879454420034824e-01, +9.879133688360181e-01, +9.878895706371619e-01, +9.878766784594818e-01,
+9.878718098237022e-01, +9.878775927630988e-01, +9.878911354436840e-01, +9.879150762106034e-01,
+9.879465136687265e-01, +9.879880844262307e-01, +9.880368938846610e-01, +9.880955662657537e-01,
+9.881612121412342e-01, +9.882364564839506e-01, +9.883183975703879e-01, +9.884096731867189e-01,
+9.885073687439192e-01, +9.886141241716089e-01, +9.887270275540468e-01, +9.888487088987707e-01,
+9.889762614809646e-01, +9.891123127261381e-01, +9.892539488627546e-01, +9.894038044982261e-01,
+9.895589571176194e-01, +9.897220412447528e-01, +9.898901380212467e-01, +9.900658706993652e-01,
+9.902463287269285e-01, +9.904341281652976e-01, +9.906263564100900e-01, +9.908256340476208e-01,
+9.910290387632859e-01, +9.912391966549245e-01, +9.914531811725067e-01, +9.916736156286597e-01,
+9.918975763831412e-01, +9.921276814881759e-01, +9.923610074433741e-01, +9.926001740490448e-01,
+9.928422499725458e-01, +9.930898628710855e-01, +9.933400717991352e-01, +9.935955098307742e-01,
+9.938532319665272e-01, +9.941158706465729e-01, +9.943804814776256e-01, +9.946496946937963e-01,
+9.949205650500305e-01, +9.951957244449919e-01, +9.954722223202400e-01, +9.957526959635303e-01,
+9.960341878404958e-01, +9.963193400387707e-01, +9.966051908036528e-01, +9.968943831870675e-01,
+9.971839552785087e-01, +9.974765480003592e-01, +9.977692009836100e-01, +9.980645531056329e-01,
+9.983596442023971e-01, +9.986571134591464e-01, +9.989539982645417e-01, +9.992529406343204e-01,
+9.995509738170480e-01, +9.998507434423984e-01, +1.000149278838447e+00, +1.000449227898040e+00,
+1.000747617880619e+00, +1.001047097000738e+00, +1.001344692310058e+00, +1.001643050985813e+00,
+1.001939200113204e+00, +1.002235786606954e+00, +1.002529835919150e+00, +1.002823997223967e+00,
+1.003115291715261e+00, +1.003406373183356e+00, +1.003694257266035e+00, +1.003981602446902e+00,
+1.004265420574493e+00, +1.004548371695603e+00, +1.004827468041713e+00, +1.005105367331224e+00,
+1.005379085053508e+00, +1.005651275972376e+00, +1.005918957263603e+00, +1.006184784468940e+00,
+1.006445772052972e+00, +1.006704580223772e+00, +1.006958219378997e+00, +1.007209352772459e+00,
+1.007454991591196e+00, +1.007697795962687e+00, +1.007934783656087e+00, +1.008168609148541e+00, + 1 .008396295152072e+00, +1.008620496650569e+00, +1.008838233369544e+00, +1.009052167883909e+00,
+1.009259314290145e+00, +1.009462340194419e+00, +1.009658261526612e+00, +1.009849742422788e+00,
+1.010033806431099e+00, +1.010213115163429e+00, +1.010384692193296e+00, +1.010551208502819e+00,
+1.010709677336593e+00, +1.010862783160582e+00, +1.011007533860188e+00, +1.011146615898068e+00,
+1.011277044709547e+00, +1.011401501255448e+00, +1.011517007040469e+00, +1.011626247430694e+00,
+1.011726237740989e+00, +1.011819675175864e+00, +1.011903571699736e+00, +1.011980623923816e+00,
+1.012047856645320e+00, +1.012107954864219e+00, +1.012157955913755e+00, +1.012200545438956e+00,
+1.012232755709885e+00, +1.012257286376882e+00, +1.012271163275396e+00, +1.012277089047072e+00,
+1.012272100156695e+00, +1.012258889781605e+00, +1.012234505114778e+00, +1.012201643414713e+00,
+1.012157343029718e+00, +1.012104319978655e+00, +1.012039603446877e+00, +1.011965913685509e+00, +1.011880293122688e+00, +1.011785448628142e+00, +1.011678439894684e+00, +1.011561972516341e+00,
+1.011433103151726e+00, +1.011294553726738e+00, +1.011143373963981e+00, +1.010982291036989e+00,
+1.010808368434796e+00, +1.010624321020038e+00, +1.010427231547075e+00, +1.010219813871895e+00,
+1.009999148545101e+00, +1.009767970668237e+00, +1.009523347700539e+00, +1.009268031808824e+00,
+1.008999095526602e+00, +1.008719286674458e+00, +1.008425698479647e+00, +1.008121073095495e+00,
+1.007802512993334e+00, +1.007472774447058e+00, +1.007128952000889e+00, +1.006773824218378e+00,
+1.006404483571931e+00, +1.006023715042962e+00,
+1.005628630023041e+00,+1.005222003295591e+00,+1.004800972930542e+00, +1.004368308119956e+00,
+1.003921160689206e+00, +1.003462311571559e+00, +1.002988912076156e+00, +1.002503762756151e+00,
+1.002004016208227e+00, +1.001492483526354e+00, +1.000966332772540e+00, +1.000428371467870e+00,
+9.998757944861690e-01, +9.993114007411373e-01, +9.987324107135600e-01, +9.981416218519609e-01,
+9.975362702189898e-01, +9.969191628491259e-01, +9.962875422935514e-01, +9.956442306333592e-01,
+9.949864765356604e-01, +9.943171077259315e-01, +9.936333924912825e-01, +9.929380432296178e-01,
+9.917160727742302e-01, +9.908677480361242e-01, +9.900143412821714e-01, +9.891360093161795e-01,
+9.882326326262749e-01, +9.873035624860487e-01, +9.863463238550498e-01, +9.853620567056602e-01,
+9.843478797730104e-01, +9.833051513036913e-01, +9.822305093671991e-01, +9.811260856582836e-01,
+9.799880424709783e-01, +9.788185853162172e-01, +9.776142582502931e-01, +9.763768210132104e-01,
+9.751026333215269e-01, +9.737939228124395e-01, +9.724467635816038e-01, +9.710631852370086e-01,
+9.696397017403771e-01, +9.681786285613160e-01, +9.666759668947944e-01, +9.651341172191925e-01,
+9.635494800783196e-01, +9.619242192293307e-01, +9.602543350544703e-01, +9.585422731136767e-01,
+9.567841986369237e-01, +9.549824213719248e-01, +9.531333627775944e-01, +9.512394303101863e-01,
+9.492969005669868e-01, +9.473083933922714e-01, +9.452700238623795e-01, +9.431841637391052e-01,
+9.410472222265884e-01, +9.388615698236068e-01, +9.366234817959531e-01, +9.343357002925867e-01,
+9.319946435581106e-01, +9.296028267859759e-01, +9.271568160852692e-01, +9.246592033932568e-01,
+9.221062052092852e-01, +9.195004240356797e-01, +9.168383396399868e-01, +9.141224927600506e-01,
+9.113493760046765e-01, +9.085218034087421e-01, +9.056363890361683e-01, +9.026958474136628e-01,
+8.996967011299613e-01, +8.966416378522284e-01, +8.935272411148886e-01, +8.903562054918268e-01,
+8.871250499337346e-01, +8.838366845222299e-01, +8.804877931535187e-01, +8.770812736055238e-01,
+8.736138336697008e-01, +8.700884209228057e-01, +8.665016401172241e-01, +8.628563075036018e-01,
+8.591492134848260e-01, +8.553833146397594e-01, +8.515554376987873e-01, +8.476686394755906e-01,
+8.437199738159921e-01, +8.397124082723917e-01, +8.356428970797861e-01, +8.315145717373513e-01,
+8.273244136947282e-01, +8.230753889817990e-01, +8.187646556254478e-01, +8.143955052591809e-01,
+8.099649296155544e-01, +8.054763240960976e-01, +8.009271179588155e-01, +7.963204506324437e-01,
+7.916533519679438e-01, +7.869294361891859e-01, +7.821460539775005e-01, +7.773057646170487e-01,
+7.724075191626083e-01, +7.674541821769616e-01, +7.624428319731227e-01, +7.573778165664506e-01,
+7.522563457568547e-01, +7.470817821499429e-01, +7.418518832940608e-01, +7.365702052057368e-01,
+7.312341927030358e-01, + 7.258478768003871e-01, +7.204090552899627e-01, +7.149213766200488e-01,
+7.093829112276890e-01, +7.037975107157410e-01, +6.981626982337203e-01, +6.924822574950567e-01,
+6.867542812151157e-01, +6.809822459535158e-01, +6.751641683711578e-01, +6.693041888771051e-01,
+6.634003182158815e-01, +6.574563319397519e-01, +6.514710959179395e-01, +6.454477530601381e-01,
+6.393842401194645e-01, +6.332854832820911e-01, +6.271477285210396e-01, +6.209759156556838e-01,
+6.147685389896460e-01, +6.085293803703800e-01, +6.022569117623975e-01, +5.959553778639692e-01,
+5.896228984554688e-01, +5.832624455793536e-01, +5.768737955463938e-01, +5.704590282594502e-01,
+5.640165022515612e-01, +5.575534287167304e-01, +5.510670389249083e-01, +5.445598110309068e-01,
+5.380320138069060e-01, +5.314874283056712e-01, +5.249238143777145e-01, +5.183454027643609e-01,
+5.117512861349316e-01, +5.051454054672581e-01, +4.985259415650634e-01, +4.918987341485414e-01,
+4.852602812611293e-01, +4.786156067459849e-01, +4.719635569001799e-01, +4.653076657434153e-01,
+4.586473038370960e-01, +4.519865712901121e-01, +4.453241417472980e-01, +4.386643556872857e-01,
+4.320060235689271e-01, +4.253531733174983e-01, +4.187046888325280e-01, +4.120648989967404e-01,
+4.054326930449553e-01, +3.988123056192917e-01, +3.922024876218684e-01, +3.856076044898875e-01,
+3.790262923635895e-01, +3.724631634624147e-01, +3.659167460890094e-01, +3.593914828698104e-01,
+3.528864871672291e-01, +3.464055764938486e-01, +3.399474132903109e-01, +3.335176660030293e-01,
+3.271139090168518e-01, +3.207392420889753e-01, +3.143954622458083e-01, +3.080847161569418e-01,
+3.018061113177053e-01, +2.955645092490569e-01, +2.893580088818822e-01, +2.831905952786933e-01,
+2.770614560088827e-01, +2.709746519672053e-01, +2.649288369241889e-01, +2.589278854215034e-01,
+2.529705733428521e-01, +2.470608550624402e-01, +2.411974884962474e-01, +2.353843453791010e-01,
+2.296201119084320e-01, +2.239085920293915e-01, +2.182484277107470e-01, +2.126433716126154e-01,
+2.070920316105701e-01, +2.015981078416022e-01, +1.961601816145380e-01, +1.907818965593135e-01, +1.854618027014993e-01,     +1.802035203864437e-01,     +1.750055292053725e-01,     +1.698714235427536e-01,
+1.647996883470628e-01,     +1.597938610874129e-01,     +1.548523838673932e-01,     +1.499787548077658e-01,
+1.451714001185458e-01,     +1.404337947365906e-01,     +1.357643522991611e-01,     +1.311665152711531e-01,
+1.266386794659985e-01,     +1.221842534547464e-01,     +1.178016171445482e-01,     +1.134941442588690e-01,
+1.092601994264173e-01,     +1.051031184506442e-01,     +1.010212496137049e-01,     +9.701788451015510e-02,
+9.309135143613317e-02,     +8.924488982596421e-02,     +8.547680283183663e-02,     +8.179026694646475e-02,
+7.818355556343952e-02,     +7.465976378295235e-02,     +7.121713409722980e-02,     +6.785866241065035e-02,
+6.458254322751886e-02,     +6.139166651287085e-02,     +5.828416955031769e-02,     +5.526281189874142e-02,
+5.232565602156542e-02,     +4.947530987083008e-02,     +4.670976978373095e-02,     +4.403144898585497e-02,
+4.143827607712719e-02,     +3.893244425578721e-02,     +3.651180398163022e-02,     +3.417832280408597e-02,
+3.192976013776998e-02,     +2.976774716313782e-02,     +2.769013516567754e-02,     +2.569810636390758e-02,
+2.378944369289586e-02,     +2.196497565730828e-02,     +2.022259265088492e-02,     +1.856252261671509e-02,
+1.698293043956028e-02,     +1.548317776486453e-02,     +1.406194554493180e-02,     +1.271739094059619e-02,
+1.144924909653903e-02,     +1.025352572459910e-02,     +9.132141467690603e-03,     +8.076482660383204e-03,
+7.093814769976364e-03,     +6.160346335510290e-03,     +5.300044080947794e-03,     +4.327696566833525e-03,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00,     +0.000000000000000e+00,     +0.000000000000000e+00,     +0.000000000000000e+00,
+0.000000000000000e+00, +0.000000000000000e+00, +0.000000000000000e+00, +0.000000000000000e+00.

A numerical example of windowing function, for frame size N=960, is herewith provided 1920 samples). As explained above, the last values may be zeros.     +3.235700349233950e-04,     +3.821992968116373e-04,
+4.346763076430269e-04,     +4.841399974556557e-04,     +5.337292962876158e-04,     +5.864735900759105e-04,
+6.428827504324996e-04,     +7.010318350640768e-04,     +7.608344672311270e-04,     +8.240821499679188e-04,
+8.910357994632938e-04,     +9.604008359868557e-04,     +1.032187650884365e-03,     +1.107726421735994e-03,
+1.187132578842487e-03,     +1.269300730654068e-03,     +1.354305556720234e-03,     +1.443403284874795e-03,
+1.536663296357133e-03,     +1.632968062524617e-03,     +1.732380147404573e-03,     +1.836145247521724e-03,
+1.944392065549996e-03,     +2.056125836181849e-03,     +2.171386021601719e-03,     +2.291251920978034e-03,
+2.415808383814314e-03,     +2.544144440874477e-03,     +2.676357471188558e-03,     +2.813551797283812e-03,
+2.955803613263345e-03,     +3.102160324883627e-03,     +3.252661103181324e-03,     +3.408341073385241e-03,
+3.569302917352426e-03,     +3.734713566068289e-03,     +3.904659832213214e-03,     +4.080147004222224e-03,
+4.261212283030981e-03,     +4.446929867132814e-03,     +4.637409387087253e-03,     +4.833793064672789e-03,
+5.036194779738963e-03,     +5.243697651112321e-03,     +5.456361749675164e-03,     +5.675227929566806e-03, +5.900394401532485e-03, +6.131014766883671e-03, +6.367178191275927e-03, +6.609908124535202e-03,
+6.859253963058476e-03, +7.114293307371561e-03, +7.375089966000295e-03, +7.642693523739984e-03,
+7.917171839712018e-03, +8.197610411215884e-03, +8.484065880416487e-03, +8.777567475206218e-03,
+9.078195201482999e-03, +9.385078909241503e-03, +9.698299554301988e-03, +1.001888876231112e-02,
+1.034691797503113e-02, +1.068149963936024e-02, +1.102272421949215e-02, +1.137165918496004e-02,
+1.172838973544289e-02, +1.209201783148431e-02, +1.246260014549782e-02, +1.284114967210881e-02,
+1.322773320467288e-02, +1.362147156562462e-02, +1.402244719763268e-02, +1.443170227861997e-02,
+1.484928966105225e-02, +1.527427503031274e-02, +1.570673344965518e-02, +1.614474906895406e-02,
+1.659741217225623e-02, +1.705481769961258e-02, +1.752003567982498e-02, +1.799411192217523e-02,
+1.847711280171765e-02, +1.896812570518296e-02, +1.946722405557199e-02, +1.997546609433320e-02,
+2.049290306467406e-02, +2.101858037652682e-02, +2.155255505248360e-02, +2.209589582354997e-02,
+2.264866778978731e-02, +2.320993080187466e-02, +2.377971919482778e-02, +2.435904568934701e-02,
+2.494800748775296e-02, +2.554578281793083e-02, +2.615244880416785e-02, +2.676898100961685e-02,
+2.739542549965559e-02, +2.803090209537370e-02, +2.867550388692567e-02, +2.933029464839461e-02,
+2.999535245144327e-02, +3.066976865911597e-02, +3.135358217583060e-02, +3.204778132642869e-02,
+3.275241094528637e-02, +3.346657321987338e-02, +3.419033915994245e-02, +3.492474656851959e-02,
+3.566984393450434e-02, +3.642469098112518e-02, +3.718932683936013e-02, +3.796477227376223e-02,
+3.875111047720054e-02, +3.954748420753697e-02, +4.035395199977597e-02, +4.117148855800665e-02,
+4.200013716597904e-02, +4.283901138210502e-02, +4.368817991890082e-02, +4.454866443036003e-02,
+4.542050595471842e-02, +4.630276577789394e-02, +4.719547798640356e-02, +4.809965043366945e-02,
+4.901533344583754e-02, +4.994161943600844e-02, +5.087856571149934e-02, +5.182719384692941e-02,
+5.278755308483513e-02, +5.375872122678868e-02, +5.474076083738614e-02, +5.573471840677637e-02,
+5.674064972230924e-02, +5.775761981233486e-02, +5.878567633813699e-02, +5.982584998609648e-02,
+6.087818970335195e-02, +6.194176167634657e-02, +6.301659162319866e-02, +6.410366584958441e-02,
+6.520301218579141e-02, +6.631369927165530e-02, +6.743573988811077e-02, +6.857009288032996e-02,
+6.971680213521406e-02, +7.087499583595998e-02, +7.204473108503576e-02, +7.322699135891000e-02,
+7.442178588912410e-02, +7.562815385274406e-02, +7.684615718122945e-02, +7.807687861830234e-02,
+7.932038618419741e-02, +8.057572953286415e-02, +8.184289534616669e-02, +8.312281225703541e-02,
+8.441550376460240e-02, +8.572008755967025e-02, +8.703660776989294e-02, +8.836603137189772e-02,
+8.970833701278809e-02, +9.106251913073614e-02, +9.242858978650852e-02, +9.380757856153675e-02,
+9.519952848393795e-02, +9.660349396690321e-02, +9.801949952722568e-02, +9.944854075501454e-02,
+1.008906469288751e-01, +1.023448810132759e-01, +1.038112769854394e-01, +1.052908387348570e-01,
+1.067835785257166e-01, +1.082885168352610e-01, +1.098056403352340e-01, +1.113359035023070e-01,
+1.128793060660070e-01, +1.144348917022365e-01, +1.160026418427939e-01, +1.175834766182813e-01,
+1.191773817925584e-01, +1.207834098631640e-01, +1.224015773361210e-01, +1.240328627276697e-01,
+1.256772653276007e-01, +1.273338065186211e-01, +1.290025000390856e-01, +1.306843522870102e-01,
+1.323793987456491e-01, +1.340867011604515e-01, +1.358062490065425e-01, +1.375389612590117e-01,
+1.392848238717889e-01, +1.410428901194039e-01, +1.428131506368226e-01, +1.445965317426731e-01,
+1.463929885103623e-01, +1.482015069292479e-01, +1.500220583792976e-01, +1.518555991923989e-01,
+1.537021065265166e-01, +1.555605782414143e-01, +1.574309942903742e-01, +1.593143180431248e-01,
+1.612105639985474e-01, +1.631187954209520e-01, +1.650390046254505e-01, +1.669721131327860e-01,
+1.689180947901775e-01, +1.708759773387028e-01, +1.728457537748600e-01, +1.748283801430888e-01,
+1.768238156096776e-01, +1.788310228663131e-01, +1.808499369342717e-01, +1.828814674176937e-01,
+1.849255792714432e-01, +1.869812912624581e-01, +1.890485613515956e-01, +1.911282864915418e-01,
+1.932204127989935e-01, +1.953239376543276e-01, +1.974388457221676e-01, +1.995661075971730e-01,
+2.017057139908492e-01, +2.038566744769371e-01, +2.060189557031752e-01, +2.081934824879514e-01,
+2.103802237348733e-01, +2.125781921411190e-01, +2.147873518665726e-01, +2.170086169288035e-01,
+2.192419082234839e-01, +2.214861559453727e-01, +2.237412958295601e-01, +2.260082674736221e-01,
+2.282869811837961e-01, +2.305763207809758e-01, +2.328762384864272e-01, +2.351877543503455e-01,
+2.375108487943784e-01, +2.398444593573832e-01, +2.421885165595468e-01, +2.445439470704063e-01,
+2.469107075411724e-01, +2.492877833071390e-01, +2.516751260083683e-01, +2.540736535206898e-01,
+2.564833108170047e-01, +2.589030699085996e-01, +2.613328676927456e-01, +2.637736050921935e-01,
+2.662251902764728e-01, +2.686865397612919e-01, +2.711575593740559e-01, +2.736391458519503e-01,
+2.761312410342679e-01, +2.786328295517739e-01, +2.811438338004066e-01, +2.836651148767941e-01,
+2.861965981859126e-01, +2.887372740841138e-01, +2.912870864180725e-01, +2.938469307293017e-01,
+2.964167262145285e-01, +2.989954170150198e-01, +3.015829286213736e-01, +3.041801674023100e-01,
+3.067870538332799e-01, +3.094025219039914e-01, +3.120264728553777e-01, +3.146597759277349e-01,
+3.173023310827802e-01, +3.199530692693200e-01, +3.226118955458964e-01, +3.252796888787393e-01, +3.279563545740858e-01, +3.306408240998973e-01, +3.333329987313211e-01, +3.360337508241129e-01,
+3.387430081844867e-01, +3.414597523183469e-01, +3.441838955445625e-01, +3.469162810132548e-01,
+3.496568059948401e-01, +3.524044231246164e-01, +3.551590444946287e-01, +3.579215403419018e-01,
+3.606918060977176e-01, +3.634687629020059e-01, +3.662523018706806e-01, +3.690432842592497e-01,
+3.718416007949022e-01, +3.746461722601965e-01, +3.774569030021080e-01, +3.802746797947738e-01,
+3.830993933108193e-01, +3.859299384223780e-01, +3.887661993522015e-01, +3.916090507233831e-01,
+3.944583955021906e-01, +3.973131637447736e-01, +4.001732470818926e-01, +4.030394989766596e-01,
+4.059118059100888e-01, +4.087890872349265e-01, +4.116712207743528e-01, +4.145590432995318e-01,
+4.174524354370054e-01, +4.203503225145663e-01, +4.232526082630496e-01, +4.261601728427663e-01,
+4.290728957232506e-01, +4.319896569618181e-01, +4.349103424521226e-01, +4.378358447638693e-01,
+4.407660763679560e-01, +4.436999665749521e-01, +4.466373809565015e-01, +4.495791232066263e-01,
+4.525250566690236e-01, +4.554741060746665e-01, +4.584261742417322e-01, +4.613821390145840e-01,
+4.643418692214444e-01, +4.673042252463159e-01, +4.702690556535691e-01, +4.732372004975696e-01,
+4.762085675098781e-01, +4.791821288489955e-01, +4.821577734075715e-01, +4.851363063006593e-01,
+4.881175853001019e-01, +4.911005242880451e-01, +4.940850327998220e-01, +4.970720120437943e-01,
+5.000613277949747e-01, +5.030518116390311e-01, +5.060433154467696e-01, +5.090367134250039e-01,
+5.120318927612107e-01, +5.150277508616620e-01, +5.180241439456884e-01, +5.210218879576217e-01,
+5.240208300352607e-01, +5.270198510229556e-01, +5.300188492910082e-01, +5.330187387865785e-01,
+5.360194223342527e-01, +5.390197891039044e-01, +5.420196856030712e-01, +5.450199204515231e-01,
+5.480203984293612e-01, +5.510201184135838e-01, +5.540189939344148e-01, +5.570178491640744e-01,
+5.600165101133929e-01, +5.630138095716375e-01, +5.660096045860781e-01, +5.690047761849362e-01,
+5.719992058026786e-01, +5.749917722935854e-01, +5.779823098049300e-01, +5.809716105476772e-01,
+5.839595278786620e-01, +5.869449780892492e-01, +5.899278766736546e-01, +5.929091339529038e-01,
+5.958886225335936e-01, +5.988651785480291e-01, +6.018386614784691e-01, +6.048099568741729e-01,
+6.077789763021885e-01, +6.107446538724647e-01, +6.137068698395559e-01, +6.166664505621099e-01,
+6.196232440099102e-01, +6.225761217125432e-01, +6.255249461230102e-01, +6.284705701386001e-01,
+6.314128591964590e-01, +6.343506915084997e-01, +6.372839411338272e-01, +6.402134772829997e-01,
+6.431391659393545e-01, +6.460598714450869e-01, +6.489754897736506e-01, +6.518869471124649e-01,
+6.547941354100638e-01, +6.576959114103553e-01, +6.605921398591732e-01, +6.634836963621389e-01,
+6.663704870510495e-01, +6.692514453435826e-01, +6.721264409903913e-01, +6.749962795110787e-01,
+6.778607807385375e-01, +6.807187840914061e-01, +6.835701860237697e-01, +6.864159372105746e-01,
+6.892559431770480e-01, +6.920890588499607e-01, +6.949150680560000e-01, +6.977346951975620e-01,
+7.005478826218464e-01, +7.033537849891354e-01, +7.061523680058837e-01, +7.089444008783498e-01,
+7.117296915594161e-01, +7.145070977546192e-01, +7.172765338080037e-01, +7.200389672139186e-01,
+7.227943349906750e-01, +7.255415386736762e-01, +7.282804177906205e-01, +7.310117549409422e-01,
+7.337354140683028e-01, +7.364503418025881e-01, +7.391564587113454e-01, +7.418546544582220e-01,
+7.445447900371659e-01, +7.472257006958800e-01, +7.498972580176051e-01, +7.525603713200814e-01,
+7.552149563509314e-01, +7.578599326607545e-01, +7.604951971158384e-01, +7.631216241889446e-01,
+7.657390988438872e-01, +7.683465174378752e-01, +7.709437746884765e-01, +7.735317637507610e-01,
+7.761103909474643e-01, +7.786785753465276e-01, +7.812362247368221e-01, +7.837842352787271e-01,
+7.863225078411482e-01, +7.888499478365373e-01, +7.913664452543058e-01, +7.938728763542381e-01,
+7.963691608881653e-01, +7.988542608155023e-01, +8.013280948233752e-01, +8.037915368847273e-01,
+8.062444700164981e-01, +8.086857893766403e-01, +8.111154166403033e-01, +8.135342978258457e-01,
+8.159423410909078e-01, +8.183384161720055e-01, +8.207224042595236e-01, +8.230952011363564e-01,
+8.254567363530231e-01, +8.278059715784122e-01, +8.301428451410482e-01, +8.324682688387346e-01,
+8.347821132094333e-01, +8.370832131533167e-01, +8.393715063470556e-01, +8.416480314488108e-01,
+8.439127501937738e-01, +8.461645428100565e-01, +8.484032850727410e-01, +8.506298550754564e-01,
+8.528442051510350e-01, +8.550453592633493e-01, +8.572332837070840e-01, +8.594088830061699e-01,
+8.615720389795806e-01, +8.637216156780773e-01, +8.658575289268042e-01, +8.679807503377460e-01,
+8.700913260411943e-01, +8.721883611259660e-01, +8.742716585927360e-01, +8.763417616681772e-01,
+8.783992457627015e-01, +8.804446862867205e-01, +8.824720518946858e-01, +8.844895714000796e-01,
+8.864924067856547e-01, +8.884810495155143e-01, +8.904559910537616e-01, +8.924176927432972e-01,
+8.943659231393618e-01, +8.962997945931150e-01, +8.982192307568165e-01, +9.001249598283012e-01,
+9.020168984242400e-01, +9.038941561917321e-01, +9.057567533900666e-01, +9.076056139480890e-01,
+9.094406951444953e-01, +9.112609887718295e-01, +9.130664170641334e-01, +9.148578383916375e-01,
+9.166352766163086e-01, +9.183979162084582e-01, +9.201457654565685e-01, +9.218796522413809e-01,
+9.235994678560167e-01, +9.253041759179184e-01, +9.269937646114531e-01, +9.286692422352107e-01,
+9.303305869999694e-01, +9.319767447096182e-01, +9.336076279434850e-01, +9.352241212055423e-01, +9.368261950246144e-01, +9.384129048732400e-01, +9.399842532824511e-01, +9.415411877758678e-01,
+9.430836933050435e-01, +9.446107932775473e-01, +9.461224797394725e-01, +9.476197145049868e-01,
+9.491025238239363e-01, +9.505699947545118e-01, +9.520221006942875e-01, +9.534597036603291e-01,
+9.548827789205158e-01, +9.562904165806793e-01, +9.576826318703395e-01, +9.590603607072891e-01,
+9.604235518327253e-01, +9.617711703240024e-01, +9.631031827400425e-01, +9.644205605875820e-01,
+9.657233714331878e-01, +9.670107721424878e-01, +9.682827690312492e-01, +9.695402205004198e-01,
+9.707831348559515e-01, +9.720106722663890e-01, +9.732228900099870e-01, +9.744207385215033e-01,
+9.756042291745447e-01, +9.767724349112544e-01, +9.779253363131216e-01, +9.790638238608151e-01,
+9.801879015797271e-01, +9.812966868607661e-01, +9.823902028722666e-01, +9.834693768739560e-01,
+9.845342107123233e-01, +9.855837812929384e-01, +9.866180804760872e-01, +9.876380187637696e-01,
+9.886436665180195e-01, +9.896342515143703e-01, +9.906098638997559e-01, +9.915714515450228e-01,
+9.925190128422767e-01, +9.934516032286224e-01, +9.943692859110803e-01, +9.952731289730088e-01,
+9.961631909904601e-01, +9.970385179500313e-01, +9.978990898252071e-01, +9.987458272559335e-01,
+9.995787919228785e-01, +1.000397182360297e+00, +1.001201041464802e+00, +1.001991256344717e+00,
+1.002767847497049e+00, +1.003529972103569e+00, +1.004277707367492e+00, +1.005012047094235e+00,
+1.005733043131263e+00, +1.006439806897506e+00, +1.007132401590545e+00, +1.007811842988376e+00,
+1.008478224880801e+00, +1.009130715556477e+00, +1.009769355086547e+00, +1.010395057449511e+00,
+1.011007859994881e+00, +1.011606924689628e+00, +1.012192316076366e+00, +1.012765000430642e+00,
+1.013325049263210e+00, +1.013871638199171e+00, +1.014404818816957e+00, +1.014925520781073e+00,
+1.015433826923486e+00, +1.015928972967257e+00, +1.016411066364942e+00, +1.016881083871244e+00,
+1.017339099302786e+00, +1.017784285061100e+00, +1.018216717878600e+00, +1.018637379379835e+00,
+1.019046362683200e+00, +1.019442870837515e+00, +1.019826975825003e+00, +1.020199618679535e+00,
+1.020560853084751e+00, +1.020909847360410e+00, +1.021246684563866e+00, +1.021572361827679e+00,
+1.021886975685526e+00, +1.022189721024281e+00, +1.022480682703848e+00, +1.022760836860466e+00,
+1.023030287959746e+00, +1.023288268237906e+00, +1.023534888355832e+00, +1.023771136381063e+00,
+1.023997104737320e+00, +1.024211990514308e+00, +1.024415875333744e+00, +1.024609726504572e+00,
+1.024793642571832e+00, +1.024966852210664e+00, +1.025129444345768e+00, +1.025282368545871e+00,
+1.025425713582690e+00, +1.025558707847599e+00, +1.025681449959415e+00, +1.025794908567991e+00,
+1.025899187425550e+00, +1.025993525806572e+00, +1.026078042674063e+00, +1.026153736073730e+00,
+1.026220725639502e+00, +1.026278251222302e+00, +1.026326400217514e+00, +1.026366109298213e+00,
+1.026397475218959e+00, +1.026419755159132e+00, +1.026433063472609e+00, +1.026438369530571e+00,
+1.026435753513555e+00, +1.026424407896423e+00, +1.026404414325658e+00, +1.026376745497183e+00,
+1.026341529591056e+00, +1.026298047712657e+00, +1.026246413164014e+00, +1.026187571341079e+00,
+1.026121618202469e+00, +1.026047802601159e+00, +1.025966259113017e+00, +1.025878005857533e+00,
+1.025783163725466e+00, +1.025680955378961e+00, +1.025571464026533e+00, +1.025455636062312e+00,
+1.025333580354341e+00, +1.025204567428491e+00, +1.025068712226252e+00, +1.024926972279997e+00,
+1.024779424810995e+00, +1.024625269765159e+00, +1.024464619501421e+00, +1.024298498053110e+00,
+1.024127035189888e+00, +1.023949464567318e+00, +1.023765888955297e+00, +1.023577282345944e+00,
+1.023383771098535e+00, +1.023184632809730e+00, +1.022979990313458e+00, +1.022770810566653e+00,
+1.022557186135377e+00, +1.022338337695996e+00, +1.022114387574851e+00, +1.021886357834243e+00,
+1.021654354624439e+00, +1.021417567672874e+00, +1.021176074694516e+00, +1.020930844259280e+00,
+1.020681994464816e+00, +1.020428792450358e+00, +1.020171385028845e+00, +1.019910795563718e+00,
+1.019647124626418e+00, +1.019379551852598e+00, +1.019108176121263e+00, +1.018834017611273e+00,
+1.018557222865231e+00, +1.018277062013127e+00, +1.017993662628480e+00, +1.017708008483692e+00,
+1.017420178311649e+00, +1.017129349129694e+00, +1.016835630605444e+00, +1.016540064652456e+00,
+1.016242782169058e+00, +1.015943000562828e+00, +1.015640812550351e+00, +1.015337187460531e+00,
+1.015032211107897e+00, +1.014725089526348e+00, +1.014415991238242e+00, +1.014106040189062e+00,
+1.013795318041038e+00, +1.013482869234993e+00, +1.013168810057302e+00, +1.012854327596526e+00,
+1.012539547722209e+00, +1.012223533569952e+00, +1.011906384233988e+00, +1.011589234882839e+00,
+1.011272160610958e+00, +1.010954179972212e+00, +1.010635428864728e+00, +1.010317161995333e+00,
+1.009999611212465e+00, +1.009681947024951e+00, +1.009363573682324e+00, +1.009044325068028e+00,
+1.008727479269698e+00, +1.008418957730006e+00, +1.008106691995008e+00, +1.007763945845098e+00,
+1.007443035427814e+00, +1.007268321305087e+00, +1.007188313360058e+00, +1.006980582693088e+00,
+1.006607718427208e+00, +1.006220813354843e+00, +1.005880191360173e+00, +1.005548147634276e+00,
+1.005208505985926e+00, +1.004870660907557e+00, +1.004538945715620e+00, +1.004211548979837e+00,
+1.003887307826199e+00, +1.003565998252022e+00, +1.003247928753973e+00, +1.002933862630671e+00,
+1.002623715011975e+00, +1.002316573551338e+00, +1.002012456628431e+00, +1.001712307918128e+00,
+1.001416118705407e+00, +1.001122929266782e+00, +1.000832736946922e+00, +1.000546495806722e+00, +1.000264200804259e+00, +9.999848879324513e-01, +9.997085530666436e-01, +9.994361518334981e-01,
+9.991676778789439e-01, +9.989021630276661e-01, +9.986396025239043e-01, +9.983809548686250e-01,
+9.981262129964925e-01, +9.978744044020248e-01, +9.976255227380388e-01, +9.973805277659410e-01,
+9.971394126637049e-01, +9.969012039797195e-01, +9.966658933095314e-01, +9.964344374346332e-01,
+9.962068296990753e-01, +9.959820998119757e-01, +9.957602381261346e-01, +9.955421958422669e-01,
+9.953279652235180e-01, +9.951165794460692e-01, +9.949080290979398e-01, +9.947032622296315e-01,
+9.945022689695088e-01, +9.943040815876473e-01, +9.941086912851109e-01, +9.939170480434331e-01,
+9.937291405239381e-01, +9.935439962464298e-01, +9.933616056210112e-01, +9.931829218182915e-01,
+9.930079338821240e-01, +9.928356667510468e-01, +9.926661086172732e-01, +9.925002110373203e-01,
+9.923379640068731e-01, +9.921783957486814e-01, +9.920214929714285e-01, +9.918682011153984e-01,
+9.917185094982703e-01, +9.915714511212392e-01, +9.914270132578689e-01, +9.912861375369392e-01,
+9.911488111762619e-01, +9.910140670228395e-01, +9.908818932025615e-01, +9.907532330064230e-01,
+9.906280727376265e-01, +9.905054418160028e-01, +9.903853272281469e-01, +9.902686735168059e-01,
+9.901554680972392e-01, +9.900447411363362e-01, +9.899364775767996e-01, +9.898316173651273e-01,
+9.897301484429727e-01, +9.896311064950427e-01, +9.895344764114521e-01, +9.894411924684042e-01,
+9.893512408407925e-01, +9.892636595590807e-01, +9.891784350480575e-01, +9.890965020344753e-01,
+9.890178449763316e-01, +9.889414982259392e-01, +9.888674481881904e-01, +9.887966331854001e-01,
+9.887290383256132e-01, +9.886636955343167e-01, +9.886005893838439e-01, +9.885406571815547e-01,
+9.884838850803949e-01, +9.884293079255704e-01, +9.883769097708243e-01, +9.883276240055705e-01,
+9.882814356355465e-01, +9.882373812607220e-01, +9.881954463086439e-01, +9.881565649335834e-01,
+9.881207205644380e-01, +9.880869460773882e-01, +9.880552270464479e-01, +9.880265015932943e-01,
+9.880007538329854e-01, +9.879770139187286e-01, +9.879552655810734e-01, +9.879364462155417e-01,
+9.879205412712961e-01, +9.879065840760606e-01, +9.878945575956836e-01, +9.878853946070033e-01,
+9.878790797412935e-01, +9.878746493979034e-01, +9.878720878008731e-01, +9.878723269672057e-01,
+9.878753499522159e-01, +9.878801909638151e-01, +9.878868346314371e-01, +9.878962158879177e-01,
+9.879083181018892e-01, +9.879221731254697e-01, +9.879377642109470e-01, +9.879560260604132e-01,
+9.879769430009732e-01, +9.879995488718708e-01, +9.880238263660437e-01, +9.880507071322525e-01,
+9.880801746803725e-01, +9.881112643600719e-01, +9.881439599864610e-01, +9.881791937541983e-01,
+9.882169477221827e-01, +9.882562539746005e-01, +9.882970966792446e-01, +9.883404119215459e-01,
+9.883861819949297e-01, +9.884334355024147e-01, +9.884821553014376e-01, +9.885332784979397e-01,
+9.885867883714737e-01, +9.886417143055318e-01, +9.886980383296721e-01, +9.887566952073135e-01,
+9.888176678250945e-01, +9.888799871475064e-01, +9.889436358294569e-01, +9.890095481884937e-01,
+9.890777059811048e-01, +9.891471384894399e-01, +9.892178286528791e-01, +9.892907129712469e-01,
+9.893657732439902e-01, +9.894420366217603e-01, +9.895194850020712e-01, +9.895990550550585e-01,
+9.896807293945533e-01, +9.897635364818964e-01, +9.898474573387898e-01, +9.899334256730253e-01,
+9.900214239316713e-01, +9.901104832002432e-01, +9.902005849312988e-01, +9.902926609798792e-01,
+9.903866926546286e-01, +9.904817107571495e-01, +9.905776973966729e-01, +9.906755858999687e-01,
+9.907753570146928e-01, +9.908760390079692e-01, +9.909776136318341e-01, +9.910810160568396e-01,
+9.911862274458985e-01, +9.912922749689899e-01, +9.913991395528559e-01, +9.915077559112314e-01,
+9.916181054602099e-01, +9.917292162715997e-01, +9.918410691314309e-01, +9.919545975686356e-01,
+9.920697824274926e-01, +9.921856518839308e-01, +9.923021872317422e-01, +9.924203228138201e-01,
+9.925400387231874e-01, +9.926603609120486e-01, +9.927812708898945e-01, +9.929037056012008e-01,
+9.930276450366935e-01, +9.931521123405382e-01, +9.932770885572193e-01, +9.934035125599263e-01,
+9.935313647282036e-01, +9.936596669792295e-01, +9.937883997783191e-01, +9.939185021388579e-01,
+9.940499546103031e-01, +9.941817792665538e-01, +9.943139564620480e-01, +9.944474248344178e-01,
+9.945821646067609e-01, +9.947171976098198e-01, +9.948525044676624e-01, +9.949890245456261e-01,
+9.951267376194471e-01, +9.952646639522682e-01, +9.954027843196593e-01, +9.955420399208714e-01,
+9.956824104013806e-01, +9.958229139376651e-01, +9.959635310797721e-01, +9.961052046849509e-01,
+9.962479146150113e-01, +9.963906777760744e-01, +9.965334742957022e-01, +9.966772475112751e-01,
+9.968219775371954e-01, +9.969666812541205e-01, +9.971113385049125e-01, +9.972568921184832e-01,
+9.974033222384361e-01, +9.975496462958124e-01, +9.976958440808505e-01, +9.978428577721199e-01,
+9.979906675056988e-01, +9.981382913210521e-01, +9.982857084011294e-01, +9.984338592613343e-01,
+9.985827266667445e-01, +9.987313348873088e-01, +9.988796523949821e-01, +9.990285947364306e-01,
+9.991781850354060e-01, +9.993275431378141e-01, +9.994764863008044e-01, +9.996255698609559e-01,
+9.997753812452573e-01, +9.999265078806980e-01, +1.000073497520791e+00, +1.000224669219663e+00,
+1.000374570389487e+00, +1.000523787909342e+00, +1.000672909364706e+00, +1.000822490899924e+00,
+1.000972349809292e+00, +1.001121604191588e+00, +1.001270276668384e+00, +1.001419284847822e+00,
+1.001568597382930e+00, +1.001717235441161e+00, +1.001865181102795e+00, +1.002013378040221e+00, +1.002161805549920e+00, +1.002309477314975e+00, +1.002456372686098e+00, +1.002603438051255e+00,
+1.002750653220044e+00, +1.002897030034197e+00, +1.003042547763044e+00, +1.003188154489387e+00,
+1.003333829980590e+00, +1.003478584306210e+00, +1.003622396620552e+00, +1.003766216551067e+00,
+1.003910024058434e+00, +1.004052828034629e+00, +1.004194607298016e+00, +1.004336312014269e+00,
+1.004477922478776e+00, +1.004618447680436e+00, +1.004757866142788e+00, +1.004897127367124e+00,
+1.005036211788027e+00, +1.005174129339999e+00, +1.005310858606722e+00, +1.005447348229275e+00,
+1.005583578404365e+00, +1.005718559516336e+00, +1.005852270535212e+00, +1.005985660340410e+00,
+1.006118708775473e+00, +1.006250425365265e+00, +1.006380789350186e+00, +1.006510750945005e+00,
+1.006640290029854e+00, +1.006768414896740e+00, +1.006895104560895e+00, +1.007021310029137e+00,
+1.007147011697879e+00, +1.007271218063607e+00, +1.007393907701933e+00, +1.007516030573849e+00,
+1.007637567482182e+00, +1.007757528772291e+00, +1.007875893086371e+00, +1.007993608628118e+00,
+1.008110655922241e+00, +1.008226046614216e+00, +1.008339760080372e+00, +1.008452744553207e+00,
+1.008564979989454e+00, +1.008675477014256e+00, +1.008784215564761e+00, +1.008892145905632e+00,
+1.008999248092397e+00, +1.009104530964226e+00, +1.009207974189350e+00, +1.009310529294049e+00,
+1.009412177137242e+00, +1.009511926856510e+00, +1.009609757696156e+00, +1.009706620067364e+00,
+1.009802495163920e+00, +1.009896393940608e+00, +1.009988296223056e+00, +1.010079151649770e+00,
+1.010168940724606e+00, +1.010256673981368e+00, +1.010342332426681e+00, +1.010426868280804e+00,
+1.010510261597171e+00, +1.010591519577714e+00, +1.010670623429633e+00, +1.010748529051234e+00,
+1.010825217388920e+00, +1.010899693712359e+00, +1.010971938438940e+00, +1.011042907905867e+00,
+1.011112584131909e+00, +1.011179974034890e+00, +1.011245058042453e+00, +1.011308790830468e+00,
+1.011371154144579e+00, +1.011431156159085e+00, +1.011488778523215e+00, +1.011544976893053e+00,
+1.011599732403024e+00, +1.011652051214875e+00, +1.011701915457469e+00, +1.011750283661017e+00,
+1.011797137846246e+00, +1.011841483052088e+00, +1.011883300488277e+00, +1.011923548068040e+00,
+1.011962209203063e+00, +1.011998292246508e+00, +1.012031778271071e+00, +1.012063621581602e+00,
+1.012093805289032e+00, +1.012121340917460e+00, +1.012146211141323e+00, +1.012169370028522e+00,
+1.012190799612422e+00, +1.012209509774826e+00, +1.012225484155619e+00, +1.012239680217839e+00,
+1.012252080651208e+00, +1.012261693287047e+00, +1.012268500924551e+00, +1.012273461473019e+00,
+1.012276559127865e+00, +1.012276804202582e+00, +1.012274179329824e+00, +1.012269639581679e+00,
+1.012263168844414e+00, +1.012253779830287e+00, +1.012241456954404e+00, +1.012227156156870e+00,
+1.012210860152664e+00, +1.012191578747083e+00, +1.012169297374220e+00, +1.012144976732521e+00,
+1.012118600449884e+00, +1.012089175409008e+00, +1.012056685871527e+00, +1.012022093240567e+00,
+1.011985383173782e+00, +1.011945565763788e+00, +1.011902624776521e+00, +1.011857517445845e+00,
+1.011810229432951e+00, +1.011759775156899e+00, +1.011706140218275e+00, +1.011650280893217e+00,
+1.011592181601430e+00, +1.011530855573595e+00, +1.011466289818154e+00, +1.011399444375047e+00,
+1.011330304370585e+00, +1.011257880752579e+00, +1.011182159707019e+00, +1.011104101993156e+00,
+1.011023694799342e+00, +1.010939952356944e+00, +1.010852860445419e+00, +1.010763375755366e+00,
+1.010671485695127e+00, +1.010576209154936e+00, +1.010477533938561e+00, +1.010376415807060e+00,
+1.010272840810986e+00, +1.010165826445586e+00, +1.010055362601328e+00, +1.009942410277932e+00,
+1.009826955798404e+00, +1.009708012131765e+00, +1.009585568925891e+00, +1.009460591235290e+00,
+1.009333067695896e+00, +1.009202011723081e+00, +1.009067412134881e+00, +1.008930231993351e+00,
+1.008790461334113e+00, +1.008647118373303e+00, +1.008500193172393e+00, +1.008350646299744e+00,
+1.008198467170796e+00, +1.008042675572153e+00, +1.007883264022713e+00, +1.007721196075366e+00,
+1.007556460824166e+00, +1.007388074720253e+00, +1.007216031301935e+00, +1.007041299348476e+00,
+1.006863869718207e+00, +1.006682757156533e+00, +1.006497954572682e+00, +1.006310431304003e+00,
+1.006120180721864e+00, +1.005926221917719e+00, +1.005728547752975e+00, +1.005528123164754e+00,
+1.005324942594936e+00, +1.005118031770913e+00, +1.004907385380564e+00, +1.004693965144879e+00,
+1.004477765157871e+00, +1.004257813991292e+00, +1.004034108834670e+00, +1.003807613226332e+00,
+1.003578321293819e+00, +1.003345260144698e+00, +1.003108428405854e+00, +1.002868793771428e+00,
+1.002626351889911e+00, +1.002380128823734e+00, +1.002130123378852e+00, +1.001877304672605e+00,
+1.001621670689409e+00, +1.001362250678481e+00, +1.001099043542970e+00, +1.000833015458249e+00,
+1.000564166270619e+00, +1.000291531899435e+00, +1.000015112295927e+00, +9.997358689793686e-01,
+9.994538026878185e-01, +9.991679559269192e-01, +9.988783302889642e-01, +9.985858838509232e-01,
+9.982906190683758e-01, +9.979915852192069e-01, +9.976887805584920e-01, +9.973831508544119e-01,
+9.970747197397686e-01, +9.967625861356061e-01, +9.964466729061831e-01, +9.961277448216609e-01,
+9.958061137774057e-01, +9.954815632236269e-01, +9.951529474418550e-01, +9.948184819816882e-01,
+9.944824644674363e-01, +9.941541831614942e-01, +9.938176459160070e-01, +9.934356569036324e-01,
+9.930678080460911e-01, +9.928629897063861e-01, +9.920151198036643e-01, +9.914646039976289e-01,
+9.910580786225461e-01, +9.906661670997940e-01, +9.902352352689523e-01, +9.897945722571376e-01, +9.893565433952757e-01, +9.889131869680553e-01, +9.884611897966706e-01, +9.880027035297985e-01,
+9.875383274623817e-01, +9.870669099030384e-01, +9.865881954382273e-01, +9.861028679251979e-01,
+9.856108490726415e-01, +9.851112908058255e-01, +9.846041087188396e-01, +9.840899793789135e-01,
+9.835687475691413e-01, +9.830394337851477e-01, +9.825019919189980e-01, +9.819573015637479e-01,
+9.814052410296346e-01, +9.808446911100914e-01, +9.802755449178991e-01, +9.796987091039431e-01,
+9.791141208337264e-01, +9.785207439579823e-01, +9.779184677896273e-01, +9.773081082723492e-01,
+9.766895349125904e-01, +9.760616740194450e-01, +9.754244530504396e-01, +9.747787966745514e-01,
+9.741245958128935e-01, +9.734607083730100e-01, +9.727870063627455e-01, +9.721043782586516e-01,
+9.714127339971064e-01, +9.707110047334955e-01, +9.699991325531057e-01, +9.692780666596675e-01,
+9.685476898124051e-01, +9.678068213341131e-01, +9.670553568518259e-01, +9.662942694162036e-01,
+9.655234943873926e-01, +9.647419268609606e-01, +9.639494801526087e-01, +9.631470850364502e-01,
+9.623346145023939e-01, +9.615108868233452e-01, +9.606758082762421e-01, +9.598303722906686e-01,
+9.589744979972803e-01, +9.581070287387355e-01, +9.572278607616873e-01, +9.563379453266456e-01,
+9.554372064329766e-01, +9.545245399941635e-01, +9.535998779685757e-01, +9.526641870716750e-01,
+9.517173763138073e-01, +9.507582991859514e-01, +9.497868942084339e-01, +9.488041830577462e-01,
+9.478100888078225e-01, +9.468034353946915e-01, +9.457841175975197e-01, +9.447531037006662e-01,
+9.437103240778304e-01, +9.426546695512183e-01, +9.415860667090934e-01, +9.405054771915659e-01,
+9.394128066604807e-01, +9.383069072240268e-01, +9.371877218082764e-01, +9.360562830727714e-01,
+9.349125451819119e-01, +9.337553821450042e-01, +9.325847195259637e-01, +9.314015363873052e-01,
+9.302057763482381e-01, +9.289963473252155e-01, +9.277732047659371e-01, +9.265373496318979e-01,
+9.252887007804731e-01, +9.240260966323954e-01, +9.227494594741956e-01, +9.214597964334704e-01,
+9.201570566323493e-01, +9.188401295674291e-01, +9.175089523148627e-01, +9.161645099567182e-01,
+9.148067377557750e-01, +9.134345222358713e-01, +9.120478227747287e-01, +9.106476709258303e-01,
+9.092340339068899e-01, +9.078058138594686e-01, +9.063629680720371e-01, +9.049065091670875e-01,
+9.034363889945074e-01, +9.019514987490371e-01, +9.004517876609461e-01, +8.989382633487150e-01,
+8.974108808873397e-01, +8.958685426521079e-01, +8.943112058133614e-01, +8.927398817643528e-01,
+8.911545160393349e-01, +8.895539896413210e-01, +8.879382683346716e-01, +8.863084022826353e-01,
+8.846643687806315e-01, +8.830050715882986e-01, +8.813304835012828e-01, +8.796416466159852e-01,
+8.779385355821995e-01, +8.762200577776852e-01, +8.744861938961381e-01, +8.727379973888942e-01,
+8.709754415944566e-01, +8.691974194090119e-01, +8.674038889082810e-01, +8.655958747817611e-01,
+8.637733542642025e-01, +8.619352566808824e-01, +8.600815675121538e-01, +8.582133280699462e-01,
+8.563305243162549e-01, +8.544320869868485e-01, +8.525180054943617e-01, +8.505893287555129e-01,
+8.486460694867924e-01, +8.466872027543964e-01, +8.447127297770400e-01, +8.427236779556280e-01,
+8.407200377231397e-01, +8.387007637143141e-01, +8.366658636487900e-01, +8.346163977407922e-01,
+8.325523768291012e-01, +8.304727614321823e-01, +8.283775428310826e-01, +8.262677444285360e-01,
+8.241433705663960e-01, +8.220034073785601e-01, +8.198478927378535e-01, +8.176779138137669e-01,
+8.154934833957916e-01, +8.132935411236417e-01, +8.110781042287996e-01, +8.088482692756163e-01,
+8.066040997239516e-01, +8.043446229495154e-01, +8.020698771287099e-01, +7.997809105802602e-01,
+7.974777203962242e-01, +7.951592558139738e-01, +7.928255537687610e-01, +7.904777397235739e-01,
+7.881159103734087e-01, +7.857391245481645e-01, +7.833473203720548e-01, +7.809413293257642e-01,
+7.785212684545030e-01, +7.760865347057494e-01, +7.736372881515523e-01, +7.711744403395434e-01,
+7.686979147929021e-01, +7.662066652369949e-01, +7.637008160854790e-01, +7.611816536232692e-01,
+7.586492915456966e-01, +7.561026668755407e-01, +7.535417845985437e-01, +7.509677253608117e-01,
+7.483805701761127e-01, +7.457793976748408e-01, +7.431642988739133e-01, +7.405363749469933e-01,
+7.378956733994703e-01, +7.352411918301537e-01, +7.325730245135402e-01, +7.298923618910717e-01,
+7.271993327965579e-01, +7.244930008228270e-01, +7.217734421626190e-01, +7.190417491579090e-01,
+7.162980305440977e-01, +7.135414111237446e-01, +7.107720243445051e-01, +7.079910089690906e-01,
+7.051984432364411e-01, +7.023933467824965e-01, +6.995757887359807e-01, +6.967468908559541e-01,
+6.939067884621855e-01, +6.910546259244099e-01, +6.881904964956265e-01, +6.853154435187701e-01,
+6.824295471401947e-01, +6.795319276046549e-01, +6.766227310314311e-01, +6.737031265887281e-01,
+6.707732585543063e-01, +6.678322438578169e-01, +6.648801659515325e-01, +6.619180818581655e-01,
+6.589461833521619e-01, +6.559637902883004e-01, +6.529710426495826e-01, +6.499688969386536e-01,
+6.469573547411541e-01, +6.439354791990427e-01, +6.409035288603075e-01, +6.378629377753962e-01,
+6.348137437689479e-01, +6.317545972986219e-01, +6.286855280775698e-01, +6.256079561741540e-01,
+6.225221695832768e-01, +6.194273058858271e-01, +6.163234711851669e-01, +6.132117491461520e-01,
+6.100922809170846e-01, +6.069642650584504e-01, +6.038278760531646e-01, +6.006842631336996e-01,
+5.975336059686350e-01, +5.943751066904921e-01, +5.912087588215279e-01, +5.880353659529035e-01,
+5.848551837605717e-01, +5.816678990293079e-01, +5.784735261655043e-01, +5.752724325989095e-01, +5.720650011081139e-01, +5.688516144717076e-01, +5.656282061898663e-01, +5.624031153715552e-01,
+5.591715220043816e-01, +5.559338788791430e-01, +5.526906296747757e-01, +5.494421930334449e-01,
+5.461886187066721e-01, +5.429296335729603e-01, +5.396656057073835e-01, +5.363974990167699e-01,
+5.331253296256703e-01, +5.298481989939661e-01, +5.265662376610855e-01, +5.232805923025862e-01,
+5.199914838946222e-01, +5.166982164701727e-01, +5.134010079652577e-01, +5.101009713211846e-01,
+5.067981651483114e-01, +5.034916218473716e-01, +5.001816735886107e-01, +4.968699258080247e-01,
+4.935565059779667e-01, +4.902400722563398e-01, +4.869206550924504e-01, +4.835996679580279e-01,
+4.802774381791762e-01, +4.769531954412434e-01, +4.736270399539189e-01, +4.702999408508168e-01,
+4.669720784607305e-01, +4.636428606356920e-01, +4.603125364998776e-01, +4.569821724233974e-01,
+4.536519115376573e-01, +4.503209953849403e-01, +4.469896264032189e-01, +4.436589520558524e-01,
+4.403291677455351e-01, +4.369995283852560e-01, +4.336702110092919e-01, +4.303423032287362e-01,
+4.270159791313206e-01, +4.236905139305585e-01, +4.203661194857656e-01, +4.170439288466521e-01,
+4.137241358370239e-01, +4.104060097514602e-01, +4.070897555089031e-01, +4.037764981593507e-01,
+4.004664107465299e-01, +3.971587296380776e-01, +3.938536636599421e-01, +3.905523798917074e-01,
+3.872550507871729e-01, +3.839608678121244e-01, +3.806700467713708e-01, +3.773838145590149e-01,
+3.741023650337649e-01, +3.708248707285573e-01, +3.675515053070522e-01, +3.642834353302138e-01,
+3.610208992409523e-01, +3.577632145496031e-01, +3.545105744959446e-01, +3.512640341612003e-01,
+3.480236943438447e-01, +3.447887254766508e-01, +3.415594491122957e-01, +3.383373171891836e-01,
+3.351225758795442e-01, +3.319142610233081e-01, +3.287122759768420e-01, +3.255174149216469e-01,
+3.223300837378850e-01, +3.191502945992604e-01, +3.159783340225497e-01, +3.128147301790672e-01,
+3.096594366002203e-01, +3.065118829951374e-01, +3.033724163096057e-01, +3.002422624347096e-01,
+2.971215837581699e-01, +2.940094940665994e-01, +2.909060968951387e-01, +2.878124834032541e-01,
+2.847288683996017e-01, +2.816545966307170e-01, +2.785898831431842e-01, +2.755357983580602e-01,
+2.724924992373132e-01, +2.694592444601876e-01, +2.664361954971699e-01, +2.634244029834191e-01,
+2.604240268886862e-01, +2.574343504718905e-01, +2.544555518459914e-01, +2.514886909115458e-01,
+2.485339317782194e-01, +2.455905549948218e-01, +2.426587307354937e-01, +2.397395063360460e-01,
+2.368330357314138e-01, +2.339385917103926e-01, +2.310563352467077e-01, +2.281873038963940e-01,
+2.253316454409216e-01, +2.224886282863191e-01, +2.196584073367104e-01, +2.168420127437019e-01,
+2.140395864128403e-01, +2.112503945704412e-01, +2.084745870335015e-01, +2.057131843889434e-01,
+2.029663241873446e-01, +2.002332724591127e-01, +1.975141729701546e-01, +1.948100372792062e-01,
+1.921209969418309e-01, +1.894463139881238e-01, +1.867861307455174e-01, +1.841414579810843e-01,
+1.815124204803960e-01, +1.788982688766118e-01, +1.762991374092110e-01, +1.737160334143236e-01,
+1.711490837149136e-01, +1.685975427109672e-01, +1.660615404766350e-01, +1.635420747284597e-01,
+1.610392647455030e-01, +1.585523606699242e-01, +1.560814882692011e-01, +1.536276387455411e-01,
+1.511909278215991e-01, +1.487706056453130e-01, +1.463667950599714e-01, +1.439804830586271e-01,
+1.416117840041388e-01, +1.392599476606263e-01, +1.369250939274206e-01, +1.346082041944543e-01,
+1.323093893293406e-01, +1.300278987264480e-01, +1.277638491717384e-01, +1.255182155111709e-01,
+1.232911060463692e-01, +1.210817706513393e-01, +1.188903216873087e-01, +1.167177275528689e-01,
+1.145640946398680e-01, +1.124286726877977e-01, +1.103115703218860e-01, +1.082137493008784e-01,
+1.061353122093495e-01, +1.040755094642518e-01, +1.020344462904939e-01, +1.000130754353283e-01,
+9.801149609996949e-02, +9.602895962715033e-02, +9.406556557413213e-02, +9.212225718017839e-02,
+9.019912955294541e-02, +8.829543394466111e-02, +8.641126446867767e-02, +8.454755261333674e-02,
+8.270438757849537e-02, +8.088102201374671e-02, +7.907754246044904e-02, +7.729486433686708e-02,
+7.553307095292439e-02, +7.379141728818767e-02, +7.206998099643694e-02, +7.036965903891536e-02,
+6.869052561376873e-02, +6.703183558090599e-02, +6.539365708843246e-02, +6.377686761792192e-02,
+6.218153160076208e-02, +6.060690353708294e-02, +5.905303920289844e-02, +5.752079270262547e-02,
+5.601021629546108e-02, +5.452056276526779e-02, +5.305187265543028e-02, +5.160497192770200e-02,
+5.017990065949564e-02, +4.877591488398978e-02, +4.739303765878024e-02, +4.603205697395506e-02,
+4.469299727922284e-02, +4.337512126408456e-02, +4.207843336193631e-02, +4.080367800167834e-02,
+3.955086170148164e-02, +3.831925359021936e-02, +3.710883802024247e-02, +3.592031377191350e-02,
+3.475367083924110e-02, +3.360819061792393e-02, +3.248382426594506e-02, +3.138119240391853e-02,
+3.030027537135876e-02, +2.924041340892334e-02, +2.820153617857359e-02, +2.718416076819826e-02,
+2.618823091914950e-02, +2.521312012928253e-02, +2.425872983336824e-02, +2.332548569166988e-02,
+2.241332520509764e-02, +2.152170070657781e-02, +2.065047207339204e-02, +1.979990274080047e-02,
+1.896992105664513e-02, +1.816012507709582e-02, +1.737032543754079e-02, +1.660053693426305e-02,
+1.585068068878849e-02, +1.512059554489944e-02, +1.441002712765956e-02, +1.371861264850595e-02,
+1.304629624757017e-02, +1.239334766429038e-02, +1.175941174949483e-02, +1.114348079271000e-02,
+1.054549096241532e-02, +9.966369456231951e-03, +9.405876078723861e-03, +8.862485552559351e-03, +8.334801852513261e-03, +7.821914540064593e-03, +7.329085750247891e-03, +6.866427280374203e-03,
+6.407912160580299e-03, +5.896299968476348e-03, +5.431884551945897e-03, +5.251971150005845e-03,
+4.914753459788713e-03, +3.326211257672788e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+8.000000000000000e+00, +7.821914540064593e+00, +7.329085750247891e+00, +6.866427280374203e+00,
+6.000000000000000e+00, +5.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,

8 Bibliography

[1] 3GPP, "Codec for Enhanced Voice Services (EVS); Detailed algorithmic description," [Online]. Available: http://www.3gpp.org/ftp/Specs/archive/26_series/26.445/26445-d00.zip.

[2] P. P. Julien Faure, "Delay-optimized overlap transform, coding/decoding weighting windows". US Patent US8847795, 28 06 2011.

[3] Geiger, Audio Coding based on integer transform, Ilmenau: https://www.db-thueringen.de/receive/dbt_mods_00010054, 2004.

**Claims**

1. An apparatus (130, 130A, 110) for encoding an audio signal comprising a plurality of frames, the apparatus comprising:

   a modulated lapped transform tool (131) for transforming a time domain, TD, representation of the audio signal, or a processed version thereof, into a frequency domain, FD, representation, the modulated lapped transform tool (131) being configured to perform a modulated lapped transform analysis using an analysis windowing function (40, 50, 70, 240) having a crossing portion (44, 64, 244) crossing a linear function (40', 240') in correspondence of at least four points (#1, #2, #3, #4); and
   a bitstream writer (137) configured to prepare a bitstream based on the FD representation of the audio signal or a processed version thereof,
   wherein the analysis windowing function is defined so as to be asymmetric,
   wherein the analysis windowing function (40, 240) is defined so as to be, in the crossing portion (44, 94, 244):

   greater than the linear function (40', 240') in a first interval (41,241) between a first crossing point (#1) and a second crossing point (#2);
   lower than the linear function (40', 240') in a second interval (42, 242) between the second crossing point (#2) and a third crossing point (#3);
   greater than the linear function (40', 240') in a third interval (43, 243) between the third crossing point (#3) and a fourth crossing point (#4),

   wherein the analysis windowing function is defined so that the absolute maximum value (41', 241') is in one of the first and third interval,
   **characterized in that** the linear function (40, 240) is a constant function with constant value 1.

2. The apparatus of claim 1,
   wherein the analysis windowing function (40, 240) is defined so that the maximum of the analysis windowing function (40, 240) is less than 25% greater than the value of the linear (40, 240) function at the same time instant.

3. The apparatus of claim 1, wherein the modulated lapped transform tool is configured to:
   scale time input buffers and/or cosine or sine values with values of the analysis windowing function (40, 50, 70, 240).

4. The apparatus of claim 3, wherein the modulated lapped transform tool is configured to use input buffers in the form of

$$t(n) = x(Z - N_F + n) \; for \;\; n = 0..2N_F - 1 - Z,$$

and

$$t(2N - Z + n) = 0 \quad \text{for} \quad n = 0..Z - 1$$

wherein $x(n)$ is a TD sample of the audio signal or a processed version of the audio signal at the time instant $n$, $N_F$ is the number of samples processed in one frame, and $Z$ is the number of leading zeros in modulated lapped transform window.

5. The apparatus of any of the preceding claims, wherein the modulated lapped transform tool (131) is configured to perform:

$$X(k) = \sqrt{\frac{2}{N_F}} \sum_{n=0}^{2N_F-1} w_N(n) \cdot t(n) \cos\left[\frac{\pi}{N_F}\left(n + \frac{1}{2} + \frac{N_F}{2}\right)\left(k + \frac{1}{2}\right)\right] \quad for \quad k = 0..N_F - 1$$

where $X(k)$ is the modulated lapped transform frequency value at a frequency index $k$, $n$ is the time instant, $W_N(n)$ is the analysis windowing function, $t(n)$ is a time input buffer, and $N_F$ is the number of samples processed in one frame.

6. An apparatus (140, 140A, 120) for decoding an audio signal, or a processed version thereof, defined in the frequency domain, FD, the apparatus comprising:

   a bitstream reader (141) configured to read a bitstream encoding the audio signal; and
   an inverse modulated lapped transform tool (147) configured to perform an inverse modulated lapped transform synthesis on the audio signal, or a processed version thereof, using a synthesis windowing function (90) having a crossing portion (94) crossing a linear function in correspondence of at least four points (#1, #2, #3, #4), wherein the synthesis windowing function (90, 290) is defined so as to be asymmetric, wherein the synthesis windowing function (90, 290) is defined so as to be, in the crossing portion (44, 94, 244):

   greater than the linear function in a first interval between a first crossing point and a second crossing point;
   lower than the linear function in a second interval between the second crossing point and a third crossing point;
   greater than the linear function in a third interval between the third crossing point and a fourth crossing point,

   wherein the synthesis windowing function is defined so that the absolute maximum value is in one of the first and third interval,

   **characterized in that** the linear function is a constant function with constant value 1.

7. The apparatus of claim 6,
   wherein the synthesis windowing function (90, 290) is defined so that the maximum of the synthesis windowing function (90, 290) is less than 25% greater than the value of the linear (90, 290) function at the same time instant.

8. The apparatus of claim 6 or 7, wherein the inverse modulated lapped transform tool (147) is configured to:
   scale values at a time domain aliasing buffer with values of the synthesis windowing function (90).

9. The apparatus of any of claims 6 to 8, wherein the inverse modulated lapped transform tool (147) is configured to generate a time domain, TD, signal representation in the form of

$$\hat{t}(n) = \sqrt{\frac{2}{N_F}} \sum_{k=0}^{N_F-1} \hat{X}(k) \cos\left[\frac{\pi}{N_F}\left(n + \frac{1}{2} + \frac{N_F}{2}\right)\left(k + \frac{1}{2}\right)\right] \quad for \quad n = 0..2N_F - 1$$

wherein $\hat{t}(n)$ is an aliasing buffer, $\hat{X}(k)$ is the audio signal or a processed version thereof, and $N_F$ is the number of samples for a TD frame.

10. The apparatus of any of claims 6 to 9, wherein the inverse modulated lapped transform tool (147) is configured to: perform a windowing (S162) of the time-aliased buffer.

11. The apparatus of any of claims 6 to 10, wherein the inverse modulated lapped transform tool (147) is configured to perform a windowing operation by performing:

$$\hat{t}(n) = w_N(2N - 1 - n) \cdot \hat{t}(n) \ for \ n = 0..2N_F - 1$$

12. The apparatus of any of claims 6 to 11, wherein the inverse modulated lapped transform tool (147) is configured to perform an overlap-and-add operation (S163).

13. The apparatus of any of claims 6 to 12, wherein the inverse modulated lapped transform tool (147) is configured to perform an overlap-and-add operation as:

$$\hat{x}(n) = \ mem\_ola\_add(n) + \ \hat{t}(Z + n) \ for \ n = 0..N_F - Z - 1$$

$$\hat{x}(n) = \hat{t}(Z + n) \ for \ n = N_F - Z..N_F - 1$$

$$mem\_ola\_add(n) = \hat{t}(N_F + Z + n) \ for \ n = 0..N_F - Z - 1$$

wherein $\hat{x}(n)$ is the output value, $\hat{t}(.)$ is a windowed time-aliasing buffer, and $N_F$ is the number of samples in one frame.

14. The apparatus of any of claims 6-13, wherein:
the synthesis windowing function (90) is defined so that, in the crossing portion (44, 244), a relative maximum value (43', 243') is in the first or third interval (41, 43, 241, 243) and a relative minimum value (42', 242') is in the second interval (42, 242).

15. The apparatus of any of claims 6-14, wherein:
the synthesis windowing function (90) is defined so as to present, in the crossing portion (44, 244, 94), a value greater than the linear function in an interval comprised of the 30% and 50% of two frames.

16. The apparatus of claim 14 or 15, wherein:
the synthesis windowing function (90) is defined so that the maximum of the synthesis windowing function (90) is less than 25% greater than the value of the linear function at the same time instant.

17. The apparatus of any of claims 14 to 16, wherein:
the synthesis windowing function (90) is defined so that the maximum (41', 241') of the synthesis windowing function (90) is less than 5% greater than the value of the linear function at the same time instant.

18. The apparatus of any of claims 14 to 17, wherein:
the synthesis windowing function (90) is defined so as to present a second numerical derivative between $-3*10^{-4}$ and $+3*10^{-4}$.

19. The apparatus of any of claims 6-18, wherein:
the synthesis windowing function (90) is defined so as to present a third numerical derivative between $-2*10^{-5}$ and $+2*10^{-5}$.

20. The apparatus of any of claims 6-19, further comprising:
a storage space (113) to store the values of the synthesis windowing function (90).

21. The apparatus of any of claims 6-20, wherein the inverse modulated lapped transform is an inverse modified discrete cosine transform, IMDCT, or inverse modified discrete sine transform, IMDST.

22. The apparatus of any of claims 1-5, wherein the modulated lapped transform is a modified discrete cosine transform, MDCT, or a modified discrete sine transform, MDST.

23. The apparatus of any of claims 6-21, wherein the synthesis windowing function (90) comprises a succession, in forward or backward order, formed by the following values with ±1% of tolerance:

-7.078546706512391e-04f, -2.098197727900724e-03f, -4.525198076002370e-03f, -8.233976327300612e-03f, -1.337713096257934e-02f, -1.999721557401502e-02f, -2.800909464274782e-02f, -3.721502082245055e-02f, -4.731768261606175e-02f, -5.794654834034055e-02f, -6.867606753531441e-02f, -7.904647440788692e-02f, -8.859705468085925e-02f, -9.688303623049199e-02f, -1.034961241263523e-01f, -1.080766457616878e-01f, -1.103242262600913e-01f, -1.099809851424550e-01f, -1.068172142230882e-01f, -1.006190418791648e-01f, -9.116452506492527e-02f, -7.820617483254730e-02f, -6.146688124166948e-02f, -4.063362855701623e-02f, -1.536329520788766e-02f, +1.470155068746303e-02f, +4.989736509080558e-02f, +9.050369257152079e-02f, +1.366911019414417e-01f, +1.884686389218322e-01f, +2.456456803467095e-01f, +3.077789078889820e-01f, +3.741642373060188e-01f, +4.438114799213576e-01f, +5.154735456539700e-01f, +5.876661722564289e-01f, +6.587619767809000e-01f, +7.270576699841359e-01f, +7.908752989295335e-01f, +8.486643364959733e-01f, +8.991320235484349e-01f, +9.413348145272842e-01f, +9.747634827941575e-01f, +9.994114730415857e-01f, +1.015760373791603e+00f, +1.024736164069697e+00f, +1.027634294456205e+00f, +1.025991493983836e+00f, +1.021427210603284e+00f, +1.015439859549357e+00f, +1.009366925499550e+00f, +1.003508162416449e+00f, +9.988898206257559e-01f, +9.953133902427869e-01f, +9.925943919208190e-01f, +9.905771957917731e-01f, +9.891371616557014e-01f, +9.881790747212391e-01f, +9.876249269174586e-01f, +9.874056275509585e-01f, +9.874524849192456e-01f, +9.876951134084213e-01f, +9.880640617030884e-01f, +9.884926873551375e-01f, +9.889230031022089e-01f, +9.893074965384659e-01f, +9.896146331889107e-01f, +9.898319269347060e-01f, +9.899693102025342e-01f, +9.900603352632121e-01f, +9.901575015155720e-01f, +9.903255289051605e-01f, +9.906303787150326e-01f, +9.911298894709990e-01f, +9.918665491182922e-01f, +9.928619727154252e-01f, +9.941156069136238e-01f, +9.956033775539884e-01f, +9.972793109558521e-01f, +9.990784840729244e-01f, +1.000922365901945e+00f, +1.002728111386909e+00f, +1.004416038098237e+00f, +1.005919224127911e+00f, +1.007189345025525e+00f, +1.008200146369426e+00f, +1.008949493525753e+00f, +1.009458241425143e+00f, +1.009769980817384e+00f, +1.009940336228694e+00f, +1.010039453539107e+00f, +1.010132323996401e+00f, +1.010272524848519e+00f, +1.010494354532353e+00f, +1.010808068774316e+00f, +1.011201071127927e+00f, +1.011641272406023e+00f, +1.012080125934687e+00f, +1.012458183122033e+00f, +1.012706955800289e+00f, +1.012755013843985e+00f, +1.012530134411619e+00f, +1.011962331100864e+00f, +1.010982135506986e+00f, +1.009512438049510e+00f, +1.007460860286395e+00f, +1.004708677491086e+00f, +1.001111413242302e+00f, +9.965041017623596e-01f, +9.907199995730845e-01f, +9.823765865983288e-01f, +9.708821747608998e-01f, +9.546732976073705e-01f, +9.321553861564006e-01f, +9.018003682081348e-01f, +8.623984077953557e-01f, +8.132817365236141e-01f, +7.544551974836834e-01f, +6.866580716267418e-01f, +6.113488038789190e-01f, +5.306181649316597e-01f, +4.471309850999502e-01f, +3.639114681156236e-01f, +2.841647033392408e-01f, +2.110209448747969e-01f, +1.472287968327703e-01f, +9.482665349502291e-02f, +5.482436608328477e-02f, +2.701461405056264e-02f, +9.996743588367519e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

24. The apparatus of any of claims 6-21, wherein the synthesis windowing function (90) comprises a succession, in forward or backward order, formed by the following values with ±1% of tolerance:

-4.619898752628163e-04f, -9.747166718929050e-04f, -1.664473096973725e-03f, -2.597106916737789e-03f, -3.806285163352241e-03f, -5.324608721716763e-03f, -7.175885277771099e-03f, -9.382480860899108e-03f, -1.195270300743193e-02f, -1.489528159506296e-02f, -1.820666399965468e-02f, -2.187570925786862e-02f, -2.588471937157619e-02f, -3.020862738245264e-02f, -3.481597793538342e-02f, -3.967067992672979e-02f, -4.472698045914417e-02f, -4.994225863256500e-02f, -5.526334794593565e-02f, -6.063717235243996e-02f, -6.600961519440657e-02f,  -7.131966266443390e-02f,  -7.651178225890490e-02f,  -8.152964005319532e-02f,
-8.631137544905677e-02f,  -9.080411291245728e-02f,  -9.495377758870335e-02f,  -9.870736514214426e-02f,
-1.020202684361974e-01f,  -1.048438825017798e-01f,  -1.071382314127799e-01f,  -1.088690135027248e-01f,
-1.099969655786929e-01f,  -1.104898474883336e-01f,  -1.103225838568563e-01f,  -1.094621746650760e-01f,
-1.078834293141886e-01f,  -1.055612509762041e-01f,  -1.024650162703341e-01f,  -9.857014566194629e-02f,
-9.384684920715425e-02f,  -8.826309993000785e-02f,  -8.178792716809512e-02f,  -7.438785600211463e-02f,
-6.602189797715241e-02f,  -5.665655641133161e-02f,  -4.624456893420224e-02f,  -3.474585776145929e-02f,
-2.211581608120528e-02f,  -8.310425696208936e-03f,  +6.717697635290676e-03f,  +2.300642061077823e-02f,
+4.060106462625085e-02f,  +5.953239090915557e-02f,  +7.983354189816511e-02f,  +1.015233140203748e-01f,
+1.246171387327525e-01f,  +1.491152519299797e-01f,  +1.750067399059861e-01f,  +2.022699854906251e-01f,
+2.308655379767671e-01f,  +2.607365124918583e-01f,  +2.918144694729168e-01f,  +3.240095704645023e-01f,
+3.572175180786021e-01f,  +3.913146885756875e-01f,  +4.261571642320424e-01f,  +4.615925445090212e-01f,
+4.974471592901086e-01f,  +5.335326819631583e-01f,  +5.696546730080154e-01f,  +6.056083823929643e-01f,
+6.411830842823245e-01f,  +6.761653499550255e-01f,  +7.103400549562944e-01f,  +7.434943718765665e-01f,
+7.754281892901473e-01f,  +8.059437233154637e-01f,  +8.348589373399948e-01f,  +8.620108336276733e-01f,
+8.872599706865123e-01f,  +9.104863121445679e-01f,  +9.315962496426278e-01f,  +9.505220861927248e-01f,
+9.672366712325431e-01f,  +9.817397501303696e-01f,  +9.940557180662704e-01f,  +1.004247514102417e+00f,
+1.012407428282884e+00f,           +1.018650990561848e+00f,           +1.023118841384460e+00f,
+1.025972450969440e+00f,           +1.027397523939210e+00f,           +1.027585830688143e+00f,
+1.026738673647482e+00f,           +1.025061777648234e+00f,           +1.022756514615106e+00f,
+1.020009139549275e+00f,           +1.016996499560845e+00f,           +1.013915946100629e+00f,
+1.011044869639164e+00f,           +1.007773858455400e+00f,           +1.004848753962734e+00f,
+1.002245009135684e+00f,  +9.999393169239009e-01f,  +9.979055415627330e-01f,  +9.961203379971326e-01f,
+9.945597525471822e-01f,  +9.932031606606762e-01f,  +9.920297273323891e-01f,  +9.910230654424902e-01f,
+9.901668953434221e-01f,  +9.894488374513719e-01f,  +9.888556356037892e-01f,  +9.883778520531268e-01f,
+9.880051626345804e-01f,  +9.877295459610343e-01f,  +9.875412739766566e-01f,  +9.874329809802893e-01f,
+9.873949921033299e-01f,  +9.874197049003676e-01f,  +9.874973205882319e-01f,  +9.876201238703241e-01f,
+9.877781920433015e-01f,  +9.879637979933339e-01f,  +9.881678007807095e-01f,  +9.883835200189653e-01f,
+9.886022219397892e-01f,  +9.888182771263505e-01f,  +9.890247977602895e-01f,  +9.892178658748239e-01f,
+9.893923680007577e-01f,  +9.895463342815009e-01f,  +9.896772011542693e-01f,  +9.897859195209235e-01f,
+9.898725363809847e-01f,  +9.899410789223559e-01f,  +9.899945557067980e-01f,  +9.900394023736973e-01f,
+9.900814722948890e-01f,  +9.901293790312005e-01f,  +9.901902265696609e-01f,  +9.902734448815004e-01f,
+9.903862280081246e-01f,  +9.905379830873822e-01f,  +9.907348826312993e-01f,  +9.909842592301273e-01f,
+9.912905118607647e-01f,  +9.916586940166509e-01f,  +9.920906151219310e-01f,  +9.925887208794144e-01f,
+9.931516528513824e-01f,  +9.937790866568735e-01f,  +9.944668184371617e-01f,  +9.952116634297566e-01f,
+9.960068616185641e-01f,  +9.968461329825753e-01f,  +9.977203369515556e-01f,  +9.986213520769593e-01f,
+9.995382582242990e-01f,           +1.000461955079660e+00f,           +1.001380551217109e+00f,           +
1.002284871786226e+00f,  +1.003163845364970e+00f,  +1.004009147462043e+00f,  +1.004811375053364e+00f,
+1.005563968008037e+00f,           +1.006259855360867e+00f,           +1.006895570408563e+00f,
+1.007466616298057e+00f,           +1.007972441990187e+00f,           +1.008411468616852e+00f,
+1.008786009787269e+00f,           +1.009097763850333e+00f,           +1.009351762546296e+00f,
+1.009552401900961e+00f,           +1.009707093778162e+00f,           +1.009822090220407e+00f,
+1.009906958448099e+00f,           +1.009969021400474e+00f,           +1.010017890428877e+00f,
+1.010060809299530e+00f,           +1.010106564965965e+00f,           +1.010161131093372e+00f,
+1.010231078494249e+00f,           +1.010319484524512e+00f,           +1.010430470494512e+00f,
+1.010564099281000e+00f,           +1.010721360243234e+00f,           +1.010899655674578e+00f,
+1.011096993993037e+00f,           +1.011308167670753e+00f,           +1.011529185153809e+00f,
+1.011753008569803e+00f,           +1.011973876511603e+00f,           +1.012182837094955e+00f,
+1.012373028737774e+00f,           +1.012535058602453e+00f,           +1.012660975529858e+00f,
+1.012740575296603e+00f,           +1.012765922449960e+00f,           +1.012726958954961e+00f,
+1.012615904116265e+00f,           +1.012422888521601e+00f,           +1.012140460211194e+00f,
+1.011758810583150e+00f,           +1.011269960947744e+00f,           +1.010663676735228e+00f,
+1.009930754807923e+00f,           +1.009058249873833e+00f,           +1.008034308295421e+00f,
+1.006843352506855e+00f,           +1.005470005637052e+00f,           +1.003894772403371e+00f,
+1.002098854400575e+00f,  +1.000060686758758e+00f,  +9.977600196406868e-01f,  +9.951746430061121e-
01f,  +9.922861082472264e-01f,  +9.890757868707590e-01f,  +9.847362453480265e-01f,  +9.798613526271561e-
01f,  +9.741378617337759e-01f,  +9.673331975559332e-01f,  +9.592539757044516e-01f,  +9.496984081652284e-
01f,  +9.384634163826711e-01f,  +9.253567968750328e-01f,  +9.101986790930605e-01f,  +8.928338316495705e-01f, +8.731437835983047e-01f, +8.510420440685049e-01f, +8.264839911291133e-01f, +7.994681492797084e-01f, +7.700431275216928e-01f, +7.383028603058783e-01f, +7.043814340356083e-01f, +6.684616478236647e-01f, +6.307755329382612e-01f, +5.915799587176216e-01f, +5.511703155400274e-01f, +5.098915423728179e-01f, +4.681017110047964e-01f, +4.261772971493010e-01f, +3.845172335531009e-01f, +3.435228672445613e-01f, +3.036004651973099e-01f, +2.651434678028531e-01f, +2.285283969438072e-01f, +1.941021906320984e-01f, +1.621735416384830e-01f, +1.330015240938615e-01f, +1.067840430193724e-01f, +8.365057236623041e-02f, +6.365188111381356e-02f, +4.676538412257621e-02f, +3.288072750732215e-02f, +2.183057564646270e-02f, +1.336381425803019e-02f, +6.758124889697787e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

25. The apparatus of any of claims 6-21, wherein the synthesis windowing function (90) comprises a succession, in forward or backward order, formed by the following values with $\pm 1\%$ of tolerance:

-3.613496418928369e-04f, -7.078546706512391e-04f, -1.074443637110903e-03f, -1.533478537964509e-03f, -2.098197727900724e-03f, -2.778420871815740e-03f, -3.584129920673041e-03f, -4.525198076002370e-03f, -5.609327243712055e-03f, -6.843234536105624e-03f, -8.233976327300612e-03f, -9.785314755557023e-03f, -1.149880303071551e-02f, -1.337713096257934e-02f, -1.542181679511618e-02f, -1.762979910961727e-02f, -1.999721557401502e-02f, -2.252080561390149e-02f, -2.519406300389030e-02f, -2.800909464274782e-02f, -3.095765092956728e-02f, -3.402996266948349e-02f, -3.721502082245055e-02f, -4.050053247568393e-02f, -4.387219218706189e-02f, -4.731768261606175e-02f, -5.082325342672667e-02f, -5.437166635159518e-02f, -5.794654834034055e-02f, -6.153426201732499e-02f, -6.511708163113709e-02f, -6.867606753531441e-02f, -7.219447805250771e-02f, -7.565695975592170e-02f, -7.904647440788692e-02f, -8.234442557322251e-02f, -8.553324579905185e-02f, -8.859705468085925e-02f, -9.152091100798199e-02f, -9.428847446755965e-02f, -9.688803623049198e-02f, -9.929123258537813e-02f, -1.015008467688577e-01f, -1.034961241263523e-01f, -1.052637003544443e-01f, -1.067939984687745e-01f, -1.080766457616878e-01f, -1.090997300590506e-01f, -1.098524491515805e-01f, -1.103242262600913e-01f, -1.105084619148789e-01f, -1.103977408741932e-01f, -1.099809851424550e-01f, -1.092492774392824e-01f, -1.081974227416502e-01f, -1.068172142230882e-01f, -1.050995803285455e-01f, -1.030360111111103e-01f, -1.006190418791648e-01f, -9.784120023411771e-02f, -9.469304216883027e-02f, -9.116452506492527e-02f, -8.724644532866996e-02f, -8.293043914044632e-02f, -7.820617483254730e-02f, -7.306142427456862e-02f, -6.748468182105991e-02f, -6.146688124166948e-02f, -5.499497258200362e-02f, -4.805444424454820e-02f, -4.063362855701623e-02f, -3.272045590229335e-02f, -2.430122582451853e-02f, -1.536329520788766e-02f, -5.891434269890659e-03f, +4.126595558583295e-03f, +1.470155068746303e-02f, +2.584738191459814e-02f, +3.757652772246801e-02f, +4.989736509080558e-02f, +6.282034030592902e-02f, +7.635397728566121e-02f, +9.050369257152079e-02f, +1.052747118478660e-01f, +1.206703467513333e-01f, +1.366911019414417e-01f, +1.533343890681390e-01f, +1.705954709184399e-01f, +1.884686389218322e-01f, +2.069449962574092e-01f, +2.260093000067393e-01f, +2.456456803467095e-01f, +2.658346019332584e-01f, +2.865543814049772e-01f, +3.077789078889820e-01f, +3.294769437072290e-01f, +3.516171481750350e-01f, +3.741642373060188e-01f, +3.970739591211551e-01f, +4.203043046885219e-01f, +4.438114799213576e-01f, +4.675442291623012e-01f, +4.914498631045615e-01f, +5.154735456539700e-01f, +5.395557644293222e-01f, +5.636399817032525e-01f, +5.876661722564289e-01f, +6.115695310143157e-01f, +6.352890592874099e-01f, +6.587619767809000e-01f, +6.819230974423550e-01f, +7.047092819314779e-01f, +7.270576699841359e-01f, +7.489068963384272e-01f, +7.701990187606995e-01f, +7.908752989295335e-01f, +8.108788692151807e-01f, +8.301579139160681e-01f, +8.486643364959733e-01f, +8.663548164329093e-01f, +8.831896853053627e-01f, +8.991320235484349e-01f, +9.141540563656075e-01f, +9.282282546151819e-01f, +9.413348145272842e-01f, +9.534619388400459e-01f, +9.646048250501910e-01f, +9.747634827941575e-01f, +9.839435385219192e-01f, +9.921529097154242e-01f, +9.994114730415857e-01f, +1.005746084650236e+00f, +1.011183971347815e+00f, +1.015760373791603e+00f, +1.019515072412387e+00f, +1.022490937034641e+00f, +1.024736164069697e+00f, +1.026304095700693e+00f, +1.027250978292214e+00f, +1.027634294456205e+00f, +1.027511063644843e+00f, +1.026942795115598e+00f, +1.025991493983836e+00f, +1.024716149969084e+00f, +1.023175976163407e+00f, +1.021427210603284e+00f, +1.019521566634239e+00f, +1.017510118327508e+00f, +1.015439859549357e+00f, +1.013460916839174e+00f, +1.011654901040475e+00f, +1.009366925499550e+00f, +1.007263182132894e+00f, +1.005313192386866e+00f, +1.003508162416449e+00f, +1.001840787319378e+00f, +1.000303927234380e+00f, +9.988898206257559e-01f, +9.975915283480670e-01f, +9.964015284765968e-01f, +9.953133902427869e-01f, +9.943201078053212e-01f, +9.934158959186011e-01f, +9.925943919208190e-01f, +9.918510277326026e-01f, +9.911797988363887e-01f, +9.905771957917731e-01f, +9.900381047643838e-01f, +9.895594394179152e-01f, +9.891371616557014e-01f, +9.887684373604154e-01f, +9.884497924570929e-01f, +9.881790747212391e-01f, +9.879528358230726e-01f, +9.877691368590689e-01f, +9.876249269174586e-01f, +9.875179947346887e-01f, +9.874458127312921e-01f, +9.874056275509585e-01f, +9.873951115886979e-01f, +9.874115368168944e-01f, +9.874524849192456e-01f, +9.875149888347144e-01f, +9.875968894760857e-01f, +9.876951134084213e-01f, +9.878075819424549e-01f, +9.879311998177238e-01f, +9.880640617030884e-01f, +9.882032571565917e-01f, +9.883471084085503e-01f, +9.884926873551375e-01f, +9.886386592120545e-01f, +9.887825578295630e-01f, +9.889230031022089e-01f, +9.890581715933395e-01f, +9.891867674284610e-01f, +9.893074965384659e-01f, +9.894196399062921e-01f, +9.895220757174378e-01f, +9.896146331889107e-01f, +9.896970346678272e-01f, +9.897692596535289e-01f, +9.898319269347060e-01f, +9.898852572653667e-01f, +9.899307640365727e-01f, +9.899693102025343e-01f, +9.900025692522435e-01f, +9.900321562263099e-01f, +9.900603352632121e-01f, +9.900889812894406e-01f, +9.901206586012907e-01f, +9.901575015155720e-01f, +9.902023946214220e-01f, +9.902575406142213e-01f, +9.903255289051605e-01f, +9.904087914462694e-01f, +9.905096491583045e-01f, +9.906303787150326e-01f, +9.907727108894024e-01f, +9.909387444078919e-01f, +9.911298894709990e-01f, +9.913476318763218e-01f, +9.915928560402563e-01f, +9.918665491182922e-01f, +9.921691315380984e-01f, +9.925010851461232e-01f, +9.928619727154252e-01f, +9.932519181564613e-01f, +9.936700207375173e-01f, +9.941156069136238e-01f, +9.945873147903244e-01f, +9.950837402063278e-01f, +9.956033775539884e-01f, +9.961439922621166e-01f, +9.967034533921340e-01f, +9.972793109558521e-01f, +9.978690858367024e-01f, +9.984697087896268e-01f, +9.990784840729244e-01f, +9.996919011206490e-01f, +1.000308193833526e+00f, +1.000922365901945e+00f, +1.001532636590676e+00f, +1.002135464655177e+00f, +1.002728111386909e+00f, +1.003307449770187e+00f, +1.003870934089686e+00f, +1.004416038098237e+00f, +1.004940548815171e+00f, +1.005442141810160e+00f, +1.005919224127911e+00f, +1.006370303149314e+00f, +1.006793927824538e+00f, +1.007189345025525e+00f, +1.007555573455895e+00f, +1.007892674961336e+00f, +1.008200146369426e+00f, +1.008478423284851e+00f, +1.008727884997619e+00f, +1.008949493525753e+00f, +1.009144112734761e+00f, +1.009313224929575e+00f, +1.009458241425143e+00f, +1.009581280555682e+00f, +1.009684090687164e+00f, +1.009768980817384e+00f, +1.009838308708799e+00f, +1.009894548257807e+00f, +1.009940336228694e+00f, +1.009977916643680e+00f, +1.010010230290263e+00f, +1.010039453539107e+00f, +1.010068202038694e+00f, +1.010098388689342e+00f, +1.010132323996401e+00f, +1.010171656775640e+00f, +1.010218096148412e+00f, +1.010272524848519e+00f, +1.010336490294771e+00f, +1.010410221483215e+00f, +1.010494354532353e+00f, +1.010588873699422e+00f, +1.010693501186928e+00f, +1.010808068774316e+00f, +1.010931436739342e+00f, +1.011062876503041e+00f, +1.011201071127927e+00f, +1.011344700694417e+00f, +1.011491904228184e+00f, +1.011641272406023e+00f, +1.011790282474963e+00f, +1.011937567254485e+00f, +1.012080125934687e+00f, +1.012216235487353e+00f, +1.012342907951334e+00f, +1.012458183122033e+00f, +1.012558879696851e+00f, +1.012642857380847e+00f, +1.012706955800289e+00f, +1.012748952907404e+00f, +1.012765799894453e+00f, +1.012755013843985e+00f, +1.012713798678211e+00f, +1.012639775003457e+00f, +1.012530134411619e+00f, +1.012382309473470e+00f, +1.012194068117524e+00f, +1.011962331100864e+00f, +1.011685173724601e+00f, +1.011359143572147e+00f, +1.010982135506986e+00f, +1.010550715971368e+00f, +1.010062133151922e+00f,
+1.009512438049510e+00f, +1.008898689394160e+00f, +1.008215923600973e+00f,
+1.007460860286395e+00f, +1.006627741823389e+00f, +1.005712337656749e+00f,
+1.004708677491086e+00f, +1.003611467285588e+00f, +1.002414286392268e+00f,
+1.001111413242302e+00f, +9.996961651093181e-01f, +9.981625949525345e-01f, +9.965041017623596e-01f,
+9.947148884277037e-01f, +9.927891912841345e-01f, +9.907199995730845e-01f, +9.884793707533194e-01f,
+9.855347660016696e-01f, +9.823765865983286e-01f, +9.789747333404933e-01f, +9.751623811486372e-01f,
+9.708821747608998e-01f, +9.660805524695870e-01f, +9.606976399184645e-01f, +9.546732976073706e-01f,
+9.479479345282376e-01f, +9.404609052933396e-01f, +9.321553861564006e-01f, +9.229775478442888e-01f,
+9.128745354570823e-01f, +9.018003682081348e-01f, +8.897163275605041e-01f, +8.765908974996186e-01f,
+8.623984077953557e-01f, +8.471200801854385e-01f, +8.307479727020245e-01f, +8.132817365236141e-01f,
+ 7.947291447585267e-01f, + 7.751108841891807e-01f, +7.544551974836834e-01f, +7.327963552921717e-01f,
+7.101790843209148e-01f, +6.866580716267418e-01f, +6.622962432368731e-01f, +6.371684119604742e-01f,
+6.113488038789190e-01f, +5.849206604934815e-01f, +5.579747428663487e-01f, +5.306181649316717e-01f,
+5.029523957059122e-01f, +4.750868825511614e-01f, +4.471309850999535e-01f, +4.192049917945288e-01f,
+3.914252910998820e-01f, +3.639114681156252e-01f, +3.367837772954476e-01f, +3.101627843160973e-01f,
+2.841647033392418e-01f, +2.589033711808454e-01f, +2.344880603710975e-01f, +2.110209448747974e-01f,
+1.885997642296488e-01f, +1.673100807904834e-01f, +1.472287968327706e-01f, +1.284223074167396e-01f,
+1.109422548710344e-01f, +9.482665349502306e-02f, +8.009914366829558e-02f, +6.676765847398403e-02f,
+5.482436608328485e-02f, +4.424588851571281e-02f, +3.499361000717621e-02f, +2.701461405056267e-02f,
+2.024370180670145e-02f, +1.460796755137538e-02f, +9.996743588367531e-03f, +5.305235098871444e-03f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

26. The apparatus of any of claims 6-21, wherein the synthesis windowing function (90) comprises a succession, in forward or backward order, formed by the following values with $\pm 1\%$ of tolerance:

-3.021153494057143e-04f, -5.867737487939294e-04f, -8.366504004139796e-04f, -1.126635355725494e-03f,
-1.470492941694331e-03f, -1.873473391018495e-03f, -2.339292362082021e-03f, -2.872008069419264e-03f,
-3.476256385086407e-03f, -4.155963816705528e-03f, -4.914563787665504e-03f, -5.755172503953251e-03f,
-6.680623380533122e-03f, -7.693816924650567e-03f, -8.796760749750191e-03f, -9.990503073705982e-03f, -1.127574117138621e-02f, -1.265334152129685e-02f, -1.412438986522702e-02f, -1.568889620430290e-02f,
-1.734512089366117e-02f, -1.909097368362797e-02f, -2.092546711168754e-02f, -2.284684792818856e-02f,
-2.485207716234951e-02f, -2.693746704328349e-02f, -2.909952486193999e-02f, -3.133504629493832e-02f,
-3.363960728361352e-02f, -3.600820974457969e-02f, -3.843601741746971e-02f, -4.091746034850161e-02f,
-4.344654894948344e-02f, -4.601786724624048e-02f, -4.862598509282497e-02f, -5.126474204655663e-02f,
-5.392644753556616e-02f, -5.660384311081047e-02f, -5.929116747072080e-02f, -6.198268202511926e-02f,
-6.467025548071184e-02f, -6.734542216184526e-02f, -7.000099017198280e-02f, -7.263057011354321e-02f,
-7.522784961377151e-02f, -7.778525942347714e-02f, -8.029480247839878e-02f, -8.274924535373614e-02f,
-8.514125464087215e-02f, -8.746379123238275e-02f, -8.971069341834263e-02f, -9.187564084638347e-02f,
-9.395176975347193e-02f, -9.593137735886889e-02f, -9.780843257659243e-02f, -9.957851303827886e-02f,
-1.012361165314596e-01f, -1.027741036495644e-01f, -1.041861222641119e-01f, -1.054680247057000e-01f,
-1.066160875985523e-01f, -1.076255384835563e-01f, -1.084912299471198e-01f, -1.092087422379003e-01f,
-1.097736146613313e-01f, -1.101808861640070e-01f, -1.104271876052675e-01f, -1.105108362290460e-01f,
-1.104281465492726e-01f, -1.101739218186236e-01f, -1.097437360338336e-01f, -1.091353125572511e-01f,
-1.083467335729228e-01f, -1.073739938306107e-01f, -1.062130155324388e-01f, -1.048606145834788e-01f,
-1.033132401525343e-01f, -1.015673163469357e-01f, -9.962005506126154e-02f, -9.746803229469267e-02f,
-9.510723623306666e-02f, -9.253303383231506e-02f, -8.974125216128212e-02f, -8.672877689119252e-02f,
-8.349213839083708e-02f, -8.002639902061687e-02f, -7.632679536516856e-02f, -7.238806162166744e-02f,
-6.820576796149519e-02f, -6.377611429172260e-02f, -5.909386001558149e-02f, -5.415316322402774e-02f,
-4.894812724598650e-02f, -4.347347112195197e-02f, -3.772461300253332e-02f, -3.169587609244436e-02f,
-2.538179830690266e-02f, -1.877689096555516e-02f, -1.187461378850388e-02f, -4.669099247423082e-03f,
+2.844096748870385e-03f, +1.066976124794342e-02f, + 1.881355950582949e-02f, +2.728156010437695e-02f,
+3.607810469851272e-02f, +4.520702759803914e-02f, +5.467238802204326e-02f, +6.447866054615346e-02f,
+7.462862199422061e-02f, +8.512490568723846e-02f, +9.596983987496970e-02f, +1.071650779014335e-01f,
+1.187115850305241e-01f, +1.306101067250375e-01f, +1.428596447589721e-01f, +1.554584725339102e-01f,
+1.684041609371527e-01f, +1.816947894623263e-01f, +1.953273880886783e-01f, +2.092963206850239e-01f,
+2.235945635254679e-01f, +2.382160219461597e-01f, +2.531529721334063e-01f, +2.683961570569586e-01f,
+2.839361392493072e-01f, +2.997624255177811e-01f, +3.158619077906196e-01f, +3.322210551086769e-01f,
+3.488264676990591e-01f, +3.656640377499646e-01f, +3.827152968157059e-01f, +3.999611859760947e-01f,
+4.173843265025887e-01f, +4.349669624916473e-01f, +4.526876397402144e-01f, +4.705242008503956e-01f,
+4.884539254831315e-01f, +5.064545550235134e-01f, +5.245006748662190e-01f, +5.425674372882107e-01f,
+5.606312044701524e-01f, +5.786672646386708e-01f, +5.966477035050948e-01f, +6.145458904162185e-01f,
+6.323361944662236e-01f, +6.499926319211774e-01f, +6.674874032292857e-01f, +6.847932667399612e-01f,
+7.018835463513400e-01f, +7.187322544823347e-01f, + 7.353128213893310e-01f, + 7.516001985652684e-01f,
+7.675699252273948e-01f, +7.831974571624924e-01f, +7.984583859818390e-01f, +8.133295347030278e-01f,
+8.277892271515950e-01f, +8.418178561101360e-01f, +8.553961300139363e-01f, +8.685068980898102e-01f,
+8.811334436653052e-01f, +8.932596784799233e-01f, +9.048748835980528e-01f, +9.159657608120536e-01f,
+9.265215299450000e-01f, +9.365339988633418e-01f, +9.459977028429117e-01f, +9.549088408436811e-01f,
+9.632658122557368e-01f, +9.710688896122810e-01f, +9.783204156360773e-01f, +9.850226760127131e-01f,
+9.911792082081333e-01f, +9.967989944502682e-01f, +1.001894024615659e+00f,
+1.006474342231823e+00f, +1.010552057109195e+00f, +1.014142538208007e+00f,
+1.017262593268930e+00f, +1.019928842669923e+00f, +1.022159867011177e+00f,
+1.023976320927187e+00f, +1.025400734608122e+00f, +1.026455340400072e+00f,
+1.027164510654160e+00f, +1.027552729180790e+00f, +1.027644462380432e+00f,
+1.027463246660797e+00f, +1.027035903410657e+00f, +1.026389068000259e+00f,
+1.025548201799728e+00f, +1.024537134749709e+00f, +1.023380803775376e+00f,
+1.022103695693341e+00f, + 1,020728359657958e+00f, +1.019275334687329e+00f,
+1.017765178792830e+00f, +1.016217355867531e+00f, + 1.014665311686846e+00f,
+1.013249071090664e+00f, +1.011948006992127e+00f, +1.010189090179223e+00f,
+1.008557961167850e+00f, +1.007011287608451e+00f, +1.005548764575910e+00f,
+1.004168417268956e+00f, +1.002867268893035e+00f, +1.001641769115897e+00f,
+1.000489068954641e+00f, +9.994060799749374e-01f, +9.983898865406841e-01f, +9.974370849972721e-01f,
+9.965444836911705e-01f, +9.957098545943852e-01f, +9.949302413030897e-01f, +9.942024045863540e-01f,
+9.935241604969254e-01f, +9.928930430130044e-01f, +9.923068103443909e-01f, +9.917633778190438e-01f,
+9.912597642374404e-01f, +9.907954498484041e-01f, +9.903677893656558e-01f, +9.899751611066148e-01f,
+9.896160337369861e-01f, +9.892890160408989e-01f, +9.889928511129679e-01f, +9.887260333430423e-01f,
+9.884868721088945e-01f, +9.882751039537586e-01f, +9.880892168751595e-01f, +9.879277114724612e-01f,
+9.877898261218510e-01f, +9.876743442038471e-01f, +9.875807496078497e-01f, +9.875072021876561e-01f, +9.874529447589979e-01f, +9.874169741527905e-01f, +9.873984685207834e-01f, +9.873958301311858e-01f,
+9.874080027710336e-01f, +9.874343401290739e-01f, +9.874736235387018e-01f, +9.875243137719285e-01f,
+9.875856201221135e-01f, +9.876563785063032e-01f, +9.877358921155149e-01f, +9.878225576787804e-01f,
+9.879150968481590e-01f, +9.880132731565830e-01f, +9.881156946084619e-01f, +9.882211314188272e-01f,
+9.883289032519310e-01f, +9.884378310018685e-01f, +9.885476787868710e-01f, +9.886568414746639e-01f,
+9.887645868459630e-01f, +9.888708540445242e-01f, +9.889744320992592e-01f, +9.890747269455915e-01f,
+9.891710038703801e-01f, +9.892631024032380e-01f, +9.893507219573624e-01f, +9.894330645494204e-01f,
+9.895096919388534e-01f, +9.895810813422480e-01f, +9.896467469067676e-01f, +9.897067365020641e-01f,
+9.897606930400666e-01f, +9.898094478563998e-01f, +9.898530133261707e-01f, +9.898914705684924e-01f,
+9.899254194103574e-01f, +9.899554202030650e-01f, +9.899824494486951e-01f, +9.900065116928948e-01f,
+9.900284805353695e-01f, +9.900497484789281e-01f, +9.900709561632662e-01f, +9.900928358611601e-01f,
+9.901163920607219e-01f, +9.901427479709606e-01f, +9.901734275350572e-01f, +9.902087332329851e-01f,
+9.902498637985275e-01f, +9.902983686695558e-01f, +9.903548501470234e-01f, +9.904205084933333e-01f,
+9.904959297726740e-01f, +9.905825150202904e-01f, +9.906812569810133e-01f, +9.907922087340426e-01f,
+9.909165464981378e-01f, +9.910550740962871e-01f, +9.912084614290896e-01f, +9.913768610980639e-01f,
+9.915605826937839e-01f, +9.917604214872976e-01f, +9.919767175562684e-01f, +9.922091101818779e-01f,
+9.924579135466506e-01f, +9.927231225056266e-01f, +9.930049538427406e-01f, +9.933027281437943e-01f,
+9.936161084869942e-01f, +9.939453714404443e-01f, +9.942895145656371e-01f, +9.946481676207727e-01f,
+9.950203031067961e-01f, +9.954058173659507e-01f, +9.958038713694317e-01f, +9.962130271017117e-01f,
+9.966324689957675e-01f, +9.970615306490058e-01f, +9.974990583293081e-01f, +9.979437430375855e-01f,
+9.983940572002874e-01f, +9.988493116887893e-01f, +9.993083430214909e-01f, +9.997689221333534e-01f,
+1.000231131275969e+00f, +1.000692135698996e+00f, +1.001152013920163e+00f,
+1.001608526000461e+00f, +1.002060493867275e+00f, +1.002507212061815e+00f,
+1.002947129400411e+00f, +1.003378909587027e+00f, +1.003801368578070e+00f,
+1.004213810320699e+00f, +1.004615386562846e+00f, +1.005004618375781 e+00f,
+1.005380628601598e+00f, +1.005743282364652e+00f, +1.006091510392348e+00f,
+1.006424907424988e+00f, +1.006742427727669e+00f, +1.007044321511378e+00f,
+1.007330218597112e+00f, +1.007599401798709e+00f, +1.007852064386603e+00f,
+1.008088176165563e+00f, +1.008308033204578e+00f, +1.008511247273756e+00f,
+1.008698144207627e+00f, +1.008869515256392e+00f, +1.009025659761512e+00f,
+1.009166718967367e+00f, +1.009293362609020e+00f, +1.009406398832440e+00f,
+1.009507017171120e+00f, +1.009595264293017e+00f, +1.009672145744679e+00f,
+1.009739084785160e+00f, +1.009796675060142e+00f, +1.009846137382005e+00f,
+1.009888083631667e+00f, +1.009924092276850e+00f, +1.009955384765721 e+00f,
+1.009982268770147e+00f, +1.010006298177305e+00f, +1.010028618428735e+00f,
+1.010050254076988e+00f, +1.010071952131355e+00f, +1.010094366238073e+00f,
+1.010118917317053e+00f, +1.010146497096682e+00f, +1.010177110711677e+00f,
+1.010211755260102e+00f, +1.010251003469427e+00f, +1.010295468653759e+00f,
+1.010345234996637e+00f, +1.010400316698172e+00f, +1.010461564316351e+00f,
+1.010528615445659e+00f, +1.010601521285347e+00f, +1.010679788081867e+00f,
+1.010763905869062e+00f, +1.010853429760676e+00f, +1.010947547074519e+00f,
+1.011045953108263e+00f, + 1.011148486293359e+00f, +1.011254397791134e+00f,
+1.011363082075863e+00f, +1.011473302008831e+00f, +1.011584996312149e+00f,
+1.011697416504599e+00f, +1.011808919793469e+00f, +1.011919264025716e+00f,
+1.012027240794153e+00f, +1.012132151631041e+00f, +1.012232734564333e+00f,
+1.012327560477901e+00f, +1.012416383754384e+00f, +1.012497890726292e+00f,
+1.012570434021054e+00f, +1.012633295255708e+00f, +1.012685277016726e+00f,
+1.012725564992284e+00f, +1.012752577651415e+00f, +1.012765062889864e+00f,
+1.012762356719162e+00f, +1.012743376077777e+00f, +1.012706484200181 e+00f,
+1.012650842226435e+00f, +1.012575427778520e+00f, +1.012479473490919e+00f,
+1.012361105121003e+00f, +1.012219809594718e+00f, +1.012054359992419e+00f,
+1.011864000215460e+00f, +1.011647223869087e+00f, +1.011402518267713e+00f,
+1.011129654652857e+00f, +1.010826951260377e+00f, +1.010492924436361e+00f,
+1.010126353960416e+00f, +1.009725892479312e+00f, +1.009290060983833e+00f,
+1.008817301052548e+00f, +1.008305027555130e+00f, +1.007752833675443e+00f,
+1.007157827358150e+00f, +1.006518049344503e+00f, +1.005831403532018e+00f,
+1.005095592119373e+00f, +1.004308630055050e+00f, +1.003467498305776e+00f,
+1.002569500413888e+00f, +1.001612710105563e+00f, +1.000594272975683e+00f, +9.995111701168786e-01f, +9.983609218719522e-01f, +9.971409288327860e-01f, +9.958488863050556e-01f, +9.944818543153893e-01f, +9.930375282832211e-01f, +9.915146560759479e-01f, +9.899136802423638e-01f, +9.881930623810997e-01f, +9.859422591203311e-01f, +9.835667898378924e-01f, +9.811423034808365e-01f, +9.785214441250228e-01f, +9.756636036109838e-01f, +9.725453442532574e-01f, +9.691456634185092e-01f, +9.654406178310209e-01f, +9.614043615076308e-01f, +9.570113065179300e-01f, +9.522367669696690e-01f, +9.470548839544214e-01f, +9.414403740008491e-01f, +9.353691612846549e-01f, +9.288190093977164e-01f, +9.217662887169115e-01f, +9.141896283466009e-01f, +9.060694681113471e-01f, +8.973891675497357e-01f, +8.881332000806269e-01f, +8.782893885841422e-01f, +8.678469565343039e-01f, +8.567970644671067e-01f, +8.451334654019180e-01f, +8.328542805780399e-01f, +8.199594783897041e-01f, +8.064511006873497e-01f, +7.923346478686025e-01f, + 7.776204488292163e-01f, +7.623206183595970e-01f, +7.464486491227057e-01f, +7.300205729992958e-01f, +7.130567383226717e-01f, +6.955805444755916e-01f, +6.776173229836567e-01f, +6.591955305148172e-01f, +6.403486426892321e-01f, +6.211072197441818e-01f, +6.015049275244730e-01f, +5.815787608870452e-01f, +5.613674511156324e-01f, +5.409188627354076e-01f, +5.202736834971303e-01f, +4.994780733459294e-01f, +4.785774177949064e-01f, +4.576172599874928e-01f, +4.366490208265804e-01f, +4.157221460415995e-01f, +3.948856590950757e-01f, +3.741903189229770e-01f, +3.536868899553974e-01f, +3.334260017756462e-01f, +3.134586473252229e-01f, +2.938337904395871e-01f, +2.745992637590817e-01f, +2.558030636168172e-01f, +2.374902188466697e-01f, +2.197036032185785e-01f, +2.024855415115456e-01f, +1.858749915117319e-01f, +1.699067802117410e-01f, +1.546132267478873e-01f, +1.400238206749695e-01f, +1.261637395672913e-01f, +1.130534434072719e-01f, +1.007084973747940e-01f, +8.914024389873081e-02f, +7.835612100141792e-02f, +6.835821233920988e-02f, +5.914211536028976e-02f, +5.069893012340832e-02f, +4.301717763585550e-02f, +3.608020726673359e-02f, +2.986316337017630e-02f, +2.433722657129812e-02f, +1.947675241971700e-02f, +1.525710171255895e-02f, +1.163787492636240e-02f, +8.433087782643718e-03f, +4.449668997344735e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

27. The apparatus of any of claims 6-21, wherein the synthesis windowing function (90) comprises a succession, in forward or backward order, formed by the following values with ±1% of tolerance:

-2.353032150516754e-04f, -4.619898752628163e-04f, -6.262931535610879e-04f, -7.929180432976445e-04f,
-9.747166718929050e-04f, -1.180256894474562e-03f, -1.409209039594871e-03f, -1.664473096973725e-03f,
-1.946591608170231e-03f, -2.257081732588478e-03f, -2.597106916737789e-03f, -2.967607624839524e-03f,
-3.370454877988472e-03f, -3.806285163352241e-03f, -4.276873767639064e-03f, -4.782469904501813e-03f,
-5.324608721716763e-03f, -5.903403814095400e-03f, -6.520419726599805e-03f, -7.175885277771099e-03f,
-7.871422820642307e-03f, -8.606586039759667e-03f, -9.382480860899108e-03f, -1.019827182163307e-02f,
-1.105520547739066e-02f, -1.195270300743193e-02f, -1.289205910303846e-02f, -1.387263484323160e-02f,
-1.489528159506296e-02f, -1.595856621933800e-02f, -1.706288556735433e-02f, -1.820666399965468e-02f,
-1.939065975232718e-02f, -2.061355417582714e-02f, -2.187570925786862e-02f, -2.317526315266411e-02f,
-2.451227449041489e-02f, -2.588471937157619e-02f, -2.729263737090799e-02f, -2.873390902713615e-02f,
-3.020862738245264e-02f, -3.171440372994384e-02f, -3.325098858986303e-02f, -3.481597793538342e-02f,
-3.640892406933019e-02f, -3.802742318209150e-02f, -3.967067992672979e-02f, -4.133575417353826e-02f,
-4.302203371734278e-02f, -4.472698045914417e-02f, -4.645022292934329e-02f, -4.818891490266687e-02f,
-4.994225863256500e-02f, -5.170690802826666e-02f, -5.348162036097223e-02f, -5.526334794593565e-02f,
-5.705123152423822e-02f, -5.884271749745559e-02f, -6.063717235243996e-02f, -6.243104027829089e-02f,
-6.422303545004304e-02f, -6.600961519440657e-02f, -6.778962269634495e-02f, -6.955996868581379e-02f,
-7.131966266443390e-02f, -7.306581273272733e-02f, -7.479758913001458e-02f, -7.651178225890490e-02f,
-7.820711420768856e-02f, -7.988010693411644e-02f, -8.152964005319532e-02f, -8.315237353264004e-02f,
-8.474728946770714e-02f, -8.631137544905677e-02f, -8.784374452959058e-02f, -8.934164364321417e-02f,
-9.080411291245728e-02f, -9.222795761428432e-02f, -9.361232867223340e-02f, -9.495377758870335e-02f,
-9.625155313139856e-02f, -9.750284620437569e-02f, -9.870736514214426e-02f, -9.986271288271026e-02f,
-1.009680221406219e-01f, -1.020202684361974e-01f, -1,030183804850491e-01f, -1.039596356759290e-01f,
-1.048438825017798e-01f, -1.056686838192766e-01f, -1.064342821660323e-01f, -1.071382314127799e-01f,
-1.077799961121537e-01f, -1.083570625865931e-01f, -1.088690135027248e-01f, -1.093135588677235e-01f,
-1.096903559498340e-01f, -1.099969655786929e-01f, -1.102332261219973e-01f, -1.103972812085189e-01f,
-1.104898474883336e-01f, -1.105086416532167e-01f, -1.104537426996073e-01f, -1.103225838568563e-01f,
-1.101145827722143e-01f, -1.098276928170364e-01f, -1.094621746650760e-01f, -1.090163960055733e-01f,
-1.084908852561722e-01f, -1.078834293141886e-01f, -1.071937180231978e-01f, -1.064196358069465e-01f,
-1.055612509762041e-01f, -1.046162812518618e-01f, -1.035849043557610e-01f, -1.024650162703341e-01f,
-1.012568997532046e-01f, -9.995864571932928e-02f, -9.857014566194627e-02f, -9.708911135857967e-02f,
-9.551545820689084e-02f, -9.384684920715425e-02f, -9.208300062891550e-02f, -9.022171021406450e-02f,
-8.826309993000785e-02f, -8.620493821803937e-02f, -8.404742152815330e-02f, -8.178792716809512e-02f,
-7.942625026703617e-02f, -7.695980775819990e-02f, -7.438785600211463e-02f, -7.170797002873608e-02f,
-6.891994783815969e-02f, -6.60218979771524 1e-02f, -6.301349420724424e-02f, -5.989191912667712e-02f,
-5.665655641133161e-02f, -5.330406164482222e-02f, -4.983427241976235e-02f, -4.624456893420224e-02f,
-4.253455686336916e-02f, -3.870195772538443e-02f, -3.474585776145929e-02f, -3.066341518682682e-02f,
-2.645425077642105e-02f, -2.211581608120528e-02f, -1.764740541599136e-02f, -1.304581363895818e-02f,
-8.310425696208936e-03f, -3.438268661133170e-03f, +1.570315476576933e-03f, +6.717697635290676e-03f,
+1.200477020244778e-02f, +1.743398319747869e-02f, +2.300642061077823e-02f, +2.872481423270595e-02f,
+3.458896350634671e-02f, +4.060106462625085e-02f, +4.676102915752826e-02f, +5.307133911821893e-02f,
+5.953239090915557e-02f, +6.614647812869151e-02f, +7.291293184312803e-02f, +7.983354189816511e-02f,
+8.690807412770696e-02f, +9.413813765275064e-02f, +1.015233140203748e-01f, +1.090651518336202e-01f,
+1.167626546016197e-01f, +1.246171387327525e-01f, +1.326272948938113e-01f, +1.407938190608664e-01f,
+1.491152519299797e-01f, +1.575921408388593e-01f, + 1.662224799248571e-01f, + 1.750067399059861e-01f,
+1.839431938620024e-01f, +1.930318183054904e-01f, +2.022699854906251e-01f, +2.116567430906184e-01f,
+2.211888523410642e-01f, +2.308655379767671e-01f, +2.406837992341654e-01f, +2.506420640291662e-01f,
+2.607365124918583e-01f, +2.709659073501196e-01f, +2.813259021832532e-01f, +2.918144694729168e-01f,
+3.024270279840051e-01f, +3.131603499997996e-01f, +3.240095704645023e-01f, +3.349719592361666e-01f,
+3.460422935204829e-01f, +3.572175180786021e-01f, +3.684915649120530e-01f, +3.798595119591716e-01f,
+3.913146885756875e-01f, +4.028532873867052e-01f, +4.144688328137527e-01f, +4.261571642320424e-01f,
+4.379113897565727e-01f, +4.497256320417501e-01f, +4.615925445090212e-01f, +4.735067030065239e-01f, +4.854600184866710e-01f, +4.974471592901086e-01f, +5.094597228333853e-01f, +5.214909841729947e-01f, +5.335326819631583e-01f, +5.455789811615239e-01f, +5.576217157959890e-01f, +5.696546730080154e-01f, +5.816685576268035e-01f, +5.936560624526468e-01f, +6.056083823929643e-01f, +6.175192060085208e-01f, +6.293796611336280e-01f, +6.411830842823245e-01f, +6.529203544876097e-01f, +6.645840786371451e-01f, +6.761653499550255e-01f, +6.876573952173626e-01f, +6.990511539119996e-01f, +7.103400549562944e-01f, +7.215149331458728e-01f, +7.325691772738999e-01f, +7.434943718765665e-01f, +7.542846327442048e-01f, +7.649313654540612e-01f, +7.754281892901473e-01f, +7.857670170752049e-01f, +7.959414651061612e-01f, +8.059437233154637e-01f, +8.157687070715176e-01f, +8.254086223972127e-01f, +8.348589373399948e-01f, +8.441125827416620e-01f, +8.531651194538425e-01f, +8.620108336276733e-01f, +8.706456337542150e-01f, +8.790631561061171e-01f, +8.872599706865123e-01f, +8.952313288619367e-01f, +9.029751680353524e-01f, +9.104863121445679e-01f, +9.177625550620636e-01f, +9.247997426966093e-01f, +9.315962496426278e-01f, +9.381494858921667e-01f, +9.444588390359354e-01f, +9.505220861927248e-01f, +9.563402921286364e-01f, +9.619114522936701e-01f, +9.672366712325431e-01f, +9.723156637834687e-01f, +9.771501187120180e-01f, +9.817397501303696e-01f, +9.860865871353246e-01f, +9.901906380163595e-01f, +9.940557180662704e-01f, +9.976842395284637e-01f, +1.001080961257010e+00f, +1.004247514102417e+00f, +1.007188578458507e+00f, +1.009906654565108e+00f, +1.012407428282884e+00f, +1.014694702432600e+00f, +1.016774659209400e+00f, +1.018650990561848e+00f, +1.020330464463111e+00f, +1.021817328911793e+00f, +1.023118841384460e+00f, +1.024240262467000e+00f, +1.025189721888128e+00f, +1.025972450969440e+00f, +1.026596938589443e+00f, +1.027069179375841e+00f, +1.027397523939210e+00f, +1.027587902203109e+00f, +1.027648951922701e+00f, +1.027585830688143e+00f, +1.027408519661012e+00f, +1.027122986826984e+00f, +1.026738673647482e+00f, +1.026261663878092e+00f, +1.025701002415063e+00f, +1.025061777648234e+00f, +1.024353980976701e+00f, +1.023582385618774e+00f, +1.022756514615106e+00f, +1.021880604350422e+00f, +1.020963871317665e+00f, +1.020009139549275e+00f, +1.019027285501251e+00f, +1.018019442784231e+00f, +1.016996499560845e+00f, +1.015957433206324e+00f, +1.014923441259795e+00f, +1.013915946100629e+00f, +1.013047565149327e+00f, +1.012216130365610e+00f, +1.011044869639164e+00f, +1.009914592130044e+00f, +1.008824888092573e+00f, +1.007773858455400e+00f, +1.006761700412993e+00f, +1.005786648810854e+00f, +1.004848753962734e+00f, +1.003946083413733e+00f, +1.003078846506546e+00f, +1.002245009135684e+00f, +1.001444733905817e+00f, +1.000676188436651e+00f, +9.999393169239009e-01f, +9.992320848298057e-01f, +9.985548127155425e-01f, +9.979055415627330e-01f, +9.972842679758880e-01f, +9.966890948441745e-01f, +9.961203379971326e-01f, +9.955761256313581e-01f, +9.950565724564597e-01f, +9.945597525471822e-01f, +9.940860378486615e-01f, +9.936337788972491e-01f, +9.932031606606759e-01f, +9.927921871265732e-01f, +9.924015177880798e-01f, +9.920297273323891e-01f, +9.916767775088281e-01f, +9.913408767719142e-01f, +9.910230654424902e-01f, +9.907216425865902e-01f, +9.904366799536263e-01f, +9.901668953434221e-01f, +9.899131011580791e-01f, +9.896735637374597e-01f, +9.894488374513719e-01f, +9.892374835404283e-01f, +9.890401927796704e-01f, +9.888556356037892e-01f, +9.886843467692753e-01f, +9.885247606051014e-01f, +9.883778520531268e-01f, +9.882423270582524e-01f, +9.881185638915363e-01f, +9.880051626345804e-01f, +9.879032023766432e-01f, +9.878111744348976e-01f, +9.877295459610343e-01f, +9.876571983429736e-01f, +9.875949843246187e-01f, +9.875412739766566e-01f, +9.874969061399389e-01f, +9.874606249127551e-01f, +9.874329809802893e-01f, +9.874126414437681e-01f, +9.874004750404033e-01f, +9.873949921033299e-01f, +9.873969162747074e-01f, +9.874049060317581e-01f, +9.874197049003676e-01f, +9.874399717110517e-01f, +9.874663281231737e-01f, +9.874973205882319e-01f, +9.875338926695315e-01f, +9.875746535410983e-01f, +9.876201238703241e-01f, +9.876689801932402e-01f, +9.877221556193183e-01f, +9.877781920433015e-01f, +9.878376489591358e-01f, +9.878991990245439e-01f, +9.879637979933339e-01f, +9.880300303653743e-01f, +9.880984675859855e-01f, +9.881678007807095e-01f, +9.882390300097154e-01f, +9.883107693992456e-01f, +9.883835200189653e-01f, +9.884560159878955e-01f, +9.885294200392185e-01f, +9.886022219397892e-01f, +9.886749404176028e-01f, +9.887466261142505e-01f, +9.888182771263505e-01f, +9.888882480852147e-01f, +9.889574384705896e-01f, +9.890247977602895e-01f, +9.890911247701029e-01f, +9.891551701556196e-01f, +9.892178658748239e-01f, +9.892779555818088e-01f, +9.893365186903538e-01f, +9.893923680007577e-01f, +9.894462830852175e-01f, +9.894972124952000e-01f, +9.895463342815009e-01f, +9.895923617530382e-01f, +9.896362652966239e-01f, +9.896772011542693e-01f, +9.897162195263046e-01f, +9.897520286480039e-01f, +9.897859195209235e-01f, +9.898170267411330e-01f, +9.898462068764986e-01f, +9.898725363809847e-01f, +9.898975138787787e-01f, +9.899200050208486e-01f, +9.899410789223559e-01f, +9.899600605054418e-01f, +9.899782261038060e-01f, +9.899945557067980e-01f, +9.900103500807507e-01f, +9.900248320990181e-01f, +9.900394023736973e-01f, +9.900532105829365e-01f, +9.900674746047259e-01f, +9.900814722948890e-01f, +9.900966926051257e-01f, +9.901122448734595e-01f, +9.901293790312005e-01f, +9.901474648912307e-01f, +9.901680598867444e-01f, +9.901902265696609e-01f, +9.902151896501201e-01f, +9.902424418296485e-01f, +9.902734448815004e-01f, +9.903071270768942e-01f, +9.903448913950654e-01f, +9.903862280081246e-01f, +9.904324484666853e-01f, +9.904825650601110e-01f, +9.905379830873822e-01f, +9.905980602136440e-01f, +9.906640366554630e-01f, +9.907348826312993e-01f, +9.908120376822228e-01f, +9.908947858311721e-01f, +9.909842592301273e-01f, +9.910795247770178e-01f, +9.911819240108124e-01f, +9.912905118607647e-01f, +9.914064705361564e-01f, +9.915288011543961e-01f, +9.916586940166509e-01f, +9.917952720685562e-01f, +9.919396217291009e-01f, +9.920906151219310e-01f, +9.922495028313456e-01f, +9.924152398352751e-01f, +9.925887208794144e-01f, +9.927688708468421e-01f, +9.929569112537944e-01f, +9.931516528513824e-01f, +9.933539244159140e-01f, +9.935626893131695e-01f, +9.937790866568735e-01f, +9.940016434044485e-01f, +9.942312024833810e-01f, +9.944668184371617e-01f, +9.947093441694513e-01f, +9.949572854565533e-01f, +9.952116634297566e-01f, +9.954712635321227e-01f, +9.957367951478069e-01f, +9.960068616185641e-01f, +9.962823025614079e-01f, +9.965617986382630e-01f, +9.968461329825753e-01f, +9.971338271912752e-01f, +9.974256691222113e-01f, +9.977203369515556e-01f, +9.980185087055744e-01f, +9.983185871761977e-01f, +9.986213520769593e-01f, +9.989255426466267e-01f, +9.992317314100975e-01f, +9.995382582242990e-01f, +9.998461160718275e-01f, +1.000153907612080e+00f, +1.000461955079660e+00f, +1.000768859280338e+00f, +1.001075613053728e+00f, +1.001380551217109e+00f, +1.001684244734497e+00f, +1.001985425397567e+00f, +1.002284871786226e+00f, +1.002580975161843e+00f, +1.002874411368430e+00f, +1.003163845364970e+00f, +1.003450063374329e+00f, +1.003731570287893e+00f, +1.004009147462043e+00f, +1.004281457582935e+00f, +1.004549339226336e+00f, +1.004811375053364e+00f, +1.005068272394360e+00f, +1.005318795748286e+00f, +1.005563968008037e+00f, +1.005802269635282e+00f, +1.006034554002353e+00f, +1.006259855360867e+00f, +1.006479018139540e+00f, +1.006690541428116e+00f, +1.006895570408563e+00f, +1.007093045696527e+00f, +1.007283799246233e+00f, +1.007466616298057e+00f, +1.007642728426847e+00f, +1.007811036585595e+00f, +1.007972441990187e+00f, +1.008125875904472e+00f, +1.008272602383284e+00f, +1.008411468616852e+00f, +1.008543573152632e+00f, +1.008668018334797e+00f, +1.008786009787269e+00f, +1.008896526233555e+00f, +1.009000766336071e+00f, +1.009097763850333e+00f, +1.009188880897370e+00f, +1.009273163797313e+00f, +1.009351762546296e+00f, +1.009423944949143e+00f, +1.009491175244507e+00f, +1.009552401900961e+00f, +1.009608886895764e+00f, +1.009659973830751e+00f, +1.009707093778162e+00f, +1.009749238562067e+00f, +1.009787744284661e+00f, +1.009822090220407e+00f, +1.009853706282597e+00f, +1.009881498943010e+00f, +1.009906958448099e+00f, +1.009929567021562e+00f, +1.009950573483366e+00f, +1.009969021400474e+00f, +1.009986499185054e+00f, +1.010002363879044e+00f, +1.010017890428877e+00f, +1.010032170180360e+00f, +1.010046722045583e+00f, +1.010060809299530e+00f, +1.010075674445289e+00f, +1.010090449982098e+00f, +1.010106564965965e+00f, +1.010123226584120e+00f, +1.010141762173145e+00f, +1.010161131093372e+00f, +1.010182635897876e+00f, +1.010205587931660e+00f, +1.010231078494249e+00f, +1.010257950227988e+00f, +1.010287732968580e+00f, +1.010319484524512e+00f, +1.010354079663767e+00f, +1.010390635488037e+00f, +1.010430470494512e+00f, +1.010472266495074e+00f, +1.010517096381509e+00f, +1.010564099281000e+00f, +1.010614266894512e+00f, +1.010666285876455e+00f, +1.010721360243234e+00f, +1.010778416755264e+00f, +1.010838252644461e+00f, +1.010899655674578e+00f, +1.010963729626641e+00f, +1.011029191301694e+00f, +1.011096993993037e+00f, +1.011165861239173e+00f, +1.011236610341260e+00f, +1.011308167670753e+00f, +1.011381453638912e+00f, +1.011454785713102e+00f, +1.011529185153809e+00f, +1.011603680910505e+00f, +1.011678803938046e+00f, +1.011753008569803e+00f, +1.011827484797985e+00f, +1.011900936547881e+00f, +1.011973876511603e+00f, +1.012044885003304e+00f, +1.012114985644919e+00f, +1.012182837094955e+00f, +1.012249023976742e+00f, +1.012312095063070e+00f, +1.012373028737774e+00f, +1.012430463679316e+00f, +1.012484972246822e+00f, +1.012535058602453e+00f, +1.012581678169188e+00f, +1.012623472898504e+00f, +1.012660975529858e+00f, +1.012692758750213e+00f, +1.012719789201144e+00f, +1.012740575296603e+00f, +1.012755753887085e+00f, +1.012763948841204e+00f, +1.012765922449960e+00f, +1.012760298661069e+00f, +1.012747819936584e+00f, +1.012726958954961e+00f, +1.012698607692183e+00f, +1.012661400539405e+00f, +1.012615904116265e+00f, +1.012560833005713e+00f, +1.012497050269805e+00f, +1.012422888521601e+00f, +1.012339226241367e+00f, +1.012244921966297e+00f, +1.012140460211194e+00f, +1.012024302085441e+00f, +1.011897560567707e+00f, +1.011758810583150e+00f, +1.011608449127642e+00f, +1.011445162723270e+00f, +1.011269960947744e+00f, +1.011081255645969e+00f, + 1.010879608424312e+00f, +1.010663676735228e+00f, +1.010434184200640e+00f, +1.010189681124657e+00f, +1.009930754807923e+00f, +1.009655660215271e+00f, +1.009365251564694e+00f, +1.009058249873833e+00f, +1.008734758578989e+00f, +1.008393079963091e+00f, +1.008034308295421e+00f, +1.007656661215973e+00f, +1.007260142622887e+00f, +1.006843352506855e+00f, +1.006407009542103e+00f, +1.005949145170711e+00f, +1.005470005637052e+00f, +1.004967986424467e+00f, +1.004443531995945e+00f, +1.003894772403371 e+00f, +1.003321903663793e+00f, +1.002723127308148e+00f, +1.002098854400575e+00f, +1.001447278873483e+00f, +1.000768505317086e+00f, +1.000060686758758e+00f, +9.993242684851855e-01f, +9.985573503390627e-01f, +9.977600196406868e-01f, +9.969306036935497e-01f, +9.960694269553644e-01f, +9.951746430061121e-01f, +9.942466438407230e-01f, +9.932837131068657e-01f, +9.922861082472264e-01f, +9.912523092989319e-01f, +9.901827419790691e-01f, +9.890757868707590e-01f, +9.879313024174022e-01f, +9.863553220272523e-01f, +9.847362453480265e-01f, +9.831750948772566e-01f, +9.815583336011345e-01f, +9.798613526271561e-01f, +9.780617486993630e-01f, +9.761574317374303e-01f, +9.741378617337759e-01f, +9.719990112065752e-01f, +9.697327413658168e-01f, +9.673331975559332e-01f, +9.647915124057732e-01f, +9.621011497566145e-01f, +9.592539757044516e-01f, +9.562427177295731e-01f, +9.530600909726344e-01f, +9.496984081652284e-01f, +9.461498120176854e-01f, +9.424071613625743e-01f, +9.384634163826711e-01f, +9.343112966094085e-01f, +9.299449872197452e-01f, +9.253567968750328e-01f, +9.205404627076625e-01f, +9.154896280575360e-01f, +9.101986790930605e-01f, +9.046620597741508e-01f, +8.988755194372424e-01f, +8.928338316495705e-01f, +8.865337190368053e-01f, +8.799712722567934e-01f, +8.731437835983047e-01f, +8.660476534563131e-01f, +8.586812520174252e-01f, +8.510420440685049e-01f, +8.431297226886574e-01f, +8.349435141989714e-01f, +8.264839911291133e-01f, +8.177505366573690e-01f, +8.087449817124315e-01f, +7.994681492797084e-01f, +7.899235162194718e-01f, +7.801137731566502e-01f, + 7.700431275216928e-01f, +7.597145736971065e-01f, +7.491330971820804e-01f, +7.383028603058783e-01f, +7.272298755824693e-01f, +7.159201919962611e-01f, +7.043814340356083e-01f, +6.926196927377140e-01f, +6.806438831866077e-01f, +6.684616478236647e-01f, +6.560830137986515e-01f, +6.435179268559957e-01f, +6.307755329382612e-01f, +6.178641647786525e-01f, +6.047954625702541e-01f, +5.915799587176216e-01f, +5.782289366005894e-01f, +5.647535885752191e-01f, +5.511703155400274e-01f, +5.374905090437071e-01f, +5.237263500445715e-01f, +5.098915423728255e-01f, +4.960008074926423e-01f, +4.820662943337458e-01f, +4.681017110048007e-01f, +4.541216995958746e-01f, +4.401421815729068e-01f, +4.261772971493010e-01f, +4.122417888542512e-01f, +3.983499612526493e-01f, +3.845172335531009e-01f, +3.707583717376236e-01f, +3.570886786795506e-01f, +3.435228672445627e-01f, +3.300763764703638e-01f, +3.167640325043893e-01f, +3.036004651973109e-01f, +2.905996158436682e-01f, +2.777758503744847e-01f, +2.651434678028531e-01f, +2.527161881181577e-01f, +2.405069849650012e-01f, +2.285283969438072e-01f, +2.167933432162879e-01f, +2.053139897833021e-01f, +1.941021906320988e-01f, +1.831680872008943e-01f, +1.725221947208913e-01f, +1.621735416384834e-01f, +1.521320683467849e-01f, +1.424052801149985e-01f, +1.330015240938615e-01f, +1.239260664828526e-01f, +1.151858295527293e-01f, +1.067840430193724e-01f, +9.872637505002878e-02f, +9.101379000888035e-02f, +8.365057236623055e-02f, +7.663508305536153e-02f, +6.997033405748826e-02f, +6.365188111381365e-02f, +5.768176015814392e-02f, +5.205244216987966e-02f, +4.676538412257621e-02f, +4.180950541438362e-02f, +3.718640251368464e-02f, +3.288072750732215e-02f, +2.889548499582958e-02f, +2.520980565928884e-02f, +2.183057564646272e-02f, +1.872896194002638e-02f, +1.592127815153420e-02f, +1.336381425803020e-02f, +1.108558877807282e-02f, +8.943474189364638e-03f, +6.758124889697787e-03f, +3.504438130619497e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

28. The apparatus of any of claims 6-21, wherein the synthesis windowing function (90) comprises a succession, in forward or backward order, formed by the following values with ±1% of tolerance:
-1.596869453315999e-04, -3.021153494057143e-04, -4.142323860121641e-04, -5.058484031439142e-04,
-5.867737487939294e-04, -6.666034929771656e-04, -7.499813122143762e-04, -8.366504004139794e-04,
-9.273096237893370e-04, -1.023773491532728e-03, -1.126635355725494e-03, -1.235247794937702e-03,
-1.349627853510606e-03, -1.470492941694331e-03, -1.598145399394582e-03, -1.732450700747454e-03,
-1.873473391018495e-03, -2.021493133113876e-03, -2.176721793926887e-03, -2.339292362082021e-03,
-2.509298051958086e-03, -2.686801873698675e-03, -2.872008069419264e-03, -3.065254982136409e-03,
-3.266686736002951e-03, -3.476256385086407e-03, -3.694123506258334e-03, -3.920651988943251e-03, -4.155963816705528e-03, -4.399940204176431e-03, -4.652692827862344e-03, -4.914563787665504e-03,
-5.185653529531935e-03, -5.465821495567872e-03, -5.755172503953251e-03, -6.054056765330685e-03,
-6.362583863449497e-03, -6.680623380533122e-03, -7.008304674718039e-03, -7.346013465075499e-03,
-7.693816924650567e-03, -8.051465262788033e-03, -8.419001443263380e-03, -8.796760749750191e-03,
-9.184751507972289e-03, -9.582657230262597e-03, -9.990503073705982e-03, -1.040865597419619e-02,
-1.08371611375455e-02, -1.127574117138621e-02, -1.172444049589271e-02, -1.218362542421523e-02,
-1.265334152129685e-02, -1.313331245904876e-02, -1.362355747138776e-02, -1.412438986522702e-02,
-1.463576680723352e-02, -1.515729094197161e-02, -1.568889620430290e-02, -1.623084814367250e-02,
-1.678306524600559e-02, -1.734512089366117e-02, -1.791696516251699e-02, -1.849892453107246e-02,
-1.909097368362797e-02, -1.969273308274951e-02, -2.030414376031160e-02, -2.092546711168754e-02,
-2.155660557689242e-02, -2.219710359529686e-02, -2.284684792818856e-02, -2.350606779320675e-02,
-2.417463749934085e-02, -2.485207716234951e-02, -2.553826580898371e-02, -2.623344061522424e-02,
-2.693746704328349e-02, -2.764983997782559e-02, -2.837043858580717e-02, -2.909952486193998e-02,
-2.983695776902939e-02, -3.058218787751172e-02, -3.133504629493832e-02, -3.209573641742117e-02,
-3.286409853195186e-02, -3.363960728361352e-02, -3.442207835192332e-02, -3.521166997276568e-02,
-3.600820974457969e-02, -3.681119317395579e-02, -3.762042487257546e-02, -3.843601741746971e-02,
-3.925772507976759e-02, -4.008494689009130e-02, -4.091746034850161e-02, -4.175542154425013e-02,
-4.259863408038441e-02, -4.344654894948344e-02, -4.429899287523113e-02, -4.515616616948602e-02,
-4.601786724624048e-02, -4.688349274164030e-02, -4.775281564045485e-02, -4.862598509282498e-02,
-4.950274425624717e-02, -5.038242975874127e-02, -5.126474204655663e-02, -5.214974857230398e-02,
-5.303718358615044e-02, -5.392644753556616e-02, -5.481729406855359e-02, -5.570983057565210e-02,
-5.660384311081047e-02, -5.749879655200370e-02, -5.839451321393058e-02, -5.929116747072080e-02,
-6.018848884279070e-02, -6.108576415855094e-02, -6.198268202511926e-02, -6.287933502598060e-02,
-6.377542359879805e-02, -6.467025548071184e-02, -6.556352962710620e-02, -6.645533804325808e-02,
-6.734542216184526e-02, -6.823317113969737e-02, -6.911832800881393e-02, -7.000099017198280e-02,
-7.088091415536939e-02, -7.175751581450866e-02, -7.263057011354321e-02, -7.350020923324756e-02,
-7.436618116832702e-02, -7.522784961377151e-02, -7.608493286734087e-02, -7.693750413779520e-02,
-7.778525942347714e-02, -7.862751920094575e-02, -7.946399769633587e-02, -8.029480247839879e-02,
-8.111965623403654e-02, -8.193789640255647e-02, -8.274924535373614e-02, -8.355381170261278e-02,
-8.435134905678848e-02, -8.514125464087215e-02, -8.592328028689659e-02, -8.669753354886602e-02,
-8.746379123238275e-02, -8.822149831804039e-02, -8.897043074644968e-02, -8.971069341834263e-02,
-9.044201341183719e-02, -9.116374329727489e-02, -9.187564084638347e-02, -9.257786640497777e-02,
-9.327014538321736e-02, -9.395176975347193e-02, -9.462246851310178e-02, -9.528240981433814e-02,
-9.593137735886889e-02, -9.656876884228789e-02, -9.719438533739366e-02, -9.780843257659243e-02,
-9.841075978146442e-02, -9.900085534600200e-02, -9.957851303827886e-02, -1.001438325530028e-01,
-1.006965654660066e-01, -1.012361165314596e-01, -1.017622262660318e-01, -1.022749718234132e-01,
-1.027741036495644e-01, -1.032590485916072e-01, -1.037296416381658e-01, -1.041861222641119e-01,
-1.046283222746241e-01, -1.050556674062305e-01, -1.054680247057000e-01, -1.058657014776354e-01,
-1.062485747526411e-01, -1.066160875985523e-01, -1.069680384993124e-01, -1.073045851468520e-01,
-1.076255384835563e-01, -1.079303623240916e-01, -1.082188709931267e-01, -1.084912299471198e-01,
-1.087472718159103e-01, -1.089864959432877e-01, -1.092087422379003e-01, -1.094141900597718e-01,
-1.096026598727515e-01, -1.097736146613313e-01, -1.099268894481712e-01, -1.100626919008929e-01,
-1.101808861640070e-01, -1.102809952914802e-01, -1.103629709312858e-01, -1.104271876052675e-01,
-1.104735471815890e-01, -1.105014789286600e-01, -1.105108362290460e-01, -1.105018987914554e-01,
-1.104745246005427e-01, -1.104281465492726e-01, -1.103625464011331e-01, -1.102778601442104e-01,
-1.101739218186236e-01, -1.100502639286607e-01, -1.099067826823344e-01, -1.097437360338336e-01,
-1.095610353779043e-01, -1.093582462693348e-01, -1.091353125572511e-01, -1.088925531745051e-01,
-1.086298673699289e-01, -1.083467335729228e-01, -1.080429791821427e-01, -1.077187842899125e-01,
-1.073739938306107e-01, -1.070081184450032e-01, -1.066210413471652e-01, -1.062130155324388e-01,
-1.057838954855888e-01, -1.053331389663558e-01, -1.048606145834788e-01, -1.043666017588026e-01,
-1.038509823636319e-01, -1.033132401525343e-01, -1.027532566706549e-01, -1.021713124102434e-01,
-1.015673163469357e-01, -1.009408032844788e-01, -1.002916459024019e-01, -9.962005506126154e-02,
-9.892587447037898e-02, -9.820858231161539e-02, -9.746803229469267e-02, -9.670445315437526e-02,
-9.591769653314886e-02, -9.510723623306666e-02, -9.427290387369003e-02, -9.341489003828900e-02,
-9.253303383231506e-02, -9.162682426346705e-02, -9.069614104466586e-02, -8.974125216128212e-02,
-8.876201954716677e-02, -8.775790063882420e-02, -8.672877689119252e-02, -8.567495161533510e-02,
-8.459627389188201e-02, -8.349213839083708e-02, -8.236235749389448e-02, -8.120716401834208e-02,
-8.002639902061687e-02, -7.881950797067065e-02, -7.758626878445929e-02, -7.632679536516856e-02, -7.504088747769501e-02, -7.372803129789816e-02, -7.238806162166744e-02, -7.102116211954443e-02,
-6.962720872934396e-02, -6.820576796149519e-02, -6.675671622392269e-02, -6.528023606863240e-02,
-6.377611429172260e-02, -6.224374611498080e-02, -6.068292908100376e-02, -5.909386001558149e-02,
-5.747627430502456e-02, -5.582945016301614e-02, -5.415316322402774e-02, -5.244768784057990e-02,
-5.071287102956145e-02, -4.894812724598650e-02, -4.715324945932696e-02, -4.532841381541464e-02,
-4.347347112195197e-02, -4.158794238398249e-02, -3.967162909873025e-02, -3.772461300253332e-02,
-3.574664020854284e-02, -3.373712599806719e-02, -3.169587609244436e-02, -2.962308489442885e-02,
-2.751857552683018e-02, -2.538179830690266e-02, -2.321255714428171e-02, -2.101100771772769e-02,
-1.877689096555516e-02, -1.650953674438219e-02, -1.420871083118669e-02, -1.187461378850388e-02,
-9.507008996713286e-03, -7.105225746748432e-03, -4.669099247423082e-03, -2.198970714838444e-03,
+3.052506679844099e-04, +2.844096748870384e-03, +5.417800316971459e-03, +8.026287894631955e-03,
+1.066976124794342e-02, +1.334869917032908e-02, +1.606331521084708e-02, +1.881355950582949e-02,
+2.159970134663663e-02, +2.442232147839131e-02, +2.728156010437695e-02, +3.017712138573929e-02,
+3.310912443052597e-02, +3.607810469851272e-02, +3.908419391833869e-02, +4.212712008909140e-02,
+4.520702759803914e-02, +4.832447852355055e-02, +5.147966118159461e-02, +5.467238802204326e-02,
+5.790284080082958e-02, +6.117156717220185e-02, +6.447866054615346e-02, +6.782376212130986e-02,
+7.120692575100979e-02, +7.462862199422061e-02, +7.808896236959446e-02, +8.158769578329894e-02,
+8.512490568723846e-02, +8.870101069974845e-02, +9.231608110264714e-02, +9.596983987496970e-02,
+9.966236893806717e-02, +1.033941063338643e-01, +1.071650779014335e-01, +1.109748994439795e-01,
+1.148235927259266e-01, +1.187115850305241e-01, +1.226388834300689e-01, +1.266050731283809e-01,
+1.306101067250375e-01, +1.346543064817742e-01, +1.387376249190578e-01, +1.428596447589721e-01,
+1.470203170721216e-01, +1.512199592605080e-01, +1.554584725339102e-01, +1.597353438179875e-01,
+1.640504702561671e-01, +1.684041609371527e-01, +1.727963503982179e-01, +1.772265953627290e-01,
+1.816947894623263e-01, +1.862011624788949e-01, +1.907455489457267e-01, +1.953273880886783e-01,
+1.999464539304762e-01, +2.046028558464008e-01, +2.092963206850239e-01, +2.140261955702662e-01,
+2.187922274259156e-01, +2.235945635254679e-01, +2.284329840640989e-01, +2.333068981094213e-01,
+2.382160219461597e-01, +2.431603785542250e-01, +2.481396077816722e-01, +2.531529721334063e-01,
+2.582001739497298e-01, +2.632813508034234e-01, +2.683961570569586e-01, +2.735437630266799e-01,
+2.787237550375912e-01, +2.839361392493072e-01, +2.891805257722012e-01, +2.944561228780392e-01,
+2.997624255177811e-01, +3.050992195689690e-01, +3.104659867604553e-01, +3.158619077906196e-01,
+3.212865260033979e-01, +3.267397428773339e-01, +3.322210551086769e-01, +3.377295561726898e-01,
+3.432647335893443e-01, +3.488264676990591e-01, +3.544142074632647e-01, +3.600269656734629e-01,
+3.656640377499646e-01, +3.713250061671226e-01, +3.770091190097118e-01, +3.827152968157059e-01,
+3.884429045609680e-01, +3.941917466962361e-01, +3.999611859760947e-01, +4.057501420991821e-01,
+4.115579429637846e-01, +4.173843265025887e-01, +4.232286297916428e-01, +4.290897820858789e-01,
+4.349669624916473e-01, +4.408596056709005e-01, +4.467668696607166e-01, +4.526876397402144e-01,
+4.586211456831769e-01, +4.645669547719424e-01, +4.705242008503956e-01, +4.764915897192549e-01,
+4.824682887794052e-01, +4.884539254831315e-01, +4.944476636179056e-01, +5.004481977619742e-01,
+5.064545550235134e-01, +5.124661018959751e-01, +5.184818933365749e-01, +5.245006748662190e-01,
+5.305215796893860e-01, +5.365441251369431e-01, +5.425674372882107e-01, +5.485902506852811e-01,
+5.546116774259739e-01, +5.606312044701524e-01, +5.666478652857275e-01, +5.726602391687222e-01,
+5.786672646386708e-01, +5.846682453966959e-01, +5.906621680078100e-01, +5.966477035050948e-01,
+6.026239249993590e-01, +6.085903032056262e-01, +6.145458904162185e-01, +6.204893201838491e-01,
+6.264196163765745e-01, +6.323361944662236e-01, +6.382380808188793e-01, +6.441239094712802e-01,
+6.499926319211775e-01, +6.558435212204078e-01, +6.616755522321309e-01, +6.674874032292857e-01,
+6.732781108033908e-01, +6.790470657166684e-01, +6.847932667399612e-01, +6.905153235578969e-01,
+6.962122668445681e-01, +7.018835463513400e-01, +7.075281787629503e-01, +7.131447476468400e-01,
+7.187322544823347e-01, +7.242901217843889e-01, +7.298174107967581e-01, +7.353128213893310e-01,
+7.407754721062685e-01, +7.462048970975652e-01, +7.516001985652684e-01, +7.569600449843341e-01,
+7.622834795152550e-01, +7.675699252273948e-01, +7.728184915997067e-01, +7.780279710901641e-01,
+7.831974571624924e-01, +7.883263448127340e-01, +7.934137241269077e-01, +7.984583859818390e-01,
+8.034595539057413e-01, +8.084168767164887e-01, +8.133295347030278e-01, +8.181962433248811e-01,
+8.230162284197827e-01, +8.277892271515950e-01, +8.325145336568091e-01, +8.371909942430671e-01,
+8.418178561101360e-01, +8.463947757326752e-01, +8.509211545601609e-01, +8.553961300139363e-01,
+8.598190417223652e-01, +8.641894434050258e-01, +8.685068980898102e-01, +8.727709688046102e-01,
+8.769788376631916e-01, +8.811334436653052e-01, +8.852318659908962e-01, +8.892739843568178e-01,
+8.932596784799233e-01, +8.971888108843806e-01, +9.010608486625941e-01, +9.048748835980528e-01,
+9.086304531070754e-01, +9.123275405380156e-01, +9.159657608120536e-01, +9.195443573144829e-01, +9.230629478622332e-01, +9.265215299450000e-01, +9.299198500625820e-01, +9.332574012340955e-01,
+9.365339988633418e-01, +9.397497768500882e-01, +9.429045261728636e-01, +9.459977028429117e-01,
+9.490292643083790e-01, +9.519996619967281e-01, +9.549088408436811e-01, +9.577562383751640e-01,
+9.605417649811824e-01, +9.632658122557368e-01, +9.659284562011029e-01, +9.685294510301206e-01,
+9.710688896122810e-01, +9.735472021876628e-01, +9.759644676274450e-01, +9.783204156360773e-01,
+9.806151639385083e-01, +9.828492160865892e-01, +9.850226760127131e-01, +9.871352538808781e-01,
+9.891871802564161e-01, +9.911792082081333e-01, +9.931117453856605e-01, +9.949848494122985e-01,
+9.967989944502682e-01, +9.985550647085534e-01, +1.000253445050194e+00, +1.001894024615659e+00,
+1.003477185929786e+00, +1.005003807883761e+00, +1.006474342231823e+00, +1.007888812850102e+00,
+1.009247722934429e+00, +1.010552057109195e+00, +1.011802420624526e+00, +1.012999036304394e+00,
+1.014142538208007e+00, +1.015233969130880e+00, +1.016273931967023e+00, +1.017262593268930e+00,
+1.018200610205248e+00, +1.019089129704898e+00, +1.019928842669923e+00, +1.020719983374545e+00,
+1.021463262031346e+00, +1.022159867011177e+00, +1.022810581114847e+00, +1.023415781467653e+00,
+1.023976320927187e+00, +1.024493524092612e+00, +1.024968218100715e+00, +1.025400734608122e+00,
+1.025791922603958e+00, +1.026143150540689e+00, +1.026455340400072e+00, +1.026728963502498e+00,
+1.026964914246647e+00, +1.027164510654160e+00, +1.027328632612924e+00, +1.027457725038440e+00,
+1.027552729180790e+00, +1.027615074932096e+00, +1.027645580283665e+00, +1.027644462380432e+00,
+1.027612681261584e+00, +1.027551936393756e+00, +1.027463246660797e+00, +1.027346944848234e+00,
+1.027203976311704e+00, +1.027035903410657e+00, +1.026843704381356e+00, +1.026627771359327e+00,
+1.026389068000259e+00, +1.026129124951269e+00, +1.025848782597774e+00, +1.025548201799728e+00,
+1.025228357342061e+00, +1.024891029860151e+00, +1.024537134749709e+00, +1.024166724015001e+00,
+1.023780698019775e+00, +1.023380803775376e+00, +1.022967885528204e+00, +1.022541888689137e+00,
+1.022103695693341e+00, +1.021655115592693e+00, +1.021196819229254e+00, +1.020728359657958e+00,
+1.020250686272421e+00, +1.019766121526662e+00, +1.019275334687329e+00, +1.018777362174335e+00,
+1.018273081302452e+00, +1.017765178792830e+00, +1.017253984284701e+00, +1.016737542074604e+00,
+1.016217355867531e+00, +1.015698328083719e+00, +1.015181679856847e+00, +1.014665311686846e+00,
+1.014158817803440e+00, +1.013683181980586e+00, +1.013249071090664e+00, +1.012854331657942e+00,
+1.012450620480768e+00, +1.011948006992127e+00, +1.011349594569779e+00, +1.010750807770724e+00,
+1.010189090179223e+00, +1.009640487251585e+00, +1.009094771053394e+00, +1.008557961167850e+00,
+1.008032659941965e+00, +1.007517375307989e+00, +1.007011287608451e+00, +1.006514430011155e+00,
+1.006026890813957e+00, +1.005548764575910e+00, +1.005079874697786e+00, +1.004619788163424e+00,
+1.004168417268956e+00, +1.003726014625139e+00, +1.003292461479605e+00, +1.002867268893035e+00,
+1.002450315292720e+00, +1.002041847623544e+00, +1.001641769115897e+00, +1.001249637387833e+00,
+1.000865334924641e+00, +1.000489068954641e+00, +1.000120698237067e+00, +9.997597357106623e-01,
+9.994060799749374e-01, +9.990600138594018e-01, +9.987214414655692e-01, +9.983898865406841e-01,
+9.980652196577338e-01, +9.977476599094836e-01, +9.974370849972721e-01, +9.971330321102652e-01,
+9.968354071802502e-01, +9.965444836911705e-01, +9.962601672340514e-01, +9.959819947971522e-01,
+9.957098545943852e-01, +9.954439865572462e-01, +9.951842733288886e-01, +9.949302413030897e-01,
+9.946817924874576e-01, +9.944392047205887e-01, +9.942024045863540e-01, +9.939709658067042e-01,
+9.937448009691057e-01, +9.935241604969254e-01, +9.933089182704574e-01, +9.930985748592784e-01,
+9.928930430130044e-01, +9.926926485907741e-01, +9.924973655191176e-01, +9.923068103443909e-01,
+9.921208874284833e-01, +9.919397899901643e-01, +9.917633778190438e-01, +9.915911837376036e-01,
+9.914231780519580e-01, +9.912597642374404e-01, +9.911009195707438e-01, +9.909461904886675e-01,
+9.907954498484041e-01, +9.906489032572322e-01, +9.905064710654814e-01, +9.903677893656558e-01,
+9.902328499802091e-01, +9.901019951653361e-01, +9.899751611066148e-01, +9.898518794779545e-01,
+9.897320682428268e-01, +9.896160337369861e-01, +9.895037256870947e-01, +9.893947359604699e-01,
+9.892890160408989e-01, +9.891868774704359e-01, +9.890882840931410e-01, +9.889928511129679e-01,
+9.889005321235379e-01, +9.888116182908468e-01, +9.887260333430423e-01, +9.886433365303475e-01,
+9.885634927535989e-01, +9.884868721088945e-01, +9.884134697413018e-01, +9.883429020724473e-01,
+9.882751039537586e-01, +9.882103306444820e-01, +9.881485041748238e-01, +9.880892168751595e-01,
+9.880324626554831e-01, +9.879786335149536e-01, +9.879277114724612e-01, +9.878792663495038e-01,
+9.878332150629403e-01, +9.877898261218510e-01, +9.877490592657352e-01, +9.877105653505679e-01,
+9.876743442038471e-01, +9.876407405135295e-01, +9.876096955295567e-01, +9.875807496078497e-01,
+9.875538464766127e-01, +9.875293349435258e-01, +9.875072021876561e-01, +9.874870704481152e-01,
+9.874688908826080e-01, +9.874529447589979e-01, +9.874391758112012e-01, +9.874271920836210e-01,
+9.874169741527905e-01, +9.874088727307169e-01, +9.874028477167635e-01, +9.873984685207834e-01,
+9.873956821201697e-01, +9.873948143463702e-01, +9.873958301311858e-01, +9.873983326194351e-01,
+9.874022834012905e-01, +9.874080027710336e-01, +9.874154551873394e-01, +9.874242488204272e-01, +9.874343401290739e-01, +9.874460335035745e-01, +9.874592688338504e-01, +9.874736235387018e-01,
+9.874890696412385e-01, +9.875059727945840e-01, +9.875243137719285e-01, +9.875436862847529e-01,
+9.875640274936844e-01, +9.875856201221136e-01, +9.876084084448705e-01, +9.876319996758224e-01,
+9.876563785063032e-01, +9.876819048329899e-01, +9.877085492327816e-01, +9.877358921155149e-01,
+9.877638696088412e-01, +9.877927754855115e-01, +9.878225576787804e-01, +9.878528193014621e-01,
+9.878835445497628e-01, +9.879150968481590e-01, +9.879474521328961e-01, +9.879801976843903e-01,
+9.880132731565830e-01, +9.880469724750991e-01, +9.880812445673735e-01, +9.881156946084619e-01,
+9.881503106987573e-01, +9.881854620136666e-01, +9.882211314188272e-01, +9.882569137253582e-01,
+9.882927446902245e-01, +9.883289032519310e-01, +9.883653317154473e-01, +9.884016382257884e-01,
+9.884378310018685e-01, +9.884743146700878e-01, +9.885110753693968e-01, +9.885476787868710e-01,
+9.885840418353093e-01, +9.886204379327659e-01, +9.886568414746639e-01, +9.886929275063397e-01,
+9.887287200468966e-01, +9.887645868459630e-01, +9.888004757085318e-01, +9.888359174300858e-01,
+9.888708540445242e-01, +9.889056416611736e-01, +9.889402846310907e-01, +9.889744320992592e-01,
+9.890080679866394e-01, +9.890415110770159e-01, +9.890747269455915e-01, +9.891073295256775e-01,
+9.891393036472682e-01, +9.891710038703801e-01, +9.892024062799223e-01, +9.892331093959095e-01,
+9.892631024032380e-01, +9.892927650908963e-01, +9.893220982848433e-01, +9.893507219573624e-01,
+9.893786032000026e-01, +9.894060580815116e-01, +9.894330645494204e-01, +9.894592636950934e-01,
+9.894846746832306e-01, +9.895096919388534e-01, +9.895343083314785e-01, +9.895581152602352e-01,
+9.895810813422480e-01, +9.896035553161019e-01, +9.896255512296797e-01, +9.896467469067676e-01,
+9.896671650245172e-01, +9.896871706698203e-01, +9.897067365020641e-01, +9.897254458138418e-01,
+9.897432947038028e-01, +9.897606930400666e-01, +9.897776834824588e-01, +9.897939374675170e-01,
+9.898094478563998e-01, +9.898245305815332e-01, +9.898391682249337e-01, +9.898530133261707e-01,
+9.898661175792055e-01, +9.898789278944983e-01, +9.898914705684924e-01, +9.899033504013042e-01,
+9.899145471163803e-01, +9.899254194103574e-01, +9.899359976303029e-01, +9.899459823437818e-01,
+9.899554202030650e-01, +9.899647016766845e-01, +9.899738352794291e-01, +9.899824494486951e-01,
+9.899905595941995e-01, +9.899985686323577e-01, +9.900065116928948e-01, +9.900140555182825e-01,
+9.900212405447888e-01, +9.900284805353695e-01, +9.900358124222742e-01, +9.900428956722681e-01,
+9.900497484789281e-01, +9.900567489573141e-01, +9.900639252344197e-01, +9.900709561632662e-01,
+9.900778969424803e-01, +9.900851772980046e-01, +9.900928358611601e-01, +9.901005198590931e-01,
+9.901082439265390e-01, +9.901163920607219e-01, +9.901250018173793e-01, +9.901337646053293e-01,
+9.901427479709606e-01, +9.901523931998540e-01, +9.901627402679979e-01, +9.901734275350572e-01,
+9.901844600451093e-01, +9.901962127540933e-01, +9.902087332329851e-01, +9.902217409846106e-01,
+9.902353097103640e-01, +9.902498637985275e-01, +9.902654188005916e-01, +9.902815836378273e-01,
+9.902983686695558e-01, +9.903161882791064e-01, +9.903351096966241e-01, +9.903548501470234e-01,
+9.903754652821575e-01, +9.903973477947732e-01, +9.904205084933333e-01, +9.904445786599008e-01,
+9.904695808487622e-01, +9.904959297726740e-01, +9.905236810016560e-01, +9.905525289918011e-01,
+9.905825150202904e-01, +9.906140262079994e-01, +9.906470660818262e-01, +9.906812569810133e-01,
+9.907166224339236e-01, +9.907535876784416e-01, +9.907922087340426e-01, +9.908321697026107e-01,
+9.908734943143861e-01, +9.909165464981378e-01, +9.909613313790248e-01, +9.910074971074613e-01,
+9.910550740962871e-01, +9.911044737993845e-01, +9.911557226040716e-01, +9.912084614290896e-01,
+9.912627029879084e-01, +9.913188323156490e-01, +9.913768610980639e-01, +9.914364276145792e-01,
+9.914975411562229e-01, +9.915605826937839e-01, +9.916255751593622e-01, +9.916921826078263e-01,
+9.917604214872976e-01, +9.918306597984429e-01, +9.919028873284097e-01, +9.919767175562684e-01,
+9.920521593387949e-01, +9.921296166135889e-01, +9.922091101818779e-01, +9.922902757201201e-01,
+9.923730982524657e-01, +9.924579135466506e-01, +9.925447043512063e-01, +9.926331018900273e-01,
+9.927231225056266e-01, +9.928151658609977e-01, +9.929092387372991e-01, +9.930049538427406e-01,
+9.931022798104318e-01, +9.932015434077218e-01, +9.933027281437943e-01, +9.934054751445924e-01,
+9.935098037935540e-01, +9.936161084869942e-01, +9.937243666117925e-01, +9.938341389810342e-01,
+9.939453714404443e-01, +9.940583985614073e-01, +9.941732232809857e-01, +9.942895145656371e-01,
+9.944072763730046e-01, +9.945268452163670e-01, +9.946481676207727e-01, +9.947708034711511e-01,
+9.948947222146535e-01, +9.950203031067961e-01, +9.951475444242728e-01, +9.952760608735062e-01,
+9.954058173659507e-01, +9.955371298969039e-01, +9.956699511040611e-01, +9.958038713694317e-01,
+9.959388575029996e-01, +9.960752523364563e-01, +9.962130271017117e-01, +9.963517811272741e-01,
+9.964914827801233e-01, +9.966324689957675e-01, +9.967746939976430e-01, +9.969177298776669e-01,
+9.970615306490058e-01, +9.972064329530154e-01, +9.973524075591346e-01, +9.974990583293081e-01,
+9.976463479353705e-01, +9.977945971317506e-01, +9.979437430375855e-01, +9.980933404947205e-01,
+9.982433336615963e-01, +9.983940572002874e-01, +9.985454907974421e-01, +9.986972567262494e-01,
+9.988493116887893e-01, +9.990019468868200e-01, +9.991550977367476e-01, +9.993083430214909e-01, +9.994615765165296e-01, +9.996150231216515e-01, +9.997689221333534e-01, +9.999235128481329e-01,
+1.000076493002599e+00, +1.000231131275969e+00, +1.000385125142624e+00, +1.000538713539491 e+00,
+1.000692135698996e+00, +1.000845616726739e+00, +1.000999050218361e+00, +1.001152013920163e+00,
+1.001304442627610e+00, +1.001456627881216e+00, +1.001608526000461e+00, +1.001759757645423e+00,
+1.001910301800365e+00, +1.002060493867275e+00, +1.002210277420412e+00, +1.002359204811906e+00,
+1.002507212061815e+00, +1.002654620794815e+00, +1.002801392925948e+00, +1.002947129400411 e+00,
+1.003091799884742e+00, +1.003235742261295e+00, +1.003378909587027e+00, +1.003520870253791e+00,
+1.003661577107433e+00, +1.003801368578070e+00, +1.003940212001390e+00, +1.004077702628435e+00,
+1.004213810320699e+00, +1.004348879757933e+00, +1.004482876599046e+00, +1.004615386562846e+00,
+1.004746360645254e+00, +1.004876116715471e+00, +1.005004618375781e+00, +1.005131475392675e+00,
+1.005256684766584e+00, +1.005380628601598e+00, +1.005503275059852e+00, +1.005624178100742e+00,
+1.005743282364652e+00, +1.005860927032197e+00, +1.005977115074116e+00, +1.006091510392348e+00,
+1.006204114728125e+00, +1.006315265680367e+00, +1.006424907424988e+00, +1.006532594023395e+00,
+1.006638301298317e+00, +1.006742427727669e+00, +1.006844991973082e+00, +1.006945629196305e+00,
+1.007044321511378e+00, +1.007141399219649e+00, +1.007236829559076e+00, +1.007330218597112e+00,
+1.007421572075267e+00, +1.007511294570522e+00, +1.007599401798709e+00, +1.007685518441567e+00,
+1.007769625953741 e+00, +1.007852064386603e+00, +1.007932817703069e+00, +1.008011514905126e+00,
+1.008088176165563e+00, +1.008163211111724e+00, +1.008236628017949e+00, +1.008308033204578e+00,
+1.008377415429783e+00, +1.008445148098658e+00, +1.008511247273756e+00, +1.008575370579197e+00,
+1.008637540589491e+00, +1.008698144207627e+00, +1.008757190321980e+00, +1.008814310258779e+00,
+1.008869515256392e+00, +1.008923196622113e+00, +1.008975366811245e+00, +1.009025659761512e+00,
+1.009074101779034e+00, +1.009121111323685e+00, +1.009166718967367e+00, +1.009210565968291e+00,
+1.009252657087366e+00, +1.009293362609020e+00, +1.009332706372757e+00, +1.009370366213570e+00,
+1.009406398832440e+00, +1.009441237185677e+00, +1.009474905002031e+00, +1.009507017171120e+00,
+1.009537576990303e+00, +1.009566978740742e+00, +1.009595264293017e+00, +1.009622122007090e+00,
+1.009647608302352e+00, +1.009672145744679e+00, +1.009695757189383e+00, +1.009718066587100e+00,
+1.009739084785160e+00, +1.009759212016967e+00, +1.009778504921465e+00, +1.009796675060142e+00,
+1.009813790867919e+00, +1.009830274807737e+00, +1.009846137382005e+00, +1.009860979702382e+00,
+1.009874817539016e+00, +1.009888083631667e+00, +1.009900853103284e+00, +1.009912839830312e+00,
+1.009924092276850e+00, +1.009934992836975e+00, +1.009945546632798e+00, +1.009955384765721e+00,
+1.009964547970550e+00, +1.009973486342123e+00, +1.009982268770147e+00, +1.009990580458388e+00,
+1.009998459694088e+00, +1.010006298177305e+00, +1.010014110835447e+00, +1.010021537788250e+00,
+1.010028618428735e+00, +1.010035791136646e+00, +1.010043112228827e+00, +1.010050254076988e+00,
+1.010057245369122e+00, +1.010064471863242e+00, +1.010071952131355e+00, +1.010079338752086e+00,
+1.010086669402375e+00, +1.010094366238073e+00, +1.010102470533325e+00, +1.010110642277138e+00,
+1.010118917317053e+00, +1.010127706776959e+00, +1.010137026407425e+00, +1.010146497096682e+00,
+1.010156127541843e+00, +1.010166316200025e+00, +1.010177110711677e+00, +1.010188205550670e+00,
+1.010199631706068e+00, +1.010211755260102e+00, +1.010224555569669e+00, +1.010237629352925e+00,
+1.010251003469427e+00, +1.010265134075557e+00, +1.010280073997043e+00, +1.010295468653759e+00,
+1.010311300308220e+00, +1.010327891493345e+00, +1.010345234996637e+00, +1.010362995486892e+00,
+1.010381216558204e+00, +1.010400316698172e+00, +1.010420292023388e+00, +1.010440717183162e+00,
+1.010461564316351e+00, +1.010483206256578e+00, +1.010505666262059e+00, +1.010528615445659e+00,
+1.010552068219883e+00, +1.010576380809038e+00, +1.010601521285347e+00, +1.010627072440648e+00,
+1.010653027053931e+00, +1.010679788081867e+00, +1.010707375229772e+00, +1.010735421976626e+00,
+1.010763905869062e+00, +1.010793149909083e+00, +1.010823120603859e+00, +1.010853429760676e+00,
+1.010884078284304e+00, +1.010915454361544e+00, +1.010947547074519e+00, +1.010979946214537e+00,
+1.011012627395599e+00, +1.011045953108263e+00, +1.011079907971760e+00, +1.011114097416553e+00,
+1.011148486293359e+00, +1.011183400596362e+00, +1.011218823992338e+00, +1.011254397791134e+00,
+1.011290126474096e+00, +1.011326374295525e+00, +1.011363082075863e+00, +1.011399769951629e+00,
+1.011436384522522e+00, +1.011473302008831e+00, +1.011510547051838e+00, +1.011547787220495e+00,
+1.011584996312149e+00, +1.011622454130127e+00, +1.011660075693276e+00, +1.011697416504599e+00,
+1.011734462313348e+00, +1.011771627262926e+00, +1.011808919793469e+00, +1.011845938738977e+00,
+1.011882624964772e+00, +1.011919264025716e+00, +1.011955790122897e+00, +1.011991788266365e+00,
+1.012027240794153e+00, +1.012062525726662e+00, +1.012097630839309e+00, +1.012132151631041e+00,
+1.012166035659198e+00, +1.012199583936457e+00, +1.012232734564333e+00, +1.012265064558555e+00,
+1.012296549102454e+00, +1.012327560477901 e+00, +1.012358082400925e+00, +1.012387708001513e+00,
+1.012416383754384e+00, +1.012444410627777e+00, +1.012471723038292e+00, +1.012497890726292e+00,
+1.012522883349504e+00, +1.012547069718292e+00, +1.012570434021054e+00, +1.012592573402938e+00, +1.012613430563370e+00, +1.012633295255708e+00, +1.012652102923549e+00, +1.012669436800254e+00, +1.012685277016726e+00, +1.012699998432300e+00, +1.012713572256585e+00, +1.012725564992284e+00, +1.012735914876099e+00, + 1.012744934005791e+00, +1.012752577651415e+00, +1.012758443858682e+00, +1.012762496111508e+00, +1.012765062889864e+00, +1.012766104774385e+00, +1.012765214703761e+00, +1.012762356719162e+00, +1.012757865052107e+00, +1.012751685362581e+00, +1.012743376077777e+00, +1.012732896174196e+00, +1.012720605477780e+00, +1.012706484200181e+00, +1.012690130527749e+00, +1.012671486975730e+00, +1.012650842226435e+00, +1.012628146441024e+00, +1.012603012552473e+00, +1.012575427778520e+00, +1.012545750134419e+00, +1.012513922299362e+00, +1.012479473490919e+00, +1.012442344023191e+00, +1.012402887777359e+00, +1.012361105121003e+00, +1.012316638832887e+00, +1.012269448366181e+00, +1.012219809594718e+00, +1.012167638122170e+00, +1.012112494069630e+00, +1.012054359992419e+00, +1.011993638380370e+00, +1.011930323929956e+00, +1.011864000215460e+00, +1.011794588601900e+00, +1.011722351640686e+00, +1.011647223869087e+00, +1.011568814072372e+00, +1.011487118812239e+00, +1.011402518267713e+00, +1.011314978002071e+00, +1.011224048846073e+00, +1.011129654652857e+00, +1.011032094993283e+00, + 1.010931324278397e+00, +1.010826951260377e+00, +1.010718941241622e+00, +1.010607614747097e+00, +1.010492924436361e+00, +1.010374455963019e+00, +1.010252160684281e+00, +1.010126353960416e+00, +1.009996954741022e+00, +1.009863488188648e+00, +1.009725892479312e+00, +1.009584519851048e+00, +1.009439365159565e+00, +1.009290060983833e+00, +1.009136529912757e+00, +1.008978985140192e+00, +1.008817301052548e+00, +1.008651020208035e+00, +1.008480124067563e+00, +1.008305027555130e+00, +1.008125704897790e+00, +1.007941686009594e+00, +1.007752833675443e+00, +1.007559349517223e+00, +1.007361141859567e+00, +1.007157827358150e+00, +1.006949385806640e+00, +.006736153885735e+00, +1.006518049344503e+00, +1.006294572836803e+00, +1.006065603926773e+00, +1.005831403532018e+00, +1.005591890638477e+00, +1.005346642064537e+00, +1.005095592119373e+00, +1.004839030117511e+00, +1.004576865704429e+00, +1.004308630055050e+00, +1.004034214698496e+00, +1.003753871618025e+00, +1.003467498305776e+00, +1.003174639260358e+00, +1.002875211027427e+00, +1.002569500413888e+00, +1.002257424578396e+00, +1.001938530973887e+00, +1.001612710105563e+00, +1.001280195339107e+00, +1.000940870545871e+00, +1.000594272975683e+00, +1.000240322030139e+00, +9.998793163292398e-01, +9.995111701168786e-01, +9.991354132324841e-01, +9.987519222567783e-01, +9.983609218719522e-01, +9.979623130227679e-01, +9.975556740764708e-01, +9.971409288327860e-01, +9.967183432488375e-01, +9.962878170229250e-01, +9.958488863050556e-01, +9.954014561350919e-01, +9.949458000048871e-01, +9.944818543153893e-01, +9.940092149931687e-01, +9.935277331184579e-01, +9.930375282832211e-01, +9.925387139793089e-01, +9.920313495175566e-01, +9.915146560759479e-01, +9.909871983144850e-01, +9.904515643208522e-01, +9.899136802423638e-01, +9.893635427366756e-01, +9.887777731550811e-01, +9.881930623810997e-01, +9.877024911349694e-01, +9.867719346048082e-01, +9.859422591203311e-01, +9.851327817259932e-01, +9.843446542813931e-01, +9.835667898378924e-01, +9.827784388364600e-01, +9.819697981806308e-01, +9.811423034808365e-01, +9.802944493567077e-01, +9.794214312173470e-01, +9.785214441250228e-01, +9.775957513212234e-01, +9.766438929361375e-01, +9.756636036109838e-01, +9.746537914797736e-01, +9.736145835187847e-01, +9.725453442532574e-01, +9.714446445280863e-01, +9.703115557563614e-01, +9.691456634185093e-01, +9.679460697948364e-01, +9.667113883637859e-01, +9.654406178310210e-01, +9.641331517728559e-01, +9.627881167626269e-01, +9.614043615076308e-01, +9.599808797353324e-01, +9.585168210361295e-01, +9.570113065179300e-01, +9.554634210701282e-01, +9.538722275164798e-01, +9.522367669696690e-01, +9.505560524788548e-01, +9.488290728836637e-01, +9.470548839544214e-01, +9.452326100986821e-01, +9.433613907645669e-01, +9.414403740008491e-01, +9.394686283754716e-01, +9.374451520790944e-01, +9.353691612846549e-01, +9.332400814902009e-01, +9.310570687016885e-01, +9.288190093977164e-01, +9.265249985708898e-01, +9.241743479451956e-01, +9.217662887169116e-01, +9.192999665754161e-01, +9.167746294201033e-01, +9.141896283466009e-01, +9.115442516266717e-01, +9.088377281110291e-01, +9.060694681113471e-01, +9.032390575925977e-01, +9.003458895224528e-01, +8.973891675497357e-01, +8.943683555809617e-01, +8.912831789317232e-01, +8.881332000806269e-01, +8.849178157571976e-01, +8.816366171218113e-01, +8.782893885841422e-01, +8.748757216290605e-01, +8.713950183935990e-01, +8.678469565343039e-01, +8.642314881034361e-01, +8.605483499580321e-01, +8.567970644671067e-01, +8.529774446610170e-01, +8.490895965655302e-01, +8.451334654019179e-01, +8.411088323972666e-01, +8.370156984112052e-01, +8.328542805780399e-01, +8.286245548070180e-01, +8.243262611129502e-01, +8.199594783897041e-01, +8.155246236571582e-01, +8.110218607207131e-01, +8.064511006873497e-01, +8.018126046593852e-01, +7.971069856439827e-01, +7.923346478686025e-01, +7.874957820910923e-01, +7.825908231062452e-01, +7.776204488292163e-01, +7.725851026241404e-01, +7.674849949914248e-01, +7.623206183595970e-01, +7.570927486638241e-01, +7.518019652814979e-01, +7.464486491227057e-01, +7.410334206850239e-01, +7.355571439110484e-01, +7.300205729992958e-01, +7.244243523154849e-01, +7.187693676298663e-01, +7.130567383226717e-01, +7.072872946666678e-01, +7.014615845640527e-01, +6.955805444755916e-01, +6.896454997760704e-01, +6.836575016451227e-01, +6.776173229836567e-01,
+6.715260316843978e-01, +6.653849997460716e-01, +6.591955305148172e-01, +6.529588449241264e-01,
+6.466761515320369e-01, +6.403486426892321e-01, +6.339773402000435e-01, +6.275631129756770e-01,
+6.211072197441818e-01, +6.146113064454106e-01, +6.080768062101946e-01, +6.015049275244732e-01,
+5.948969938609885e-01, +5.882544536827298e-01, +5.815787608870452e-01, +5.748713693712827e-01,
+5.681329838024681e-01, +5.613674511156831e-01, +5.545756384163615e-01, +5.477589552377587e-01,
+5.409188627354240e-01, +5.340568757452271e-01, +5.271745849688633e-01, +5.202736834971303e-01,
+5.133560289814199e-01, +5.064236063322167e-01, +4.994780733459294e-01, +4.925207788759675e-01,
+4.855532972838063e-01, +4.785774177949064e-01, +4.715949057752619e-01, +4.646075325068186e-01,
+4.576172599874965e-01, +4.506262048599546e-01, +4.436362416499966e-01, +4.366490208265834e-01,
+4.296663370497900e-01, +4.226901117060164e-01, +4.157221460416020e-01, +4.087641442756610e-01,
+4.018179771137481e-01, +3.948856590950779e-01, +3.879690747948260e-01, +3.810699982632091e-01,
+3.741903189229788e-01, +3.673320150150139e-01, +3.604969483256886e-01, +3.536868899553974e-01,
+3.469037339648918e-01, +3.401494735467201e-01, +3.334260017756462e-01, +3.267351352184045e-01,
+3.200787300572631e-01, +3.134586473252229e-01, +3.068766522215559e-01, +3.003344428572218e-01,
+2.938337904395881e-01, +2.873765136803315e-01, +2.809644064498411e-01, +2.745992637590826e-01,
+2.682828578001429e-01, +2.620169058204753e-01, +2.558030636168179e-01, +2.496429506725780e-01,
+2.435381581076193e-01, +2.374902188466703e-01, +2.315007158769866e-01, +2.255713139320687e-01,
+2.197036032185791e-01, +2.138990608950040e-01, +2.081591884177564e-01, +2.024855415115456e-01,
+1.968794982265323e-01, +1.913422230760984e-01, +1.858749915117319e-01, +1.804792270036454e-01,
+1.751561592043750e-01, +1.699067802117410e-01, +1.647322739698192e-01, +1.596340539111631e-01,
+1.546132267478876e-01, +1.496705434426226e-01, +1.448069879076800e-01, +1.400238206749698e-01,
+1.353218971490514e-01, +1.307016182576054e-01, +1.261637395672916e-01, +1.217094187032866e-01,
+1.173392980385558e-01, +1.130534434072722e-01, +1.088524061173192e-01, +1.047372831131808e-01,
+1.007084973747942e-01, +9.676572618933918e-02, +9.290929444691418e-02, +8.914024389873081e-02,
+8.545874375771015e-02, +8.186400751918757e-02, +7.835612100141792e-02, +7.493612463933132e-02,
+7.160392900131578e-02, +6.835821233920988e-02, +6.519882821193619e-02, +6.212691236769909e-02,
+5.914211536028985e-02, +5.624247476796568e-02, +5.342762364238927e-02, +5.069893012340838e-02,
+4.805577285587748e-02, +4.549537570011979e-02, +4.301717763585556e-02, +4.062301532941800e-02,
+3.831198264259714e-02, +3.608020726673365e-02, +3.392698736873631e-02, +3.185504779821543e-02,
+2.986316337017634e-02, +2.794584821783607e-02, +2.610239043507366e-02, +2.433722657129812e-02,
+2.264871565562373e-02, +2.102867478775550e-02, +1.947675241971700e-02, +1.800101670620712e-02,
+1.659903330901047e-02, +1.525710171255895e-02, +1.397610119023076e-02, +1.277238121584596e-02,
+1.163787492636242e-02, +1.053809096662833e-02, +9.464262017505555e-03, +8.433087782643726e-03,
+7.364501936162659e-03, +6.073847663871269e-03, +4.449668997344740e-03, +2.485333612762431e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

29. The apparatus of any of claims 6-21, wherein the synthesis windowing function (290) comprises a succession, in forward or backward order, formed by the following values with $\pm 1\%$ of tolerance:
+9.959086585790517e-04, +3.819056787237678e-03, +9.540832613229890e-03, +1.921659800166160e-02,
+3.382719081038548e-02, +5.424831667522354e-02, +8.120777668775610e-02, +1.152171887125930e-01,
+1.564942331034909e-01, +2.049363422022628e-01, +2.601166575816199e-01, +3.212814164616093e-01,
+3.873472997948746e-01, +4.569497078592333e-01, +5.285192958868393e-01, +6.003522489375573e-01,
+6.706896380227332e-01, +7.378044458510402e-01, +8.000925313431716e-01, +8.561409184410547e-01,
+9.048272294524792e-01, +9.453685031730190e-01, +9.773507430600533e-01, +1.000800872826561e+00,
+1.016171590112097e+00, +1.024315247630982e+00, +1.026415431432931e+00, +1.023583366571912e+00,
+1.018135705524407e+00, +1.010794822557756e+00, +1.003406509762925e+00, +9.967831265986109e-01,
+9.920995520917141e-01, +9.892206942816891e-01, +9.879658322200813e-01, +9.881273531631907e-01,
+9.894805541465801e-01, +9.917849916000535e-01, +9.947847580943504e-01, +9.982119669301160e-01,
+1.001791235858836e+00, +1.005242583245485e+00, +1.008283053756130e+00, +1.010631281038659e+00,
+1.012015300253356e+00, +1.012180753005270e+00, +1.010896765282633e+00, +1.007963362035220e+00,
+1.003227255072391e+00, +9.966050551498514e-01, +9.868284225039941e-01, +9.731250287581631e-01,
+9.540636479502398e-01, +9.283864275822276e-01, +8.950916858157935e-01, +8.534769362643825e-01,
+8.032090930429980e-01, +7.444735201251689e-01, +6.780787033699449e-01, +6.053970453856138e-01,
+5.282077505750667e-01, +4.486552956056635e-01, +3.691875990296312e-01, +2.924566408966777e-01,
+2.210718537110463e-01, +1.573148583944309e-01, +1.030525757797768e-01, +5.982732244758054e-02,
+2.871831923385133e-02, +9.683884928956490e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00.

30. The apparatus of any of claims 6-21, wherein the synthesis windowing function (290) comprises a succession, in forward or backward order, formed by the following values with $\pm 1\%$ of tolerance:
+6.143388180964179e-04, +1.489582832987000e-03, +2.884104959764029e-03, +4.934298832466617e-03,
+7.779130464154915e-03, +1.154910606525086e-02, +1.637155619860352e-02, +2.237116158648752e-02,
+2.966159685753317e-02, +3.835663329277230e-02, +4.855610986150206e-02, +6.035055738891727e-02,
+7.382288203064732e-02, +8.903563687211119e-02, +1.060356225286319e-01, +1.248548555777947e-01,
+1.454931890869180e-01, +1.679435556337752e-01, +1.921728622634411e-01, +2.181238261985594e-01,
+2.457259744642953e-01, +2.748839432649996e-01, +3.054824712370942e-01, +3.373873799614014e-01,
+3.704415932452488e-01, +4.044749630814483e-01, +4.393004362003260e-01, +4.747225454237193e-01,
+5.105341492548225e-01, +5.465201916422433e-01, +5.824658100332457e-01, +6.181452662624718e-01,
+6.533411462740817e-01, +6.878367295965062e-01, +7.214176027060971e-01, +7.538887973483771e-01,
+7.850546571907628e-01, +8.147397447696774e-01, +8.427819363777799e-01, +8.690376742017057e-01,
+8.933935477349644e-01, +9.157483563218768e-01, +9.360270196617569e-01, +9.541731142261065e-01,
+9.701635474343885e-01, +9.840036439809510e-01, +9.957199420334376e-01, +1.005374268639838e+00,
+1.013046655758663e+00, +1.018843380560658e+00, +1.022896948293643e+00, +1.025355286710874e+00,
+1.026382881625701e+00, +1.026155530733488e+00, +1.024853974580724e+00, +1.022664602721801e+00,
+1.019779396547454e+00, +1.016391686789653e+00, +1.012697033320358e+00, +1.008885191761748e+00,
+1.005378742804807e+00, +1.001563778373068e+00, +9.982531564931281e-01, +9.954346644968789e-01,
+9.930950268060122e-01, +9.912170911359961e-01, +9.897805192546195e-01, +9.887624937408933e-01,
+9.881383235740961e-01, +9.878819413827574e-01, +9.879662130250981e-01, +9.883630508181326e-01,
+9.890434070785485e-01, +9.899772316163624e-01, +9.911334564321237e-01, +9.924800441092685e-01,
+9.939841207305906e-01, +9.956121471675398e-01, +9.973300590248015e-01, +9.991033633647473e-01,
+1.000897441314013e+00, +1.002677088643863e+00, +1.004407190937699e+00, +1.006052289109999e+00,
+1.007576934100958e+00, +1.008945862447015e+00, +1.010124241309341e+00, +1.011077969726137e+00,
+1.011773962181442e+00, +1.012180362866919e+00, +1.012266707295288e+00, +1.012004064757857e+00, +1.011365223023975e+00, +1.010324996851905e+00, +1.008860731864438e+00, +1.006952983357691e+00,
+1.004586273379809e+00, +1.001749900308864e+00, +9.984386632116344e-01, +9.946500332901397e-01,
+9.895756853352172e-01, +9.838303127859196e-01, +9.769999155793757e-01, +9.689141159310996e-01,
+9.594038121639412e-01, +9.483086322505029e-01, +9.354860218216989e-01, +9.208101305030523e-01,
+9.041732260327581e-01, +8.854882249661838e-01, +8.646864947605046e-01, +8.417237467711145e-01,
+8.165875713256009e-01, +7.892986353718001e-01, +7.599171886893816e-01, +7.285474515411827e-01,
+6.953282935906302e-01, +6.604334017809461e-01, +6.240661431421666e-01, +5.864461424698465e-01,
+5.478160663871147e-01, +5.084499758302218e-01, +4.686361426418982e-01, +4.286789889246253e-01,
+3.889032719013045e-01, +3.496431418636314e-01, +3.112360816586544e-01, +2.740128472224535e-01,
+2.382847225401666e-01, +2.043379825955252e-01, +1.724305860483632e-01, +1.427939789949265e-01,
+1.156385879569741e-01, +9.115821766571995e-02, +6.952749039054593e-02, +5.088975408628225e-02,
+3.533430192568954e-02, +2.286680405144430e-02, +1.338005016725895e-02, +6.640506529168652e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00

31. The apparatus of any of claims 6-21, wherein the synthesis windowing function (290) comprises a succession, in forward or backward order, formed by the following values with $\pm 1\%$ of tolerance:

+5.087227626168386e-04, +9.959086585790517e-04, +1.682208006328800e-03, +2.609697259047744e-03,
+3.819056787237678e-03, +5.349319592933909e-03, +7.243906383895192e-03, +9.540832613229890e-03,
+1.227637642543709e-02, +1.548950238899404e-02, +1.921659800166160e-02, +2.349369619441617e-02,
+2.835199581667961e-02, +3.382719081038548e-02, +3.994939538719628e-02, +4.674775238543380e-02,
+5.424831667522354e-02, +6.247770776443612e-02, +7.145835917501348e-02, +8.120777668775610e-02,
+9.174400412319896e-02, +1.030764959637497e-01, +1.152171887125930e-01, +1.281665713944242e-01,
+1.419264381068653e-01, +1.564942331034909e-01, +1.718593189799504e-01, +1.880134254543744e-01,
+2.049363422022628e-01, +2.226123055761096e-01, +2.410151242797736e-01, +2.601166575816199e-01,
+2.798871008989962e-01, +3.002880135563586e-01, +3.212814164616093e-01, +3.428208463088390e-01,
+3.648596557863134e-01, +3.873472997948746e-01, +4.102294951869188e-01, +4.334494534591082e-01,
+4.569497078592333e-01, +4.806696403251166e-01, +5.045473815014847e-01, +5.285192958868393e-01,
+5.525196099932443e-01, +5.764872452085427e-01, +6.003522489375573e-01, +6.240509872809882e-01,
+6.475182586093196e-01, +6.706896380227332e-01, +6.935029068990036e-01, +7.158927516396895e-01,
+7.378044458510402e-01, +7.591787241845952e-01, +7.799586608897265e-01, +8.000925313431716e-01,
+8.195318652294690e-01, +8.382288957404715e-01, +8.561409184410547e-01, +8.732316951214179e-01,
+8.894702022170831e-01, +9.048272294524792e-01, +9.192736375782965e-01, +9.327940405054362e-01,
+9.453685031730190e-01, +9.569883933538136e-01, +9.676486424195593e-01, +9.773507430600533e-01,
+9.861027831072527e-01, +9.939122412655677e-01, +1.000800872826561e+00, +1.006787811971719e+00,
+1.011901269172423e+00, +1.016171590112097e+00, +1.019636414864842e+00, +1.022336613864005e+00,
+1.024315247630982e+00, +1.025621299895396e+00, +1.026303439275662e+00, +1.026415431432931e+00,
+1.026007933174836e+00, +1.025137435167917e+00, +1.023858366571912e+00, +1.022226936424625e+00,
+1.020300550334848e+00, +1.018135705524407e+00, +1.015792146756340e+00, +1.013325966774524e+00,
+1.010794822557756e+00, +1.008265131568879e+00, +1.006046874304407e+00, +1.003406509762925e+00,
+1.000977398831985e+00, +9.987704535700208e-01, +9.967831265986109e-01, +9.950118905889862e-01,
+9.934523971504882e-01, +9.920995520917141e-01, +9.909475998606236e-01, +9.899902426925508e-01,
+9.892206942816891e-01, +9.886318043013834e-01, +9.882160904669929e-01, +9.879658322200813e-01,
+9.878730767519871e-01, +9.879296932443894e-01, +9.881273531631907e-01, +9.884575535474619e-01,
+9.889115869213529e-01, +9.894805541465801e-01, +9.901553455166457e-01, +9.909266562913843e-01,
+9.917849916000535e-01, +9.927206838643636e-01, +9.937239208721489e-01, +9.947847580943504e-01,
+9.958931493776203e-01, +9.970389567617592e-01, +9.982119669301160e-01, +9.994020338838508e-01,
+1.000598323893564e+00, +1.001791235858836e+00, +1.002969837054169e+00, +1.004123786397111e+00,
+1.005242583245485e+00, +1.006315717067918e+00, +1.007332693127034e+00, +1.008283053756130e+00,
+1.009156423082384e+00, +1.009942535308151e+00, +1.010631281038659e+00, +1.011212744622770e+00,
+1.011677230257499e+00, +1.012015300253356e+00, +1.012217779097186e+00, +1.012275790821109e+00,
+1.012180753005270e+00, +1.011924425888915e+00, +1.011498917644724e+00, +1.010896765282633e+00,
+1.010110965619444e+00, +1.009135094671655e+00, +1.007963362035220e+00, +1.006590756505588e+00,
+1.005013115379014e+00, +1.003227255072391e+00, +1.001231060075500e+00, +9.990235555436858e-01,
+9.966050551498514e-01, +9.939894706113089e-01, +9.904539200261149e-01, +9.868284225039941e-01, +9.827716736909488e-01, +9.782206672373213e-01, +9.731250287581631e-01, +9.674323528812744e-01,
+9.610947043524248e-01, +9.540636479502398e-01, +9.462952991190324e-01, +9.377489107516087e-01,
+9.283864275822276e-01, +9.181762606422500e-01, +9.070861558801854e-01, +8.950916858157935e-01,
+8.821696237804294e-01, +8.683025287048570e-01, +8.534769362643825e-01, +8.376852006833730e-01,
+8.209275259764013e-01, +8.032090930429980e-01, +7.845450482523652e-01, +7.649554851899686e-01,
+7.444735201251689e-01, +7.231348066419057e-01, +7.009860555207412e-01, +6.780787033699450e-01,
+6.544686506489734e-01, +6.302212149502727e-01, +6.053970453856138e-01, +5.800715766089168e-01,
+5.543129276657669e-01, +5.282077505750727e-01, +5.018369724442092e-01, +4.752902962082383e-01,
+4.486552956056652e-01, +4.220281118338883e-01, +3.955057965950340e-01, +3.691875990296320e-01,
+3.431732847389720e-01, +3.175633015043183e-01, +2.924566408966782e-01, +2.679463783886042e-01,
+2.441231331518492e-01, +2.210718537110466e-01, +1.988719153219592e-01, +1.775967625327044e-01,
+1.573148583944310e-01, +1.380903364946733e-01, +1.199837497591550e-01, +1.030525757797769e-01,
+8.735085011789188e-02, +7.292811584897502e-02, +5.982732244758056e-02, +4.808178837444506e-02,
+3.771135297837851e-02, +2.871831923385135e-02, +2.108352028641225e-02, +1.476289412849005e-02,
+9.683884928956495e-03, +5.642168789286858e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

32. The apparatus of any of claims 6-21, wherein the synthesis windowing function (290) comprises a succession, in forward or backward order, formed by the following values with $\pm 1\%$ of tolerance:

+4.595886345493055e-04, +7.919323614002698e-04, +1.227927169310031e-03, +1.783653266717233e-03,
+2.479549413444207e-03, +3.329799454594261e-03, +4.353535478916468e-03, +5.564965156664018e-03,
+6.986108359341676e-03, +8.629882322202329e-03, +1.051343406844975e-02, +1.265082642578719e-02,
+1.506090447446532e-02, +1.775591229287213e-02, +2.075475983187825e-02, +2.406813715401559e-02,
+2.771207863541604e-02, +3.169933248543932e-02, +3.604609640533871e-02, +4.076128638095439e-02,
+4.586038120884381e-02, +5.135136676471998e-02, +5.724780220726930e-02, +6.355854744461048e-02,
+7.029450733434550e-02, +7.745987198268531e-02, +8.506635369887924e-02, +9.311641620512773e-02,
+1.016162955027316e-01, +1.105690806271684e-01, +1.199789286645804e-01, +1.298417294090302e-01,
+1.401623800497866e-01, +1.509371564593891e-01, +1.621632295622287e-01, +1.738354123649302e-01,
+1.859520359191026e-01, +1.985008828937603e-01, +2.114778554475382e-01, +2.248732557074316e-01,
+2.386763947872762e-01, +2.528729453658238e-01, +2.674547009618951e-01, +2.824031465430401e-01,
+2.977050145264297e-01, +3.133419120661713e-01, +3.292976696294886e-01, +3.455490160824131e-01,
+3.620795045342974e-01, +3.788648665671841e-01, +3.958851576591690e-01, +4.131143794748322e-01,
+4.305308301005456e-01, +4.481076715576617e-01, +4.658227790464821e-01, +4.836466393241829e-01,
+5.015564851667653e-01, +5.195228071176610e-01, +5.375197039843709e-01, +5.555183841040963e-01,
+5.734957812557457e-01, +5.914186654649489e-01, +6.092622887527459e-01, +6.269981160888640e-01,
+6.446002007776794e-01, +6.620384583071039e-01, +6.792906550106088e-01, +6.963256426589250e-01,
+7.131194393772130e-01, +7.296469905863920e-01, +7.458864594794676e-01, +7.618094719403713e-01,
+7.773958448163656e-01, +7.926208751337592e-01, +8.074666387233143e-01, +8.219101564897180e-01,
+8.359343163788637e-01, +8.495180470826319e-01, +8.626485837105826e-01, +8.753083234662220e-01,
+8.874884715160425e-01, +8.991737724042251e-01, +9.103527429187326e-01, +9.210144133066616e-01,
+9.311556192776946e-01, +9.407644740241826e-01, +9.498382236872068e-01, +9.583732599601223e-01,
+9.663690412284377e-01, +9.738235617865406e-01, +9.807442506043361e-01, +9.871297972052695e-01,
+9.929872268444632e-01, +9.983241398929388e-01, +1.003150760219063e+00, +1.007473713377193e+00,
+1.011309151636166e+00, +1.014666681083198e+00, +1.017563337333301e+00, +1.020014681326785e+00,
+1.022039872150903e+00, +1.023654257342442e+00, +1.024881624147540e+00, +1.025739288978437e+00,
+1.026250709375593e+00, +1.026436666375082e+00, +1.026320857404224e+00, +1.025922917798664e+00,
+1.025269979527211e+00, +1.024382188798244e+00, +1.023284940887058e+00, +1.022000829220643e+00,
+1.020555973231408e+00, +1.018971390778550e+00, +1.017275179369116e+00, +1.015489129111694e+00,
+1.013639356938881e+00, +1.011747750709711e+00, +1.009840844244693e+00, +1.007939764480188e+00,
+1.006407400915498e+00, +1.004374825095777e+00, +1.002469814737132e+00, +1.000689073754539e+00,
+9.990346001249977e-01, +9.975024904153303e-01, +9.960941547576162e-01, +9.948051243621099e-01,
+9.936362728142866e-01, +9.925826537087717e-01, +9.916447007525191e-01, +9.908170758245324e-01, +9.900998445795673e-01, +9.894873685512386e-01, +9.889794323427195e-01, +9.885701787626714e-01,
+9.882591911282058e-01, +9.880404423341358e-01, +9.879133688360181e-01, +9.878718098237022e-01,
+9.879150762106034e-01, +9.880368938846610e-01, +9.882364564839506e-01, +9.885073687439192e-01,
+9.888487088987707e-01, +9.892539488627546e-01, +9.897220412447528e-01, +9.902463287269285e-01,
+9.908256340476208e-01, +9.914531811725067e-01, +9.921276814881759e-01, +9.928422499725458e-01,
+9.935955098307742e-01, +9.943804814776256e-01, +9.951957244449919e-01, +9.960341878404958e-01,
+9.968943831870675e-01, +9.977692009836100e-01, +9.986571134591464e-01, +9.995509738170480e-01,
+1.000449227898040e+00, +1.001344692310058e+00, +1.002235786606954e+00, +1.003115291715261e+00,
+1.003981602446902e+00, +1.004827468041713e+00, +1.005651275972376e+00, +1.006445772052972e+00,
+1.007209352772459e+00, +1.007934783656087e+00, +1.008620496650569e+00, +1.009259314290145e+00,
+1.009849742422788e+00, +1.010384692193296e+00, +1.010862783160582e+00, +1.011277044709547e+00,
+1.011626247430694e+00, +1.011903571699736e+00, +1.012107954864219e+00, +1.012232755709885e+00,
+1.012277089047072e+00, +1.012234505114778e+00, +1.012104319978655e+00, +1.011880293122688e+00,
+1.011561972516341e+00, +1.011143373963981e+00, +1.010624321020038e+00, +1.009999148545101e+00,
+1.009268031808824e+00, +1.008425698479647e+00, +1.007472774447058e+00, +1.006404483571931e+00,
+1.005222003295591e+00, +1.003921160689206e+00, +1.002503762756151e+00, +1.000966332772540e+00,
+9.993114007411373e-01, +9.975362702189898e-01, +9.956442306333592e-01, +9.936333924912825e-01,
+9.908677480361242e-01, +9.882326326262749e-01, +9.853620567056602e-01, +9.822305093671991e-01,
+9.788185853162172e-01, +9.751026333215268e-01, +9.710631852370086e-01, +9.666759668947944e-01,
+9.619242192293307e-01, +9.567841986369235e-01, +9.512394303101863e-01, +9.452700238623795e-01,
+9.388615698236068e-01, +9.319946435581106e-01, +9.246592033932568e-01, +9.168383396399868e-01,
+9.085218034087421e-01, +8.996967011299613e-01, +8.903562054918268e-01, +8.804877931535187e-01,
+8.700884209228057e-01, +8.591492134848259e-01, +8.476686394755906e-01, +8.356428970797861e-01,
+8.230753889817990e-01, +8.099649296155544e-01, +7.963204506324437e-01, +7.821460539775005e-01,
+7.674541821769616e-01, +7.522563457568547e-01, +7.365702052057368e-01, +7.204090552899627e-01,
+7.037975107157410e-01, +6.867542812151157e-01, +6.693041888771051e-01, +6.514710959179395e-01,
+6.332854832820911e-01, +6.147685389896460e-01, +5.959553778639692e-01, +5.768737955463938e-01,
+5.575534287167304e-01, +5.380320138068979e-01, +5.183454027643563e-01, +4.985259415650634e-01,
+4.786156067459849e-01, +4.586473038370941e-01, +4.386643656872842e-01, +4.187046888325280e-01,
+3.988123056192917e-01, +3.790262923635886e-01, +3.593914828698096e-01, +3.399474132903109e-01,
+3.207392420889753e-01, +3.018061113177048e-01, +2.831905952786929e-01, +2.649288369241889e-01,
+2.470608550624402e-01, +2.296201119084317e-01, +2.126433716126151e-01, +1.961601816145380e-01,
+1.802035203864437e-01, +1.647996883470626e-01, +1.499787548077656e-01, +1.357643522991611e-01,
+1.221842534547464e-01, +1.092601994264172e-01, +9.701788451015501e-02, +8.547680283183663e-02,
+7.465976378295235e-02, +6.458254322751883e-02, +5.526281189874138e-02, +4.670976978373095e-02,
+3.893244425578719e-02, +3.192976013776996e-02, +2.569810636390756e-02, +2.022259265088492e-02,
+1.548317776486452e-02, +1.144924909653903e-02, +8.076482660383199e-03, +5.300044080947794e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

33. The apparatus of any of claims 6-21, wherein the synthesis windowing function (290) comprises a succession, in forward or backward order, formed by the following values with $\pm 1\%$ of tolerance:

+4.090106504820579e-04, +6.143388180964179e-04, +8.571759876954877e-04, +1.147015057857495e-03,
+1.489582832987000e-03, +1.889770382231583e-03, +2.353000800169909e-03, +2.884104959764029e-03,
+3.488213786635855e-03, +4.170404431489613e-03, +4.934298832466617e-03, +5.787076505403503e-03,
+6.733811743137561e-03, +7.779130464154915e-03, +8.927044958757816e-03, +1.018202888968871e-02,
+1.154910606525086e-02, +1.303349217699797e-02, +1.463951288465963e-02, +1.637155619860352e-02,
+1.823455383898077e-02, +2.023309488998589e-02, +2.237116158648752e-02, +2.465237348403478e-02,
+2.708101935270475e-02, +2.966159685753317e-02, +3.239884850877327e-02, +3.529601774976465e-02,
+3.835663329277230e-02, +4.158447932459513e-02, +4.498322421745353e-02, +4.855610986150206e-02, +5.230596475016741e-02, +5.623624576084146e-02, +6.035055738891727e-02, +6.465186317477950e-02,
+6.914195749790462e-02, +7.382288203064732e-02, +7.869709331995660e-02, +8.376761638427657e-02,
+8.903563687211118e-02, +9.450199243028472e-02, +1.001680193006426e-01, +1.060356225286319e-01,
+1.121060220821844e-01, +1.183788547045326e-01, +1.248534855777947e-01, +1.315302847610869e-01,
+1.384103079528939e-01, +1.454931890869180e-01, +1.527772946853750e-01, +1.602608842337125e-01,
+1.679435556337752e-01, +1.758245615079801e-01, +1.839020119821303e-01, +1.921728622634411e-01,
+2.006344295681524e-01, +2.092853879977170e-01, +2.181238261985594e-01, +2.271462264407930e-01,
+2.363479205237173e-01, +2.457259744642953e-01, +2.552771551741124e-01, +2.649981094228982e-01,
+2.748839432649996e-01, +2.849296444030153e-01, +2.951306505827265e-01, +3.054824712370942e-01,
+3.159799638238941e-01, +3.266169794538543e-01, +3.373873799614014e-01, +3.482855915638277e-01,
+3.593057693987583e-01, +3.704415932452488e-01, +3.816862385160692e-01, +3.930329782788047e-01,
+4.044749630814483e-01, +4.160051103939122e-01, +4.276159595085598e-01, +4.393004362003260e-01,
+4.510516333434032e-01, +4.628616046119925e-01, +4.747225454237193e-01, +4.866266705542529e-01,
+4.985664508456704e-01, +5.105341492548225e-01, +5.225212793188740e-01, +5.345190505841265e-01,
+5.465201916422433e-01, +5.585172769552711e-01, +5.705021536899105e-01, +5.824658100332457e-01,
+5.943991720381216e-01, +6.062948176207270e-01, +6.181452662624718e-01, +6.299422016714543e-01,
+6.416768736044914e-01, +6.533411462740817e-01, +6.649277540000037e-01, +6.764292700223311e-01,
+6.878367295965062e-01, +6.991421467689277e-01, +7.103379606632721e-01, +7.214176027060971e-01,
+7.323746102405828e-01, +7.432008025932804e-01, +7.538887973483771e-01, +7.644315495717613e-01,
+7.748223151443820e-01, +7.850546571907628e-01, +7.951223518167163e-01, +8.050193862201107e-01,
+8.147397447696774e-01, +8.242774413707643e-01, +8.336267114335371e-01, +8.427819363777799e-01,
+8.517386186427548e-01, +8.604920874939698e-01, +8.690376742017057e-01, +8.773720451249032e-01,
+8.854927938913381e-01, +8.933935477349644e-01, +9.010727088526728e-01, +9.085249398881980e-01,
+9.157483563218768e-01, +9.227413839712016e-01, +9.295017469413066e-01, +9.360270196617569e-01,
+9.423143052164881e-01, +9.483629792665091e-01, +9.541731142261065e-01, +9.597438382130120e-01,
+9.650738394220176e-01, +9.701635474343885e-01, +9.750143364412617e-01, +9.796277191617885e-01,
+9.840036439809510e-01, +9.881426772731259e-01, +9.920470446911211e-01, +9.957199420334376e-01,
+9.991640812275709e-01, +1.002381307710643e+00, +1.005374268639838e+00, +1.008146718214831e+00,
+1.010703123647275e+00, +1.013046655758663e+00, +1.015181271161417e+00, +1.017111643578857e+00,
+1.018843380560658e+00, +1.020381713994816e+00, +1.021731101971518e+00, +1.022896948293643e+00,
+1.023885455671576e+00, +1.024702974608899e+00, +1.025355286710874e+00, +1.025848243050604e+00,
+1.026188366261215e+00, +1.026382881625701e+00, +1.026438102255574e+00, +1.026360125820994e+00,
+1.026155530733488e+00, +1.025831456886557e+00, +1.025395432284244e+00, +1.024853974580724e+00,
+1.024213482124578e+00, +1.023481184943025e+00, +1.022664602721801e+00, +1.021770903480975e+00,
+1.020806917660529e+00, +1.019779396547454e+00, +1.018695995335235e+00, +1.017564416918053e+00,
+1.016391686789653e+00, +1.015184918030332e+00, +1.013950835315021e+00, +1.012697033320358e+00,
+1.011430749860716e+00, +1.010158346781076e+00, +1.008885191761748e+00, +1.007592718305943e+00,
+1.006805603478092e+00, +1.005378742804807e+00, +1.004049051787112e+00, +1.002778356298787e+00,
+1.001563778373068e+00, +1.000404915291105e+00, +9.993014844615166e-01, +9.982531564931281e-01,
+9.972595460676951e-01, +9.963202131848272e-01, +9.954346644968789e-01, +9.946023543844607e-01,
+9.938226881029791e-01, +9.930950268060122e-01, +9.924186919309267e-01, +9.917929657090736e-01,
+9.912170911359961e-01, +9.906902760441473e-01, +9.902117003786811e-01, +9.897805192546193e-01,
+9.893958602389157e-01, +9.890568243690241e-01, +9.887624937408933e-01, +9.885119364350415e-01,
+9.883042028597552e-01, +9.881383235740961e-01, +9.880133161159576e-01, +9.879281898513085e-01,
+9.878819413827574e-01, +9.878735508484809e-01, +9.879019873841568e-01, +9.879662130250981e-01,
+9.880651778500144e-01, +9.881978162133899e-01, +9.883630508181326e-01, +9.885597957603544e-01,
+9.887869526128024e-01, +9.890434070785485e-01, +9.893280319166613e-01, +9.896396899060125e-01,
+9.899772316163624e-01, +9.903394929409673e-01, +9.907252968668226e-01, +9.911334564321237e-01,
+9.915627747807666e-01, +9.920120436855326e-01, +9.924800441092685e-01, +9.929655482846576e-01,
+9.934673212537685e-01, +9.939841207305906e-01, +9.945146969322154e-01, +9.950577931942117e-01,
+9.956121471675398e-01, +9.961764915534302e-01, +9.967495543671935e-01, +9.973300590248015e-01,
+9.979167245036720e-01, +9.985082643417953e-01, +9.991033633647473e-01, +9.997003478609010e-01,
+1.000299741957418e+00, +1.000897441314013e+00, +1.001493964257960e+00, +1.002087624593489e+00,
+1.002677088643863e+00, +1.003261045483858e+00, +1.003838183774652e+00, +1.004407190937699e+00,
+1.004966753528881e+00, +1.005515557572658e+00, +1.006052289109999e+00, +1.006575635258931e+00,
+1.007084285781611e+00, +1.007576934100958e+00, +1.008052277555815e+00, +1.008509017718116e+00,
+1.008945862447015e+00, +1.009361528531177e+00, +1.009754742820913e+00, +1.010124241309341e+00,
+1.010468769795370e+00, +1.010787087537248e+00, +1.011077969726137e+00, +1.011340205650538e+00, +1.011572597114216e+00, +1.011773962181442e+00, +1.011943138906979e+00, +1.012078982659783e+00,
+1.012180362866919e+00, +1.012246166897464e+00, +1.012275305013586e+00, +1.012266707295288e+00,
+1.012219319453278e+00, +1.012132107622966e+00, +1.012004064757857e+00, +1.011834207632025e+00,
+1.011621572933544e+00, +1.011365223023975e+00, +1.011064253702468e+00, +1.010717792733157e+00,
+1.010324996851905e+00, +1.009885057526159e+00, +1.009397209381147e+00, +1.008860731864438e+00,
+1.008274947065247e+00, +1.007639223374887e+00, +1.006952983357691e+00, +1.006215708265639e+00,
+1.005426938305289e+00, +1.004586273379809e+00, +1.003693377657581e+00, +1.002747984657666e+00,
+1.001749900308864e+00, +1.000699003803502e+00, +9.995952485989262e-01, +9.984386632116344e-01,
+9.972293415774932e-01, +9.959672769174924e-01, +9.946500332901397e-01, +9.932403996813470e-01,
+9.912511516117244e-01, +9.895756853352172e-01, +9.877713214760662e-01, +9.858577479051078e-01,
+9.838303127859196e-01, +9.816822625580078e-01, +9.794074486605805e-01, +9.769999155793757e-01,
+9.744528356359687e-01, +9.717597500340699e-01, +9.689141159310996e-01, +9.659101618500662e-01,
+9.627421831412876e-01, +9.594038121639412e-01, +9.558889978382734e-01, +9.521922434090249e-01,
+9.483086322505029e-01, +9.442332539187503e-01, +9.399607238929982e-01, +9.354860218216989e-01,
+9.308052967663477e-01, +9.259146970284931e-01, +9.208101305030523e-01, +9.154873597416558e-01,
+9.099426066529104e-01, +9.041732260327581e-01, +8.981763729936715e-01, +8.919490241013392e-01,
+8.854882249661838e-01, +8.787919436722827e-01, +8.718585835568161e-01, +8.646864947605047e-01,
+8.572738135700366e-01, +8.496195859658071e-01, +8.417237467711145e-01, +8.335862715770727e-01,
+8.252074428838668e-01, +8.165875713256009e-01, +8.077280370477699e-01, +7.986311592191131e-01,
+7.892986353718001e-01, +7.797330954210866e-01, +7.699379531983687e-01, +7.599171886893816e-01,
+7.496758423734833e-01, +7.392176841476761e-01, +7.285474515411827e-01, +7.176714478163359e-01,
+7.065962311464494e-01, +6.953282935906302e-01, +6.838739059112046e-01, +6.722395305539791e-01,
+6.604334017809461e-01, +6.484643596235256e-01, +6.363395004626368e-01, +6.240661431421666e-01,
+6.116530334821534e-01, +5.991098644638286e-01, +5.864461424698465e-01, +5.736694851703749e-01,
+5.607881029948401e-01, +5.478160663871271e-01, +5.347619788897301e-01, +5.216365147692703e-01,
+5.084499758302256e-01, +4.952135086430446e-01, +4.819387562519412e-01, +4.686361426419003e-01,
+4.553170769563941e-01, +4.419939954454178e-01, +4.286789889246267e-01, +4.153837786572842e-01,
+4.021211063103491e-01, +3.889032719013054e-01, +3.757425439137077e-01, +3.626515183776310e-01,
+3.496431418636322e-01, +3.367290822653354e-01, +3.239228075238623e-01, +3.112360816586549e-01,
+2.986807941537710e-01, +2.862694673284843e-01, +2.740128472224539e-01, +2.619228330079575e-01,
+2.500098438708934e-01, +2.382847225401669e-01, +2.267578490199104e-01, +2.154390996938547e-01,
+2.043379825955254e-01, +1.934636765792024e-01, +1.828250319214460e-01, +1.724305860483634e-01,
+1.622886348529314e-01, +1.524071880359812e-01, +1.427939789949266e-01, +1.334565845242183e-01,
+1.244023922999665e-01, +1.156385879569742e-01, +1.071721547807196e-01, +9.900985872728905e-02,
+9.115821766572002e-02, +8.362344855837105e-02, +7.641140367416376e-02, +6.952749039054598e-02,
+6.297656454790079e-02, +5.676284244020858e-02, +5.088975408628229e-02, +4.535983304624439e-02,
+4.017457306236873e-02, +3.533430192568957e-02, +3.083806062123772e-02, +2.668355420358626e-02,
+2.286680405144430e-02, +1.938236337675363e-02, +1.622312720409645e-02, +1.338005016725895e-02,
+1.084218595595746e-02, +8.596753980908744e-03, +6.640506529168652e-03, +5.172703110468352e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

**34.** The apparatus of any of claims 6-21, wherein the synthesis windowing function (290) comprises a succession, in forward or backward order, formed by the following values with ±1% of tolerance:
+3.821992968116373e-04, +5.337292962876158e-04, +7.010318350640769e-04, +8.910357994632938e-04, +1.107726421735994e-03, +1.354305556720234e-03, +1.632968062524617e-03, +1.944392065549996e-03,
+2.291251920978034e-03, +2.676357471188558e-03, +3.102160324883627e-03, +3.569302917352426e-03,
+4.080147004222224e-03, +4.637409387087253e-03, +5.243697651112320e-03, +5.900394401532485e-03,
+6.609908124535202e-03, +7.375089966000295e-03, +8.197610411215884e-03, +9.078195201482999e-03,
+1.001888876231112e-02, +1.102272421949215e-02, +1.209201783148431e-02, +1.322773320467288e-02,
+1.443170227861997e-02, +1.570673344965518e-02, +1.705481769961258e-02, +1.847711280171765e-02,
+1.997546609433320e-02, +2.155255505248360e-02, +2.320993080187466e-02, +2.494800748775296e-02,
+2.676898100961685e-02, +2.867550388692567e-02, +3.066976865911597e-02, +3.275241094528637e-02,
+3.492474656851959e-02, +3.718932683936013e-02, +3.954748420753697e-02, +4.200013716597904e-02,
+4.454866443036003e-02, +4.719547798640356e-02, +4.994161943600844e-02, +5.278755308483513e-02,
+5.573471840677637e-02, +5.878567633813699e-02, +6.194176167634657e-02, +6.520301218579141e-02,
+6.857009288032996e-02, +7.204473108503576e-02, +7.562815385274406e-02, +7.932038618419741e-02,
+8.312281225703541e-02, +8.703660776989294e-02, +9.106251913073614e-02, +9.519952848393795e-02,
+9.944854075501454e-02, +1.038112769854394e-01, +1.082885168352610e-01, +1.128793060660070e-01,
+1.175834766182813e-01, +1.224015773361210e-01, +1.273338065186211e-01, +1.323793987456491e-01,
+1.375389612590117e-01, +1.428131506368226e-01, +1.482015069292479e-01, +1.537021065265166e-01,
+1.593143180431248e-01, +1.650390046254505e-01, +1.708759773387028e-01, +1.768238156096776e-01,
+1.828814674176937e-01, +1.890485613515956e-01, +1.953239376543276e-01, +2.017057139908492e-01,
+2.081934824879514e-01, +2.147873518665726e-01, +2.214861559453727e-01, +2.282869811837961e-01,
+2.351877543503455e-01, +2.421885165595468e-01, +2.492877833071390e-01, +2.564833108170047e-01,
+2.637736050921935e-01, +2.711575593740559e-01, +2.786328295517739e-01, +2.861965981859126e-01,
+2.938469307293017e-01, +3.015829286213736e-01, +3.094025219039914e-01, +3.173023310827802e-01,
+3.252796888787393e-01, +3.333329987313211e-01, +3.414597523183469e-01, +3.496568059948401e-01,
+3.579215403419018e-01, +3.662523018706806e-01, +3.746461722601965e-01, +3.830993933108193e-01,
+3.916090507233831e-01, +4.001732470818926e-01, +4.087890872349265e-01, +4.174524354370054e-01,
+4.261601728427663e-01, +4.349103424521226e-01, +4.436999665749521e-01, +4.525250566690236e-01,
+4.613821390145840e-01, +4.702690556535691e-01, +4.791821288489955e-01, +4.881175853001019e-01,
+4.970720120437943e-01, +5.060433154467696e-01, +5.150277508616620e-01, +5.240208300352607e-01,
+5.330187387865785e-01, +5.420196856030712e-01, +5.510201184135838e-01, +5.600165101133929e-01,
+5.690047761849362e-01, +5.779823098049300e-01, +5.869449780892492e-01, +5.958886225335936e-01,
+6.048099568741729e-01, +6.137068698395559e-01, +6.225761217125432e-01, +6.314128591964590e-01,
+6.402134772829997e-01, +6.489754897736506e-01, +6.576959114103553e-01, +6.663704870510495e-01,
+6.749962795110787e-01, +6.835701860237697e-01, +6.920890588499607e-01, +7.005478826218464e-01,
+7.089444008783498e-01, +7.172765338080037e-01, +7.255415386736762e-01, +7.337354140683028e-01,
+7.418546544582220e-01, +7.498972580176051e-01, +7.578599326607545e-01, +7.657390988438872e-01,
+7.735317637507610e-01, +7.812362247368221e-01, +7.888499478365373e-01, +7.963691608881653e-01,
+8.037915368847273e-01, +8.111154166403033e-01, +8.183384161720055e-01, +8.254567363530231e-01,
+8.324682688387346e-01, +8.393715063470556e-01, +8.461645428100565e-01, +8.528442051510350e-01,
+8.594088830061699e-01, +8.658575289268042e-01, +8.721883611259660e-01, +8.783992457627015e-01,
+8.844895714000796e-01, +8.904559910537616e-01, +8.962997945931150e-01, +9.020168984242400e-01,
+9.076056139480890e-01, +9.130664170641334e-01, +9.183979162084582e-01, +9.235994678560167e-01,
+9.286692422352107e-01, +9.336076279434850e-01, +9.384129048732400e-01, +9.430836933050435e-01,
+9.476197145049868e-01, +9.520221006942875e-01, +9.562904165806793e-01, +9.604235518327253e-01,
+9.644205605875820e-01, +9.682827690312492e-01, +9.720106722663890e-01, +9.756042291745447e-01,
+9.790638238608151e-01, +9.823902028722666e-01, +9.855837812929384e-01, +9.886436665180195e-01,
+9.915714515450228e-01, +9.943692859110803e-01, +9.970385179500313e-01, +9.995787919228785e-01,
+1.001991256344717e+00, +1.004277707367492e+00, +1.006439806897506e+00, +1.008478224880801e+00,
+1.010395057449511e+00, +1.012192316076366e+00, +1.013871638199171e+00, +1.015433826923486e+00,
+1.016881083871244e+00, +1.018216717878600e+00, +1.019442870837515e+00, +1.020560853084751e+00,
+1.021572361827679e+00, +1.022480682703848e+00, +1.023288268237906e+00, +1.023997104737320e+00,
+1.024609726504572e+00, +1.025129444345768e+00, +1.025558707847599e+00, +1.025899187425550e+00,
+1.026153736073730e+00, +1.026326400217514e+00, +1.026419755159132e+00, +1.026435753513555e+00,
+1.026376745497183e+00, +1.026246413164014e+00, +1.026047802601159e+00, +1.025783163725466e+00,
+1.025455636062312e+00, +1.025068712226252e+00, +1.024625269765159e+00, +1.024127035189888e+00,
+1.023577282345944e+00, +1.022979990313458e+00, +1.022338337695996e+00, +1.021654354624439e+00,
+1.020930844259280e+00, +1.020171385028845e+00, +1.019379551852598e+00, +1.018557222865231e+00,
+1.017708008483692e+00, +1.016835630605444e+00, +1.015943000562828e+00, +1.015032211107897e+00,
+1.014106040189062e+00, +1.013168810057302e+00, +1.012223533569952e+00, +1.011272160610958e+00, +1.010317161995333e+00, +1.009363573682324e+00, +1.008418957730006e+00, +1.007443035427814e+00,
+1.006980582693088e+00, +1.005880191360173e+00, +1.004870660907557e+00, +1.003887307826199e+00,
+1.002933862630671e+00, +1.002012456628431e+00, +1.001122929266782e+00, +1.000264200804259e+00,
+9.994361518334981e-01, +9.986396025239043e-01, +9.978744044020248e-01, +9.971394126637049e-01,
+9.964344374346332e-01, +9.957602381261346e-01, +9.951165794460692e-01, +9.945022689695088e-01,
+9.939170480434331e-01, +9.933616056210112e-01, +9.928356667510468e-01, +9.923379640068731e-01,
+9.918682011153984e-01, +9.914270132578689e-01, +9.910140670228395e-01, +9.906280727376265e-01,
+9.902686735168059e-01, +9.899364775767996e-01, +9.896311064950427e-01, +9.893512408407925e-01,
+9.890965020344753e-01, +9.888674481881904e-01, +9.886636955343167e-01, +9.884838850803949e-01,
+9.883276240055705e-01, +9.881954463086439e-01, +9.880869460773882e-01, +9.880007538329854e-01,
+9.879364462155417e-01, +9.878945575956836e-01, +9.878746493979034e-01, +9.878753499522159e-01,
+9.878962158879177e-01, +9.879377642109470e-01, +9.879995488718708e-01, +9.880801746803725e-01,
+9.881791937541983e-01, +9.882970966792446e-01, +9.884334355024147e-01, +9.885867883714737e-01,
+9.887566952073135e-01, +9.889436358294569e-01, +9.891471384894399e-01, +9.893657732439902e-01,
+9.895990550550585e-01, +9.898474573387898e-01, +9.901104832002432e-01, +9.903866926546286e-01,
+9.906755858999687e-01, +9.909776136318341e-01, +9.912922749689899e-01, +9.916181054602099e-01,
+9.919545975686356e-01, +9.923021872317422e-01, +9.926603609120486e-01, +9.930276450366935e-01,
+9.934035125599263e-01, +9.937883997783191e-01, +9.941817792665538e-01, +9.945821646067609e-01,
+9.949890245456261e-01, +9.954027843196593e-01, +9.958229139376651e-01, +9.962479146150113e-01,
+9.966772475112751e-01, +9.971113385049125e-01, +9.975496462958124e-01, +9.979906675056988e-01,
+9.984338592613343e-01, +9.988796523949821e-01, +9.993275431378141e-01, +9.997753812452573e-01,
+1.000224669219663e+00, +1.000672909364706e+00, +1.001121604191588e+00, +1.001568597382930e+00,
+1.002013378040221e+00, +1.002456372686098e+00, +1.002897030034197e+00, +1.003333829980590e+00,
+1.003766216551067e+00, +1.004194607298016e+00, +1.004618447680436e+00, +1.005036211788027e+00,
+1.005447348229275e+00, +1.005852270535212e+00, +1.006250425365265e+00, +1.006640290029854e+00,
+1.007021310029137e+00, +1.007393907701933e+00, +1.007757528772291e+00, +1.008110655922241e+00,
+1.008452744553207e+00, +1.008784215564761e+00, +1.009104530964226e+00, +1.009412177137242e+00,
+1.009706620067364e+00, +1.009988296223056e+00, +1.010256673981368e+00, +1.010510261597171e+00,
+1.010748529051234e+00, +1.010971938438940e+00, +1.011179974034890e+00, +1.011371154144579e+00,
+1.011544976893053e+00, +1.011701915457469e+00, +1.011841483052088e+00, +1.011962209203063e+00,
+1.012063621581602e+00, +1.012146211141323e+00, +1.012209509774826e+00, +1.012252080651208e+00,
+1.012273461473019e+00, +1.012274179329824e+00, +1.012253779830287e+00, +1.012210860152664e+00,
+1.012144976732521e+00, +1.012056685871527e+00, +1.011945565763788e+00, +1.011810229432951e+00,
+1.011650280893217e+00, +1.011466289818154e+00, +1.011257880752579e+00, +1.011023694799342e+00,
+1.010763375755366e+00, +1.010477533938561e+00, +1.010165826445586e+00, +1.009826955798404e+00,
+1.009460591235290e+00, +1.009067412134881e+00, +1.008647118373303e+00, +1.008198467170796e+00,
+1.007721196075366e+00, +1.007216031301935e+00, +1.006682757156533e+00, +1.006120180721864e+00,
+1.005528123164754e+00, +1.004907385380564e+00, +1.004257813991292e+00, +1.003578321293819e+00,
+1.002868793771428e+00, +1.002130123378852e+00, +1.001362250678481e+00, +1.000564166270619e+00,
+9.997358689793686e-01, +9.988783302889642e-01, +9.979915852192069e-01, +9.970747197397686e-01,
+9.961277448216609e-01, +9.951529474418550e-01, +9.941541831614942e-01, +9.930678080460911e-01,
+9.914646039976289e-01, +9.902352352689523e-01, +9.889131869680553e-01, +9.875383274623817e-01,
+9.861028679251979e-01, +9.846041087188396e-01, +9.830394337851476e-01, +9.814052410296346e-01,
+9.796987091039431e-01, +9.779184677896273e-01, +9.760616740194450e-01, +9.741245958128935e-01,
+9.721043782586516e-01, +9.699991325531057e-01, +9.678068213341133e-01, +9.655234943873925e-01,
+9.631470850364502e-01, +9.606758082762421e-01, +9.581070287387355e-01, +9.554372064329766e-01,
+9.526641870716750e-01, +9.497868942084339e-01, +9.468034353946915e-01, +9.437103240778303e-01,
+9.405054771915659e-01, +9.371877218082764e-01, +9.337553821450042e-01, +9.302057763482381e-01,
+9.265373496318979e-01, +9.227494594741956e-01, +9.188401295674290e-01, +9.148067377557749e-01,
+9.106476709258303e-01, +9.063629680720371e-01, +9.019514987490371e-01, +8.974108808873397e-01,
+8.927398817643528e-01, +8.879382683346716e-01, +8.830050715882986e-01, +8.779385355821995e-01,
+8.727379973888942e-01, +8.674038889082810e-01, +8.619352566808824e-01, +8.563305243162549e-01,
+8.505893287555129e-01, +8.447127297770400e-01, +8.387007637143140e-01, +8.325523768291013e-01,
+8.262677444285360e-01, +8.198478927378535e-01, +8.132935411236417e-01, +8.066040997239516e-01,
+7.997809105802602e-01, +7.928255537687610e-01, +7.857391245481645e-01, +7.785212684545030e-01,
+7.711744403395434e-01, +7.637008160854790e-01, +7.561026668755407e-01, +7.483805701761127e-01,
+7.405363749469933e-01, +7.325730245135402e-01, +7.244930008228270e-01, +7.162980305440977e-01,
+7.079910089690906e-01, +6.995757887359807e-01, +6.910546259244099e-01, +6.824295471401947e-01, +6.737031265887281e-01,  +6.648801659515325e-01,  +6.559637902883004e-01,  +6.469573547411541e-01,
+6.378629377753962e-01,  +6.286855280775698e-01,  +6.194273058858271e-01,  +6.100922809170846e-01,
+6.006842631336996e-01,  +5.912087588215279e-01,  +5.816678990293079e-01,  +5.720650011081139e-01,
+5.624031153715043e-01,  +5.526906296747590e-01,  +5.429296335729603e-01,  +5.331253296256703e-01,
+5.232805923025862e-01,  +5.134010079652535e-01,  +5.034916218473681e-01,  +4.935565059779637e-01,
+4.835996679580253e-01,  +4.736270399539165e-01,  +4.636428606356920e-01,  +4.536519115376573e-01,
+4.436589520558524e-01,  +4.336702110092904e-01,  +4.236905139305571e-01,  +4.137241358370227e-01,
+4.037764981593496e-01,  +3.938536636599411e-01,  +3.839608678121244e-01,  +3.741023650337649e-01,
+3.642834353302138e-01,  +3.545105744959439e-01,  +3.447887254766501e-01,  +3.351225758795436e-01,
+3.255174149216463e-01,  +3.159783340225490e-01,  +3.065118829951374e-01,  +2.971215837581699e-01,
+2.878124834032541e-01,  +2.785898831431837e-01,  +2.694592444601873e-01,  +2.604240268886858e-01,
+2.514886909115454e-01,  +2.426587307354934e-01,  +2.339385917103926e-01,  +2.253316454409216e-01,
+2.168420127437019e-01,  +2.084745870335012e-01,  +2.002332724591125e-01,  +1.921209969418307e-01,
+1.841414579810840e-01,  +1.762991374092108e-01,  +1.685975427109672e-01,  +1.610392647455030e-01,
+1.536276387455411e-01,  +1.463667950599712e-01,  +1.392599476606262e-01,  +1.323093893293405e-01,
+1.255182155111708e-01,  +1.188903216873086e-01,  +1.124286726877977e-01,  +1.061353122093495e-01,
+1.000130754353283e-01,  +9.406556557413207e-02,  +8.829543394466104e-02,  +8.270438757849530e-02,
+7.729486433686703e-02,  +7.206998099643687e-02,  +6.703183558090599e-02,  +6.218153160076208e-02,
+5.752079270262547e-02,  +5.305187265543024e-02,  +4.877591488398974e-02,  +4.469299727922282e-02,
+4.080367800167831e-02,  +3.710883802024244e-02,  +3.360819061792393e-02,  +3.030027537135876e-02,
+2.718416076819826e-02,  +2.425872983336823e-02,  +2.152170070657780e-02,  +1.896992105664512e-02,
+1.660053693426304e-02,  +1.441002712765955e-02,  +1.239334766429038e-02,  +1.054549096241532e-02,
+8.862485552559351e-03,  +7.329085750247888e-03,  +5.896299968476346e-03,  +4.914753459788711e-03,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00,
+0.000000000000000e+00,  +0.000000000000000e+00,  +0.000000000000000e+00,  +0.000000000000000e+00

35. The apparatus of any of claims 6-21, wherein the synthesis windowing function (290) comprises a succession, in forward or backward order, formed by the following values with $\pm 1\%$ of tolerance:
+3.538498803770035e-04,  +4.595886345493055e-04,  +5.595519647227489e-04,  +6.718404887323839e-04,
+7.919323614002698e-04,  +9.254835101516548e-04,  +1.069418485858920e-03,  +1.227927169310031e-03,
+1.398277791978983e-03,  +1.584491535026729e-03,  +1.783653266717233e-03,  +1.999873692180148e-03,
+2.230687004705732e-03,  +2.479549413444207e-03,  +2.744274680521470e-03,  +3.028517203082985e-03,
+3.329799454594260e-03,  +3.651493788541270e-03,  +3.991659081158673e-03,  +4.353535478916468e-03,
+4.734803493964832e-03,  +5.139354888882466e-03,  +5.564965156664017e-03,  +6.015065135312130e-03,
+6.487669532207667e-03,  +6.986108359341676e-03,  +7.507986430774601e-03,  +8.056692238103912e-03,
+8.629882322202329e-03,  +9.230898632007642e-03,  +9.857619542786990e-03,  +1.051343406844975e-02,
+1.119617236058772e-02,  +1.190938692951881e-02,  +1.265082642578719e-02,  +1.342375201935177e-02,
+1.422598597626579e-02,  +1.506090447446532e-02,  +1.592611511144210e-02,  +1.682519266177794e-02,
+1.775591229287213e-02,  +1.872166356881472e-02,  +1.972014746423546e-02,  +2.075475983187825e-02,
+2.182299926812682e-02,  +2.292828566629717e-02,  +2.406813715401559e-02,  +2.524583465017564e-02, +2.645943128544517e-02, +2.771207863541604e-02, +2.900157039370381e-02, +3.033143686044867e-02,
+3.169933248543932e-02, +3.310834554878132e-02, +3.455615910816914e-02, +3.604609640533871e-02,
+3.757564512209753e-02, +3.914808612511974e-02, +4.076128638095439e-02, +4.241834056741758e-02,
+4.411695502674887e-02, +4.586038120884381e-02, +4.764607953574337e-02, +4.947719681327219e-02,
+5.135136676471998e-02, +5.327183246133368e-02, +5.523619574402436e-02, +5.724780220726930e-02,
+5.930419525733627e-02, +6.140861916695377e-02, +6.355854744461048e-02, +6.575698564821578e-02,
+6.800132774040281e-02, +7.029450733434550e-02, +7.263424529955659e-02, +7.502357150869594e-02,
+7.745987198268531e-02, +7.994662730757418e-02, +8.248121208201259e-02, +8.506635369887924e-02,
+8.769965758141890e-02, +9.038399472465716e-02, +9.311641620512773e-02, +9.590005739506280e-02,
+9.873233942897164e-02, +1.016162955027316e-01, +1.045493607096311e-01, +1.075345731608719e-01,
+1.105690806271684e-01, +1.136556251529813e-01, +1.167913767515824e-01, +1.199789286645804e-01,
+1.232155302990620e-01, +1.265040684552515e-01, +1.298417294090302e-01, +1.332315661550852e-01,
+1.366709127560524e-01, +1.401623800497866e-01, +1.437031543339276e-01, +1.472957921567060e-01,
+1.509371564593891e-01, +1.546298983040232e-01, +1.583709932021852e-01, +1.621632295622287e-01,
+1.660038996795837e-01, +1.698955982096184e-01, +1.738354123649302e-01, +1.778260015982545e-01,
+1.818640789446629e-01, +1.859520359191026e-01, +1.900868218108653e-01, +1.942708017706291e-01,
+1.985008828937603e-01, +2.027798260494142e-01, +2.071046414574582e-01, +2.114778554475382e-01,
+2.158964254821512e-01, +2.203627179356420e-01, +2.248732557074316e-01, +2.294303802774835e-01,
+2.340304946493155e-01, +2.386763947872762e-01, +2.433647632018021e-01, +2.480980084587409e-01,
+2.528729453658238e-01, +2.576919809402799e-01, +2.625518239753811e-01, +2.674547009618951e-01,
+2.723969864831702e-01, +2.773809014717047e-01, +2.824031465430401e-01, +2.874658392896952e-01,
+2.925657097525320e-01, +2.977050145264297e-01, +3.028802866809923e-01, +3.080937708388026e-01,
+3.133419120661713e-01, +3.186267330325243e-01, +3.239446274586855e-01, +3.292976696294886e-01,
+3.346822587497995e-01, +3.401004975161905e-01, +3.455490160824131e-01, +3.510297825670005e-01,
+3.565392648316303e-01, +3.620795045342974e-01, +3.676468198385683e-01, +3.732431609065464e-01,
+3.788648665671841e-01, +3.845139947587731e-01, +3.901867575702975e-01, +3.958851576591690e-01,
+4.016055596175310e-01, +4.073498814407726e-01, +4.131143794748322e-01, +4.189008731078437e-01,
+4.247056871121635e-01, +4.305308301005456e-01, +4.363724468005679e-01, +4.422326205247767e-01,
+4.481076715576617e-01, +4.539992478845187e-01, +4.599036262256764e-01, +4.658227790464821e-01,
+4.717526717360889e-01, +4.776951277513855e-01, +4.836466393241829e-01, +4.896089037533445e-01,
+4.955781691142885e-01, +5.015564851667653e-01, +5.075397341675292e-01, +5.135297950483941e-01,
+5.195228071176610e-01, +5.255203889406241e-01, +5.315186369941947e-01, +5.375197039843709e-01,
+5.435197203416460e-01, +5.495204053284317e-01, +5.555183841040963e-01, +5.615153912741460e-01,
+5.675072245552497e-01, +5.734957812557457e-01, +5.794770758870604e-01, +5.854526176188222e-01,
+5.914186654649489e-01, +5.973773282523112e-01, +6.033245382283379e-01, +6.092622887527459e-01,
+6.151869491458284e-01, +6.211002315674210e-01, +6.269981160888640e-01, +6.328823912226461e-01,
+6.387491304847892e-01, +6.446002007776794e-01, +6.504316924413531e-01, +6.562457600042717e-01,
+6.620384583071039e-01, +6.678117513456276e-01, +6.735619658538692e-01, +6.792906550106088e-01,
+6.849937204005565e-01, +6.906734235708962e-01, +6.963256426589250e-01, +7.019517880051427e-01,
+7.075491663942173e-01, +7.131194393772130e-01, +7.186585770351414e-01, +7.241690155466505e-01,
+7.296469905863920e-01, +7.350940240070911e-01, +7.405065029424016e-01, +7.458864594794676e-01,
+7.512298245353598e-01, +7.565387020584289e-01, +7.618094719403713e-01, +7.670441227603888e-01,
+7.722388831102434e-01, +7.773958448163656e-01, +7.825113901786742e-01, +7.875876391562497e-01,
+7.926208751337592e-01, +7.976131629355570e-01, +8.025610715609228e-01, +8.074666387233143e-01,
+8.123261531893655e-01, +8.171419338595847e-01, +8.219101564897180e-01, +8.266329452432137e-01,
+8.313069432125857e-01, +8.359343163788637e-01, +8.405111871797961e-01, +8.450403211238631e-01,
+8.495180470826319e-01, +8.539464819668052e-01, +8.583225792686004e-01, +8.626485837105826e-01,
+8.669206756254478e-01, +8.711415846800790e-01, +8.753083234662220e-01, +8.794234355078734e-01,
+8.834826778788665e-01, +8.874884715160425e-01, +8.914384774585629e-01, +8.953346996622868e-01,
+8.991737724042251e-01, +9.029574074899029e-01, +9.066828541224163e-01, +9. 1 03527429187326e-01 ,
+9.139638342168577e-01, +9.175184878836662e-01, +9.210144133066616e-01, +9.244537632557187e-01,
+9.278332160151861e-01, +9.311556192776946e-01, +9.344176283021008e-01, +9.376215186479845e-01,
+9.407644740241826e-01, +9.438492190005341e-01, +9.468728540294310e-01, +9.498382236872068e-01,
+9.527426712456687e-01, +9.555885737210712e-01, +9.583732599601223e-01, +9.610993609218629e-01,
+9.637636503225360e-01, +9.663690412284377e-01, +9.689132689491541e-01, +9.713988678700001e-01,
+9.738235617865406e-01, +9.761902903500818e-01, +9.784963361871022e-01, +9.807442506043361e-01,
+9.829315352320943e-01, +9.850609512273165e-01, +9.871297972052695e-01, +9.891408802831312e-01,
+9.910923625580078e-01, +9.929872268444632e-01, +9.948228821209419e-01, +9.966027455323081e-01, +9.983241398929388e-01, +9.999898494568836e-01, +1.001597808884145e+00, +1.003150760219063e+00,
+1.004646500318265e+00, +1.006088248744700e+00, +1.007473713377193e+00, +1.008806248810530e+00,
+1.010083776257753e+00, +1.011309151636166e+00, +1.012480196393275e+00, +1.013600067830152e+00,
+1.014666681083198e+00, +1.015683082766535e+00, +1.016647533889674e+00, +1.017563337333301e+00,
+1.018428468753963e+00, +1.019246216134229e+00, +1.020014681326785e+00, +1.020736921761459e+00,
+1.021410866072808e+00, +1.022039872150903e+00, +1.022622059577585e+00, +1.023160749941404e+00,
+1.023654257342442e+00, +1.024105973101631e+00, +1.024514004504684e+00, +1.024881624147540e+00,
+1.025207065371760e+00, +1.025493542877243e+00, +1.025739288978437e+00, +1.025947636692103e+00,
+1.026116939910040e+00, +1.026250709375593e+00, +1.026347260729698e+00, +1.026409787584788e+00,
+1.026436666375082e+00, +1.026431212267978e+00, +1.026391488022762e+00, +1.026320857404224e+00,
+1.026217843764236e+00, +1.026085730009027e+00, +1.025922917798664e+00, +1.025733019213987e+00,
+1.025514292433933e+00, +1.025269979527211e+00, +1.024998528084259e+00, +1.024703212795365e+00,
+1.024382188798244e+00, +1.024039051426278e+00, +1.023672163232710e+00, +1.023284940887058e+00,
+1.022875917162315e+00, +1.022448453314994e+00, +1.022000829220643e+00, +1.021536599728231 e+00,
+1.021053875701803e+00, +1.020555973231408e+00, +1.020041434676317e+00, +1.019513866799503e+00,
+1.018971390778550e+00, +1.018417599116053e+00, +1.017851066303933e+00, +1.017275179369116e+00,
+1.016688023745155e+00, +1.016093242802983e+00, +1.015489129111694e+00, +1.014878956980025e+00,
+1.014261064091392e+00, +1.013639356938881e+00, +1.013011559583153e+00, +1.012381741769641e+00,
+1.011747750709711e+00, +1.011113332101179e+00, +1.010476167900044e+00, +1.009840844244693e+00,
+1.009204021773819e+00, +1.008572045006596e+00, +1.007939764480188e+00, +1.007331850775798e+00,
+1.007112182697132e+00, +1.006407400915498e+00, +1.005715372118122e+00, +1.005038785533845e+00,
+1.004374825095777e+00, +1.003726291405694e+00, +1.003090358040736e+00, +1.002469814737132e+00,
+1.001861838147367e+00, +1.001269198108365e+00, +1.000689073754539e+00, +1.000124220942757e+00,
+9.995718119556711e-01, +9.990346001249977e-01, +9.985097406611592e-01, +9.979999918405413e-01,
+9.975024904153303e-01, +9.970199948970832e-01, +9.965496346682551e-01, +9.960941547576162e-01,
+9.956506910018569e-01, +9.952219662800089e-01, +9.948051243621099e-01, +9.944028741276870e-01,
+9.940123528373235e-01, +9.936362728142866e-01, +9.932717517525477e-01, +9.929215102130406e-01,
+9.925826537087717e-01, +9.922578948824415e-01, +9.919443474477135e-01, +9.916447007525191e-01,
+9.913560821234982e-01, +9.910811659133294e-01, +9.908170758245324e-01, +9.905664908867821e-01,
+9.903265196045258e-01, +9.900998445795673e-01, +9.898835741176714e-01, +9.896803735870122e-01,
+9.894873685512386e-01, +9.893072032520545e-01, +9.891370094863634e-01, +9.889794323427195e-01,
+9.888315884970242e-01, +9.886961351016699e-01, +9.885701787626714e-01, +9.884563716748773e-01,
+9.883518302777313e-01, +9.882591911282058e-01, +9.881755763473004e-01, +9.881036242002076e-01,
+9.880404423341358e-01, +9.879886826752381e-01, +9.879454420034824e-01, +9.879133688360181e-01,
+9.878895706371619e-01, +9.878766784594818e-01, +9.878718098237022e-01, +9.878775927630988e-01,
+9.878911354436840e-01, +9.879150762106034e-01, +9.879465136687265e-01, +9.879880844262307e-01,
+9.880368938846610e-01, +9.880955662657537e-01, +9.881612121412342e-01, +9.882364564839506e-01,
+9.883183975703879e-01, +9.884096731867189e-01, +9.885073687439192e-01, +9.886141241716089e-01,
+9.887270275540468e-01, +9.888487088987707e-01, +9.889762614809646e-01, +9.891123127261381e-01,
+9.892539488627546e-01, +9.894038044982261e-01, +9.895589571176194e-01, +9.897220412447528e-01,
+9.898901380212467e-01, +9.900658706993652e-01, +9.902463287269285e-01, +9.904341281652976e-01,
+9.906263564100900e-01, +9.908256340476208e-01, +9.910290387632859e-01, +9.912391966549245e-01,
+9.914531811725067e-01, +9.916736156286597e-01, +9.918975763831412e-01, +9.921276814881759e-01,
+9.923610074433741e-01, +9.926001740490448e-01, +9.928422499725458e-01, +9.930898628710855e-01,
+9.933400717991352e-01, +9.935955098307742e-01, +9.938532319665272e-01, +9.941158706465729e-01,
+9.943804814776256e-01, +9.946496946937963e-01, +9.949205650500305e-01, +9.951957244449919e-01,
+9.954722223202400e-01, +9.957526959635303e-01, +9.960341878404958e-01, +9.963193400387707e-01,
+9.966051908036528e-01, +9.968943831870675e-01, +9.971839552785087e-01, +9.974765480003592e-01,
+9.977692009836100e-01, +9.980645531056329e-01, +9.983596442023971e-01, +9.986571134591464e-01,
+9.989539982645417e-01, +9.992529406343204e-01, +9.995509738170480e-01, +9.998507434423984e-01,
+1.000149278838447e+00, +1.000449227898040e+00, +1.000747617880619e+00, +1.001047097000738e+00,
+1.001344692310058e+00, +1.001643050985813e+00, +1.001939200113204e+00, +1.002235786606954e+00,
+1.002529835919150e+00, +1.002823997223967e+00, +1.003115291715261e+00, +1.003406373183356e+00,
+1.003694257266035e+00, +1.003981602446902e+00, +1.004265420574493e+00, +1.004548371695603e+00,
+1.004827468041713e+00, +1.005105367331224e+00, +1.005379085053508e+00, +1.005651275972376e+00,
+1.005918957263603e+00, +1.006184784468940e+00, +1.006445772052972e+00, +1.006704580223772e+00,
+1.006958219378997e+00, +1.007209352772459e+00, +1.007454991591196e+00, +1.007697795962687e+00,
+1.007934783656087e+00, +1.008168609148541e+00, +1.008396295152072e+00, +1.008620496650569e+00,

+1.008838233369544e+00, +1.009052167883909e+00, +1.009259314290145e+00, +1.009462340194419e+00,
+1.009658261526612e+00, +1.009849742422788e+00, +1.010033806431099e+00, +1.010213115163429e+00,
+1.010384692193296e+00, +1.010551208502819e+00, +1.010709677336593e+00, +1.010862783160582e+00,
+1.011007533860188e+00, +1.011146615898068e+00, +1.011277044709547e+00, +1.011401501255448e+00,
+1.011517007040469e+00, +1.011626247430694e+00, +1.011726237740989e+00, +1.011819675175864e+00,
+1.011903571699736e+00, +1.011980623923816e+00, +1.012047856645320e+00, +1.012107954864219e+00,
+1.012157955913755e+00, +1.012200545438956e+00, +1.012232755709885e+00, +1.012257286376882e+00,
+1.012271163275396e+00, +1.012277089047072e+00, +1.012272100156695e+00, +1.012258889781605e+00,
+1.012234505114778e+00, +1.012201643414713e+00, +1.012157343029718e+00, +1.012104319978655e+00,
+1.012039603446877e+00, +1.011965913685509e+00, +1.011880293122688e+00, +1.011785448628142e+00,
+1.011678439894684e+00, +1.011561972516341e+00, +1.011433103151726e+00, +1.011294553726738e+00,
+1.011143373963981e+00, +1.010982291036989e+00, +1.010808368434796e+00, +1.010624321020038e+00,
+1.010427231547075e+00, +1.010219813871895e+00, +1.009999148545101e+00, +1.009767970668237e+00,
+1.009523347700539e+00, +1.009268031808824e+00, +1.008999095526602e+00, +1.008719286674458e+00,
+1.008425698479647e+00, +1.008121073095495e+00, +1.007802512993334e+00, +1.007472774447058e+00,
+1.007128952000889e+00, +1.006773824218378e+00, +1.006404483571931e+00, +1.006023715042962e+00,
+1.005628630023041e+00, +1.005222003295591e+00, +1.004800972930542e+00, +1.004368308119956e+00,
+1.003921160689206e+00, +1.003462311571559e+00, +1.002988912076156e+00, +1.002503762756151e+00,
+1.002004016208227e+00, +1.001492483526354e+00, +1.000966332772540e+00, +1.000428371467870e+00,
+9.998757944861690e-01, +9.993114007411373e-01, +9.987324107135600e-01, +9.981416218519609e-01,
+9.975362702189898e-01, +9.969191628491259e-01, +9.962875422935514e-01, +9.956442306333592e-01,
+9.949864765356604e-01, +9.943171077259315e-01, +9.936333924912825e-01, +9.929380432296178e-01,
+9.917160727742302e-01, +9.908677480361242e-01, +9.900143412821714e-01, +9.891360093161795e-01,
+9.882326326262749e-01, +9.873035624860487e-01, +9.863463238550498e-01, +9.853620567056602e-01,
+9.843478797730104e-01, +9.833051513036913e-01, +9.822305093671991e-01, +9.811260856582836e-01,
+9.799880424709783e-01, +9.788185853162172e-01, +9.776142582502931e-01, +9.763768210132104e-01,
+9.751026333215269e-01, +9.737939228124395e-01, +9.724467635816038e-01, +9.710631852370086e-01,
+9.696397017403771e-01, +9.681786285613160e-01, +9.666759668947944e-01, +9.651341172191925e-01,
+9.635494800783196e-01, +9.619242192293307e-01, +9.602543350544703e-01, +9.585422731136767e-01,
+9.567841986369237e-01, +9.549824213719248e-01, +9.531333627775944e-01, +9.512394303101863e-01,
+9.492969005669868e-01, +9.473083933922714e-01, +9.452700238623795e-01, +9.431841637391052e-01,
+9.410472222265884e-01, +9.388615698236068e-01, +9.366234817959531e-01, +9.343357002925867e-01,
+9.319946435581106e-01, +9.296028267859759e-01, +9.271568160852692e-01, +9.246592033932568e-01,
+9.221062052092852e-01, +9.195004240356797e-01, +9.168383396399868e-01, +9.141224927600506e-01,
+9.113493760046765e-01, +9.085218034087421e-01, +9.056363890361683e-01, +9.026958474136628e-01,
+8.996967011299613e-01, +8.966416378522284e-01, +8.935272411148886e-01, +8.903562054918268e-01,
+8.871250499337346e-01, +8.838366845222299e-01, +8.804877931535187e-01, +8.770812736055238e-01,
+8.736138336697008e-01, +8.700884209228057e-01, +8.665016401172241e-01, +8.628563075036018e-01,
+8.591492134848260e-01, +8.553833146397594e-01, +8.515554376987873e-01, +8.476686394755906e-01,
+8.437199738159921e-01, +8.397124082723917e-01, +8.356428970797861e-01, +8.315145717373513e-01,
+8.273244136947282e-01, +8.230753889817990e-01, +8.187646556254478e-01, +8.143955052591809e-01,
+8.099649296155544e-01, +8.054763240960976e-01, +8.009271179588155e-01, +7.963204506324437e-01,
+7.916533519679438e-01, +7.869294361891859e-01, +7.821460539775005e-01, +7.773057646170487e-01,
+7.724075191626083e-01, +7.674541821769616e-01, +7.624428319731227e-01, +7.573778165664506e-01,
+7.522563457568547e-01, +7.470817821499429e-01, +7.418518832940608e-01, +7.365702052057368e-01,
+7.312341927030358e-01, +7.258478768003871e-01, +7.204090552899627e-01, +7.149213766200488e-01,
+7.093829112276890e-01, +7.037975107157410e-01, +6.981626982337203e-01, +6.924822574950567e-01,
+6.867542812151157e-01, +6.809822459535158e-01, +6.751641683711578e-01, +6.693041888771051e-01,
+6.634003182158815e-01, +6.574563319397519e-01, +6.514710959179395e-01, +6.454477530601381e-01,
+6.393842401194645e-01, +6.332854832820911e-01, +6.271477285210396e-01, +6.209759156556838e-01,
+6.147685389896460e-01, +6.085293803703800e-01, +6.022569117623975e-01, +5.959553778639692e-01,
+5.896228984554688e-01, +5.832624455793536e-01, +5.768737955463938e-01, +5.704590282594502e-01,
+5.640165022515612e-01, +5.575534287167304e-01, +5.510670389249083e-01, +5.445598110309068e-01,
+5.380320138069060e-01, +5.314874283056712e-01, +5.249238143777145e-01, +5.183454027643609e-01,
+5.117512861349316e-01, +5.051454054672581e-01, +4.985259415650634e-01, +4.918987341485414e-01,
+4.852602812611293e-01, +4.786156067459849e-01, +4.719635569001799e-01, +4.653076657434153e-01,
+4.586473038370960e-01, +4.519865712901121e-01, +4.453241417472980e-01, +4.386643656872857e-01,
+4.320060235689271e-01, +4.253531733174983e-01, +4.187046888325280e-01, +4.120648989967404e-01, +4.054326930449553e-01, +3.988123056192917e-01, +3.922024876218684e-01, +3.856076044898875e-01,
+3.790262923635895e-01, +3.724631634624147e-01, +3.659167460890094e-01, +3.593914828698104e-01,
+3.528864871672291e-01, +3.464055764938486e-01, +3.399474132903109e-01, +3.335176660030293e-01,
+3.271139090168518e-01, +3.207392420889753e-01, +3.143954622458083e-01, +3.080847161569418e-01,
+3.018061113177053e-01, +2.955645092490569e-01, +2.893580088818822e-01, +2.831905952786933e-01,
+2.770614560088827e-01, +2.709746519672053e-01, +2.649288369241889e-01, +2.589278854215034e-01,
+2.529705733428521e-01, +2.470608550624402e-01, +2.411974884962474e-01, +2.353843453791010e-01,
+2.296201119084320e-01, +2.239085920293915e-01, +2.182484277107470e-01, +2.126433716126154e-01,
+2.070920316105701e-01, +2.015981078416022e-01, +1.961601816145380e-01, +1.907818965593135e-01,
+1.854618027014993e-01, +1.802035203864437e-01, +1.750055292053725e-01, +1.698714235427536e-01,
+1.647996883470628e-01, +1.597938610874129e-01, +1.548523838673932e-01, +1.499787548077658e-01,
+1.451714001185458e-01, +1.404337947365906e-01, +1.357643522991611e-01, +1.311665152711531e-01,
+1.266386794659985e-01, +1.221842534547464e-01, +1.178016171445482e-01, +1.134941442588690e-01,
+1.092601994264173e-01, +1.051031184506442e-01, +1.010212496137049e-01, +9.701788451015510e-02,
+9.309135143613317e-02, +8.924488982596421e-02, +8.547680283183663e-02, +8.179026694646475e-02,
+7.818355556343952e-02, +7.465976378295235e-02, +7.121713409722980e-02, +6.785866241065035e-02,
+6.458254322751886e-02, +6.139166651287085e-02, +5.828416955031769e-02, +5.526281189874142e-02,
+5.232565602156542e-02, +4.947530987083008e-02, +4.670976978373095e-02, +4.403144898585497e-02,
+4.143827607712719e-02, +3.893244425578721e-02, +3.651180398163022e-02, +3.417832280408597e-02,
+3.192976013776998e-02, +2.976774716313782e-02, +2.769013516567754e-02, +2.569810636390758e-02,
+2.378944369289586e-02, +2.196497565730828e-02, +2.022259265088492e-02, +1.856252261671509e-02,
+1.698293043956028e-02, +1.548317776486453e-02, +1.406194554493180e-02, +1.271739094059619e-02,
+1.144924909653903e-02, +1.025352572459910e-02, +9.132141467690603e-03, +8.076482660383204e-03,
+7.093814769976364e-03, +6.160346335510290e-03, +5.300044080947794e-03, +4.327696566833525e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

36. The apparatus of any of claims 6-21, wherein the synthesis windowing function (290) comprises a succession, in forward or backward order, formed by the following values with $\pm 1\%$ of tolerance:
+3.235700349233950e-04, +3.821992968116373e-04, +4.346763076430269e-04, +4.841399974556557e-04, +5.337292962876158e-04, +5.864735900759105e-04, +6.428827504324996e-04, +7.010318350640768e-04,
+7.608344672311270e-04, +8.240821499679188e-04, +8.910357994632938e-04, +9.604008359868557e-04,
+1.032187650884365e-03, +1.107726421735994e-03, +1.187132578842487e-03, +1.269300730654068e-03,
+1.354305556720234e-03, +1.443403284874795e-03, +1.536663296357133e-03, +1.632968062524617e-03,
+1.732380147404573e-03, +1.836145247521724e-03, +1.944392065549996e-03, +2.056125836181849e-03,
+2.171386021601719e-03, +2.291251920978034e-03, +2.415808383814314e-03, +2.544144440874477e-03,
+2.676357471188558e-03, +2.813551797283812e-03, +2.955803613263345e-03, +3.102160324883627e-03,
+3.252661103181324e-03, +3.408341073385241e-03, +3.569302917352426e-03, +3.734713566068289e-03,
+3.904659832213214e-03, +4.080147004222224e-03, +4.261212283030981e-03, +4.446929867132814e-03,
+4.637409387087253e-03, +4.833793064672789e-03, +5.036194779738963e-03, +5.243697651112321e-03,
+5.456361749675164e-03, +5.675227929566806e-03, +5.900394401532485e-03, +6.131014766883671e-03,
+6.367178191275927e-03, +6.609908124535202e-03, +6.859253963058476e-03, +7.114293307371561e-03,
+7.375089966000295e-03, +7.642693523739984e-03, +7.917171839712018e-03, +8.197610411215884e-03,
+8.484065880416487e-03, +8.777567475206218e-03, +9.078195201482999e-03, +9.385078909241503e-03,
+9.698299554301988e-03, +1.001888876231112e-02, +1.034691797503113e-02, +1.068149963936024e-02,
+1.102272421949215e-02, +1.137165918496004e-02, +1.172838973544289e-02, +1.209201783148431e-02,
+1.246260014549782e-02, +1.284114967210881e-02, +1.322773320467288e-02, +1.362147156562462e-02,
+1.402244719763268e-02, +1.443170227861997e-02, +1.484928966105225e-02, +1.527427503031274e-02,
+1.570673344965518e-02, +1.614774906895406e-02, +1.659741217225623e-02, +1.705481769961258e-02,
+1.752003567982498e-02, +1.799411192217523e-02, +1.847711280171765e-02, +1.896812570518296e-02,
+1.946722405557199e-02, +1.997546609433320e-02, +2.049290306467406e-02, +2.101858037652682e-02,
+2.155255505248360e-02, +2.209589582354997e-02, +2.264866778978731e-02, +2.320993080187466e-02,
+2.377971919482778e-02, +2.435904568934701e-02, +2.494800748775296e-02, +2.554578281793083e-02,
+2.615244880416785e-02, +2.676898100961685e-02, +2.739542549965559e-02, +2.803090209537370e-02,
+2.867550388692567e-02, +2.933029464839461e-02, +2.999535245144327e-02, +3.066976865911597e-02,
+3.135358217583060e-02, +3.204778132642869e-02, +3.275241094528637e-02, +3.346657321987338e-02,
+3.419033915994245e-02, +3.492474656851959e-02, +3.566984393450434e-02, +3.642469098112518e-02,
+3.718932683936013e-02, +3.796477227376223e-02, +3.875111047720054e-02, +3.954748420753697e-02,
+4.035395199977597e-02, +4.117148855800665e-02, +4.200013716597904e-02, +4.283901138210502e-02,
+4.368817991890082e-02, +4.454866443036003e-02, +4.542050595471842e-02, +4.630276577789394e-02,
+4.719547798640356e-02, +4.809965043366945e-02, +4.901533344583754e-02, +4.994161943600844e-02,
+5.087856571149934e-02, +5.182719384692941e-02, +5.278755308483513e-02, +5.375872122678868e-02,
+5.474076083738614e-02, +5.573471840677637e-02, +5.674064972230924e-02, +5.775761981233486e-02,
+5.878567633813699e-02, +5.982584998609648e-02, +6.087818970335195e-02, +6.194176167634657e-02,
+6.301659162319866e-02, +6.410366584958441e-02, +6.520301218579141e-02, +6.631369927165530e-02,
+6.743573988811077e-02, +6.857009288032996e-02, +6.971680213521406e-02, +7.087499583595998e-02,
+7.204473108503576e-02, +7.322699135891000e-02, +7.442178588912410e-02, +7.562815385274406e-02,
+7.684615718122945e-02, +7.807687861830234e-02, +7.932038618419741e-02, +8.057572953286415e-02,
+8.184289534616669e-02, +8.312281225703541e-02, +8.441550376460240e-02, +8.572008755967025e-02,
+8.703660776989294e-02, +8.836603137189772e-02, +8.970833701278809e-02, +9.106251913073614e-02,
+9.242858978650852e-02, +9.380757856153675e-02, +9.519952848393795e-02, +9.660349396690321e-02,
+9.801949952722568e-02, +9.944854075501454e-02, +1.008906469288751e-01, +1.023448810132759e-01,
+1.038112769854394e-01, +1.052908387348570e-01, +1.067835785257166e-01, +1.082885168352610e-01,
+1.098056403352340e-01, +1.113359035023070e-01, +1.128793060660070e-01, +1.144348917022365e-01,
+1.160026418427939e-01, +1.175834766182813e-01, +1.191773817925584e-01, +1.207834098631640e-01,
+1.224015773361210e-01, +1.240328627276697e-01, +1.256772653276007e-01, +1.273338065186211e-01,
+1.290025000390856e-01, +1.306843522870102e-01, +1.323793987456491e-01, +1.340867011604515e-01,
+1.358062490065425e-01, +1.375389612590117e-01, +1.392848238717889e-01, +1.410428901194039e-01,
+1.428131506368226e-01, +1.445965317426731e-01, +1.463929885103623e-01, +1.482015069292479e-01,
+1.500220583792976e-01, +1.518555991923989e-01, +1.537021065265166e-01, +1.555605782414143e-01,
+1.574309942903742e-01, +1.593143180431248e-01, +1.612105639985474e-01, +1.631187954209520e-01,
+1.650390046254505e-01, +1.669721131327860e-01, +1.689180947901775e-01, +1.708759773387028e-01,
+1.728457537748600e-01, +1.748283801430888e-01, +1.768238156096776e-01, +1.788310228663131e-01,
+1.808499369342717e-01, +1.828814674176937e-01, +1.849255792714432e-01, +1.869812912624581e-01,
+1.890485613515956e-01, +1.911282864915418e-01, +1.932204127989935e-01, +1.953239376543276e-01,
+1.974388457221676e-01, +1.995661075971730e-01, +2.017057139908492e-01, +2.038566744769371e-01,
+2.060189557031752e-01, +2.081934824879514e-01, +2.103802237348733e-01, +2.125781921411190e-01,
+2.147873518665726e-01, +2.170086169288035e-01, +2.192419082234839e-01, +2.214861559453727e-01, +2.237412958295601e-01, +2.260082674736221e-01, +2.282869811837961e-01, +2.305763207809758e-01,
+2.328762384864272e-01, +2.351877543503455e-01, +2.375108487943784e-01, +2.398444593573832e-01,
+2.421885165595468e-01, +2.445439470704063e-01, +2.469107075411724e-01, +2.492877833071390e-01,
+2.516751260083683e-01, +2.540736535206898e-01, +2.564833108170047e-01, +2.589030699085996e-01,
+2.613328676927456e-01, +2.637736050921935e-01, +2.662251902764728e-01, +2.686865397612919e-01,
+2.711575593740559e-01, +2.736391458519503e-01, +2.761312410342679e-01, +2.786328295517739e-01,
+2.811438338004066e-01, +2.836651148767941e-01, +2.861965981859126e-01, +2.887372740841138e-01,
+2.912870864180725e-01, +2.938469307293017e-01, +2.964167262145285e-01, +2.989954170150198e-01,
+3.015829286213736e-01, +3.041801674023100e-01, +3.067870538332799e-01, +3.094025219039914e-01,
+3.120264728553777e-01, +3.146597759277349e-01, +3.173023310827802e-01, +3.199530692693200e-01,
+3.226118955458964e-01, +3.252796888787393e-01, +3.279563545740858e-01, +3.306408240998973e-01,
+3.333329987313211e-01, +3.360337508241129e-01, +3.387430081844867e-01, +3.414597523183469e-01,
+3.441838955445625e-01, +3.469162810132548e-01, +3.496568059948401e-01, +3.524044231246164e-01,
+3.551590444946287e-01, +3.579215403419018e-01, +3.606918060977176e-01, +3.634687629020059e-01,
+3.662523018706806e-01, +3.690432842592497e-01, +3.718416007949022e-01, +3.746461722601965e-01,
+3.774569030021080e-01, +3.802746797947738e-01, +3.830993933108193e-01, +3.859299384223780e-01,
+3.887661993522015e-01, +3.916090507233831e-01, +3.944583955021906e-01, +3.973131637447736e-01,
+4.001732470818926e-01, +4.030394989766596e-01, +4.059118059100888e-01, +4.087890872349265e-01,
+4.116712207743528e-01, +4.145590432995318e-01, +4.174524354370054e-01, +4.203503225145663e-01,
+4.232526082630496e-01, +4.261601728427663e-01, +4.290728957232506e-01, +4.319896569618181e-01,
+4.349103424521226e-01, +4.378358447638693e-01, +4.407660763679560e-01, +4.436999665749521e-01,
+4.466373809565015e-01, +4.495791232066263e-01, +4.525250566690236e-01, +4.554741060746665e-01,
+4.584261742417322e-01, +4.613821390145840e-01, +4.643418692214444e-01, +4.673042252463159e-01,
+4.702690556535691e-01, +4.732372004975696e-01, +4.762085675098781e-01, +4.791821288489955e-01,
+4.821577734075715e-01, +4.851363063006593e-01, +4.881175853001019e-01, +4.911005242880451e-01,
+4.940850327998220e-01, +4.970720120437943e-01, +5.000613277949747e-01, +5.030518116390311e-01,
+5.060433154467696e-01, +5.090367134250039e-01, +5.120318927612107e-01, +5.150277508616620e-01,
+5.180241439456884e-01, +5.210218879576217e-01, +5.240208300352607e-01, +5.270198510229556e-01,
+5.300188492910082e-01, +5.330187387865785e-01, +5.360194223342527e-01, +5.390197891039044e-01,
+5.420196856030712e-01, +5.450199204515231e-01, +5.480203984293612e-01, +5.510201184135838e-01,
+5.540189939344148e-01, +5.570178491640744e-01, +5.600165101133929e-01, +5.630138095716375e-01,
+5.660096045860781e-01, +5.690047761849362e-01, +5.719992058026786e-01, +5.749917722935854e-01,
+5.779823098049300e-01, +5.809716105476772e-01, +5.839595278786620e-01, +5.869449780892492e-01,
+5.899278766736546e-01, +5.929091339529038e-01, +5.958886225335936e-01, +5.988651785480291e-01,
+6.018386614784691e-01, +6.048099568741729e-01, +6.077789763021885e-01, +6.107446538724647e-01,
+6.137068698395559e-01, +6.166664505621099e-01, +6.196232440099102e-01, +6.225761217125432e-01,
+6.255249461230102e-01, +6.284705701386001e-01, +6.314128591964590e-01, +6.343506915084997e-01,
+6.372839411338272e-01, +6.402134772829997e-01, +6.431391659393545e-01, +6.460598714450869e-01,
+6.489754897736506e-01, +6.518869471124649e-01, +6.547941354100638e-01, +6.576959114103553e-01,
+6.605921398591732e-01, +6.634836963621389e-01, +6.663704870510495e-01, +6.692514453435826e-01,
+6.721264409903913e-01, +6.749962795110787e-01, +6.778607807385375e-01, +6.807187840914061e-01,
+6.835701860237697e-01, +6.864159372105746e-01, +6.892559431770480e-01, +6.920890588499607e-01,
+6.949150680560000e-01, +6.977346951975620e-01, +7.005478826218464e-01, +7.033537849891354e-01,
+7.061523680058837e-01, +7.089444008783498e-01, +7.117296915594161e-01, +7.145070977546192e-01,
+7.172765338080037e-01, +7.200389672139186e-01, +7.227943349906750e-01, +7.255415386736762e-01,
+7.282804177906205e-01, +7.310117549409422e-01, +7.337354140683028e-01, +7.364503418025881e-01,
+7.391564587113454e-01, +7.418546544582220e-01, +7.445447900371659e-01, +7.472257006958800e-01,
+7.498972580176051e-01, +7.525603713200814e-01, +7.552149563509314e-01, +7.578599326607545e-01,
+7.604951971158384e-01, +7.631216241889446e-01, +7.657390988438872e-01, +7.683465174378752e-01,
+7.709437746884765e-01, +7.735317637507610e-01, +7.761103909474643e-01, +7.786785753465276e-01,
+7.812362247368221e-01, +7.837842352787271e-01, +7.863225078411482e-01, +7.888499478365373e-01,
+7.913664452543058e-01, +7.938728763542381e-01, +7.963691608881653e-01, +7.988542608155023e-01,
+8.013280948233752e-01, +8.037915368847273e-01, +8.062444700164981e-01, +8.086857893766403e-01,
+8.111154166403033e-01, +8.135342978258457e-01, +8.159423410909078e-01, +8.183384161720055e-01,
+8.207224042595236e-01, +8.230952011363564e-01, +8.254567363530231e-01, +8.278059715784122e-01,
+8.301428451410482e-01, +8.324682688387346e-01, +8.347821132094333e-01, +8.370832131533167e-01,
+8.393715063470556e-01, +8.416480314488108e-01, +8.439127501937738e-01, +8.461645428100565e-01,
+8.484032850727410e-01, +8.506298550754564e-01, +8.528442051510350e-01, +8.550453592633493e-01, +8.572332837070840e-01,   +8.594088830061699e-01,   +8.615720389795806e-01,   +8.637216156780773e-01,
+8.658575289268042e-01,   +8.679807503377460e-01,   +8.700913260411943e-01,   +8.721883611259660e-01,
+8.742716585927360e-01,   +8.763417616681772e-01,   +8.783992457627015e-01,   +8.804446862867205e-01,
+8.824720518946858e-01,   +8.844895714000796e-01,   +8.864924067856547e-01,   +8.884810495155143e-01,
+8.904559910537616e-01,   +8.924176927432972e-01,   +8.943659231393618e-01,   +8.962997945931150e-01,
+8.982192307568165e-01,   +9.001249598283012e-01,   +9.020168984242400e-01,   +9.038941561917321e-01,
+9.057567533900666e-01,   +9.076056139480890e-01,   +9.094406951444953e-01,   +9.112609887718295e-01,
+9.130664170641334e-01,   +9.148578383916375e-01,   +9.166352766163086e-01,   +9.183979162084582e-01,
+9.201457654565685e-01,   +9.218796522413809e-01,   +9.235994678560167e-01,   +9.253041759179184e-01,
+9.269937646114531e-01,   +9.286692422352107e-01,   +9.303305869999694e-01,   +9.319767447096182e-01,
+9.336076279434850e-01,   +9.352241212055423e-01,   +9.368261950246144e-01,   +9.384129048732400e-01,
+9.399842532824511e-01,   +9.415411877758678e-01,   +9.430836933050435e-01,   +9.446107932775473e-01,
+9.461224797394725e-01,   +9.476197145049868e-01,   +9.491025238239363e-01,   +9.505699947545118e-01,
+9.520221006942875e-01,   +9.534597036603291e-01,   +9.548827789205158e-01,   +9.562904165806793e-01,
+9.576826318703395e-01,   +9.590603607072891e-01,   +9.604235518327253e-01,   +9.617711703240024e-01,
+9.631031827400425e-01,   +9.644205605875820e-01,   +9.657233714331878e-01,   +9.670107721424878e-01,
+9.682827690312492e-01,   +9.695402205004198e-01,   +9.707831348559515e-01,   +9.720106722663890e-01,
+9.732228900099870e-01,   +9.744207385215033e-01,   +9.756042291745447e-01,   +9.767724349112544e-01,
+9.779253363131216e-01,   +9.790638238608151e-01,   +9.801879015797271e-01,   +9.812966868607661e-01,
+9.823902028722666e-01,   +9.834693768739560e-01,   +9.845342107123233e-01,   +9.855837812929384e-01,
+9.866180804760872e-01,   +9.876380187637696e-01,   +9.886436665180195e-01,   +9.896342515143703e-01,
+9.906098638997559e-01,   +9.915714515450228e-01,   +9.925190128422767e-01,   +9.934516032286224e-01,
+9.943692859110803e-01,   +9.952731289730088e-01,   +9.961631909904601e-01,   +9.970385179500313e-01,
+9.978990898252071e-01,   +9.987458272559335e-01,   +9.995787919228785e-01,   +1.000397182360297e+00,
+1.001201041464802e+00,   +1.001991256344717e+00,   +1.002767847497049e+00,   +1.003529972103569e+00,
+1.004277707367492e+00,   +1.005012047094235e+00,   +1.005733043131263e+00,   +1.006439806897506e+00,
+1.007132401590545e+00,   +1.007811842988376e+00,   +1.008478224880801e+00,   +1.009130715556477e+00,
+1.009769355086547e+00,   +1.010395057449511e+00,   +1.011007859994881e+00,   +1.011606924689628e+00,
+1.012192316076366e+00,   +1.012765000430642e+00,   +1.013325049263210e+00,   +1.013871638199171e+00,
+1.014404818816957e+00,   +1.014925520781073e+00,   +1.015433826923486e+00,   +1.015928972967257e+00,
+1.016411066364942e+00,   +1.016881083871244e+00,   +1.017339099302786e+00,   +1.017784285061100e+00,
+1.018216717878600e+00,   +1.018637379379835e+00,   +1.019046362683200e+00,   +1.019442870837515e+00,
+1.019826975825003e+00,   +1.020199618679535e+00,   +1.020560853084751e+00,   +1.020909847360410e+00,
+1.021246684563866e+00,   +1.021572361827679e+00,   +1.021886975685526e+00,   +1.022189721024281e+00,
+1.022480682703848e+00,   +1.022760836860466e+00,   +1.023030287959746e+00,   +1.023288268237906e+00,
+1.023534888355832e+00,   +1.023771136381063e+00,   +1.023997104737320e+00,   +1.024211990514308e+00,
+1.024415875333744e+00,   +1.024609726504572e+00,   +1.024793642571832e+00,   +1.024966852210664e+00,
+1.025129444345768e+00,   +1.025282368545871e+00,   +1.025425713582690e+00,   +1.025558707847599e+00,
+1.025681449959415e+00,   +1.025794908567991e+00,   +1.025899187425550e+00,   +1.025993525806572e+00,
+1.026078042674063e+00,   +1.026153736073730e+00,   +1.026220725639502e+00,   +1.026278251222302e+00,
+1.026326400217514e+00,   +1.026366109298213e+00,   +1.026397475218959e+00,   +1.026419755159132e+00,
+1.026433063472609e+00,   +1.026438369530571e+00,   +1.026435753513555e+00,   +1.026424407896423e+00,
+1.026404414325658e+00,   +1.026376745497183e+00,   +1.026341529591056e+00,   +1.026298047712657e+00,
+1.026246413164014e+00,   +1.026187571341079e+00,   +1.026121618202469e+00,   +1.026047802601159e+00,
+1.025966259113017e+00,   +1.025878005857533e+00,   +1.025783163725466e+00,   +1.025680955378961e+00,
+1.025571464026533e+00,   +1.025455636062312e+00,   +1.025333580354341e+00,   +1.025204567428491e+00,
+1.025068712226252e+00,   +1.024926972279997e+00,   +1.024779424810995e+00,   +1.024625269765159e+00,
+1.024464619501421e+00,   +1.024298498053110e+00,   +1.024127035189888e+00,   +1.023949464567318e+00,
+1.023765888955297e+00,   +1.023577282345944e+00,   +1.023383771098535e+00,   +1.023184632809730e+00,
+1.022979990313458e+00,   +1.022770810566653e+00,   +1.022557186135377e+00,   +1.022338337695996e+00,
+1.022114387574851e+00,   +1.021886357834243e+00,   +1.021654354624439e+00,   +1.021417567672874e+00,
+1.021176074694516e+00,   +1.020930844259280e+00,   +1.020681994464816e+00,   +1.020428792450358e+00,
+1.020171385028845e+00,   +1.019910795563718e+00,   +1.019647124626418e+00,   +1.019379551852598e+00,
+1.019108176121263e+00,   +1.018834017611273e+00,   +1.018557222865231e+00,   +1.018277062013127e+00,
+1.017993662628480e+00,   +1.017708008483692e+00,   +1.017420178311649e+00,   +1.017129349129694e+00,
+1.016835630605444e+00,   +1.016540064652456e+00,   +1.016242782169058e+00,   +1.015943000562828e+00,
+1.015640812550351e+00,   +1.015337187460531e+00,   +1.015032211107897e+00,   +1.014725089526348e+00,
+1.014415991238242e+00,   +1.014106040189062e+00,   +1.013795318041038e+00,   +1.013482869234993e+00, +1.013168810057302e+00, +1.012854327596526e+00, +1.012539547722209e+00, +1.012223533569952e+00,
+1.011906384233988e+00, +1.011589234882839e+00, +1.011272160610958e+00, +1.010954179972212e+00,
+1.010635428864728e+00, +1.010317161995333e+00, +1.009999611212465e+00, +1.009681947024951 e+00,
+1.009363573682324e+00, +1.009044325068028e+00, +1.008727479269698e+00, +1.008418957730006e+00,
+1.008106691995008e+00, +1.007763945845098e+00, +1.007443035427814e+00, +1.007268321305087e+00,
+1.007188313360058e+00, +1.006980582693088e+00, +1.006607718427208e+00, +1.006220813354843e+00,
+1.005880191360173e+00, +1.005548147634276e+00, +1.005208505985926e+00, +1.004870660907557e+00,
+1.004538945715620e+00, +1.004211548979837e+00, +1.003887307826199e+00, +1.003565998252022e+00,
+1.003247928753973e+00, +1.002933862630671e+00, +1.002623715011975e+00, +1.002316573551338e+00,
+1.002012456628431e+00, +1.001712307918128e+00, +1.001416118705407e+00, +1.001122929266782e+00,
+1.000832736946922e+00, +1.000546495806722e+00, +1.000264200804259e+00, +9.999848879324513e-01,
+9.997085530666436e-01, +9.994361518334981e-01, +9.991676778789439e-01, +9.989021630276661e-01,
+9.986396025239043e-01, +9.983809548686250e-01, +9.981262129964925e-01, +9.978744044020248e-01,
+9.976255227380388e-01, +9.973805277659410e-01, +9.971394126637049e-01, +9.969012039797195e-01,
+9.966658933095314e-01, +9.964344374346332e-01, +9.962068296990753e-01, +9.959820998119757e-01,
+9.957602381261346e-01, +9.955421958422669e-01, +9.953279652235180e-01, +9.951165794460692e-01,
+9.949080290979398e-01, +9.947032622296315e-01, +9.945022689695088e-01, +9.943040815876473e-01,
+9.941086912851109e-01, +9.939170480434331e-01, +9.937291405239381e-01, +9.935439962464298e-01,
+9.933616056210112e-01, +9.931829218182915e-01, +9.930079338821240e-01, +9.928356667510468e-01,
+9.926661086172732e-01, +9.925002110373203e-01, +9.923379640068731e-01, +9.921783957486814e-01,
+9.920214929714285e-01, +9.918682011153984e-01, +9.917185094982703e-01, +9.915714511212392e-01,
+9.914270132578689e-01, +9.912861375369392e-01, +9.911488111762619e-01, +9.910140670228395e-01,
+9.908818932025615e-01, +9.907532330064230e-01, +9.906280727376265e-01, +9.905054418160028e-01,
+9.903853272281469e-01, +9.902686735168059e-01, +9.901554680972392e-01, +9.900447411363362e-01,
+9.899364775767996e-01, +9.898316173651273e-01, +9.897301484429727e-01, +9.896311064950427e-01,
+9.895344764114521e-01, +9.894411924684042e-01, +9.893512408407925e-01, +9.892636595590807e-01,
+9.891784350480575e-01, +9.890965020344753e-01, +9.890178449763316e-01, +9.889414982259392e-01,
+9.888674481881904e-01, +9.887966331854001e-01, +9.887290383256132e-01, +9.886636955343167e-01,
+9.886005893838439e-01, +9.885406571815547e-01, +9.884838850803949e-01, +9.884293079255704e-01,
+9.883769097708243e-01, +9.883276240055705e-01, +9.882814356355465e-01, +9.882373812607220e-01,
+9.881954463086439e-01, +9.881565649335834e-01, +9.881207205644380e-01, +9.880869460773882e-01,
+9.880552270464479e-01, +9.880265015932943e-01, +9.880007538329854e-01, +9.879770139187286e-01,
+9.879552655810734e-01, +9.879364462155417e-01, +9.879205412712961e-01, +9.879065840760606e-01,
+9.878945575956836e-01, +9.878853946070033e-01, +9.878790797412935e-01, +9.878746493979034e-01,
+9.878720878008731e-01, +9.878723269672057e-01, +9.878753499522159e-01, +9.878801909638151e-01,
+9.878868346314371e-01, +9.878962158879177e-01, +9.879083181018892e-01, +9.879221731254697e-01,
+9.879377642109470e-01, +9.879560260604132e-01, +9.879769430009732e-01, +9.879995488718708e-01,
+9.880238263660437e-01, +9.880507071322525e-01, +9.880801746803725e-01, +9.881112643600719e-01,
+9.881439599864610e-01, +9.881791937541983e-01, +9.882169477221827e-01, +9.882562539746005e-01,
+9.882970966792446e-01, +9.883404119215459e-01, +9.883861819949297e-01, +9.884334355024147e-01,
+9.884821553014376e-01, +9.885332784979397e-01, +9.885867883714737e-01, +9.886417143055318e-01,
+9.886980383296721e-01, +9.887566952073135e-01, +9.888176678250945e-01, +9.888799871475064e-01,
+9.889436358294569e-01, +9.890095481884937e-01, +9.890777059811048e-01, +9.891471384894399e-01,
+9.892178286528791e-01, +9.892907129712469e-01, +9.893657732439902e-01, +9.894420366217603e-01,
+9.895194850020712e-01, +9.895990550550585e-01, +9.896807293945533e-01, +9.897635364818964e-01,
+9.898474573387898e-01, +9.899334256730253e-01, +9.900214239316713e-01, +9.901104832002432e-01,
+9.902005849312988e-01, +9.902926609798792e-01, +9.903866926546286e-01, +9.904817107571495e-01,
+9.905776973966729e-01, +9.906755858999687e-01, +9.907753570146928e-01, +9.908760390079692e-01,
+9.909776136318341e-01, +9.910810160568396e-01, +9.911862274458985e-01, +9.912922749689899e-01,
+9.913991395528559e-01, +9.915077559112314e-01, +9.916181054602099e-01, +9.917292162715997e-01,
+9.918410691314309e-01, +9.919545975686356e-01, +9.920697824274926e-01, +9.921856518839308e-01,
+9.923021872317422e-01, +9.924203228138201e-01, +9.925400387231874e-01, +9.926603609120486e-01,
+9.927812708898945e-01, +9.929037056012008e-01, +9.930276450366935e-01, +9.931521123405382e-01,
+9.932770885572193e-01, +9.934035125599263e-01, +9.935313647282036e-01, +9.936596669792295e-01,
+9.937883997783191e-01, +9.939185021388579e-01, +9.940499546103031e-01, +9.941817792665538e-01,
+9.943139564620480e-01, +9.944474248344178e-01, +9.945821646067609e-01, +9.947171976098198e-01,
+9.948525044676624e-01, +9.949890245456261e-01, +9.951267376194471e-01, +9.952646639522682e-01,
+9.954027843196593e-01, +9.955420399208714e-01, +9.956824104013806e-01, +9.958229139376651e-01, +9.959635310797721e-01, +9.961052046849509e-01, +9.962479146150113e-01, +9.963906777760744e-01,
+9.965334742957022e-01, +9.966772475112751e-01, +9.968219775371954e-01, +9.969666812541205e-01,
+9.971113385049125e-01, +9.972568921184832e-01, +9.974033222384361e-01, +9.975496462958124e-01,
+9.976958440808505e-01, +9.978428577721199e-01, +9.979906675056988e-01, +9.981382913210521e-01,
+9.982857084011294e-01, +9.984338592613343e-01, +9.985827266667445e-01, +9.987313348873088e-01,
+9.988796523949821e-01, +9.990285947364306e-01, +9.991781850354060e-01, +9.993275431378141e-01,
+9.994764863008044e-01, +9.996255698609559e-01, +9.997753812452573e-01, +9.999265078806980e-01,
+1.000073497520791 e+00, +1.000224669219663e+00, +1.000374570389487e+00, +1.000523787909342e+00,
+1.000672909364706e+00, +1.000822490899924e+00, +1.000972349809292e+00, +1.001121604191588e+00,
+1.001270276668384e+00, +1.001419284847822e+00, +1.001568597382930e+00, +1.001717235441161e+00,
+1.001865181102795e+00, +1.002013378040221e+00, +1.002161805549920e+00, +1.002309477314975e+00,
+1.002456372686098e+00, +1.002603438051255e+00, +1.002750653220044e+00, +1.002897030034197e+00,
+1.003042547763044e+00, +1.003188154489387e+00, +1.003333829980590e+00, +1.003478584306210e+00,
+1.003622396620552e+00, +1.003766216551067e+00, +1.003910024058434e+00, +1.004052828034629e+00,
+1.004194607298016e+00, +1.004336312014269e+00, +1.004477922478776e+00, +1.004618447680436e+00,
+1.004757866142788e+00, +1.004897127367124e+00, +1.005036211788027e+00, +1.005174129339999e+00,
+1.005310858606722e+00, +1.005447348229275e+00, +1.005583578404365e+00, +1.005718559516336e+00,
+1.005852270535212e+00, +1.005985660340410e+00, +1.006118708775473e+00, +1.006250425365265e+00,
+1.006380789350186e+00, +1.006510750945005e+00, +1.006640290029854e+00, +1.006768414896740e+00,
+1.006895104560895e+00, +1.007021310029137e+00, +1.007147011697879e+00, +1.007271218063607e+00,
+1.007393907701933e+00, +1.007516030573849e+00, +1.007637567482182e+00, +1.007757528772291e+00,
+1.007875893086371e+00, +1.007993608628118e+00, +1.008110655922241 e+00, +1.008226046614216e+00,
+1.008339760080372e+00, +1.008452744553207e+00, +1.008564979989454e+00, +1.008675477014256e+00,
+1.008784215564761 e+00, +1.008892145905632e+00, +1.008999248092397e+00, +1.009104530964226e+00,
+1.009207974189350e+00, +1.009310529294049e+00, +1.009412177137242e+00, +1.009511926856510e+00,
+1.009609757696156e+00, +1.009706620067364e+00, +1.009802495163920e+00, +1.009896393940608e+00,
+1.009988296223056e+00, +1.010079151649770e+00, +1.010168940724606e+00, +1.010256673981368e+00,
+1.010342332426681e+00, +1.010426868280804e+00, +1.010510261597171 e+00, +1.010591519577714e+00,
+1.010670623429633e+00, +1.010748529051234e+00, +1.010825217388920e+00, +1.010899693712359e+00,
+1.010971938438940e+00, +1.011042907905867e+00, +1.011112584131909e+00, +1.011179974034890e+00,
+1.011245058042453e+00, +1.011308790830468e+00, +1.011371154144579e+00, +1.011431156159085e+00,
+1.011488778523215e+00, +1.011544976893053e+00, +1.011599732403024e+00, +1.011652051214875e+00,
+1.011701915457469e+00, +1.011750283661017e+00, +1.011797137846246e+00, +1.011841483052088e+00,
+1.011883300488277e+00, +1.011923548068040e+00, +1.011962209203063e+00, +1.011998292246508e+00,
+1.012031778271071 e+00, +1.012063621581602e+00, +1.012093805289032e+00, +1.012121340917460e+00,
+1.012146211141323e+00, +1.012169370028522e+00, +1.012190799612422e+00, +1.012209509774826e+00,
+1.012225484155619e+00, +1.012239680217839e+00, +1.012252080651208e+00, +1.012261693287047e+00,
+1.012268500924551e+00, +1.012273461473019e+00, +1.012276559127865e+00, +1.012276804202582e+00,
+1.012274179329824e+00, +1.012269639581679e+00, +1.012263168844414e+00, +1.012253779830287e+00,
+1.012241456954404e+00, +1.012227156156870e+00, +1.012210860152664e+00, +1.012191578747083e+00,
+1.012169297374220e+00, +1.012144976732521e+00, +1.012118600449884e+00, +1.012089175409008e+00,
+1.012056685871527e+00, +1.012022093240567e+00, +1.011985383173782e+00, +1.011945565763788e+00,
+1.011902624776521e+00, +1.011857517445845e+00, +1.011810229432951e+00, +1.011759775156899e+00,
+1.011706140218275e+00, +1.011650280893217e+00, +1.011592181601430e+00, +1.011530855573595e+00,
+1.011466289818154e+00, +1.011399444375047e+00, +1.011330304370585e+00, +1.011257880752579e+00,
+1.011182159707019e+00, +1.011104101993156e+00, +1.011023694799342e+00, +1.010939952356944e+00,
+1.010852860445419e+00, +1.010763375755366e+00, +1.010671485695127e+00, +1.010576209154936e+00,
+1.010477533938561e+00, +1.010376415807060e+00, +1.010272840810986e+00, +1.010165826445586e+00,
+1.010055362601328e+00, +1.009942410277932e+00, +1.009826955798404e+00, +1.009708012131765e+00,
+1.009585568925891e+00, +1.009460591235290e+00, +1.009333067695896e+00, +1.009202011723081e+00,
+1.009067412134881e+00, +1.008930231993351e+00, +1.008790461334113e+00, +1.008647118373303e+00,
+1.008500193172393e+00, +1.008350646299744e+00, +1.008198467170796e+00, +1.008042675572153e+00,
+1.007883264022713e+00, +1.007721196075366e+00, +1.007556460824166e+00, +1.007388074720253e+00,
+1.007216031301935e+00, +1.007041299348476e+00, +1.006863869718207e+00, +1.006682757156533e+00,
+1.006497954572682e+00, +1.006310431304003e+00, +1.006120180721864e+00, +1.005926221917719e+00,
+1.005728547752975e+00, +1.005528123164754e+00, +1.005324942594936e+00, +1.005118031770913e+00,
+1.004907385380564e+00, +1.004693965144879e+00, +1.004477765157871e+00, +1.004257813991292e+00,
+1.004034108834670e+00, +1.003807613226332e+00, +1.003578321293819e+00, +1.003345260144698e+00,

+ 1.003108428405854e+00, +1.002868793771428e+00, +1.002626351889911e+00, +1.002380128823734e+00,
+1.002130123378852e+00, +1.001877304672605e+00, +1.001621670689409e+00, +1.001362250678481e+00,
+1.001099043542970e+00, +1.000833015458249e+00, +1.000564166270619e+00, +1.000291531899435e+00,
+1.000015112295927e+00, +9.997358689793686e-01, +9.994538026878185e-01, +9.991679559269192e-01,
+9.988783302889642e-01, +9.985858838509232e-01, +9.982906190683758e-01, +9.979915852192069e-01,
+9.976887805584920e-01, +9.973831508544119e-01, +9.970747197397686e-01, +9.967625861356061e-01,
+9.964466729061831e-01, +9.961277448216609e-01, +9.958061137774057e-01, +9.954815632236269e-01,
+9.951529474418550e-01, +9.948184819816882e-01, +9.944824644674363e-01, +9.941541831614942e-01,
+9.938176459160070e-01, +9.934356569036324e-01, +9.930678080460911e-01, +9.928629897063861e-01,
+9.920151198036643e-01, +9.914646039976289e-01, +9.910580786225461e-01, +9.906661670997940e-01,
+9.902352352689523e-01, +9.897945722571376e-01, +9.893565433952757e-01, +9.889131869680553e-01,
+9.884611897966706e-01, +9.880027035297985e-01, +9.875383274623817e-01, +9.870669099030384e-01,
+9.865881954382273e-01, +9.861028679251979e-01, +9.856108490726415e-01, +9.851112908058255e-01,
+9.846041087188396e-01, +9.840899793789135e-01, +9.835687475691413e-01, +9.830394337851477e-01,
+9.825019919189980e-01, +9.819573015637479e-01, +9.814052410296346e-01, +9.808446911100914e-01,
+9.802755449178991e-01, +9.796987091039431e-01, +9.791141208337264e-01, +9.785207439579823e-01,
+9.779184677896273e-01, +9.773081082723492e-01, +9.766895349125904e-01, +9.760616740194450e-01,
+9.754244530504396e-01, +9.747787966745514e-01, +9.741245958128935e-01, +9.734607083730100e-01,
+9.727870063627455e-01, +9.721043782586516e-01, +9.714127339971064e-01, +9.707110047334955e-01,
+9.699991325531057e-01, +9.692780666596675e-01, +9.685476898124051e-01, +9.678068213341131e-01,
+9.670553568518259e-01, +9.662942694162036e-01, +9.655234943873926e-01, +9.647419268609606e-01,
+9.639494801526087e-01, +9.631470850364502e-01, +9.623346145023939e-01, +9.615108868233452e-01,
+9.606758082762421e-01, +9.598303722906686e-01, +9.589744979972803e-01, +9.581070287387355e-01,
+9.572278607616873e-01, +9.563379453266456e-01, +9.554372064329766e-01, +9.545245399941635e-01,
+9.535998779685757e-01, +9.526641870716750e-01, +9.517173763138073e-01, +9.507582991859514e-01,
+9.497868942084339e-01, +9.488041830577462e-01, +9.478100888078225e-01, +9.468034353946915e-01,
+9.457841175975197e-01, +9.447531037006662e-01, +9.437103240778304e-01, +9.426546695512183e-01,
+9.415860667090934e-01, +9.405054771915659e-01, +9.394128066604807e-01, +9.383069072240268e-01,
+9.371877218082764e-01, +9.360562830727714e-01, +9.349125451819119e-01, +9.337553821450042e-01,
+9.325847195259637e-01, +9.314015363873052e-01, +9.302057763482381e-01, +9.289963473252155e-01,
+9.277732047659371e-01, +9.265373496318979e-01, +9.252887007804731e-01, +9.240260966323954e-01,
+9.227494594741956e-01, +9.214597964334704e-01, +9.201570566323493e-01, +9.188401295674291e-01,
+9.175089523148627e-01, +9.161645099567182e-01, +9.148067377557750e-01, +9.134345222358713e-01,
+9.120478227747287e-01, +9.106476709258303e-01, +9.092340339068899e-01, +9.078058138594686e-01,
+9.063629680720371e-01, +9.049065091670875e-01, +9.034363889945074e-01, +9.019514987490371e-01,
+9.004517876609461e-01, +8.989382633487150e-01, +8.974108808873397e-01, +8.958685426521079e-01,
+8.943112058133614e-01, +8.927398817643528e-01, +8.911545160393349e-01, +8.895539896413210e-01,
+8.879382683346716e-01, +8.863084022826353e-01, +8.846643687806315e-01, +8.830050715882986e-01,
+8.813304835012828e-01, +8.796416466159852e-01, +8.779385355821995e-01, +8.762200577776852e-01,
+8.744861938961381e-01, +8.727379973888942e-01, +8.709754415944566e-01, +8.691974194090119e-01,
+8.674038889082810e-01, +8.655958747817611e-01, +8.637733542642025e-01, +8.619352566808824e-01,
+8.600815675121538e-01, +8.582133280699462e-01, +8.563305243162549e-01, +8.544320869868485e-01,
+8.525180054943617e-01, +8.505893287555129e-01, +8.486460694867924e-01, +8.466872027543964e-01,
+8.447127297770400e-01, +8.427236779556280e-01, +8.407200377231397e-01, +8.387007637143141e-01,
+8.366658636487900e-01, +8.346163977407922e-01, +8.325523768291012e-01, +8.304727614321823e-01,
+8.283775428310826e-01, +8.262677444285360e-01, +8.241433705663960e-01, +8.220034073785601e-01,
+8.198478927378535e-01, +8.176779138137669e-01, +8.154934833957916e-01, +8.132935411236417e-01,
+8.110781042287996e-01, +8.088482692756163e-01, +8.066040997239516e-01, +8.043446229495154e-01,
+8.020698771287099e-01, +7.997809105802602e-01, +7.974777203962242e-01, +7.951592558139738e-01,
+7.928255537687610e-01, +7.904777397235739e-01, +7.881159103734087e-01, +7.857391245481645e-01,
+7.833473203720548e-01, +7.809413293257642e-01, +7.785212684545030e-01, +7.760865347057494e-01,
+7.736372881515523e-01, +7.711744403395434e-01, +7.686979147929021e-01, +7.662066652369949e-01,
+7.637008160854790e-01, +7.611816536232692e-01, +7.586492915456966e-01, +7.561026668755407e-01,
+7.535417845985437e-01, +7.509677253608117e-01, +7.483805701761127e-01, +7.457793976748408e-01,
+7.431642988739133e-01, +7.405363749469933e-01, +7.378956733994703e-01, +7.352411918301537e-01,
+7.325730245135402e-01, +7.298923618910717e-01, +7.271993327965579e-01, +7.244930008228270e-01,
+7.217734421626190e-01, +7.190417491579090e-01, +7.162980305440977e-01, +7.135414111237446e-01,
+7.107720243445051e-01, +7.079910089690906e-01, +7.051984432364411e-01, +7.023933467824965e-01, +6.995757887359807e-01, +6.967468908559541e-01, +6.939067884621855e-01, +6.910546259244099e-01,
+6.881904964956265e-01, +6.853154435187701e-01, +6.824295471401947e-01, +6.795319276046549e-01,
+6.766227310314311e-01, +6.737031265887281e-01, +6.707732585543063e-01, +6.678322438578169e-01,
+6.648801659515325e-01, +6.619180818581655e-01, +6.589461833521619e-01, +6.559637902883004e-01,
+6.529710426495826e-01, +6.499688969386536e-01, +6.469573547411541e-01, +6.439354791990427e-01,
+6.409035288603075e-01, +6.378629377753962e-01, +6.348137437689479e-01, +6.317545972986219e-01,
+6.286855280775698e-01, +6.256079561741540e-01, +6.225221695832768e-01, +6.194273058858271e-01,
+6.163234711851669e-01, +6.132117491461520e-01, +6.100922809170846e-01, +6.069642650584504e-01,
+6.038278760531646e-01, +6.006842631336996e-01, +5.975336059686350e-01, +5.943751066904921e-01,
+5.912087588215279e-01, +5.880353659529035e-01, +5.848551837605717e-01, +5.816678990293079e-01,
+5.784735261655043e-01, +5.752724325989095e-01, +5.720650011081139e-01, +5.688516144717076e-01,
+5.656282061898663e-01, +5.624031153715552e-01, +5.591715220043816e-01, +5.559338788791430e-01,
+5.526906296747757e-01, +5.494421930334449e-01, +5.461886187066721e-01, +5.429296335729603e-01,
+5.396656057073835e-01, +5.363974990167699e-01, +5.331253296256703e-01, +5.298481989939661e-01,
+5.265662376610855e-01, +5.232805923025862e-01, +5.199914838946222e-01, +5.166982164701727e-01,
+5.134010079652577e-01, +5.101009713211846e-01, +5.067981651483114e-01, +5.034916218473716e-01,
+5.001816735886107e-01, +4.968699258080247e-01, +4.935565059779667e-01, +4.902400722563398e-01,
+4.869206550924504e-01, +4.835996679580279e-01, +4.802774381791762e-01, +4.769531954412434e-01,
+4.736270399539189e-01, +4.702999408508168e-01, +4.669720784607305e-01, +4.636428606356920e-01,
+4.603125364998776e-01, +4.569821724233974e-01, +4.536519115376573e-01, +4.503209953849403e-01,
+4.469896264032189e-01, +4.436589520558524e-01, +4.403291677455351e-01, +4.369995283852560e-01,
+4.336702110092919e-01, +4.303423032287362e-01, +4.270159791313206e-01, +4.236905139305585e-01,
+4.203661194857656e-01, +4.170439288466521e-01, +4.137241358370239e-01, +4.104060097514602e-01,
+4.070897555089031e-01, +4.037764981593507e-01, +4.004664107465299e-01, +3.971587296380776e-01,
+3.938536636599421e-01, +3.905523798917074e-01, +3.872550507871729e-01, +3.839608678121244e-01,
+3.806700467713708e-01, +3.773838145590149e-01, +3.741023650337649e-01, +3.708248707285573e-01,
+3.675515053070522e-01, +3.642834353302138e-01, +3.610208992409523e-01, +3.577632145496031e-01,
+3.545105744959446e-01, +3.512640341612003e-01, +3.480236943438447e-01, +3.447887254766508e-01,
+3.415594491122957e-01, +3.383373171891836e-01, +3.351225758795442e-01, +3.319142610233081e-01,
+3.287122759768420e-01, +3.255174149216469e-01, +3.223300837378850e-01, +3.191502945992604e-01 ,
+3.159783340225497e-01, +3.128147301790672e-01, +3.096594366002203e-01, +3.065118829951374e-01,
+3.033724163096057e-01, +3.002422624347096e-01, +2.971215837581699e-01, +2.940094940665994e-01,
+2.909060968951387e-01, +2.878124834032541e-01, +2.847288683996017e-01, +2.816545966307170e-01,
+2.785898831431842e-01, +2.755357983580602e-01, +2.724924992373132e-01, +2.694592444601876e-01,
+2.664361954971699e-01, +2.634244029834191e-01, +2.604240268886862e-01, +2.574343504718905e-01,
+2.544555518459914e-01, +2.514886909115458e-01, +2.485339317782194e-01, +2.455905549948218e-01,
+2.426587307354937e-01, +2.397395063360460e-01, +2.368330357314138e-01, +2.339385917103926e-01,
+2.310563352467077e-01, +2.281873038963940e-01, +2.253316454409216e-01, +2.224886282863191e-01,
+2.196584073367104e-01, +2.168420127437019e-01, +2.140395864128403e-01, +2.112503945704412e-01,
+2.084745870335015e-01, +2.057131843889434e-01, +2.029663241873446e-01, +2.002332724591127e-01,
+1.975141729701546e-01, +1.948100372792062e-01, +1.921209969418309e-01, +1.894463139881238e-01,
+1.867861307455174e-01, +1.841414579810843e-01, +1.815124204803960e-01, +1.788982688766118e-01,
+1.762991374092110e-01, +1.737160334143236e-01, +1.711490837149136e-01, +1.685975427109672e-01,
+1.660615404766350e-01, +1.635420747284597e-01, +1.610392647455030e-01, +1.585523606699242e-01, +
1.560814882692011e-01, +1.536276387455411e-01, +1.511909278215991e-01, + 1.487706056453130e-01,
+1.463667950599714e-01, +1.439804830586271e-01, +1.416117840041388e-01, +1.392599476606263e-01,
+1.369250939274206e-01, +1.346082041944543e-01, +1.323093893293406e-01, +1.300278987264480e-01,
+1.277638491717384e-01, +1.255182155111709e-01, +1.232911060463692e-01, +1.210817706513393e-01,
+1.188903216873087e-01, +1.167177275528689e-01, +1.145640946398680e-01, +1.124286726877977e-01,
+1.103115703218860e-01, +1.082137493008784e-01, +1.061353122093495e-01, +1.040755094642518e-01,
+1.020344462904939e-01, +1.000130754353283e-01, +9.801149609996949e-02, +9.602895962715033e-02,
+9.406556557413213e-02, +9.212225718017839e-02, +9.019912955294541e-02, +8.829543394466111e-02,
+8.641126446867767e-02, +8.454755261333674e-02, +8.270438757849537e-02, +8.088102201374671e-02,
+7.907754246044904e-02, +7.729486433686708e-02, +7.553307095292439e-02, +7.379141728818767e-02,
+7.206998099643694e-02, +7.036965903891536e-02, +6.869052561376873e-02, +6.703183558090599e-02,
+6.539365708843246e-02, +6.377686761792192e-02, +6.218153160076208e-02, +6.060690353708294e-02,
+5.905303920289844e-02, +5.752079270262547e-02, +5.601021629546108e-02, +5.452056276526779e-02,
+5.305187265543028e-02, +5.160497192770200e-02, +5.017990065949564e-02, +4.877591488398978e-02, +4.739303765878024e-02, +4.603205697395506e-02, +4.469299727922284e-02, +4.337512126408456e-02,
+4.207843336193631e-02, +4.080367800167834e-02, +3.955086170148164e-02, +3.831925359021936e-02,
+3.710883802024247e-02, +3.592031377191350e-02, +3.475367083924110e-02, +3.360819061792393e-02,
+3.248382426594506e-02, +3.138119240391853e-02, +3.030027537135876e-02, +2.924041340892334e-02,
+2.820153617857359e-02, +2.718416076819826e-02, +2.618823091914950e-02, +2.521312012928253e-02,
+2.425872983336824e-02, +2.332548569166988e-02, +2.241332520509764e-02, +2.152170070657781e-02,
+2.065047207339204e-02, +1.979990274080047e-02, +1.896992105664513e-02, +1.816012507709582e-02,
+1.737032543754079e-02, +1.660053693426305e-02, +1.585068068878849e-02, +1.512059554489944e-02,
+1.441002712765956e-02, +1.371861264850595e-02, +1.304629624757017e-02, +1.239334766429038e-02,
+1.175941174949483e-02, +1.114348079271000e-02, +1.054549096241532e-02, +9.966369456231951e-03,
+9.405876078723861e-03, +8.862485552559351e-03, +8.334801852513261e-03, +7.821914540064593e-03,
+7.329085750247891e-03, +6.866427280374203e-03, +6.407912160580299e-03, +5.896299968476348e-03,
+5.431884551945897e-03, +5.251971150005845e-03, +4.914753459788713e-03, +3.326211257672788e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.080367800000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.080367800000000e+00, +0.000000000000000e+00, +0.000000000000000e+00,
+0.000000000000000e+00, +0.000000000000000e+00, +0.000800000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

**37.** An apparatus according to any of claims 6-21, wherein the synthesis windowing function is defined so as to present a first numerical derivative between -0.01 and +0.01.

**38.** An apparatus according to any of claims 6-21, wherein the synthesis windowing function is defined so as to present a second numerical derivative between $-10^{-4}$ and $+10^{-4}$.

**39.** An apparatus according to any of claims 6-21, wherein the synthesis windowing function is defined so as to present a second numerical derivative between $-10^{-5}$ and $+10^{-5}$.

**40.** A method for encoding an audio signal comprising a plurality of frames, the method comprising:

performing a modified cosine transformation, MDCT, analysis for transforming a time domain, TD, representation of the audio signal, or a processed version thereof, into a frequency domain, FD, representation, using an analysis windowing function (40, 50, 240, 70) having a crossing portion (44, 244) which passes a linear function (40', 240') in correspondence of at least four points (#1, #2, #3, #4),
wherein the analysis windowing function is defined so as to be asymmetric,
wherein the analysis windowing function (40, 240) is defined so as to be, in the crossing portion (44, 94, 244):

greater than the linear function (40', 240') in a first interval (41,241) between a first crossing point (#1) and a second crossing point (#2);
lower than the linear function (40', 240') in a second interval (42, 242) between the second crossing point (#2) and a third crossing point (#3);
greater than the linear function (40', 240') in a third interval (43, 243) between the third crossing point (#3) and a fourth crossing point (#4),

wherein the analysis windowing function is defined so that the absolute maximum value (41', 241') is in one of the first and third interval,
**characterized in that** the linear function (40, 240) is a constant function with constant value 1.

**41.** A method for decoding an audio signal, or a processed version thereof, defined in the frequency domain, FD, the method comprising

performing a modified cosine transformation, MDCT, synthesis for transforming the FD representation of an audio signal, or processed version thereof, into a time domain, TD, representation, using a synthesis windowing function (90) having a crossing portion (94) which passes a linear function in correspondence of at least four points (#1, #2, #3, #4),
wherein the synthesis windowing function (90, 290) is defined so as to be, in the crossing portion:

greater than the linear function in a first interval between a first crossing point and a second crossing point;
lower than the linear function in a second interval between the second crossing point and a third crossing point;
greater than the linear function in a third interval between the third crossing point and a fourth crossing point,

wherein the synthesis windowing function is defined so that the absolute maximum value is in one of the first and third interval,
**characterized in that** the linear function is a constant function with constant value 1.

**42.** A non-transitory storage unit storing instructions which, when running on a processor, cause the processor to execute a method according to claim 40 or 41.

**Patentansprüche**

**1.** Eine Vorrichtung (130, 130A, 110) zum Codieren eines Audiosignals mit einer Mehrzahl von Rahmen, wobei die Vorrichtung folgende Merkmale aufweist:

ein Werkzeug zur modulierten gelappten Transformation zum Umwandeln einer Zeitbereichs-, TD-, Darstellung des Audiosignals, oder einer verarbeiteten Version desselben, in eine Frequenzbereich-, FD-, Darstellung, wobei das Werkzeug (131) zur modulierten gelappten Transformation dazu ausgebildet ist, eine Analyse einer modulierten gelappten Transformation durchzuführen unter Verwendung einer Analysefensterungsfunktion (40, 50, 70, 240) mit einem Kreuzungsabschnitt (44, 64, 244), der eine Linearfunktion (40', 240') kreuzt, gemäß zumindest vier Punkten (#1, #2, #3, #4); und
einen Bitstrom-Schreiber (137), der dazu ausgebildet ist, einen Bitstrom basierend auf der FD-Darstellung des Audiosignals oder einer verarbeiteten Version desselben vorzubereiten,
wobei die Analysefensterungsfunktion so definiert ist, dass sie asymmetrisch ist,
wobei die Analysefensterungsfunktion (40, 240) so definiert ist, dass sie in dem Kreuzungsabschnitt (44, 94, 244):

in einem ersten Intervall (41, 241) zwischen einem ersten Kreuzungspunkt (#1) und einem zweiten Kreuzungspunkt (#2) größer ist als die Linearfunktion (40', 240');
in einem zweiten Intervall (42, 242) zwischen dem zweiten Kreuzungspunkt (#2) und einem dritten Kreuzungspunkt (#3) niedriger ist als die Linearfunktion (40', 240');
in einem dritten Intervall (43, 243) zwischen dem dritten Kreuzungspunkt (#3) und einem vierten Kreuzungspunkt (#4) größer ist als die Linearfunktion (40', 240'),

wobei die Analysefensterungsfunktion so definiert ist, dass der absolute Maximalwert (41',241') in einem des ersten und dritten Intervalls liegt,
**dadurch gekennzeichnet, dass** die Linearfunktion (40, 240) eine konstante Funktion mit konstantem Wert 1 ist.

**2.** Die Vorrichtung gemäß Anspruch 1,
bei der die Analysefensterungsfunktion (40, 240) so definiert ist, dass das Maximum der Analysefensterungsfunktion (40, 240) weniger als 25% größer ist als der Wert der Linearfunktion (40, 240) zu dem gleichen Zeitpunkt.

**3.** Die Vorrichtung gemäß Anspruch 1, bei der das Werkzeug zur modulierten gelappten Transformation dazu ausgebildet ist:
Zeiteingangspuffer und/oder Kosinus- oder Sinuswerte mit Werten der Analysefensterungsfunktion (40, 50, 70, 240) zu skalieren.

**4.** Die Vorrichtung gemäß Anspruch 3, bei der das Werkzeug zur modulierten gelappten Transformation dazu ausgebildet ist, Eingangspuffer in folgender Form zu verwenden:

$$t(n) = x(Z - N_F + n) \; für \; n = 0..2N_F - 1 - Z,$$

und

$$t(2N - Z + n) = 0 \quad für \; n = 0..Z - 1$$

wobei $x$(n) ein TD-Abtastwert des Audiosignals oder einer verarbeiteten Version des Audiosignals zu dem Zeitpunkt $n$ ist, $N_F$ die Anzahl von Abtastwerten ist, die in einem Rahmen verarbeitet werden, und Z die Anzahl von führenden Nullen in einem Fenster einer modulierten gelappten Transformation ist.

5. Die Vorrichtung gemäß einem der vorherigen Ansprüche, bei der das Werkzeug (131) zur modulierten gelappten Transformation dazu ausgebildet ist, Folgendes durchzuführen:

$$X(k) = \sqrt{\frac{2}{N_F}} \sum_{n=0}^{2N_F-1} w_N(n) \cdot t(n) \cos\left[\frac{\pi}{N_F}\left(n + \frac{1}{2} + \frac{N_F}{2}\right)\left(k + \frac{1}{2}\right)\right] \ f\ddot{u}r \ k = 0..N_F - 1$$

wobei X(k) der Frequenzwert der modulierten gelappten Transformation bei einem Frequenzindex *k* ist, *n* der Zeitpunkt ist, $w_N(n)$ die Analysefensterungsfunktion ist, *t(n)* ein Zeiteingangspuffer ist und $N_F$ die Anzahl von Abtastwerten ist, die in einem Rahmen verarbeitet werden.

6. Eine Vorrichtung (140, 140A, 120) zum Decodieren eines Audiosignals oder einer verarbeiteten Version desselben, das in dem Frequenzbereich, FD, definiert ist, wobei die Vorrichtung folgende Merkmale aufweist:

   einen Bitstrom-Leser (141), der dazu ausgebildet ist, einen Bitstrom zu lesen, der das Audiosignal codiert; und ein Werkzeug (147) zur inversen modulierten gelappten Transformation, das dazu ausgebildet ist, eine Synthese einer inversen modulierten gelappten Transformation an dem Audiosignal oder einer verarbeiteten Version desselben durchzuführen unter Verwendung einer Synthesefensterungsfunktion (90) mit einem Kreuzungsabschnitt (94), der eine Linearfunktion kreuzt, in Entsprechung zu zumindest vier Punkten (#1, #2, #3, #4),
   wobei die Synthesefensterungsfunktion (90, 290) so definiert ist, dass sie asymmetrisch ist,
   wobei die Synthesefensterungsfunktion (90, 290) so definiert ist, dass sie in dem Kreuzungsabschnitt (44, 94, 244):

   in einem ersten Intervall zwischen einem ersten Kreuzungspunkt und einem zweiten Kreuzungspunkt größer ist als die Linearfunktion;
   in einem zweiten Intervall zwischen dem zweiten Kreuzungspunkt und einem dritten Kreuzungspunkt niedriger ist als die Linearfunktion;
   in einem dritten Intervall zwischen dem dritten Kreuzungspunkt und einem vierten Kreuzungspunkt größer ist als die Linearfunktion,

   wobei die Synthesefensterungsfunktion so definiert ist, dass der absolute Maximalwert in einem des ersten und dritten Intervalls liegt,
   **dadurch gekennzeichnet, dass** die Linearfunktion eine konstante Funktion mit konstantem Wert 1 ist.

7. Die Vorrichtung gemäß Anspruch 6,
   bei der die Synthesefensterungsfunktion (90, 290) so definiert ist, dass das Maximum der Synthesefensterungsfunktion (90, 290) weniger als 25% größer ist als der Wert der Linearfunktion (90, 290) zu dem gleichen Zeitpunkt.

8. Die Vorrichtung gemäß Anspruch 6 oder 7, bei der das Werkzeug (147) zur inversen modulierten gelappten Transformation dazu ausgebildet ist:
   Werte an einem Zeitbereich-Aliasing-Puffer mit Werten der Synthesefensterungsfunktion (90) zu skalieren.

9. Die Vorrichtung gemäß einem der Ansprüche 6 bis 8, bei der das Werkzeug (147) zur inversen modulierten gelappten Transformation dazu ausgebildet ist, eine Zeitbereich-, TD-, Signaldarstellung in folgender Form zu erzeugen:

$$\hat{t}(n) = \sqrt{\frac{2}{N_F}} \sum_{k=0}^{N_F-1} \hat{X}(k) \cos\left[\frac{\pi}{N_F}\left(n + \frac{1}{2} + \frac{N_F}{2}\right)\left(k + \frac{1}{2}\right)\right] \ f\ddot{u}r \ n = 0..2N_F - 1$$

wobei $\hat{t}(n)$ ein Aliasing-Puffer ist, $\hat{X}(k)$ das Audiosignal oder eine verarbeitete Version desselben ist und $N_F$ die Anzahl von Abtastwerten für einen TD-Rahmen ist.

10. Die Vorrichtung gemäß einem der Ansprüche 6 bis 9, bei der das Werkzeug (147) zur inversen modulierten gelappten Transformation dazu ausgebildet ist:
    eine Fensterung (S162) des Zeit-Aliasing-Puffers durchzuführen.

**11.** Die Vorrichtung gemäß einem der Ansprüche 6 bis 10, bei der das Werkzeug (147) zur inversen modulierten gelappten Transformation dazu ausgebildet ist, eine Fensterungsoperation durchzuführen durch Durchführen von:

$$\hat{t}(n) = w_N(2N - 1 - n) \cdot \hat{t}(n) \ f\ddot{u}r \ n = 0..2N_F - 1$$

**12.** Die Vorrichtung gemäß einem der Ansprüche 6 bis 11, bei der das Werkzeug (147) zur inversen modulierten gelappten Transformation dazu ausgebildet ist, eine Überlappung-und-Addition-Operation (S163) durchzuführen.

**13.** Die Vorrichtung gemäß einem der Ansprüche 6 bis 12, bei der das Werkzeug (147) zur inversen modulierten gelappten Transformation dazu ausgebildet ist, eine Überlappung-und-Addition-Operation folgendermaßen durchzuführen:

$$\hat{x}(n) = \ mem\_ola\_add(n) + \ \hat{t}(Z + n) \ \ f\ddot{u}r \ n = 0..N_F - Z - 1$$

$$\hat{x}(n) = \hat{t}(Z + n) \ \ f\ddot{u}r \ n = N_F - Z..N_F - 1$$

$$mem\_ola\_add(n) = \hat{t}(N_F + Z + n) \ \ f\ddot{u}r \ n = 0..N_F - Z - 1,$$

wobei $\hat{x}(n)$ der Ausgabewert ist, $\hat{t}(.)$ ein gefensterter Zeit-Aliasing-Puffer ist und $N_F$ die Anzahl von Abtastwerten in einem Rahmen ist.

**14.** Die Vorrichtung gemäß einem der Ansprüche 6-13, bei der:
die Synthesefensterungsfunktion (90) so definiert ist, dass in dem Kreuzungsabschnitt (44, 244) ein relativer Maximalwert (43', 243') in dem ersten oder dritten Intervall (41, 43, 241, 243) liegt und ein relativer Minimalwert (42', 242') in dem zweiten Intervall (42, 242) liegt.

**15.** Die Vorrichtung gemäß einem der Ansprüche 6-14, bei der:
die Synthesefensterungsfunktion (90) so definiert ist, dass sie in dem Kreuzungsabschnitt (44, 244, 94) einen Wert präsentiert, der größer ist als die Linearfunktion, in einem Intervall, das aus 30% und 50% zweier Rahmen besteht.

**16.** Die Vorrichtung gemäß Anspruch 14 oder 15, bei der:
die Synthesefensterungsfunktion (90) so definiert ist, dass das Maximum der Synthesefensterungsfunktion (90) weniger als 25% größer ist als der Wert der Linearfunktion zu dem gleichen Zeitpunkt.

**17.** Die Vorrichtung gemäß einem der Ansprüche 14 bis 16, bei der:
die Synthesefensterungsfunktion (90) so definiert ist, dass das Maximum (41', 241') der Synthesefensterungsfunktion (90) weniger als 5% größer ist als der Wert der Linearfunktion zu dem gleichen Zeitpunkt.

**18.** Die Vorrichtung gemäß einem der Ansprüche 14 bis 17, bei der:
die Synthesefensterungsfunktion (90) so definiert ist, dass sie eine zweite numerische Ableitung zwischen $-3*10^{-4}$ und $+3*10^{-4}$ präsentiert.

**19.** Die Vorrichtung gemäß einem der Ansprüche 6-18, bei der:
die Synthesefensterungsfunktion (90) so definiert ist, dass sie eine dritte numerische Ableitung zwischen $-2*10^{-5}$ und $+2*10^{-5}$ präsentiert.

**20.** Die Vorrichtung gemäß einem der Ansprüche 6-19, die ferner folgendes Merkmal aufweist:
einen Speicherraum (113) zum Speichern der Werte der Synthesefensterungsfunktion (90).

**21.** Die Vorrichtung gemäß einem der Ansprüche 6-20, bei der die inverse modulierte gelappte Transformation eine inverse modifizierte diskrete Kosinustransformation, IMDCT, oder inverse modifizierte diskrete Sinustransformation, IMDST, ist.

**22.** Die Vorrichtung gemäß einem der Ansprüche 1-5, bei der die modulierte gelappte Transformation eine modifizierte diskrete Kosinustransformation, MDCT, oder eine modifizierte diskrete Sinustransformation, MDST, ist.

23. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von $\pm 1\%$: -7.078546706512391e-04f, -2.098197727900724e-03f, -4.525198076002370e-03f, -8.233976327300612e-03f, -1.337713096257934e-02f, -1.999721557401502e-02f, -2.800909464274782e-02f, -3.721502082245055e-02f, -4.731768261606175e-02f, -5.794654834034055e-02f, -6.867606753531441e-02f, -7.904647440788692e-02f, -8.859705468085925e-02f, -9.688303623049199e-02f, -1.034961241263523e-01f, -1.080766457616878e-01f, -1.103242262600913e-01f, -1.099809851424550e-01f, -1.068172142230882e-01f, -1.006190418791648e-01f, -9.116452506492527e-02f, -7.820617483254730e-02f, -6.146688124166948e-02f, -4.063362855701623e-02f, -1.536329520788766e-02f, +1.470155068746303e-02f, +4.989736509080558e-02f, +9.050369257152079e-02f, +1.366911019414417e-01f, +1.884686389218322e-01f, +2.456456803467095e-01f, +3.077789078889820e-01f, +3.741642373060188e-01f, +4.438114799213576e-01f, +5.154735456539700e-01f, +5.876661722564289e-01f, +6.587619767809000e-01f, +7.270576699841359e-01f, +7.908752989295335e-01f, +8.486643364959733e-01f, +8.991320235484349e-01f, +9.413348145272842e-01f, +9.747634827941575e-01f, +9.994114730415857e-01f, +1.015760373791603e+00f, +1.024736164069697e+00f, +1.027634294456205e+00f, +1.025991493983836e+00f, +1.021427210603284e+00f, +1.015439859549357e+00f, +1.009366925499550e+00f, +1.003508162416449e+00f, +9.988898206257559e-01f, +9.953133902427869e-01f, +9.925943919208190e-01f, +9.905771957917731e-01f, +9.891371616557014e-01f, +9.881790747212391e-01f, +9.876249269174586e-01f, +9.874056275509585e-01f, +9.874524849192456e-01f, +9.876951134084213e-01f, +9.880640617030884e-01f, +9.884926873551375e-01f, +9.889230031022089e-01f, +9.893074965384659e-01f, +9.896146331889107e-01f, +9.898319269347060e-01f, +9.899693102025342e-01f, +9.900603352632121e-01f, +9.901575015155720e-01f, +9.903255289051605e-01f, +9.906303787150326e-01f, +9.911298894709990e-01f, +9.918665491182922e-01f, +9.928619727154252e-01f, +9.941156069136238e-01f, +9.956033775539884e-01f, +9.972793109558521e-01f, +9.990784840729244e-01f, +1.000922365901945e+00f, +1.002728111386909e+OOf, +1.004416038098237e+00f, +1.005919224127911e+00f, + 1.007189345025525e+00f, + 1.008200146369426e+00f, + 1.008949493525753e+00f, +1.009458241425143e+00f, +1.009768980817384e+00f, +1.009940336228694e+00f, + 1.010039453539107e+00f, +1.010132323996401e+OOf, +1.010272524848519e+00f, +1.010494354532353e+OOf, +1.010808068774316e+00f, +1.011201071127927e+00f, +1.011641272406023e+OOf, +1.012080125934687e+00f, +1.012458183122033e+00f, +1.012706955800289e+00f, +1.012755013843985e+00f, +1.012530134411619e+00f, +1.011962331100864e+00f, +1.010982135506986e+00f, +1.009512438049510e+00f, +1.007460860286395e+00f, +1.004708677491086e+00f, +1.001111413242302e+00f, +9.965041017623596e-01f, +9.907199995730845e-01f, +9.823765865983288e-01f, +9.708821747608998e-01f, +9.546732976073705e-01f, +9.321553861564006e-01f, +9.018003682081348e-01f, +8.623984077953557e-01f, +8.132817365236141e-01f, +7.544551974836834e-01f, +6.866580716267418e-01f, +6.113488038789190e-01f, +5.306181649316597e-01f, +4.471309850999502e-01f, +3.639114681156236e-01f, +2.841647033392408e-01f, +2.110209448747969e-01f, +1.472287968327703e-01f, +9.482665349502291e-02f, +5.482436608328477e-02f, +2.701461405056264e-02f, +9.996743588367519e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

24. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von $\pm 1\%$: -4.619898752628163e-04f, -9.747166718929050e-04f, -1.664473096973725e-03f, -2.597106916737789e-03f, -3.806285163352241e-03f, -5.324608721716763e-03f, -7.175885277771099e-03f, -9.382480860899108e-03f, -1.195270300743193e-02f, -1.489528159506296e-02f, -1.820666399965468e-02f, -2.187570925786862e-02f, -2.588471937157619e-02f, -3.020862738245264e-02f, -3.481597793538342e-02f, -3.967067992672979e-02f, -4.472698045914417e-02f, -4.994225863256500e-02f, -5.526334794593565e-02f, -6.063717235243996e-02f, -6.600961519440657e-02f, -7.131966266443390e-02f, -7.651178225890490e-02f, -8.152964005319532e-02f, -8.631137544905677e-02f, -9.080411291245728e-02f, -9.495377758870335e-02f, -9.870736514214426e-02f, -1.020202684361974e-01f, -1.048438825017798e-01f, -1.071382314127799e-01f, -1.088690135027248e-01f, -1.099969655786929e-01f, -1.1 04898474883336e-01f, -1.103225838568563e-01f, -1.094621746650760e-01f, -1.078834293141886e-01f, -1.055612509762041e-01f, -1.024650162703341e-01f, -9.857014566194629e-02f, -9.384684920715425e-02f, -8.826309993000785e-02f, -8.178792716809512e-02f, -7.438785600211463e-02f, -6.602189797715241e-02f, -5.665655641133161e-02f, -4.624456893420224e-02f, -3.474585776145929e-02f, -2.211581608120528e-02f, -8.310425696208936e-03f, +6.717697635290676e-03f, +2.300642061077823e-02f, +4.060106462625085e-02f, +5.953239090915557e-02f, +7.983354189816511e-02f, +1.015233140203748e-01f, +1.246171387327525e-01f, +1.491152519299797e-01f, +1.750067399059861e-01f, +2.022699854906251e-01f, +2.308655379767671e-01f, +2.607365124918583e-01f, +2.918144694729168e-01f, +3.240095704645023e-01f, +3.572175180786021e-01f, +3.913146885756875e-01f, +4.261571642320424e-01 f, +4.615925445090212e-01f, +4.974471592901086e-01f, +5.335326819631583e-01f, +5.696546730080154e-01f, +6.056083823929643e-01f, +6.411830842823245e-01f, +6.761653499550255e-01f, +7.103400549562944e-01f, +7.434943718765665e-01f, +7.754281892901473e-01f, +8.059437233154637e-01f, +8.348589373399948e-01f, +8.620108336276733e-01f, +8.872599706865123e-01f, +9.104863121445679e-01f, +9.315962496426278e-01f, +9.505220861927248e-01f, +9.672366712325431e-01f, +9.817397501303696e-01f, +9.940557180662704e-01f, +1.004247514102417e+OOf, +1.012407428282884e+00f, +1.018650990561848e+00f, +1.023118841384460e+00f, +1.025972450969440e+OOf, +1.027397523939210e+OOf, +1.027585830688143e+00f, +1.026738673647482e+OOf, +1.025061777648234e+00f, +1.022756514615106e+00f, +1.020009139549275e+00f, +1.016996499560845e+00f, +1.013915946100629e+OOf, +1.011044869639164e+00f, +1.007773858455400e+00f, + 1.004848753962734e+00f, +1.002245009135684e+00f, +9.999393169239009e-01f, +9.979055415627330e-01f, +9.961203379971326e-01f, +9.945597525471822e-01f, +9.932031606606762e-01f, +9.920297273323891e-01f, +9.910230654424902e-01f, +9.901668953434221e-01f, +9.894488374513719e-01f, +9.888556356037892e-01f, +9.883778520531268e-01f, +9.880051626345804e-01f, +9.877295459610343e-01f, +9.875412739766566e-01f, +9.874329809802893e-01f, +9.873949921033299e-01f, +9.874197049003676e-01f, +9.874973205882319e-01f, +9.876201238703241e-01f, +9.877781920433015e-01f, +9.879637979933339e-01f, +9.881678007807095e-01f, +9.883835200189653e-01f, +9.886022219397892e-01f, +9.888182771263505e-01f, +9.890247977602895e-01f, +9.892178658748239e-01f, +9.893923680007577e-01f, +9.895463342815009e-01f, +9.896772011542693e-01f, +9.897859195209235e-01f, +9.898725363809847e-01f, +9.899410789223559e-01f, +9.899945557067980e-01f, +9.900394023736973e-01f, +9.900814722948890e-01f, +9.901293790312005e-01f, +9.901902265696609e-01f, +9.902734448815004e-01f, +9.903862280081246e-01f, +9.905379830873822e-01f, +9.907348826312993e-01f, +9.909842592301273e-01f, +9.912905118607647e-01f, +9.916586940166509e-01f, +9.920906151219310e-01f, +9.925887208794144e-01f, +9.931516528513824e-01f, +9.937790866568735e-01f, +9.944668184371617e-01f, +9.952116634297566e-01f, +9.960068616185641e-01f, +9.968461329825753e-01f, +9.977203369515556e-01f, +9.986213520769593e-01f, +9.995382582242990e-01f, +1.000461955079660e+00f, +1.001380551217109e+00f, +1.002284871786226e+00f, +1.003163845364970e+00f, +1.004009147462043e+00f, +1.004811375053364e+OOf, +1.005563968008037e+OOf, +1.006259855360867e+OOf, +1.006895570408563e+00f, +1.007466616298057e+00f, +1.007972441990187e+00f, +1.008411468616852e+00f, +1.008786009787269e+00f, +1.009097763850333e+00f, +1.009351762546296e+00f, +1.009552401900961e+00f, +1.009707093778162e+00f, +1.009822090220407e+00f, +1.009906958448099e+00f, +1.009969021400474e+00f, +1.010017890428877e+00f, +1.010060809299530e+00f, +1.010106564965965e+00f, +1.010161131093372e+OOf, +1.010231078494249e+OOf, +1.010319484524512e+00f, +1.010430470494512e+OOf, +1.010564099281000e+OOf, +1.010721360243234e+OOf, +1.010899655674578e+OOf, +1.011096993993037e+00f, +1.011308167670753e+OOf, +1.011529185153809e+00f, +1.011753008569803e+00f, +1.011973876511603e+00f, +1.012182837094955e+00f, +1.012373028737774e+OOf, +1.012535058602453e+OOf, +1.012660975529858e+00f, +1.012740575296603e+00f, +1.012765922449960e+00f, +1.012726958954961e+00f, +1.012615904116265e+OOf, +1.012422888521601e+00f, +1.012140460211194e+OOf, +1.011758810583150e+00f, +1.011269960947744e+00f, +1.010663676735228e+00f, +1.009930754807923e+00f, +1.009058249873833e+OOf, +1.008034308295421e+00f, +1.006843352506855e+00f, +1.005470005637052e+00f, +1.003894772403371e+00f, +1.002098854400575e+00f, +1.000060686758758e+00f, +9.977600196406868e-01f, +9.951746430061121e-01f, +9.922861082472264e-01f, +9.890757668707590e-01f, +9.847362453480265e-01f, +9.798613526271561e-01f, +9.741378617337759e-01f, +9.673331975559332e-01f, +9.592539757044516e-01f, +9.496984081652284e-01f, +9.384634163826711e-01f, +9.253567968750328e-01f, +9.101986790930605e-01f, +8.928338316495705e-01f, +8.731437835983047e-01f, +8.510420440685049e-01f, +8.264839911291133e-01f, +7.994681492797084e-01f, +7.700431275216928e-01f,
+7.383028603058783e-01f, +7.043814340356083e-01f, +6.684616478236647e-01f, +6.307755329382612e-01f,
+5.915799587176216e-01f, +5.511703155400274e-01f, +5.098915423728179e-01f, +4.681017110047964e-01f,
+4.261772971493010e-01f, +3.845172335531009e-01f, +3.435228672445613e-01f, +3.036004651973099e-01f,
+2.651434678028531e-01f, +2.285283969438072e-01f, +1.941021906320984e-01f, +1.621735416384830e-01f,
+1.330015240938615e-01f, +1.067840430193724e-01f, +8.365057236623041e-02f, +6.365188111381356e-02f,
+4.676538412257621e-02f, +3.288072750732215e-02f, +2.183057564646270e-02f, +1.336381425803019e-02f,
+6.758124889697787e-03f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f

25. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von ±1%: -3.613496418928369e-04f, -7.078546706512391e-04f, -1.074443637110903e-03f, -1.533478537964509e-03f, -2.098197727900724e-03f, -2.778420871815740e-03f, -3.584129920673041e-03f, -4.525198076002370e-03f, -5.609327243712055e-03f, -6.843234536105624e-03f, -8.233976327300612e-03f, -9.785314755557023e-03f, -1.149880303071551e-02f, -1.337713096257934e-02f, -1.542181679511618e-02f, -1.762979910961727e-02f, -1.999721557401502e-02f, -2.252080561390149e-02f, -2.519406300389030e-02f, -2.800909464274782e-02f, -3.095765092956728e-02f, -3.402996266948349e-02f, -3.721502082245055e-02f, -4.050053247568393e-02f, -4.387219218706189e-02f, -4.731768261606175e-02f, -5.082325342672667e-02f, -5.437166635159518e-02f, -5.794654834034055e-02f, -6.153426201732499e-02f, -6.511708163113709e-02f, -6.867606753531441e-02f, -7.219447805250771e-02f, -7.565695975592170e-02f, -7.904647440788692e-02f, -8.234442557322251e-02f, -8.553324579905185e-02f, -8.859705468085925e-02f, -9.152091100798199e-02f, -9.428847446755965e-02f, -9.688303623049198e-02f, -9.929123258537813e-02f, -1.015008467688577e-01f, -1.034961241263523e-01f, -1.052637003544443e-01f, -1.067939984687745e-01f, -1.080766457616878e-01f, -1.090997300590506e-01f, -1.098524491515805e-01f, -1.103242262600913e-01f, -1.105084619148789e-01f, -1.103977408741932e-01f, -1.099809851424550e-01f, -1.092492774392824e-01f, -1.081974227416502e-01f, -1.068172142230882e-01f, -1.050995803285455e-01f, -1.030360111111103e-01f, -1.006190418791648e-01f, -9.784120023411771e-02f, -9.469304216883027e-02f, -9.116452506492527e-02f, -8.724644532866996e-02f, -8.293043914044632e-02f, -7.820617483254730e-02f, -7.306142427456862e-02f, -6.748468182105991e-02f, -6.146688124166948e-02f, -5.499497258200362e-02f, -4.805444424454820e-02f, -4.063362855701623e-02f, -3.272045590229335e-02f, -2.430122582451853e-02f, -1.536329520788766e-02f, -5.891434269890659e-03f, +4.126595858583295e-03f, +1.470155068746303e-02f, +2.584738191459814e-02f, +3.757652772246801e-02f, +4.989736509080558e-02f, +6.282034030592902e-02f, +7.635397728566121e-02f, +9.050369257152079e-02f, +1.052747118478660e-01f, +1.206703467513333e-01f, +1.366911019414417e-01f, +1.533343890681390e-01f, +1.705954709184399e-01f, +1.884686389218322e-01f, +2.069449962574092e-01f, +2.260093000067393e-01f, +2.456456803467095e-01f, +2.658346019332584e-01f, +2.865543814049772e-01f, +3.077789078889820e-01f, +3.294769437072290e-01f, +3.516171481750350e-01f, +3.741642373060188e-01f, +3.970739591211551e-01f, +4.203043046885219e-01f, +4.438114799213576e-01f, +4.675442291623012e-01f, +4.914498631045615e-01f, +5.154735456539700e-01f, +5.395557644293222e-01f, +5.636399817032525e-01f, +5.876661722564289e-01f, +6.115695310143157e-

108

01f, +6.352890592874099e-01f, +6.587619767809000e-01f, +6.819230974423550e-01f, +7.047092819314779e-01f, +7.270576699841359e-01f, +7.489068963384272e-01f, + 7.701990187606995e-01f, + 7.908752989295335e-01f, +8.108788692151807e-01f, +8.301579139160681e-01f, +8.486643364959733e-01f, +8.663548164329093e-01f, +8.831896853053627e-01f, +8.991320235484349e-01f, +9.141540563656075e-01f, +9.282282546151819e-01f, +9.413348145272842e-01f, +9.534619388400459e-01f, +9.646048250501910e-01f, +9.747634827941575e-01f, +9.839435385219192e-01f, +9.921529097154242e-01f, +9.994114730415857e-01f, +1.005746084650236e+00f, +1.011183971347815e+00f, +1.015760373791603e+00f, +1.019515072412387e+00f, +1.022490937034641e+00f, +1.024736164069697e+00f, +1.026304095700693e+00f, +1.027250978292214e+00f, +1.027634294456205e+OOf, +1.027511063644843e+00f, +1.026942795115598e+00f, +1.025991493983836e+OOf, +1.024716149969084e+00f, +1.023175976163407e+00f, +1.021427210603284e+00f, +1.019521566634239e+00f, +1.017510118327508e+00f, +1.015439859549357e+00f, +1.013460916839174e+00f, +1.011654901040475e+00f, +1.009366925499550e+OOf, +1.007263182132894e+00f, +1.005313192386866e+00f, +1.003508162416449e+00f, +1.001840787319378e+00f, +1.000303927234380e+00f, +9.988898206257559e-01f, +9.975915283480670e-01f, +9.964015284765968e-01f, +9.953133902427869e-01f, +9.943201078053212e-01f, +9.934158959186011e-01f, +9.925943919208190e-01f, +9.918510277326026e-01f, +9.911797988363887e-01f, +9.905771957917731e-01f, +9.900381047643838e-01f, +9.895594394179152e-01f, +9.891371616557014e-01f, +9.887684373604154e-01f, +9.884497924570929e-01f, +9.881790747212391e-01f, +9.879528358230726e-01f, +9.877691368590689e-01f, +9.876249269174586e-01f, +9.875179947346887e-01f, +9.874458127312921e-01f, +9.874056275509585e-01f, +9.873951115886979e-01f, +9.874115368168944e-01f, +9.874524849192456e-01f, +9.875149888347144e-01f, +9.875968894760857e-01f, +9.876951134084213e-01f, +9.878075819424549e-01f, +9.879311998177238e-01f, +9.880640617030884e-01f, +9.882032571565917e-01f, +9.883471084085503e-01f, +9.884926873551375e-01f, +9.886386592120545e-01f, +9.887825578295630e-01f, +9.889230031022089e-01f, +9.890581715933395e-01f, +9.891867674284610e-01f, +9.893074965384659e-01f, +9.894196399062921e-01f, +9.895220757174378e-01f, +9.896146331889107e-01f, +9.896970346678272e-01f, +9.897692596535289e-01f, +9.898319269347060e-01f, +9.898852572653667e-01f, +9.899307640365727e-01f, +9.899693102025343e-01f, +9.900025692522435e-01f, +9.900321562263099e-01f, +9.900603352632121e-01f, +9.900889812894406e-01f, +9.901206586012907e-01f, +9.901575015155720e-01f, +9.902023946214220e-01f, +9.902575406142213e-01f, +9.903255289051605e-01f, +9.904087914462694e-01f, +9.905096491583045e-01f, +9.906303787150326e-01f, +9.907727108894024e-01f, +9.909387444078919e-01f, +9.911298894709990e-01f, +9.913476318763218e-01f, +9.915928560402563e-01f, +9.918665491182922e-01f, +9.921691315380984e-01f, +9.925010851461232e-01f, +9.928619727154252e-01f, +9.932519181564613e-01f, +9.936700207375173e-01f, +9.941156069136238e-01f, +9.945873147903244e-01f, +9.950837402063278e-01f, +9.956033775539884e-01f, +9.961439922621166e-01f, +9.967034533921340e-01f, +9.972793109558521e-01f, +9.978690858367024e-01f, +9.984697087896268e-01f, +9.990784840729244e-01f, +9.996919011206490e-01f, +1.000308193833526e+00f, +1.000922365901945e+00f, +1.001532636590676e+00f, +1.002135464655177e+00f, +1.002728111386909e+00f, +1.003307449770187e+00f, +1.003870934089686e+00f, +1.004416038098237e+00f, + 1. 004940548815171 e+OOf, +1.005442141810160e+OOf, +1.005919224127911e+OOf, +1.006370303149314e+00f, +1.006793927824538e+00f, +1.007189345025525e+OOf, +1.007555573455895e+OOf, + 1. 007892674961336e+00f, + 1. 008200146369426e+00f, + 1. 008478423284851 e+OOf, +1.008727884997619e+00f, +1.008949493525753e+OOf, + 1. 009144112734761 e+OOf, + 1. 009313224929575e+00f, + 1. 009458241425143e+00f, + 1. 009581280555682e+00f, +1.009684090687164e+00f, +1.009768980817384e+00f, +1.009838308708799e+00f, +1.009894548257807e+00f, +1.009940336228694e+OOf, +1.009977916643680e+00f, +1.010010230290263e+00f, +1.010039453539107e+00f, +1.010068202038694e+00f, +1.010098388689342e+00f, +1.010132323996401e+00f, +1.010171656775640e+00f, +1.010218096148412e+00f, +1.010272524848519e+00f, +1.010336490294771e+00f, +1.010410221483215e+00f, +1.010494354532353e+00f, +1.010588873699422e+00f, +1.010693501186928e+OOf, +1.010808068774316e+00f, +1.010931436739342e+00f, +1.011062876503041e+00f, +1.011201071127927e+00f, +1.011344700694417e+00f, +1.011491904228184e+OOf, +1.011641272406023e+00f, +1.011790282474963e+00f, +1.011937567254485e+OOf, +1.012080125934687e+00f, +1.012216235487353e+00f, +1.012342907951334e+00f, +1.012458183122033e+00f, +1.012558879696851e+00f, +1.012642857380847e+00f, +1.012706955800289e+OOf, +1.012748952907404e+OOf, +1.012765799894453e+00f, +1.012755013843985e+00f, +1.012713798678211e+00f, +1.012639775003457e+00f, +1.012530134411619e+00f, +1.012382309473470e+00f, +1.012194068117524e+OOf, +1.011962331100864e+00f, +1.011685173724601e+00f, +1.011359143572147e+00f, +1.010982135506986e+00f, +1.010550715971368e+00f, +1.010062133151922e+00f, +1.009512438049510e+00f, +1.008898689394160e+00f, +1.008215923600973e+00f, +1.007460860286395e+00f, +1.006627741823389e+00f, +1.005712337656749e+OOf, +1.004708677491086e+00f, +1.003611467285588e+00f, +1.002414286392268e+00f, +1.001111413242302e+00f, +9.996961651093181e-01f, +9.981625949525345e-01f, +9.965041017623596e-01f, +9.947148884277037e-01f, +9.927891912841345e-01f, +9.907199995730845e-01f, +9.884793707533194e-01f, +9.855347660016696e-01f, +9.823765865983286e-01f, +9.789747333404933e-01f, +9.751623811486372e-01f, +9.708821747608998e-01f, +9.660805524695870e-01f, +9.606976399184645e-01f, +9.546732976073706e-01f, +9.479479345282376e-01f, +9.404609052933396e-01f, +9.321553861564006e-01f, +9.229775478442888e-01f, +9.128745354570823e-01f, +9.018003682081348e-01f, +8.897163275605041e-01f, +8.765908974996186e-01f, +8.623984077953557e-01f, +8.471200801854385e-01f, +8.307479727020245e-01f, +8.132817365236141e-01f, +7.947291447585267e-01f, +7.751108841891807e-01f, + 7.544551974836834e-01f, + 7.327963552921717e-01f, + 7.101790843209148e-01f, +6.866580716267418e-01f, +6.622962432368731e-01f, +6.371684119604742e-01f, +6.113488038789190e-01f, +5.849206604934815e-01f, +5.579747428663487e-01f, +5.306181649316717e-01f, +5.029523957059122e-01f, +4.750868825511614e-01f, +4.471309850999535e-01f, +4.192049917945288e-01f, +3.914252910998820e-01f, +3.639114681156252e-01f, +3.367837772954476e-01f, +3.101627843160973e-01f, +2.841647033392418e-01f, +2.589033711808454e-01f, +2.344880603710975e-01f, +2.110209448747974e-01f, +1.885997642296488e-01f, +1.673100807904834e-01f, +1.472287968327706e-01f, +1.284223074167396e-01f, +1.109422548710344e-01f, +9.482665349502306e-02f, +8.009914366829558e-02f, +6.676765847398403e-02f, +5.482436608328485e-02f, +4.424588851571281e-02f, +3.499361000717621e-02f, +2.701461405056267e-02f, +2.024370180670145e-02f, +1.460796755137538e-02f, +9.996743588367531e-03f, +5.305235098871444e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

26. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von ±1%: -3.021153494057143e-04f, -5.867737487939294e-04f, -8.366504004139796e-04f, -1.126635355725494e-03f, -1.470492941694331e-03f, -1.873473391018495e-03f, -2.339292362082021e-03f, -2.872008069419264e-03f, -3.476256385086407e-03f, -4.155963816705528e-03f, -4.914563787665504e-03f, -5.755172503953251e-03f, -6.680623380533122e-03f, -7.693816924650567e-03f, -8.796760749750191e-03f, -9.990503073705982e-03f, -1.127574117138621e-02f, -1.265334152129685e-02f, -1.412438986522702e-02f, -1.568889620430290e-02f, -1.734512089366117e-02f, -1.909097368362797e-02f, -2.092546711168754e-02f, -2.284684792818856e-02f, -2.485207716234951e-02f, -2.693746704328349e-02f, -2.909952486193999e-02f, -3.133504629493832e-02f, -3.363960728361352e-02f, -3.600820974457969e-02f, -3.843601741746971e-02f, -4.091746034850161e-02f, -4.344654894948344e-02f, -4.601786724624048e-02f, -4.862598509282497e-02f, -5.126474204655663e-02f, -5.392644753556616e-02f, -5.660384311081047e-02f, -5.929116747072080e-02f, -6.198268202511926e-02f, -6.467025548071184e-02f, -6.734542216184526e-02f, -7.000099017198280e-02f, -7.263057011354321e-02f, -7.522784961377151e-02f, -7.778525942347714e-02f, -8.029480247839878e-02f, -8.274924535373614e-02f, -8.514125464087215e-02f, -8.746379123238275e-02f, -8.971069341834263e-02f, -9.187564084638347e-02f, -9.395176975347193e-02f, -9.593137735886889e-02f, -9.780843257659243e-02f, -9.957851303827886e-02f, -1.012361165314596e-01f, -1.027741036495644e-01f, -1.041861222641119e-01f, -1.054680247057000e-01f, -1.066160875985523e-01f, -1.076255384835563e-01f, -1.084912299471198e-01f, -1.092087422379003e-01f, -1.097736146613313e-01f, -1.101808861640070e-01f, -1.104271876052675e-01f, -1.105108362290460e-01f, -1.104281465492726e-01f, -1.101739218186236e-01f, -1.097437360338336e-01f, -1.091353125572511e-01f, -1.083467335729228e-01f, -1.073739938306107e-01f, -1.062130155324388e-01f, -1.048606145834788e-01f, -1.033132401525343e-01f, -1.015673163469357e-01f, -9.962005506126154e-02f, -9.746803229469267e-02f, -9.510723623306666e-02f, -9.253303383231506e-02f, -8.974125216128212e-02f, -8.672877689119252e-02f, -8.349213839083708e-02f, -8.002639902061687e-02f, -7.632679536516856e-02f, -7.238061162166744e-02f, -6.820576796149519e-02f, -6.377611429172260e-02f, -5.909386001558149e-02f, -5.415316322402774e-02f, -4.894812724598650e-02f, -4.347347112195197e-02f, -3.772461300253332e-02f, -3.169587609244436e-02f, -2.538179830690266e-02f, -1.877689096555516e-02f, -1.187461378850388e-02f, -4.669099247423082e-03f, +2.844096748870385e-03f, +1.066976124794342e-02f, +1.881355950582949e-02f, +2.728156010437695e-02f, +3.607810469851272e-02f, +4.520702759803914e-02f, +5.467238802204326e-02f, +6.447866054615346e-02f, +7.462862199422061e-02f, +8.512490568723846e-02f, +9.596983987496970e-02f, +1.071650779014335e-01f, +1.187115850305241e-01f, +1.306101067250375e-01f, +1.428596447589721e-01f, +1.554584725339102e-01f, +1.684041609371527e-01f, +1.816947894623263e-01f, +1.953273880886783e-01f, +2.092963206850239e-01f, +2.235945635254679e-01f, +2.382160219461597e-01f, +2.531529721334063e-01f, +2.683961570569586e-01f, +2.839361392493072e-01f, +2.997624255177811e-01f, +3. 158619077906196e-01f, +3.322210551086769e-01f, +3.488264676990591e-01f, +3.656640377499646e-01f, +3.827152968157059e-01f, +3.999611859760947e-01f, +4.173843265025887e-01f, +4.349669624916473e-01f, +4.526876397402144e-01f, +4.705242008503956e-01f, +4.884539254831315e-01f, +5.064545550235134e-01f, +5.245006748662190e-01f, +5.425674372882107e-01f, +5.606312044701524e-01f, +5.786672646386708e-01f, +5.966477035050948e-01f, +6.145458904162185e-01f, +6.323361944662236e-01f, +6.499926319211774e-01f, +6.674874032292857e-01f, +6.847932667399612e-01f, +7.018835463513400e-01f, +7.187322544823347e-01f, +7.353128213893310e-01f, +7.516001985652684e-01f, +7.675699252273948e-01f, +7.831974571624924e-01f, +7.984583859818390e-01f, +8.133295347030278e-01f, +8.277892271515950e-01f, +8.418178561101360e-01f, +8.553961300139363e-01f, +8.685068980898102e-01f, +8.811334436653052e-01f, +8.932596784799233e-01f, +9.048748835980528e-01f, +9.159657608120536e-01f, +9.265215299450000e-01f, +9.365339988633418e-01f, +9.459977028429117e-01f, +9.549088408436811e-01f, +9.632658122557368e-01f, +9.710688896122810e-01f, +9.783204156360773e-01f, +9.850226760127131e-01f, +9.911792082081333e-01f, +9.967989944502682e-01f, +1.001894024615659e+00f, +1.006474342231823e+00f, +1.010552057109195e+00f, +1.014142538208007e+00f, +1.017262593268930e+00f, +1.019928842669923e+00f, +1.022159867011177e+00f, +1.023976320927187e+00f, +1.025400734608122e+00f, + 1. 026455340400072e+00f, + 1.027164510654160e+00f, + 1. 027552729180790e+00f, +1.027644462380432e+00f, +1.027463246660797e+OOf, +1.027035903410657e+00f, +1.026389068000259e+OOf, +1.025548201799728e+00f, +1.024537134749709e+00f, + 1. 023380803775376e+00f, + 1.022103695693341 e+OOf, + 1. 020728359657958e+00f, +1.019275334687329e+00f, +1.017765178792830e+00f, +1.016217355867531e+OOf, +1.014665311686846e+00f, +1.013249071090664e+00f, +1.011948006992127e+00f, + 1. 010189090179223e+00f, + 1. 008557961167850e+00f, + 1. 007011287608451 e+OOf, +1.005548764575910e+00f, +1.004168417268956e+00f, +1.002867268893035e+00f, +1.001641769115897e+OOf, +1.000489068954641e+00f, +9.994060799749374e-01f, +9.983898865406841e-01f, +9.974370849972721e-01f, +9.965444836911705e-01f, +9.957098545943852e-01f, +9.949302413030897e-01f, +9.942024045863540e-01f, +9.935241604969254e-01f, +9.928930430130044e-01f, +9.923068103443909e-01f, +9.917633778190438e-01f, +9.912597642374404e-01f, +9.907954498484041e-01f, +9.903677893656558e-01f, +9.899751611066148e-01f, +9.896160337369861e-01f, +9.892890160408989e-01f, +9.889928511129679e-01f, +9.887260333430423e-01f, +9.884868721088945e-01f, +9.882751039537586e-01f, +9.880892168751595e-01f, +9.879277114724612e-01f, +9.877898261218510e-01f, +9.876743442038471e-01f, +9.875807496078497e-01f, +9.875072021876561e-01f, +9.874529447589979e-01f, +9.874169741527905e-01f, +9.873984685207834e-01f, +9.873958301311858e-01f, +9.874080027710336e-01f, +9.874343401290739e-01f, +9.874736235387018e-01f, +9.875243137719285e-01f,
+9.875856201221135e-01f, +9.876563785063032e-01f, +9.877358921155149e-01f, +9.878225576787804e-01f,
+9.879150968481590e-01f, +9.880132731565830e-01f, +9.881156946084619e-01f, +9.882211314188272e-01f,
+9.883289032519310e-01f, +9.884378310018685e-01f, +9.885476787868710e-01f, +9.886568414746639e-01f,
+9.887645868459630e-01f, +9.888708540445242e-01f, +9.889744320992592e-01f, +9.890747269455915e-01f,
+9.891710038703801e-01f, +9.892631024032380e-01f, +9.893507219573624e-01f, +9.894330645494204e-01f,
+9.895096919388534e-01f, +9.895810813422480e-01f, +9.896467469067676e-01f, +9.897067365020641e-01f,
+9.897606930400666e-01f, +9.898094478563998e-01f, +9.898530133261707e-01f, +9.898914705684924e-01f,
+9.899254194103574e-01f, +9.899554202030650e-01f, +9.899824494486951e-01f, +9.900065116928948e-01f,
+9.900284805353695e-01f, +9.900497484789281e-01f, +9.900709561632662e-01f, +9.900928358611601e-01f,
+9.901163920607219e-01f, +9.901427479709606e-01f, +9.901734275350572e-01f, +9.902087332329851e-01f,
+9.902498637985275e-01f, +9.902983686695558e-01f, +9.903548501470234e-01f, +9.904205084933333e-01f,
+9.904959297726740e-01f, +9.905825150202904e-01f, +9.906812569810133e-01f, +9.907922087340426e-01f,
+9.909165464981378e-01f, +9.910550740962871e-01f, +9.912084614290896e-01f, +9.913768610980639e-01f,
+9.915605826937839e-01f, +9.917604214872976e-01f, +9.919767175562684e-01f, +9.922091101818779e-01f,
+9.924579135466506e-01f, +9.927231225056266e-01f, +9.930049538427406e-01f, +9.933027281437943e-01f,
+9.936161084869942e-01f, +9.939453714404443e-01f, +9.942895145656371e-01f, +9.946481676207727e-01f,
+9.950203031067961e-01f, +9.954058173659507e-01f, +9.958038713694317e-01f, +9.962130271017117e-01f,
+9.966324689957675e-01f, +9.970615306490058e-01f, +9.974990583293081e-01f, +9.979437430375855e-01f,
+9.983940572002874e-01f, +9.988493116887893e-01f, +9.993083430214909e-01f, +9.997689221333534e-01f,
+1.000231131275969e+00f, +1.000692135698996e+OOf, +1.001152013920163e+00f,
+1.001608526000461e+00f, +1.002060493867275e+00f, +1.002507212061815e+00f,
+1.002947129400411e+00f, +1.003378909587027e+00f, +1.003801368578070e+00f,
+1.004213810320699e+00f, +1.004615386562846e+OOf, +1.005004618375781e+OOf,
+1.005380628601598e+00f, +1.005743282364652e+00f, +1.006091510392348e+00f,
+1.006424907424988e+00f, +1.006742427727669e+00f, +1.007044321511378e+00f,
+1.007330218597112e+00f, +1.007599401798709e+00f, +1.007852064386603e+00f,
+1.008088176165563e+00f, +1.008308033204578e+OOf, +1.008511247273756e+00f,
+1.008698144207627e+00f, +1.008869515256392e+00f, +1.009025659761512e+00f,
+1.009166718967367e+00f, +1.009293362609020e+OOf, +1.009406398832440e+OOf,
+1.009507017171120e+00f, +1.009595264293017e+00f, +1.009672145744679e+00f,
+1.009739084785160e+00f, + 1. 009796675060 142e+00f, + 1. 009846137382005e+00f, + 1. 009888083631667 e+OOf, +1.009924092276850e+00f, +1.009955384765721e+OOf, +1.009982268770147e+00f, + 1. 01 0006298177305e+00f, + 1. 01 0028618428735e+00f, + 1. 0 1 0050254076988e+00f, +1.010071952131355e+00f,
+1.010094366238073e+00f, +1.010118917317053e+OOf, +1.010146497096682e+OOf,
+1.010177110711677e+00f, +1.010211755260102e+00f, +1.010251003469427e+OOf,
+1.010295468653759e+OOf, +1.010345234996637e+OOf, +1.010400316698172e+OOf,
+1.010461564316351e+OOf, +1.010528615445659e+00f, +1.010601521285347e+00f,
+1.010679788081867e+00f, +1.010763905869062e+00f, + 1.010853429760676e+00f,
+1.010947547074519e+00f, +1.011045953108263e+00f, +1.011148486293359e+OOf,
+1.011254397791134e+00f, +1.011363082075863e+00f, +1.011473302008831e+00f,
+1.011584996312149e+00f, +1.011697416504599e+00f, +1.011808919793469e+OOf,
+1.011919264025716e+00f, +1.012027240794153e+00f, +1.012132151631041e+00f,
+1.012232734564333e+00f, +1.012327560477901e+00f, +1.012416383754384e+00f,
+1.012497890726292e+00f, +1.012570434021054e+00f, +1.012633295255708e+00f,
+1.012685277016726e+00f, +1.012725564992284e+00f, +1.012752577651415e+00f,
+1.012765062889864e+00f, +1.012762356719162e+00f, +1.012743376077777e+OOf,
+1.012706484200181e+OOf, +1.012650842226435e+OOf, +1.012575427778520e+00f,
+1.012479473490919e+00f, +1.012361105121003e+00f, +1.012219809594718e+00f,
+1.012054359992419e+00f, +1.011864000215460e+00f, +1.011647223869087e+OOf,
+1.011402518267713e+00f, +1.011129654652857e+00f, +1.010826951260377e+OOf,
+1.010492924436361e+00f, +1.010126353960416e+00f, + 1. 0097258924 79312e+00f, + 1. 009290060983833e+00f, + 1. 008817301 052548e+00f, +1.008305027555130e+00f, +1.007752833675443e+OOf,
+1.007157827358150e+00f, +1.006518049344503e+00f, +1.005831403532018e+OOf,
+1.005095592119373e+00f, +1.004308630055050e+00f, +1.003467498305776e+OOf,
+1.002569500413888e+00f, +1.001612710105563e+OOf, +1.000594272975683e+00f, +9.995111701168786e-01f, +9.983609218719522e-01f, +9.971409288327860e-01f, +9.958488863050556e-01f, +9.944818543153893e-01f, +9.930375282832211e-01f, +9.915146560759479e-01f, +9.899136802423638e-01f, +9.881930623810997e-01f, +9.859422591203311e-01f, +9.835667898378924e-01f, +9.811423034808365e-01f, +9.785214441250228e-01f, +9.756636036109838e-01f, +9.725453442532574e-01f, +9.691456634185092e-01f, +9.654406178310209e-01f, +9.614043615076308e-01f, +9.570113065179300e-01f, +9.522367669696690e-01f, +9.470548839544214e-01f, +9.414403740008491e-01f, +9.353691612846549e-01f, +9.288190093977164e-01f, +9.217662887169115e-01f, +9.141896283466009e-01f, +9.060694681113471e-01f, +8.973891675497357e-01f, +8.881332000806269e-01f, +8.782893885841422e-01f, +8.678469565343039e-01f, +8.567970644671067e-01f, +8.451334654019180e-01f, +8.328542805780399e-01f, +8.199594783897041e-01f, +8.064511006873497e-01f, +7.923346478686025e-01f, +7.776204488292163e-01f, +7.623206183595970e-01f, +7.464486491227057e-01f, +7.300205729992958e-01f, +7.130567383226717e-01f, +6.955805444755916e-01f, +6.776173229836567e-01f, +6.591955305148172e-01f, +6.403486426892321e-01 f, +6.211072197441818e-01f, +6.015049275244730e-01f,+5.815787608870452e-01f, +5.613674511156324e-01f, +5.409188627354076e-01f, +5.202736834971303e-01f, +4.994780733459294e-01f, +4.785774177949064e-01f, +4.576172599874928e-01f, +4.366490208265804e-01f, +4.157221460415995e-01f, +3.948856590950757e-01f, +3.741903189229770e-01f, +3.536868899553974e-01f, +3.334260017756462e-01f, +3.134586473252229e-01f, +2.938337904395871e-01f, +2.745992637590817e-01f, +2.558030636168172e-01f, +2.374902188466697e-01f, +2.197036032185785e-01f, +2.024855415115456e-01f, +1.858749915117319e-01f, +1.699067802117410e-01f, +1.546132267478873e-01f, +1.400238206749695e-01f, +1.261637395672913e-01f, +1.130534434072719e-01f, +1.007084973747940e-01f, +8.914024389873081e-02f, +7.835612100141792e-02f, +6.835821233920988e-02f, +5.914211536028976e-02f, +5.069893012340832e-02f, +4.301717763585550e-02f, +3.608020726673359e-02f, +2.986316337017630e-02f, +2.433722657129812e-02f, +1.947675241971700e-02f, +1.525710171255895e-02f, +1.163787492636240e-02f, +8.433087782643718e-03f, +4.449668997344735e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

27. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von ±1%: -2.353032150516754e-04f, -4.619898752628163e-04f, -6.262931535610879e-04f, -7.929180432976445e-04f, -9.747166718929050e-04f, -1.180256894474562e-03f, -1.409209039594871e-03f, -1.664473096973725e-03f, -1.946591608170231e-03f, -2.257081732588478e-03f, -2.597106916737789e-03f, -2.967607624839524e-03f, -3.370454877988472e-03f, -3.806285163352241e-03f, -4.276873767639064e-03f, -4.782469904501813e-03f, -5.324608721716763e-03f, -5.903403814095400e-03f, -6.520419726599805e-03f, -7.175885277771099e-03f, -7.871422820642307e-03f, -8.606586039759667e-03f, -9.382480860899108e-03f, -1.019827182163307e-02f, -1.105520547739066e-02f, -1.195270300743193e-02f, -1.289205910303846e-02f, -1.387263484323160e-02f, -1.489528159506296e-02f, -1.595856621933800e-02f, -1.706288556735433e-02f, -1.820666399965468e-02f, -1.939065975232718e-02f, -2.061355417582714e-02f, -2.187570925786862e-02f, -2.317526315266411e-02f, -2.451227449041489e-02f, -2.588471937157619e-02f, -2.729263737090799e-02f, -2.873390902713615e-02f, -3.020862738245264e-02f, -3.171440372994384e-02f, -3.325098858986303e-02f, -3.481597793538342e-02f, -3.640892406933019e-02f, -3.802742318209150e-02f, -3.967067992672979e-02f, -4.133575417353826e-02f, -4.302203371734278e-02f, -4.472698045914417e-02f, -4.645022292934329e-02f, -4.818891490266687e-02f, -4.994225863256500e-02f, -5.170690802826666e-02f, -5.348162036097223e-02f, -5.526334794593565e-02f, -5.705123152423822e-02f, -5.884271749745559e-02f, -6.063717235243996e-02f, -6.243104027829089e-02f, -6.422303545004304e-02f, -6.600961519440657e-02f, -6.778962269634495e-02f, -6.955996868581379e-02f, -7.131966266443390e-02f, -7.306581273272733e-02f, -7.479758913001458e-02f, -7.651178225890490e-02f, -7.820711420768856e-02f, -7.988010693411644e-02f, -8.152964005319532e-02f, -8.315237353264004e-02f, -8.474728946770714e-02f, -8.631137544905677e-02f, -8.784374452959058e-02f, -8.934164364321417e-02f, -9.080411291245728e-02f, -9.222795761428432e-02f, -9.361232867223340e-02f, -9.495377758870335e-02f, -9.625155313139856e-02f, -9.750284620437569e-02f, -9.870736514214426e-02f, -9.986271288271026e-02f, -1.009680221406219e-01f, -1.020202684361974e-01f, -1.030183804850491e-01f, -1.039596356759290e-01f, -1.048438825017798e-01f, -1.056686838192766e-01f, -1.064342821660323e-01f, -1.071382314127799e-01f, -1.077799961121537e-01f, -1.083570625865931e-01f, -1.088690135027248e-01f, -1.093135588677235e-01f, -1.096903559498340e-01f, -1.099969655786929e-01f, -1.102332261219973e-01f, -1.103972812085189e-01f, -1.104898474883336e-01f, -1.105086416532167e-01f, -1.104537426996073e-01f, -1.103225838568563e-01f, -1.101145827722143e-01f, -1.098276928170364e-01f, -1.094621746650760e-01f, -1.090163960055733e-01f, -1.084908852561722e-01f, -1.078834293141886e-01f, -1.071937180231978e-01f, -1.064196358069465e-01f, -1.055612509762041e-01f, -1.046162812518618e-01f, -1.035849043557610e-01f, -1.024650162703341e-01f, -1.012568997532046e-01f, -9.995864571932928e-02f, -9.857014566194627e-02f, -9.708911135857967e-02f, -9.551545820689084e-02f, -9.384684920715425e-02f, -9.208300062891550e-02f, -9.022171021406450e-02f, -8.826309993000785e-02f, -8.620493821803937e-02f, -8.404742152815330e-02f, -8.178792716809512e-02f, -7.942625026703617e-02f, -7.695980775819990e-02f, -7.438785600211463e-02f, -7.170797002873608e-02f, -6.891994783815969e-02f, -6.602189797715241e-02f, -6.301349420724424e-02f, -5.989191912667712e-02f, -5.665655641133161e-02f, -5.330406164482222e-02f, -4.983427241976235e-02f, -4.624456893420224e-02f, -4.253455686336916e-02f, -3.870195772538443e-02f, -3.474585776145929e-02f, -3.066341518682682e-02f, -2.645425077642105e-02f, -2.211581608120528e-02f, -1.764740541599136e-02f, -1.304581363895818e-02f, -8.310425696208936e-03f, -3.438268661133170e-03f, +1.570315476576933e-03f, +6.717697635290676e-03f, +1.200477020244778e-02f, +1.743398319747869e-02f, +2.300642061077823e-02f, +2.872481423270595e-02f, +3.458896350634671e-02f, +4.060106462625085e-02f, +4.676102915752826e-02f, +5.307133911821893e-02f, +5.953239090915557e-02f, +6.614647812869151e-02f, +7.291293184312803e-02f, +7.983354189816511e-02f, +8.690807412770696e-02f, +9.413813765275064e-02f, +1.015233140203748e-01f, +1.090651518336202e-01f, +1.167626546016197e-01f, +1.246171387327525e-01f, +1.326272948938113e-01f, +1.407938190608664e-01f, +1.491152519299797e-01f, +1.575921408388593e-01f, + 1.662224799248571e-01f, +1.750067399059861e-01f, +1.839431938620024e-01f, +1.930318183054904e-01f, +2.022699854906251e-01f, +2.116567430906184e-01f, +2.211888523410642e-01f, +2.308655379767671e-01f, +2.406837992341654e-01f, +2.506420640291662e-01f, +2.607365124918583e-01f, +2.709659073501196e-01f, +2.813259021832532e-01f, +2.918144694729168e-01f, +3.024270279840051e-01f, +3.131603499997996e-01f, +3.240095704645023e-01f, +3.349719592361666e-01f, +3.460422935204829e-01f, +3.572175180786021e-01f, +3.684915649120530e-01f, +3.798595119591716e-01f, +3.913146885756875e-01f, +4.028532873867052e-01f, +4.144688328137527e-01f, +4.261571642320424e-01f, +4.379113897565727e-01f, +4.497256320417501e-01f, +4.615925445090212e-01f, +4.735067030065239e-01f, +4.854600184866710e-01f, +4.974471592901086e-01f, +5.094597228333853e-01f, +5.214909841729947e-01f, +5.335326819631583e-01f, +5.455789811615239e-01f, +5.576217157959890e-01f, +5.696546730080154e-01f, +5.816685576268035e-01f, +5.936560624526468e-01f, +6.056083823929643e-01f, +6.175192060085208e-01f, +6.293796611336280e-01f, +6.411830842823245e-01f, +6.529203544876097e-01f, +6.645840786371451e-01f, +6.761653499550255e-01f, +6.876573952173626e-01f, +6.990511539119996e-01f, +7.103400549562944e-01f, +7.215149331458728e-01f, +7.325691772738999e-01f, +7.434943718765665e-01f, +7.542846327442048e-01f, +7.649313654540612e-01f, +7.754281892901473e-01f, +7.857670170752049e-01f, + 7.959414651061612e-01f, +8.059437233154637e-01f, +8.157687070715176e-01f, +8.254086223972127e-01f, +8.348589373399948e-01f, +8.441125827416620e-01f, +8.531651194538425e-01f, +8.620108336276733e-01f, +8.706456337542150e-01f, +8.790631561061171e-01f, +8.872599706865123e-01f, +8.952313288619367e-01f, +9.029751680353524e-01f, +9.104863121445679e-01f, +9.177625550620636e-01f, +9.247997426966093e-01f, +9.315962496426278e-01f, +9.381494858921667e-01f, +9.444588390359354e-01f, +9.505220861927248e-01f, +9.563402921286364e-01f, +9.619114522936701e-01f, +9.672366712325431e-01f, +9.723156637834687e-01f, +9.771501187120180e-01f, +9.817397501303696e-01f, +9.860865871353246e-01f, +9.901906380163595e-01f, +9.940557180662704e-01f, +9.976842395284637e-01f, +1.001080961257010e+OOf, +1.004247514102417e+00f, +1.007188578458507e+00f, +1.009906654565108e+00f, +1.012407428282884e+00f, +1.014694702432600e+00f, +1.016774659209400e+00f, +1.018650990561848e+00f, +1.020330464463111e+00f, +1.021817328911793e+00f, +1.023118841384460e+00f, +1.024240262467000e+00f, +1.025189721888128e+00f, +1,025972450969440e+00f, +1,026596938589443e+00f, +1.027069179375841e+00f,+1.027397523939210e+00f,+1.027587902203109e+00f, +1.027648951922701e+00f, +1.027585830688143e+00f, +1.027408519661012e+00f, +1.027122986826984e+00f, +1.026738673647482e+00f, +1.026261663878092e+00f, +1.025701002415063e+00f, +1.025061777648234e+00f, + 1. 02435398097670 1 e+OOf, +1.023582385618774e+00f, +1.022756514615106e+00f, +1.021880604350422e+00f, +1.020963871317665e+00f, +1.020009139549275e+00f, +1.019027285501251e+00f, +1.018019442784231e+00f, +1.016996499560845e+00f, +1.015957433206324e+00f, +1.014923441259795e+00f, +1.013915946100629e+00f, +1.013047565149327e+00f, +1.012216130365610e+00f, +1.011044869639164e+00f, +1.009914592130044e+00f, +1.008824888092573e+00f, + 1. 007773858455400e+00f, +1.006761700412993e+00f, +1.005786648810854e+00f, + 1. 004848753962734e+00f, +1.003946083413733e+00f, + 1. 003078846506546e+00f, + 1. 002245009135684e+00f, + 1. 001444733905817 e+OOf, +1.000676188436651e+00f, +9.999393169239009e-01f, +9.992320848298057e-01f, +9.985548127155425e-01f, +9.979055415627330e-01f, +9.972842679758880e-01f, +9.966890948441745e-01f, +9.961203379971326e-01f, +9.955761256313581e-01f, +9.950565724564597e-01f, +9.945597525471822e-01f, +9.940860378486615e-01f, +9.936337788972491e-01f, +9.932031606606759e-01f, +9.927921871265732e-01f, +9.924015177880798e-01f, +9.920297273323891e-01f, +9.916767775088281e-01f, +9.913408767719142e-01f, +9.910230654424902e-01f, +9.907216425865902e-01f, +9.904366799536263e-01f, +9.901668953434221e-01f, +9.899131011580791e-01f, +9.896735637374597e-01f, +9.894488374513719e-01f, +9.892374835404283e-01f, +9.890401927796704e-01f, +9.888556356037892e-01f, +9.886843467692753e-01f, +9.885247606051014e-01f, +9.883778520531268e-01f, +9.882423270582524e-01f, +9.881185638915363e-01f, +9.880051626345804e-01f, +9.879032023766432e-01f, +9.878111744348976e-01f, +9.877295459610343e-01f, +9.876571983429736e-01f, +9.875949843246187e-01f, +9.875412739766566e-01f, +9.874969061399389e-01f, +9.874606249127551e-01f, +9.874329809802893e-01f, +9.874126414437681e-01f, +9.874004750404033e-01f, +9.873949921033299e-01f, +9.873969162747074e-01f, +9.874049060317581e-01f, +9.874197049003676e-01f, +9.874399717110517e-01f, +9.874663281231737e-01f, +9.874973205882319e-01f, +9.875338926695315e-01f, +9.875746535410983e-01f, +9.876201238703241e-01f, +9.876689801932402e-01f, +9.877221556193183e-01f, +9.877781920433015e-01f, +9.878376489591358e-01f, +9.878991990245439e-01f, +9.879637979933339e-01f, +9.880300303653743e-01f, +9.880984675859855e-01f, +9.881678007807095e-01f, +9.882390300097154e-01f, +9.883107693992456e-01f, +9.883835200189653e-01f, +9.884560159878955e-01f, +9.885294200392185e-01f, +9.886022219397892e-01f, +9.886749404176028e-01f, +9.887466261142505e-01f, +9.888182771263505e-01f, +9.888882480852147e-01f, +9.889574384705896e-01f, +9.890247977602895e-01f, +9.890911247701029e-01f, +9.891551701556196e-01f, +9.892178658748239e-01f, +9.892779555818088e-01f, +9.893365186903538e-01f, +9.893923680007577e-01f, +9.894462830852175e-01f, +9.894972124952000e-01f, +9.895463342815009e-01f, +9.895923617530382e-01f, +9.896362652966239e-01f, +9.896772011542693e-01f, +9.897162195263046e-01f, +9.897520286480039e-01f, +9.897859195209235e-01f, +9.898170267411330e-01f, +9.898462068764986e-01f, +9.898725363809847e-01f, +9.898975138787787e-01f, +9.899200050208486e-01f, +9.899410789223559e-01f, +9.899600605054418e-01f, +9.899782261038060e-01f, +9.899945557067980e-01f, +9.900103500807507e-01f, +9.900248320990181e-01f, +9.900394023736973e-01f, +9.900532105829365e-01f, +9.900674746047259e-01f, +9.900814722948890e-01f, +9.900966926051257e-01f, +9.901122448734595e-01f, +9.901293790312005e-01f, +9.901474648912307e-01f, +9.901680598867444e-01f, +9.901902265696609e-01f, +9.902151896501201e-01f, +9.902424418296485e-01f, +9.902734448815004e-01f,
+9.903071270768942e-01f, +9.903448913950654e-01f, +9.903862280081246e-01f, +9.904324484666853e-01f,
+9.904825650601110e-01f, +9.905379830873822e-01f, +9.905980602136440e-01f, +9.906640366554630e-01f,
+9.907348826312993e-01f, +9.908120376822228e-01f, +9.908947858311721e-01f, +9.909842592301273e-01f,
+9.910795247770178e-01f, +9.911819240108124e-01f, +9.912905118607647e-01f, +9.914064705361564e-01f,
+9.915288011543961e-01f, +9.916586940166509e-01f, +9.917952720685562e-01f, +9.919396217291009e-01f,
+9.920906151219310e-01f, +9.922495028313456e-01f, +9.924152398352751e-01f, +9.925887208794144e-01f,
+9.927688708468421e-01f, +9.929569112537944e-01f, +9.931516528513824e-01f, +9.933539244159140e-01f,
+9.935626893131695e-01f, +9.937790866568735e-01f, +9.940016434044485e-01f, +9.942312024833810e-01f,
+9.944668184371617e-01f, +9.947093441694513e-01f, +9.949572854565533e-01f, +9.952116634297566e-01f,
+9.954712635321227e-01f, +9.957367951478069e-01f, +9.960068616185641e-01f, +9.962823025614079e-01f,
+9.965617986382630e-01f, +9.968461329825753e-01f, +9.971338271912752e-01f, +9.974256691222113e-01f,
+9.977203369515556e-01f, +9.980185087055744e-01f, +9.983185871761977e-01f, +9.986213520769593e-01f,
+9.989255426466267e-01f, +9.992317314100975e-01f, +9.995382582242990e-01f, +9.998461160718275e-01f,
+ 1. 000153907612080e+00f, + 1. 000461955079660e+00f, + 1. 000768859280338e+00f,
+1.001075613053728e+00f, +1.001380551217109e+00f, +1.001684244734497e+00f,
+1.001985425397567e+00f, +1.002284871786226e+00f, +1.002580975161843e+00f,
+1.002874411368430e+00f, +1,003163845364970e+00f, +1.003450063374329e+00f, + 1.
003731570287893e+00f, + 1.004009147 462043e+00f, + 1. 004281457582935e+00f, +1.004549339226336e+00f,
+1.004811375053364e+00f, +1.005068272394360e+00f, +1.005318795748286e+00f,
+1,005563968008037e+00f, +1.005802269635282e+00f, +1,006034554002353e+00f,
+1,006259855360867e+00f, +1.006479018139540e+00f, +1.006690541428116e+00f,
+1.006895570408563e+00f, +1.007093045696527e+00f, +1,007283799246233e+00f,
+1,007466616298057e+00f, +1,007642728426847e+00f, +1.007811036585595e+00f,
+1.007972441990187e+00f, +1.008125875904472e+00f, +1,008272602383284e+00f,
+1.008411468616852e+00f, +1.008543573152632e+00f, +1.008668018334797e+00f,
+1.008786009787269e+OOf, +1.008896526233555e+00f, + 1.009000766336071 e+OOf, +
1,009097763850333e+00f, + 1,009188880897370e+00f, +1.009273163797313e+00f,
+1.009351762546296e+00f, +1.009423944949143e+00f, +1.009491175244507e+00f,
+1.009552401900961e+00f, +1.009608886895764e+00f,
+1.009659973830751e+00f,+1.009707093778162e+00f,+1.009749238562067e+00f,
+1.009787744284661e+00f, +1.009822090220407e+00f, +1.009853706282597e+00f, +
1.009881498943010e+00f, +1,009906958448099e+00f, +1.009929567021562e+00f, +1.009950573483366e+00f,
+1.009969021400474e+00f, +1.009986499185054e+00f, + 1.010002363879044e+00f,
+1.010017890428877e+00f, +1.010032170180360e+00f, +1.010046722045583e+00f,
+1.010060809299530e+00f, +1.010075674445289e+00f, +1.010090449982098e+00f,
+1.010106564965965e+00f, +1.010123226584120e+00f, +1.010141762173145e+00f,
+1.010161131093372e+00f, +1.010182635897876e+00f, +1.010205587931660e+00f,
+1.010231078494249e+00f, +1.010257950227988e+00f, +1.010287732968580e+00f,
+1.010319484524512e+00f, +1.010354079663767e+00f, +1.010390635488037e+00f,
+1.010430470494512e+00f, +1.010472266495074e+00f, +1.010517096381509e+00f,
+1.010564099281000e+OOf, +1.010614266894512e+00f, +1.010666285876455e+00f,
+1.010721360243234e+00f, +1.010778416755264e+00f, + 1. 010838252644461 e+OOf, + 1.01089965567
4578e+00f, + 1. 0 10963729626641 e+OOf, + 1.011029191301694e+00f, +1.011096993993037e+00f, +
1.011165861239173e+00f, +1.011236610341260e+00f, +1.011308167670753e+00f, +1.011381453638912e+00f,
+1.011454785713102e+00f, +1.011529185153809e+00f, +1.011603680910505e+00f,
+1.011678803938046e+00f, +1.011753008569803e+00f, +1.011827484797985e+00f,
+1.011900936547881e+00f, +1.011973876511603e+00f, +1.012044885003304e+00f,
+1.012114985644919e+00f, +1.012182837094955e+00f, +1.012249023976742e+00f,
+1.012312095063070e+00f, +1.012373028737774e+00f, +1.012430463679316e+00f,
+1.012484972246822e+00f, +1.012535058602453e+00f, +1.012581678169188e+00f,
+1.012623472898504e+00f, +1.012660975529858e+00f, +1.012692758750213e+00f,
+1.012719789201144e+00f, +1.012740575296603e+00f, +1.012755753887085e+00f,
+1.012763948841204e+00f, +1.012765922449960e+00f, +1.012760298661069e+00f,
+1.012747819936584e+00f,+1.012726958954961e+00f,+1.012698607692183e+00f,
+1.012661400539405e+00f, +1.012615904116265e+00f, +1.012560833005713e+00f,
+1.012497050269805e+00f, +1.012422888521601e+00f, +1.012339226241367e+00f,
+1.012244921966297e+00f, +1.012140460211194e+00f, +1.012024302085441e+00f, +1.011897560567707e+00f, +1.011758810583150e+00f, +1.011608449127642e+00f, +1.011445162723270e+00f, +1.011269960947744e+00f, +1.011081255645969e+00f, +1.010879608424312e+00f, +1.010663676735228e+00f, +1.010434184200640e+00f, + 1. 010189681124657 e+OOf, + 1. 009930754807923e+00f, + 1. 009655660215271 e+OOf, +1.009365251564694e+00f, +1.009058249873833e+00f, +1.008734758578989e+00f, +1.008393079963091e+00f, +1.008034308295421e+00f, +1.007656661215973e+00f, +1.007260142622887e+00f, +1.006843352506855e+00f, +1.006407009542103e+00f, +1.005949145170711e+00f, +1.005470005637052e+00f, +1.004967986424467e+00f, +1.004443531995945e+00f, +1.003894772403371e+00f, +1.003321903663793e+00f, +1.002723127308148e+00f, +1.002098854400575e+00f, + 1. 00144 7278873483e+00f, +1.000768505317086e+00f, + 1. 000060686758758e+00f, +9.993242684851855e-01f, +9.985573503390627e-01f, +9.977600196406868e-01f, +9.969306036935497e-01f, +9.960694269553644e-01f, +9.951746430061121e-01f, +9.942466438407230e-01f, +9.932837131068657e-01f, +9.922861082472264e-01f, +9.912523092989319e-01f, +9.901827419790691e-01f, +9.890757868707590e-01f, +9.879313024174022e-01f, +9.863553220272523e-01f, +9.847362453480265e-01f, +9.831750948772566e-01f, +9.815583336011345e-01f, +9.798613526271561e-01f, +9.780617486993630e-01f, +9.761574317374303e-01f, +9.741378617337759e-01f, +9.719990112065752e-01f, +9.697327413658168e-01f, +9.673331975559332e-01f, +9.647915124057732e-01f, +9.621011497566145e-01f, +9.592539757044516e-01f, +9.562427177295731e-01f, +9.530600909726344e-01f, +9.496984081652284e-01f, +9.461498120176854e-01f, +9.424071613625743e-01f, +9.384634163826711e-01f, +9.343112966094085e-01f, +9.299449872197452e-01f, +9.253567968750328e-01f, +9.205404627076625e-01f, +9.154896280575360e-01f, +9.101986790930605e-01f, +9.046620597741508e-01f, +8.988755194372424e-01f, +8.928338316495705e-01f, +8.865337190368053e-01f, +8.799712722567934e-01f, +8.731437835983047e-01f, +8.660476534563131e-01f, +8.586812520174252e-01f, +8.510420440685049e-01f, +8.431297226886574e-01f, +8.349435141989714e-01f, +8.264839911291133e-01f, +8.177505366573690e-01f, +8.087449817124315e-01f, +7.994681492797084e-01f, +7.899235162194718e-01f, + 7.801137731566502e-01f, + 7.700431275216928e-01f, +7.597145736971065e-01f, +7.491330971820804e-01f, +7.383028603058783e-01f, +7.272298755824693e-01f, +7.159201919962611e-01f, +7.043814340356083e-01f, +6.926196927377140e-01f, +6.806438831866077e-01f, +6.684616478236647e-01f, +6.560830137986515e-01f, +6.435179268559957e-01f, +6.307755329382612e-01f, +6.178641647786525e-01f, +6.047954625702541e-01f, +5.915799587176216e-01f, +5.782289366005894e-01f, +5.647535885752191e-01f, +5.511703155400274e-01f, +5.374905090437071e-01f, +5.237263500445715e-01f, +5.098915423728255e-01f, +4.960008074926423e-01f, +4.820662943337458e-01f, +4.681017110048007e-01f, +4.541216995958746e-01f, +4.401421815729068e-01f, +4.261772971493010e-01f, +4.122417888542512e-01f, +3.983499612526493e-01f, +3.845172335531009e-01f, +3.707583717376236e-01f, +3.570886786795506e-01f, +3.435228672445627e-01f, +3.300763764703638e-01f, +3.167640325043893e-01f, +3.036004651973109e-01f, +2.905996158436682e-01f, +2.777758503744847e-01f, +2.651434678028531e-01f, +2.527161881181577e-01f, +2.405069849650012e-01f, +2.285283969438072e-01f, +2.167933432162879e-01f, +2.053139897833021e-01f, +1.941021906320988e-01f, +1.831680872008943e-01f, +1.725221947208913e-01f, +1.621735416384834e-01f, +1.521320683467849e-01f, +1.424052801149985e-01f, +1.330015240938615e-01f, +1.239260664828526e-01f, +1.151858295527293e-01f, +1.067840430193724e-01f, +9.872637505002878e-02f, +9.101379000888035e-02f, +8.365057236623055e-02f, +7.663508305536153e-02f, +6.997033405748826e-02f, +6.365188111381365e-02f, +5.768176015814392e-02f, +5.205244216987966e-02f, +4.676538412257621e-02f, +4.180950541438362e-02f, +3.718640251368464e-02f, +3.288072750732215e-02f, +2.889548499582958e-02f, +2.520980565928884e-02f, +2.183057564646272e-02f, +1.872896194002638e-02f, +1.592127815153420e-02f, +1.336381425803020e-02f, +1.108558877807282e-02f, +8.943474189364638e-03f, +6.758124889697787e-03f, +3.504438130619497e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f

28. Die Vorrichtung gemäß einem der Ansprüche 6-21, bei der die Synthesefensterungsfunktion (90) eine Abfolge, in Vorwärts- oder Rückwärtsreihenfolge, aufweist, die durch die folgenden Werte gebildet ist, mit einer Toleranz von ±1%: -1.596869453315999e-04, -3.021153494057143e-04, -4.142323860121641e-04, -5.058884031439142e-04, -5.867737487939294e-04, -6.666034929771656e-04, -7.499813122143762e-04, -8.366504004139794e-04, -9.273096237893370e-04, -1.023773491532728e-03, -1.126635355725494e-03, -1.235247794937702e-03, -1.349627853510606e-03, -1.470492941694331e-03, -1.598145399394582e-03, -1.732450700747454e-03, -1.873473391018495e-03, -2.021493133113876e-03, -2.176721793926887e-03, -2.339292362082021e-03, -2.509298051958086e-03, -2.686801873698675e-03, -2.872008069419264e-03, -3.065254982136409e-03, -3.266886736002951e-03, -3.476256385086407e-03, -3.694123506258334e-03, -3.920651988943251e-03, -4.155963816705528e-03, -4.399940204176431e-03, -4.652692827862344e-03, -4.914563787665504e-03, -5.185653529531935e-03, -5.465821495567872e-03, -5.755172503953251e-03, -6.054056765330685e-03, -6.362583863449497e-03, -6.680623380533122e-03, -7.008304674718039e-03, -7.346013465075499e-03,
-7.693816924650567e-03, -8.051465262788033e-03, -8.419001443263380e-03, -8.796760749750191e-03,
-9.184751507972289e-03, -9.582657230262597e-03, -9.990503073705982e-03, -1.040865597419619e-02,
-1.083716113754551e-02, -1.127574117138621e-02, -1.172444049589271e-02, -1.218362542421523e-02,
-1.265334152129685e-02, -1.313331245904876e-02, -1.362355747138776e-02, -1.412438986522702e-02,
-1.463576680723352e-02, -1.515729094197161e-02, -1.568889620430290e-02, -1.623084814367250e-02,
-1.678306524600559e-02, -1.734512089366117e-02, -1.791696516251699e-02, -1.849892453107246e-02,
-1.909097368362797e-02, -1.969273308274951e-02, -2.030414376031160e-02, -2.092546711168754e-02,
-2.155660557689242e-02, -2.219710359529686e-02, -2.284684792818856e-02, -2.350606779320675e-02,
-2.417463749934085e-02, -2.485207716234951e-02, -2.553826580898371e-02, -2.623344061522424e-02,
-2.693746704328349e-02, -2.764983997782559e-02, -2.837043858580717e-02, -2.909952486193998e-02,
-2.983695676902939e-02, -3.058218787751172e-02, -3.133504629493832e-02, -3.209573641742117e-02,
-3.286409853195186e-02, -3.363960728361352e-02, -3.442207835192332e-02, -3.521166997276568e-02,
-3.600820974457969e-02, -3.681119317395579e-02, -3.762042487257546e-02, -3.843601741746971e-02,
-3.925772507976759e-02, -4.008494689009130e-02, -4.091746034850161e-02, -4.175542154425013e-02,
-4.259863408038441e-02, -4.344654894948344e-02, -4.429899287523113e-02, -4.515616616948602e-02,
-4.601786724624048e-02, -4.688349274164030e-02, -4.775281564045485e-02, -4.862598509282498e-02,
-4.950274425624717e-02, -5.038242975874127e-02, -5.126474204655663e-02, -5.214974857230398e-02,
-5.303718358615044e-02, -5.392644753556616e-02, -5.481729406855359e-02, -5.570983057565210e-02,
-5.660384311081047e-02, -5.749879655200370e-02, -5.839451321393058e-02, -5.929116747072080e-02,
-6.018848884279070e-02, -6.108576415855094e-02, -6.198268202511926e-02, -6.287933502598060e-02,
-6.377542359879805e-02, -6.467025548071184e-02, -6.556352962710620e-02, -6.645533804325808e-02,
-6.734542216184526e-02, -6.823317113969737e-02, -6.911832800881393e-02, -7.000099017198280e-02,
-7.088091415536939e-02, -7.175751581450866e-02, -7.263057011354321e-02, -7.350020923324756e-02,
-7.436618116832702e-02, -7.522784961377151e-02, -7.608493286734087e-02, -7.693750413779520e-02,
-7.778525942347714e-02, -7.862751920094575e-02, -7.946399769633587e-02, -8.029480247839879e-02,
-8.111965623403654e-02, -8.193789640255647e-02, -8.274924535373614e-02, -8.355381170261278e-02,
-8.435134905678848e-02, -8.514125464087215e-02, -8.592328028689659e-02, -8.669753354886602e-02,
-8.746379123238275e-02, -8.822149831804039e-02, -8.897043074644968e-02, -8.971069341834263e-02,
-9.044201341183719e-02, -9.116374329727489e-02, -9.187564084638347e-02, -9.257786640497777e-02,
-9.327014538321736e-02, -9.395176975347193e-02, -9.462246851310178e-02, -9.528240981433814e-02,
-9.593137735886889e-02, -9.656876884228789e-02, -9.719438533739366e-02, -9.780843257659243e-02,
-9.841075978146442e-02, -9.900085534600200e-02, -9.957851303827886e-02, -1.001438325530028e-01,
-1.006965654660066e-01, -1.012361165314596e-01, -1.017622262660318e-01, -1.022749718234132e-01,
-1.027741036495644e-01, -1.032590485916072e-01, -1.037296416381658e-01, -1.041861222641119e-01,
-1.046283222746241e-01, -1.050556674062305e-01, -1.054680247057000e-01, -1.058657014776354e-01,
-1.062485747526411e-01, -1.066160875985523e-01, -1.069680384993124e-01, -1.073045851468520e-01,
-1.076255384835563e-01, -1.079303623240916e-01, -1.082188709931267e-01, -1.084912299471198e-01,
-1.087472718159103e-01, -1.089864959432877e-01, -1.092087422379003e-01, -1.094141900597718e-01,
-1.096026598727515e-01, -1.097736146613313e-01, -1.099268894481712e-01, -1.100626919008929e-01,
-1.101808861640070e-01, -1.102809952914802e-01, -1.103629709312858e-01, -1.104271876052675e-01,
-1.104735471815890e-01, -1.105014789286600e-01, -1.105108362290460e-01, -1.105018987914554e-01,
-1.104745246005427e-01, -1.104281465492726e-01, -1.103625464011331e-01, -1.102778601442104e-01,
-1.101739218186236e-01, -1.100502639286607e-01, -1.099067826823344e-01, -1.097437360338336e-01,
-1.095610353779043e-01, -1.093582462693348e-01, -1.091353125572511e-01, -1.088925531745051e-01,
-1.086298673699289e-01, -1.083467335729228e-01, -1.080429791821427e-01, -1.077187842899125e-01,
-1.073739938306107e-01, -1.070081184450032e-01, -1.066210413471652e-01, -1.062130155324388e-01,
-1.057838954855888e-01, -1.053331389663558e-01, -1.048606145834788e-01, -1.043666017588026e-01,
-1.038509823636319e-01, -1.033132401525343e-01, -1.027532566706549e-01, -1.021713124102434e-01,
-1.015673163469357e-01, -1.009408032844788e-01, -1.002916459024019e-01, -9.962005506126154e-02,
-9.892587447037898e-02, -9.820858231161539e-02, -9.746803229469267e-02, -9.670445315437526e-02,
-9.591769653314886e-02, -9.510723623306666e-02, -9.427290387369003e-02, -9.341489003828900e-02,
-9.253303383231506e-02, -9.162682426346705e-02, -9.069614104466586e-02, -8.974125216128212e-02,
-8.876201954716677e-02, -8.775790063882420e-02, -8.672877689119252e-02, -8.567495161533510e-02,
-8.459627389188201e-02, -8.349213839083708e-02, -8.236235749389448e-02, -8.120716401834208e-02,
-8.002639902061687e-02, -7.881950797067065e-02, -7.758626878445929e-02, -7.632679536516856e-02,
-7.504088747769501e-02, -7.372803129789816e-02, -7.238806162166744e-02, -7.102116211954443e-02,
-6.962720872934396e-02, -6.820576796149519e-02, -6.675671622392269e-02, -6.528023606863240e-02, -6.377611429172260e-02, -6.224374611498080e-02, -6.068292908100376e-02, -5.909386001558149e-02,
-5.747627430502456e-02, -5.582945016301614e-02, -5.415316322402774e-02, -5.244768784057990e-02,
-5.071287102956145e-02, -4.894812724598650e-02, -4.715324945932696e-02, -4.532841381541464e-02,
-4.347347112195197e-02, -4.158794238398249e-02, -3.967162909873025e-02, -3.772461300253332e-02,
-3.574664020854284e-02, -3.373712599806719e-02, -3.169587609244436e-02, -2.962308489442885e-02,
-2.751857552683018e-02, -2.538179830690266e-02, -2.321255714428171e-02, -2.101100771772769e-02,
-1.877689096555516e-02, -1.650953674438219e-02, -1.420871083118669e-02, -1.187461378850388e-02,
-9.507008996713286e-03, -7.105225746748432e-03, -4.669099247423082e-03, -2.198970714838444e-03,
+3.052506679844099e-04, +2.844096748870384e-03, +5.417800316971459e-03, +8.026287894631955e-03,
+1.066976124794342e-02, +1.334869917032908e-02, +1.606331521084708e-02, +1.881355950582949e-02,
+2.159970134663663e-02, +2.442232147839131e-02, +2.728156010437695e-02, +3.017712138573929e-02,
+3.310912443052597e-02, +3.607810469851272e-02, +3.908419391833869e-02, +4.212712008909140e-02,
+4.520702759803914e-02, +4.832447852355055e-02, +5.147966118159461e-02, +5.467238802204326e-02,
+5.790284080082958e-02, +6.117156717220185e-02, +6.447866054615346e-02, +6.782376212130986e-02,
+7.120692575100979e-02, +7.462862199422061e-02, +7.808896236959446e-02, +8.158769578329894e-02,
+8.512490568723846e-02, +8.870101069974845e-02, +9.231608110264714e-02, +9.596983987496970e-02,
+9.966236893806717e-02, +1.033941063338643e-01, +1.071650779014335e-01, +1.109748994439795e-01,
+1.148235927259266e-01, +1.18711585030524 1e-01, +1.226388834300689e-01, 1.266050731283809e-01,
+1.306101067250375e-01, +1.346543064817742e-01, +1.387376249190578e-01, +1.428596447589721e-01,
+1.470203170721216e-01, +1.512199592605080e-01, +1.554584725339102e-01, +1.597353438179875e-01,
+1.640504702561671e-01, +1.684041609371527e-01, +1.727963503982179e-01, +1.772265953627290e-01,
+1.816947894623263e-01, +1.862011624788949e-01, +1.907455489457267e-01, +1.953273880886783e-01,
+1.999464539304762e-01, +2.046028558464008e-01, +2.092963206850239e-01, +2.140261955702662e-01,
+2.187922274259156e-01, +2.235945635254679e-01, +2.284329840640989e-01, +2.333068981094213e-01,
+2.382160219461597e-01, +2.431603785542250e-01, +2.481396077816722e-01, +2.531529721334063e-01,
+2.582001739497298e-01, +2.632813508034234e-01, +2.683961570569586e-01, +2.735437630266799e-01,
+2.787237550375912e-01, +2.839361392493072e-01, +2.891805257722012e-01, +2.944561228780392e-01,
+2.997624255177811e-01, +3.050992195689690e-01, +3.104659867604553e-01, +3.158619077906196e-01,
+3.212865260033979e-01, +3.267397428773339e-01, +3.322210551086769e-01, +3.377295561726898e-01,
+3.432647335893443e-01, +3.488264676990591e-01, +3.544142074632647e-01, +3.600269556734629e-01,
+3.656640377499646e-01, +3.713250061671226e-01, +3.770091190097118e-01, +3.827152968157059e-01,
+3.884429045609680e-01, +3.941917466962361e-01, +3.999611859760947e-01, +4.057501420991821e-01,
+4.115579429637846e-01, +4.173843265025887e-01, +4.232286297916428e-01, +4.290897820858789e-01,
+4.349669624916473e-01, +4.408596056709005e-01, +4.467668696607166e-01, +4.526876397402144e-01,
+4.586211456831769e-01, +4.645669547719424e-01, +4.705242008503956e-01, +4.764915897192549e-01,
+4.824682887794052e-01, +4.884539254831315e-01, +4.944476636179056e-01, +5.004481977619742e-01,
+5.064545550235134e-01, +5.124661018959751e-01, +5.184818933365749e-01, +5.245006748662190e-01,
+5.305215796893860e-01, +5.365441251369431e-01, +5.425674372882107e-01, +5.485902506852811e-01,
+5.546116774259739e-01, +5.606312044701524e-01, +5.666478652857275e-01, +5.726602391687222e-01,
+5.786672646386708e-01, +5.846682453966959e-01, +5.906621680078100e-01, +5.966477035050948e-01,
+6.026239249993590e-01, +6.085903032056262e-01, +6.145458904162185e-01, +6.204893201838491e-01,
+6.264196163765745e-01, +6.323361944662236e-01, +6.382380808188793e-01, +6.441239094712802e-01,
+6.499926319211775e-01, +6.558435212204078e-01, +6.616755522321309e-01, +6.674874032292857e-01,
+6.732781108033908e-01, +6.790470657166684e-01, +6.847932667399612e-01, +6.905153235578969e-01,
+6.962122668445681e-01, +7.018835463513400e-01, +7.075281787629503e-01, +7.131447476468400e-01,
+7.187322544823347e-01, +7.242901217843889e-01, +7.298174107967581e-01, +7.353128213893310e-01,
+7.407754721062685e-01, +7.462048970975652e-01, +7.516001985652684e-01, +7.569600449843341e-01,
+7.622834795152550e-01, +7.675699252273948e-01, +7.728184915997067e-01, +7.780279710901641e-01,
+7.831974571624924e-01, +7.883263448127340e-01, +7.934137241269077e-01, +7.984583859818390e-01,
+8.034595539057413e-01, +8.084168767164887e-01, +8.133295347030278e-01, +8.181962433248811e-01,
+8.230162284197827e-01, +8.277892271515950e-01, +8.325145336568091e-01, +8.371909942430671e-01,
+8.418178561101360e-01, +8.463947757326752e-01, +8.509211545601609e-01, +8.553961300139363e-01,
+8.598190417223652e-01, +8.641894434050258e-01, +8.685068980898102e-01, +8.727709688046102e-01,
+8.769788376631916e-01, +8.811334436653052e-01, +8.852318659908962e-01, +8.892739843568178e-01,
+8.932596784799233e-01, +8.971888108843806e-01, +9.010608486625941e-01, +9.048748835980528e-01,
+9.086304531070754e-01, +9.123275405380156e-01, +9.159657608120536e-01, +9.195443573144829e-01,
+9.230629478622332e-01, +9.265215299450000e-01, +9.299198500625820e-01, +9.332574012340955e-01,
+9.365339988633418e-01, +9.397497768500882e-01, +9.429045261728636e-01, +9.459977028429117e-01, +9.490292643083790e-01,	+9.519996619967281e-01,	+9.549088408436811e-01,	+9.577562383751640e-01,
+9.605417649811824e-01,	+9.632658122557368e-01,	+9.659284562011029e-01,	+9.685294510301206e-01,
+9.710688896122810e-01,	+9.735472021876628e-01,	+9.759644676274450e-01,	+9.783204156360773e-01,
+9.806151639385083e-01,	+9.828492160865892e-01,	+9.850226760127131e-01,	+9.871352538808781e-01,
+9.891871802564161e-01,	+9.911792082081333e-01,	+9.931117453856605e-01,	+9.949848494122985e-01,
+9.967989944502682e-01,	+9.985550647085534e-01,	+1.000253445050194e+00,	+1.001894024615659e+00,
+1.003477185929786e+00,	+1.005003807883761e+00,	+1.006474342231823e+00,	+1.007888812850102e+00,
+1.009247722934429e+00,+1.010552057109195e+00,	+1.011802420624526e+00,	+1.012999036304394e+00,
+1.014142538208007e+00,	+1.015233969130880e+00,	+1.016273931967023e+00,	+1.017262593268930e+00,
+1.018200610205248e+00,	+1.019089129704898e+00,	+1.019928842669923e+00,	+1.020719983374545e+00,
+1.021463262031346e+00,	+1.022159867011177e+00,	+1.022810581114847e+00,	+1.023415781467653e+00,
+1.023976320927187e+00,	+1.024493524092612e+00,	+1.024968218100715e+00,	+1.025400734608122e+00,
+1.025791922603958e+00,	+1.026143150540689e+00,	+1.026455340400072e+00,	+1.026728963502498e+00,
+1.026964914246647e+00,	+1.027164510654160e+00,	+1.027328632612924e+00,	+1.027457725038440e+00,
+1.027552729180790e+00,	+1.027615074932096e+00,	+1.027645580283665e+00,	+1.027644462380432e+00,
+1.027612681261584e+00,	+1.027551936393756e+00,	+1.027463246660797e+00,	+1.027346944848234e+00,
+1.027203976311704e+00,	+1.027035903410657e+00,	+1.026843704381356e+00,	+1.026627771359327e+00,
+1.026389068000259e+00,	+1.026129124951269e+00,	+1.025848782597774e+00,	+1.025548201799728e+00,
+1.025228357342061e+00,	+1.024891029860151e+00,	+1.024537134749709e+00,	+1.024166724015001e+00,
+1.023780698019775e+00,	+1.023380803775376e+00,	+1.022967885528204e+00,	+1.022541888689137e+00,
+1.022103695693341e+00,	+1.021655115592693e+00,	+1.021196819229254e+00,	+1.020728359657958e+00,
+1.020250686272421e+00,	+1.019766121526662e+00,	+1.019275334687329e+00,	+1.018777362174335e+00,
+1.018273081302452e+00,	+1.017765178792830e+00,	+1.017253984284701e+00,	+1.016737542074604e+00,
+1.016217355867531e+00,	+1.015698328083719e+00,	+1.015181679856847e+00,	+1.014665311686846e+00,
+1.014158817803440e+00,	+1.013683181980586e+00,	+1.013249071090664e+00,	+1.012854331657942e+00,
+1.012450620480768e+00,	+1.011948006992127e+00,	+1.011349594569779e+00,	+1.010750807770724e+00,
+1.010189090179223e+00,	+1.009640487251585e+00,	+1.009094771053394e+00,	+1.008557961167850e+00,
+1.008032659941965e+00,	+1.007517375307989e+00,	+1.007011287608451e+00,	+1.006514430011155e+00,
+1.006026890813957e+00,	+1.005548764575910e+00,	+1.005079874697786e+00,	+1.004619788163424e+00,
+1.004168417268956e+00,	+1.003726014625139e+00,	+1.003292461479605e+00,	+1.002867268893035e+00,
+1.002450315292720e+00,	+1.002041847623544e+00,	+1.001641769115897e+00,	+1.001249637387833e+00,
+1.000865334924641e+00,	+1.000489068954641e+00,	+1.000120698237067e+00,	+9.997597357106623e-01,
+9.994060799749374e-01,	+9.990600138594018e-01,	+9.987214414655692e-01,	+9.983898865406841e-01,
+9.980652196577338e-01,	+9.977476599094836e-01,	+9.974370849972721e-01,	+9.971330321102652e-01,
+9.968354071802502e-01,	+9.965444836911705e-01,	+9.962601672340514e-01,	+9.959819947971522e-01,
+9.957098545943852e-01,	+9.954439865572462e-01,	+9.951842733288886e-01,	+9.949302413030897e-01,
+9.946817924874576e-01,	+9.944392047205887e-01,	+9.942024045863540e-01,	+9.939709658067042e-01,
+9.937448009691057e-01,	+9.935241604969254e-01,	+9.933089182704574e-01,	+9.930985748592784e-01,
+9.928930430130044e-01,	+9.926926485907741e-01,	+9.924973655191176e-01,	+9.923068103443909e-01,
+9.921208874284833e-01,	+9.919397899901643e-01,	+9.917633778190438e-01,	+9.915911837376036e-01,
+9.914231780519580e-01,	+9.912597642374404e-01,	+9.911009195707438e-01,	+9.909461904886675e-01,
+9.907954498484041e-01,	+9.906489032572322e-01,	+9.905064710654814e-01,	+9.903677893656558e-01,
+9.902328499802091e-01,	+9.901019951653361e-01,	+9.899751611066148e-01,	+9.898518794779545e-01,
+9.897320682428268e-01,	+9.896160337369861e-01,	+9.895037256870947e-01,	+9.893947359604699e-01,
+9.892890160408989e-01,	+9.891868774704359e-01,	+9.890882840931410e-01,	+9.889928511129679e-01,
+9.889005321235379e-01,	+9.888116182908468e-01,	+9.887260333430423e-01,	+9.886433365303475e-01,
+9.885634927535989e-01,	+9.884868721088945e-01,	+9.884134697413018e-01,	+9.883429020724473e-01,
+9.882751039537586e-01,	+9.882103306444820e-01,	+9.881485041748238e-01,	+9.880892168751595e-01,
+9.880324626554831e-01,	+9.879786335149536e-01,	+9.879277114724612e-01,	+9.878792663495038e-01,
+9.878332150629403e-01,	+9.877898261218510e-01,	+9.877490592657352e-01,	+9.877105653505679e-01,
+9.876743442038471e-01,	+9.876407405135295e-01,	+9.876096955295567e-01,	+9.875807496078497e-01,
+9.875538464766127e-01,	+9.875293349435258e-01,	+9.875072021876561e-01,	+9.874870704481152e-01,
+9.874688908826080e-01,	+9.874529447589979e-01,	+9.874391758112012e-01,	+9.874271920836210e-01,
+9.874169741527905e-01,	+9.874088727307169e-01,	+9.874028477167635e-01,	+9.873984685207834e-01,
+9.873956821201697e-01,	+9.873948143463702e-01,	+9.873958301311858e-01,	+9.873983326194351e-01,
+9.874022834012905e-01,	+9.874080027710336e-01,	+9.874154551873394e-01,	+9.874242488204272e-01,
+9.874343401290739e-01,	+9.874460335035745e-01,	+9.874592688338504e-01,	+9.874736235387018e-01,
+9.874890696412385e-01,	+9.875059727945840e-01,	+9.875243137719285e-01,	+9.875436862847529e-01, +9.875640274936844e-01, +9.875856201221136e-01, +9.876084084448705e-01, +9.876319996758224e-01,
+9.876563785063032e-01, +9.876819048329899e-01, +9.877085492327816e-01, +9.877358921155149e-01,
+9.877638696088412e-01, +9.877927754855115e-01, +9.878225576787804e-01, +9.878528193014621e-01,
+9.878835445497628e-01, +9.879150968481590e-01, +9.879474521328961e-01, +9.879801976843903e-01,
+9.880132731565830e-01, +9.880469724750991e-01, +9.880812445673735e-01, +9.881156946084619e-01,
+9.881503106987573e-01, +9.881854620136666e-01, +9.882211314188272e-01, +9.882569137253582e-01,
+9.882927446902245e-01, +9.883289032519310e-01, +9.883653317154473e-01, +9.884016382257884e-01,
+9.884378310018685e-01, +9.884743146700878e-01, +9.885110753693968e-01, +9.885476787868710e-01,
+9.885840418353093e-01, +9.886204379327659e-01, +9.886568414746639e-01, +9.886929275063397e-01,
+9.887287200468966e-01, +9.887645868459630e-01, +9.888004757085318e-01, +9.888359174300858e-01,
+9.888708540445242e-01, +9.889056416611736e-01, +9.889402846310907e-01, +9.889744320992592e-01,
+9.890080679866394e-01, +9.890415110770159e-01, +9.890747269455915e-01, +9.891073295256775e-01,
+9.891393036472682e-01, +9.891710038703801e-01, +9.892024062799223e-01, +9.892331093959095e-01,
+9.892631024032380e-01, +9.892927650908963e-01, +9.893220982848433e-01, +9.893507219573624e-01,
+9.893786032000026e-01, +9.894060580815116e-01, +9.894330645494204e-01, +9.894592636950934e-01,
+9.894846746832306e-01, +9.895096919388534e-01, +9.895343083314785e-01, +9.895581152602352e-01,
+9.895810813422480e-01, +9.896035553161019e-01, +9.896255512296797e-01, +9.896467469067676e-01,
+9.896671650245172e-01, +9.896871706698203e-01, +9.897067365020641e-01, +9.897254458138418e-01,
+9.897432947038028e-01, +9.897606930400666e-01, +9.897776834824588e-01, +9.897939374675170e-01,
+9.898094478563998e-01, +9.898245305815332e-01, +9.898391682249337e-01, +9.898530133261707e-01,
+9.898661175792055e-01, +9.898789278944983e-01, +9.898914705684924e-01, +9.899033504013042e-01,
+9.899145471163803e-01, +9.899254194103574e-01, +9.899359976303029e-01, +9.899459823437818e-01,
+9.899554202030650e-01, +9.899647016766845e-01, +9.899738352794291e-01, +9.899824494486951e-01,
+9.899905595941995e-01, +9.899985686323577e-01, +9.900065116928948e-01, +9.900140555182825e-01,
+9.900212405447888e-01, +9.900284805353695e-01, +9.900358124222742e-01, +9.900428956722681e-01,
+9.900497484789281e-01, +9.900567489573141e-01, +9.900639252344197e-01, +9.900709561632662e-01,
+9.900778969424803e-01, +9.900851772980046e-01, +9.900928358611601e-01, +9.901005198590931e-01,
+9.901082439265390e-01, +9.901163920607219e-01, +9.901250018173793e-01, +9.901337646053293e-01,
+9.901427479709606e-01, +9.901523931998540e-01, +9.901627402679979e-01, +9.901734275350572e-01,
+9.901844600451093e-01, +9.901962127540933e-01, +9.902087332329851e-01, +9.902217409846106e-01,
+9.902353097103640e-01, +9.902498637985275e-01, +9.902654188005916e-01, +9.902815836378273e-01,
+9.902983686695558e-01, +9.903161882791064e-01, +9.903351096966241e-01, +9.903548501470234e-01,
+9.903754652821575e-01, +9.903973477947732e-01, +9.904205084933333e-01, +9.904445786599008e-01,
+9.904695808487622e-01, +9.904959297726740e-01, +9.905236810016560e-01, +9.905525289918011e-01,
+9.905825150202904e-01, +9.906140262079994e-01, +9.906470660818262e-01, +9.906812569810133e-01,
+9.907166224339236e-01, +9.907535876784416e-01, +9.907922087340426e-01, +9.908321697026107e-01,
+9.908734943143861e-01, +9.909165464981378e-01, +9.909613313790248e-01, +9.910074971074613e-01,
+9.910550740962871e-01, +9.911044737993845e-01, +9.911557226040716e-01, +9.912084614290896e-01,
+9.912627029879084e-01, +9.913188323156490e-01, +9.913768610980639e-01, +9.914364276145792e-01,
+9.914975411562229e-01, +9.915605826937839e-01, +9.916255751593622e-01, +9.916921826078263e-01,
+9.917604214872976e-01, +9.918306597984429e-01, +9.919028873284097e-01, +9.919767175562684e-01,
+9.920521593387949e-01, +9.921296166135889e-01, +9.922091101818779e-01, +9.922902757201201e-01,
+9.923730982524657e-01, +9.924579135466506e-01, +9.925447043512063e-01, +9.926331018900273e-01,
+9.927231225056266e-01, +9.928151658609977e-01, +9.929092387372991e-01, +9.930049538427406e-01,
+9.931022798104318e-01, +9.932015434077218e-01, +9.933027281437943e-01, +9.934054751445924e-01,
+9.935098037935540e-01, +9.936161084869942e-01, +9.937243666117925e-01, +9.938341389810342e-01,
+9.939453714404443e-01, +9.940583985614073e-01, +9.941732232809857e-01, +9.942895145656371e-01,
+9.944072763730046e-01, +9.945268452163670e-01, +9.946481676207727e-01, +9.947708034711511e-01,
+9.948947222146535e-01, +9.950203031067961e-01, +9.951475444242728e-01, +9.952760608735062e-01,
+9.954058173659507e-01, +9.955371298969039e-01, +9.956699511040611e-01, +9.958038713694317e-01,
+9.959388575029996e-01, +9.960752523364563e-01, +9.962130271017117e-01, +9.963517811272741e-01,
+9.964914827801233e-01, +9.966324689957675e-01, +9.967746939976430e-01, +9.969177298776669e-01,
+9.970615306490058e-01, +9.972064329530154e-01, +9.973524075591346e-01, +9.974990583293081e-01,
+9.976463479353705e-01, +9.977945971317506e-01, +9.979437430375855e-01, +9.980933404947205e-01,
+9.982433336615963e-01, +9.983940572002874e-01, +9.985454907974421e-01, +9.986972567262494e-01,
+9.988493116887893e-01, +9.990019468868200e-01, +9.991550977367476e-01, +9.993083430214909e-01,
+9.994615765165296e-01, +9.996150231216515e-01, +9.997689221333534e-01, +9.999235128481329e-01,
+1.000076493002599e+00, +1.000231131275969e+00, +1.000385125142624e+00, +1.000538713539491e+00, +1.000692135698996e+00, +1.000845616726739e+00, 1.000999050218361e+00, +1.001152013920163e+00,
+1.001304442627610e+00, +1.001456627881216e+00, +1.001608526000461e+00, +1.001759757645423e+00,
+1.001910301800365e+00, +1.002060493867275e+00, +1.002210277420412e+00, +1.002359204811906e+00,
+1.002507212061815e+00, +1.002654620794815e+00, +1.002801392925948e+00, +1.002947129400411e+00,
+1.003091799884742e+00, +1.003235742261295e+00, +1.003378909587027e+00, +1.003520870253791 e+00,
+1.003661577107433e+00, +1.003801368578070e+00, +1.003940212001390e+00, +1.004077702628435e+00,
+1.004213810320699e+00, +1.004348879757933e+00, +1.004482876599046e+00, +1.004615386562846e+00,
+1.004746360645254e+00, +1.004876116715471e+00, +1.005004618375781e+00, +1.005131475392675e+00,
+1.005256684766584e+00, +1.005380628601598e+00, +1.005503275059852e+00, +1.005624178100742e+00,
+1.005743282364652e+00, +1.005860927032197e+00, +1.005977115074116e+00, +1.006091510392348e+00,
+1.006204114728125e+00, +1.006315265680367e+00, +1.006424907424988e+00, +1.006532594023395e+00,
+1.006638301298317e+00, +1.006742427727669e+00, +1.006844991973082e+00, +1.006945629196305e+00,
+1.007044321511378e+00, +1.007141399219649e+00, +1.007236829559076e+00, +1.007330218597112e+00,
+1.007421572075267e+00, +1.007511294570522e+00, +1.007599401798709e+00, +1.007685518441567e+00,
+1.007769625953741e+00, +1.007852064386603e+00, +1.007932817703069e+00, +1.008011514905126e+00,
+1.008088176165563e+00, +1.008163211111724e+00, +1.008236628017949e+00, +1.008308033204578e+00,
+1.008377415429783e+00, +1.008445148098658e+00, +1.008511247273756e+00, +1.008575370579197e+00,
+1.008637540589491e+00, +1.008698144207627e+00, +1.008757190321980e+00, +1.008814310258779e+00,
+1.008869515256392e+00, +1.008923196622113e+00, +1.008975366811245e+00, +1.009025659761512e+00,
+1.009074101779034e+00, +1.009121111323685e+00, +1.009166718967367e+00, +1.009210565968291e+00,
+1.009252657087366e+00, +1.009293362609020e+00, +1.009332706372757e+00, +1.009370366213570e+00,
+1.009406398832440e+00, +1.009441237185677e+00, +1.009474905002031e+00, +1.009507017171120e+00,
+1.009537576990303e+00, +1.009566978740742e+00, +1.009595264293017e+00, +1.009622122007090e+00,
+1.009647608302352e+00, +1.009672145744679e+00, +1.009695757189383e+00, +1.009718066587100e+00,
+1.009739084785160e+00, +1.009759212016967e+00, +1.009778504921465e+00, +1.009796675060142e+00,
+1.009813790867919e+00, +1.009830274807737e+00, +1.009846137382005e+00, +1.009860979702382e+00,
+1.009874817539016e+00, +1.009888083631667e+00, +1.009900853103284e+00, +1.009912839830312e+00,
+1.009924092276850e+00, +1.009934992836975e+00, +1.009945546632798e+00, +1.009955384765721e+00,
+1.009964547970550e+00, +1.009973486342123e+00, +1.009982268770147e+00, +1.009990580458388e+00,
+1.009998459694088e+00, +1.010006298177305e+00, +1.010014110835447e+00, +1.010021537788250e+00,
+1.010028618428735e+00, +1.010035791136646e+00, +1.010043112228827e+00, +1.010050254076988e+00,
+1.010057245369122e+00, +1.010064471863242e+00, +1.010071952131355e+00, +1.010079338752086e+00,
+1.010086669402375e+00, +1.010094366238073e+00, +1.010102470533325e+00, +1.010110642277138e+00,
+1.010118917317053e+00, +1.010127706776959e+00, +1.010137026407425e+00, +1.010146497096682e+00,
+1.010156127541843e+00, +1.010166316200025e+00, +1.010177110711677e+00, +1.010188205550670e+00,
+1.010199631706068e+00, +1.010211755260102e+00, +1.010224555569669e+00, +1.010237629352925e+00,
+1.010251003469427e+00, +1.010265134075557e+00, +1.010280073997043e+00, +1.010295468653759e+00,
+1.010311300308220e+00, +1.010327891493345e+00, +1.010345234996637e+00, +1.010362995486892e+00,
+1.010381216558204e+00, +1.010400316698172e+00, +1.010420292023388e+00, +1.010440717183162e+00,
+1.010461564316351e+00, +1.010483206256578e+00, +1.010505666262059e+00, +1.010528615445659e+00,
+1.010552068219883e+00, +1.010576380809038e+00, +1.010601521285347e+00, +1.010627072440648e+00,
+1.010653027053931e+00, +1.010679788081867e+00, +1.010707375229772e+00, +1.010735421976626e+00,
+1.010763905869062e+00, +1.010793149909083e+00, +1.010823120603859e+00, +1.010853429760676e+00,
+1.010884078284304e+00, +1.010915454361544e+00, +1.010947547074519e+00, +1.010979946214537e+00,
+1.011012627395599e+00, +1.011045953108263e+00, +1.011079907971760e+00, +1.011114097416553e+00,
+1.011148486293359e+00, +1.011183400596362e+00, +1.011218823992338e+00, +1.011254397791134e+00,
+1.011290126474096e+00, +1.011326374295525e+00, +1.011363082075863e+00, +1.011399769951629e+00,
+1.011436384522522e+00, +1.011473302008831e+00, +1.011510547051838e+00, +1.011547787220495e+00,
+1.011584996312149e+00, +1.011622454130127e+00, +1.011660075693276e+00, +1.011697416504599e+00,
+1.011734462313348e+00, +1.011771627262926e+00, +1.011808919793469e+00, +1.011845938738977e+00,
+1.011882624964772e+00, +1.011919264025716e+00, +1.011955790122897e+00, +1.011991788266365e+00,
+1.012027240794153e+00, +1.012062525726662e+00, +1.012097630839309e+00, +1.012132151631041e+00,
+1.012166035659198e+00, +1.012199583936457e+00, +1.012232734564333e+00, +1.012265064558555e+00,
+1.012296549102454e+00, +1.012327560477901e+00, +1.012358082400925e+00, +1.012387708001513e+00,
+1.012416383754384e+00, +1.012444410627777e+00, +1.012471723038292e+00, +1.012497890726292e+00,
+1.012522883349504e+00, +1.012547069718292e+00, +1.012570434021054e+00, +1.012592573402938e+00,
+1.012613430563370e+00, +1.012633295255708e+00, +1.012652102923549e+00, +1.012669436800254e+00,
+1.012685277016726e+00, +1.012699998432300e+00, +1.012713572256585e+00, +1.012725564992284e+00, +1.012735914876099e+00, +1.012744934005791e+00, +1.012752577651415e+00, +1.012758443858682e+00,
+1.012762496111508e+00, +1.012765062889864e+00, +1.012766104774385e+00, +1.012765214703761e+00,
+1.012762356719162e+00, +1.012757865052107e+00, +1.012751685362581e+00, +1.012743376077777e+00,
+1.012732896174196e+00, +1.012720605477780e+00, +1.012706484200181e+00, +1.012690130527749e+00,
+1.012671486975730e+00, +1.012650842226435e+00, +1.012628146441024e+00, +1.012603012552473e+00,
+1.012575427778520e+00, +1.012545750134419e+00, +1.012513922299362e+00, +1.012479473490919e+00,
+1.012442344023191e+00, +1.012402887777359e+00, +1.012361105121003e+00, +1.012316638832887e+00,
+1.012269448366181e+00, +1.012219809594718e+00, +1.012167638122170e+00, +1.012112494069630e+00,
+1.012054359992419e+00, +1.011993638380370e+00, +1.011930323929956e+00, +1.011864000215460e+00,
+1.011794588601900e+00, +1.011722351640686e+00, +1.011647223869087e+00, +1.011568814072372e+00,
+1.011487118812239e+00, +1.011402518267713e+00, +1.011314978002071 e+00, +1.011224048846073e+00,
+1.011129654652857e+00, +1.011032094993283e+00, +1.010931324278397e+00, +1.010826951260377e+00,
+1.010718941241622e+00, +1.010607614747097e+00, +1.010492924436361e+00, +1.010374455963019e+00,
+1.010252160684281e+00, +1.010126353960416e+00, +1.009996954741022e+00, +1.009863488188648e+00,
+1.009725892479312e+00, +1.009584519851048e+00, +1.009439365159565e+00, +1.009290060983833e+00,
+1.009136529912757e+00, +1.008978985140192e+00, +1.008817301052548e+00, +1.008651020208035e+00,
+1.008480124067563e+00, +1.008305027555130e+00, +1.008125704897790e+00, +1.007941686009594e+00,
+1.007752833675443e+00, +1.007559349517223e+00, +1.007361141859567e+00, +1.007157827358150e+00,
+1.006949385806640e+00, +1.006736153885735e+00, +1.006518049344503e+00, +1.006294572836803e+00,
+1.006065603926773e+00, +1.005831403532018e+00, +1.005591890638477e+00, +1.005346642064537e+00,
+1.005095592119373e+00, +1.004839030117511e+00, +1.004576865704429e+00, +1.004308630055050e+00,
+1.004034214698496e+00, +1.003753871618025e+00, +1.003467498305776e+00, +1.003174639260358e+00,
+1.002875211027427e+00, +1.002569500413888e+00, +1.002257424578396e+00, +1.001938530973887e+00,
+1.001612710105563e+00, +1.001280195339107e+00, +1.000940870545871e+00, +1.000594272975683e+00,
+1.000240322030139e+00, +9.998793163292398e-01, +9.995111701168786e-01, +9.991354132324841e-01,
+9.987519222567783e-01, +9.983609218719522e-01, +9.979623130227679e-01, +9.975556740764708e-01,
+9.971409288327860e-01, +9.967183432488375e-01, +9.962878170229250e-01, +9.958488863050556e-01,
+9.954014561350919e-01, +9.949458000048871e-01, +9.944818543153893e-01, +9.940092149931687e-01,
+9.935277331184579e-01, +9.930375282832211e-01, +9.925387139793089e-01, +9.920313495175566e-01,
+9.915146560759479e-01, +9.909871983144850e-01, +9.904515643208522e-01, +9.899136802423638e-01,
+9.893635427366756e-01, +9.887777731550811e-01, +9.881930623810997e-01, +9.877024911349694e-01,
+9.867719346048082e-01, +9.859422591203311e-01, +9.851327817259932e-01, +9.843446542813931e-01,
+9.835667898378924e-01, +9.827784388364600e-01, +9.819697981806308e-01, +9.811423034808365e-01,
+9.802944493567077e-01, +9.794214312173470e-01, +9.785214441250228e-01, +9.775957513212234e-01,
+9.766438929361375e-01, +9.756636036109838e-01, +9.746537914797736e-01, +9.736145835187847e-01,
+9.725453442532574e-01, +9.714446445280863e-01, +9.703115557563614e-01, +9.691456634185093e-01,
+9.679460697948364e-01, +9.667113883637859e-01, +9.654406178310210e-01, +9.641331517728559e-01,
+9.627881167626269e-01, +9.614043615076308e-01, +9.599808797353324e-01, +9.585168210361295e-01,
+9.570113065179300e-01, +9.554634210701282e-01, +9.538722275164798e-01, +9.522367669696690e-01,
+9.505560524788548e-01, +9.488290728836637e-01, +9.470548839544214e-01, +9.452326100986821e-01,
+9.433613907645669e-01, +9.414403740008491e-01, +9.394686283754716e-01, +9.374451520790944e-01,
+9.353691612846549e-01, +9.332400814902009e-01, +9.310570687016885e-01, +9.288190093977164e-01,
+9.265249985708898e-01, +9.241743479451956e-01, +9.217662887169116e-01, +9.192999665754161e-01,
+9.167746294201033e-01, +9.141896283466009e-01, +9.115442516266717e-01, +9.088377281110291e-01,
+9.060694681113471e-01, +9.032390575925977e-01, +9.003458895224528e-01, +8.973891675497357e-01,
+8.943683555809617e-01, +8.912831789317232e-01, +8.881332000806269e-01, +8.849178157571976e-01,
+8.816366171218113e-01, +8.782893885841422e-01, +8.748757216290605e-01, +8.713950183935990e-01,
+8.678469565343039e-01, +8.642314881034361e-01, +8.605483499580321e-01, +8.567970644671067e-01,
+8.529774446610170e-01, +8.490895965655302e-01, +8.451334654019179e-01, +8.411088323972666e-01,
+8.370156984112052e-01, +8.328542805780399e-01, +8.286245548070180e-01, +8.243262611129502e-01,
+8.199594783897041e-01, +8.155246236571582e-01, +8.110218607207131e-01, +8.064511006873497e-01,
+8.018126046593852e-01, +7.971069856439827e-01, +7.923346478686025e-01, +7.874957820910923e-01,
+7.825908231062452e-01, +7.776204488292163e-01, +7.725851026241404e-01, +7.674849949914248e-01,
+7.623206183595970e-01, +7.570927486638241e-01, +7.518019652814979e-01, +7.464486491227057e-01,
+7.410334206850239e-01, +7.355571439110484e-01, +7.300205729992958e-01, +7.244243523154849e-01,
+7.187693676298663e-01, +7.130567383226717e-01, +7.072872946666678e-01, +7.014615845640527e-01,
+6.955805444755916e-01, +6.896454997760704e-01, +6.836575016451227e-01, +6.776173229836567e-01,
+6.715260316843978e-01, +6.653849997460716e-01, +6.591955305148172e-01, +6.529588449241264e-01, +6.466761515320369e-01, +6.403486426892321e-01, +6.339773402000435e-01, +6.275631129756770e-01,
+6.211072197441818e-01, +6.146113064454106e-01, +6.080768062101946e-01, +6.015049275244732e-01,
+5.948969938609885e-01, +5.882544536827298e-01, +5.815787608870452e-01, +5.748713693712827e-01,
+5.681329838024681e-01, +5.613674511156831e-01, +5.545756384163615e-01, +5.477589552377587e-01,
+5.409188627354240e-01, +5.340568757452271e-01, +5.271745849688633e-01, +5.202736834971303e-01,
+5.133560289814199e-01, +5.064236063322167e-01, +4.994780733459294e-01, +4.925207788759675e-01,
+4.855532972838063e-01, +4.785774177949064e-01, +4.715949057752619e-01, +4.646075325068186e-01,
+4.576172599874965e-01, +4.506262048599546e-01, +4.436362416499966e-01, +4.366490208265834e-01,
+4.296663370497900e-01, +4.226901117060164e-01, +4.157221460416020e-01, +4.087641442756610e-01,
+4.018179771137481e-01, +3.948856590950779e-01, +3.879690747948260e-01, +3.810699982632091e-01,
+3.741903189229788e-01, +3.673320150150139e-01, +3.604969483256886e-01, +3.536868899553974e-01,
+3.469037339648918e-01, +3.401494735467201e-01, +3.334260017756462e-01, +3.267351352184045e-01,
+3.200787300572631e-01, +3.134586473252229e-01, +3.068766522215559e-01, +3.003344428572218e-01,
+2.938337904395881e-01, +2.873765136803315e-01, +2.809644064498411e-01, +2.745992637590826e-01,
+2.682828578001429e-01, +2.620169058204753e-01, +2.558030636168179e-01, +2.496429506725780e-01,
+2.435381581076193e-01, +2.374902188466703e-01, +2.315007158769866e-01, +2.255713139320687e-01,
+2.197036032185791e-01, +2.138990608950040e-01, +2.081591884177564e-01, +2.024855415115456e-01,
+1.968794982265323e-01, +1.913422230760984e-01, +1.858749915117319e-01, +1.804792270036454e-01,
+1.751561592043750e-01, +1.699067802117410e-01, +1.647322739698192e-01, +1.596340539111631e-01,
+1.546132267478876e-01, +1.496705434426226e-01, +1.448069879076800e-01, +1.400238206749698e-01,
+1.353218971490514e-01, +1.307016182576054e-01, +1.261637395672916e-01, +1.217094187032866e-01,
+1.173392980385558e-01, +1.130534434072722e-01, +1.088524061173192e-01, +1.047372831131808e-01,
+1.007084973747942e-01, +9.676572618933918e-02, +9.290929444691418e-02, +8.914024389873081e-02,
+8.545874375771015e-02, +8.186400751918757e-02, +7.835612100141792e-02, +7.493612463933132e-02,
+7.160392900131578e-02, +6.835821233920988e-02, +6.519882821193619e-02, +6.212691236769909e-02,
+5.914211536028985e-02, +5.624247476796568e-02, +5.342762364238927e-02, +5.069893012340838e-02,
+4.805577285587748e-02, +4.549537570011979e-02, +4.301717763585556e-02, +4.062301532941800e-02,
+3.831198264259714e-02, +3.608020726673365e-02, +3.392698736873631e-02, +3.185504779821543e-02,
+2.986316337017634e-02, +2.794584821783607e-02, +2.610239043507366e-02, +2.433722657129812e-02,
+2.264871565562373e-02, +2.102867478775550e-02, +1.947675241971700e-02, +1.800101670620712e-02,
+1.659903330901047e-02, +1.525710171255895e-02, +1.397610119023076e-02, +1.277238121584596e-02,
+1.163787492636242e-02, +1.053809096662833e-02, +9.464262017505555e-03, +8.433087782643726e-03,
+7.364501936162659e-03, +6.073847663871269e-03, +4.449668997344740e-03, +2.485333612762431e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

29. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von ±1%: +9.959086585790517e-04, +3.819056787237678e-03, +9.540832613229890e-03, +1.921659800166160e-02, +3.382719081038548e-02, +5.424831667522354e-02, +8.120777668775610e-02, +1.152171887125930e-01, +1.564942331034909e-01, +2.049363422022628e-01, +2.601166575816199e-01, +3.212814164616093e-01, +3.873472997948746e-01, +4.569497078592333e-01, +5.285192958868393e-01, +6.003522489375573e-01, +6.706896380227332e-01, +7.378044458510402e-01, +8.000925313431716e-01, +8.561409184410547e-01, +9.048272294524792e-01, +9.453685031730190e-01, +9.773507430600533e-01, +1.000800872826561e+00, +1.016171590112097e+00, +1.024315247630982e+00, +1.026415431432931e+00, +1.023858366571912e+00, +1.018135705524407e+00, +1.010794822557756e+00, +1.003406509762925e+00, +9.967831265986109e-01, +9.920995520917141e-01, +9.892206942816891e-01, +9.879658322200813e-01, +9.881273531631907e-01, +9.894805541465801e-01, +9.917849916000535e-01, +9.947847580943504e-01, +9.982119669301160e-01, +1.001791235858836e+00, +1.005242583245485e+00, +1.008283053756130e+00, +1.010631281038659e+00, +1.012015300253356e+00, +1.012180753005270e+00, +1.010896765282633e+00, +1.007963362035220e+00, +1.003277255072391e+00, +9.966050551498514e-01, +9.868284225039941e-01, +9.731250287581631e-01, +9.540636479502398e-01, +9.283864275822276e-01, +8.950916858157935e-01, +8.534769362643825e-01, +8.032090930429980e-01, +7.444735201251689e-01, +6.780787033699449e-01, +6.053970453856138e-01, +5.282077505750667e-01, +4.486552956056635e-01, +3.691875990296312e-01, +2.924566408966777e-01, +2.210718537110463e-01, +1.573148583944309e-01, +1.030525757797768e-01, +5.982732244758054e-02, +2.871831923385133e-02, +9.683884928956490e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

30. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von ±1%: +6.143388180964179e-04, +1.489582832987000e-03, +2.884104959764029e-03, +4.934298832466617e-03, +7.779130464154915e-03, +1.154910606525086e-02, +1.637155619860352e-02, +2.237116158648752e-02, +2.966159685753317e-02, +3.835663329277230e-02, +4.855610986150206e-02, +6.035055738891727e-02, +7.382288203064732e-02, +8.903563687211119e-02, +1.060356225286319e-01, +1.248534855777947e-01, +1.454931890869180e-01, +1.679435556337752e-01, +1.921728622634411e-01, +2.181238261985594e-01, +2.457259744642953e-01, +2.748839432649996e-01, +3.054824712370942e-01, +3.373873799614014e-01, +3.704415932452488e-01, +4.044749630814483e-01, +4.393004362003260e-01, +4.747225454237193e-01, +5.105341492548225e-01, +5.465201916422433e-01, +5.824658100332457e-01, +6.181452662624718e-01, +6.533411462740817e-01, +6.878367295965062e-01, +7.214176027060971e-01, +7.538887973483771e-01, +7.850546571907628e-01, +8.147397447696774e-01, +8.427819363777799e-01, +8.690376742017057e-01, +8.933935477349644e-01, +9.157483563218768e-01, +9.360270196617569e-01, +9.541731142261065e-01, +9.701635474343885e-01, +9.840036439809510e-01, +9.957199420334376e-01, +1.005374268639838e+00, +1.013046655758663e+00, +1.018843380560658e+00, +1.022896948293643e+00, +1.025355286710874e+00, +1.026382881625701e+00, +1.026155530733488e+00, +1.024853974580724e+00, +1.022664602721801e+00, +1.019779396547454e+00, +1.016391686789653e+00, +1.012697033320358e+00, +1.008885191761748e+00, +1.005378742804807e+00, +1.001563778373068e+00, +9.982531564931281e-01, +9.954346644968789e-01, +9.930502268060122e-01, +9.912170911359961e-01, +9.897805192546195e-01, +9.887624937408933e-01, +9.881383235740961e-01, +9.878819413827574e-01, +9.879662130250981e-01, +9.883630508181326e-01, +9.890434070785485e-01, +9.899772316163624e-01, +9.911334564321237e-01, +9.924800441092685e-01, +9.939841207305906e-01, +9.956121471675398e-01, +9.973300590248015e-01, +9.991033633647473e-01, +1.000897441314013e+00, +1.002677088643863e+00, +1.004407190937699e+00, +1.006052289109999e+00, +1.007576934100958e+00, +1.008945862447015e+00, +1.010124241309341e+00, +1.011077969726137e+00, +1.011773962181442e+00, +1.012180362866919e+00, +1.012266707295288e+00, +1.012004064757857e+00, +1.011365223023975e+00, +1.010324996851905e+00, +1.008860731864438e+00, +1.006952983357691e+00, +1.004586273379809e+00, +1.001749900308864e+00, +9.984386632116344e-01, +9.946500332901397e-01, +9.895756853352172e-01, +9.838303127859196e-01, +9.769999155793757e-01, +9.689141159310996e-01,
+9.594038121639412e-01, +9.483086322505029e-01, +9.354860218216989e-01, +9.208101305030523e-01,
+9.041732260327581e-01, +8.854882249661838e-01, +8.646864947605046e-01, +8.417237467711145e-01,
+8.165875713256009e-01, +7.892986353718001e-01, +7.599171886893816e-01, +7.285474515411827e-01,
+6.953282935906302e-01, +6.604334017809461e-01, +6.240661431421666e-01, +5.864461424698465e-01,
+5.478160663871147e-01, +5.084499758302218e-01, +4.686361426418982e-01, +4.286789889246253e-01,
+3.889032719013045e-01, +3.496431418636314e-01, +3.112360816586544e-01, +2.740128472224535e-01,
+2.382847225401666e-01, +2.043379825955252e-01, +1.724305860483632e-01, +1.427939789949265e-01,
+1.156385879569741e-01, +9.115821766571995e-02, +6.952749039054593e-02, +5.088975408628225e-02,
+3.533430192568954e-02, +2.286680405144430e-02, +1.338005016725895e-02, +6.640506529168652e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

31. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von $\pm 1\%$: +5.087227626168386e-04, +9.959086585790517e-04, +1.682208006328800e-03, +2.609697259047744e-03, +3.819056787237678e-03, +5.349319592933909e-03, +7.243906383895192e-03, +9.540832613229890e-03, +1.227637642543709e-02, +1.548950238899404e-02, +1.921659800166160e-02, +2.349369619441617e-02, +2.835199581667961e-02, +3.382719081038548e-02, +3.994939538719628e-02, +4.674775238543380e-02, +5.424831667522354e-02, +6.247770776443612e-02, +7.145835917501348e-02, +8.120777668775610e-02, +9.174400412319896e-02, +1.030764959637497e-01, +1.152171887125930e-01, +1.281665713944242e-01, +1.419264381068653e-01, +1.564942331034909e-01, +1.718593189799504e-01, +1.880134254543744e-01, +2.049363422022628e-01, +2.226123055761096e-01, +2.410151242797736e-01, +2.601166575816199e-01, +2.798871008989962e-01, +3.002880135563586e-01, +3.212814164616093e-01, +3.428208463088390e-01, +3.648596557863134e-01, +3.873472997948746e-01, +4.102294951869188e-01, +4.334494534591082e-01, +4.569497078592333e-01, +4.806696403251166e-01, +5.045473815014847e-01, +5.285192958868393e-01, +5.525196099932443e-01, +5.764872452085427e-01, +6.003522489375573e-01, +6.240509872809882e-01, +6.475182586093196e-01, +6.706896380227332e-01, +6.935029068990036e-01, +7.158927516396895e-01, +7.378044458510402e-01, +7.591787241845952e-01, +7.799586608897265e-01, +8.000925313431716e-01, +8.195318652294690e-01, +8.382288957404715e-01, +8.561409184410547e-01, +8.732316951214179e-01, +8.894702022170831e-01, +9.048272294524792e-01, +9.192736375782965e-01, +9.327940405054362e-01, +9.453685031730190e-01, +9.569883933538136e-01, +9.676486424195593e-01, +9.773507430600533e-01, +9.861027831072527e-01, +9.939122412655677e-01, +1.000800872826561e+00, +1.006787811971719e+00, +1.011901269172423e+00, +1.016171590112097e+00, +1.019636414864842e+00, +1.022336613864005e+00, +1.024315247630982e+00, +1.025621299895396e+00, +1.026303439275662e+00, +1.026415431432931e+00, +1.026007933174836e+00, +1.025137435167917e+00, +1.023858366571912e+00, +1.022226936424625e+00, +1.020300550334848e+00, +1.018135705524407e+00, +1.015792146756340e+00, +1.013325966774524e+00, +1.010794822557756e+00, +1.008265131568879e+00, +1.006046874304407e+00, +1.003406509762925e+00, +1.000977398831985e+00, +9.987704535700208e-01, +9.967831265986109e-01, +9.950118905889862e-01, +9.934523971504882e-01, +9.920995520917141e-01, +9.909475998606236e-01, +9.899902426925508e-01, +9.892206942816891e-01, +9.886318043013834e-01, +9.882160904669929e-01, +9.879658322200813e-01, +9.878730767519871e-01, +9.879296932443894e-01, +9.881273531631907e-01, +9.884575535474619e-01, +9.889115869213529e-01, +9.894805541465801e-01, +9.901553455166457e-01, +9.909266562913843e-01, +9.917849916000535e-01, +9.927206838643636e-01, +9.937239208721489e-01, +9.947847580943504e-01, +9.958931493776203e-01, +9.970389567617592e-01, +9.982119669301160e-01, +9.994020338838508e-01, +1.000598323893564e+00, +1.001791235858836e+00, +1.002969837054169e+00, +1.004123786397111e+00, +1.005242583245485e+00, +1.006315717067918e+00, +1.007332693127034e+00, +1.008283053756130e+00, +1.009156423082384e+00, +1.009942535308151e+00, +1.010631281038659e+00, +1.011212744622770e+00, +1.011677230257499e+00, +1.012015300253356e+00, +1.012217779097186e+00, +1.012275790821109e+00, +1.012180753005270e+00, +1.011924425888915e+00, +1.011498917644724e+00, +1.010896765282633e+00, +1.010110965619444e+00, +1.009135094671655e+00, +1.007963362035220e+00, +1.006590756505588e+00, +1.005013115379014e+00, +1.003227255072391e+00, +1.001231060075500e+00, +9.990235555436858e-01, +9.966050551498514e-01, +9.939894706113089e-01, +9.904539200261149e-01, +9.868284225039941e-01, +9.827716736909488e-01, +9.782206672373213e-01, +9.731250287581631e-01, +9.674323528812744e-01, +9.610947043524248e-01, +9.540636479502398e-01, +9.462952991190324e-01, +9.377489107516087e-01, +9.283864275822276e-01, +9.181762606422500e-01, +9.070861558801854e-01, +8.950916858157935e-01, +8.821696237804294e-01, +8.683025287048570e-01, +8.534769362643825e-01, +8.376852006833730e-01, +8.209275259764013e-01, +8.032090930429980e-01, +7.845450482523652e-01, +7.649554851899686e-01, +7.444735201251689e-01, +7.231348066419057e-01, +7.009860555207412e-01, +6.780787033699450e-01, +6.544686506489734e-01, +6.302212149502727e-01, +6.053970453856138e-01, +5.800715766089168e-01, +5.543129276657669e-01, +5.282077505750727e-01, +5.018369724442092e-01, +4.752902962082383e-01, +4.486552956056652e-01, +4.220281118338883e-01, +3.955057965950340e-01, +3.691875990296320e-01, +3.431732847389720e-01, +3.175633015043183e-01, +2.924566408966782e-01, +2.679463783886042e-01, +2.441231331518492e-01, +2.210718537110466e-01, +1.988719153219592e-01, +1.775967625327044e-01, +1.573148583944310e-01, +1.380903364946733e-01, +1.199837497591550e-01, +1.030525757797769e-01, +8.735085011789188e-02, +7.292811584897502e-02, +5.982732244758056e-02, +4.808178837444506e-02, +3.771135297837851e-02, +2.871831923385135e-02, +2.108352028641225e-02, +1.476289412849005e-02, +9.683884928956495e-03, +5.642168789286858e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00

**32.** Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von ±1%: +4.595886345493055e-04, +7.919323614002698e-04, +1.227927169310031e-03, +1.783653266717233e-03, +2.479549413444207e-03, +3.329799454594261e-03, +4.353535478916468e-03, +5.564965156664018e-03, +6.986108359341676e-03, +8.629882322202329e-03, +1.051343406844975e-02, +1.265082642578719e-02, +1.506090447446532e-02, +1.775591229287213e-02, +2.075475983187825e-02, +2.406813715401559e-02, +2.771207863541604e-02, +3.169933248543932e-02, +3.604609640533871e-02, +4.076128638095439e-02, +4.586038120884381e-02, +5.135136676471998e-02, +5.724780220726930e-02, +6.355854744461048e-02, +7.029450733434550e-02, +7.745987198268531e-02, +8.506635369887924e-02, +9.311641620512773e-02, +1.016162955027316e-01, +1.105690806271684e-01, +1.199789286645804e-01, +1.298417294090302e-01, +1.401623800497866e-01, +1.509371564593891e-01, +1.621632295622287e-01, +1.738354123649302e-01, +1.859520359191026e-01, +1.985008828937603e-01, +2.114778554475382e-01, +2.248732557074316e-01, +2.386763947872762e-01, +2.528729453658238e-01, +2.674547009618951e-01, +2.824031465430401e-01, +2.977050145264297e-01, +3.133419120661713e-01, +3.292976696294886e-01, +3.455490160824131e-01, +3.620795045342974e-01, +3.788648665671841e-01, +3.958851576591690e-01, +4.131143794748322e-01, +4.305308301005456e-01, +4.481076715576617e-01, +4.658227790464821e-01, +4.836466393241829e-01, +5.015564851667653e-01, +5.195228071176610e-01, +5.375197039843709e-01, +5.555183841040963e-01, +5.734957812557457e-01, +5.914186654649489e-01, +6.092622887527459e-01, +6.269981160888640e-01, +6.446002007776794e-01, +6.620384583071039e-01, +6.792906550106088e-01, +6.963256426589250e-01, +7.131194393772130e-01, +7.296469905863920e-01, +7.458864594794676e-01, +7.618094719403713e-01, +7.773958448163656e-01, +7.926208751337592e-01, +8.074666387233143e-01, +8.219101564897180e-01, +8.359343163788637e-01, +8.495180470826319e-01, +8.626485837105826e-01, +8.753083234662220e-01, +8.874884715160425e-01, +8.991737724042251e-01, +9.103527429187326e-01, +9.210144133066616e-01, +9.311556192776946e-01, +9.407644740241826e-01, +9.498382236872068e-01, +9.583732599601223e-01, +9.663690412284377e-01, +9.738235617865406e-01, +9.807442506043361e-01, +9.871297972052695e-01, +9.929872268444632e-01, +9.983241398929388e-01, +1.003150760219063e+00, +1.007473713377193e+00, +1.011309151636166e+00, +1.014666681083198e+00, +1.017563337333301e+00, +1.020014681326785e+00, +1.022039872150903e+00, +1.023654257342442e+00, +1.024881624147540e+00, +1.025739288978437e+00, +1.026250709375593e+00, +1.026436666375082e+00, +1.026320857404224e+00, +1.025922917798664e+00, +1.025269979527211e+00, +1.024382188798244e+00, +1.023284940887058e+00, +1.022000829220643e+00, +1.020555973231408e+00, +1.018971390778550e+00, +1.017275179369116e+00, +1.015489129111694e+00, +1.013639356938881e+00, +1.011747750709711e+00, +1.009840844244693e+00, +1.007939764480188e+00, +1.006407400915498e+00, +1.004374825095777e+00, +1.002469814737132e+00, +1.000689073754539e+00, +9.990346001249977e-01, +9.975024904153303e-01, +9.960941547576162e-01, +9.948051243621099e-01, +9.936362728142866e-01, +9.925826537087717e-01, +9.916447007525191e-01, +9.908170758245324e-01, +9.900998445795673e-01, +9.894873685512386e-01, +9.889794323427195e-01, +9.885701787626714e-01, +9.882591911282058e-01, +9.880404423341358e-01, +9.879133688360181e-01, +9.878718098237022e-01, +9.879150762106034e-01, +9.880368938846610e-01, +9.882364564839506e-01, +9.885073687439192e-01,
+9.888487088987707e-01, +9.892539488627546e-01, +9.897220412447528e-01, +9.902463287269285e-01,
+9.908256340476208e-01, +9.914531811725067e-01, +9.921276814881759e-01, +9.928422499725458e-01,
+9.935955098307742e-01, +9.943804814776256e-01, +9.951957244449919e-01, +9.960341878404958e-01,
+9.968943831870675e-01, +9.977692009836100e-01, +9.986571134591464e-01, +9.995509738170480e-01,
+1.000449227898040e+00, +1.001344692310058e+00, +1.002235786606954e+00, +1.003115291715261e+00,
+1.003981602446902e+00, +1.004827468041713e+00, +1.005651275972376e+00, +1.006445772052972e+00,
+1.007209352772459e+00, +1.007934783656087e+00, +1.008620496650569e+00, +1.009259314290145e+00,
+1.009849742422788e+00, +1.010384692193296e+00, +1.010862783160582e+00, +1.011277044709547e+00,
+1.011626247430694e+00, +1.011903571699736e+00, +1.012107954864219e+00, +1.012232755709885e+00,
+1.012277089047072e+00, +1.012234505114778e+00, +1.012104319978655e+00, +1.011880293122688e+00,
+1.011561972516341e+00, +1.011143373963981e+00, +1.010624321020038e+00, +1.009999148545101e+00,
+1.009268031808824e+00, +1.008425698479647e+00, +1.007472774447058e+00, +1.006404483571931e+00,
+1.005222003295591e+00, +1.003921160689206e+00, +1.002503762756151e+00, +1.000966332772540e+00,
+9.993114007411373e-01, +9.975362702189898e-01, +9.956442306333592e-01, +9.936333924912825e-01,
+9.908677480361242e-01, +9.882326326262749e-01, +9.853620567056602e-01, +9.822305093671991e-01,
+9.788185853162172e-01, +9.751026333215268e-01, +9.710631852370086e-01, +9.666759668947944e-01,
+9.619242192293307e-01, +9.567841986369235e-01, +9.512394303101863e-01, +9.452700238623795e-01,
+9.388615698236068e-01, +9.319946435581106e-01, +9.246592033932568e-01, +9.168383396399868e-01,
+9.085218034087421e-01, +8.996967011299613e-01, +8.903562054918268e-01, +8.804877931535187e-01,
+8.700884209228057e-01, +8.591492134848259e-01, +8.476686394755906e-01, +8.356428970797861e-01,
+8.230753889817990e-01, +8.099649296155544e-01, +7.963204506324437e-01, +7.821460539775005e-01,
+7.674541821769616e-01, +7.522563457568547e-01, +7.365702052057368e-01, +7.204090552899627e-01,
+7.037975107157410e-01, +6.867542812151157e-01, +6.693041888771051e-01, +6.514710959179395e-01,
+6.332854832820911e-01, +6.147685389896460e-01, +5.959553778639692e-01, +5.768737955463938e-01,
+5.575534287167304e-01, +5.380320138068979e-01, +5.183454027643563e-01, +4.985259415650634e-01,
+4.786156067459849e-01, +4.586473038370941e-01, +4.386643656872842e-01, +4.187046888325280e-01,
+3.988123056192917e-01, +3.790262923635886e-01, +3.593914828698096e-01, +3.399474132903109e-01,
+3.207392420889753e-01, +3.018061113177048e-01, +2.831905952786929e-01, +2.649288369241889e-01,
+2.470608550624402e-01, +2.296201119084317e-01, +2.126433716126151e-01, +1.961601816145380e-01,
+1.802035203864437e-01, +1.647996883470626e-01, +1.499787548077656e-01, +1.357643522991611e-01,
+1.221842534547464e-01, +1.092601994264172e-01, +9.701788451015501e-02, +8.547680283183663e-02,
+7.465976378295235e-02, +6.458254322751883e-02, +5.526281189874138e-02, +4.670976978373095e-02,
+3.893244425578719e-02, +3.192976013776996e-02, +2.569810636390756e-02, +2.022259265088492e-02,
+1.548317776486452e-02, +1.144924909653903e-02, +8.076482660383199e-03, +5.300044080947794e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

33. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von $\pm 1\%$: +4.090106504820579e-04, +6.143388180964179e-04, +8.571759876954877e-04, +1.147015057857495e-03, +1.489582832987000e-03, +1.889770382231583e-03, +2.353000800169909e-03, +2.884104959764029e-03, +3.488213786635855e-03, +4.170040431489613e-03, +4.934298832466617e-03, +5.787076505403503e-03, +6.733811743137561e-03, +7.779130464154915e-03, +8.927044958757816e-03, +1.018202888968871e-02, +1.154910606525086e-02, +1.303349217699797e-02, +1.463951288465963e-02, +1.637155619860352e-02, +1.823455383898077e-02, +2.023309488998589e-02, +2.237116158648752e-02, +2.465237348403478e-02, +2.708101935270475e-02, +2.966159685753317e-02, +3.239884850877327e-02, +3.529601774976465e-02, +3.835663329277230e-02, +4.158447932459513e-02, +4.498322421745353e-02, +4.855610986150206e-02, +5.230596475016741e-02, +5.623624576084146e-02, +6.035055738891727e-02, +6.465186317477950e-02, +6.914195749790462e-02, +7.382288203064732e-02, +7.869709331995660e-02, +8.376761638427657e-02, +8.903563687211118e-02, +9.450199243028472e-02, +1.001680193006426e-01, +1.060356225286319e-01,
+1.121060220821844e-01, +1.183788547045326e-01, +1.248534855777947e-01, +1.315302847610869e-01,
+1.384103079528939e-01, +1.454931890869180e-01, +1.527772946853750e-01, +1.602608842337125e-01,
+1.679435556337752e-01, +1.758245615079801e-01, +1.839020119821303e-01, +1.921728622634411e-01,
+2.006344295681524e-01, +2.092853879977170e-01, +2.181238261985594e-01, +2.271462264407930e-01,
+2.363479205237173e-01, +2.457259744642953e-01, +2.552771551741124e-01, +2.649981094228982e-01,
+2.748839432649996e-01, +2.849296444030153e-01, +2.951306505827265e-01, +3.054824712370942e-01,
+3.159799638238941e-01, +3.266169794538543e-01, +3.373873799614014e-01, +3.482855915638277e-01,
+3.593057693987583e-01, +3.704415932452488e-01, +3.816862385160692e-01, +3.930329782788047e-01,
+4.044749630814483e-01, +4.160051103939122e-01, +4.276159595085598e-01, +4.393004362003260e-01,
+4.510516333434032e-01, +4.628616046119925e-01, +4.747225454237193e-01, +4.866266705542529e-01,
+4.985664508456704e-01, +5.105341492548225e-01, +5.225212793188740e-01, +5.345190505841265e-01,
+5.465201916422433e-01, +5.585172769552711e-01, +5.705021536899105e-01, +5.824658100332457e-01,
+5.943991720381216e-01, +6.062948176207270e-01, +6.181452662624718e-01, +6.299422016714543e-01,
+6.416768736044914e-01, +6.533411462740817e-01, +6.649277540000037e-01, +6.764292700223311e-01,
+6.878367295965062e-01, +6.991421467689277e-01, +7.103379606632721e-01, +7.214176027060971e-01,
+7.323746102405828e-01, +7.432008025932804e-01, +7.538887973483771e-01, +7.644315495717613e-01,
+7.748223151443820e-01, +7.850546571907628e-01, +7.951223518167163e-01, +8.050193862201107e-01,
+8.147397447696774e-01, +8.242774413707643e-01, +8.336267114335371e-01, +8.427819363777799e-01,
+8.517386186427548e-01, +8.604920874939698e-01, +8.690376742017057e-01, +8.773720451249032e-01,
+8.854927938913381e-01, +8.933935477349644e-01, +9.010727088526728e-01, +9.085249398881980e-01,
+9.157483563218768e-01, +9.227413839712016e-01, +9.295017469413066e-01, +9.360270196617569e-01,
+9.423143052164881e-01, +9.483629792665091e-01, +9.541731142261065e-01, +9.597438382130120e-01,
+9.650738394220176e-01, +9.701635474343885e-01, +9.750143364412617e-01, +9.796277191617885e-01,
+9.840036439809510e-01, +9.881426772731259e-01, +9.920470446911211e-01, +9.957199420334376e-01,
+9.991640812275709e-01, +1.002381307710643e+00, +1.005374268639838e+00, +1.008146718214831e+00,
+1.010703123647275e+00, +1.013046655758663e+00, +1.015181271161417e+00, +1.017111643578857e+00,
+1.018843380560658e+00, +1.020381713994816e+00, +1.021731101971518e+00, +1.022896948293643e+00,
+1.023885455671576e+00, +1.024702974608899e+00, +1.025355286710874e+00, +1.025848243050604e+00,
+1.026188366261215e+00, +1.026382881625701e+00, +1.026438102255574e+00, +1.026360125820994e+00,
+1.026155530733488e+00, +1.025831456886557e+00, +1.025395432284244e+00, +1.024853974580724e+00,
+1.024213482124578e+00, +1.023481184943025e+00, +1.022664602721801e+00, +1.021770903480975e+00,
+1.020806917660529e+00, +1.019779396547454e+00, +1.018695995335235e+00, +1.017564416918053e+00,
+1.016391686789653e+00, +1.015184918030332e+00, +1.013950835315021e+00, +1.012697033320358e+00,
+1.011430749860716e+00, +1.010158346781076e+00, +1.008885191761748e+00, +1.007592718305943e+00,
+1.006805603478092e+00, +1.005378742804807e+00, +1.004049051787112e+00, +1.002778356298787e+00,
+1.001563778373068e+00, +1.000404915291105e+00, +9.993014844615166e-01, +9.982531564931281e-01,
+9.972595460676951e-01, +9.963202131848272e-01, +9.954346644968789e-01, +9.946023543844607e-01,
+9.938226881029791e-01, +9.930950268060122e-01, +9.924186919309267e-01, +9.917929657090736e-01,
+9.912170911359961e-01, +9.906902760441473e-01, +9.902117003786811e-01, +9.897805192546193e-01,
+9.893958602389157e-01, +9.890568243690241e-01, +9.887624937408933e-01, +9.885119364350415e-01,
+9.883042028597552e-01, +9.881383235740961e-01, +9.880133161159576e-01, +9.879281898513085e-01,
+9.878819413827574e-01, +9.878735508484809e-01, +9.879019873841568e-01, +9.879662130250981e-01,
+9.880651778500144e-01, +9.881978162133899e-01, +9.883630508181326e-01, +9.885597957603544e-01,
+9.887869526128024e-01, +9.890434070785485e-01, +9.893280319166613e-01, +9.896396899060125e-01,
+9.899772316163624e-01, +9.903394929409673e-01, +9.907252968668226e-01, +9.911334564321237e-01,
+9.915627747807666e-01, +9.920120436855326e-01, +9.924800441092685e-01, +9.929655482846576e-01,
+9.934673212537685e-01, +9.939841207305906e-01, +9.945146969322154e-01, +9.950577931942117e-01,
+9.956121471675398e-01, +9.961764915534302e-01, +9.967495543671935e-01, +9.973300590248015e-01,
+9.979167245036720e-01, +9.985082643417953e-01, +9.991033633647473e-01, +9.997003478609010e-01,
+1.000299741957418e+00, +1.000897441314013e+00, +1.001493964257960e+00, +1.002087624593489e+00,
+1.002677088643863e+00, +1.003261045483858e+00, +1.003838183774652e+00, +1.004407190937699e+00,
+1.004966753528881e+00, +1.005515557572658e+00, +1.006052289109999e+00, +1.006575635258931e+00,
+1.007084285781611e+00, +1.007576934100958e+00, +1.008052277555815e+00, +1.008509017718116e+00,
+1.008945862447015e+00, +1.009361528531177e+00, +1.009754742820913e+00, +1.010124241309341e+00,
+1.010468769795370e+00, +1.010787087537248e+00, +1.011077969726137e+00, +1.011340205650538e+00,
+1.011572597114216e+00, +1.011773962181442e+00, +1.011943138906979e+00, +1.012078982659783e+00,
+1.012180362866919e+00, +1.012246166897464e+00, +1.012275305013586e+00, +1.012266707295288e+00, +1.012219319453278e+00, +1.012132107622966e+00, +1.012004064757857e+00, +1.011834207632025e+00, +1.011621572933544e+00, +1.011365223023975e+00, +1.011064253702468e+00, +1.010717792733157e+00, +1.010324996851905e+00, +1.009885057526159e+00, +1.009397209381147e+00, +1.008860731864438e+00, +1.008274947065247e+00, +1.007639223374887e+00, +1.006952983357691e+00, +1.006215708265639e+00, +1.005426938305289e+00, +1.004586273379809e+00, +1.003693377657581e+00, +1.002747984657666e+00, +1.001749900308864e+00, +1.000699003803502e+00, +9.995952485989262e-01, +9.984386632116344e-01, +9.972293415774932e-01, +9.959672769174924e-01, +9.946500332901397e-01, +9.932403996813470e-01, +9.912511516117244e-01, +9.895756853352172e-01, +9.877713214760662e-01, +9.858577479051078e-01, +9.838303127859196e-01, +9.816822625580078e-01, +9.794074486605805e-01, +9.769999155793757e-01, +9.744528356359687e-01, +9.717597500340699e-01, +9.689141159310996e-01, +9.659101618500662e-01, +9.627421831412876e-01, +9.594038121639412e-01, +9.558889978382734e-01, +9.521922434090249e-01, +9.483086322505029e-01, +9.442332539187503e-01, +9.399607238929982e-01, +9.354860218216989e-01, +9.308052967663477e-01, +9.259146970284931e-01, +9.208101305030523e-01, +9.154873597416558e-01, +9.099426066529104e-01, +9.041732260327581e-01, +8.981763729936715e-01, +8.919490241013392e-01, +8.854882249661838e-01, +8.787919436722827e-01, +8.718585835568161e-01, +8.646864947605047e-01, +8.572738135700366e-01, +8.496195859658071e-01, +8.417237467711145e-01, +8.335862715770727e-01, +8.252074428838668e-01, +8.165875713256009e-01, +8.077280370477699e-01, +7.986311592191131e-01, +7.892986353718001e-01, +7.797330954210866e-01, +7.699379531983687e-01, +7.599171886893816e-01, +7.496758423734833e-01, +7.392176841476761e-01, +7.285474515411827e-01, +7.176714478163359e-01, +7.065962311464494e-01, +6.953282935906302e-01, +6.838739059112046e-01, +6.722395305539791e-01, +6.604334017809461e-01, +6.484643596235256e-01, +6.363395004626368e-01, +6.240661431421666e-01, +6.116530334821534e-01, +5.991098644638286e-01, +5.864461424698465e-01, +5.736694851703749e-01, +5.607881029948401e-01, +5.478160663871271e-01, +5.347619788897301e-01, +5.216365147692703e-01, +5.084499758302256e-01, +4.952135086430446e-01, +4.819387562519412e-01, +4.686361426419003e-01, +4.553170769563941e-01, +4.419939954454178e-01, +4.286789889246267e-01, +4.153837786572842e-01, +4.021211063103491e-01, +3.889032719013054e-01, +3.757425439137077e-01, +3.626515183776310e-01, +3.496431418636322e-01, +3.367290822653354e-01, +3.239228075238623e-01, +3.112360816586549e-01, +2.986807941537710e-01, +2.862694673284843e-01, +2.740128472224539e-01, +2.619228330079575e-01, +2.500098438708934e-01, +2.382847225401669e-01, +2.267578490199104e-01, +2.154390996938547e-01, +2.043379825955254e-01, +1.934636765792024e-01, +1.828250319214460e-01, +1.724305860483634e-01, +1.622886348529314e-01, +1.524071880359812e-01, +1.427939789949266e-01, +1.334565845242183e-01, +1.244023922999665e-01, +1.156385879569742e-01, +1.071721547807196e-01, +9.900985872728905e-02, +9.115821766572002e-02, +8.362344855837105e-02, +7.641140367416376e-02, +6.952749039054598e-02, +6.297656454790079e-02, +5.676284244020858e-02, +5.088975408628229e-02, +4.535983304624439e-02, +4.017457306236873e-02, +3.533430192568957e-02, +3.083806062123772e-02, +2.668355420358626e-02, +2.286680405144430e-02, +1.938236337675363e-02, +1.622312720409645e-02, +1.338005016725895e-02, +1.084218595595746e-02, +8.596753980908744e-03, +6.640506529168652e-03, +5.172703110468352e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00

34. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von $\pm 1\%$: +3.821992968116373e-04, +5.337292962876158e-04, +7.010318350640769e-04, +8.910357994632938e-04, +1.107726421735994e-03, +1.354305556720234e-03, +1.632968062524617e-03, +1.944392065549996e-03, +2.291251920978034e-03, +2.676357471188558e-03, +3.102160324883627e-03, +3.569302917352426e-03, +4.080147004222224e-03,   +4.637409387087253e-03,   +5.243697651112320e-03,   +5.900394401532485e-03,
+6.609908124535202e-03,   +7.375089966000295e-03,   +8.197610411215884e-03,   +9.078195201482999e-03,
+1.001888876231112e-02,   +1.102272421949215e-02,   +1.209201783148431e-02,   +1.322773320467288e-02,
+1.443170227861997e-02,   +1.570673344965518e-02,   +1.705481769961258e-02,   +1.847711280171765e-02,
+1.997546609433320e-02,   +2.155255505248360e-02,   +2.320993080187466e-02,   +2.494800748775296e-02,
+2.676898100961685e-02,   +2.867550388692567e-02,   +3.066976865911597e-02,   +3.275241094528637e-02,
+3.492474656851959e-02,   +3.718932683936013e-02,   +3.954748420753697e-02,   +4.200013716597904e-02,
+4.454866443036003e-02,   +4.719547798640356e-02,   +4.994161943600844e-02,   +5.278755308483513e-02,
+5.573471840677637e-02,   +5.878567633813699e-02,   +6.194176167634657e-02,   +6.520301218579141e-02,
+6.857009288032996e-02,   +7.204473108503576e-02,   +7.562815385274406e-02,   +7.932038618419741e-02,
+8.312281225703541e-02,   +8.703660776989294e-02,   +9.106251913073614e-02,   +9.519952848393795e-02,
+9.944854075501454e-02,   +1.038112769854394e-01,   +1.082885168352610e-01,   +1.128793060660070e-01,
+1.175834766182813e-01,   +1.224015773361210e-01,   +1.273338065186211e-01,   +1.323793987456491e-01,
+1.375389612590117e-01,   +1.428131506368226e-01,   +1.482015069292479e-01,   +1.537021065265166e-01,
+1.593143180431248e-01,   +1.650390046254505e-01,   +1.708759773387028e-01,   +1.768238156096776e-01,
+1.828814674176937e-01,   +1.890485613515956e-01,   +1.953239376543276e-01,   +2.017057139908492e-01,
+2.081934824879514e-01,   +2.147873518665726e-01,   +2.214861559453727e-01,   +2.282869811837961e-01,
+2.351877543503455e-01,   +2.421885165595468e-01,   +2.492877833071390e-01,   +2.564833108170047e-01,
+2.637736050921935e-01,   +2.711575593740559e-01,   +2.786328295517739e-01,   +2.861965981859126e-01,
+2.938469307293017e-01,   +3.015829286213736e-01,   +3.094025219039914e-01,   +3.173023310827802e-01,
+3.252796888787393e-01,   +3.333329987313211e-01,   +3.414597523183469e-01,   +3.496568059948401e-01,
+3.579215403419018e-01,   +3.662523018706806e-01,   +3.746461722601965e-01,   +3.830993933108193e-01,
+3.916090507233831e-01,   +4.001732470818926e-01,   +4.087890872349265e-01,   +4.174524354370054e-01,
+4.261601728427663e-01,   +4.349103424521226e-01,   +4.436999665749521e-01,   +4.525250566690236e-01,
+4.613821390145840e-01,   +4.702690556535691e-01,   +4.791821288489955e-01,   +4.881175853001019e-01,
+4.970720120437943e-01,   +5.060433154467696e-01,   +5.150277508616620e-01,   +5.240208300352607e-01,
+5.330187387865785e-01,   +5.420196856030712e-01,   +5.510201184135838e-01,   +5.600165101133929e-01,
+5.690047761849362e-01,   +5.779823098049300e-01,   +5.869449780892492e-01,   +5.958886225335936e-01,
+6.048099568741729e-01,   +6.137068698395559e-01,   +6.225761217125432e-01,   +6.314128591964590e-01,
+6.402134772829997e-01,   +6.489754897736506e-01,   +6.576959114103553e-01,   +6.663704870510495e-01,
+6.749962795110787e-01,   +6.835701860237697e-01,   +6.920890588499607e-01,   +7.005478826218464e-01,
+7.089444008783498e-01,   +7.172765338080037e-01,   +7.255415386736762e-01,   +7.337354140683028e-01,
+7.418546544582220e-01,   +7.498972580176051e-01,   +7.578599326607545e-01,   +7.657390988438872e-01,
+7.735317637507610e-01,   +7.812362247368221e-01,   +7.888499478365373e-01,   +7.963691608881653e-01,
+8.037915368847273e-01,   +8.111154166403033e-01,   +8.183384161720055e-01,   +8.254567363530231e-01,
+8.324682688387346e-01,   +8.393715063470556e-01,   +8.461645428100565e-01,   +8.528442051510350e-01,
+8.594088830061699e-01,   +8.658575289268042e-01,   +8.721883611259660e-01,   +8.783992457627015e-01,
+8.844895714000796e-01,   +8.904559910537616e-01,   +8.962997945931150e-01,   +9.020168984242400e-01,
+9.076056139480890e-01,   +9.130664170641334e-01,   +9.183979162084582e-01,   +9.235994678560167e-01,
+9.286692422352107e-01,   +9.336076279434850e-01,   +9.384129048732400e-01,   +9.430836933050435e-01,
+9.476197145049868e-01,   +9.520221006942875e-01,   +9.562904165806793e-01,   +9.604235518327253e-01,
+9.644205605875820e-01,   +9.682827690312492e-01,   +9.720106722663890e-01,   +9.756042291745447e-01,
+9.790638238608151e-01,   +9.823902028722666e-01,   +9.855837812929384e-01,   +9.886436665180195e-01,
+9.915714515450228e-01,   +9.943692859110803e-01,   +9.970385179500313e-01,   +9.995787919228785e-01,
+1.001991256344717e+00,   +1.004277707367492e+00,   +1.006439806897506e+00,   +1.008478224880801e+00,
+1.010395057449511e+00,   +1.012192316076366e+00,   +1.013871638199171e+00,   +1.015433826923486e+00,
+1.016881083871244e+00,   +1.018216717878600e+00,   +1.019442870837515e+00,   +1.020560853084751e+00,
+1.021572361827679e+00,   +1.022480682703848e+00,   +1.023288268237906e+00,   +1.023997104737320e+00,
+1.024609726504572e+00,   +1.025129444345768e+00,   +1.025558707847599e+00,   +1.025899187425550e+00,
+1.026153736073730e+00,   +1.026326400217514e+00,   +1.026419755159132e+00,   +1.026435753513555e+00,
+1.026376745497183e+00,   +1.026246413164014e+00,   +1.026047802601159e+00,   +1.025783163725466e+00,
+1.025455636062312e+00,   +1.025068712226252e+00,   +1.024625269765159e+00,   +1.024127035189888e+00,
+1.023577282345944e+00,   +1.022979990313458e+00,   +1.022338337695996e+00,   +1.021654354624439e+00,
+1.020930844259280e+00,   +1.020171385028845e+00,   +1.019379551852598e+00,   +1.018557222865231e+00,
+1.017708008483692e+00,   +1.016835630605444e+00,   +1.015943000562828e+00,   +1.015032211107897e+00,
+1.014106040189062e+00,   +1.013168810057302e+00,   +1.012223533569952e+00,   +1.011272160610958e+00,
+1.010317161995333e+00,   +1.009363573682324e+00,   +1.008418957730006e+00,   +1.007443035427814e+00,
+1.006980582693088e+00,   +1.005880191360173e+00,   +1.004870660907557e+00,   +1.003887307826199e+00, +1.002933862630671e+00, +1.002012456628431e+00, +1.001122929266782e+00, +1.000264200804259e+00,
+9.994361518334981e-01, +9.986396025239043e-01, +9.978744044020248e-01, +9.971394126637049e-01,
+9.964344374346332e-01, +9.957602381261346e-01, +9.951165794460692e-01, +9.945022689695088e-01,
+9.939170480434331e-01, +9.933616056210112e-01, +9.928356667510468e-01, +9.923379640068731e-01,
+9.918682011153984e-01, +9.914270132578689e-01, +9.910140670228395e-01, +9.906280727376265e-01,
+9.902686735168059e-01, +9.899364775767996e-01, +9.896311064950427e-01, +9.893512408407925e-01,
+9.890965020344753e-01, +9.888674481881904e-01, +9.886636955343167e-01, +9.884838850803949e-01,
+9.883276240055705e-01, +9.881954463086439e-01, +9.880869460773882e-01, +9.880007538329854e-01,
+9.879364462155417e-01, +9.878945575956836e-01, +9.878746493979034e-01, +9.878753499522159e-01,
+9.878962158879177e-01, +9.879377642109470e-01, +9.879995488718708e-01, +9.880801746803725e-01,
+9.881791937541983e-01, +9.882970966792446e-01, +9.884334355024147e-01, +9.885867883714737e-01,
+9.887566952073135e-01, +9.889436358294569e-01, +9.891471384894399e-01, +9.893657732439902e-01,
+9.895990550550585e-01, +9.898474573387898e-01, +9.901104832002432e-01, +9.903866926546286e-01,
+9.906755858999687e-01, +9.909776136318341e-01, +9.912922749689899e-01, +9.916181054602099e-01,
+9.919545975686356e-01, +9.923021872317422e-01, +9.926603609120486e-01, +9.930276450366935e-01,
+9.934035125599263e-01, +9.937883997783191e-01, +9.941817792665538e-01, +9.945821646067609e-01,
+9.949890245456261e-01, +9.954027843196593e-01, +9.958229139376651e-01, +9.962479146150113e-01,
+9.966772475112751e-01, +9.971113385049125e-01, +9.975496462958124e-01, +9.979906675056988e-01,
+9.984338592613343e-01, +9.988796523949821e-01, +9.993275431378141e-01, +9.997753812452573e-01,
+1.000224669219663e+00, +1.000672909364706e+00, +1.001121604191588e+00, +1.001568597382930e+00,
+1.002013378040221e+00, +1.002456372686098e+00, +1.002897030034197e+00, +1.003333829980590e+00,
+1.003766216551067e+00, +1.004194607298016e+00, +1.004618447680436e+00, +1.005036211788027e+00,
+1.005447348229275e+00, +1.005852270535212e+00, +1.006250425365265e+00, +1.006640290029854e+00,
+1.007021310029137e+00, +1.007393907701933e+00, +1.007757528772291e+00, +1.008110655922241e+00,
+1.008452744553207e+00, +1.008784215564761e+00, +1.009104530964226e+00, +1.009412177137242e+00,
+1.009706620067364e+00, +1.009988296223056e+00, +1.010256673981368e+00, +1.010510261597171e+00,
+1.010748529051234e+00, +1.010971938438940e+00, +1.011179974034890e+00, +1.011371154144579e+00,
+1.011544976893053e+00, +1.011701915457469e+00, +1.011841483052088e+00, +1.011962209203063e+00,
+1.012063621581602e+00, +1.012146211141323e+00, +1.012209509774826e+00, +1.012252080651208e+00,
+1.012273461473019e+00, +1.012274179329824e+00, +1.012253779830287e+00, +1.012210860152664e+00,
+1.012144976732521e+00, +1.012056685871527e+00, +1.011945565763788e+00, +1.011810229432951e+00,
+1.011650280893217e+00, +1.011466289818154e+00, +1.011257880752579e+00, +1.011023694799342e+00,
+1.010763375755366e+00, +1.010477533938561e+00, +1.010165826445586e+00, +1.009826955798404e+00,
+1.009460591235290e+00, +1.009067412134881e+00, +1.008647118373303e+00, +1.008198467170796e+00,
+1.007721196075366e+00, +1.007216031301935e+00, +1.006682757156533e+00, +1.006120180721864e+00,
+1.005528123164754e+00, +1.004907385380564e+00, +1.004257813991292e+00, +1.003578321293819e+00,
+1.002868793771428e+00, +1.002130123378852e+00, +1.001362250678481e+00, +1.000564166270619e+00,
+9.997358689793686e-01, +9.988783302889642e-01, +9.979915852192069e-01, +9.970747197397686e-01,
+9.961277448216609e-01, +9.951529474418550e-01, +9.941541831614942e-01, +9.930678080460911e-01,
+9.914646039976289e-01, +9.902352352689523e-01, +9.889131869680553e-01, +9.875383274623817e-01,
+9.861028679251979e-01, +9.846041087188396e-01, +9.830394337851476e-01, +9.814052410296346e-01,
+9.796987091039431e-01, +9.779184677896273e-01, +9.760616740194450e-01, +9.741245958128935e-01,
+9.721043782586516e-01, +9.699991325531057e-01, +9.678068213341133e-01, +9.655234943873925e-01,
+9.631470850364502e-01, +9.606758082762421e-01, +9.581070287387355e-01, +9.554372064329766e-01,
+9.526641870716750e-01, +9.497868942084339e-01, +9.468034353946915e-01, +9.437103240778303e-01,
+9.405054771915659e-01, +9.371877218082764e-01, +9.337553821450042e-01, +9.302057763482381e-01,
+9.265373496318979e-01, +9.227494594741956e-01, +9.188401295674290e-01, +9.148067377557749e-01,
+9.106476709258303e-01, +9.063629680720371e-01, +9.019514987490371e-01, +8.974108808873397e-01,
+8.927398817643528e-01, +8.879382683346716e-01, +8.830050715882986e-01, +8.779385355821995e-01,
+8.727379973888942e-01, +8.674038889082810e-01, +8.619352566808824e-01, +8.563305243162549e-01,
+8.505893287555129e-01, +8.447127297770400e-01, +8.387007637143140e-01, +8.325523768291013e-01,
+8.262677444285360e-01, +8.198478927378535e-01, +8.132935411236417e-01, +8.066040997239516e-01,
+7.997809105802602e-01, +7.928255537687610e-01, +7.857391245481645e-01, +7.785212684545030e-01,
+7.711744403395434e-01, +7.637008160854790e-01, +7.561026668755407e-01, +7.483805701761127e-01,
+7.405363749469933e-01, +7.325730245135402e-01, +7.244930008228270e-01, +7.162980305440977e-01,
+7.079910089690906e-01, +6.995757887359807e-01, +6.910546259244099e-01, +6.824295471401947e-01,
+6.737031265887281e-01, +6.648801659515325e-01, +6.559637902883004e-01, +6.469573547411541e-01,
+6.378629377753962e-01, +6.286855280775698e-01, +6.194273058858271e-01, +6.100922809170846e-01, +6.006842631336996e-01, +5.912087588215279e-01, +5.816678990293079e-01, +5.720650011081139e-01,
+5.624031153715043e-01, +5.526906296747590e-01, +5.429296335729603e-01, +5.331253296256703e-01,
+5.232805923025862e-01, +5.134010079652535e-01, +5.034916218473681e-01, +4.935565059779637e-01,
+4.835996679580253e-01, +4.736270399539165e-01, +4.636428606356920e-01, +4.536519115376573e-01,
+4.436589520558524e-01, +4.336702110092904e-01, +4.236905139305571e-01, +4.137241358370227e-01,
+4.037764981593496e-01, +3.938536636599411e-01, +3.839608678121244e-01, +3.741023650337649e-01,
+3.642834353302138e-01, +3.545105744959439e-01, +3.447887254766501e-01, +3.351225758795436e-01,
+3.255174149216463e-01, +3.159783340225490e-01, +3.065118829951374e-01, +2.971215837581699e-01,
+2.878124834032541e-01, +2.785898831431837e-01, +2.694592444601873e-01, +2.604240268886858e-01,
+2.514886909115454e-01, +2.426587307354934e-01, +2.339385917103926e-01, +2.253316454409216e-01,
+2.168420127437019e-01, +2.084745870335012e-01, +2.002332724591125e-01, +1.921209969418307e-01,
+1.841414579810840e-01, +1.762991374092108e-01, +1.685975427109672e-01, +1.610392647455030e-01,
+1.536276387455411e-01, +1.463667950599712e-01, +1.392599476606262e-01, +1.323093893293405e-01,
+1.255182155111708e-01, +1.188903216873086e-01, +1.124286726877977e-01, +1.061353122093495e-01,
+1.000130754353283e-01, +9.406556557413207e-02, +8.829543394466104e-02, +8.270438757849530e-02,
+7.729486433686703e-02, +7.206998099643687e-02, +6.703183558090599e-02, +6.218153160076208e-02,
+5.752079270262547e-02, +5.305187265543024e-02, +4.877591488398974e-02, +4.469299727922282e-02,
+4.080367800167831e-02, +3.710883802024244e-02, +3.360819061792393e-02, +3.030027537135876e-02,
+2.718416076819826e-02, +2.425872983336823e-02, +2.152170070657780e-02, +1.896992105664512e-02,
+1.660053693426304e-02, +1.441002712765955e-02, +1.239334766429038e-02, +1.054549096241532e-02,
+8.862485552559351e-03, +7.329085750247888e-03, +5.896299968476346e-03, +4.914753459788711e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

35. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von $\pm 1\%$: +3.538498803770035e-04, +4.595886345493055e-04, +5.595519647227489e-04, +6.718404887323839e-04, +7.919323614002698e-04, +9.254835101516548e-04, +1.069418485858920e-03, +1.227927169310031e-03, +1.398277791978983e-03, +1.584491535026729e-03, +1.783653266717233e-03, +1.999873692180148e-03, +2.230687004705732e-03, +2.479549413444207e-03, +2.744274680521470e-03, +3.028517203082985e-03, +3.329799454594260e-03, +3.651493788541270e-03, +3.991659081158673e-03, +4.353535478916468e-03, +4.734803493964832e-03, +5.139354888882466e-03, +5.564965156664017e-03, +6.015065135312130e-03, +6.487669532207667e-03, +6.986108359341676e-03, +7.507986430774601e-03, +8.056692381103912e-03, +8.629882322202329e-03, +9.230898632007642e-03, +9.857619542786990e-03, +1.051343406844975e-02, +1.119617236058772e-02, +1.190938692951881e-02, +1.265082642578719e-02, +1.342375201935177e-02, +1.422598597626579e-02, +1.506090447446532e-02, +1.592611511144210e-02, +1.682519266177794e-02, +1.775591229287213e-02, +1.872166356881472e-02, +1.972014746423546e-02, +2.075475983187825e-02, +2.182299926812682e-02, +2.292828566629717e-02, +2.406813715401559e-02, +2.524583465017564e-02, +2.645943128544517e-02, +2.771207863541604e-02, +2.900157039370381e-02, +3.033143686044867e-02, +3.169933248543932e-02, +3.310834554878132e-02, +3.455615910816914e-02, +3.604609640533871e-02, +3.757564512209753e-02, +3.914808612511974e-02, +4.076128638095439e-02, +4.241834056741758e-02,
+4.411695502674887e-02, +4.586038120884381e-02, +4.764607953574337e-02, +4.947719681327219e-02,
+5.135136676471998e-02, +5.327183246133368e-02, +5.523619574402436e-02, +5.724780220726930e-02,
+5.930419525733627e-02, +6.140861916695377e-02, +6.355854744461048e-02, +6.575698564821578e-02,
+6.800132774040281e-02, +7.029450733434550e-02, +7.263424529955659e-02, +7.502357150869594e-02,
+7.745987198268531e-02, +7.994662730757418e-02, +8.248121208201259e-02, +8.506635369887924e-02,
+8.769965758141890e-02, +9.038399472465716e-02, +9.311641620512773e-02, +9.590005739506280e-02,
+9.873233942897164e-02, +1.016162955027316e-01, +1.045493607096311e-01, +1.075345731608719e-01,
+1.105690806271684e-01, +1.136556251529813e-01, +1.167913767515824e-01, +1.199789286645804e-01,
+1.232155302990620e-01, +1.265040684552515e-01, +1.298417294090302e-01, +1.332315661550852e-01,
+1.366709127560524e-01, +1.401623800497866e-01, +1.437031543339276e-01, +1.472957921567060e-01,
+1.509371564593891e-01, +1.546298983040232e-01, +1.583709932021852e-01, +1.621632295622287e-01,
+1.660038996795837e-01, +1.698955982096184e-01, +1.738354123649302e-01, +1.778260015982545e-01,
+1.818640789446629e-01, +1.859520359191026e-01, +1.900868218108653e-01, +1.942708017706291e-01,
+1.985008828937603e-01, +2.027798260494142e-01, +2.071046414574582e-01, +2.114778554475382e-01,
+2.158964254821512e-01, +2.203627179356420e-01, +2.248732557074316e-01, +2.294303802774835e-01,
+2.340304946493155e-01, +2.386763947872762e-01, +2.433647632018021e-01, +2.480980084587409e-01,
+2.528729453658238e-01, +2.576919809402799e-01, +2.625518239753811e-01, +2.674547009618951e-01,
+2.723969864831702e-01, +2.773809014717047e-01, +2.824031465430401e-01, +2.874658392896952e-01,
+2.925657097525320e-01, +2.977050145264297e-01, +3.028802866809923e-01, +3.080937708388026e-01,
+3.133419120661713e-01, +3.186267330325243e-01, +3.239446274586855e-01, +3.292976696294886e-01,
+3.346822587497995e-01, +3.401004975161905e-01, +3.455490160824131e-01, +3.510297825670005e-01,
+3.565392648316303e-01, +3.620795045342974e-01, +3.676468198385683e-01, +3.732431609065464e-01,
+3.788648665671841e-01, +3.845139947587731e-01, +3.901867575702975e-01, +3.958851576591690e-01,
+4.016055596175310e-01, +4.073498814407726e-01, +4.131143794748322e-01, +4.189008731078437e-01,
+4.247056871121635e-01, +4.305308301005456e-01, +4.363724468005679e-01, +4.422326205247767e-01,
+4.481076715576617e-01, +4.539992478845187e-01, +4.599036262256764e-01, +4.658227790464821e-01,
+4.717526717360889e-01, +4.776951277513855e-01, +4.836466393241829e-01, +4.896089037533445e-01,
+4.955781691142885e-01, +5.015564851667653e-01, +5.075397341675292e-01, +5.135297950483941e-01,
+5.195228071176610e-01, +5.255203889406241e-01, +5.315186369941947e-01, +5.375197039843709e-01,
+5.435197203416460e-01, +5.495204053284317e-01, +5.555183841040963e-01, +5.615153912741460e-01,
+5.675072245552497e-01, +5.734957812557457e-01, +5.794770758870604e-01, +5.854526176188222e-01,
+5.914186654649489e-01, +5.973773282523112e-01, +6.033245382283379e-01, +6.092622887527459e-01,
+6.151869491458284e-01, +6.211002315674210e-01, +6.269981160888640e-01, +6.328823912226461e-01,
+6.387491304847892e-01, +6.446002007776794e-01, +6.504316924413531e-01, +6.562457600042717e-01,
+6.620384583071039e-01, +6.678117513456276e-01, +6.735619658538692e-01, +6.792906550106088e-01,
+6.849937204005565e-01, +6.906734235708962e-01, +6.963256426589250e-01, +7.019517880051427e-01,
+7.075491663942173e-01, +7.131194393772130e-01, +7.186585770351414e-01, +7.241690155466505e-01,
+7.296469905863920e-01, +7.350940240070911e-01, +7.405065029424016e-01, +7.458864594794676e-01,
+7.512298245353598e-01, +7.565387020584289e-01, +7.618094719403713e-01, +7.670441227603888e-01,
+7.722388831102434e-01, +7.773958448163656e-01, +7.825113901786742e-01, +7.875876391562497e-01,
+7.926208751337592e-01, +7.976131629355570e-01, +8.025610715609228e-01, +8.074666387233143e-01,
+8.123261531893655e-01, +8.171419338595847e-01, +8.219101564897180e-01, +8.266329452432137e-01,
+8.313069432125857e-01, +8.359343163788637e-01, +8.405111871797961e-01, +8.450403211238631e-01,
+8.495180470826319e-01, +8.539464819668052e-01, +8.583225792686004e-01, +8.626485837105826e-01,
+8.669206756254478e-01, +8.711415846800790e-01, +8.753083234662220e-01, +8.794234355078734e-01,
+8.834826778788665e-01, +8.874884715160425e-01, +8.914384774585629e-01, +8.953346996622868e-01,
+8.991737724042251e-01, +9.029574074899029e-01, +9.066828541224163e-01, +9.103527429187326e-01,
+9.139638342168577e-01, +9.175184878836662e-01, +9.210144133066616e-01, +9.244537632557187e-01,
+9.278332160151861e-01, +9.311556192776946e-01, +9.344176283021008e-01, +9.376215186479845e-01,
+9.407644740241826e-01, +9.438492190005341e-01, +9.468728540294310e-01, +9.498382236872068e-01,
+9.527426712456687e-01, +9.555885737210712e-01, +9.583732599601223e-01, +9.610993609218629e-01,
+9.637636503225360e-01, +9.663690412284377e-01, +9.689132689491541e-01, +9.713988678700001e-01,
+9.738235617865406e-01, +9.761902903500818e-01, +9.784963361871022e-01, +9.807442506043361e-01,
+9.829315352320943e-01, +9.850609512273165e-01, +9.871297972052695e-01, +9.891408802831312e-01,
+9.910923625580078e-01, +9.929872268444632e-01, +9.948228821209419e-01, +9.966027455323081e-01,
+9.983241398929388e-01, +9.999898494568836e-01, +1.001597808884145e+00, +1.003150760219063e+00,
+1.004646500318265e+00, +1.006088248744700e+00, +1.007473713377193e+00, +1.008806248810530e+00, +1.010083776257753e+00, +1.011309151636166e+00, +1.012480196393275e+00, +1.013600067830152e+00,
+1.014666681083198e+00, +1.015683082766535e+00, +1.016647533889674e+00, +1.017563337333301e+00,
+1.018428468753963e+00, +1.019246216134229e+00, +1.020014681326785e+00, +1.020736921761459e+00,
+1.021410866072808e+00, +1.022039872150903e+00, +1.022622059577585e+00, +1.023160749941404e+00,
+1.023654257342442e+00, +1.024105973101631e+00, +1.024514004504684e+00, +1.024881624147540e+00,
+1.025207065371760e+00, +1.025493542877243e+00, +1.025739288978437e+00, +1.025947636692103e+00,
+1.026116939910040e+00, +1.026250709375593e+00, +1.026347260729698e+00, +1.026409787584788e+00,
+1.026436666375082e+00, +1.026431212267978e+00, +1.026391488022762e+00, +1.026320857404224e+00,
+1.026217843764236e+00, +1.026085730009027e+00, +1.025922917798664e+00, +1.025733019213987e+00,
+1.025514292433933e+00, +1.025269979527211e+00, +1.024998528084259e+00, +1.024703212795365e+00,
+1.024382188798244e+00, +1.024039051426278e+00, +1.023672163232710e+00, +1.023284940887058e+00,
+1.022875917162315e+00, +1.022448453314994e+00, +1.022000829220643e+00, +1.021536599728231e+00,
+1.021053875701803e+00, +1.020555973231408e+00, +1.020041434676317e+00, +1.019513866799503e+00,
+1.018971390778550e+00, +1.018417599116053e+00, +1.017851066303933e+00, +1.017275179369116e+00,
+1.016688023745155e+00, +1.016093242802983e+00, +1.015489129111694e+00, +1.014878956980025e+00,
+1.014261064091392e+00, +1.013639356938881e+00, +1.013011559583153e+00, +1.012381741769641e+00,
+1.011747750709711e+00, +1.011113332101179e+00, +1.010476167900044e+00, +1.009840844244693e+00,
+1.009204021773819e+00, +1.008572045006596e+00, +1.007939764480188e+00, +1.007331850775798e+00,
+1.007112182697132e+00, +1.006407400915498e+00, +1.005715372118122e+00, +1.005038785533845e+00,
+1.004374825095777e+00, +1.003726291405694e+00, +1.003090358040736e+00, +1.002469814737132e+00,
+1.001861838147367e+00, +1.001269198108365e+00, +1.000689073754539e+00, +1.000124220942757e+00,
+9.995718119556711e-01, +9.990346001249977e-01, +9.985097406611592e-01, +9.979999918405413e-01,
+9.975024904153303e-01, +9.970199948970832e-01, +9.965496346682551e-01, +9.960941547576162e-01,
+9.956506910018569e-01, +9.952219662800089e-01, +9.948051243621099e-01, +9.944028741276870e-01,
+9.940123528373235e-01, +9.936362728142866e-01, +9.932717517525477e-01, +9.929215102130406e-01,
+9.925826537087717e-01, +9.922578948824415e-01, +9.919443474477135e-01, +9.916447007525191e-01,
+9.913560821234982e-01, +9.910811659133294e-01, +9.908170758245324e-01, +9.905664908867821e-01,
+9.903265196045258e-01, +9.900998445795673e-01, +9.898835741176714e-01, +9.896803735870122e-01,
+9.894873685512386e-01, +9.893072032520545e-01, +9.891370094863634e-01, +9.889794323427195e-01,
+9.888315884970242e-01, +9.886961351016699e-01, +9.885701787626714e-01, +9.884563716748773e-01,
+9.883518302777313e-01, +9.882591911282058e-01, +9.881755763473004e-01, +9.881036242002076e-01,
+9.880404423341358e-01, +9.879886826752381e-01, +9.879454420034824e-01, +9.879133688360181e-01,
+9.878895706371619e-01, +9.878766784594818e-01, +9.878718098237022e-01, +9.878775927630988e-01,
+9.878911354436840e-01, +9.879150762106034e-01, +9.879465136687265e-01, +9.879880844262307e-01,
+9.880368938846610e-01, +9.880955662657537e-01, +9.881612121412342e-01, +9.882364564839506e-01,
+9.883183975703879e-01, +9.884096731867189e-01, +9.885073687439192e-01, +9.886141241716089e-01,
+9.887270275540468e-01, +9.888487088987707e-01, +9.889762614809646e-01, +9.891123127261381e-01,
+9.892539488627546e-01, +9.894038044982261e-01, +9.895589571176194e-01, +9.897220412447528e-01,
+9.898901380212467e-01, +9.900658706993652e-01, +9.902463287269285e-01, +9.904341281652976e-01,
+9.906263564100900e-01, +9.908256340476208e-01, +9.910290387632859e-01, +9.912391966549245e-01,
+9.914531811725067e-01, +9.916736156286597e-01, +9.918975763831412e-01, +9.921276814881759e-01,
+9.923610074433741e-01, +9.926001740490448e-01, +9.928422499725458e-01, +9.930898628710855e-01,
+9.933400717991352e-01, +9.935955098307742e-01, +9.938532319665272e-01, +9.941158706465729e-01,
+9.943804814776256e-01, +9.946496946937963e-01, +9.949205650500305e-01, +9.951957244449919e-01,
+9.954722223202400e-01, +9.957526959635303e-01, +9.960341878404958e-01, +9.963193400387707e-01,
+9.966051908036528e-01, +9.968943831870675e-01, +9.971839552785087e-01, +9.974765480003592e-01,
+9.977692009836100e-01, +9.980645531056329e-01, +9.983596442023971e-01, +9.986571134591464e-01,
+9.989539982645417e-01, +9.992529406343204e-01, +9.995509738170480e-01, +9.998507434423984e-01,
+1.000149278838447e+00, +1.000449227898040e+00, +1.000747617880619e+00, +1.001047097000738e+00,
+1.001344692310058e+00, +1.001643050985813e+00, +1.001939200113204e+00, +1.002235786606954e+00,
+1.002529835919150e+00, +1.002823997223967e+00, +1.003115291715261e+00, +1.003406373183356e+00,
+1.003694257266035e+00, +1.003981602446902e+00, +1.004265420574493e+00, +1.004548371695603e+00,
+1.004827468041713e+00, +1.005105367331224e+00, +1.005379085053508e+00, +1.005651275972376e+00,
+1.005918957263603e+00, +1.006184784468940e+00, +1.006445772052972e+00, +1.006704580223772e+00,
+1.006958219378997e+00, +1.007209352772459e+00, +1.007454991591196e+00, +1.007697795962687e+00,
+1.007934783656087e+00, +1.008168609148541e+00, +1.008396295152072e+00, +1.008620496650569e+00,
+1.008838233369544e+00, +1.009052167883909e+00, +1.009259314290145e+00, +1.009462340194419e+00,
+1.009658261526612e+00, +1.009849742422788e+00, +1.010033806431099e+00, +1.010213115163429e+00, +1.010384692193296e+00, +1.010551208502819e+00, +1.010709677336593e+00, +1.010862783160582e+00,
+1.011007533860188e+00, +1.011146615898068e+00, +1.011277044709547e+00, +1.011401501255448e+00,
+1.011517007040469e+00, +1.011626247430694e+00, +1.011726237740989e+00, +1.011819675175864e+00,
+1.011903571699736e+00, +1.011980623923816e+00, +1.012047856645320e+00, +1.012107954864219e+00,
+1.012157955913755e+00, +1.012200545438956e+00, +1.012232755709885e+00, +1.012257286376882e+00,
+1.012271163275396e+00, +1.012277089047072e+00, +1.012272100156695e+00, +1.012258889781605e+00,
+1.012234505114778e+00, +1.012201643414713e+00, +1.012157343029718e+00, +1.012104319978655e+00,
+1.012039603446877e+00, +1.011965913685509e+00, +1.011880293122688e+00, +1.011785448628142e+00,
+1.011678439894684e+00, +1.011561972516341e+00, +1.011433103151726e+00, +1.011294553726738e+00,
+1.011143373963981e+00, +1.010982291036989e+00, +1.010808368434796e+00, +1.010624321020038e+00,
+1.010427231547075e+00, +1.010219813871895e+00, +1.009999148545101e+00, +1.009767970668237e+00,
+1.009523347700539e+00, +1.009268031808824e+00, +1.008999095526602e+00, +1.008719286674458e+00,
+1.008425698479647e+00, +1.008121073095495e+00, +1.007802512993334e+00, +1.007472774447058e+00,
+1.007128952000889e+00, +1.006773824218378e+00, +1.006404483571931e+00, +1.006023715042962e+00,
+1.005628630023041e+00, +1.005222003295591e+00, +1.004800972930542e+00, +1.004368308119956e+00,
+1.003921160689206e+00, +1.003462311571559e+00, +1.002988912076156e+00, +1.002503762756151e+00,
+1.002004016208227e+00, +1.001492483526354e+00, +1.000966332772540e+00, +1.000428371467870e+00,
+9.998757944861690e-01, +9.993114007411373e-01, +9.987324107135600e-01, +9.981416218519609e-01,
+9.975362702189898e-01, +9.969191628491259e-01, +9.962875422935514e-01, +9.956442306333592e-01,
+9.949864765356604e-01, +9.943171077259315e-01, +9.936333924912825e-01, +9.929380432296178e-01,
+9.917160727742302e-01, +9.908677480361242e-01, +9.900143412821714e-01, +9.891360093161795e-01,
+9.882326326262749e-01, +9.873035624860487e-01, +9.863463238550498e-01, +9.853620567056602e-01,
+9.843478797730104e-01, +9.833051513036913e-01, +9.822305093671991e-01, +9.811260856582836e-01,
+9.799880424709783e-01, +9.788185853162172e-01, +9.776142582502931e-01, +9.763768210132104e-01,
+9.751026333215269e-01, +9.737939228124395e-01, +9.724467635816038e-01, +9.710631852370086e-01,
+9.696397017403771e-01, +9.681786285613160e-01, +9.666759668947944e-01, +9.651341172191925e-01,
+9.635494800783196e-01, +9.619242192293307e-01, +9.602543350544703e-01, +9.585422731136767e-01,
+9.567841986369237e-01, +9.549824213719248e-01, +9.531333627775944e-01, +9.512394303101863e-01,
+9.492969005669868e-01, +9.473083933922714e-01, +9.452700238623795e-01, +9.431841637391052e-01,
+9.410472222265884e-01, +9.388615698236068e-01, +9.366234817959531e-01, +9.343357002925867e-01,
+9.319946435581106e-01, +9.296028267859759e-01, +9.271568160852692e-01, +9.246592033932568e-01,
+9.221062052092852e-01, +9.195004240356797e-01, +9.168383396399868e-01, +9.141224927600506e-01,
+9.113493760046765e-01, +9.085218034087421e-01, +9.056363890361683e-01, +9.026958474136628e-01,
+8.996967011299613e-01, +8.966416378522284e-01, +8.935272411148886e-01, +8.903562054918268e-01,
+8.871250499337346e-01, +8.838366845222299e-01, +8.804877931535187e-01, +8.770812736055238e-01,
+8.736138336697008e-01, +8.700884209228057e-01, +8.665016401172241e-01, +8.628563075036018e-01,
+8.591492134848260e-01, +8.553833146397594e-01, +8.515554376987873e-01, +8.476686394755906e-01,
+8.437199738159921e-01, +8.397124082723917e-01, +8.356428970797861e-01, +8.315145717373513e-01,
+8.273244136947282e-01, +8.230753889817990e-01, +8.187646556254478e-01, +8.143955052591809e-01,
+8.099649296155544e-01, +8.054763240960976e-01, +8.009271179588155e-01, +7.963204506324437e-01,
+7.916533519679438e-01, +7.869294361891859e-01, +7.821460539775005e-01, +7.773057646170487e-01,
+7.724075191626083e-01, +7.674541821769616e-01, +7.624428319731227e-01, +7.573778165664506e-01,
+7.522563457568547e-01, +7.470817821499429e-01, +7.418518832940608e-01, +7.365702052057368e-01,
+7.312341927030358e-01, +7.258478768003871e-01, +7.204090552899627e-01, +7.149213766200488e-01,
+7.093829112276890e-01, +7.037975107157410e-01, +6.981626982337203e-01, +6.924822574950567e-01,
+6.867542812151157e-01, +6.809822459535158e-01, +6.751641683711578e-01, +6.693041888771051e-01,
+6.634003182158815e-01, +6.574563319397519e-01, +6.514710959179395e-01, +6.454477530601381e-01,
+6.393842401194645e-01, +6.332854832820911e-01, +6.271477285210396e-01, +6.209759156556838e-01,
+6.147685389896460e-01, +6.085293803703800e-01, +6.022569117623975e-01, +5.959553778639692e-01,
+5.896228984554688e-01, +5.832624455793536e-01, +5.768737955463938e-01, +5.704590282594502e-01,
+5.640165022515612e-01, +5.575534287167304e-01, +5.510670389249083e-01, +5.445598110309068e-01,
+5.380320138069060e-01, +5.314874283056712e-01, +5.249238143777145e-01, +5.183454027643609e-01,
+5.117512861349316e-01, +5.051454054672581e-01, +4.985259415650634e-01, +4.918987341485414e-01,
+4.852602812611293e-01, +4.786156067459849e-01, +4.719635569001799e-01, +4.653076657434153e-01,
+4.586473038370960e-01, +4.519865712901121e-01, +4.453241417472980e-01, +4.386643556872857e-01,
+4.320060235689271e-01, +4.253531733174983e-01, +4.187046888325280e-01, +4.120648989967404e-01,
+4.054326930449553e-01, +3.988123056192917e-01, +3.922024876218684e-01, +3.856076044898875e-01,
+3.790262923635895e-01, +3.724631634624147e-01, +3.659167460890094e-01, +3.593914828698104e-01, +3.528864871672291e-01, +3.464055764938486e-01, +3.399474132903109e-01, +3.335176660030293e-01,
+3.271139090168518e-01, +3.207392420889753e-01, +3.143954622458083e-01, +3.080847161569418e-01,
+3.018061113177053e-01, +2.955645092490569e-01, +2.893580088818822e-01, +2.831905952786933e-01,
+2.770614560088827e-01, +2.709746519672053e-01, +2.649288369241889e-01, +2.589278854215034e-01,
+2.529705733428521e-01, +2.470608550624402e-01, +2.411974884962474e-01, +2.353843453791010e-01,
+2.296201119084320e-01, +2.239085920293915e-01, +2.182484277107470e-01, +2.126433716126154e-01,
+2.070920316105701e-01, +2.015981078416022e-01, +1.961601816145380e-01, +1.907818965593135e-01,
+1.854618027014993e-01, +1.802035203864437e-01, +1.750055292053725e-01, +1.698714235427536e-01,
+1.647996883470628e-01, +1.597938610874129e-01, +1.548523838673932e-01, +1.499787548077658e-01,
+1.451714001185458e-01, +1.404337947365906e-01, +1.357643522991611e-01, +1.311665152711531e-01,
+1.266386794659985e-01, +1.221842534547464e-01, +1.178016171445482e-01, +1.134941442588690e-01,
+1.092601994264173e-01, +1.051031184506442e-01, +1.010212496137049e-01, +9.701788451015510e-02,
+9.309135143613317e-02, +8.924488982596421e-02, +8.547680283183663e-02, +8.179026694646475e-02,
+7.818355556343952e-02, +7.465976378295235e-02, +7.121713409722980e-02, +6.785866241065035e-02,
+6.458254322751886e-02, +6.139166651287085e-02, +5.828416955031769e-02, +5.526281189874142e-02,
+5.232565602156542e-02, +4.947530987083008e-02, +4.670976978373095e-02, +4.403144898585497e-02,
+4.143827607712719e-02, +3.893244425578721e-02, +3.651180398163022e-02, +3.417832280408597e-02,
+3.192976013776998e-02, +2.976774716313782e-02, +2.769013516567754e-02, +2.569810636390758e-02,
+2.378944369289586e-02, +2.196497565730828e-02, +2.022259265088492e-02, +1.856252261671509e-02,
+1.698293043956028e-02, +1.548317776486453e-02, +1.406194554493180e-02, +1.271739094059619e-02,
+1.144924909653903e-02, +1.025352572459910e-02, +9.132141467690603e-03, +8.076482660383204e-03,
+7.093814769976364e-03, +6.160346335510290e-03, +5.300044080947794e-03, +4.327696566833525e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00

36. Die Vorrichtung gemäß einem der Ansprüche 6-21, bei der die Synthesefensterungsfunktion (290) eine Abfolge, in Vorwärts- oder Rückwärtsreihenfolge, aufweist, die durch die folgenden Werte gebildet ist, mit einer Toleranz von ±1%: +3.235700349233950e-04, +3.821992968116373e-04, +4.346763076430269e-04, +4.841399974556557e-04, +5.337292962876158e-04, +5.864735900759105e-04, +6.428827504324996e-04, +7.010318350640768e-04, +7.608344672311270e-04, +8.240821499679188e-04, +8.910357994632938e-04, +9.604008359868557e-04, +1.032187650884365e-03, +1.107726421735994e-03, +1.187132578842487e-03, +1.269300730654068e-03,
+1.354305556720234e-03, +1.443403284874795e-03, +1.536663296357133e-03, +1.632968062524617e-03,
+1.732380147404573e-03, +1.836145247521724e-03, +1.944392065549996e-03, +2.056125836181849e-03,
+2.171386021601719e-03, +2.291251920978034e-03, +2.415808383814314e-03, +2.544144440874477e-03,
+2.676357471188558e-03, +2.813551797283812e-03, +2.955803613263345e-03, +3.102160324883627e-03,
+3.252661103181324e-03, +3.408341073385241e-03, +3.569302917352426e-03, +3.734713566068289e-03,
+3.904659832213214e-03, +4.080147004222224e-03, +4.261212283030981e-03, +4.446929867132814e-03,
+4.637409387087253e-03, +4.833793064672789e-03, +5.036194779738963e-03, +5.243697651112321e-03,
+5.456361749675164e-03, +5.675227929566806e-03, +5.900394401532485e-03, +6.131014766883671e-03,
+6.367178191275927e-03, +6.609908124535202e-03, +6.859253963058476e-03, +7.114293307371561e-03,
+7.375089966000295e-03, +7.642693523739984e-03, +7.917171839712018e-03, +8.197610411215884e-03,
+8.484065880416487e-03, +8.777567475206218e-03, +9.078195201482999e-03, +9.385078909241503e-03,
+9.698299554301988e-03, +1.001888876231112e-02, +1.034691797503113e-02, +1.068149963936024e-02,
+1.102272421949215e-02, +1.137165918496004e-02, +1.172838973544289e-02, +1.209201783148431e-02,
+1.246260014549782e-02, +1.284114967210881e-02, +1.322773320467288e-02, +1.362147156562462e-02,
+1.402244719763268e-02, +1.443170227861997e-02, +1.484928966105225e-02, +1.527427503031274e-02,
+1.570673344965518e-02, +1.614774906895406e-02, +1.659741217225623e-02, +1.705481769961258e-02,
+1.752003567982498e-02, +1.799411192217523e-02, +1.847711280171765e-02, +1.896812570518296e-02,
+1.946722405557199e-02, +1.997546609433320e-02, +2.049290306467406e-02, +2.101858036652682e-02,
+2.155255505248360e-02, +2.209589582354997e-02, +2.264866778978731e-02, +2.320993080187466e-02,
+2.377971919482778e-02, +2.435904568934701e-02, +2.494800748775296e-02, +2.554578281793083e-02,
+2.615244880416785e-02, +2.676898100961685e-02, +2.739542549965559e-02, +2.803090209537370e-02,
+2.867550388692567e-02, +2.933029464839461e-02, +2.999535245144327e-02, +3.066976865911597e-02,
+3.135358217583060e-02, +3.204778132642869e-02, +3.275241094528637e-02, +3.346657321987338e-02,
+3.419033915994245e-02, +3.492474656851959e-02, +3.566984393450434e-02, +3.642469098112518e-02,
+3.718932683936013e-02, +3.796477227376223e-02, +3.875111047720054e-02, +3.954748420753697e-02,
+4.035395199977597e-02, +4.117148855800665e-02, +4.200013716597904e-02, +4.283901138210502e-02,
+4.368817991890082e-02, +4.454866443036003e-02, +4.542050595471842e-02, +4.630276577789394e-02,
+4.719547798640356e-02, +4.809965043366945e-02, +4.901533344583754e-02, +4.994161943600844e-02,
+5.087856571149934e-02, +5.182719384692941e-02, +5.278755308483513e-02, +5.375872122678868e-02,
+5.474076083738614e-02, +5.573471840677637e-02, +5.674064972230924e-02, +5.775761981233486e-02,
+5.878567633813699e-02, +5.982584998609648e-02, +6.087818970335195e-02, +6.194176167634657e-02,
+6.301559162319866e-02, +6.410366584958441e-02, +6.520301218579141e-02, +6.631369927165530e-02,
+6.743573988811077e-02, +6.857009288032996e-02, +6.971680213521406e-02, +7.087499583595998e-02,
+7.204473108503576e-02, +7.322699135891000e-02, +7.442178588912410e-02, +7.562815385274406e-02,
+7.684615718122945e-02, +7.807687861830234e-02, +7.932038618419741e-02, +8.057572953286415e-02,
+8.184289534616669e-02, +8.312281225703541e-02, +8.441550376460240e-02, +8.572008755967025e-02,
+8.703660776989294e-02, +8.836603137189772e-02, +8.970833701278809e-02, +9.106251913073614e-02,
+9.242858978650852e-02, +9.380757856153675e-02, +9.519952848393795e-02, +9.660349396690321e-02,
+9.801949952722568e-02, +9.944854075501454e-02, +1.008906469288751e-01, +1.023448810132759e-01,
+1.038112769854394e-01, +1.052908387348570e-01, +1.067835785257166e-01, +1.082885168352610e-01,
+1.098056403352340e-01, +1.113359035023070e-01, +1.128793060660070e-01, +1.144348917022365e-01,
+1.160026418427939e-01, +1.175834766182813e-01, +1.191773817925584e-01, +1.207834098631640e-01,
+1.224015773361210e-01, +1.240328627276697e-01, +1.256772653276007e-01, +1.273338065186211e-01,
+1.290025000390856e-01, +1.306843522870102e-01, +1.323793987456491e-01, +1.340867011604515e-01,
+1.358062490065425e-01, +1.375389612590117e-01, +1.392848238717889e-01, +1.410428901194039e-01,
+1.428131506368226e-01, +1.445965317426731e-01, +1.463929885103623e-01, +1.482015069292479e-01,
+1.500220583792976e-01, +1.518555991923989e-01, +1.537021065265166e-01, +1.555605782414143e-01,
+1.574309942903742e-01, +1.593143180431248e-01, +1.612105639985474e-01, +1.631187954209520e-01,
+1.650390046254505e-01, +1.669721131327860e-01, +1.689180947901775e-01, +1.708759773387028e-01,
+1.728457537748600e-01, +1.748283801430888e-01, +1.768238156096776e-01, +1.788310228663131e-01,
+1.808499369342717e-01, +1.828814674176937e-01, +1.849255792714432e-01, +1.869812912624581e-01,
+1.890485613515956e-01, +1.911282864915418e-01, +1.932204127989935e-01, +1.953239376543276e-01,
+1.974388457221676e-01, +1.995661075971730e-01, +2.017057139908492e-01, +2.038566744769371e-01,
+2.060189557031752e-01, +2.081934824879514e-01, +2.103802237348733e-01, +2.125781921411190e-01,
+2.147873518665726e-01, +2.170086169288035e-01, +2.192419082234839e-01, +2.214861559453727e-01,
+2.237412958295601e-01, +2.260082674736221e-01, +2.282869811837961e-01, +2.305763207809758e-01,
+2.328762384864272e-01, +2.351877543503455e-01, +2.375108487943784e-01, +2.398444593573832e-01, +2.421885165595468e-01, +2.445439470704063e-01, +2.469107075411724e-01, +2.492877833071390e-01,
+2.516751260083683e-01, +2.540736535206898e-01, +2.564833108170047e-01, +2.589030699085996e-01,
+2.613328676927456e-01, +2.637736050921935e-01, +2.662251902764728e-01, +2.686865397612919e-01,
+2.711575593740559e-01, +2.736391458519503e-01, +2.761312410342679e-01, +2.786328295517739e-01,
+2.811438338004066e-01, +2.836651148767941e-01, +2.861965981859126e-01, +2.887372740841138e-01,
+2.912870864180725e-01, +2.938469307293017e-01, +2.964167262145285e-01, +2.989954170150198e-01,
+3.015829286213736e-01, +3.041801674023100e-01, +3.067870538332799e-01, +3.094025219039914e-01,
+3.120264728553777e-01, +3.146597759277349e-01, +3.173023310827802e-01, +3.199530692693200e-01,
+3.226118955458964e-01, +3.252796888787393e-01, +3.279563545740858e-01, +3.306408240998973e-01,
+3.333329987313211e-01, +3.360337508241129e-01, +3.387430081844867e-01, +3.414597523183469e-01,
+3.441838955445625e-01, +3.469162810132548e-01, +3.496568059948401e-01, +3.524044231246164e-01,
+3.551590444946287e-01, +3.579215403419018e-01, +3.606918060977176e-01, +3.634687629020059e-01,
+3.662523018706806e-01, +3.690432842592497e-01, +3.718416007949022e-01, +3.746461722601965e-01,
+3.774569030021080e-01, +3.802746797947738e-01, +3.830993933108193e-01, +3.859299384223780e-01,
+3.887661993522015e-01, +3.916090507233831e-01, +3.944583955021906e-01, +3.973131637447736e-01,
+4.001732470818926e-01, +4.030394989766596e-01, +4.059118059100888e-01, +4.087890872349265e-01,
+4.116712207743528e-01, +4.145590432995318e-01, +4.174524354370054e-01, +4.203503225145663e-01,
+4.232526082630496e-01, +4.261601728427663e-01, +4.290728957232506e-01, +4.319896569618181e-01,
+4.349103424521226e-01, +4.378358447638693e-01, +4.407660763679560e-01, +4.436999665749521e-01,
+4.466373809565015e-01, +4.495791232066263e-01, +4.525250566690236e-01, +4.554741060746665e-01,
+4.584261742417322e-01, +4.613821390145840e-01, +4.643418692214444e-01, +4.673042252463159e-01,
+4.702690556535691e-01, +4.732372004975696e-01, +4.762085675098781e-01, +4.791821288489955e-01,
+4.821577734075715e-01, +4.851363063006593e-01, +4.881175853001019e-01, +4.911005242880451e-01,
+4.940850327998220e-01, +4.970720120437943e-01, +5.000613277949747e-01, +5.030518116390311e-01,
+5.060433154467696e-01, +5.090367134250039e-01, +5.120318927612107e-01, +5.150277508616620e-01,
+5.180241439456884e-01, +5.210218879576217e-01, +5.240208300352607e-01, +5.270198510229556e-01,
+5.300188492910082e-01, +5.330187387865785e-01, +5.360194223342527e-01, +5.390197891039044e-01,
+5.420196856030712e-01, +5.450199204515231e-01, +5.480203984293612e-01, +5.510201184135838e-01,
+5.540189939344148e-01, +5.570178491640744e-01, +5.600165101133929e-01, +5.630138095716375e-01,
+5.660096045860781e-01, +5.690047761849362e-01, +5.719992058026786e-01, +5.749917722935854e-01,
+5.779823098049300e-01, +5.809716105476772e-01, +5.839595278786620e-01, +5.869449780892492e-01,
+5.899278766736546e-01, +5.929091339529038e-01, +5.958886225335936e-01, +5.988651785480291e-01,
+6.018386614784691e-01, +6.048099568741729e-01, +6.077789763021885e-01, +6.107446538724647e-01,
+6.137068698395559e-01, +6.166664505621099e-01, +6.196232440099102e-01, +6.225761217125432e-01,
+6.255249461230102e-01, +6.284705701386001e-01, +6.314128591964590e-01, +6.343506915084997e-01,
+6.372839411338272e-01, +6.402134772829997e-01, +6.431391659393545e-01, +6.460598714450869e-01,
+6.489754897736506e-01, +6.518869471124649e-01, +6.547941354100638e-01, +6.576959114103553e-01,
+6.605921398591732e-01, +6.634836963621389e-01, +6.663704870510495e-01, +6.692514453435826e-01,
+6.721264409903913e-01, +6.749962795110787e-01, +6.778607807385375e-01, +6.807187840914061e-01,
+6.835701860237697e-01, +6.864159372105746e-01, +6.892559431770480e-01, +6.920890588499607e-01,
+6.949150680560000e-01, +6.977346951975620e-01, +7.005478826218464e-01, +7.033537849891354e-01,
+7.061523680058837e-01, +7.089444008783498e-01, +7.117296915594161e-01, +7.145070977546192e-01,
+7.172765338080037e-01, +7.200389672139186e-01, +7.227943349906750e-01, +7.255415386736762e-01,
+7.282804177906205e-01, +7.310117549409422e-01, +7.337354140683028e-01, +7.364503418025881e-01,
+7.391564587113454e-01, +7.418546544582220e-01, +7.445447900371659e-01, +7.472257006958800e-01,
+7.498972580176051e-01, +7.525603713200814e-01, +7.552149563509314e-01, +7.578599326607545e-01,
+7.604951971158384e-01, +7.631216241889446e-01, +7.657390988438872e-01, +7.683465174378752e-01,
+7.709437746884765e-01, +7.735317637507610e-01, +7.761103909474643e-01, +7.786785753465276e-01,
+7.812362247368221e-01, +7.837842352787271e-01, +7.863225078411482e-01, +7.888499478365373e-01,
+7.913664452543058e-01, +7.938728763542381e-01, +7.963691608881653e-01, +7.988542608155023e-01,
+8.013280948233752e-01, +8.037915368847273e-01, +8.062444700164981e-01, +8.086857893766403e-01,
+8.111154166403033e-01, +8.135342978258457e-01, +8.159423410909078e-01, +8.183384161720055e-01,
+8.207224042595236e-01, +8.230952011363564e-01, +8.254567363530231e-01, +8.278059715784122e-01,
+8.301428451410482e-01, +8.324682688387346e-01, +8.347821132094333e-01, +8.370832131533167e-01,
+8.393715063470556e-01, +8.416480314488108e-01, +8.439127501937738e-01, +8.461645428100565e-01,
+8.484032850727410e-01, +8.506298550754564e-01, +8.528442051510350e-01, +8.550453592633493e-01,
+8.572332837070840e-01, +8.594088830061699e-01, +8.615720389795806e-01, +8.637216156780773e-01,
+8.658575289268042e-01, +8.679807503377460e-01, +8.700913260411943e-01, +8.721883611259660e-01, +8.742716585927360e-01, +8.763417616681772e-01, +8.783992457627015e-01, +8.804446862867205e-01,
+8.824720518946858e-01, +8.844895714000796e-01, +8.864924067856547e-01, +8.884810495155143e-01,
+8.904559910537616e-01, +8.924176927432972e-01, +8.943659231393618e-01, +8.962997945931150e-01,
+8.982192307568165e-01, +9.001249598283012e-01, +9.020168984242400e-01, +9.038941561917321e-01,
+9.057567533900666e-01, +9.076056139480890e-01, +9.094406951444953e-01, +9.112609887718295e-01,
+9.130664170641334e-01, +9.148578383916375e-01, +9.166352766163086e-01, +9.183979162084582e-01,
+9.201457654565685e-01, +9.218796522413809e-01, +9.235994678560167e-01, +9.253041759179184e-01,
+9.269937646114531e-01, +9.286692422352107e-01, +9.303305869999694e-01, +9.319767447096182e-01,
+9.336076279434850e-01, +9.352241212055423e-01, +9.368261950246144e-01, +9.384129048732400e-01,
+9.399842532824511e-01, +9.415411877758678e-01, +9.430836933050435e-01, +9.446107932775473e-01,
+9.461224797394725e-01, +9.476197145049868e-01, +9.491025238239363e-01, +9.505699947545118e-01,
+9.520221006942875e-01, +9.534597036603291e-01, +9.548827789205158e-01, +9.562904165806793e-01,
+9.576826318703395e-01, +9.590603607072891e-01, +9.604235518327253e-01, +9.617711703240024e-01,
+9.631031827400425e-01, +9.644205605875820e-01, +9.657233714331878e-01, +9.670107721424878e-01,
+9.682827690312492e-01, +9.695402205004198e-01, +9.707831348559515e-01, +9.720106722663890e-01,
+9.732228900099870e-01, +9.744207385215033e-01, +9.756042291745447e-01, +9.767724349112544e-01,
+9.779253363131216e-01, +9.790638238608151e-01, +9.801879015797271e-01, +9.812966868607661e-01,
+9.823902028722666e-01, +9.834693768739560e-01, +9.845342107123233e-01, +9.855837812929384e-01,
+9.866180804760872e-01, +9.876380187637696e-01, +9.886436665180195e-01, +9.896342515143703e-01,
+9.906098638997559e-01, +9.915714515450228e-01, +9.925190128422767e-01, +9.934516032286224e-01,
+9.943692859110803e-01, +9.952731289730088e-01, +9.961631909904601e-01, +9.970385179500313e-01,
+9.978990898252071e-01, +9.987458272559335e-01, +9.995787919228785e-01, +1.000397182360297e+00,
+1.001201041464802e+00, +1.001991256344717e+00, +1.002767847497049e+00, +1.003529972103569e+00,
+1.004277707367492e+00, +1.005012047094235e+00, +1.005733043131263e+00, +1.006439806897506e+00,
+1.007132401590545e+00, +1.007811842988376e+00, +1.008478224880801e+00, +1.009130715556477e+00,
+1.009769355086547e+00, +1.010395057449511e+00, +1.011007859994881e+00, +1.011606924689628e+00,
+1.012192316076366e+00, +1.012765000430642e+00, +1.013325049263210e+00, +1.013871638199171e+00,
+1.014404818816957e+00, +1.014925520781073e+00, +1.015433826923486e+00, +1.015928972967257e+00,
+1.016411066364942e+00, +1.016881083871244e+00, +1.017339099302786e+00, +1.017784285061100e+00,
+1.018216717878600e+00, +1.018637379379835e+00, +1.019046362683200e+00, +1.019442870837515e+00,
+1.019826975825003e+00, +1.020199618679535e+00, +1.020560853084751e+00, +1.020909847360410e+00,
+1.021246684563866e+00, +1.021572361827679e+00, +1.021886975685526e+00, +1.022189721024281e+00,
+1.022480682703848e+00, +1.022760836860466e+00, +1.023030287959746e+00, +1.023288268237906e+00,
+1.023534888355832e+00, +1.023771136381063e+00, +1.023997104737320e+00, +1.024211990514308e+00,
+1.024415875333744e+00, +1.024609726504572e+00, +1.024793642571832e+00, +1.024966852210664e+00,
+1.025129444345768e+00, +1.025282368545871e+00, +1.025425713582690e+00, +1.025558707847599e+00,
+1.025681449959415e+00, +1.025794908567991e+00, +1.025899187425550e+00, +1.025993525806572e+00,
+1.026078042674063e+00, +1.026153736073730e+00, +1.026220725639502e+00, +1.026278251222302e+00,
+1.026326400217514e+00, +1.026366109298213e+00, +1.026397475218959e+00, +1.026419755159132e+00,
+1.026433063472609e+00, +1.026438369530571e+00, +1.026435753513555e+00, +1.026424407896423e+00,
+1.026404414325658e+00, +1.026376745497183e+00, +1.026341529591056e+00, +1.026298047712657e+00,
+1.026246413164014e+00, +1.026187571341079e+00, +1.026121618202469e+00, +1.026047802601159e+00,
+1.025966259113017e+00, +1.025878005857533e+00, +1.025783163725466e+00, +1.025680955378961e+00,
+1.025571464026533e+00, +1.025455636062312e+00, +1.025333580354341e+00, +1.025204567428491e+00,
+1.025068712226252e+00, +1.024926972279997e+00, +1.024779424810995e+00, +1.024625269765159e+00,
+1.024464619501421e+00, +1.024298498053110e+00, +1.024127035189888e+00, +1.023949464567318e+00,
+1.023765888955297e+00, +1.023577282345944e+00, +1.023383771098535e+00, +1.023184632809730e+00,
+1.022979990313458e+00, +1.022770810566653e+00, +1.022557186135377e+00, +1.022338337695996e+00,
+1.022114387574851e+00, +1.021886357834243e+00, +1.021654354624439e+00, +1.021417567672874e+00,
+1.021176074694516e+00, +1.020930844259280e+00, +1.020681994464816e+00, +1.020428792450358e+00,
+1.020171385028845e+00, +1.019910795563718e+00, +1.019647124626418e+00, +1.019379551852598e+00,
+1.019108176121263e+00, +1.018834017611273e+00, +1.018557222865231e+00, +1.018277062013127e+00,
+1.017993662628480e+00, +1.017708008483692e+00, +1.017420178311649e+00, +1.017129349129694e+00,
+1.016835630605444e+00, +1.016540064652456e+00, +1.016242782169058e+00, +1.015943000562828e+00,
+1.015640812550351e+00, +1.015337187460531e+00, +1.015032211107897e+00, +1.014725089526348e+00,
+1.014415991238242e+00, +1.014106040189062e+00, +1.013795318041038e+00, +1.013482869234993e+00,
+1.013168810057302e+00, +1.012854327596526e+00, +1.012539547722209e+00, +1.012223533569952e+00,
+1.011906384233988e+00, +1.011589234882839e+00, +1.011272160610958e+00, +1.010954179972212e+00, +1.010635428864728e+00, +1.010317161995333e+00, +1.009999611212465e+00, +1.009681947024951e+00,
+1.009363573682324e+00, +1.009044325068028e+00, +1.008727479269698e+00, +1.008418957730006e+00,
+1.008106691995008e+00, +1.007763945845098e+00, +1.007443035427814e+00, +1.007268321305087e+00,
+1.007188313360058e+00, +1.006980582693088e+00, +1.006607718427208e+00, +1.006220813354843e+00,
+1.005880191360173e+00, +1.005548147634276e+00, +1.005208505985926e+00, +1.004870660907557e+00,
+1.004538945715620e+00, +1.004211548979837e+00, +1.003887307826199e+00, +1.003565998252022e+00,
+1.003247928753973e+00, +1.002933862630671e+00, +1.002623715011975e+00, +1.002316573551338e+00,
+1.002012456628431e+00, +1.001712307918128e+00, +1.001416118705407e+00, +1.001122929266782e+00,
+1.000832736946922e+00, +1.000546495806722e+00, +1.000264200804259e+00, +9.999848879324513e-01,
+9.997085530666436e-01, +9.994361518334981e-01, +9.991676778789439e-01, +9.989021630276661e-01,
+9.986396025239043e-01, +9.983809548686250e-01, +9.981262129964925e-01, +9.978744044020248e-01,
+9.976255227380388e-01, +9.973805277659410e-01, +9.971394126637049e-01, +9.969012039797195e-01,
+9.966658933095314e-01, +9.964344374346332e-01, +9.962068296990753e-01, +9.959820998119757e-01,
+9.957602381261346e-01, +9.955421958422669e-01, +9.953279652235180e-01, +9.951165794460692e-01,
+9.949080290979398e-01, +9.947032622296315e-01, +9.945022689695088e-01, +9.943040815876473e-01,
+9.941086912851109e-01, +9.939170480434331e-01, +9.937291405239381e-01, +9.935439962464298e-01,
+9.933616056210112e-01, +9.931829218182915e-01, +9.930079338821240e-01, +9.928356667510468e-01,
+9.926661086172732e-01, +9.925002110373203e-01, +9.923379640068731e-01, +9.921783957486814e-01,
+9.920214929714285e-01, +9.918682011153984e-01, +9.917185094982703e-01, +9.915714511212392e-01,
+9.914270132578689e-01, +9.912861375369392e-01, +9.911488111762619e-01, +9.910140670228395e-01,
+9.908818932025615e-01, +9.907532330064230e-01, +9.906280727376265e-01, +9.905054418160028e-01,
+9.903853272281469e-01, +9.902686735168059e-01, +9.901554680972392e-01, +9.900447411363362e-01,
+9.899364775767996e-01, +9.898316173651273e-01, +9.897301484429727e-01, +9.896311064950427e-01,
+9.895344764114521e-01, +9.894411924684042e-01, +9.893512408407925e-01, +9.892636595590807e-01,
+9.891784350480575e-01, +9.890965020344753e-01, +9.890178449763316e-01, +9.889414982259392e-01,
+9.888674481881904e-01, +9.887966331854001e-01, +9.887290383256132e-01, +9.886636955343167e-01,
+9.886005893838439e-01, +9.885406571815547e-01, +9.884838850803949e-01, +9.884293079255704e-01,
+9.883769097708243e-01, +9.883276240055705e-01, +9.882814356355465e-01, +9.882373812607220e-01,
+9.881954463086439e-01, +9.881565649335834e-01, +9.881207205644380e-01, +9.880869460773882e-01,
+9.880552270464479e-01, +9.880265015932943e-01, +9.880007538329854e-01, +9.879770139187286e-01,
+9.879552655810734e-01, +9.879364462155417e-01, +9.879205412712961e-01, +9.879065840760606e-01,
+9.878945575956836e-01, +9.878853946070033e-01, +9.878790797412935e-01, +9.878746493979034e-01,
+9.878720878008731e-01, +9.878723269672057e-01, +9.878753499522159e-01, +9.878801909638151e-01,
+9.878868346314371e-01, +9.878962158879177e-01, +9.879083181018892e-01, +9.879221731254697e-01,
+9.879377642109470e-01, +9.879560260604132e-01, +9.879769430009732e-01, +9.879995488718708e-01,
+9.880238263660437e-01, +9.880507071322525e-01, +9.880801746803725e-01, +9.881112643600719e-01,
+9.881439599864610e-01, +9.881791937541983e-01, +9.882169477221827e-01, +9.882562539746005e-01,
+9.882970966792446e-01, +9.883404119215459e-01, +9.883861819949297e-01, +9.884334355024147e-01,
+9.884821553014376e-01, +9.885332784979397e-01, +9.885867883714737e-01, +9.886417143055318e-01,
+9.886980383296721e-01, +9.887566952073135e-01, +9.888176678250945e-01, +9.888799871475064e-01,
+9.889436358294569e-01, +9.890095481884937e-01, +9.890777059811048e-01, +9.891471384894399e-01,
+9.892178286528791e-01, +9.892907129712469e-01, +9.893657732439902e-01, +9.894420366217603e-01,
+9.895194850020712e-01, +9.895990550550585e-01, +9.896807293945533e-01, +9.897635364818964e-01,
+9.898474573387898e-01, +9.899334256730253e-01, +9.900214239316713e-01, +9.901104832002432e-01,
+9.902005849312988e-01, +9.902926609798792e-01, +9.903866926546286e-01, +9.904817107571495e-01,
+9.905776973966729e-01, +9.906755858999687e-01, +9.907753570146928e-01, +9.908760390079692e-01,
+9.909776136318341e-01, +9.910810160568396e-01, +9.911862274458985e-01, +9.912922749689899e-01,
+9.913991395528559e-01, +9.915077559112314e-01, +9.916181054602099e-01, +9.917292162715997e-01,
+9.918410691314309e-01, +9.919545975686356e-01, +9.920697824274926e-01, +9.921856518839308e-01,
+9.923021872317422e-01, +9.924203228138201e-01, +9.925400387231874e-01, +9.926603609120486e-01,
+9.927812708898945e-01, +9.929037056012008e-01, +9.930276450366935e-01, +9.931521123405382e-01,
+9.932770885572193e-01, +9.934035125599263e-01, +9.935313647282036e-01, +9.936596669792295e-01,
+9.937883997783191e-01, +9.939185021388579e-01, +9.940499546103031e-01, +9.941817792665538e-01,
+9.943139564620480e-01, +9.944474248344178e-01, +9.945821646067609e-01, +9.947171976098198e-01,
+9.948525044676624e-01, +9.949890245456261e-01, +9.951267376194471e-01, +9.952646639522682e-01,
+9.954027843196593e-01, +9.955420399208714e-01, +9.956824104013806e-01, +9.958229139376651e-01,
+9.959635310797721e-01, +9.961052046849509e-01, +9.962479146150113e-01, +9.963906777760744e-01,
+9.965334742957022e-01, +9.966772475112751e-01, +9.968219775371954e-01, +9.969666812541205e-01, +9.971113385049125e-01, +9.972568921184832e-01, +9.974033222384361e-01, +9.975496462958124e-01,
+9.976958440808505e-01, +9.978428577721199e-01, +9.979906675056988e-01, +9.981382913210521e-01,
+9.982857084011294e-01, +9.984338592613343e-01, +9.985827266667445e-01, +9.987313348873088e-01,
+9.988796523949821e-01, +9.990285947364306e-01, +9.991781850354060e-01, +9.993275431378141e-01,
+9.994764863008044e-01, +9.996255698609559e-01, +9.997753812452573e-01, +9.999265078806980e-01,
+1.000073497520791e+00, +1.000224669219663e+00, +1.000374570389487e+00, +1.000523787909342e+00,
+1.000672909364706e+00, +1.000822490899924e+00, +1.000972349809292e+00, +1.001121604191588e+00,
+1.001270276668384e+00, +1.001419284847822e+00, +1.001568597382930e+00, +1.001717235441161e+00,
+1.001865181102795e+00, +1.002013378040221e+00, +1.002161805549920e+00, +1.002309477314975e+00,
+1.002456372686098e+00, +1.002603438051255e+00, + 1.002750653220044e+00, +1.002897030034197e+00,
+1.003042547763044e+00, +1.003188154489387e+00, +1.003333829980590e+00, +1.003478584306210e+00,
+1.003622396620552e+00, +1.003766216551067e+00, +1.003910024058434e+00, +1.004052828034629e+00,
+1.004194607298016e+00, +1.004336312014269e+00, +1.004477922478776e+00, +1.004618447680436e+00,
+1.004757866142788e+00, +1.004897127367124e+00, +1.005036211788027e+00, +1.005174129339999e+00,
+1.005310858606722e+00, +1.005447348229275e+00, +1.005583578404365e+00, +1.005718559516336e+00,
+1.005852270535212e+00, +1.005985660340410e+00, +1.006118708775473e+00, +1.006250425365265e+00,
+1.006380789350186e+00, +1.006510750945005e+00, +1.006640290029854e+00, +1.006768414896740e+00,
+1.006895104560895e+00, +1.007021310029137e+00, +1.007147011697879e+00, +1.007271218063607e+00,
+1.007393907701933e+00, +1.007516030573849e+00, +1.007637567482182e+00, +1.007757528772291e+00,
+1.007875893086371e+00, +1.007993608628118e+00, +1.008110655922241e+00, +1.008226046614216e+00,
+1.008339760080372e+00, +1.008452744553207e+00, +1.008564979989454e+00, +1.008675477014256e+00,
+1.008784215564761e+00, +1.008892145905632e+00, +1.008999248092397e+00, +1.009104530964226e+00,
+1.009207974189350e+00, +1.009310529294049e+00, +1.009412177137242e+00, +1.009511926856510e+00,
+1.009609757696156e+00, +1.009706620067364e+00, +1.009802495163920e+00, +1.009896393940608e+00,
+1.009988296223056e+00, +1.010079151649770e+00, +1.010168940724606e+00, +1.010256673981368e+00,
+1.010342332426681e+00, +1.010426868280804e+00, +1.010510261597171e+00, +1.010591519577714e+00,
+1.010670623429633e+00, +1.010748529051234e+00, +1.010825217388920e+00, +1.010899693712359e+00,
+1.010971938438940e+00, +1.011042907905867e+00, +1.011112584131909e+00, +1.011179974034890e+00,
+1.011245058042453e+00, +1.011308790830468e+00, +1.011371154144579e+00, +1.011431156159085e+00,
+1.011488778523215e+00, +1.011544976893053e+00, +1.011599732403024e+00, +1.011652051214875e+00,
+1.011701915457469e+00, +1.011750283661017e+00, +1.011797137846246e+00, +1.011841483052088e+00,
+1.011883300488277e+00, +1.011923548068040e+00, +1.011962209203063e+00, +1.011998292246508e+00,
+1.012031778271071e+00, +1.012063621581602e+00, +1.012093805289032e+00, +1.012121340917460e+00,
+1.012146211141323e+00, +1.012169370028522e+00, +1.012190799612422e+00, +1.012209509774826e+00,
+1.012225484155619e+00, +1.012239680217839e+00, +1.012252080651208e+00, +1.012261693287047e+00,
+1.012268500924551e+00, +1.012273461473019e+00, +1.012276559127865e+00, +1.012276804202582e+00,
+1.012274179329824e+00, +1.012269639581679e+00, +1.012263168844414e+00, +1.012253779830287e+00,
+1.012241456954404e+00, +1.012227156156870e+00, +1.012210860152664e+00, +1.012191578747083e+00,
+1.012169297374220e+00, +1.012144976732521e+00, +1.012118600449884e+00, +1.012089175409008e+00,
+1.012056685871527e+00, +1.012022093240567e+00, +1.011985383173782e+00, +1.011945565763788e+00,
+1.011902624776521e+00, +1.011857517445845e+00, +1.011810229432951e+00, +1.011759775156899e+00,
+1.011706140218275e+00, +1.011650280893217e+00, +1.011592181601430e+00, +1.011530855573595e+00,
+1.011466289818154e+00, +1.011399444375047e+00, +1.011330304370585e+00, +1.011257880752579e+00,
+1.011182159707019e+00, +1.011104101993156e+00, +1.011023694799342e+00, +1.010939952356944e+00,
+1.010852860445419e+00, +1.010763375755366e+00, +1.010671485695127e+00, +1.010576209154936e+00,
+1.010477533938561e+00, +1.010376415807060e+00, +1.010272840810986e+00, +1.010165826445586e+00,
+1.010055362601328e+00, +1.009942410277932e+00, +1.009826955798404e+00, +1.009708012131765e+00,
+1.009585568925891e+00, +1.009460591235290e+00, +1.009333067695896e+00, +1.009202011723081e+00,
+1.009067412134881e+00, +1.008930231993351e+00, +1.008790461334113e+00, +1.008647118373303e+00,
+1.008500193172393e+00, +1.008350646299744e+00, +1.008198467170796e+00, +1.008042675572153e+00,
+1.007883264022713e+00, +1.007721196075366e+00, +1.007556460824166e+00, +1.007388074720253e+00,
+1.007216031301935e+00, +1.007041299348476e+00, +1.006863869718207e+00, +1.006682757156533e+00,
+1.006497954572682e+00, +1.006310431304003e+00, +1.006120180721864e+00, +1.005926221917719e+00,
+1.005728547752975e+00, +1.005528123164754e+00, +1.005324942594936e+00, +1.005118031770913e+00,
+1.004907385380564e+00, +1.004693965144879e+00, +1.004477765157871e+00, +1.004257813991292e+00,
+1.004034108834670e+00, +1.003807613226332e+00, +1.003578321293819e+00, +1.003345260144698e+00,
+1.003108428405854e+00, +1.002868793771428e+00, +1.002626351889911e+00, +1.002380128823734e+00,
+1.002130123378852e+00, +1.001877304672605e+00, +1.001621670689409e+00, +1.001362250678481e+00, +1.001099043542970e+00, +1.000833015458249e+00, +1.000564166270619e+00, +1.000291531899435e+00,
+1.000015112295927e+00, +9.997358689793686e-01, +9.994538026878185e-01, +9.991679559269192e-01,
+9.988783302889642e-01, +9.985858838509232e-01, +9.982906190683758e-01, +9.979915852192069e-01,
+9.976887805584920e-01, +9.973831508544119e-01, +9.970747197397686e-01, +9.967625861356061e-01,
+9.964466729061831e-01, +9.961277448216609e-01, +9.958061137774057e-01, +9.954815632236269e-01,
+9.951529474418550e-01, +9.948184819816882e-01, +9.944824644674363e-01, +9.941541831614942e-01,
+9.938176459160070e-01, +9.934356569036324e-01, +9.930678080460911e-01, +9.928629897063861e-01,
+9.920151198036643e-01, +9.914646039976289e-01, +9.910580786225461e-01, +9.906661670997940e-01,
+9.902352352689523e-01, +9.897945722571376e-01, +9.893565433952757e-01, +9.889131869680553e-01,
+9.884611897966706e-01, +9.880027035297985e-01, +9.875383274623817e-01, +9.870669099030384e-01,
+9.865881954382273e-01, +9.861028679251979e-01, +9.856108490726415e-01, +9.851112908058255e-01,
+9.846041087188396e-01, +9.840899793789135e-01, +9.835687475691413e-01, +9.830394337851477e-01,
+9.825019919189980e-01, +9.819573015637479e-01, +9.814052410296346e-01, +9.808446911100914e-01,
+9.802755449178991e-01, +9.796987091039431e-01, +9.791141208337264e-01, +9.785207439579823e-01,
+9.779184677896273e-01, +9.773081082723492e-01, +9.766895349125904e-01, +9.760616740194450e-01,
+9.754244530504396e-01, +9.747787966745514e-01, +9.741245958128935e-01, +9.734607083730100e-01,
+9.727870063627455e-01, +9.721043782586516e-01, +9.714127339971064e-01, +9.707110047334955e-01,
+9.699991325531057e-01, +9.692780666596675e-01, +9.685476898124051e-01, +9.678068213341131e-01,
+9.670553568518259e-01, +9.662942694162036e-01, +9.655234943873926e-01, +9.647419268609606e-01,
+9.639494801526087e-01, +9.631470850364502e-01, +9.623346145023939e-01, +9.615108868233452e-01,
+9.606758082762421e-01, +9.598303722906686e-01, +9.589744979972803e-01, +9.581070287387355e-01,
+9.572278607616873e-01, +9.563379453266456e-01, +9.554372064329766e-01, +9.545245399941635e-01,
+9.535998779685757e-01, +9.526641870716750e-01, +9.517173763138073e-01, +9.507582991859514e-01,
+9.497868942084339e-01, +9.488041830577462e-01, +9.478100888078225e-01, +9.468034353946915e-01,
+9.457841175975197e-01, +9.447531037006662e-01, +9.437103240778304e-01, +9.426546695512183e-01,
+9.415860667090934e-01, +9.405054771915659e-01, +9.394128066604807e-01, +9.383069072240268e-01,
+9.371877218082764e-01, +9.360562830727714e-01, +9.349125451819119e-01, +9.337553821450042e-01,
+9.325847195259637e-01, +9.314015363873052e-01, +9.302057763482381e-01, +9.289963473252155e-01,
+9.277732047659371e-01, +9.265373496318979e-01, +9.252887007804731e-01, +9.240260966323954e-01,
+9.227494594741956e-01, +9.214597964334704e-01, +9.201570566323493e-01, +9.188401295674291e-01,
+9.175089523148627e-01, +9.161645099567182e-01, +9.148067377557750e-01, +9.134345222358713e-01,
+9.120478227747287e-01, +9.106476709258303e-01, +9.092340339068899e-01, +9.078058138594686e-01,
+9.063629680720371e-01, +9.049065091670875e-01, +9.034363889945074e-01, +9.019514987490371e-01,
+9.004517876609461e-01, +8.989382633487150e-01, +8.974108808873397e-01, +8.958685426521079e-01,
+8.943112058133614e-01, +8.927398817643528e-01, +8.911545160393349e-01, +8.895539896413210e-01,
+8.879382683346716e-01, +8.863084022826353e-01, +8.846643687806315e-01, +8.830050715882986e-01,
+8.813304835012828e-01, +8.796416466159852e-01, +8.779385355821995e-01, +8.762200577776852e-01,
+8.744861938961381e-01, +8.727379973888942e-01, +8.709754415944566e-01, +8.691974194090119e-01,
+8.674038889082810e-01, +8.655958747817611e-01, +8.637733542642025e-01, +8.619352566808824e-01,
+8.600815675121538e-01, +8.582133280699462e-01, +8.563305243162549e-01, +8.544320869868485e-01,
+8.525180054943617e-01, +8.505893287555129e-01, +8.486460694867924e-01, +8.466872027543964e-01,
+8.447127297770400e-01, +8.427236779556280e-01, +8.407200377231397e-01, +8.387007637143141e-01,
+8.366658636487900e-01, +8.346163977407922e-01, +8.325523768291012e-01, +8.304727614321823e-01,
+8.283775428310826e-01, +8.262677444285360e-01, +8.241433705663960e-01, +8.220034073785601e-01,
+8.198478927378535e-01, +8.176779138137669e-01, +8.154934833957916e-01, +8.132935411236417e-01,
+8.110781042287996e-01, +8.088482692756163e-01, +8.066040997239516e-01, +8.043446229495154e-01,
+8.020698771287099e-01, +7.997809105802602e-01, +7.974777203962242e-01, +7.951592558139738e-01,
+7.928255537687610e-01, +7.904777397235739e-01, +7.881159103734087e-01, +7.857391245481645e-01,
+7.833473203720548e-01, +7.809413293257642e-01, +7.785212684545030e-01, +7.760865347057494e-01,
+7.736372881515523e-01, +7.711744403395434e-01, +7.686979147929021e-01, +7.662066652369949e-01,
+7.637008160854790e-01, +7.611816536232692e-01, +7.586492915456966e-01, +7.561026668755407e-01,
+7.535417845985437e-01, +7.509677253608117e-01, +7.483805701761127e-01, +7.457793976748408e-01,
+7.431642988739133e-01, +7.405363749469933e-01, +7.378956733994703e-01, +7.352411918301537e-01,
+7.325730245135402e-01, +7.298923618910717e-01, +7.271993327965579e-01, +7.244930008228270e-01,
+7.217734421626190e-01, +7.190417491579090e-01, +7.162980305440977e-01, +7.135414111237446e-01,
+7.107720243445051e-01, +7.079910089690906e-01, +7.051984432364411e-01, +7.023933467824965e-01,
+6.995757887359807e-01, +6.967468908559541e-01, +6.939067884621855e-01, +6.910546259244099e-01,
+6.881904964956265e-01, +6.853154435187701e-01, +6.824295471401947e-01, +6.795319276046549e-01, +6.766227310314311e-01, +6.737031265887281e-01, +6.707732585543063e-01, +6.678322438578169e-01,
+6.648801659515325e-01, +6.619180818581655e-01, +6.589461833521619e-01, +6.559637902883004e-01,
+6.529710426495826e-01, +6.499688969386536e-01, +6.469573547411541e-01, +6.439354791990427e-01,
+6.409035288603075e-01, +6.378629377753962e-01, +6.348137437689479e-01, +6.317545972986219e-01,
+6.286855280775698e-01, +6.256079561741540e-01, +6.225221695832768e-01, +6.194273058858271e-01,
+6.163234711851669e-01, +6.132117491461520e-01, +6.100922809170846e-01, +6.069642650584504e-01,
+6.038278760531646e-01, +6.006842631336996e-01, +5.975336059686350e-01, +5.943751066904921e-01,
+5.912087588215279e-01, +5.880353659529035e-01, +5.848551837605717e-01, +5.816678990293079e-01,
+5.784735261655043e-01, +5.752724325989095e-01, +5.720650011081139e-01, +5.688516144717076e-01,
+5.656282061898663e-01, +5.624031153715552e-01, +5.591715220043816e-01, +5.559338788791430e-01,
+5.526906296747757e-01, +5.494421930334449e-01, +5.461886187066721e-01, +5.429296335729603e-01,
+5.396656057073835e-01, +5.363974990167699e-01, +5.331253296256703e-01, +5.298481989939661e-01,
+5.265662376610855e-01, +5.232805923025862e-01, +5.199914838946222e-01, +5.166982164701727e-01,
+5.134010079652577e-01, +5.101009713211846e-01, +5.067981651483114e-01, +5.034916218473716e-01,
+5.001816735886107e-01, +4.968699258080247e-01, +4.935565059779667e-01, +4.902400722563398e-01,
+4.869206550924504e-01, +4.835996679580279e-01, +4.802774381791762e-01, +4.769531954412434e-01,
+4.736270399539189e-01, +4.702999408508168e-01, +4.669720784607305e-01, +4.636428606356920e-01,
+4.603125364998776e-01, +4.569821724233974e-01, +4.536519115376573e-01, +4.503209953849403e-01,
+4.469896264032189e-01, +4.436589520558524e-01, +4.403291677455351e-01, +4.369995283852560e-01,
+4.336702110092919e-01, +4.303423032287362e-01, +4.270159791313206e-01, +4.236905139305585e-01,
+4.203661194857656e-01, +4.170439288466521e-01, +4.137241358370239e-01, +4.104060097514602e-01,
+4.070897555089031e-01, +4.037764981593507e-01, +4.004664107465299e-01, +3.971587296380776e-01,
+3.938536636599421e-01, +3.905523798917074e-01, +3.872550507871729e-01, +3.839608678121244e-01,
+3.806700467713708e-01, +3.773838145590149e-01, +3.741023650337649e-01, +3.708248707285573e-01,
+3.675515053070522e-01, +3.642834353302138e-01, +3.610208992409523e-01, +3.577632145496031e-01,
+3.545105744959446e-01, +3.512640341612003e-01, +3.480236943438447e-01, +3.447887254766508e-01,
+3.415594491122957e-01, +3.383373171891836e-01, +3.351225758795442e-01, +3.319142610233081e-01,
+3.287122759768420e-01, +3.255174149216469e-01, +3.223300837378850e-01, +3.191502945992604e-01,
+3.159783340225497e-01, +3.128147301790672e-01, +3.096594366002203e-01, +3.065118829951374e-01,
+3.033724163096057e-01, +3.002422624347096e-01, +2.971215837581699e-01, +2.940094940665994e-01,
+2.909060968951387e-01, +2.878124834032541e-01, +2.847288683996017e-01, +2.816545966307170e-01,
+2.785898831431842e-01, +2.755357983580602e-01, +2.724924992373132e-01, +2.694592444601876e-01,
+2.664361954971699e-01, +2.634244029834191e-01, +2.604240268886862e-01, +2.574343504718905e-01,
+2.544555518459914e-01, +2.514886909115458e-01, +2.485339317782194e-01, +2.455905549948218e-01,
+2.426587307354937e-01, +2.397395063360460e-01, +2.368330357314138e-01, +2.339385917103926e-01,
+2.310563352467077e-01, +2.281873038963940e-01, +2.253316454409216e-01, +2.224886282863191e-01,
+2.196584073367104e-01, +2.168420127437019e-01, +2.140395864128403e-01, +2.112503945704412e-01,
+2.084745870335015e-01, +2.057131843889434e-01, +2.029663241873446e-01, +2.002332724591127e-01,
+1.975141729701546e-01, +1.948100372792062e-01, +1.921209969418309e-01, +1.894463139881238e-01,
+1.867861307455174e-01, +1.841414579810843e-01, +1.815124204803960e-01, +1.788982688766118e-01,
+1.762991374092110e-01, +1.737160334143236e-01, +1.711490837149136e-01, +1.685975427109672e-01,
+1.660615404766350e-01, +1.635420747284597e-01, +1.610392647455030e-01, +1.585523606699242e-01,
+1.560814882692011e-01, +1.536276387455411e-01, +1.511909278215991e-01, +1.487706056453130e-01,
+1.463667950599714e-01, +1.439804830586271e-01, +1.416117840041388e-01, +1.392599476606263e-01,
+1.369250939274206e-01, +1.346082041944543e-01, +1.323093893293406e-01, +1.300278987264480e-01,
+1.277638491717384e-01, +1.255182155111709e-01, +1.232911060463692e-01, +1.210817706513393e-01,
+1.188903216873087e-01, +1.167177275528689e-01, +1.145640946398680e-01, +1.124286726877977e-01,
+1.103115703218860e-01, +1.082137493008784e-01, +1.061353122093495e-01, +1.040755094642518e-01,
+1.020344462904939e-01, +1.000130754353283e-01, +9.801149609996949e-02, +9.602895962715033e-02,
+9.406556557413213e-02, +9.212225718017839e-02, +9.019912955294541e-02, +8.829543394466111e-02,
+8.641126446867767e-02, +8.454755261333674e-02, +8.270438757849537e-02, +8.088102201374671e-02,
+7.907754246044904e-02, +7.729486433686708e-02, +7.553307095292439e-02, +7.379141728818767e-02,
+7.206998099643694e-02, +7.036965903891536e-02, +6.869052561376873e-02, +6.703183558090599e-02,
+6.539365708843246e-02, +6.377686761792192e-02, +6.218153160076208e-02, +6.060690353708294e-02,
+5.905303920289844e-02, +5.752079270262547e-02, +5.601021629546108e-02, +5.452056276526779e-02,
+5.305187265543028e-02, +5.160497192770200e-02, +5.017990065949564e-02, +4.877591488398978e-02,
+4.739303765878024e-02, +4.603205697395506e-02, +4.469299727922284e-02, +4.337512126408456e-02,
+4.207843336193631e-02, +4.080367800167834e-02, +3.955086170148164e-02, +3.831925359021936e-02, +3.710883802024247e-02, +3.592031377191350e-02, +3.475367083924110e-02, +3.360819061792393e-02,
+3.248382426594506e-02, +3.138119240391853e-02, +3.030027537135876e-02, +2.924041340892334e-02,
+2.820153617857359e-02, +2.718416076819826e-02, +2.618823091914950e-02, +2.521312012928253e-02,
+2.425872983336824e-02, +2.332548569166988e-02, +2.241332520509764e-02, +2.152170070657781e-02,
+2.065047207339204e-02, +1.979990274080047e-02, +1.896992105664513e-02, +1.816012507709582e-02,
+1.737032543754079e-02, +1.660053693426305e-02, +1.585068068878849e-02, +1.512059554489944e-02,
+1.441002712765956e-02, +1.371861264850595e-02, +1.304629624757017e-02, +1.239334766429038e-02,
+1.175941174949483e-02, +1.114348079271000e-02, +1.054549096241532e-02, +9.966369456231951e-03,
+9.405876078723861e-03, +8.862485552559351e-03, +8.334801852513261e-03, +7.821914540064593e-03,
+7.329085750247891e-03, +6.866427280374203e-03, +6.407912160580299e-03, +5.896299968476348e-03,
+5.431884551945897e-03, +5.251971150005845e-03, +4.914753459788713e-03, +3.326211257672788e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +9.966369456231950e-03,
+9.405876078723861e-03, +8.862485552559000e-03, +8.334801852513261e-03, +7.000000000064593e-03,
+0.000000000000000e+00, +6.866427280000000e-03, +6.407912160580299e-03, +5.896299968476348e-03,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

37. Eine Vorrichtung gemäß einem der Ansprüche 6-21, bei der die Synthesefensterungsfunktion so definiert ist, dass sie eine erste numerische Ableitung zwischen - 0,01 und +0,01 präsentiert.

38. Eine Vorrichtung gemäß einem der Ansprüche 6-21, bei der die Synthesefensterungsfunktion so definiert ist, dass sie eine zweite numerische Ableitung zwischen - $10^{-4}$ und +$10^{-4}$ präsentiert.

39. Eine Vorrichtung gemäß einem der Ansprüche 6-21, bei der die Synthesefensterungsfunktion so definiert ist, dass sie eine zweite numerische Ableitung zwischen - $10^{-5}$ und +$10^{-5}$ präsentiert.

40. Ein Verfahren zum Codieren eines Audiosignals mit einer Mehrzahl von Rahmen, wobei das Verfahren folgenden Schritt aufweist:

Durchführen einer Analyse einer modifizierten Cosinus-Transformation, MDCT-Analyse, zum Umwandeln einer Zeitbereichs-, TD-, Darstellung des Audiosignals, oder einer verarbeiteten Version desselben, in eine Frequenzbereich-, FD-, Darstellung unter Verwendung einer Analysefensterungsfunktion (40, 50, 240, 70) mit einem Kreuzungsabschnitt (44, 244), der eine Linearfunktion (40', 240') durchläuft, gemäß zumindest vier Punkten (#1, #2, #3, #4),
wobei die Analysefensterungsfunktion so definiert ist, dass sie asymmetrisch ist,
wobei die Analysefensterungsfunktion (40, 240) so definiert ist, dass sie in dem Kreuzungsabschnitt (44, 94, 244):

in einem ersten Intervall (41, 241) zwischen einem ersten Kreuzungspunkt (#1) und einem zweiten Kreuzungspunkt (#2) größer ist als die Linearfunktion (40', 240');
in einem zweiten Intervall (42, 242) zwischen dem zweiten Kreuzungspunkt (#2) und einem dritten Kreuzungspunkt (#3) niedriger ist als die Linearfunktion (40', 240');
in einem dritten Intervall (43, 243) zwischen dem dritten Kreuzungspunkt (#3) und einem vierten Kreuzungspunkt (#4) größer ist als die Linearfunktion (40', 240'),

wobei die Analysefensterungsfunktion so definiert ist, dass der absolute Maximalwert (41', 241') in einem des ersten und dritten Intervalls liegt,
**dadurch gekennzeichnet, dass** die Linearfunktion (40, 240) eine konstante Funktion mit konstantem Wert 1 ist.

41. Ein Verfahren zum Decodieren eines Audiosignals oder einer verarbeiteten Version desselben, das in dem Frequenzbereich, FD, definiert ist, wobei das Verfahren folgenden Schritt aufweist:

Durchführen einer Synthese einer modifizierten Cosinus-Transformation, MDCT-Synthese, zum Umwandeln der FD-Darstellung eines Audiosignals oder einer verarbeiteten Version desselben in eine Zeitbereichs- TD-, Darstellung unter Verwendung einer Synthesefensterungsfunktion (90) mit einem Kreuzungsabschnitt (94), der eine Linearfunktion durchläuft, in Entsprechung zu zumindest vier Punkten (#1, #2, #3, #4),
wobei die Synthesefensterungsfunktion (90, 290) so definiert ist, dass sie in dem Kreuzungsabschnitt (44, 94, 244):

in einem ersten Intervall zwischen einem ersten Kreuzungspunkt und einem zweiten Kreuzungspunkt größer ist als die Linearfunktion;
in einem zweiten Intervall zwischen dem zweiten Kreuzungspunkt und einem dritten Kreuzungspunkt niedriger ist als die Linearfunktion;

in einem dritten Intervall zwischen dem dritten Kreuzungspunkt und einem vierten Kreuzungspunkt größer ist als die Linearfunktion,

wobei die Synthesefensterungsfunktion so definiert ist, dass der absolute Maximalwert in einem des ersten und dritten Intervalls liegt,

**dadurch gekennzeichnet, dass** die Linearfunktion eine konstante Funktion mit konstantem Wert 1 ist.

42. Eine nichtflüchtige Speichereinheit, die Befehle speichert, die, wenn dieselben auf einem Prozessor ablaufen, verursachen, dass der Prozessor ein Verfahren gemäß Anspruch 40 oder 41 ausführt.

**Revendications**

1. Appareil (130, 130A, 110) pour coder un signal audio comprenant une pluralité de trames, l'appareil comprenant:

un outil de transformée à chevauchement modulée (131) destiné à transformer une représentation dans le domaine temporel, TD, du signal audio, ou une version traitée de cette dernière, en une représentation dans le domaine de la fréquence, FD, l'outil de transformée à chevauchement modulée (131) étant configuré pour effectuer une analyse de transformée à chevauchement modulée à l'aide d'une fonction de division en fenêtres d'analyse (40, 50, 70, 240) présentant une partie de croisement (44, 64, 244) venant en croisement avec une fonction linéaire (40', 240') en correspondance d'au moins quatre points (#1, #2, #3, #4); et

un moyen d'écriture de flux de bits (137) configuré pour préparer un flux de bits sur base de la représentation FD du signal audio ou d'une version traitée de cette dernière,

dans lequel la fonction de division en fenêtres d'analyse est définie de manière à être asymétrique,

dans lequel la fonction de division en fenêtres d'analyse (40, 240) est définie de manière à être, dans la partie de croisement (44, 94, 244):

supérieure à la fonction linéaire (40', 240') dans un premier intervalle (41,241) entre un premier point de croisement (#1) et un deuxième point de croisement (#2);

inférieure à la fonction linéaire (40', 240') dans un deuxième intervalle (42, 242) entre le deuxième point de croisement (#2) et un troisième point de croisement (#3);

supérieure à la fonction linéaire (40', 240') dans un troisième intervalle (43, 243) entre le troisième point de croisement (#3) et un quatrième point de croisement (#4),

dans lequel la fonction de division en fenêtres d'analyse est définie de sorte que la valeur maximale absolue (41', 241') se situe dans l'un parmi le premier et le troisième intervalle,

**caractérisé par le fait que** la fonction linéaire (40, 240) est une fonction constante de valeur constante 1.

2. Appareil selon la revendication 1,
dans lequel la fonction de division en fenêtres d'analyse (40, 240) est définie de sorte que le maximum de la fonction de division en fenêtres d'analyse (40, 240) soit de moins de 25% supérieur à la valeur de la fonction linéaire (40, 240) au même moment.

3. Appareil selon la revendication 1, dans lequel l'outil de transformée à chevauchement modulée est configuré pour:
mettre à échelle les tampons d'entrée de temps et/ou les valeurs cosinusoïdales ou sinusoïdales par les valeurs de la fonction de division en fenêtres d'analyse (40, 50, 70, 240).

4. Appareil selon la revendication 3, dans lequel l'outil de transformée à chevauchement modulée est configuré pour utiliser les tampons d'entrée sous forme de

$$t(n) = x(Z - N_F + n) \text{ pour } n = 0..2N_F - 1 - Z,$$

et

$$t(2N - Z + n) = 0 \text{ pour } n = 0..Z - 1$$

où $x(n)$ est un échantillon TD du signal audio ou une version traitée du signal audio au moment $n$, $N_F$ est le nombre d'échantillons traités dans une trame, et Z est le nombre de zéros de début dans la fenêtre de transformée à chevauchement modulée.

5. Appareil selon l'une quelconque des revendications précédentes, dans lequel l'outil de transformée à chevauchement modulée (131) est configuré pour effectuer:

$$X(k) = \sqrt{\frac{2}{N_F}} \sum_{n=0}^{2N_F-1} w_N(n) \cdot t(n) \cos\left[\frac{\pi}{N_F}\left(n + \frac{1}{2} + \frac{N_F}{2}\right)\left(k + \frac{1}{2}\right)\right] \ pour \ k = 0..N_F - 1$$

où $X(k)$ est la valeur de fréquence de transformée à chevauchement modulée à un indice de fréquence $k$, $n$ est le moment, $w_N(n)$ est la fonction de division en fenêtres d'analyse, $t(n)$ est un tampon d'entrée de temps, et $N_F$ est le nombre d'échantillons traités dans une trame.

6. Appareil (140, 140A, 120) pour décoder un signal audio, ou une version traitée de ce dernier, défini dans le domaine de la fréquence, FD, l'appareil comprenant:

un moyen de lecture de flux de bits (141) configuré pour lire un flux de bits codant le signal audio; et
un outil de transformée à chevauchement modulée inverse (147) configuré pour effectuer une synthèse de transformée à chevauchement modulée inverse sur le signal audio, ou une version traitée de ce dernier, à l'aide d'une fonction de division en fenêtres de synthèse (90) présentant une partie de croisement (94) venant en croisement avec une fonction linéaire en correspondance d'au moins quatre points (#1, #2, #3, #4),
dans lequel la fonction de division en fenêtres de synthèse (90, 290) est définie de manière à être asymétrique,
dans lequel la fonction de division en fenêtres de synthèse (90, 290) est définie de manière à être, dans la partie de croisement (44, 94, 244):

supérieure à la fonction linéaire dans un premier intervalle entre un premier point de croisement et un deuxième point de croisement;
inférieure à la fonction linéaire dans un deuxième intervalle entre le deuxième point de croisement et un troisième point de croisement;
supérieure à la fonction linéaire dans un troisième intervalle entre le troisième point de croisement et un quatrième point de croisement,

dans lequel la fonction de division en fenêtres de synthèse est définie de sorte que la valeur maximale absolue se situe dans l'un parmi le premier et le troisième intervalle,
**caractérisé par le fait que** la fonction linéaire est une fonction constante de valeur constante 1.

7. Appareil selon la revendication 6,
dans lequel la fonction de division en fenêtres de synthèse (90, 290) est définie de sorte que le maximum de la fonction de division en fenêtres de synthèse (90, 290) soit de moins de 25% supérieur à la valeur de la fonction linéaire (90, 290) au même moment.

8. Appareil selon la revendication 6 ou 7, l'outil de transformée à chevauchement modulée inverse (147) est configuré pour:
mettre à échelle les valeurs dans un tampon de repliement dans le domaine temporel par les valeurs de la fonction de division en fenêtres de synthèse (90).

9. Appareil selon l'une quelconque des revendications 6 à 8, dans lequel l'outil de transformée à chevauchement modulée inverse (147) est configuré pour générer une représentation du signal dans le domaine temporel, TD, sous forme de

$$\hat{t}(n) = \sqrt{\frac{2}{N_F}} \sum_{k=0}^{N_F-1} \hat{X}(k) \cos\left[\frac{\pi}{N_F}\left(n + \frac{1}{2} + \frac{N_F}{2}\right)\left(k + \frac{1}{2}\right)\right] \ pour \ n = 0..2N_F - 1$$

où $\hat{t}(n)$ est un tampon de repliement, $\hat{X}(k)$ est le signal audio ou une version traitée de ce dernier, et $N_F$ est le nombre d'échantillons pour une trame TD.

10. Appareil selon l'une quelconque des revendications 6 à 9, dans lequel l'outil de transformée à chevauchement modulée inverse (147) est configuré pour:
effectuer une division en fenêtres (S162) du tampon à repliement dans le temps.

11. Appareil selon l'une quelconque des revendications 6 à 10, dans lequel l'outil de transformée à chevauchement modulée inverse (147) est configuré pour effectuer une opération de division en fenêtres en effectuant:

$$\hat{t}(n) = w_N(2N - 1 - n) \cdot \hat{t}(n) \ \ pour \ \ n = 0..2N_F - 1$$

12. Appareil selon l'une quelconque des revendications 6 à 11, dans lequel l'outil de transformée à chevauchement modulée inverse (147) est configuré pour effectuer une opération de chevauchement et addition (S163).

13. Appareil selon l'une quelconque des revendications 6 à 12, dans lequel l'outil de transformée à chevauchement modulée inverse (147) est configuré pour effectuer une opération de chevauchement et addition comme:

$$\hat{x}(n) = \ mem\_ola\_add(n) + \ \hat{t}(Z + n) \ \ pour \ \ n = 0..N_F - Z - 1$$

$$\hat{x}(n) = \hat{t}(Z + n) \ \ pour \ \ n = N_F - Z..N_F - 1$$

$$mem\_ola\_add(n) = \hat{t}(N_F + Z + n) \ \ pour \ \ n = 0..N_F - Z - 1$$

où $\hat{x}(n)$ est la valeur de sortie, $\hat{t}(.)$ est un tampon à repliement dans le temps divisé en fenêtres, et $N_F$ est le nombre d'échantillons dans une trame.

14. Appareil selon l'une quelconque des revendications 6 à 13, dans lequel:
la fonction de division en fenêtres de synthèse (90) est définie de sorte que, dans la partie de croisement (44, 244), une valeur maximale relative (43', 243') se situe dans le premier ou le troisième intervalle (41, 43, 241, 243) et une valeur minimale relative (42', 242') se situe dans le deuxième intervalle (42, 242).

15. Appareil selon l'une quelconque des revendications 6 à 14, dans lequel:
la fonction de division en fenêtres de synthèse (90) est définie de manière à présenter, dans la partie de croisement (44, 244, 94), une valeur supérieure à la fonction linéaire dans un intervalle composé des 30% et 50% de deux trames.

16. Appareil selon la revendication 14 ou 15, dans lequel:
la fonction de division en fenêtres de synthèse (90) est définie de sorte que le maximum de la fonction de division en fenêtres (90) soit de moins de 25% supérieur à la valeur de la fonction linéaire au même moment.

17. Appareil selon l'une quelconque des revendications 14 à 16, dans lequel:
la fonction de division en fenêtres de synthèse (90) est définie de sorte que le maximum (41', 241') de la fonction de division en fenêtres (90) soit de moins de 5% supérieur à la valeur de la fonction linéaire au même moment.

18. Appareil selon l'une quelconque des revendications 14 à 17, dans lequel:
la fonction de division en fenêtres de synthèse (90) est définie de manière à présenter une deuxième dérivée numérique entre $-3*10^{-4}$ et $+3*10^{-4}$.

19. Appareil selon l'une quelconque des revendications 6 à 18, dans lequel:
la fonction de division en fenêtres de synthèse (90) est définie de manière à présenter une troisième dérivée numérique entre $-2*10^{-5}$ et $+2*10^{-5}$.

20. Appareil selon l'une quelconque des revendications 6 à 19, comprenant par ailleurs:
un espace de mémoire (113) destiné à mémoriser les valeurs de la fonction de division en fenêtres de synthèse (90).

**21.** Appareil selon l'une quelconque des revendications 6 à 20, dans lequel la transformée à chevauchement modulée inverse est une transformée cosinusoïdale discrète modifiée inverse, IMDCT, ou une transformée sinusoïdale discrète modifiée inverse, IMDST.

**22.** Appareil selon l'une quelconque des revendications 1 à 5, dans lequel la transformée à chevauchement modulée est une transformée cosinusoïdale discrète modifiée, MDCT, ou une transformée sinusoïdale discrète modifiée, MDST.

**23.** Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de $\pm 1\%$: -7.078546706512391e-04f, -2.098197727900724e-03f, -4.525198076002370e-03f, -8.233976327300612e-03f, -1.337713096257934e-02f, -1.999721557401502e-02f, -2.800909464274782e-02f, -3.721502082245055e-02f, -4.731768261606175e-02f, -5.794654834034055e-02f, -6.867606753531441e-02f, -7.904647440788692e-02f, -8.859705468085925e-02f, -9.688303623049199e-02f, -1.034961241263523e-01f, -1.080766457616878e-01f, -1.103242262600913e-01f, -1.099809851424550e-01f, -1.068172142230882e-01f, -1.006190418791648e-01f, -9.116452506492527e-02f, -7.820617483254730e-02f, -6.146688124166948e-02f, -4.063362855701623e-02f, -1.536329520788766e-02f, +1.470155068746303e-02f, +4.989736509080558e-02f, +9.050369257152079e-02f, +1.366911019414417e-01f, +1.884686389218322e-01f, +2.456456803467095e-01f, +3.077789078889820e-01f, +3.741642373060188e-01f, +4.438114799213576e-01f, +5.154735456539700e-01f, +5.876661722564289e-01f, +6.587619767809000e-01f, +7.270576699841359e-01f, +7.908752989295335e-01f, +8.486643364959733e-01f, +8.991320235484349e-01f, +9.413348145272842e-01f, +9.747634827941575e-01f, +9.994114730415857e-01f, +1.015760373791603e+00f, +1.024736164069697e+00f, +1.027634294456205e+00f, +1.025991493983836e+00f, +1.021427210603284e+00f, +1.015439859549357e+00f, +1.009366925499550e+00f, +1.003508162416449e+00f, +9.988898206257559e-01f, +9.953133902427869e-01f, +9.925943919208190e-01f, +9.905771957917731e-01f, +9.891371616557014e-01f, +9.881790747212391e-01f, +9.876249269174586e-01f, +9.874056275509585e-01f, +9.874524849192456e-01f, +9.876951134084213e-01f, +9.880640617030884e-01f, +9.884926873551375e-01f, +9.889230031022089e-01f, +9.893074965384659e-01f, +9.896146331889107e-01f, +9.898319269347060e-01f, +9.899693102025342e-01f, +9.900603352632121e-01f, +9.901575015155720e-01f, +9.903255289051605e-01f, +9.906303787150326e-01f, +9.911298894709990e-01f, +9.918665491182922e-01f, +9.928619727154252e-01f, +9.941156069136238e-01f, +9.956033775539884e-01f, +9.972793109558521e-01f, +9.990784840729244e-01f, +1.000922365901945e+00f, +1.002728111386909e+00f, +1.004416038098237e+00f, +1.005919224127911e+00f, +1.007189345025525e+00f, +1.008200146369426e+00f, +1.008949493525753e+00f, +1.009458241425143e+00f, +1.009768980817384e+00f, +1.009940336228694e+00f, +1.010039453539107e+00f, +1.010132323996401e+00f, +1.010272524848519e+00f, +1.010494354532353e+00f, +1.010808068774316e+00f, +1.011201071127927e+00f, +1.011641272406023e+00f, +1.012080125934687e+00f, +1.012458183122033e+00f, +1.012706955800289e+00f, +1.012755013843985e+00f, +1.012530134411619e+00f, +1.011962331100864e+00f, +1.010982135506986e+00f, +1.009512438049510e+00f, +1.007460860286395e+00f, +1.004708677491086e+00f, +1.001111413242302e+00f, +9.965041017623596e-01f, +9.907199995730845e-01f, +9.823765865983288e-01f, +9.708821747608998e-01f, +9.546732976073705e-01f, +9.321553861564006e-01f, +9.018003682081348e-01f, +8.623984077953557e-01f, +8.132817365236141e-01f, +7.544551974836834e-01f, +6.866580716267418e-01f, +6.113488038789190e-01f, +5.306181649316597e-01f, +4.471309850999502e-01f, +3.639114681156236e-01f, +2.841647033392408e-01f, +2.110209448747969e-01f, +1.472287968327703e-01f, +9.482665349502291e-02f, +5.482436608328477e-02f, +2.701461405056264e-02f, +9.996743588367519e-03f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f, +0.000000000000000e+00f

**24.** Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de ±1%: -4.619898752628163e-04f, -9.747166718929050e-04f, -1.664473096973725e-03f, -2.597106916737789e-03f, -3.806285163352241e-03f, -5.324608721716763e-03f, -7.175885277771099e-03f, -9.382480860899108e-03f, -1.195270300743193e-02f, -1.489528159506296e-02f, -1.820666399965468e-02f, -2.187570925786862e-02f, -2.588471937157619e-02f, -3.020862738245264e-02f, -3.481597793538342e-02f, -3.967067992672979e-02f, -4.472698045914417e-02f, -4.994225863256500e-02f, -5.526334794593565e-02f, -6.063717235243996e-02f, -6.600961519440657e-02f, -7.131966266443390e-02f, -7.651178225890490e-02f, -8.152964005319532e-02f, -8.631137544905677e-02f, -9.080411291245728e-02f, -9.495377758870335e-02f, -9.870736514214426e-02f, -1.020202684361974e-01f, -1.048438825017798e-01f, -1.071382314127799e-01f, -1.088690135027248e-01f, -1.099969655786929e-01f, -1.104898474883336e-01f, -1.103225838568563e-01f, -1.094621746650760e-01f, -1.078834293141886e-01f, -1.055612509762041e-01f, -1.024650162703341e-01f, -9.857014566194629e-02f, -9.384684920715425e-02f, -8.826309993000785e-02f, -8.178792716809512e-02f, -7.438785600211463e-02f, -6.602189797715241e-02f, -5.665655641133161e-02f, -4.624456893420224e-02f, -3.474585776145929e-02f, -2.211581608120528e-02f, -8.310425696208936e-03f, +6.717697635290676e-03f, +2.300642061077823e-02f, +4.060106462625085e-02f, +5.953239090915557e-02f, +7.983354189816511e-02f, +1.015233140203748e-01f, +1.246171387327525e-01f, +1.491152519299797e-01f, +1.750067399059861e-01f, +2.022699854906251e-01f, +2.308655379767671e-01f, +2.607365124918583e-01f, +2.918144694729168e-01f, +3.240095704645023e-01f, +3.572175180786021e-01f, +3.913146885756875e-01f, +4.261571642320424e-01f, +4.615925445090212e-01f, +4.974471592901086e-01f, +5.335326819631583e-01f, +5.696546730080154e-01f, +6.056083823929643e-01f, +6.411830842823245e-01f, +6.761653499550255e-01f, +7.103400549562944e-01f, +7.434943718765665e-01f, + 7.754281892901473e-01f, +8.059437233154637e-01f, +8.348589373399948e-01f, +8.620108336276733e-01f, +8.872599706865123e-01f, +9.104863121445679e-01f, +9.315962496426278e-01f, +9.505220861927248e-01f, +9.672366712325431e-01f, +9.817397501303696e-01f, +9.940557180662704e-01f, +1.004247514102417e+00f, +1.012407428282884e+00f, +1.018650990561848e+00f, +1.023118841384460e+00f, +1.025972450969440e+00f, +1.027397523939210e+00f, +1.027585830688143e+00f, +1.026738673647482e+00f, +1.025061777648234e+00f, +1.022756514615106e+00f, +1.020009139549275e+00f, +1.016996499560845e+00f, +1.013915946100629e+00f, +1.011044869639164e+00f, +1.007773858455400e+00f, +1.004848753962734e+00f, +1.002245009135684e+00f, +9.999393169239009e-01f, +9.979055415627330e-01f, +9.961203379971326e-01f, +9.945597525471822e-01f, +9.932031606606762e-01f, +9.920297273323891e-01f, +9.910230654424902e-01f, +9.901668953434221e-01f, +9.894488374513719e-01f, +9.888556356037892e-01f, +9.883778520531268e-01f, +9.880051626345804e-01f, +9.877295459610343e-01f, +9.875412739766566e-01f, +9.874329809802893e-01f, +9.873949921033299e-01f, +9.874197049003676e-01f, +9.874973205882319e-01f, +9.876201238703241e-01f, +9.877781920433015e-01f, +9.879637979933339e-01f, +9.881678007807095e-01f, +9.883835200189653e-01f, +9.886022219397892e-01f, +9.888182771263505e-01f, +9.890247977602895e-01f, +9.892178658748239e-01f, +9.893923680007577e-01f, +9.895463342815009e-01f, +9.896772011542693e-01f, +9.897859195209235e-01f, +9.898725363809847e-01f, +9.899410789223559e-01f, +9.899945557067980e-01f, +9.900394023736973e-01f, +9.900814722948890e-01f, +9.901293790312005e-01f, +9.901902265696609e-01f, +9.902734448815004e-01f, +9.903862280081246e-01f, +9.905379830873822e-01f, +9.907348826312993e-01f, +9.909842592301273e-01f, +9.912905118607647e-01f, +9.916586940166509e-01f, +9.920906151219310e-01f, +9.925887208794144e-01f, +9.931516528513824e-01f, +9.937790866568735e-01f, +9.944668184371617e-01f, +9.952116634297566e-01f, +9.960068616185641e-01f, +9.968461329825753e-01f, +9.977203369515556e-01f, +9.986213520769593e-01f, +9.995382582242990e-01f, +1.000461955079660e+00f, +1.001380551217109e+00f, +1.002284871786226e+00f, +1.003163845364970e+00f, +1.004009147462043e+00f, +1.004811375053364e+00f, +1.005563968008037e+00f, +1.006259855360867e+00f, +1.006895570408563e+00f, +1.007466616298057e+00f, +1.007972441990187e+00f, +1.008411468616852e+00f, +1.008786009787269e+00f, +1.009097763850333e+00f, +1.009351762546296e+00f, +1.009552401900961e+00f, +1.009707093778162e+00f, +1.009822090220407e+00f, +1.009906958448099e+00f, +1.009969021400474e+00f, +1.010017890428877e+00f, +1.010060809299530e+00f, +1.010106564965965e+00f, +1.010161131093372e+00f, +1.010231078494249e+00f, +1.010319484524512e+00f, +1.010430470494512e+00f, +1.010564099281000e+00f, +1.010721360243234e+00f, +1.010899655674578e+00f, +1.011096993993037e+00f, +1.011308167670753e+00f, +1.011529185153809e+00f, +1.011753008569803e+00f, +1.011973876511603e+00f, +1.012182837094955e+00f, +1.012373028737774e+00f, +1.012535058602453e+00f, +1.012660975529858e+00f, +1.012740575296603e+00f, +1.012765922449960e+00f, +1.012726958954961e+00f, +1.012615904116265e+00f, +1.012422888521601e+00f, +1.012140460211194e+00f, +1.011758810583150e+00f, +1.011269960947744e+00f, +1.010663676735228e+00f, +1.009930754807923e+00f,
+1.009058249873833e+00f, +1.008034308295421e+00f, +1.006843352506855e+00f,
+1.005470005637052e+00f, +1.003894772403371e+00f, +1.002098854400575e+00f,
+1.000060686758758e+00f, +9.977600196406868e-01f, +9.951746430061121e-01f, +9.922861082472264e-01f,
+9.890757868707590e-01f, +9.847362453480265e-01f, +9.798613526271561e-01f, +9.741378617337759e-01f,
+9.673331975559332e-01f, +9.592539757044516e-01f, +9.496984081652284e-01f, +9.384634163826711e-01f,
+9.253567968750328e-01f, +9.101986790930605e-01f, +8.928338316495705e-01f, +8.731437835983047e-01f,
+8.510420440685049e-01f, +8.264839911291133e-01f, +7.994681492797084e-01f, +7.700431275216928e-01f,
+7.383028603058783e-01f, +7.043814340356083e-01f, +6.684616478236647e-01f, +6.307755329382612e-01f,
+5.915799587176216e-01f, +5.511703155400274e-01f, +5.098915423728179e-01f, +4.681017110047964e-01f,
+4.261772971493010e-01f, +3.845172335531009e-01f, +3.435228672445613e-01f, +3.036004651973099e-01f,
+2.651434678028531e-01f, +2.285283969438072e-01f, +1.941021906320984e-01f, +1.621735416384830e-01f,
+1.330015240938615e-01f, +1.067840430193724e-01f, +8.365057236623041e-02f, +6.365188111381356e-02f,
+4.676538412257621e-02f, +3.288072750732215e-02f, +2.183057564646270e-02f, +1.336381425803019e-02f,
+6.758124889697787e-03f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f

25. Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de ±1%: -3.613496418928369e-04f, -7.078546706512391e-04f, -1.074443637110903e-03f,
-1.533478537964509e-03f, -2.098197727900724e-03f, -2.778420871815740e-03f, -3.584129920673041e-03f,
-4.525198076002370e-03f, -5.609327243712055e-03f, -6.843234536105624e-03f, -8.233976327300612e-03f,
-9.785314755557023e-03f, -1.149880303071551e-02f, -1.337713096257934e-02f, -1.542181679511618e-02f,
-1.762979910961727e-02f, -1.999721557401502e-02f, -2.252080561390149e-02f, -2.519406300389030e-02f,
-2.800909464274782e-02f, -3.095765092956728e-02f, -3.402996266948349e-02f, -3.721502082245055e-02f,
-4.050053247568393e-02f, -4.387219218706189e-02f, -4.731768261606175e-02f, -5.082325342672667e-02f,
-5.437166635159518e-02f, -5.794654834034055e-02f, -6.153426201732499e-02f, -6.511708163113709e-02f,
-6.867606753531441e-02f, -7.219447805250771e-02f, -7.565695975592170e-02f, -7.904647440788692e-02f,
-8.234442557322251e-02f, -8.553324579905185e-02f, -8.859705468085925e-02f, -9.152091100798199e-02f,
-9.428847446755965e-02f, -9.688303623049198e-02f, -9.929123258537813e-02f, -1.015008467688577e-01f,
-1.034961241263523e-01f, -1.052637003544443e-01f, -1.067939984687745e-01f, -1.080766457616878e-01f,
-1.090997300590506e-01f, -1.098524491515805e-01f, -1.103242262600913e-01f, -1.105084619148789e-01f,
-1.103977408741932e-01f, -1.099809851424550e-01f, -1.092492774392824e-01f, -1.081974227416502e-01f,
-1.068172142230882e-01f, -1.050995803285455e-01f, -1.030360111111103e-01f, -1.006190418791648e-01f,
-9.784120023411771e-02f, -9.469304216883027e-02f, -9.116452506492527e-02f, -8.724644532866996e-02f,
-8.293043914044632e-02f, -7.820617483254730e-02f, -7.306142427456862e-02f, -6.748468182105991e-02f,
-6.146688124166948e-02f, -5.499497258200362e-02f, -4.805444424454820e-02f, -4.063362855701623e-02f,
-3.272045590229335e-02f, -2.430122582451853e-02f, -1.536329520788766e-02f, -5.891434269890659e-03f,
+4.126595858583295e-03f, +1.470155068746303e-02f, +2.584738191459814e-02f, +3.757652772246801e-02f, +4.989736509080558e-02f, +6.282034030592902e-02f, +7.635397728566121e-02f, +9.050369257152079e-02f,
+1.052747118478660e-01f, +1.206703467513333e-01f, +1.366911019414417e-01f, +1.533343890681390e-01f,
+1.705954709184399e-01f, +1.884686389218322e-01f, +2.069449962574092e-01f, +2.260093000067393e-01f,
+2.456456803467095e-01f, +2.658346019332584e-01f, +2.865543814049772e-01f, +3.077789078889820e-01f,
+3.294769437072290e-01f, +3.516171481750350e-01f, +3.741642373060188e-01f, +3.970739591211551e-01f,
+4.203043046885219e-01f, +4.438114799213576e-01f, +4.675442291623012e-01f, +4.914498631045615e-01f,
+5.154735456539700e-01f, +5.395557644293222e-01f, +5.636399817032525e-01f, +5.876661722564289e-01f,
+6.115695310143157e-01f, +6.352890592874099e-01f, +6.587619767809000e-01f, +6.819230974423550e-01f,
+7.047092819314779e-01f, +7.270576699841359e-01f, +7.489068963384272e-01f, +7.701990187606995e-01f,
+7.908752989295335e-01f, +8.108788692151807e-01f, +8.301579139160681e-01f, +8.486643364959733e-01f,
+8.663548164329093e-01f, +8.831896853053627e-01f, +8.991320235484349e-01f, +9.141540563656075e-01f,
+9.282282546151819e-01f, +9.413348145272842e-01f, +9.534619388400459e-01f, +9.646048250501910e-01f,
+9.747634827941575e-01f, +9.839435385219192e-01f, +9.921529097154242e-01f, +9.994114730415857e-01f,
+1.005746084650236e+00f, +1.011183971347815e+00f, +1.015760373791603e+00f,
+1.019515072412387e+00f, +1.022490937034641e+00f, +1.024736164069697e+00f,
+1.026304095700693e+00f, +1.027250978292214e+00f, +1.027634294456205e+00f,
+1.027511063644843e+00f, +1.026942795115598e+00f, +1.025991493983836e+00f,
+1.024716149969084e+00f, +1.023175976163407e+00f, +1.021427210603284e+00f,
+1.019521566634239e+00f, +1.017510118327508e+00f, +1.015439859549357e+00f,
+1.013460916839174e+00f, +1.011654901040475e+00f, +1.009366925499550e+00f,
+1.007263182132894e+00f, +1.005313192386866e+00f, +1.003508162416449e+00f,
+1.001840787319378e+00f, +1.000303927234380e+00f, +9.988898206257559e-01f, +9.975915283480670e-
01f, +9.964015284765968e-01f, +9.953133902427869e-01f, +9.943201078053212e-01f, +9.934158959186011e-
01f, +9.925943919208190e-01f, +9.918510277326026e-01f, +9.911797988363887e-01f, +9.905771957917731e-
01f, +9.900381047643838e-01f, +9.895594394179152e-01f, +9.891371616557014e-01f, +9.887684373604154e-
01f, +9.884497924570929e-01f, +9.881790747212391e-01f, +9.879528358230726e-01f, +9.877691368590689e-
01f, +9.876249269174586e-01f, +9.875179947346887e-01f, +9.874458127312921e-01f, +9.874056275509585e-
01f, +9.873951115886979e-01f, +9.874115368168944e-01f, +9.874524849192456e-01f, +9.875149888347144e-
01f, +9.875968894760857e-01f, +9.876951134084213e-01f, +9.878075819424549e-01f, +9.879311998177238e-
01f, +9.880640617030884e-01f, +9.882032571565917e-01f, +9.883471084085503e-01f, +9.884926873551375e-
01f, +9.886386592120545e-01f, +9.887825578295630e-01f, +9.889230031022089e-01f, +9.890581715933395e-
01f, +9.891867674284610e-01f, +9.893074965384659e-01f, +9.894196399062921e-01f, +9.895220757174378e-
01f, +9.896146331889107e-01f, +9.896970346678272e-01f, +9.897692596535289e-01f, +9.898319269347060e-
01f, +9.898852572653667e-01f, +9.899307640365727e-01f, +9.899693102025343e-01f, +9.900025692522435e-
01f, +9.900321562263099e-01f, +9.900603352632121e-01f, +9.900889812894406e-01f, +9.901206586012907e-
01f, +9.901575015155720e-01f, +9.902023946214220e-01f, +9.902575406142213e-01f, +9.903255289051605e-
01f, +9.904087914462694e-01f, +9.905096491583045e-01f, +9.906303787150326e-01f, +9.907727108894024e-
01f, +9.909387444078919e-01f, +9.911298894709990e-01f, +9.913476318763218e-01f, +9.915928560402563e-
01f, +9.918665491182922e-01f, +9.921691315380984e-01f, +9.925010851461232e-01f, +9.928619727154252e-
01f, +9.932519181564613e-01f, +9.936700207375173e-01f, +9.941156069136238e-01f, +9.945873147903244e-
01f, +9.950837402063278e-01f, +9.956033775539884e-01f, +9.961439922621166e-01f, +9.967034533921340e-
01f, +9.972793109558521e-01f, +9.978690858367024e-01f, +9.984697087896268e-01f, +9.990784840729244e-
01f, +9.996919011206490e-01f, +1.000308193833526e+00f, +1.000922365901945e+00f,
+1.001532636590676e+00f, +1.002135464655177e+00f, +1.002728111386909e+00f,
+1.003307449770187e+00f, +1.003870934089686e+00f, +1.004416038098237e+00f,
+1.004940548815171e+00f, +1.005442141810160e+00f, +1.005919224127911e+00f,
+1.006370303149314e+00f, +1.006793927824538e+00f, +1.007189345025525e+00f,
+1.007555573455895e+00f, +1.007892674961336e+00f, +1.008200146369426e+00f,
+1.008478423284851e+00f, +1.008727884997619e+00f, +1.008949493525753e+00f,
+1.009144112734761e+00f, +1.009313224929575e+00f, +1.009458241425143e+00f,
+1.009581280555682e+00f, +1.009684090687164e+00f, +1.009768980817384e+00f,
+1.009838308708799e+00f, +1.009894548257807e+00f, +1.009940336228694e+00f,
+1.009977916643680e+00f, +1.010010230290263e+00f, +1.010039453539107e+00f,
+1.010068202038694e+00f, +1.010098388689342e+00f, +1.010132323996401e+00f,
+1.010171656775640e+00f, +1.010218096148412e+00f, +1.010272524848519e+00f,
+1.010336490294771e+00f, +1.010410221483215e+00f, +1.010494354532353e+00f,
+1.010588873699422e+00f, +1.010693501186928e+00f, +1.010808068774316e+00f,
+1.010931436739342e+00f, +1.011062876503041e+00f, +1.011201071127927e+00f, +1.011344700694417e+00f, +1.011491904228184e+00f, +1.011641272406023e+00f,
+1.011790282474963e+00f, +1.011937567254485e+00f, +1.012080125934687e+00f,
+1.012216235487353e+00f, +1.012342907951334e+00f, +1.012458183122033e+00f,
+1.012558879696851e+00f, +1.012642857380847e+00f, +1.012706955800289e+00f,
+1.012748952907404e+00f, +1.012765799894453e+00f, +1.012755013843985e+00f,
+1.012713798678211e+00f, +1.012639775003457e+00f, +1.012530134411619e+00f,
+1.012382309473470e+00f, +1.012194068117524e+00f, +1.011962331100864e+00f,
+1.011685173724601e+00f, +1.011359143572147e+00f, +1.010982135506986e+00f,
+1.010550715971368e+00f, +1.010062133151922e+00f, +1.009512438049510e+00f,
+1.008898689394160e+00f, +1.008215923600973e+00f, +1.007460860286395e+00f,
+1.006627741823389e+00f, +1.005712337656749e+00f, +1.004708677491086e+00f,
+1.003611467285588e+00f, +1.002414286392268e+00f, +1.001111413242302e+00f, +9.996961651093181e-01f, +9.981625949525345e-01f, +9.965041017623596e-01f, +9.947148884277037e-01f, +9.927891912841345e-01f, +9.907199995730845e-01f, +9.884793707533194e-01f, +9.855347660016696e-01f, +9.823765865983286e-01f, +9.789747333404933e-01f, +9.751623811486372e-01f, +9.708821747608998e-01f, +9.660805524695870e-01f, +9.606976399184645e-01f, +9.546732976073706e-01f, +9.479479345282376e-01f, +9.404609052933396e-01f, +9.321553861564006e-01f, +9.229775478442888e-01f, +9.128745354570823e-01f, +9.018003682081348e-01f, +8.897163275605041e-01f, +8.765908974996186e-01f, +8.623984077953557e-01f, +8.471200801854385e-01f, +8.307479727020245e-01f, +8.132817365236141e-01f, +7.947291447585267e-01f, + 7.751108841891807e-01f, +7.544551974836834e-01f, + 7.327963552921717e-01f, +7.101790843209148e-01f, +6.866580716267418e-01f, +6.622962432368731e-01f, +6.371684119604742e-01f, +6.113488038789190e-01f, +5.849206604934815e-01f, +5.579747428663487e-01f, +5.306181649316717e-01f, +5.029523957059122e-01f, +4.750868825511614e-01f, +4.471309850999535e-01f, +4.192049917945288e-01f, +3.914252910998820e-01f, +3.639114681156252e-01f, +3.367837772954476e-01f, +3.101627843160973e-01f, +2.841647033392418e-01f, +2.589033711808454e-01f, +2.344880603710975e-01f, +2.110209448747974e-01f, +1.885997642296488e-01f, +1.673100807904834e-01f, +1.472287968327706e-01f, +1.284223074167396e-01f, +1.109422548710344e-01f, +9.482665349502306e-02f, +8.009914366829558e-02f, +6.676765847398403e-02f, +5.482436608328485e-02f, +4.424588851571281e-02f, +3.499361000717621e-02f, +2.701461405056267e-02f, +2.024370180670145e-02f, +1.460796755137538e-02f, +9.996743588367531e-03f, +5.305235098871444e-03f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f, +0.000000000000000e+00f

26. Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de $\pm 1\%$: -3.021153494057143e-04f, -5.867737487939294e-04f, -8.366504004139796e-04f, -1.126635355725494e-03f, -1.470492941694331e-03f, -1.873473391018495e-03f, -2.339292362082021e-03f, -2.872008069419264e-03f, -3.476256385086407e-03f, -4.155963816705528e-03f, -4.914563787665504e-03f, -5.755172503953251e-03f, -6.680623380533122e-03f, -7.693816924650567e-03f, -8.796760749750191e-03f, -9.990503073705982e-03f, -1.127574117138621e-02f, -1.265334152129685e-02f, -1.412438986522702e-02f, -1.568889620430290e-02f, -1.734512089366117e-02f, -1.909097368362797e-02f, -2.092546711168754e-02f, -2.284684792818856e-02f, -2.485207716234951e-02f, -2.693746704328349e-02f, -2.909952486193999e-02f, -3.133504629493832e-02f, -3.363960728361352e-02f, -3.600820974457969e-02f, -3.843601741746971e-02f, -4.091746034850161e-02f, -4.344654894948344e-02f, -4.601786724624048e-02f, -4.862598509282497e-02f, -5.126474204655663e-02f, -5.392644753556616e-02f, -5.660384311081047e-02f, -5.929116747072080e-02f, -6.198268202511926e-02f, -6.467025548071184e-02f, -6.734542216184526e-02f, -7.000099017198280e-02f, -7.263057011354321e-02f, -7.522784961377151e-02f, -7.778525942347714e-02f, -8.029480247839878e-02f, -8.274924535373614e-02f, -8.514125464087215e-02f, -8.746379123238275e-02f, -8.971069341834263e-02f, -9.187564084638347e-02f, -9.395176975347193e-02f, -9.593137735886889e-02f, -9.780843257659243e-02f, -9.957851303827886e-02f, -1.012361165314596e-01f, -1.027741036495644e-01f, -1.041861222641119e-01f, -1.054680247057000e-01f, -1.066160875985523e-01f, -1.076255384835563e-01f, -1.084912299471198e-01f, -1.092087422379003e-01f, -1.097736146613313e-01f, -1.101808861640070e-01f, -1.104271876052675e-01f, -1.105108362290460e-01f, -1.104281465492726e-01f, -1.101739218186236e-01f, -1.097437360338336e-01f, -1.091353125572511e-01f, -1.083467335729228e-01f, -1.073739938306107e-01f, -1.062130155324388e-01f, -1.048606145834788e-01f, -1.033132401525343e-01f, -1.015673163469357e-01f, -9.962005506126154e-02f, -9.746803229469267e-02f, -9.510723623306666e-02f, -9.253303383231506e-02f, -8.974125216128212e-02f, -8.672877689119252e-02f, -8.349213839083708e-02f, -8.002639902061687e-02f, -7.632679536516856e-02f, -7.238806162166744e-02f, -6.820576796149519e-02f, -6.377611429172260e-02f, -5.909386001558149e-02f, -5.415316322402774e-02f, -4.894812724598650e-02f, -4.347347112195197e-02f, -3.772461300253332e-02f, -3.169587609244436e-02f, -2.538179830690266e-02f, -1.877689096555516e-02f, -1.187461378850388e-02f, -4.669099247423082e-03f, +2.844096748870385e-03f, +1.066976124794342e-02f, +1.881355950582949e-02f, +2.728156010437695e-02f, +3.607810469851272e-02f, +4.520702759803914e-02f, +5.467238802204326e-02f, +6.447866054615346e-02f, +7.462862199422061e-02f, +8.512490568723846e-02f, +9.596983987496970e-02f, +1.071650779014335e-01f, +1.187115850305241e-01f, +1.306101067250375e-01f, +1.428596447589721e-01f, +1.554584725339102e-01f, +1.684041609371527e-01f, +1.816947894623263e-01f, +1.953273880886783e-01f, +2.092963206850239e-01f, +2.235945635254679e-01f, +2.382160219461597e-01f, +2.531529721334063e-01f, +2.683961570569586e-01f, +2.839361392493072e-01f, +2.997624255177811e-01f, +3.158619077906196e-01f, +3.322210551086769e-01f, +3.488264676990591e-01f, +3.656640377499646e-01f, +3.827152968157059e-01f, +3.999611859760947e-01f, +4.173843265025887e-01f, +4.349669624916473e-01f, +4.526876397402144e-01f, +4.705242008503956e-01f, +4.884539254831315e-01f, +5.064545550235134e-01f, +5.245006748662190e-01f, +5.425674372882107e-01f, +5.606312044701524e-01f, +5.786672646386708e-01f, +5.966477035050948e-01f, +6.145458904162185e-01f, +6.323361944662236e-01f, +6.499926319211774e-01f, +6.674874032292857e-01f, +6.847932667399612e-01f, +7.018835463513400e-01f, +7.187322544823347e-01f, +7.353128213893310e-01f, +7.516001985652684e-01f, +7.675699252273948e-01f, +7.831974571624924e-01f, +7.984583859818390e-01f, +8.133295347030278e-01f, +8.277892271515950e-01f, +8.418178561101360e-01f, +8.553961300139363e-01f, +8.685068980898102e-01f, +8.811334436653052e-01f, +8.932596784799233e-01f, +9.048748835980528e-01f, +9.159657608120536e-01f, +9.265215299450000e-01f, +9.365339988633418e-01f, +9.459977028429117e-01f, +9.549088408436811e-01f, +9.632658122557368e-01f, +9.710688896122810e-01f, +9.783204156360773e-01f, +9.850226760127131e-01f, +9.911792082081333e-01f, +9.967989944502682e-01f, +1.001894024615659e+00f, +1.006474342231823e+00f, +1.010552057109195e+00f, +1.014142538208007e+00f, +1.017262593268930e+00f, +1.019928842669923e+00f, +1.022159867011177e+00f, +1.023976320927187e+00f, +1.025400734608122e+00f, +1.026455340400072e+00f, +1.027164510654160e+00f, +1.027552729180790e+00f, +1.027644462380432e+00f, +1.027463246660797e+00f, +1.027035903410657e+00f, +1.026389068000259e+00f, +1.025548201799728e+00f, +1.024537134749709e+00f, +1.023380803775376e+00f, +1.022103695693341e+00f, +1.020728359657958e+00f, +1.019275334687329e+00f, +1.017765178792830e+00f, +1.016217355867531e+00f, +1.014665311686846e+00f, +1.013249071090664e+00f, +1.011948006992127e+00f, +1.010189090179223e+00f, +1.008557961167850e+00f, +1.007011287608451e+00f, +1.005548764575910e+00f, +1.004168417268956e+00f, +1.002867268893035e+00f, +1.001641769115897e+00f, +1.000489068954641e+00f, +9.994060799749374e-01f, +9.983898865406841e-01f, +9.974370849972721e-01f, +9.965444836911705e-01f, +9.957098545943852e-01f, +9.949302413030897e-01f, +9.942024045863540e-01f, +9.935241604969254e-01f, +9.928930430130044e-01f, +9.923068103443909e-01f, +9.917633778190438e-01f, +9.912597642374404e-01f, +9.907954498484041e-01f, +9.903677893656558e-01f, +9.899751611066148e-01f, +9.896160337369861e-01f, +9.892890160408989e-01f, +9.889928511129679e-01f, +9.887260333430423e-01f, +9.884868721088945e-01f, +9.882751039537586e-01f, +9.880892168751595e-01f, +9.879277114724612e-01f, +9.877898261218510e-01f, +9.876743442038471e-01f, +9.875807496078497e-01f, +9.875072021876561e-01f, +9.874529447589979e-01f, +9.874169741527905e-01f, +9.873984685207834e-01f, +9.873958301311858e-01f, +9.874080027710336e-01f, +9.874343401290739e-01f, +9.874736235387018e-01f, +9.875243137719285e-01f, +9.875856201221135e-01f, +9.876563785063032e-01f, +9.877358921155149e-01f, +9.878225576787804e-01f, +9.879150968481590e-01f, +9.880132731565830e-01f, +9.881156946084619e-01f, +9.882211314188272e-01f, +9.883289032519310e-01f, +9.884378310018685e-01f, +9.885476787868710e-01f, +9.886568414746639e-01f, +9.887645868459630e-01f, +9.888708540445242e-01f, +9.889744320992592e-01f, +9.890747269455915e-01f, +9.891710038703801e-01f, +9.892631024032380e-01f, +9.893507219573624e-01f, +9.894330645494204e-01f, +9.895096919388534e-01f, +9.895810813422480e-01f, +9.896467469067676e-01f, +9.897067365020641e-01f, +9.897606930400666e-01f, +9.898094478563998e-01f, +9.898530133261707e-01f, +9.898914705684924e-01f, +9.899254194103574e-01f, +9.899554202030650e-01f, +9.899824494486951e-01f, +9.900065116928948e-01f, +9.900284805353695e-01f, +9.900497484789281e-01f, +9.900709561632662e-01f, +9.900928358611601e-01f, +9.901163920607219e-01f, +9.901427479709606e-01f, +9.901734275350572e-01f, +9.902087332329851e-01f, +9.902498637985275e-01f, +9.902983686695558e-01f, +9.903548501470234e-01f, +9.904205084933333e-01f, +9.904959297726740e-01f, +9.905825150202904e-01f, +9.906812569810133e-01f, +9.907922087340426e-01f, +9.909165464981378e-01f, +9.910550740962871e-01f, +9.912084614290896e-01f, +9.913768610980639e-01f, +9.915605826937839e-01f, +9.917604214872976e-01f, +9.919767175562684e-01f, +9.922091101818779e-01f, +9.924579135466506e-01f, +9.927231225056266e-01f, +9.930049538427406e-01f, +9.933027281437943e-01f, +9.936161084869942e-01f, +9.939453714404443e-01f, +9.942895145656371e-01f, +9.946481676207727e-01f, +9.950203031067961e-01f, +9.954058173659507e-01f, +9.958038713694317e-01f, +9.962130271017117e-01f, +9.966324689957675e-01f, +9.970615306490058e-01f, +9.974990583293081e-01f, +9.979437430375855e-01f, +9.983940572002874e-01f, +9.988493116887893e-01f, +9.993083430214909e-01f, +9.997689221333534e-01f, +1.000231131275969e+00f, +1.000692135698996e+00f, +1.001152013920163e+00f, +1.001608526000461e+00f, +1.002060493867275e+00f, +1.002507212061815e+00f, +1.002947129400411e+00f, +1.003378909587027e+00f, +1.003801368578070e+00f, +1.004213810320699e+00f, +1.004615386562846e+00f, +1.005004618375781e+00f, +1.005380628601598e+00f, +1.005743282364652e+00f, +1.006091510392348e+00f, +1.006424907424988e+00f, +1.006742427727669e+00f, +1.007044321511378e+00f, +1.007330218597112e+00f, +1.007599401798709e+00f, +1.007852064386603e+00f, +1.008088176165563e+00f, +1.008308033204578e+00f, +1.008511247273756e+00f, +1.008698144207627e+00f, +1.008869515256392e+00f, +1.009025659761512e+00f, +1.009166718967367e+00f, +1.009293362609020e+00f, +1.009406398832440e+00f, +1.009507017171120e+00f, +1.009595264293017e+00f, +1.009672145744679e+00f, +1.009739084785160e+00f, +1.009796675060142e+00f, +1.009846137382005e+00f, +1.009888083631667e+00f, +1.009924092276850e+00f, +1.009955384765721e+00f, +1.009982268770147e+00f, +1.010006298177305e+00f, +1.010028618428735e+00f, +1.010050254076988e+00f, +1.010071952131355e+00f, +1.010094366238073e+00f, +1.010118917317053e+00f, +1.010146497096682e+00f, +1.010177110711677e+00f, +1.010211755260102e+00f, +1.010251003469427e+00f, +1.010295468653759e+00f, +1.010345234996637e+00f, +1.010400316698172e+00f, +1.010461564316351e+00f, +1.010528615445659e+00f, +1.010601521285347e+00f, +1.010679788081867e+00f, +1.010763905869062e+00f, +1.010853429760676e+00f, +1.010947547074519e+00f, +1.011045953108263e+00f, +1.011148486293359e+00f, +1.011254397791134e+00f, +1.011363082075863e+00f, +1.011473302008831e+00f, +1.011584996312149e+00f, +1.011697416504599e+00f, +1.011808919793469e+00f, +1.011919264025716e+00f, +1.012027240794153e+00f, +1.012132151631041e+00f, + 1.012232734564333e+00f, +1.012327560477901e+00f, +1.012416383754384e+00f, +1.012497890726292e+00f, +1.012570434021054e+00f, +1.012633295255708e+00f, +1.012685277016726e+00f, +1.012725564992284e+00f, +1.012752577651415e+00f, +1.012765062889864e+00f, +1.012762356719162e+00f, +1.012743376077777e+00f, +1.012706484200181e+00f, +1.012650842226435e+00f, +1.012575427778520e+00f, +1.012479473490919e+00f, +1.012361105121003e+00f, +1.012219809594718e+00f, +1.012054359992419e+00f, +1.011864000215460e+00f,
+1.011647223869087e+00f, +1.011402518267713e+00f, +1.011129654652857e+00f,
+1.010826951260377e+00f, +1.010492924436361e+00f, +1.010126353960416e+00f,
+1.009725892479312e+00f, +1.009290060983833e+00f, +1.008817301052548e+00f,
+1.008305027555130e+00f, +1.007752833675443e+00f, +1.007157827358150e+00f,
+1.006518049344503e+00f, +1.005831403532018e+00f, +1.005095592119373e+00f,
+1.004308630055050e+00f, +1.003467498305776e+00f, +1.002569500413888e+00f,
+1.001612710105563e+00f, +1.000594272975683e+00f, +9.995111701168786e-01f, +9.983609218719522e-01f, +9.971409288327860e-01f, +9.958488863050556e-01f, +9.944818543153893e-01f, +9.930375282832211e-01f, +9.915146560759479e-01f, +9.899136802423638e-01f, +9.881930623810997e-01f, +9.859422591203311e-01f, +9.835667898378924e-01f, +9.811423034808365e-01f, +9.785214441250228e-01f, +9.756636036109838e-01f, +9.725453442532574e-01f, +9.691456634185092e-01f, +9.654406178310209e-01f, +9.614043615076308e-01f, +9.570113065179300e-01f, +9.522367669696690e-01f, +9.470548839544214e-01f, +9.414403740008491e-01f, +9.353691612846549e-01f, +9.288190093977164e-01f, +9.217662887169115e-01f, +9.141896283466009e-01f, +9.060694681113471e-01f, +8.973891675497357e-01f, +8.881332000806269e-01f, +8.782893885841422e-01f, +8.678469565343039e-01f, +8.567970644671067e-01f, +8.451334654019180e-01f, +8.328542805780399e-01f, +8.199594783897041e-01f, +8.064511006873497e-01f, +7.923346478686025e-01f, +7.776204488292163e-01f, +7.623206183595970e-01f, +7.464486491227057e-01f, +7.300205729992958e-01f, +7.130567383226717e-01f, +6.955805444755916e-01f, +6.776173229836567e-01f, +6.591955305148172e-01f, +6.403486426892321e-01f, +6.211072197441818e-01f, +6.015049275244730e-01f, +5.815787608870452e-01f, +5.613674511156324e-01f, +5.409188627354076e-01f, +5.202736834971303e-01f, +4.994780733459294e-01f, +4.785774177949064e-01f, +4.576172599874928e-01f, +4.366490208265804e-01f, +4.157221460415995e-01f, +3.948856590950757e-01f, +3.741903189229770e-01f, +3.536868899553974e-01f, +3.334260017756462e-01f, +3.134586473252229e-01f, +2.938337904395871e-01f, +2.745992637590817e-01f, +2.558030636168172e-01f, +2.374902188466697e-01f, +2.197036032185785e-01f, +2.024855415115456e-01f, +1.858749915117319e-01f, +1.699067802117410e-01f, +1.546132267478873e-01f, +1.400238206749695e-01f, +1.261637395672913e-01f, +1.130534434072719e-01f, +1.007084973747940e-01f, +8.914024389873081e-02f, +7.835612100141792e-02f, +6.835821233920988e-02f, +5.914211536028976e-02f, +5.069893012340832e-02f, +4.301717763585550e-02f, +3.608020726673359e-02f, +2.986316337017630e-02f, +2.433722657129812e-02f, +1.947675241971700e-02f, +1.525710171255895e-02f, +1.163787492636240e-02f, +8.433087782643718e-03f, +4.449668997344735e-03f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f, +0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f

27. Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de $\pm 1\%$: -2.353032150516754e-04f, -4.619898752628163e-04f, -6.262931535610879e-04f, -7.929180432976445e-04f, -9.747166718929050e-04f, -1.180256894474562e-03f, -1.409209039594871e-03f, -1.664473096973725e-03f, -1.946591608170231e-03f, -2.257081732588478e-03f, -2.597106916737789e-03f, -2.967607624839524e-03f, -3.370454877988472e-03f, -3.806285163352241e-03f, -4.276873767639064e-03f, -4.782469904501813e-03f, -5.324608721716763e-03f, -5.903403814095400e-03f, -6.520419726599805e-03f, -7.175885277771099e-03f, -7.871422820642307e-03f, -8.606586039759667e-03f, -9.382480860899108e-03f, -1.019827182163307e-02f, -1.105520547739066e-02f, -1.195270300743193e-02f, -1.289205910303846e-02f, -1.387263484323160e-02f, -1.489528159506296e-02f, -1.595856621933800e-02f, -1.706288556735433e-02f, -1.820666399965468e-02f, -1.939065975232718e-02f, -2.061355417582714e-02f, -2.187570925786862e-02f, -2.317526315266411e-02f, -2.451227449041489e-02f, -2.588471937157619e-02f, -2.729263737090799e-02f, -2.873390902713615e-02f, -3.020862738245264e-02f, -3.171440372994384e-02f, -3.325098858986303e-02f, -3.481597793538342e-02f, -3.640892406933019e-02f, -3.802742318209150e-02f, -3.967067992672979e-02f, -4.133575417353826e-02f, -4.302203371734278e-02f, -4.472698045914417e-02f, -4.645022292934329e-02f, -4.818891490266687e-02f, -4.994225863256500e-02f, -5.170690802826666e-02f, -5.348162036097223e-02f, -5.526334794593565e-02f, -5.705123152423822e-02f, -5.884271749745559e-02f, -6.063717235243996e-02f, -6.243104027829089e-02f, -6.422303545004304e-02f, -6.600961519440657e-02f, -6.778962269634495e-02f, -6.955996868581379e-02f, -7.131966266443390e-02f, -7.306581273272733e-02f, -7.479758913001458e-02f, -7.651178225890490e-02f, -7.820711420768856e-02f, -7.988010693411644e-02f, -8.152964005319532e-02f, -8.315237353264004e-02f, -8.474728946770714e-02f, -8.631137544905677e-02f, -8.784374452959058e-02f, -8.934164364321417e-02f, -9.080411291245728e-02f, -9.222795761428432e-02f, -9.361232867223340e-02f, -9.495377758870335e-02f, -9.625155313139856e-02f, -9.750284620437569e-02f, -9.870736514214426e-02f, -9.986271288271026e-02f, -1.009680221406219e-01f, -1.020202684361974e-01f, -1.030183804850491e-01f, -1.039596356759290e-01f, -1.048438825017798e-01f, -1.056686838192766e-01f, -1.064342821660323e-01f, -1.071382314127799e-01f, -1.077799961121537e-01f, -1.083570625865931e-01f, -1.088690135027248e-01f, -1.093135588677235e-01f, -1.096903559498340e-01f, -1.099969655786929e-01f, -1.102332261219973e-01f, -1.103972812085189e-01f, -1.104898474883336e-01f, -1.105086416532167e-01f, -1.104537426996073e-01f, -1.103225838568563e-01f, -1.101145827722143e-01f, -1.098276928170364e-01f, -1.094621746650760e-01f, -1.090163960055733e-01f, -1.084908852561722e-01f, -1.078834293141886e-01f, -1.071937180231978e-01f, -1.064196358069465e-01f, -1.055612509762041e-01f, -1.046162812518618e-01f, -1.035849043557610e-01f, -1.024650162703341e-01f, -1.012568997532046e-01f, -9.995864571932928e-02f, -9.857014566194627e-02f, -9.708911135857967e-02f, -9.551545820689084e-02f, -9.384684920715425e-02f, -9.208300062891550e-02f, -9.022171021406450e-02f, -8.826309993000785e-02f, -8.620493821803937e-02f, -8.404742152815330e-02f, -8.178792716809512e-02f, -7.942625026703617e-02f, -7.695980775819990e-02f, -7.438785600211463e-02f, -7.170797002873608e-02f, -6.891994783815969e-02f, -6.602189797715241e-02f, -6.301349420724424e-02f, -5.989191912667712e-02f, -5.665655641133161e-02f, -5.330406164482222e-02f, -4.983427241976235e-02f, -4.624456893420224e-02f, -4.253455686336916e-02f, -3.870195772538443e-02f, -3.474585776145929e-02f, -3.066341518682682e-02f, -2.645425077642105e-02f, -2.211581608120528e-02f, -1.764740541599136e-02f, -1.304581363895818e-02f, -8.310425696208936e-03f, -3.438268661133170e-03f, +1.570315476576933e-03f, +6.717697635290676e-03f, +1.200477020244778e-02f, +1.743398319747869e-02f, +2.300642061077823e-02f, +2.872481423270595e-02f, +3.458896350634671e-02f, +4.060106462625085e-02f, +4.676102915752826e-02f, +5.307133911821893e-02f, +5.953239090915557e-02f, +6.614647812869151e-02f, +7.291293184312803e-02f, +7.983354189816511e-02f, +8.690807412770696e-02f, +9.413813765275064e-02f, +1.015233140203748e-01f, +1.090651518336202e-01f, +1.167626546016197e-01f, +1.246171387327525e-01f, +1.326272948938113e-01f, +1.407938190608664e-01f, +1.491152519299797e-01f, +1.575921408388593e-01f, +1.662224799248571e-01f,
+1.750067399059861e-01f, +1.839431938620024e-01f, +1.930318183054904e-01f, +2.022699854906251e-01f,
+2.116567430906184e-01f, +2.211888523410642e-01f, +2.308655379767671e-01f, +2.406837992341654e-01f,
+2.506420640291662e-01f, +2.607365124918583e-01f, +2.709659073501196e-01f, +2.813259021832532e-01f,
+2.918144694729168e-01f, +3.024270279840051e-01f, +3.131603499997996e-01f, +3.240095704645023e-01f,
+3.349719592361666e-01f, +3.460422935204829e-01f, +3.572175180786021e-01f, +3.684915649120530e-01f,
+3.798595119591716e-01f, +3.913146885756875e-01f, +4.028532873867052e-01f, +4.144688328137527e-01f,
+4.261571642320424e-01f, +4.379113897565727e-01f, +4.497256320417501e-01f, +4.615925445090212e-01f,
+4.735067030065239e-01f, +4.854600184866710e-01f, +4.974471592901086e-01f, +5.094597228333853e-01f,
+5.214909841729947e-01f, +5.335326819631583e-01f, +5.455789811615239e-01f, +5.576217157959890e-01f,
+5.696546730080154e-01f, +5.816685576268035e-01f, +5.936560624526468e-01f, +6.056083823929643e-01f,
+6.175192060085208e-01f, +6.293796611336280e-01f, +6.411830842823245e-01f, +6.529203544876097e-01f,
+6.645840786371451e-01f, +6.761653499550255e-01f, +6.876573952173626e-01f, +6.990511539119996e-01f,
+7.103400549562944e-01f, + 7.215149331458728e-01f, +7.325691772738999e-01f, +7.434943718765665e-01f,
+7.542846327442048e-01f, +7.649313654540612e-01f, +7.754281892901473e-01f, +7.857670170752049e-01f,
+7.959414651061612e-01f, +8.059437233154637e-01f, +8.157687070715176e-01f, +8.254086223972127e-01f,
+8.348589373399948e-01f, +8.441125827416620e-01f, +8.531651194538425e-01f, +8.620108336276733e-01f,
+8.706456337542150e-01f, +8.790631561061171e-01f, +8.872599706865123e-01f, +8.952313288619367e-01f,
+9.029751680353524e-01f, +9.104863121445679e-01f, +9.177625550620636e-01f, +9.247997426966093e-01f,
+9.315962496426278e-01f, +9.381494858921667e-01f, +9.444588390359354e-01f, +9.505220861927248e-01f,
+9.563402921286364e-01f, +9.619114522936701e-01f, +9.672366712325431e-01f, +9.723156637834687e-01f,
+9.771501187120180e-01f, +9.817397501303696e-01f, +9.860865871353246e-01f, +9.901906380163595e-01f,
+9.940557180662704e-01f, +9.976842395284637e-01f, +1.001080961257010e+00f,
+1.004247514102417e+00f, +1.007188578458507e+00f, +1.009906654565108e+00f,
+1.012407428282884e+00f, +1.014694702432600e+00f, +1.016774659209400e+00f,
+1.018650990561848e+00f, +1.020330464463111e+00f, +1.021817328911793e+00f,
+1.023118841384460e+00f, +1.024240262467000e+00f, +1.025189721888128e+00f,
+1.025972450969440e+00f, +1.026596938589443e+00f, +1.027069179375841e+00f,
+1.027397523939210e+00f, +1.027587902203109e+00f, +1.027648951922701e+00f,
+1.027585830688143e+00f, +1.027408519661012e+00f, +1.027122986826984e+00f,
+1.026738673647482e+00f, +1.026261663878092e+00f, +1.025701002415063e+00f,
+1.025061777648234e+00f, +1.024353980976701e+00f, +1.023582385618774e+00f,
+1.022756514615106e+00f, +1.021880604350422e+00f, +1.020963871317665e+00f,
+1.020009139549275e+00f, +1.019027285501251e+00f, +1.018019442784231e+00f,
+1.016996499560845e+00f, +1.015957433206324e+00f, +1.014923441259795e+00f,
+1.013915946100629e+00f, +1.013047565149327e+00f, +1.012216130365610e+00f,
+1.011044869639164e+00f, +1.009914592130044e+00f, +1.008824888092573e+00f,
+1.007773858455400e+00f, +1.006761700412993e+00f, +1.005786648810854e+00f,
+1.004848753962734e+00f, +1.003946083413733e+00f, +1.003078846506546e+00f,
+1.002245009135684e+00f, +1.001444733905817e+00f, +1.000676188436651e+00f, +9.999393169239009e-01f, +9.992320848298057e-01f, +9.985548127155425e-01f, +9.979055415627330e-01f, +9.972842679758880e-01f, +9.966890948441745e-01f, +9.961203379971326e-01f, +9.955761256313581e-01f, +9.950565724564597e-01f, +9.945597525471822e-01f, +9.940860378486615e-01f, +9.936337788972491e-01f, +9.932031606606759e-01f, +9.927921871265732e-01f, +9.924015177880798e-01f, +9.920297273323891e-01f, +9.916767775088281e-01f, +9.913408767719142e-01f, +9.910230654424902e-01f, +9.907216425865902e-01f, +9.904366799536263e-01f, +9.901668953434221e-01f, +9.899131011580791e-01f, +9.896735637374597e-01f, +9.894488374513719e-01f, +9.892374835404283e-01f, +9.890401927796704e-01f, +9.888556356037892e-01f, +9.886843467692753e-01f, +9.885247606051014e-01f, +9.883778520531268e-01f, +9.882423270582524e-01f, +9.881185638915363e-01f, +9.880051626345804e-01f, +9.879032023766432e-01f, +9.878111744348976e-01f, +9.877295459610343e-01f, +9.876571983429736e-01f, +9.875949843246187e-01f, +9.875412739766566e-01f, +9.874969061399389e-01f, +9.874606249127551e-01f, +9.874329809802893e-01f, +9.874126414437681e-01f, +9.874004750404033e-01f, +9.873949921033299e-01f, +9.873969162747074e-01f, +9.874049060317581e-01f, +9.874197049003676e-01f, +9.874399717110517e-01f, +9.874663281231737e-01f, +9.874973205882319e-01f, +9.875338926695315e-01f, +9.875746535410983e-01f, +9.876201238703241e-01f, +9.876689801932402e-01f, +9.877221556193183e-01f, +9.877781920433015e-01f, +9.878376489591358e-01f, +9.878991990245439e-01f, +9.879637979933339e-01f, +9.880300303653743e-01f, +9.880984675859855e-01f, +9.881678007807095e-01f, +9.882390300097154e-01f, +9.883107693992456e-01f, +9.883835200189653e-01f, +9.884560159878955e-01f, +9.885294200392185e-01f, +9.886022219397892e-01f, +9.886749404176028e-01f, +9.887466261142505e-01f, +9.888182771263505e-01f, +9.888882480852147e-01f, +9.889574384705896e-01f, +9.890247977602895e-01f, +9.890911247701029e-01f, +9.891551701556196e-01f, +9.892178658748239e-01f, +9.892779555818088e-01f, +9.893365186903538e-01f, +9.893923680007577e-01f, +9.894462830852175e-01f, +9.894972124952000e-01f, +9.895463342815009e-01f, +9.895923617530382e-01f, +9.896362652966239e-01f, +9.896772011542693e-01f, +9.897162195263046e-01f, +9.897520286480039e-01f, +9.897859195209235e-01f, +9.898170267411330e-01f, +9.898462068764986e-01f, +9.898725363809847e-01f, +9.898975138787787e-01f, +9.899200050208486e-01f, +9.899410789223559e-01f, +9.899600605054418e-01f, +9.899782261038060e-01f, +9.899945557067980e-01f, +9.900103500807507e-01f, +9.900248320990181e-01f, +9.900394023736973e-01f, +9.900532105829365e-01f, +9.900674746047259e-01f, +9.900814722948890e-01f, +9.900966926051257e-01f, +9.901122448734595e-01f, +9.901293790312005e-01f, +9.901474648912307e-01f, +9.901680598867444e-01f, +9.901902265696609e-01f, +9.902151896501201e-01f, +9.902424418296485e-01f, +9.902734448815004e-01f, +9.903071270768942e-01f, +9.903448913950654e-01f, +9.903862280081246e-01f, +9.904324484666853e-01f, +9.904825650601110e-01f, +9.905379830873822e-01f, +9.905980602136440e-01f, +9.906640366554630e-01f, +9.907348826312993e-01f, +9.908120376822228e-01f, +9.908947858311721e-01f, +9.909842592301273e-01f, +9.910795247770178e-01f, +9.911819240108124e-01f, +9.912905118607647e-01f, +9.914064705361564e-01f, +9.915288011543961e-01f, +9.916586940166509e-01f, +9.917952720685562e-01f, +9.919396217291009e-01f, +9.920906151219310e-01f, +9.922495028313456e-01f, +9.924152398352751e-01f, +9.925887208794144e-01f, +9.927688708468421e-01f, +9.929569112537944e-01f, +9.931516528513824e-01f, +9.933539244159140e-01f, +9.935626893131695e-01f, +9.937790866568735e-01f, +9.940016434044485e-01f, +9.942312024833810e-01f, +9.944668184371617e-01f, +9.947093441694513e-01f, +9.949572854565533e-01f, +9.952116634297566e-01f, +9.954712635321227e-01f, +9.957367951478069e-01f, +9.960068616185641e-01f, +9.962823025614079e-01f, +9.965617986382630e-01f, +9.968461329825753e-01f, +9.971338271912752e-01f, +9.974256691222113e-01f, +9.977203369515556e-01f, +9.980185087055744e-01f, +9.983185871761977e-01f, +9.986213520769593e-01f, +9.989255426466267e-01f, +9.992317314100975e-01f, +9.995382582242990e-01f, +9.998461160718275e-01f, +1.000153907612080e+00f, +1.000461955079660e+00f, +1.000768859280338e+00f, +1.001075613053728e+00f, +1.001380551217109e+00f, +1.001684244734497e+00f, +1.001985425397567e+00f, +1.002284871786226e+00f, +1.002580975161843e+00f, +1.002874411368430e+00f, +1.003163845364970e+00f, +1.003450063374329e+00f, +1.003731570287893e+00f, +1.004009147462043e+00f, +1.004281457582935e+00f, +1.004549339226336e+00f, +1.004811375053364e+00f, +1.005068272394360e+00f, +1.005318795748286e+00f, +1.005563968008037e+00f, +1.005802269635282e+00f, +1.006034554002353e+00f, +1.006259855360867e+00f, +1.006479018139540e+00f, +1.006690541428116e+00f, +1.006895570408563e+00f, +1.007093045696527e+00f, +1.007283799246233e+00f, +1.007466616298057e+00f, +1.007642728426847e+00f, +1.007811036585595e+00f, +1.007972441990187e+00f, +1.008125875904472e+00f, +1.008272602383284e+00f, +1.008411468616852e+00f, +1.008543573152632e+00f, +1.008668018334797e+00f, +1.008786009787269e+00f, +1.008896526233555e+00f, +1.009000766336071e+00f, +1.009097763850333e+00f, +1.009188880897370e+00f, +1.009273163797313e+00f, +1.009351762546296e+00f, +1.009423944949143e+00f, +1.009491175244507e+00f, +1.009552401900961e+00f, +1.009608886895764e+00f, +1.009659973830751e+00f, +1.009707093778162e+00f, +1.009749238562067e+00f, +1.009787744284661e+00f, +1.009822090220407e+00f, +1.009853706282597e+00f, +1.009881498943010e+00f, +1.009906958448099e+00f, +1.009929567021562e+00f, +1.009950573483366e+00f, +1.009969021400474e+00f, +1.009986499185054e+00f, +1.010002363879044e+00f, +1.010017890428877e+00f, +1.010032170180360e+00f, +1.010046722045583e+00f, +1.010060809299530e+00f, +1.010075674445289e+00f, +1.010090449982098e+00f, +1.010106564965965e+00f, +1.010123226584120e+00f, +1.010141762173145e+00f, +1.010161131093372e+00f, +1.010182635897876e+00f, +1.010205587931660e+00f, +1.010231078494249e+00f, +1.010257950227988e+00f, +1.010287732968580e+00f, +1.010319484524512e+00f, +1.010354079663767e+00f, +1.010390635488037e+00f, +1.010430470494512e+00f, +1.010472266495074e+00f, +1.010517096381509e+00f, +1.010564099281000e+00f, +1.010614266894512e+00f, +1.010666285876455e+00f, +1.010721360243234e+00f, +1.010778416755264e+00f, +1.010838252644461e+00f, +1.010899655674578e+00f, +1.010963729626641e+00f, +1.011029191301694e+00f, +1.011096993993037e+00f, +1.011165861239173e+00f, +1.011236610341260e+00f, +1.011308167670753e+00f, +1.011381453638912e+00f, +1.011454785713102e+00f, +1.011529185153809e+00f, +1.011603680910505e+00f, +1.011678803938046e+00f, +1.011753008569803e+00f, +1.011827484797985e+00f, +1.011900936547881e+00f, +1.011973876511603e+00f, +1.012044885003304e+00f, +1.012114985644919e+00f,
+1.012182837094955e+00f, +1.012249023976742e+00f, +1.012312095063070e+00f,
+1.012373028737774e+00f, +1.012430463679316e+00f, +1.012484972246822e+00f,
+1.012535058602453e+00f, +1.012581678169188e+00f, +1.012623472898504e+00f,
+1.012660975529858e+00f, +1.012692758750213e+00f, +1.012719789201144e+00f,
+1.012740575296603e+00f, +1.012755753887085e+00f, +1.012763948841204e+00f,
+1.012765922449960e+00f, +1.012760298661069e+00f, +1.012747819936584e+00f,
+1.012726958954961e+00f, +1.012698607692183e+00f, +1.012661400539405e+00f,
+1.012615904116265e+00f, +1.012560833005713e+00f, +1.012497050269805e+00f,
+1.012422888521601e+00f, +1.012339226241367e+00f, +1.012244921966297e+00f,
+1.012140460211194e+00f, +1.012024302085441e+00f, +1.011897560567707e+00f,
+1.011758810583150e+00f, +1.011608449127642e+00f, +1.011445162723270e+00f,
+1.011269960947744e+00f, +1.011081255645969e+00f, +1.010879608424312e+00f,
+1.010663676735228e+00f, +1.010434184200640e+00f, +1.010189681124657e+00f,
+1.009930754807923e+00f, +1.009655660215271e+00f, +1.009365251564694e+00f,
+1.009058249873833e+00f, +1.008734758578989e+00f, +1.008393079963091e+00f,
+1.008034308295421e+00f, +1.007656661215973e+00f, +1.007260142622887e+00f,
+1.006843352506855e+00f, +1.006407009542103e+00f, +1.005949145170711  e+00f,
+1.005470005637052e+00f, +1.004967986424467e+00f, +1.004443531995945e+00f,
+1.003894772403371e+00f, +1.003321903663793e+00f, +1.002723127308148e+00f,
+1.002098854400575e+00f, +1.001447278873483e+00f, +1.000768505317086e+00f,
+1.000060686758758e+00f, +9.993242684851855e-01f, +9.985573503390627e-01f, +9.977600196406868e-01f,
+9.969306036935497e-01f, +9.960694269553644e-01f, +9.951746430061121e-01f, +9.942466438407230e-01f,
+9.932837131068657e-01f, +9.922861082472264e-01f, +9.912523092989319e-01f, +9.901827419790691e-01f,
+9.890757868707590e-01f, +9.879313024174022e-01f, +9.863553220272523e-01f, +9.847362453480265e-01f,
+9.831750948772566e-01f, +9.815583336011345e-01f, +9.798613526271561e-01f, +9.780617486993630e-01f,
+9.761574317374303e-01f, +9.741378617337759e-01f, +9.719990112065752e-01f, +9.697327413658168e-01f,
+9.673331975559332e-01f, +9.647915124057732e-01f, +9.621011497566145e-01f, +9.592539757044516e-01f,
+9.562427177295731e-01f, +9.530600909726344e-01f, +9.496984081652284e-01f, +9.461498120176854e-01f,
+9.424071613625743e-01f, +9.384634163826711e-01f, +9.343112966094085e-01f, +9.299449872197452e-01f,
+9.253567968750328e-01f, +9.205404627076625e-01f, +9.154896280575360e-01f, +9.101986790930605e-01f,
+9.046620597741508e-01f, +8.988755194372424e-01f, +8.928338316495705e-01f, +8.865337190368053e-01f,
+8.799712722567934e-01f, +8.731437835983047e-01f, +8.660476534563131e-01f, +8.586812520174252e-01f,
+8.510420440685049e-01f, +8.431297226886574e-01f, +8.349435141989714e-01f, +8.264839911291133e-01f,
+8.177505366573690e-01f, +8.087449817124315e-01f, +7.994681492797084e-01f, + 7.899235162194718e-01f,
+7.801137731566502e-01f, +7.700431275216928e-01f, +7.597145736971065e-01f, +7.491330971820804e-01f,
+7.383028603058783e-01f, +7.272298755824693e-01f, +7.159201919962611e-01f, +7.043814340356083e-01f,
+6.926196927377140e-01f, +6.806438831866077e-01f, +6.684616478236647e-01f, +6.560830137986515e-01f,
+6.435179268559957e-01f, +6.307755329382612e-01f, +6.178641647786525e-01f, +6.047954625702541e-01f,
+5.915799587176216e-01f, +5.782289366005894e-01f, +5.647535885752191e-01f, +5.511703155400274e-01f,
+5.374905090437071e-01f, +5.237263500445715e-01f, +5.098915423728255e-01f, +4.960008074926423e-01f,
+4.820662943337458e-01f, +4.681017110048007e-01f, +4.541216995958746e-01f, +4.401421815729068e-01f,
+4.261772971493010e-01f, +4.122417888542512e-01f, +3.983499612526493e-01f, +3.845172335531009e-01f,
+3.707583717376236e-01f, +3.570886786795506e-01f, +3.435228672445627e-01f, +3.300763764703638e-01f,
+3.167640325043893e-01f, +3.036004651973109e-01f, +2.905996158436682e-01f, +2.777758503744847e-01f,
+2.651434678028531e-01f, +2.527161881181577e-01f, +2.405069849650012e-01f, +2.285283969438072e-01f,
+2.167933432162879e-01f, +2.053139897833021e-01f, +1.941021906320988e-01f, +1.831680872008943e-01f,
+1.725221947208913e-01f, +1.621735416384834e-01f, +1.521320683467849e-01f, +1.424052801149985e-01f,
+1.330015240938615e-01f, +1.239260664828526e-01f, +1.151858295527293e-01f, +1.067840430193724e-01f,
+9.872637505002878e-02f, +9.101379000888035e-02f, +8.365057236623055e-02f, +7.663508305536153e-02f,
+6.997033405748826e-02f, +6.365188111381365e-02f, +5.768176015814392e-02f, +5.205244216987966e-02f,
+4.676538412257621e-02f, +4.180950541438362e-02f, +3.718640251368464e-02f, +3.288072750732215e-02f,
+2.889548499582958e-02f, +2.520980565928884e-02f, +2.183057564646272e-02f, +1.872896194002638e-02f,
+1.592127815153420e-02f, +1.336381425803020e-02f, +1.108558877807282e-02f, +8.943474189364638e-03f,
+6.758124889697787e-03f, +3.504438130619497e-03f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,
+0.000000000000000e+00f, +0.000000000000000e+00f, +0.000000000000000e+00f,

```
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f,     +0.000000000000000e+00f,     +0.000000000000000e+00f,
+0.000000000000000e+00f, +0.000000000000000e+00f
```

**28.** Appareil selon l'une quelconque des revendications 6 à 21, dans lequel la fonction de division en fenêtres de synthèse (90) comprend une succession, dans l'ordre en avant ou en arrière, formée par les valeurs suivantes avec une tolérance de $\pm 1\%$: -1.596869453315999e-04, -3.021153494057143e-04, -4.142323860121641e-04, -5.058484031439142e-04, -5.867737487939294e-04, -6.666034929771656e-04, -7.499813122143762e-04, -8.366504004139794e-04, -9.273096237893370e-04, -1.023773491532728e-03, -1.126635355725494e-03, -1.235247794937702e-03, -1.349627853510606e-03, -1.470492941694331e-03, -1.598145399394582e-03, -1.732450700747454e-03, -1.873473391018495e-03, -2.021493133113876e-03, -2.176721793926887e-03, -2.339292362082021e-03, -2.509298051958086e-03, -2.686801873698675e-03, -2.872008069419264e-03, -3.065254982136409e-03, -3.266686736002951e-03, -3.476256385086407e-03, -3.694123506258334e-03, -3.920651988943251e-03, -4.155963816705528e-03, -4.399940204176431e-03, -4.652692827862344e-03, -4.914563787665504e-03, -5.185653529531935e-03, -5.465821495567872e-03, -5.755172503953251e-03, -6.054056765330685e-03, -6.362583863449497e-03, -6.680623380533122e-03, -7.008304674718039e-03, -7.346013465075499e-03, -7.693816924650567e-03, -8.051465262788033e-03, -8.419001443263380e-03, -8.796760749750191e-03, -9.184751507972289e-03, -9.582657230262597e-03, -9.990503073705982e-03, -1.040865597419619e-02, -1.083716113754551e-02, -1.127574117138621e-02, -1.172444049589271e-02, -1.218362542421523e-02, -1.265334152129685e-02, -1.313331245904876e-02, -1.362355747138776e-02, -1.412438986522702e-02, -1.463576680723352e-02, -1.515729094197161e-02, -1.568889620430290e-02, -1.623084814367250e-02, -1.678306524600559e-02, -1.734512089366117e-02, -1.791696516251699e-02, -1.849892453107246e-02, -1.909097368362797e-02, -1.969273308274951e-02, -2.030414376031160e-02, -2.092546711168754e-02, -2.155660557689242e-02, -2.219710359529686e-02, -2.284684792818856e-02, -2.350606779320675e-02, -2.417463749934085e-02, -2.485207716234951e-02, -2.553826580898371e-02, -2.623344061522424e-02, -2.693746704328349e-02, -2.764983997782559e-02, -2.837043858580717e-02, -2.909952486193998e-02, -2.983695676902939e-02, -3.058218787751172e-02, -3.133504629493832e-02, -3.209573641742117e-02, -3.286409853195186e-02, -3.363960728361352e-02, -3.442207835192332e-02, -3.521166997276568e-02, -3.600820974457969e-02, -3.681119317395579e-02, -3.762042487257546e-02, -3.843601741746971e-02, -3.925772507976759e-02, -4.008494689009130e-02, -4.091746034850161e-02, -4.175542154425013e-02, -4.259863408038441e-02, -4.344654894948344e-02, -4.429899287523113e-02, -4.515616616948602e-02, -4.601786724624048e-02, -4.688349274164030e-02, -4.775281564045485e-02, -4.862598509282498e-02, -4.950274425624717e-02, -5.038242975874127e-02, -5.126474204655663e-02, -5.214974857230398e-02, -5.303718358615044e-02, -5.392644753556616e-02, -5.481729406855359e-02, -5.570983057565210e-02, -5.660384311081047e-02, -5.749879655200370e-02, -5.839451321393058e-02, -5.929116747072080e-02, -6.018848884279070e-02, -6.108576415855094e-02, -6.198268202511926e-02, -6.287933502598060e-02, -6.377542359879805e-02, -6.467025548071184e-02, -6.556352962710620e-02, -6.645533804325808e-02, -6.734542216184526e-02, -6.823317113969737e-02, -6.911832800881393e-02, -7.000099017198280e-02, -7.088091415536939e-02, -7.175751581450866e-02, -7.263057011354321e-02, -7.350020923324756e-02, -7.436618116832702e-02, -7.522784961377151e-02, -7.608493286734087e-02, -7.693750413779520e-02, -7.778525942347714e-02, -7.862751920094575e-02, -7.946399769633587e-02, -8.029480247839879e-02, -8.111965623403654e-02, -8.193789640255647e-02, -8.274924535373614e-02, -8.355381170261278e-02, -8.435134905678848e-02, -8.514125464087215e-02, -8.592328028689659e-02, -8.669753354886602e-02, -8.746379123238275e-02, -8.822149831804039e-02, -8.897043074644968e-02, -8.971069341834263e-02, -9.044201341183719e-02, -9.116374329727489e-02, -9.187564084638347e-02, -9.257786640497777e-02, -9.327014538321736e-02, -9.395176975347193e-02, -9.462246851310178e-02, -9.528240981433814e-02, -9.593137735886889e-02, -9.656876884228789e-02, -9.719438533739366e-02, -9.780843257659243e-02, -9.841075978146442e-02, -9.900085534600200e-02, -9.957851303827886e-02, -1.001438325530028e-01, -1.006965654660066e-01, -1.012361165314596e-01, -1.017622262660318e-01, -1.022749718234132e-01, -1.027741036495644e-01, -1.032590485916072e-01, -1.037296416381658e-01, -1.041861222641119e-01, -1.046283222746241e-01, -1.050556674062305e-01, -1.054680247057000e-01, -1.058657014776354e-01, -1.062485747526411e-01, -1.066160875985523e-01, -1.069680384993124e-01, -1.073045851468520e-01, -1.076255384835563e-01, -1.079303623240916e-01, -1.082188709931267e-01, -1.084912299471198e-01, -1.087472718159103e-01, -1.089864959432877e-01, -1.092087422379003e-01, -1.094141900597718e-01, -1.096026598727515e-01, -1.097736146613313e-01, -1.099268894481712e-01, -1.100626919008929e-01, -1.101808861640070e-01, -1.102809952914802e-01, -1.103629709312858e-01, -1.104271876052675e-01, -1.104735471815890e-01, -1.105014789286600e-01, -1.105108362290460e-01, -1.105018987914554e-01, -1.104745246005427e-01, -1.104281465492726e-01, -1.103625464011331e-01, -1.102778601442104e-01, -1.101739218186236e-01, -1.100502639286607e-01, -1.099067826823344e-01, -1.097437360338336e-01, -1.095610353779043e-01, -1.093582462693348e-01, -1.091353125572511e-01, -1.088925531745051e-01, -1.086298673699289e-01, -1.083467335729228e-01, -1.080429791821427e-01, -1.077187842899125e-01, -1.073739938306107e-01, -1.070081184450032e-01, -1.066210413471652e-01, -1.062130155324388e-01,  -1.057838954855888e-01,  -1.053331389663558e-01,  -1.048606145834788e-01,
-1.043666017588026e-01,  -1.038509823636319e-01,  -1.033132401525343e-01,  -1.027532566706549e-01,
-1.021713124102434e-01,  -1.015673163469357e-01,  -1.009408032844788e-01,  -1.002916459024019e-01,
-9.962005506126154e-02,  -9.892587447037898e-02,  -9.820858231161539e-02,  -9.746803229469267e-02,
-9.670445315437526e-02,  -9.591769653314886e-02,  -9.510723623306666e-02,  -9.427290387369003e-02,
-9.341489003828900e-02,  -9.253303383231506e-02,  -9.162682426346705e-02,  -9.069614104466586e-02,
-8.974125216128212e-02,  -8.876201954716677e-02,  -8.775790063882420e-02,  -8.672877689119252e-02,
-8.567495161533510e-02,  -8.459627389188201e-02,  -8.349213839083708e-02,  -8.236235749389448e-02,
-8.120716401834208e-02,  -8.002639902061687e-02,  -7.881950797067065e-02,  -7.758626878445929e-02,
-7.632679536516856e-02,  -7.504088747769501e-02,  -7.372803129789816e-02,  -7.238806162166744e-02,
-7.102116211954443e-02,  -6.962720872934396e-02,  -6.820576796149519e-02,  -6.675671622392269e-02,
-6.528023606863240e-02,  -6.377611429172260e-02,  -6.224374611498080e-02,  -6.068292908100376e-02,
-5.909386001558149e-02,  -5.747627430502456e-02,  -5.582945016301614e-02,  -5.415316322402774e-02,
-5.244768784057990e-02,  -5.071287102956145e-02,  -4.894812724598650e-02,  -4.715324945932696e-02,
-4.532841381541464e-02,  -4.347347112195197e-02,  -4.158794238398249e-02,  -3.967162909873025e-02,
-3.772461300253332e-02,  -3.574664020854284e-02,  -3.373712599806719e-02,  -3.169587609244436e-02,
-2.962308489442885e-02,  -2.751857552683018e-02,  -2.538179830690266e-02,  -2.321255714428171e-02,
-2.101100771772769e-02,  -1.877689096555516e-02,  -1.650953674438219e-02,  -1.420871083118669e-02,
-1.187461378850388e-02,  -9.507008996713286e-03,  -7.105225746748432e-03,  -4.669099247423082e-03,
-2.198970714838444e-03,  +3.052506679844099e-04,  +2.844096748870384e-03,  +5.417800316971459e-03,
+8.026287894631955e-03,  +1.066976124794342e-02,  +1.334869917032908e-02,  +1.606331521084708e-02,
+1.881355950582949e-02,  +2.159970134663663e-02,  +2.442232147839131e-02,  +2.728156010437695e-02,
+3.017712138573929e-02,  +3.310912443052597e-02,  +3.607810469851272e-02,  +3.908419391833869e-02,
+4.212712008909140e-02,  +4.520702759803914e-02,  +4.832447852355055e-02,  +5.147966118159461e-02,
+5.467238802204326e-02,  +5.790284080082958e-02,  +6.117156717220185e-02,  +6.447866054615346e-02,
+6.782376212130986e-02,  +7.120692575100979e-02,  +7.462862199422061e-02,  +7.808896236959446e-02,
+8.158769578329894e-02,  +8.512490568723846e-02,  +8.870101069974845e-02,  +9.231608110264714e-02,
+9.596983987496970e-02,  +9.966236893806717e-02,  +1.033941063338643e-01,  +1.071650779014335e-01,
+1.109748994439795e-01,  +1.148235927259266e-01,  +1.187115850305241e-01,  +1.226388834300689e-01,
+1.266050731283809e-01,  +1.306101067250375e-01,  +1.346543064817742e-01,  +1.387376249190578e-01,
+1.428596447589721e-01,  +1.470203170721216e-01,  +1.512199592605080e-01,  +1.554584725339102e-01,
+1.597353438179875e-01,  +1.640504702561671e-01,  +1.684041609371527e-01,  +1.727963503982179e-01,
+1.772265953627290e-01,  +1.816947894623263e-01,  +1.862011624788949e-01,  +1.907455489457267e-01,
+1.953273880886783e-01,  +1.999464539304762e-01,  +2.046028558464008e-01,  +2.092963206850239e-01,
+2.140261955702662e-01,  +2.187922274259156e-01,  +2.235945635254679e-01,  +2.284329840640989e-01,
+2.333068981094213e-01,  +2.382160219461597e-01,  +2.431603785542250e-01,  +2.481396077816722e-01,
+2.531529721334063e-01,  +2.582001739497298e-01,  +2.632813508034234e-01,  +2.683961570569586e-01,
+2.735437630266799e-01,  +2.787237550375912e-01,  +2.839361392493072e-01,  +2.891805257722012e-01,
+2.944561228780392e-01,  +2.997624255177811e-01,  +3.050992195689690e-01,  +3.104659867604553e-01,
+3.158619077906196e-01,  +3.212865260033979e-01,  +3.267397428773339e-01,  +3.322210551086769e-01,
+3.377295561726898e-01,  +3.432647335893443e-01,  +3.488264676990591e-01,  +3.544142074632647e-01,
+3.600269656734629e-01,  +3.656640377499646e-01,  +3.713250061671226e-01,  +3.770091190097118e-01,
+3.827152968157059e-01,  +3.884429045609680e-01,  +3.941917466962361e-01,  +3.999611859760947e-01,
+4.057501420991821e-01,  +4.115579429637846e-01,  +4.173843265025887e-01,  +4.232286297916428e-01,
+4.290897820858789e-01,  +4.349669624916473e-01,  +4.408596056709005e-01,  +4.467668696607166e-01,
+4.526876397402144e-01,  +4.586211456831769e-01,  +4.645669547719424e-01,  +4.705242008503956e-01,
+4.764915897192549e-01,  +4.824682887794052e-01,  +4.884539254831315e-01,  +4.944476636179056e-01,
+5.004481977619742e-01,  +5.064545550235134e-01,  +5.124661018959751e-01,  +5.184818933365749e-01,
+5.245006748662190e-01,  +5.305215796893860e-01,  +5.365441251369431e-01,  +5.425674372882107e-01,
+5.485902506852811e-01,  +5.546116774259739e-01,  +5.606312044701524e-01,  +5.666478652857275e-01,
+5.726602391687222e-01,  +5.786672646386708e-01,  +5.846682453966959e-01,  +5.906621680078100e-01,
+5.966477035050948e-01,  +6.026239249993590e-01,  +6.085903032056262e-01,  +6.145458904162185e-01,
+6.204893201838491e-01,  +6.264196163765745e-01,  +6.323361944662236e-01,  +6.382380808188793e-01,
+6.441239094712802e-01,  +6.499926319211775e-01,  +6.558435212204078e-01,  +6.616755522321309e-01,
+6.674874032292857e-01,  +6.732781108033908e-01,  +6.790470657166684e-01,  +6.847932667399612e-01,
+6.905153235578969e-01,  +6.962122668445681e-01,  +7.018835463513400e-01,  +7.075281787629503e-01,
+7.131447476468400e-01,  +7.187322544823347e-01,  +7.242901217843889e-01,  +7.298174107967581e-01,
+7.353128213893310e-01,  +7.407754721062685e-01,  +7.462048970975652e-01,  +7.516001985652684e-01, +7.569600449843341e-01, +7.622834795152550e-01, +7.675699252273948e-01, +7.728184915997067e-01,
+7.780279710901641e-01, +7.831974571624924e-01, +7.883263448127340e-01, +7.934137241269077e-01,
+7.984583859818390e-01, +8.034595539057413e-01, +8.084168767164887e-01, +8.133295347030278e-01,
+8.181962433248811e-01, +8.230162284197827e-01, +8.277892271515950e-01, +8.325145336568091e-01,
+8.371909942430671e-01, +8.418178561101360e-01, +8.463947757326752e-01, +8.509211545601609e-01,
+8.553961300139363e-01, +8.598190417223652e-01, +8.641894434050258e-01, +8.685068980898102e-01,
+8.727709688046102e-01, +8.769788376631916e-01, +8.811334436653052e-01, +8.852318659908962e-01,
+8.892739843568178e-01, +8.932596784799233e-01, +8.971888108843806e-01, +9.010608486625941e-01,
+9.048748835980528e-01, +9.086304531070754e-01, +9.123275405380156e-01, +9.159657608120536e-01,
+9.195443573144829e-01, +9.230629478622332e-01, +9.265215299450000e-01, +9.299198500625820e-01,
+9.332574012340955e-01, +9.365339988633418e-01, +9.397497768500882e-01, +9.429045261728636e-01,
+9.459977028429117e-01, +9.490292643083790e-01, +9.519996619967281e-01, +9.549088408436811e-01,
+9.577562383751640e-01, +9.605417649811824e-01, +9.632658122557368e-01, +9.659284562011029e-01,
+9.685294510301206e-01, +9.710688896122810e-01, +9.735472021876628e-01, +9.759644676274450e-01,
+9.783204156360773e-01, +9.806151639385083e-01, +9.828492160865892e-01, +9.850226760127131e-01,
+9.871352538808781e-01, +9.891871802564161e-01, +9.911792082081333e-01, +9.931117453856605e-01,
+9.949848494122985e-01, +9.967989944502682e-01, +9.985550647085534e-01, +1.000253445050194e+00,
+1.001894024615659e+00, +1.003477185929786e+00, +1.005003807883761e+00, +1.006474342231823e+00,
+1.007888812850102e+00, +1.009247722934429e+00, +1.010552057109195e+00, +1.011802420624526e+00,
+1.012999036304394e+00, +1.014142538208007e+00, +1.015233969130880e+00, +1.016273931967023e+00,
+1.017262593268930e+00, +1.018200610205248e+00, +1.019089129704898e+00, +1.019928842669923e+00,
+1.020719983374545e+00, +1.021463262031346e+00, +1.022159867011177e+00, +1.022810581114847e+00,
+1.023415781467653e+00, +1.023976320927187e+00, +1.024493524092612e+00, +1.024968218100715e+00,
+1.025400734608122e+00, +1.025791922603958e+00, +1.026143150540689e+00, +1.026455340400072e+00,
+1.026728963502498e+00, +1.026964914246647e+00, +1.027164510654160e+00, +1.027328632612924e+00,
+1.027457725038440e+00, +1.027552729180790e+00, +1.027615074932096e+00, +1.027645580283665e+00,
+1.027644462380432e+00, +1.027612681261584e+00, +1.027551936393756e+00, +1.027463246660797e+00,
+1.027346944848234e+00, +1.027203976311704e+00, +1.027035903410657e+00, +1.026843704381356e+00,
+1.026627771359327e+00, +1.026389068000259e+00, +1.026129124951269e+00, +1.025848782597774e+00,
+1.025548201799728e+00, +1.025228357342061e+00, +1.024891029860151e+00, +1.024537134749709e+00,
+1.024166724015001e+00, +1.023780698019775e+00, +1.023380803775376e+00, +1.022967885528204e+00,
+1.022541888689137e+00, +1.022103695693341e+00, +1.021655115592693e+00, +1.021196819229254e+00,
+1.020728359657958e+00, +1.020250686272421 e+00, +1.019766121526662e+00, +1.019275334687329e+00,
+1.018777362174335e+00, +1.018273081302452e+00, +1.017765178792830e+00, +1.017253984284701e+00,
+1.016737542074604e+00, +1.016217355867531e+00, +1.015698328083719e+00, +1.015181679856847e+00,
+1.014665311686846e+00, +1.014158817803440e+00, +1.013683181980586e+00, +1.013249071090664e+00,
+1.012854331657942e+00, +1.012450620480768e+00, +1.011948006992127e+00, +1.011349594569779e+00,
+1.010750807770724e+00, +1.010189090179223e+00, +1.009640487251585e+00, +1.009094771053394e+00,
+1.008557961167850e+00, +1.008032659941965e+00, +1.007517375307989e+00, +1.007011287608451e+00,
+1.006514430011155e+00, +1.006026890813957e+00, +1.005548764575910e+00, +1.005079874697786e+00,
+1.004619788163424e+00, +1.004168417268956e+00, +1.003726014625139e+00, +1.003292461479605e+00,
+1.002867268893035e+00, +1.002450315292720e+00, +1.002041847623544e+00, +1.001641769115897e+00,
+1.001249637387833e+00, +1.000865334924641e+00, +1.000489068954641 e+00, +1.000120698237067e+00,
+9.997597357106623e-01, +9.994060799749374e-01, +9.990600138594018e-01, +9.987214414655692e-01,
+9.983898865406841e-01, +9.980652196577338e-01, +9.977476599094836e-01, +9.974370849972721e-01,
+9.971330321102652e-01, +9.968354071802502e-01, +9.965444836911705e-01, +9.962601672340514e-01,
+9.959819947971522e-01, +9.957098545943852e-01, +9.954439865572462e-01, +9.951842733288886e-01,
+9.949302413030897e-01, +9.946817924874576e-01, +9.944392047205887e-01, +9.942024045863540e-01,
+9.939709658067042e-01, +9.937448009691057e-01, +9.935241604969254e-01, +9.933089182704574e-01,
+9.930985748592784e-01, +9.928930430130044e-01, +9.926926485907741e-01, +9.924973655191176e-01,
+9.923068103443909e-01, +9.921208874284833e-01, +9.919397899901643e-01, +9.917633778190438e-01,
+9.915911837376036e-01, +9.914231780519580e-01, +9.912597642374404e-01, +9.911009195707438e-01,
+9.909461904886675e-01, +9.907954498484041e-01, +9.906489032572322e-01, +9.905064710654814e-01,
+9.903677893656558e-01, +9.902328499802091e-01, +9.901019951653361e-01, +9.899751611066148e-01,
+9.898518794779545e-01, +9.897320682428268e-01, +9.896160337369861e-01, +9.895037256870947e-01,
+9.893947359604699e-01, +9.892890160408989e-01, +9.891868774704359e-01, +9.890882840931410e-01,
+9.889928511129679e-01, +9.889005321235379e-01, +9.888116182908468e-01, +9.887260333430423e-01,
+9.886433365303475e-01, +9.885634927535989e-01, +9.884868721088945e-01, +9.884134697413018e-01, +9.883429020724473e-01,  +9.882751039537586e-01,  +9.882103306444820e-01,  +9.881485041748238e-01,
+9.880892168751595e-01,  +9.880324626554831e-01,  +9.879786335149536e-01,  +9.879277114724612e-01,
+9.878792663495038e-01,  +9.878332150629403e-01,  +9.877898261218510e-01,  +9.877490592657352e-01,
+9.877105653505679e-01,  +9.876743442038471e-01,  +9.876407405135295e-01,  +9.876096955295567e-01,
+9.875807496078497e-01,  +9.875538464766127e-01,  +9.875293349435258e-01,  +9.875072021876561e-01,
+9.874870704481152e-01,  +9.874688908826080e-01,  +9.874529447589979e-01,  +9.874391758112012e-01,
+9.874271920836210e-01,  +9.874169741527905e-01,  +9.874088727307169e-01,  +9.874028477167635e-01,
+9.873984685207834e-01,  +9.873956821201697e-01,  +9.873948143463702e-01,  +9.873958301311858e-01,
+9.873983326194351e-01,  +9.874022834012905e-01,  +9.874080027710336e-01,  +9.874154551873394e-01,
+9.874242488204272e-01,  +9.874343401290739e-01,  +9.874460335035745e-01,  +9.874592688338504e-01,
+9.874736235387018e-01,  +9.874890696412385e-01,  +9.875059727945840e-01,  +9.875243137719285e-01,
+9.875436862847529e-01,  +9.875640274936844e-01,  +9.875856201221136e-01,  +9.876084084448705e-01,
+9.876319996758224e-01,  +9.876563785063032e-01,  +9.876819048329899e-01,  +9.877085492327816e-01,
+9.877358921155149e-01,  +9.877638696088412e-01,  +9.877927754855115e-01,  +9.878225576787804e-01,
+9.878528193014621e-01,  +9.878835445497628e-01,  +9.879150968481590e-01,  +9.879474521328961e-01,
+9.879801976843903e-01,  +9.880132731565830e-01,  +9.880469724750991e-01,  +9.880812445673735e-01,
+9.881156946084619e-01,  +9.881503106987573e-01,  +9.881854620136666e-01,  +9.882211314188272e-01,
+9.882569137253582e-01,  +9.882927446902245e-01,  +9.883289032519310e-01,  +9.883653317154473e-01,
+9.884016382257884e-01,  +9.884378310018685e-01,  +9.884743146700878e-01,  +9.885110753693968e-01,
+9.885476787868710e-01,  +9.885840418353093e-01,  +9.886204379327659e-01,  +9.886568414746639e-01,
+9.886929275063397e-01,  +9.887287200468966e-01,  +9.887645868459630e-01,  +9.888004757085318e-01,
+9.888359174300858e-01,  +9.888708540445242e-01,  +9.889056416611736e-01,  +9.889402846310907e-01,
+9.889744320992592e-01,  +9.890080679866394e-01,  +9.890415110770159e-01,  +9.890747269455915e-01,
+9.891073295256775e-01,  +9.891393036472682e-01,  +9.891710038703801e-01,  +9.892024062799223e-01,
+9.892331093959095e-01,  +9.892631024032380e-01,  +9.892927650908963e-01,  +9.893220982848433e-01,
+9.893507219573624e-01,  +9.893786032000026e-01,  +9.894060580815116e-01,  +9.894330645494204e-01,
+9.894592636950934e-01,  +9.894846746832306e-01,  +9.895096919388534e-01,  +9.895343083314785e-01,
+9.895581152602352e-01,  +9.895810813422480e-01,  +9.896035553161019e-01,  +9.896255512296797e-01,
+9.896467469067676e-01,  +9.896671650245172e-01,  +9.896871706698203e-01,  +9.897067365020641e-01,
+9.897254458138418e-01,  +9.897432947038028e-01,  +9.897606930400666e-01,  +9.897776834824588e-01,
+9.897939374675170e-01,  +9.898094478563998e-01,  +9.898245305815332e-01,  +9.898391682249337e-01,
+9.898530133261707e-01,  +9.898661175792055e-01,  +9.898789278944983e-01,  +9.898914705684924e-01,
+9.899033504013042e-01,  +9.899145471163803e-01,  +9.899254194103574e-01,  +9.899359976303029e-01,
+9.899459823437818e-01,  +9.899554202030650e-01,  +9.899647016766845e-01,  +9.899738352794291e-01,
+9.899824494486951e-01,  +9.899905595941995e-01,  +9.899985686323577e-01,  +9.900065116928948e-01,
+9.900140555182825e-01,  +9.900212405447888e-01,  +9.900284805353695e-01,  +9.900358124222742e-01,
+9.900428956722681e-01,  +9.900497484789281e-01,  +9.900567489573141e-01,  +9.900639252344197e-01,
+9.900709561632662e-01,  +9.900778969424803e-01,  +9.900851772980046e-01,  +9.900928358611601e-01,
+9.901005198590931e-01,  +9.901082439265390e-01,  +9.901163920607219e-01,  +9.901250018173793e-01,
+9.901337646053293e-01,  +9.901427479709606e-01,  +9.901523931998540e-01,  +9.901627402679979e-01,
+9.901734275350572e-01,  +9.901844600451093e-01,  +9.901962127540933e-01,  +9.902087332329851e-01,
+9.902217409846106e-01,  +9.902353097103640e-01,  +9.902498637985275e-01,  +9.902654188005916e-01,
+9.902815836378273e-01,  +9.902983686695558e-01,  +9.903161882791064e-01,  +9.903351096966241e-01,
+9.903548501470234e-01,  +9.903754652821575e-01,  +9.903973477947732e-01,  +9.904205084933333e-01,
+9.904445786599008e-01,  +9.904695808487622e-01,  +9.904959297726740e-01,  +9.905236810016560e-01,
+9.905525289918011e-01,  +9.905825150202904e-01,  +9.906140262079994e-01,  +9.906470660818262e-01,
+9.906812569810133e-01,  +9.907166224339236e-01,  +9.907535876784416e-01,  +9.907922087340426e-01,
+9.908321697026107e-01,  +9.908734943143861e-01,  +9.909165464981378e-01,  +9.909613313790248e-01,
+9.910074971074613e-01,  +9.910550740962871e-01,  +9.911044737993845e-01,  +9.911557226040716e-01,
+9.912084614290896e-01,  +9.912627029879084e-01,  +9.913188323156490e-01,  +9.913768610980639e-01,
+9.914364276145792e-01,  +9.914975411562229e-01,  +9.915605826937839e-01,  +9.916255751593622e-01,
+9.916921826078263e-01,  +9.917604214872976e-01,  +9.918306597984429e-01,  +9.919028873284097e-01,
+9.919767175562684e-01,  +9.920521593387949e-01,  +9.921296166135889e-01,  +9.922091101818779e-01,
+9.922902757201201e-01,  +9.923730982524657e-01,  +9.924579135466506e-01,  +9.925447043512063e-01,
+9.926331018900273e-01,  +9.927231225056266e-01,  +9.928151658609977e-01,  +9.929092387372991e-01,
+9.930049538427406e-01,  +9.931022798104318e-01,  +9.932015434077218e-01,  +9.933027281437943e-01,
+9.934054751445924e-01,  +9.935098037935540e-01,  +9.936161084869942e-01,  +9.937243666117925e-01,
+9.938341389810342e-01,  +9.939453714404443e-01,  +9.940583985614073e-01,  +9.941732232809857e-01, +9.942895145656371e-01, +9.944072763730046e-01, +9.945268452163670e-01, +9.946481676207727e-01,
+9.947708034711511e-01, +9.948947222146535e-01, +9.950203031067961e-01, +9.951475444242728e-01,
+9.952760608735062e-01, +9.954058173659507e-01, +9.955371298969039e-01, +9.956699511040611e-01,
+9.958038713694317e-01, +9.959388575029996e-01, +9.960752523364563e-01, +9.962130271017117e-01,
+9.963517811272741e-01, +9.964914827801233e-01, +9.966324689957675e-01, +9.967746939976430e-01,
+9.969177298776669e-01, +9.970615306490058e-01, +9.972064329530154e-01, +9.973524075591346e-01,
+9.974990583293081e-01, +9.976463479353705e-01, +9.977945971317506e-01, +9.979437430375855e-01,
+9.980933404947205e-01, +9.982433336615963e-01, +9.983940572002874e-01, +9.985454907974421e-01,
+9.986972567262494e-01, +9.988493116887893e-01, +9.990019468868200e-01, +9.991550977367476e-01,
+9.993083430214909e-01, +9.994615765165296e-01, +9.996150231216515e-01, +9.997689221333534e-01,
+9.999235128481329e-01, +1.000076493002599e+00, +1.000231131275969e+00, +1.000385125142624e+00,
+1.000538713539491e+00, +1.000692135698996e+00, +1.000845616726739e+00, +1.000999050218361e+00,
+1.001152013920163e+00, +1.001304442627610e+00, +1.001456627881216e+00, +1.001608526000461e+00,
+1.001759757645423e+00, +1.001910301800365e+00, +1.002060493867275e+00, +1.002210277420412e+00,
+1.002359204811906e+00, +1.002507212061815e+00, +1.002654620794815e+00, +1.002801392925948e+00,
+1.002947129400411e+00, +1.003091799884742e+00, +1.003235742261295e+00, +1.003378909587027e+00,
+1.003520870253791e+00, +1.003661577107433e+00, +1.003801368578070e+00, +1.003940212001390e+00,
+1.004077702628435e+00, +1.004213810320699e+00, +1.004348879757933e+00, +1.004482876599046e+00,
+1.004615386562846e+00, +1.004746360645254e+00, +1.004876116715471e+00, +1.005004618375781e+00,
+1.005131475392675e+00, +1.005256684766584e+00, +1.005380628601598e+00, +1.005503275059852e+00,
+1.005624178100742e+00, +1.005743282364652e+00, +1.005860927032197e+00, +1.005977115074116e+00,
+1.006091510392348e+00, +1.006204114728125e+00, +1.006315265680367e+00, +1.006424907424988e+00,
+1.006532594023395e+00, +1.006638301298317e+00, +1.006742427727669e+00, +1.006844991973082e+00,
+1.006945629196305e+00, +1.007044321511378e+00, +1.007141399219649e+00, +1.007236829559076e+00,
+1.007330218597112e+00, +1.007421572075267e+00, +1.007511294570522e+00, +1.007599401798709e+00,
+1.007685518441567e+00, +1.007769625953741e+00, +1.007852064386603e+00, +1.007932817703069e+00,
+1.008011514905126e+00, +1.008088176165563e+00, +1.008163211111724e+00, +1.008236628017949e+00,
+1.008308033204578e+00, +1.008377415429783e+00, +1.008445148098658e+00, +1.008511247273756e+00,
+1.008575370579197e+00, +1.008637540589491e+00, +1.008698144207627e+00, +1.008757190321980e+00,
+1.008814310258779e+00, +1.008869515256392e+00, +1.008923196622113e+00, +1.008975366811245e+00,
+1.009025659761512e+00, +1.009074101779034e+00, +1.009121111323685e+00, +1.009166718967367e+00,
+1.009210565968291e+00, +1.009252657087366e+00, +1.009293362609020e+00, +1.009332706372757e+00,
+1.009370366213570e+00, +1.009406398832440e+00, +1.009441237185677e+00, +1.009474905002031e+00,
+1.009507017171120e+00, +1.009537576990303e+00, +1.009566978740742e+00, +1.009595264293017e+00,
+1.009622122007090e+00, +1.009647608302352e+00, +1.009672145744679e+00, +1.009695757189383e+00,
+1.009718066587100e+00, +1.009739084785160e+00, +1.009759212016967e+00, +1.009778504921465e+00,
+1.009796675060142e+00, +1.009813790867919e+00, +1.009830274807737e+00, +1.009846137382005e+00,
+1.009860979702382e+00, +1.009874817539016e+00, +1.009888083631667e+00, +1.009900853103284e+00,
+1.009912839830312e+00, +1.009924092276850e+00, +1.009934992836975e+00, +1.009945546632798e+00,
+1.009955384765721e+00, +1.009964547970550e+00, +1.009973486342123e+00, +1.009982268770147e+00,
+1.009990580458388e+00, +1.009998459694088e+00, +1.010006298177305e+00, +1.010014110835447e+00,
+1.010021537788250e+00, +1.010028618428735e+00, +1.010035791136646e+00, +1.010043112228827e+00,
+1.010050254076988e+00, +1.010057245369122e+00, +1.010064471863242e+00, +1.010071952131355e+00,
+1.010079338752086e+00, +1.010086669402375e+00, +1.010094366238073e+00, +1.010102470533325e+00,
+1.010110642277138e+00, +1.010118917317053e+00, +1.010127706776959e+00, +1.010137026407425e+00,
+1.010146497096682e+00, +1.010156127541843e+00, +1.010166316200025e+00, +1.010177110711677e+00,
+1.010188205550670e+00, +1.010199631706068e+00, +1.010211755260102e+00, +1.010224555569669e+00,
+1.010237629352925e+00, +1.010251003469427e+00, +1.010265134075557e+00, +1.010280073997043e+00,
+1.010295468653759e+00, +1.010311300308220e+00, +1.010327891493345e+00, +1.010345234996637e+00,
+1.010362995486892e+00, +1.010381216558204e+00, +1.010400316698172e+00, +1.010420292023388e+00,
+1.010440717183162e+00, +1.010461564316351e+00, +1.010483206256578e+00, +1.010505666262059e+00,
+1.010528615445659e+00, +1.010552068219883e+00, +1.010576380809038e+00, +1.010601521285347e+00,
+1.010627072440648e+00, +1.010653027053931e+00, +1.010679788081867e+00, +1.010707375229772e+00,
+1.010735421976626e+00, +1.010763905869062e+00, +1.010793149909083e+00, + 1.010823120603859e+00,
+1.010853429760676e+00, +1.010884078284304e+00, +1.010915454361544e+00, +1.010947547074519e+00,
+1.010979946214537e+00, +1.011012627395599e+00, +1.011045953108263e+00, +1.011079907971760e+00,
+1.011114097416553e+00, +1.011148486293359e+00, +1.011183400596362e+00, +1.011218823992338e+00,
+1.011254397791134e+00, +1.011290126474096e+00, +1.011326374295525e+00, +1.011363082075863e+00, +1.011399769951629e+00, +1.011436384522522e+00, +1.011473302008831e+00, +1.011510547051838e+00,
+1.011547787220495e+00, +1.011584996312149e+00, +1.011622454130127e+00, +1.011660075693276e+00,
+1.011697416504599e+00, +1.011734462313348e+00, +1.011771627262926e+00, +1.011808919793469e+00,
+1.011845938738977e+00, +1.011882624964772e+00, +1.011919264025716e+00, +1.011955790122897e+00,
+1.011991788266365e+00, +1.012027240794153e+00, +1.012062525726662e+00, +1.012097630839309e+00,
+1.012132151631041e+00, +1.012166035659198e+00, +1.012199583936457e+00, +1.012232734564333e+00,
+1.012265064558555e+00, +1.012296549102454e+00, +1.012327560477901e+00, +1.012358082400925e+00,
+1.012387708001513e+00, +1.012416383754384e+00, +1.012444410627777e+00, +1.012471723038292e+00,
+1.012497890726292e+00, +1.012522883349504e+00, +1.012547069718292e+00, +1.012570434021054e+00,
+1.012592573402938e+00, +1.012613430563370e+00, +1.012633295255708e+00, +1.012652102923549e+00,
+1.012669436800254e+00, +1.012685277016726e+00, +1.012699998432300e+00, +1.012713572256585e+00,
+1.012725564992284e+00, +1.012735914876099e+00, +1.012744934005791e+00, +1.012752577651415e+00,
+1.012758443858682e+00, +1.012762496111508e+00, +1.012765062889864e+00, +1.012766104774385e+00,
+1.012765214703761e+00, +1.012762356719162e+00, +1.012757865052107e+00, +1.012751685362581e+00,
+1.012743376077777e+00, +1.012732896174196e+00, +1.012720605477780e+00, +1.012706484200181e+00,
+1.012690130527749e+00, + 1. 0 12671486975 730e+00, +1.012650842226435e+00,
+1.012628146441024e+00, +1.012603012552473e+00, +1.012575427778520e+00, +1.012545750134419e+00,
+1.012513922299362e+00, +1.012479473490919e+00, +1.012442344023191e+00, +1.012402887777359e+00,
+1.012361105121003e+00, +1.012316638832887e+00, +1.012269448366181e+00, +1.012219809594718e+00,
+1.012167638122170e+00, +1.012112494069630e+00, +1.012054359992419e+00, +1.011993638380370e+00,
+1.011930323929956e+00, +1.011864000215460e+00, +1.011794588601900e+00, +1.011722351640686e+00,
+1.011647223869087e+00, +1.011568814072372e+00, +1.011487118812239e+00, +1.011402518267713e+00,
+1.011314978002071e+00, +1.011224048846073e+00, +1.011129654652857e+00, +1.011032094993283e+00,
+1.010931324278397e+00, +1.010826951260377e+00, +1.010718941241622e+00, +1.010607614747097e+00,
+1.010492924436361e+00, +1.010374455963019e+00, +1.010252160684281e+00, +1.010126353960416e+00,
+1.009996954741022e+00, +1.009863488188648e+00, +1.009725892479312e+00, +1.009584519851048e+00,
+1.009439365159565e+00, +1.009290060983833e+00, +1.009136529912757e+00, +1.008978985140192e+00,
+1.008817301052548e+00, +1.008651020208035e+00, +1.008480124067563e+00, +1.008305027555130e+00,
+1.008125704897790e+00, +1.007941686009594e+00, +1.007752833675443e+00, +1.007559349517223e+00,
+1.007361141859567e+00, +1.007157827358150e+00, +1.006949385806640e+00, +1.006736153885735e+00,
+1.006518049344503e+00, +1.006294572836803e+00, +1.006065603926773e+00, +1.005831403532018e+00,
+1.005591890638477e+00, +1.005346642064537e+00, +1.005095592119373e+00, +1.004839030117511e+00,
+1.004576865704429e+00, +1.004308630055050e+00, +1.004034214698496e+00, +1.003753871618025e+00,
+1.003467498305776e+00, +1.003174639260358e+00, +1.002875211027427e+00, +1.002569500413888e+00,
+1.002257424578396e+00, +1.001938530973887e+00, +1.001612710105563e+00, +1.001280195339107e+00,
+1.000940870545871e+00, +1.000594272975683e+00, +1.000240322030139e+00, +9.998793163292398e-01,
+9.995111701168786e-01, +9.991354132324841e-01, +9.987519222567783e-01, +9.983609218719522e-01,
+9.979623130227679e-01, +9.975556740764708e-01, +9.971409288327860e-01, +9.967183432488375e-01,
+9.962878170229250e-01, +9.958488863050556e-01, +9.954014561350919e-01, +9.949458000048871e-01,
+9.944818543153893e-01, +9.940092149931687e-01, +9.935277331184579e-01, +9.930375282832211e-01,
+9.925387139793089e-01, +9.920313495175566e-01, +9.915146560759479e-01, +9.909871983144850e-01,
+9.904515643208522e-01, +9.899136802423638e-01, +9.893635427366756e-01, +9.887777731550811e-01,
+9.881930623810997e-01, +9.877024911349694e-01, +9.867719346048082e-01, +9.859422591203311e-01,
+9.851327817259932e-01, +9.843446542813931e-01, +9.835667898378924e-01, +9.827784388364600e-01,
+9.819697981806308e-01, +9.811423034808365e-01, +9.802944493567077e-01, +9.794214312173470e-01,
+9.785214441250228e-01, +9.775957513212234e-01, +9.766438929361375e-01, +9.756636036109838e-01,
+9.746537914797736e-01, +9.736145835187847e-01, +9.725453442532574e-01, +9.714446445280863e-01,
+9.703115557563614e-01, +9.691456634185093e-01, +9.679460697948364e-01, +9.667113883637859e-01,
+9.654406178310210e-01, +9.641331517728559e-01, +9.627881167626269e-01, +9.614043615076308e-01,
+9.599808797353324e-01, +9.585168210361295e-01, +9.570113065179300e-01, +9.554634210701282e-01,
+9.538722275164798e-01, +9.522367669696690e-01, +9.505560524788548e-01, +9.488290728836637e-01,
+9.470548839544214e-01, +9.452326100986821e-01, +9.433613907645669e-01, +9.414403740008491e-01,
+9.394686283754716e-01, +9.374451520790944e-01, +9.353691612846549e-01, +9.332400814902009e-01,
+9.310570687016885e-01, +9.288190093977164e-01, +9.265249985708898e-01, +9.241743479451956e-01,
+9.217662887169116e-01, +9.192999665754161e-01, +9.167746294201033e-01, +9.141896283466009e-01,
+9.115442516266717e-01, +9.088377281110291e-01, +9.060694681113471e-01, +9.032390575925977e-01,
+9.003458895224528e-01, +8.973891675497357e-01, +8.943683555809617e-01, +8.912831789317232e-01,
+8.881332000806269e-01, +8.849178157571976e-01, +8.816366171218113e-01, +8.782893885841422e-01, +8.748757216290605e-01, +8.713950183935990e-01, +8.678469565343039e-01, +8.642314881034361e-01,
+8.605483499580321e-01, +8.567970644671067e-01, +8.529774446610170e-01, +8.490895965655302e-01,
+8.451334654019179e-01, +8.411088323972666e-01, +8.370156984112052e-01, +8.328542805780399e-01,
+8.286245548070180e-01, +8.243262611129502e-01, +8.199594783897041e-01, +8.155246236571582e-01,
+8.110218607207131e-01, +8.064511006873497e-01, +8.018126046593852e-01, +7.971069856439827e-01,
+7.923346478686025e-01, +7.874957820910923e-01, +7.825908231062452e-01, +7.776204488292163e-01,
+7.725851026241404e-01, +7.674849949914248e-01, +7.623206183595970e-01, +7.570927486638241e-01,
+7.518019652814979e-01, +7.464486491227057e-01, +7.410334206850239e-01, +7.355571439110484e-01,
+7.300205729992958e-01, +7.244243523154849e-01, +7.187693676298663e-01, +7.130567383226717e-01,
+7.072872946666678e-01, +7.014615845640527e-01, +6.955805444755916e-01, +6.896454997760704e-01,
+6.836575016451227e-01, +6.776173229836567e-01, +6.715260316843978e-01, +6.653849997460716e-01,
+6.591955305148172e-01, +6.529588449241264e-01, +6.466761515320369e-01, +6.403486426892321e-01,
+6.339773402000435e-01, +6.275631129756770e-01, +6.211072197441818e-01, +6.146113064454106e-01,
+6.080768062101946e-01, +6.015049275244732e-01, +5.948969938609885e-01, +5.882544536827298e-01,
+5.815787608870452e-01, +5.748713693712827e-01, +5.681329838024681e-01, +5.613674511156831e-01,
+5.545756384163615e-01, +5.477589552377587e-01, +5.409188627354240e-01, +5.340568757452271e-01,
+5.271745849688633e-01, +5.202736834971303e-01, +5.133560289814199e-01, +5.064236063322167e-01,
+4.994780733459294e-01, +4.925207788759675e-01, +4.855532972838063e-01, +4.785774177949064e-01,
+4.715949057752619e-01, +4.646075325068186e-01, +4.576172599874965e-01, +4.506262048599546e-01,
+4.436362416499966e-01, +4.366490208265834e-01, +4.296663370497900e-01, +4.226901117060164e-01,
+4.157221460416020e-01, +4.087641442756610e-01, +4.018179771137481e-01, +3.948856590950779e-01,
+3.879690747948260e-01, +3.810699982632091e-01, +3.741903189229788e-01, +3.673320150150139e-01,
+3.604969483256886e-01, +3.536868899553974e-01, +3.469037339648918e-01, +3.401494735467201e-01,
+3.334260017756462e-01, +3.267351352184045e-01, +3.200787300572631e-01, +3.134586473252229e-01,
+3.068766522215559e-01, +3.003344428572218e-01, +2.938337904395881e-01, +2.873765136803315e-01,
+2.809644064498411e-01, +2.745992637590826e-01, +2.682828578001429e-01, +2.620169058204753e-01,
+2.558030636168179e-01, +2.496429506725780e-01, +2.435381581076193e-01, +2.374902188466703e-01,
+2.315007158769866e-01, +2.255713139320687e-01, +2.197036032185791e-01, +2.138990608950040e-01,
+2.081591884177564e-01, +2.024855415115456e-01, +1.968794982265323e-01, +1.913422230760984e-01,
+1.858749915117319e-01, +1.804792270036454e-01, +1.751561592043750e-01, +1.699067802117410e-01,
+1.647322739698192e-01, +1.596340539111631e-01, +1.546132267478876e-01, +1.496705434426226e-01,
+1.448069879076800e-01, +1.400238206749698e-01, +1.353218971490514e-01, +1.307016182576054e-01,
+1.261637395672916e-01, +1.217094187032866e-01, +1.173392980385558e-01, +1.130534434072722e-01,
+1.088524061173192e-01, +1.047372831131808e-01, +1.007084973747942e-01, +9.676572618933918e-02,
+9.290929444691418e-02, +8.914024389873081e-02, +8.545874375771015e-02, +8.186400751918757e-02,
+7.835612100141792e-02, +7.493612463933132e-02, +7.160392900131578e-02, +6.835821233920988e-02,
+6.519882821193619e-02, +6.212691236769909e-02, +5.914211536028985e-02, +5.624247476796568e-02,
+5.342762364238927e-02, +5.069893012340838e-02, +4.805577285587748e-02, +4.549537570011979e-02,
+4.301717763585556e-02, +4.062301532941800e-02, +3.831198264259714e-02, +3.608020726673365e-02,
+3.392698736873631e-02, +3.185504779821543e-02, +2.986316337017634e-02, +2.794584821783607e-02,
+2.610239043507366e-02, +2.433722657129812e-02, +2.264871565562373e-02, +2.102867478775550e-02,
+1.947675241971700e-02, +1.800101670620712e-02, +1.659903330901047e-02, +1.525710171255895e-02,
+1.397610119023076e-02, +1.277238121584596e-02, +1.163787492636242e-02, +1.053809096662833e-02,
+9.464262017505555e-03, +8.433087782643726e-03, +7.364501936162659e-03, +6.073847663871269e-03,
+4.449668997344740e-03, +2.485333612762431e-03, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00.

**29.** Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm$1%: +9.959086585790517e-04, +3.819056787237678e-03, +9.540832613229890e-03, +1.921659800166160e-02, +3.382719081038548e-02, +5.424831667522354e-02, +8.120777668775610e-02, +1.152171887125930e-01, +1.564942331034909e-01, +2.049363422022628e-01, +2.601166575816199e-01, +3.212814164616093e-01, +3.873472997948746e-01, +4.569497078592333e-01, +5.285192958868393e-01, +6.003522489375573e-01, +6.706896380227332e-01, +7.378044458510402e-01, +8.000925313431716e-01, +8.561409184410547e-01, +9.048272294524792e-01, +9.453685031730190e-01, +9.773507430600533e-01, +1.000800872826561e+00, +1.016171590112097e+00, +1.024315247630982e+00, +1.026415431432931e+00, +1.023858366571912e+00, +1.018135705524407e+00, +1.010794822557756e+00, +1.003406509762925e+00, +9.967831265986109e-01, +9.920995520917141e-01, +9.892206942816891e-01, +9.879658322200813e-01, +9.881273531631907e-01, +9.894805541465801e-01, +9.917849916000535e-01, +9.947847580943504e-01, +9.982119669301160e-01, +1.001791235858836e+00, +1.005242583245485e+00, +1.008283053756130e+00, +1.010631281038659e+00, +1.012015300253356e+00, +1.012180753005270e+00, +1.010896765282633e+00, +1.007963362035220e+00, +1.003227255072391e+00, +9.966050551498514e-01, +9.868284225039941e-01, +9.731250287581631e-01, +9.540636479502398e-01, +9.283864275822276e-01, +8.950916858157935e-01, +8.534769362643825e-01, +8.032090930429980e-01, +7.444735201251689e-01, +6.780787033699449e-01, +6.053970453856138e-01, +5.282077505750667e-01, +4.486552956056635e-01, +3.691875990296312e-01, +2.924566408966777e-01, +2.210718537110463e-01, +1.573148583944309e-01, +1.030525757797768e-01, +5.982732244758054e-02, +2.871831923385133e-02, +9.683884928956490e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00.

**30.** Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm$1%: +6.143388180964179e-04, +1.489582832987000e-03, +2.884104959764029e-03, +4.934298832466617e-03, +7.779130464154915e-03, +1.154910606525086e-02, +1.637155619860352e-02, +2.237116158648752e-02, +2.966159685753317e-02, +3.835663329277230e-02, +4.855610986150206e-02, +6.035055738891727e-02, +7.382288203064732e-02, +8.903563687211119e-02, +1.060356225286319e-01, +1.248534855777947e-01, +1.454931890869180e-01, +1.679435556337752e-01, +1.921728622634411e-01, +2.181238261985594e-01, +2.457259744642953e-01, +2.748839432649996e-01, +3.054824712370942e-01, +3.373873799614014e-01, +3.704415932452488e-01, +4.044749630814483e-01, +4.393004362003260e-01, +4.747225454237193e-01, +5.105341492548225e-01, +5.465201916422433e-01, +5.824658100332457e-01, +6.181452662624718e-01, +6.533411462740817e-01, +6.878367295965062e-01, +7.214176027060971e-01, +7.538887973483771e-01, +7.850546571907628e-01, +8.147397447696774e-01, +8.427819363777799e-01, +8.690376742017057e-01, +8.933935477349644e-01, +9.157483563218768e-01, +9.360270196617569e-01, +9.541731142261065e-01, +9.701635474343885e-01, +9.840036439809510e-01, +9.957199420334376e-01, +1.005374268639838e+00, +1.013046655758663e+00, +1.018843380560658e+00, +1.022896948293643e+00, +1.025355286710874e+00, +1.026382881625701e+00, +1.026155530733488e+00, +1.024853974580724e+00, +1.022664602721801e+00, +1.019779396547454e+00, +1.016391686789653e+00, +1.012697033320358e+00, +1.008885191761748e+00, +1.005378742804807e+00, +1.001563778373068e+00, +9.982531564931281e-01, +9.954346644968789e-01, +9.930950268060122e-01, +9.912170911359961e-01, +9.897805192546195e-01, +9.887624937408933e-01, +9.881383235740961e-01, +9.878819413827574e-01, +9.879662130250981e-01, +9.883630508181326e-01, +9.890434070785485e-01, +9.899772316163624e-01, +9.911334564321237e-01, +9.924800441092685e-01, +9.939841207305906e-01, +9.956121471675398e-01, +9.973300590248015e-01, +9.991033633647473e-01, +1.000897441314013e+00, +1.002677088643863e+00, +1.004407190937699e+00, +1.006052289109999e+00, +1.007576934100958e+00, +1.008945862447015e+00, +1.010124241309341e+00, +1.011077969726137e+00, +1.011773962181442e+00, +1.012180362866919e+00, +1.012266707295288e+00, +1.012004064757857e+00, +1.011365223023975e+00, +1.010324996851905e+00, +1.008860731864438e+00, +1.006952983357691e+00, +1.004586273379809e+00, +1.001749900308864e+00, +9.984386632116344e-01, +9.946500332901397e-01, +9.895756853352172e-01, +9.838303127859196e-01, +9.769999155793757e-01, +9.689141159310996e-01, +9.594038121639412e-01, +9.483086322505029e-01, +9.354860218216989e-01, +9.208101305030523e-01, +9.041732260327581e-01, +8.854882249661838e-01, +8.646864947605046e-01, +8.417237467711145e-01, +8.165875713256009e-01, +7.892986353718001e-01, +7.599171886893816e-01, +7.285474515411827e-01, +6.953282935906302e-01, +6.604334017809461e-01, +6.240661431421666e-01, +5.864461424698465e-01, +5.478160663871147e-01, +5.084499758302218e-01, +4.686361426418982e-01, +4.286789889246253e-01, +3.889032719013045e-01, +3.496431418636314e-01, +3.112360816586544e-01, +2.740128472224535e-01, +2.382847225401666e-01, +2.043379825955252e-01, +1.724305860483632e-01, +1.427939789949265e-01, +1.156385879569741e-01, +9.115821766571995e-02, +6.952749039054593e-02, +5.088975408628225e-02, +3.533430192568954e-02, +2.286680405144430e-02, +1.338005016725895e-02, +6.640506529168652e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00

**31.** Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm 1\%$: +5.087227626168386e-04, +9.959086585790517e-04, +1.682208006328800e-03, +2.609697259047744e-03, +3.819056787237678e-03, +5.349319592933909e-03, +7.243906383895192e-03, +9.540832613229890e-03, +1.227637642543709e-02, +1.548950238899404e-02, +1.921659800166160e-02, +2.349369619441617e-02, +2.835199581667961e-02, +3.382719081038548e-02, +3.994939538719628e-02, +4.674775238543380e-02, +5.424831667522354e-02, +6.247770776443612e-02, +7.145835917501348e-02, +8.120777668775610e-02, +9.174400412319896e-02, +1.030764959637497e-01, +1.152171887125930e-01, +1.281665713944242e-01, +1.419264381068653e-01, +1.564942331034909e-01, +1.718593189799504e-01, +1.880134254543744e-01, +2.049363422022628e-01, +2.226123055761096e-01, +2.410151242797736e-01, +2.601166575816199e-01, +2.798871008989962e-01, +3.002880135563586e-01, +3.212814164616093e-01, +3.428208463088390e-01, +3.648596557863134e-01, +3.873472997948746e-01, +4.102294951869188e-01, +4.334494534591082e-01, +4.569497078592333e-01, +4.806696403251166e-01, +5.045473815014847e-01, +5.285192958868393e-01, +5.525196099932443e-01, +5.764872452085427e-01, +6.003522489375573e-01, +6.240509872809882e-01, +6.475182586093196e-01, +6.706896380227332e-01, +6.935029068990036e-01, +7.158927516396895e-01, +7.378044458510402e-01, +7.591787241845952e-01, +7.799586608897265e-01, +8.000925313431716e-01, +8.195318652294690e-01, +8.382288957404715e-01, +8.561409184410547e-01, +8.732316951214179e-01, +8.894702022170831e-01, +9.048272294524792e-01, +9.192736375782965e-01, +9.327940405054362e-01, +9.453685031730190e-01, +9.569883933538136e-01, +9.676486424195593e-01, +9.773507430600533e-01, +9.861027831072527e-01, +9.939122412655677e-01, +1.000800872826561e+00, +1.006787811971719e+00, +1.011901269172423e+00, +1.016171590112097e+00, +1.019636414864842e+00, +1.022336613864005e+00, +1.024315247630982e+00, +1.025621299895396e+00, +1.026303439275662e+00, +1.026415431432931e+00, +1.026007933174836e+00, +1.025137435167917e+00, +1.023858366571912e+00, +1.022226936424625e+00, +1.020300550334848e+00, +1.018135705524407e+00, +1.015792146756340e+00, +1.013325966774524e+00, +1.010794822557756e+00, +1.008265131568879e+00, +1.006046874304407e+00, +1.003406509762925e+00, +1.000977398831985e+00, +9.987704535700208e-01, +9.967831265986109e-01, +9.950118905889862e-01, +9.934523971504882e-01, +9.920995520917141e-01, +9.909475998606236e-01, +9.899902426925508e-01, +9.892206942816891e-01, +9.886318043013834e-01, +9.882160904669929e-01, +9.879658322200813e-01, +9.878730767519871e-01, +9.879296932443894e-01, +9.881273531631907e-01,
+9.884575535474619e-01, +9.889115869213529e-01, +9.894805541465801e-01, +9.901553455166457e-01,
+9.909266562913843e-01, +9.917849916000535e-01, +9.927206838643636e-01, +9.937239208721489e-01,
+9.947847580943504e-01, +9.958931493776203e-01, +9.970389567617592e-01, +9.982119669301160e-01,
+9.994020338838508e-01, +1.000598323893564e+00, +1.001791235858836e+00, +1.002969837054169e+00,
+1.004123786397111e+00, +1.005242583245485e+00, +1.006315717067918e+00, +1.007332693127034e+00,
+1.008283053756130e+00, +1.009156423082384e+00, +1.009942535308151e+00, +1.010631281038659e+00,
+1.011212744622770e+00, +1.011677230257499e+00, +1.012015300253356e+00, +1.012217779097186e+00,
+1.012275790821109e+00, +1.012180753005270e+00, +1.011924425888915e+00, +1.011498917644724e+00,
+1.010896765282633e+00, +1.010110965619444e+00, +1.009135094671655e+00, +1.007963362035220e+00,
+1.006590756505588e+00, +1.005013115379014e+00, +1.003227255072391e+00, +1.001231060075500e+00,
+9.990235555436858e-01, +9.966050551498514e-01, +9.939894706113089e-01, +9.904539200261149e-01,
+9.868284225039941e-01, +9.827716736909488e-01, +9.782206672373213e-01, +9.731250287581631e-01,
+9.674323528812744e-01, +9.610947043524248e-01, +9.540636479502398e-01, +9.462952991190324e-01,
+9.377489107516087e-01, +9.283864275822276e-01, +9.181762606422500e-01, +9.070861558801854e-01,
+8.950916858157935e-01, +8.821696237804294e-01, +8.683025287048570e-01, +8.534769362643825e-01,
+8.376852006833730e-01, +8.209275259764013e-01, +8.032090930429980e-01, +7.845450482523652e-01,
+7.649554851899686e-01, +7.444735201251689e-01, +7.231348066419057e-01, +7.009860555207412e-01,
+6.780787033699450e-01, +6.544686506489734e-01, +6.302212149502727e-01, +6.053970453856138e-01,
+5.800715766089168e-01, +5.543129276657669e-01, +5.282077505750727e-01, +5.018369724442092e-01,
+4.752902962082383e-01, +4.486552956056652e-01, +4.220281118338883e-01, +3.955057965950340e-01,
+3.691875990296320e-01, +3.431732847389720e-01, +3.175633015043183e-01, +2.924566408966782e-01,
+2.679463783886042e-01, +2.441231331518492e-01, +2.210718537110466e-01, +1.988719153219592e-01,
+1.775967625327044e-01, +1.573148583944310e-01, +1.380903364946733e-01, +1.199837497591550e-01,
+1.030525757797769e-01, +8.735085011789188e-02, +7.292811584897502e-02, +5.982732244758056e-02,
+4.808178837444506e-02, +3.771135297837851e-02, +2.871831923385135e-02, +2.108352028641225e-02,
+1.476289412849005e-02, +9.683884928956495e-03, +5.642168789286858e-03, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00

32. Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de ±1%: +4.595886345493055e-04, +7.919323614002698e-04, +1.227927169310031e-03, +1.783653266717233e-03, +2.479549413444207e-03, +3.329799454594261e-03, +4.353535478916468e-03, +5.564965156664018e-03, +6.986108359341676e-03, +8.629882322202329e-03, +1.051343406844975e-02, +1.265082642578719e-02, +1.506090447446532e-02, +1.775591229287213e-02, +2.075475983187825e-02, +2.406813715401559e-02, +2.771207863541604e-02, +3.169933248543932e-02, +3.604609640533871e-02, +4.076128638095439e-02, +4.586038120884381e-02, +5.135136676471998e-02, +5.724780220726930e-02, +6.355854744461048e-02, +7.029450733434550e-02, +7.745987198268531e-02, +8.506635369887924e-02, +9.311641620512773e-02, +1.016162955027316e-01, +1.105690806271684e-01, +1.199789286645804e-01, +1.298417294090302e-01, +1.401623800497866e-01, +1.509371564593891e-01, +1.621632295622287e-01, +1.738354123649302e-01, +1.859520359191026e-01, +1.985008828937603e-01, +2.114778554475382e-01, +2.248732557074316e-01, +2.386763947872762e-01, +2.528729453658238e-01, +2.674547009618951e-01, +2.824031465430401e-01, +2.977050145264297e-01, +3.133419120661713e-01, +3.292976696294886e-01, +3.455490160824131e-01, +3.620795045342974e-01, +3.788648665671841e-01, +3.958851576591690e-01, +4.131143794748322e-01, +4.305308301005456e-01, +4.481076715576617e-01, +4.658227790464821e-01, +4.836466393241829e-01, +5.015564851667653e-01, +5.195228071176610e-01, +5.375197039843709e-01, +5.555183841040963e-01, +5.734957812557457e-01, +5.914186654649489e-01, +6.092622887527459e-01, +6.269981160888640e-01, +6.446002007776794e-01, +6.620384583071039e-01, +6.792906550106088e-01, +6.963256426589250e-01, +7.131194393772130e-01, +7.296469905863920e-01, +7.458864594794676e-01, +7.618094719403713e-01, +7.773958448163656e-01, +7.926208751337592e-01, +8.074666387233143e-01, +8.219101564897180e-01, +8.359343163788637e-01, +8.495180470826319e-01, +8.626485837105826e-01, +8.753083234662220e-01, +8.874884715160425e-01, +8.991737724042251e-01, +9.103527429187326e-01,
+9.210144133066616e-01, +9.311556192776946e-01, +9.407644740241826e-01, +9.498382236872068e-01,
+9.583732599601223e-01, +9.663690412284377e-01, +9.738235617865406e-01, +9.807442506043361e-01,
+9.871297972052695e-01, +9.929872268444632e-01, +9.983241398929388e-01, +1.003150760219063e+00,
+1.007473713377193e+00, +1.011309151636166e+00, +1.014666681083198e+00, +1.017563337333301e+00,
+1.020014681326785e+00, +1.022039872150903e+00, +1.023654257342442e+00, +1.024881624147540e+00,
+1.025739288978437e+00, +1.026250709375593e+00, +1.026436666375082e+00, +1.026320857404224e+00,
+1.025922917798664e+00, +1.025269979527211e+00, +1.024382188798244e+00, +1.023284940887058e+00,
+1.022000829220643e+00, +1.020555973231408e+00, +1.018971390778550e+00, +1.017275179369116e+00,
+1.015489129111694e+00, +1.013639356938881e+00, +1.011747750709711e+00, +1.009840844244693e+00,
+1.007939764480188e+00, +1.006407400915498e+00, +1.004374825095777e+00, +1.002469814737132e+00,
+1.000689073754539e+00, +9.990346001249977e-01, +9.975024904153303e-01, +9.960941547576162e-01,
+9.948051243621099e-01, +9.936362728142866e-01, +9.925826537087717e-01, +9.916447007525191e-01,
+9.908170758245324e-01, +9.900998445795673e-01, +9.894873685512386e-01, +9.889794323427195e-01,
+9.885701787626714e-01, +9.882591911282058e-01, +9.880404423341358e-01, +9.879133688360181e-01,
+9.878718098237022e-01, +9.879150762106034e-01, +9.880368938846610e-01, +9.882364564839506e-01,
+9.885073687439192e-01, +9.888487088987707e-01, +9.892539488627546e-01, +9.897220412447528e-01,
+9.902463287269285e-01, +9.908256340476208e-01, +9.914531811725067e-01, +9.921276814881759e-01,
+9.928422499725458e-01, +9.935955098307742e-01, +9.943804814776256e-01, +9.951957244449919e-01,
+9.960341878404958e-01, +9.968943831870675e-01, +9.977692009836100e-01, +9.986571134591464e-01,
+9.995509738170480e-01, +1.000449227898040e+00, +1.001344692310058e+00, +1.002235786606954e+00,
+1.003115291715261e+00, +1.003981602446902e+00, +1.004827468041713e+00, +1.005651275972376e+00,
+1.006445772052972e+00, +1.007209352772459e+00, +1.007934783656087e+00, +1.008620496650569e+00,
+1.009259314290145e+00, +1.009849742422788e+00, +1.010384692193296e+00, +1.010862783160582e+00,
+1.011277044709547e+00, +1.011626247430694e+00, +1.011903571699736e+00, +1.012107954864219e+00,
+1.012232755709885e+00, +1.012277089047072e+00, +1.012234505114778e+00, +1.012104319978655e+00,
+1.011880293122688e+00, +1.011561972516341e+00, +1.011143373963981e+00, +1.010624321020038e+00,
+1.009999148545101e+00, +1.009268031808824e+00, +1.008425698479647e+00, +1.007472774447058e+00,
+1.006404483571931e+00, +1.005222003295591e+00, +1.003921160689206e+00, +1.002503762756151e+00,
+1.000966332772540e+00, +9.993114007411373e-01, +9.975362702189898e-01, +9.956442306333592e-01,
+9.936333924912825e-01, +9.908677480361242e-01, +9.882326326262749e-01, +9.853620567056602e-01,
+9.822305093671991e-01, +9.788185853162172e-01, +9.751026333215268e-01, +9.710631852370086e-01,
+9.666759668947944e-01, +9.619242192293307e-01, +9.567841986369235e-01, +9.512394303101863e-01,
+9.452700238623795e-01, +9.388615698236068e-01, +9.319946435581106e-01, +9.246592033932568e-01,
+9.168383396399868e-01, +9.085218034087421e-01, +8.996967011299613e-01, +8.903562054918268e-01,
+8.804877931535187e-01, +8.700884209228057e-01, +8.591492134848259e-01, +8.476686394755906e-01,
+8.356428970797861e-01, +8.230753889817990e-01, +8.099649296155544e-01, +7.963204506324437e-01,
+7.821460539775005e-01, +7.674541821769616e-01, +7.522563457568547e-01, +7.365702052057368e-01,
+7.204090552899627e-01, +7.037975107157410e-01, +6.867542812151157e-01, +6.693041888771051e-01,
+6.514710959179395e-01, +6.332854832820911e-01, +6.147685389896460e-01, +5.959553778639692e-01,
+5.768737955463938e-01, +5.575534287167304e-01, +5.380320138068979e-01, +5.183454027643563e-01,
+4.985259415650634e-01, +4.786156067459849e-01, +4.586473038370941e-01, +4.386643656872842e-01,
+4.187046888325280e-01, +3.988123056192917e-01, +3.790262923635886e-01, +3.593914828698096e-01,
+3.399474132903109e-01, +3.207392420889753e-01, +3.018061113177048e-01, +2.831905952786929e-01,
+2.649288369241889e-01, +2.470608550624402e-01, +2.296201119084317e-01, +2.126433716126151e-01,
+1.961601816145380e-01, +1.802035203864437e-01, +1.647996883470626e-01, +1.499787548077656e-01,
+1.357643522991611e-01, +1.221842534547464e-01, +1.092601994264172e-01, +9.701788451015501e-02,
+8.547680283183663e-02, +7.465976378295235e-02, +6.458254322751883e-02, +5.526281189874138e-02,
+4.670976978373095e-02, +3.893244425578719e-02, +3.192976013776996e-02, +2.569810636390756e-02,
+2.022259265088492e-02, +1.548317776486452e-02, +1.144924909653903e-02, +8.076482660383199e-03,
+5.300044080947794e-03, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00

33. Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de ±1%: +4.090106504820579e-04, +6.143388180964179e-04, +8.571759876954877e-04, +1.147015057857495e-03, +1.489582832987000e-03, +1.889770382231583e-03, +2.353000800169909e-03, +2.884104959764029e-03, +3.488213786635855e-03, +4.170040431489613e-03, +4.934298832466617e-03, +5.787076505403503e-03, +6.733811743137561e-03, +7.779130464154915e-03, +8.927044958757816e-03, +1.018202888968871e-02, +1.154910606525086e-02, +1.303349217699797e-02, +1.463951288465963e-02, +1.637155619860352e-02, +1.823455383898077e-02, +2.023309488998589e-02, +2.237116158648752e-02, +2.465237348403478e-02, +2.708101935270475e-02, +2.966159685753317e-02, +3.239884850877327e-02, +3.529601774976465e-02, +3.835663329277230e-02, +4.158447932459513e-02, +4.498322421745353e-02, +4.855610986150206e-02, +5.230596475016741e-02, +5.623624576084146e-02, +6.035055738891727e-02, +6.465186317477950e-02, +6.914195749790462e-02, +7.382288203064732e-02, +7.869709331995660e-02, +8.376761638427657e-02, +8.903563687211118e-02, +9.450199243028472e-02, +1.001680193006426e-01, +1.060356225286319e-01, +1.121060220821844e-01, +1.183788547045326e-01, +1.248534855777947e-01, +1.315302847610869e-01, +1.384103079528939e-01, +1.454931890869180e-01, +1.527772946853750e-01, +1.602608842337125e-01, +1.679435556337752e-01, +1.758245615079801e-01, +1.839020119821303e-01, +1.921728622634411e-01, +2.006344295681524e-01, +2.092853879977170e-01, +2.181238261985594e-01, +2.271462264407930e-01, +2.363479205237173e-01, +2.457259744642953e-01, +2.552771551741124e-01, +2.649981094228982e-01, +2.748839432649996e-01, +2.849296444030153e-01, +2.951306505827265e-01, +3.054824712370942e-01, +3.159799638238941e-01, +3.266169794538543e-01, +3.373873799614014e-01, +3.482855915638277e-01, +3.593057693987583e-01, +3.704415932452488e-01, +3.816862385160692e-01, +3.930329782788047e-01, +4.044749630814483e-01, +4.160051103939122e-01, +4.276159595085598e-01, +4.393004362003260e-01, +4.510516333434032e-01, +4.628616046119925e-01, +4.747225454237193e-01, +4.866266705542529e-01, +4.985664508456704e-01, +5.105341492548225e-01, +5.225212793188740e-01, +5.345190505841265e-01, +5.465201916422433e-01, +5.585172769552711e-01, +5.705021536899105e-01, +5.824658100332457e-01, +5.943991720381216e-01, +6.062948176207270e-01, +6.181452662624718e-01, +6.299422016714543e-01, +6.416768736044914e-01, +6.533411462740817e-01, +6.649277540000037e-01, +6.764292700223311e-01, +6.878367295965062e-01, +6.991421467689277e-01, +7.103379606632721e-01, +7.214176027060971e-01, +7.323746102405828e-01, +7.432008025932804e-01, +7.538887973483771e-01, +7.644315495717613e-01, +7.748223151443820e-01, +7.850546571907628e-01, +7.951223518167163e-01, +8.050193862201107e-01, +8.147397447696774e-01, +8.242774413707643e-01, +8.336267114335371e-01, +8.427819363777799e-01, +8.517386186427548e-01, +8.604920874939698e-01, +8.690376742017057e-01, +8.773720451249032e-01, +8.854927938913381e-01, +8.933935477349644e-01, +9.010727088526728e-01, +9.085249398881980e-01, +9.157483563218768e-01, +9.227413839712016e-01, +9.295017469413066e-01, +9.360270196617569e-01, +9.423143052164881e-01, +9.483629792665091e-01, +9.541731142261065e-01, +9.597438382130120e-01, +9.650738394220176e-01, +9.701635474343885e-01, +9.750143364412617e-01, +9.796277191617885e-01, +9.840036439809510e-01, +9.881426772731259e-01, +9.920470446911211e-01, +9.957199420334376e-01, +9.991640812275709e-01, +1.002381307710643e+00, +1.005374268639838e+00, +1.008146718214831e+00, +1.010703123647275e+00, +1.013046655758663e+00, +1.015181271161417e+00, +1.017111643578857e+00, +1.018843380560658e+00, +1.020381713994816e+00, +1.021731101971518e+00, +1.022896948293643e+00, +1.023885455671576e+00, +1.024702974608899e+00, +1.025355286710874e+00, +1.025848243050604e+00, +1.026188366261215e+00, +1.026382881625701e+00, +1.026438102255574e+00, +1.026360125820994e+00, +1.026155530733488e+00, +1.025831456886557e+00, +1.025395432284244e+00, +1.024853974580724e+00, +1.024213482124578e+00, +1.023481184943025e+00, +1.022664602721801e+00, +1.021770903480975e+00, +1.020806917660529e+00, +1.019779396547454e+00, +1.018695995335235e+00, +1.017564416918053e+00, +1.016391686789653e+00, +1.015184918030332e+00, +1.013950835315021e+00, +1.012697033320358e+00, +1.011430749860716e+00, +1.010158346781076e+00, +1.008885191761748e+00, +1.007592718305943e+00, +1.006805603478092e+00, +1.005378742804807e+00, +1.004049051787112e+00, +1.002778356298787e+00, +1.001563778373068e+00, +1.000404915291105e+00, +9.993014844615166e-01, +9.982531564931281e-01, +9.972595460676951e-01, +9.963202131848272e-01, +9.954346644968789e-01, +9.946023543844607e-01, +9.938226881029791e-01, +9.930950268060122e-01, +9.924186919309267e-01, +9.917929657090736e-01, +9.912170911359961e-01, +9.906902760441473e-01, +9.902117003786811e-01, +9.897805192546193e-01, +9.893958602389157e-01, +9.890568243690241e-01, +9.887624937408933e-01, +9.885119364350415e-01, +9.883042028597552e-01, +9.881383235740961e-01, +9.880133161159576e-01, +9.879281898513085e-01, +9.878819413827574e-01, +9.878735508484809e-01, +9.879019873841568e-01,
+9.879662130250981e-01, +9.880651778500144e-01, +9.881978162133899e-01, +9.883630508181326e-01,
+9.885597957603544e-01, +9.887869526128024e-01, +9.890434070785485e-01, +9.893280319166613e-01,
+9.896396899060125e-01, +9.899772316163624e-01, +9.903394929409673e-01, +9.907252968668226e-01,
+9.911334564321237e-01, +9.915627747807666e-01, +9.920120436855326e-01, +9.924800441092685e-01,
+9.929655482846576e-01, +9.934673212537685e-01, +9.939841207305906e-01, +9.945146969322154e-01,
+9.950577931942117e-01, +9.956121471675398e-01, +9.961764915534302e-01, +9.967495543671935e-01,
+9.973300590248015e-01, +9.979167245036720e-01, +9.985082643417953e-01, +9.991033633647473e-01,
+9.997003478609010e-01, +1.000299741957418e+00, +1.000897441314013e+00, +1.001493964257960e+00,
+1.002087624593489e+00, +1.002677088643863e+00, +1.003261045483858e+00, +1.003838183774652e+00,
+1.004407190937699e+00, +1.004966753528881e+00, +1.005515557572658e+00, +1.006052289109999e+00,
+1.006575635258931e+00, +1.007084285781611e+00, +1.007576934100958e+00, +1.008052277555815e+00,
+1.008509017718116e+00, +1.008945862447015e+00, +1.009361528531177e+00, +1.009754742820913e+00,
+1.010124241309341e+00, +1.010468769795370e+00, +1.010787087537248e+00, +1.011077969726137e+00,
+1.011340205650538e+00, +1.011572597114216e+00, +1.011773962181442e+00, +1.011943138906979e+00,
+1.012078982659783e+00, +1.012180362866919e+00, +1.012246166897464e+00, +1.012275305013586e+00,
+1.012266707295288e+00, +1.012219319453278e+00, +1.012132107622966e+00, +1.012004064757857e+00,
+1.011834207632025e+00, +1.011621572933544e+00, +1.011365223023975e+00, +1.011064253702468e+00,
+1.010717792733157e+00, +1.010324996851905e+00, +1.009885057526159e+00, +1.009397209381147e+00,
+1.008860731864438e+00, +1.008274947065247e+00, +1.007639223374887e+00, +1.006952983357691e+00,
+1.006215708265639e+00, +1.005426938305289e+00, +1.004586273379809e+00, +1.003693377657581e+00,
+ 1. 00274 7984657666e+00, + 1.0017 49900308864e+00, + 1. 000699003803502e+00, +9.995952485989262e-
01, +9.984386632116344e-01, +9.972293415774932e-01, +9.959672769174924e-01, +9.946500332901397e-01,
+9.932403996813470e-01, +9.912511516117244e-01, +9.895756853352172e-01, +9.877713214760662e-01,
+9.858577479051078e-01, +9.838303127859196e-01, +9.816822625580078e-01, +9.794074486605805e-01,
+9.769999155793757e-01, +9.744528356359687e-01, +9.717597500340699e-01, +9.689141159310996e-01,
+9.659101618500662e-01, +9.627421831412876e-01, +9.594038121639412e-01, +9.558889978382734e-01,
+9.521922434090249e-01, +9.483086322505029e-01, +9.442332539187503e-01, +9.399607238929982e-01,
+9.354860218216989e-01, +9.308052967663477e-01, +9.259146970284931e-01, +9.208101305030523e-01,
+9.154873597416558e-01, +9.099426066529104e-01, +9.041732260327581e-01, +8.981763729936715e-01,
+8.919490241013392e-01, +8.854882249661838e-01, +8.787919436722827e-01, +8.718585835568161e-01,
+8.646864947605047e-01, +8.572738135700366e-01, +8.496195859658071e-01, +8.417237467711145e-01,
+8.335862715770727e-01, +8.252074428838668e-01, +8.165875713256009e-01, +8.077280370477699e-01,
+7.986311592191131e-01, +7.892986353718001e-01, +7.797330954210866e-01, +7.699379531983687e-01,
+7.599171886893816e-01, +7.496758423734833e-01, +7.392176841476761e-01, +7.285474515411827e-01,
+7.176714478163359e-01, +7.065962311464494e-01, +6.953282935906302e-01, +6.838739059112046e-01,
+6.722395305539791e-01, +6.604334017809461e-01, +6.484643596235256e-01, +6.363395004626368e-01,
+6.240661431421666e-01, +6.116530334821534e-01, +5.991098644638286e-01, +5.864461424698465e-01,
+5.736694851703749e-01, +5.607881029948401e-01, +5.478160663871271e-01, +5.347619788897301e-01,
+5.216365147692703e-01, +5.084499758302256e-01, +4.952135086430446e-01, +4.819387562519412e-01,
+4.686361426419003e-01, +4.553170769563941e-01, +4.419939954454178e-01, +4.286789889246267e-01,
+4.153837786572842e-01, +4.021211063103491e-01, +3.889032719013054e-01, +3.757425439137077e-01,
+3.626515183776310e-01, +3.496431418636322e-01, +3.367290822653354e-01, +3.239228075238623e-01,
+3.112360816586549e-01, +2.986807941537710e-01, +2.862694673284843e-01, +2.740128472224539e-01,
+2.619228330079575e-01, +2.500098438708934e-01, +2.382847225401669e-01, +2.267578490199104e-01,
+2.154390996938547e-01, +2.043379825955254e-01, +1.934636765792024e-01, +1.828250319214460e-01,
+1.724305860483634e-01, +1.622886348529314e-01, +1.524071880359812e-01, +1.427939789949266e-01,
+1.334565845242183e-01, +1.244023922999665e-01, +1.156385879569742e-01, +1.071721547807196e-01,
+9.900985872728905e-02, +9.115821766572002e-02, +8.362344855837105e-02, +7.641140367416376e-02,
+6.952749039054598e-02, +6.297656454790079e-02, +5.676284244020858e-02, +5.088975408628229e-02,
+4.535983304624439e-02, +4.017457306236873e-02, +3.533430192568957e-02, +3.083806062123772e-02,
+2.668355420358626e-02, +2.286680405144430e-02, +1.938236337675363e-02, +1.622312720409645e-02,
+1.338005016725895e-02, +1.084218595595746e-02, +8.596753980908744e-03, +6.640506529168652e-03,
+5.172703110468352e-03, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00

**34.** Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm 1\%$: +3.821992968116373e-04, +5.337292962876158e-04, +7.010318350640769e-04, +8.910357994632938e-04, +1.107726421735994e-03, +1.354305556720234e-03, +1.632968062524617e-03, +1.944392065549996e-03, +2.291251920978034e-03, +2.676357471188558e-03, +3.102160324883627e-03, +3.569302917352426e-03, +4.080147004222224e-03, +4.637409387087253e-03, +5.243697651112320e-03, +5.900394401532485e-03, +6.609908124535202e-03, +7.375089966000295e-03, +8.197610411215884e-03, +9.078195201482999e-03, +1.001888876231112e-02, +1.102272421949215e-02, +1.209201783148431e-02, +1.322773320467288e-02, +1.443170227861997e-02, +1.570673344965518e-02, +1.705481769961258e-02, +1.847711280171765e-02, +1.997546609433320e-02, +2.155255505248360e-02, +2.320993080187466e-02, +2.494800748775296e-02, +2.676898100961685e-02, +2.867550388692567e-02, +3.066976865911597e-02, +3.275241094528637e-02, +3.492474656851959e-02, +3.718932683936013e-02, +3.954748420753697e-02, +4.200013716597904e-02, +4.454866443036003e-02, +4.719547798640356e-02, +4.994161943600844e-02, +5.278755308483513e-02, +5.573471840677637e-02, +5.878567633813699e-02, +6.194176167634657e-02, +6.520301218579141e-02, +6.857009288032996e-02, +7.204473108503576e-02, +7.562815385274406e-02, +7.932038618419741e-02, +8.312281225703541e-02, +8.703660776989294e-02, +9.106251913073614e-02, +9.519952848393795e-02, +9.944854075501454e-02, +1.038112769854394e-01, +1.082885168352610e-01, +1.128793060660070e-01, +1.175834766182813e-01, +1.224015773361210e-01, +1.273338065186211e-01, +1.323793987456491e-01, +1.375389612590117e-01, +1.428131506368226e-01, +1.482015069292479e-01, +1.537021065265166e-01, +1.593143180431248e-01, +1.650390046254505e-01, +1.708759773387028e-01, +1.768238156096776e-01, +1.828814674176937e-01, +1.890485613515956e-01, +1.953239376543276e-01, +2.017057139908492e-01, +2.081934824879514e-01, +2.147873518665726e-01, +2.214861559453727e-01, +2.282869811837961e-01, +2.351877543503455e-01, +2.421885165595468e-01, +2.492877833071390e-01, +2.564833108170047e-01, +2.637736050921935e-01, +2.711575593740559e-01, +2.786328295517739e-01, +2.861965981859126e-01, +2.938469307293017e-01, +3.015829286213736e-01, +3.094025219039914e-01, +3.173023310827802e-01, +3.252796888787393e-01, +3.333329987313211e-01, +3.414597523183469e-01, +3.496568059948401e-01, +3.579215403419018e-01, +3.662523018706806e-01, +3.746461722601965e-01, +3.830993933108193e-01, +3.916090507233831e-01, +4.001732470818926e-01, +4.087890872349265e-01, +4.174524354370054e-01, +4.261601728427663e-01, +4.349103424521226e-01, +4.436999665749521e-01, +4.525250566690236e-01, +4.613821390145840e-01, +4.702690556535691e-01, +4.791821288489955e-01, +4.881175853001019e-01, +4.970720120437943e-01, +5.060433154467696e-01, +5.150277508616620e-01, +5.240208300352607e-01, +5.330187387865785e-01, +5.420196856030712e-01, +5.510201184135838e-01, +5.600165101133929e-01, +5.690047761849362e-01, +5.779823098049300e-01, +5.869449780892492e-01, +5.958886225335936e-01, +6.048099568741729e-01, +6.137068698395559e-01, +6.225761217125432e-01, +6.314128591964590e-01, +6.402134772829997e-01, +6.489754897736506e-01, +6.576959114103553e-01, +6.663704870510495e-01, +6.749962795110787e-01, +6.835701860237697e-01, +6.920890588499607e-01, +7.005478826218464e-01, +7.089444008783498e-01, +7.172765338080037e-01, +7.255415386736762e-01, +7.337354140683028e-01, +7.418546544582220e-01, +7.498972580176051e-01, +7.578599326607545e-01, +7.657390988438872e-01, +7.735317637507610e-01, +7.812362247368221e-01, +7.888499478365373e-01, +7.963691608881653e-01, +8.037915368847273e-01, +8.111154166403033e-01, +8.183384161720055e-01, +8.254567363530231e-01, +8.324682688387346e-01, +8.393715063470556e-01, +8.461645428100565e-01, +8.528442051510350e-01, +8.594088830061699e-01, +8.658575289268042e-01, +8.721883611259660e-01, +8.783992457627015e-01, +8.844895714000796e-01, +8.904559910537616e-01, +8.962997945931150e-01, +9.020168984242400e-01, +9.076056139480890e-01, +9.130664170641334e-01, +9.183979162084582e-01, +9.235994678560167e-01, +9.286692422352107e-01, +9.336076279434850e-01, +9.384129048732400e-01, +9.430836933050435e-01, +9.476197145049868e-01, +9.520221006942875e-01, +9.562904165806793e-01, +9.604235518327253e-01, +9.644205605875820e-01, +9.682827690312492e-01, +9.720106722663890e-01,
+9.756042291745447e-01, +9.790638238608151e-01, +9.823902028722666e-01, +9.855837812929384e-01,
+9.886436665180195e-01, +9.915714515450228e-01, +9.943692859110803e-01, +9.970385179500313e-01,
+9.995787919228785e-01, +1.001991256344717e+00, +1.004277707367492e+00, +1.006439806897506e+00,
+1.008478224880801e+00, +1.010395057449511e+00, +1.012192316076366e+00, +1.013871638199171e+00,
+1.015433826923486e+00, +1.016881083871244e+00, +1.018216717878600e+00, +1.019442870837515e+00,
+1.020560853084751e+00, +1.021572361827679e+00, +1.022480682703848e+00, +1.023288268237906e+00,
+1.023997104737320e+00, +1.024609726504572e+00, +1.025129444345768e+00, +1.025558707847599e+00,
+1.025899187425550e+00, +1.026153736073730e+00, +1.026326400217514e+00, +1.026419755159132e+00,
+1.026435753513555e+00, +1.026376745497183e+00, +1.026246413164014e+00, +1.026047802601159e+00,
+1.025783163725466e+00, +1.025455636062312e+00, +1.025068712226252e+00, +1.024625269765159e+00,
+1.024127035189888e+00, +1.023577282345944e+00, +1.022979990313458e+00, +1.022338337695996e+00,
+1.021654354624439e+00, +1.020930844259280e+00, +1.020171385028845e+00, +1.019379551852598e+00,
+1.018557222865231e+00, +1.017708008483692e+00, +1.016835630605444e+00, +1.015943000562828e+00,
+1.015032211107897e+00, +1.014106040189062e+00, +1.013168810057302e+00, +1.012223533569952e+00,
+1.011272160610958e+00, +1.010317161995333e+00, +1.009363573682324e+00, +1.008418957730006e+00,
+1.007443035427814e+00, +1.006980582693088e+00, +1.005880191360173e+00, +1.004870660907557e+00,
+1.003887307826199e+00, +1.002933862630671e+00, +1.002012456628431e+00, +1.001122929266782e+00,
+1.000264200804259e+00, +9.994361518334981e-01, +9.986396025239043e-01, +9.978744044020248e-01,
+9.971394126637049e-01, +9.964344374346332e-01, +9.957602381261346e-01, +9.951165794460692e-01,
+9.945022689695088e-01, +9.939170480434331e-01, +9.933616056210112e-01, +9.928356667510468e-01,
+9.923379640068731e-01, +9.918682011153984e-01, +9.914270132578689e-01, +9.910140670228395e-01,
+9.906280727376265e-01, +9.902686735168059e-01, +9.899364775767996e-01, +9.896311064950427e-01,
+9.893512408407925e-01, +9.890965020344753e-01, +9.888674481881904e-01, +9.886636955343167e-01,
+9.884838850803949e-01, +9.883276240055705e-01, +9.881954463086439e-01, +9.880869460773882e-01,
+9.880007538329854e-01, +9.879364462155417e-01, +9.878945575956836e-01, +9.878746493979034e-01,
+9.878753499522159e-01, +9.878962158879177e-01, +9.879377642109470e-01, +9.879995488718708e-01,
+9.880801746803725e-01, +9.881791937541983e-01, +9.882970966792446e-01, +9.884334355024147e-01,
+9.885867883714737e-01, +9.887566952073135e-01, +9.889436358294569e-01, +9.891471384894399e-01,
+9.893657732439902e-01, +9.895990550550585e-01, +9.898474573387898e-01, +9.901104832002432e-01,
+9.903866926546286e-01, +9.906755858999687e-01, +9.909776136318341e-01, +9.912922749689899e-01,
+9.916181054602099e-01, +9.919545975686356e-01, +9.923021872317422e-01, +9.926603609120486e-01,
+9.930276450366935e-01, +9.934035125599263e-01, +9.937883997783191e-01, +9.941817792665538e-01,
+9.945821646067609e-01, +9.949890245456261e-01, +9.954027843196593e-01, +9.958229139376651e-01,
+9.962479146150113e-01, +9.966772475112751e-01, +9.971113385049125e-01, +9.975496462958124e-01,
+9.979906675056988e-01, +9.984338592613343e-01, +9.988796523949821e-01, +9.993275431378141e-01,
+9.997753812452573e-01, +1.000224669219663e+00, +1.000672909364706e+00, +1.001121604191588e+00,
+1.001568597382930e+00, +1.002013378040221e+00, +1.002456372686098e+00, +1.002897030034197e+00,
+1.003333829980590e+00, +1.003766216551067e+00, +1.004194607298016e+00, +1.004618447680436e+00,
+1.005036211788027e+00, +1.005447348229275e+00, +1.005852270535212e+00, +1.006250425365265e+00,
+1.006640290029854e+00, +1.007021310029137e+00, +1.007393907701933e+00, +1.007757528772291e+00,
+1.008110655922241e+00, +1.008452744553207e+00, +1.008784215564761e+00, +1.009104530964226e+00,
+1.009412177137242e+00, +1.009706620067364e+00, +1.009988296223056e+00, +1.010256673981368e+00,
+1.010510261597171e+00, +1.010748529051234e+00, +1.010971938438940e+00, +1.011179974034890e+00,
+1.011371154144579e+00, +1.011544976893053e+00, +1.011701915457469e+00, +1.011841483052088e+00,
+1.011962209203063e+00, +1.012063621581602e+00, +1.012146211141323e+00, +1.012209509774826e+00,
+1.012252080651208e+00, +1.012273461473019e+00, +1.012274179329824e+00, +1.012253779830287e+00,
+1.012210860152664e+00, +1.012144976732521e+00, +1.012056685871527e+00, +1.011945565763788e+00,
+1.011810229432951e+00, +1.011650280893217e+00, +1.011466289818154e+00, +1.011257880752579e+00,
+1.011023694799342e+00, +1.010763375755366e+00, +1.010477533938561e+00, +1.010165826445586e+00,
+1.009826955798404e+00, +1.009460591235290e+00, +1.009067412134881e+00, +1.008647118373303e+00,
+1.008198467170796e+00, +1.007721196075366e+00, +1.007216031301935e+00, +1.006682757156533e+00,
+1.006120180721864e+00, +1.005528123164754e+00, +1.004907385380564e+00, +1.004257813991292e+00,
+1.003578321293819e+00, +1.002868793771428e+00, +1.002130123378852e+00, +1.001362250678481e+00,
+1.000564166270619e+00, +9.997358689793686e-01, +9.988783302889642e-01, +9.979915852192069e-01,
+9.970747197397686e-01, +9.961277448216609e-01, +9.951529474418550e-01, +9.941541831614942e-01,
+9.930678080460911e-01, +9.914646039976289e-01, +9.902352352689523e-01, +9.889131869680553e-01,
+9.875383274623817e-01, +9.861028679251979e-01, +9.846041087188396e-01, +9.830394337851476e-01, +9.814052410296346e-01, +9.796987091039431e-01, +9.779184677896273e-01, +9.760616740194450e-01,
+9.741245958128935e-01, +9.721043782586516e-01, +9.699991325531057e-01, +9.678068213341133e-01,
+9.655234943873925e-01, +9.631470850364502e-01, +9.606758082762421e-01, +9.581070287387355e-01,
+9.554372064329766e-01, +9.526641870716750e-01, +9.497868942084339e-01, +9.468034353946915e-01,
+9.437103240778303e-01, +9.405054771915659e-01, +9.371877218082764e-01, +9.337553821450042e-01,
+9.302057763482381e-01, +9.265373496318979e-01, +9.227494594741956e-01, +9.188401295674290e-01,
+9.148067377557749e-01, +9.106476709258303e-01, +9.063629680720371e-01, +9.019514987490371e-01,
+8.974108808873397e-01, +8.927398817643528e-01, +8.879382683346716e-01, +8.830050715882986e-01,
+8.779385355821995e-01, +8.727379973888942e-01, +8.674038889082810e-01, +8.619352566808824e-01,
+8.563305243162549e-01, +8.505893287555129e-01, +8.447127297770400e-01, +8.387007637143140e-01,
+8.325523768291013e-01, +8.262677444285360e-01, +8.198478927378535e-01, +8.132935411236417e-01,
+8.066040997239516e-01, +7.997809105802602e-01, +7.928255537687610e-01, +7.857391245481645e-01,
+7.785212684545030e-01, +7.711744403395434e-01, +7.637008160854790e-01, +7.561026668755407e-01,
+7.483805701761127e-01, +7.405363749469933e-01, +7.325730245135402e-01, +7.244930008228270e-01,
+7.162980305440977e-01, +7.079910089690906e-01, +6.995757887359807e-01, +6.910546259244099e-01,
+6.824295471401947e-01, +6.737031265887281e-01, +6.648801659515325e-01, +6.559637902883004e-01,
+6.469573547411541e-01, +6.378629377753962e-01, +6.286855280775698e-01, +6.194273058858271e-01,
+6.100922809170846e-01, +6.006842631336996e-01, +5.912087588215279e-01, +5.816678990293079e-01,
+5.720650011081139e-01, +5.624031153715043e-01, +5.526906296747590e-01, +5.429296335729603e-01,
+5.331253296256703e-01, +5.232805923025862e-01, +5.134010079652535e-01, +5.034916218473681e-01,
+4.935565059779637e-01, +4.835996679580253e-01, +4.736270399539165e-01, +4.636428606356920e-01,
+4.536519115376573e-01, +4.436589520558524e-01, +4.336702110092904e-01, +4.236905139305571e-01,
+4.137241358370227e-01, +4.037764981593496e-01, +3.938536636599411e-01, +3.839608678121244e-01,
+3.741023650337649e-01, +3.642834353302138e-01, +3.545105744959439e-01, +3.447887254766501e-01,
+3.351225758795436e-01, +3.255174149216463e-01, +3.159783340225490e-01, +3.065118829951374e-01,
+2.971215837581699e-01, +2.878124834032541e-01, +2.785898831431837e-01, +2.694592444601873e-01,
+2.604240268886858e-01, +2.514886909115454e-01, +2.426587307354934e-01, +2.339385917103926e-01,
+2.253316454409216e-01, +2.168420127437019e-01, +2.084745870335012e-01, +2.002332724591125e-01,
+1.921209969418307e-01, +1.841414579810840e-01, +1.762991374092108e-01, +1.685975427109672e-01,
+1.610392647455030e-01, +1.536276387455411e-01, +1.463667950599712e-01, +1.392599476606262e-01,
+1.323093893293405e-01, +1.255182155111708e-01, +1.188903216873086e-01, +1.124286726877977e-01,
+1.061353122093495e-01, +1.000130754353283e-01, +9.406556557413207e-02, +8.829543394466104e-02,
+8.270438757849530e-02, +7.729486433686703e-02, +7.206998099643687e-02, +6.703183558090599e-02,
+6.218153160076208e-02, +5.752079270262547e-02, +5.305187265543024e-02, +4.877591488398974e-02,
+4.469299727922282e-02, +4.080367800167831e-02, +3.710883802024244e-02, +3.360819061792393e-02,
+3.030027537135876e-02, +2.718416076819826e-02, +2.425872983336823e-02, +2.152170070657780e-02,
+1.896992105664512e-02, +1.660053693426304e-02, +1.441002712765955e-02, +1.239334766429038e-02,
+1.054549096241532e-02, +8.862485552559351e-03, +7.329085750247888e-03, +5.896299968476346e-03,
+4.914753459788711e-03, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00

**35.** Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm 1\%$: +3.538498803770035e-04, +4.595886345493055e-04, +5.595519647227489e-04, +6.718404887323839e-04, +7.919323614002698e-04, +9.254835101516548e-04, +1.069418485858920e-03, +1.227927169310031e-03, +1.398277791978983e-03, +1.584491535026729e-03, +1.783653266717233e-03, +1.999873692180148e-03, +2.230687004705732e-03, +2.479549413444207e-03, +2.744274680521470e-03, +3.028517203082985e-03, +3.329799454594260e-03, +3.651493788541270e-03, +3.991659081158673e-03, +4.353535478916468e-03, +4.734803493964832e-03, +5.139354888882466e-03, +5.564965156664017e-03, +6.015065135312130e-03, +6.487669532207667e-03, +6.986108359341676e-03, +7.507986430774601e-03, +8.056692238103912e-03, +8.629882322202329e-03, +9.230898632007642e-03, +9.857619542786990e-03, +1.051343406844975e-02, +1.119617236058772e-02, +1.190938692951881e-02, +1.265082642578719e-02, +1.342375201935177e-02, +1.422598597626579e-02, +1.506090447446532e-02, +1.592611511144210e-02, +1.682519266177794e-02, +1.775591229287213e-02, +1.872166356881472e-02, +1.972014746423546e-02, +2.075475983187825e-02, +2.182299926812682e-02, +2.292828566629717e-02, +2.406813715401559e-02, +2.524583465017564e-02, +2.645943128544517e-02, +2.771207863541604e-02, +2.900157039370381e-02, +3.033143686044867e-02, +3.169933248543932e-02, +3.310834554878132e-02, +3.455615910816914e-02, +3.604609640533871e-02, +3.757564512209753e-02, +3.914808612511974e-02, +4.076128638095439e-02, +4.241834056741758e-02, +4.411695502674887e-02, +4.586038120884381e-02, +4.764607953574337e-02, +4.947719681327219e-02, +5.135136676471998e-02, +5.327183246133368e-02, +5.523619574402436e-02, +5.724780220726930e-02, +5.930419525733627e-02, +6.140861916695377e-02, +6.355854744461048e-02, +6.575698564821578e-02, +6.800132774040281e-02, +7.029450733434550e-02, +7.263424529955659e-02, +7.502357150869594e-02, +7.745987198268531e-02, +7.994662730757418e-02, +8.248121208201259e-02, +8.506635369887924e-02, +8.769965758141890e-02, +9.038399472465716e-02, +9.311641620512773e-02, +9.590005739506280e-02, +9.873233942897164e-02, +1.016162955027316e-01, +1.045493607096311e-01, +1.075345731608719e-01, +1.105690806271684e-01, +1.136556251529813e-01, +1.167913767515824e-01, +1.199789286645804e-01, +1.232155302990620e-01, +1.265040684552515e-01, +1.298417294090302e-01, +1.332315661550852e-01, +1.366709127560524e-01, +1.401623800497866e-01, +1.437031543339276e-01, +1.472957921567060e-01, +1.509371564593891e-01, +1.546298983040232e-01, +1.583709932021852e-01, +1.621632295622287e-01, +1.660038996795837e-01, +1.698955982096184e-01, +1.738354123649302e-01, +1.778260015982545e-01, +1.818640789446629e-01, +1.859520359191026e-01, +1.900868218108653e-01, +1.942708017706291e-01, +1.985008828937603e-01, +2.027798260494142e-01, +2.071046414574582e-01, +2.114778554475382e-01, +2.158964254821512e-01, +2.203627179356420e-01, +2.248732557074316e-01, +2.294303802774835e-01, +2.340304946493155e-01, +2.386763947872762e-01, +2.433647632018021e-01, +2.480980084587409e-01, +2.528729453658238e-01, +2.576919809402799e-01, +2.625518239753811e-01, +2.674547009618951e-01, +2.723969864831702e-01, +2.773809014717047e-01, +2.824031465430401e-01, +2.874658392896952e-01, +2.925657097525320e-01, +2.977050145264297e-01, +3.028802866809923e-01, +3.080937708388026e-01, +3.133419120661713e-01, +3.186267330325243e-01, +3.239446274586855e-01, +3.292976696294886e-01, +3.346822587497995e-01, +3.401004975161905e-01, +3.455490160824131e-01, +3.510297825670005e-01, +3.565392648316303e-01, +3.620795045342974e-01, +3.676468198385683e-01, +3.732431609065464e-01, +3.788648665671841e-01, +3.845139947587731e-01, +3.901867575702975e-01, +3.958851576591690e-01, +4.016055596175310e-01, +4.073498814407726e-01, +4.131143794748322e-01, +4.189008731078437e-01, +4.247056871121635e-01, +4.305308301005456e-01, +4.363724468005679e-01, +4.422326205247767e-01, +4.481076715576617e-01, +4.539992478845187e-01, +4.599036262256764e-01, +4.658227790464821e-01, +4.717526717360889e-01, +4.776951277513855e-01, +4.836466393241829e-01, +4.896089037533445e-01, +4.955781691142885e-01, +5.015564851667653e-01, +5.075397341675292e-01, +5.135297950483941e-01, +5.195228071176610e-01, +5.255203889406241e-01, +5.315186369941947e-01, +5.375197039843709e-01, +5.435197203416460e-01, +5.495204053284317e-01, +5.555183841040963e-01, +5.615153912741460e-01, +5.675072245552497e-01, +5.734957812557457e-01, +5.794770758870604e-01, +5.854526176188222e-01, +5.914186654649489e-01, +5.973773282523112e-01, +6.033245382283379e-01, +6.092622887527459e-01, +6.151869491458284e-01, +6.211002315674210e-01, +6.269981160888640e-01, +6.328823912226461e-01, +6.387491304847892e-01, +6.446002007776794e-01, +6.504316924413531e-01, +6.562457600042717e-01, +6.620384583071039e-01, +6.678117513456276e-01, +6.735619658538692e-01, +6.792906550106088e-01, +6.849937204005565e-01, +6.906734235708962e-01, +6.963256426589250e-01, +7.019517880051427e-01, +7.075491663942173e-01, +7.131194393772130e-01, +7.186585770351414e-01, +7.241690155466505e-01, +7.296469905863920e-01, +7.350940240070911e-01, +7.405065029424016e-01, +7.458864594794676e-01, +7.512298245353598e-01, +7.565387020584289e-01, +7.618094719403713e-01, +7.670441227603888e-01, +7.722388831102434e-01, +7.773958448163656e-01, +7.825113901786742e-01,
+7.875876391562497e-01, +7.926208751337592e-01, +7.976131629355570e-01, +8.025610715609228e-01,
+8.074666387233143e-01, +8.123261531893655e-01, +8.171419338595847e-01, +8.219101564897180e-01,
+8.266329452432137e-01, +8.313069432125857e-01, +8.359343163788637e-01, +8.405111871797961e-01,
+8.450403211238631e-01, +8.495180470826319e-01, +8.539464819668052e-01, +8.583225792686004e-01,
+8.626485837105826e-01, +8.669206756254478e-01, +8.711415846800790e-01, +8.753083234662220e-01,
+8.794234355078734e-01, +8.834826778788665e-01, +8.874884715160425e-01, +8.914384774585629e-01,
+8.953346996622868e-01, +8.991737724042251e-01, +9.029574074899029e-01, +9.066828541224163e-01,
+9.103527429187326e-01, +9.139638342168577e-01, +9.175184878836662e-01, +9.210144133066616e-01,
+9.244537632557187e-01, +9.278332160151861e-01, +9.311556192776946e-01, +9.344176283021008e-01,
+9.376215186479845e-01, +9.407644740241826e-01, +9.438492190005341e-01, +9.468728540294310e-01,
+9.498382236872068e-01, +9.527426712456687e-01, +9.555885737210712e-01, +9.583732599601223e-01,
+9.610993609218629e-01, +9.637636503225360e-01, +9.663690412284377e-01, +9.689132689491541e-01,
+9.713988678700001e-01, +9.738235617865406e-01, +9.761902903500818e-01, +9.784963361871022e-01,
+9.807442506043361e-01, +9.829315352320943e-01, +9.850609512273165e-01, +9.871297972052695e-01,
+9.891408802831312e-01, +9.910923625580078e-01, +9.929872268444632e-01, +9.948228821209419e-01,
+9.966027455323081e-01, +9.983241398929388e-01, +9.999898494568836e-01, +1.001597808884145e+00,
+1.003150760219063e+00, +1.004646500318265e+00, +1.006088248744700e+00, +1.007473713377193e+00,
+1.008806248810530e+00, +1.010083776257753e+00, +1.011309151636166e+00, +1.012480196393275e+00,
+1.013600067830152e+00, +1.014666681083198e+00, +1.015683082766535e+00, +1.016647533889674e+00,
+1.017563337333301e+00, +1.018428468753963e+00, +1.019246216134229e+00, +1.020014681326785e+00,
+1.020736921761459e+00, +1.021410866072808e+00, +1.022039872150903e+00, +1.022622059577585e+00,
+1.023160749941404e+00, +1.023654257342442e+00, +1.024105973101631e+00, +1.024514004504684e+00,
+1.024881624147540e+00, +1.025207065371760e+00, +1.025493542877243e+00, +1.025739288978437e+00,
+1.025947636692103e+00, +1.026116939910040e+00, +1.026250709375593e+00, +1.026347260729698e+00,
+1.026409787584788e+00, +1.026436666375082e+00, +1.026431212267978e+00, +1.026391488022762e+00,
+1.026320857404224e+00, +1.026217843764236e+00, +1.026085730009027e+00, +1.025922917798664e+00,
+1.025733019213987e+00, +1.025514292433933e+00, +1.025269979527211e+00, +1.024998528084259e+00,
+1.024703212795365e+00, +1.024382188798244e+00, +1.024039051426278e+00, +1.023672163232710e+00,
+1.023284940887058e+00, +1.022875917162315e+00, +1.022448453314994e+00, +1.022000829220643e+00,
+1.021536599728231e+00, +1.021053875701803e+00, +1.020555973231408e+00, +1.020041434676317e+00,
+1.019513866799503e+00, +1.018971390778550e+00, +1.018417599116053e+00, +1.017851066303933e+00,
+1.017275179369116e+00, +1.016688023745155e+00, +1.016093242802983e+00, +1.015489129111694e+00,
+1.014878956980025e+00, +1.014261064091392e+00, +1.013639356938881e+00, +1.013011559583153e+00,
+1.012381741769641e+00, +1.011747750709711e+00, +1.011113332101179e+00, +1.010476167900044e+00,
+1.009840844244693e+00, +1.009204021773819e+00, +1.008572045006596e+00, +1.007939764480188e+00,
+1.007331850775798e+00, +1.007112182697132e+00, +1.006407400915498e+00, +1.005715372118122e+00,
+1.005038785533845e+00, +1.004374825095777e+00, +1.003726291405694e+00, +1.003090358040736e+00,
+1.002469814737132e+00, +1.001861838147367e+00, +1.001269198108365e+00, +1.000689073754539e+00,
+1.000124220942757e+00, +9.995718119556711e-01, +9.990346001249977e-01, +9.985097406611592e-01,
+9.979999918405413e-01, +9.975024904153303e-01, +9.970199948970832e-01, +9.965496346682551e-01,
+9.960941547576162e-01, +9.956506910018569e-01, +9.952219662800089e-01, +9.948051243621099e-01,
+9.944028741276870e-01, +9.940123528373235e-01, +9.936362728142866e-01, +9.932717517525477e-01,
+9.929215102130406e-01, +9.925826537087717e-01, +9.922578948824415e-01, +9.919443474477135e-01,
+9.916447007525191e-01, +9.913560821234982e-01, +9.910811659133294e-01, +9.908170758245324e-01,
+9.905664908867821e-01, +9.903265196045258e-01, +9.900998445795673e-01, +9.898835741176714e-01,
+9.896803735870122e-01, +9.894873685512386e-01, +9.893072032520545e-01, +9.891370094863634e-01,
+9.889794323427195e-01, +9.888315884970242e-01, +9.886961351016699e-01, +9.885701787626714e-01,
+9.884563716748773e-01, +9.883518302777313e-01, +9.882591911282058e-01, +9.881755763473004e-01,
+9.881036242002076e-01, +9.880404423341358e-01, +9.879886826752381e-01, +9.879454420034824e-01,
+9.879133688360181e-01, +9.878895706371619e-01, +9.878766784594818e-01, +9.878718098237022e-01,
+9.878775927630988e-01, +9.878911354436840e-01, +9.879150762106034e-01, +9.879465136687265e-01,
+9.879880844262307e-01, +9.880368938846610e-01, +9.880955662657537e-01, +9.881612121412342e-01,
+9.882364564839506e-01, +9.883183975703879e-01, +9.884096731867189e-01, +9.885073687439192e-01,
+9.886141241716089e-01, +9.887270275540468e-01, +9.888487088987707e-01, +9.889762614809646e-01,
+9.891123127261381e-01, +9.892539488627546e-01, +9.894038044982261e-01, +9.895589571176194e-01,
+9.897220412447528e-01, +9.898901380212467e-01, +9.900658706993652e-01, +9.902463287269285e-01,
+9.904341281652976e-01, +9.906263564100900e-01, +9.908256340476208e-01, +9.910290387632859e-01, +9.912391966549245e-01, +9.914531811725067e-01, +9.916736156286597e-01, +9.918975763831412e-01,
+9.921276814881759e-01, +9.923610074433741e-01, +9.926001740490448e-01, +9.928422499725458e-01,
+9.930898628710855e-01, +9.933400717991352e-01, +9.935955098307742e-01, +9.938532319665272e-01,
+9.941158706465729e-01, +9.943804814776256e-01, +9.946496946937963e-01, +9.949205650500305e-01,
+9.951957244449919e-01, +9.954722223202400e-01, +9.957526959635303e-01, +9.960341878404958e-01,
+9.963193400387707e-01, +9.966051908036528e-01, +9.968943831870675e-01, +9.971839552785087e-01,
+9.974765480003592e-01, +9.977692009836100e-01, +9.980645531056329e-01, +9.983596442023971e-01,
+9.986571134591464e-01, +9.989539982645417e-01, +9.992529406343204e-01, +9.995509738170480e-01,
+9.998507434423984e-01, +1.000149278838447e+00, +1.000449227898040e+00, +1.000747617880619e+00,
+1.001047097000738e+00, +1.001344692310058e+00, +1.001643050985813e+00, +1.001939200113204e+00,
+1.002235786606954e+00, +1.002529835919150e+00, +1.002823997223967e+00, +1.003115291715261e+00,
+1.003406373183356e+00, +1.003694257266035e+00, +1.003981602446902e+00, +1.004265420574493e+00,
+1.004548371695603e+00, +1.004827468041713e+00, +1.005105367331224e+00, +1.005379085053508e+00,
+1.005651275972376e+00, +1.005918957263603e+00, +1.006184784468940e+00, +1.006445772052972e+00,
+1.006704580223772e+00, +1.006958219378997e+00, +1.007209352772459e+00, +1.007454991591196e+00,
+1.007697795962687e+00, +1.007934783656087e+00, +1.008168609148541e+00, +1.008396295152072e+00,
+1.008620496650569e+00, +1.008838233369544e+00, +1.009052167883909e+00, +1.009259314290145e+00,
+1.009462340194419e+00, +1.009658261526612e+00, +1.009849742422788e+00, +1.010033806431099e+00,
+1.010213115163429e+00, +1.010384692193296e+00, +1.010551208502819e+00, +1.010709677336593e+00,
+1.010862783160582e+00, +1.011007533860188e+00, +1.011146615898068e+00, +1.011277044709547e+00,
+1.011401501255448e+00, +1.011517007040469e+00, +1.011626247430694e+00, +1.011726237740989e+00,
+1.011819675175864e+00, +1.011903571699736e+00, +1.011980623923816e+00, +1.012047856645320e+00,
+1.012107954864219e+00, +1.012157955913755e+00, +1.012200545438956e+00, +1.012232755709885e+00,
+1.012257286376882e+00, +1.012271163275396e+00, +1.012277089047072e+00, +1.012272100156695e+00,
+1.012258889781605e+00, +1.012234505114778e+00, +1.012201643414713e+00, +1.012157343029718e+00,
+1.012104319978655e+00, +1.012039603446877e+00, +1.011965913685509e+00, +1.011880293122688e+00,
+1.011785448628142e+00, +1.011678439894684e+00, +1.011561972516341e+00, +1.011433103151726e+00,
+1.011294553726738e+00, +1.011143373963981e+00, +1.010982291036989e+00, +1.010808368434796e+00,
+1.010624321020038e+00, +1.010427231547075e+00, +1.010219813871895e+00, +1.009999148545101e+00,
+1.009767970668237e+00, +1.009523347700539e+00, +1.009268031808824e+00, +1.008999095526602e+00,
+1.008719286674458e+00, +1.008425698479647e+00, +1.008121073095495e+00, +1.007802512993334e+00,
+1.007472774447058e+00, +1.007128952000889e+00, +1.006773824218378e+00, +1.006404483571931e+00,
+1.006023715042962e+00, +1.005628630023041e+00, +1.005222003295591e+00, +1.004800972930542e+00,
+1.004368308119956e+00, +1.003921160689206e+00, +1.003462311571559e+00, +1.002988912076156e+00,
+1.002503762756151e+00, +1.002004016208227e+00, +1.001492483526354e+00, +1.000966332772540e+00,
+1.000428371467870e+00, +9.998757944861690e-01, +9.993114007411373e-01, +9.987324107135600e-01,
+9.981416218519609e-01, +9.975362702189898e-01, +9.969191628491259e-01, +9.962875422935514e-01,
+9.956442306333592e-01, +9.949864765356604e-01, +9.943171077259315e-01, +9.936333924912825e-01,
+9.929380432296178e-01, +9.917160727742302e-01, +9.908677480361242e-01, +9.900143412821714e-01,
+9.891360093161795e-01, +9.882326326262749e-01, +9.873035624860487e-01, +9.863463238550498e-01,
+9.853620567056602e-01, +9.843478797730104e-01, +9.833051513036913e-01, +9.822305093671991e-01,
+9.811260856582836e-01, +9.799880424709783e-01, +9.788185853162172e-01, +9.776142582502931e-01,
+9.763768210132104e-01, +9.751026333215269e-01, +9.737939228124395e-01, +9.724467635816038e-01,
+9.710631852370086e-01, +9.696397017403771e-01, +9.681786285613160e-01, +9.666759668947944e-01,
+9.651341172191925e-01, +9.635494800783196e-01, +9.619242192293307e-01, +9.602543350544703e-01,
+9.585422731136767e-01, +9.567841986369237e-01, +9.549824213719248e-01, +9.531333627775944e-01,
+9.512394303101863e-01, +9.492969005669868e-01, +9.473083933922714e-01, +9.452700238623795e-01,
+9.431841637391052e-01, +9.410472222265884e-01, +9.388615698236068e-01, +9.366234817959531e-01,
+9.343357002925867e-01, +9.319946435581106e-01, +9.296028267859759e-01, +9.271568160852692e-01,
+9.246592033932568e-01, +9.221062052092852e-01, +9.195004240356797e-01, +9.168383396399868e-01,
+9.141224927600506e-01, +9.113493760046765e-01, +9.085218034087421e-01, +9.056363890361683e-01,
+9.026958474136628e-01, +8.996967011299613e-01, +8.966416378522284e-01, +8.935272411148886e-01,
+8.903562054918268e-01, +8.871250499337346e-01, +8.838366845222299e-01, +8.804877931535187e-01,
+8.770812736055238e-01, +8.736138336697008e-01, +8.700884209228057e-01, +8.665016401172241e-01,
+8.628563075036018e-01, +8.591492134848260e-01, +8.553833146397594e-01, +8.515554376987873e-01,
+8.476686394755906e-01, +8.437199738159921e-01, +8.397124082723917e-01, +8.356428970797861e-01,
+8.315145717373513e-01, +8.273244136947282e-01, +8.230753889817990e-01, +8.187646556254478e-01,
+8.143955052591809e-01, +8.099649296155544e-01, +8.054763240960976e-01, +8.009271179588155e-01, +7.963204506324437e-01, +7.916533519679438e-01, +7.869294361891859e-01, +7.821460539775005e-01,
+7.773057646170487e-01, +7.724075191626083e-01, +7.674541821769616e-01, +7.624428319731227e-01,
+7.573778165664506e-01, +7.522563457568547e-01, +7.470817821499429e-01, +7.418518832940608e-01,
+7.365702052057368e-01, +7.312341927030358e-01, +7.258478768003871e-01, +7.204090552899627e-01,
+7.149213766200488e-01, +7.093829112276890e-01, +7.037975107157410e-01, +6.981626982337203e-01,
+6.924822574950567e-01, +6.867542812151157e-01, +6.809822459535158e-01, +6.751641683711578e-01,
+6.693041888771051e-01, +6.634003182158815e-01, +6.574563319397519e-01, +6.514710959179395e-01,
+6.454477530601381e-01, +6.393842401194645e-01, +6.332854832820911e-01, +6.271477285210396e-01,
+6.209759156556838e-01, +6.147685389896460e-01, +6.085293803703800e-01, +6.022569117623975e-01,
+5.959553778639692e-01, +5.896228984554688e-01, +5.832624455793536e-01, +5.768737955463938e-01,
+5.704590282594502e-01, +5.640165022515612e-01, +5.575534287167304e-01, +5.510670389249083e-01,
+5.445598110309068e-01, +5.380320138069060e-01, +5.314874283056712e-01, +5.249238143777145e-01,
+5.183454027643609e-01, +5.117512861349316e-01, +5.051454054672581e-01, +4.985259415650634e-01,
+4.918987341485414e-01, +4.852602812611293e-01, +4.786156067459849e-01, +4.719635569001799e-01,
+4.653076657434153e-01, +4.586473038370960e-01, +4.519865712901121e-01, +4.453241417472980e-01,
+4.386643656872857e-01, +4.320060235689271e-01, +4.253531733174983e-01, +4.187046888325280e-01,
+4.120648989967404e-01, +4.054326930449553e-01, +3.988123056192917e-01, +3.922024876218684e-01,
+3.856076044898875e-01, +3.790262923635895e-01, +3.724631634624147e-01, +3.659167460890094e-01,
+3.593914828698104e-01, +3.528864871672291e-01, +3.464055764938486e-01, +3.399474132903109e-01,
+3.335176660030293e-01, +3.271139090168518e-01, +3.207392420889753e-01, +3.143954622458083e-01,
+3.080847161569418e-01, +3.018061113177053e-01, +2.955645092490569e-01, +2.893580088818822e-01,
+2.831905952786933e-01, +2.770614560088827e-01, +2.709746519672053e-01, +2.649288369241889e-01,
+2.589278854215034e-01, +2.529705733428521e-01, +2.470608550624402e-01, +2.411974884962474e-01,
+2.353843453791010e-01, +2.296201119084320e-01, +2.239085920293915e-01, +2.182484277107470e-01,
+2.126433716126154e-01, +2.070920316105701e-01, +2.015981078416022e-01, +1.961601816145380e-01,
+1.907818965593135e-01, +1.854618027014993e-01, +1.802035203864437e-01, +1.750055292053725e-01,
+1.698714235427536e-01, +1.647996883470628e-01, +1.597938610874129e-01, +1.548523838673932e-01,
+1.499787548077658e-01, +1.451714001185458e-01, +1.404337947365906e-01, +1.357643522991611e-01,
+1.311665152711531e-01, +1.266386794659985e-01, +1.221842534547464e-01, +1.178016171445482e-01,
+1.134941442588690e-01, +1.092601994264173e-01, +1.051031184506442e-01, +1.010212496137049e-01,
+9.701788451015510e-02, +9.309135143613317e-02, +8.924488982596421e-02, +8.547680283183663e-02,
+8.179026694646475e-02, +7.818355556343952e-02, +7.465976378295235e-02, +7.121713409722980e-02,
+6.785866241065035e-02, +6.458254322751886e-02, +6.139166651287085e-02, +5.828416955031769e-02,
+5.526281189874142e-02, +5.232565602156542e-02, +4.947530987083008e-02, +4.670976978373095e-02,
+4.403144898585497e-02, +4.143827607712719e-02, +3.893244425578721e-02, +3.651180398163022e-02,
+3.417832280408597e-02, +3.192976013776998e-02, +2.976774716313782e-02, +2.769013516567754e-02,
+2.569810636390758e-02, +2.378944369289586e-02, +2.196497565730828e-02, +2.022259265088492e-02,
+1.856252261671509e-02, +1.698293043956028e-02, +1.548317776486453e-02, +1.406194554493180e-02,
+1.271739094059619e-02, +1.144924909653903e-02, +1.025352572459910e-02, +9.132141467690603e-03,
+8.076482660383204e-03, +7.093814769976364e-03, +6.160346335510290e-03, +5.300044080947794e-03,
+4.327696566833525e-03, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00

36. Appareil selon l'une quelconque des revendications 6 à 21, dans lequel la fonction de division en fenêtres de synthèse (290) comprend une succession, dans l'ordre en avant ou en arrière, formée par les valeurs suivantes avec une tolérance de $\pm 1\%$: +3.235700349233950e-04, +3.821992968116373e-04, +4.346763076430269e-04, +4.841399974556557e-04, +5.337292962876158e-04, +5.864735900759105e-04, +6.428827504324996e-04, +7.010318350640768e-04, +7.608344672311270e-04, +8.240821499679188e-04, +8.910357994632938e-04, +9.604008359868557e-04, +1.032187650884365e-03, +1.107726421735994e-03, +1.187132578842487e-03, +1.269300730654068e-03, +1.354305556720234e-03, +1.443403284874795e-03, +1.536663296357133e-03, +1.632968062524617e-03, +1.732380147404573e-03, +1.836145247521724e-03, +1.944392065549996e-03, +2.056125836181849e-03, +2.171386021601719e-03, +2.291251920978034e-03, +2.415808383814314e-03, +2.544144440874477e-03, +2.676357471188558e-03, +2.813551797283812e-03, +2.955803613263345e-03, +3.102160324883627e-03, +3.252661103181324e-03, +3.408341073385241e-03, +3.569302917352426e-03, +3.734713566068289e-03, +3.904659832213214e-03, +4.080147004222224e-03, +4.261212283030981e-03, +4.446929867132814e-03, +4.637409387087253e-03, +4.833793064672789e-03, +5.036194779738963e-03, +5.243697651112321e-03, +5.456361749675164e-03, +5.675227929566806e-03, +5.900394401532485e-03, +6.131014766883671e-03, +6.367178191275927e-03, +6.609908124535202e-03, +6.859253963058476e-03, +7.114293307371561e-03, +7.375089966000295e-03, +7.642693523739984e-03, +7.917171839712018e-03, +8.197610411215884e-03, +8.484065880416487e-03, +8.777567475206218e-03, +9.078195201482999e-03, +9.385078909241503e-03, +9.698299554301988e-03, +1.001888876231112e-02, +1.034691797503113e-02, +1.068149963936024e-02, +1.102272421949215e-02, +1.137165918496004e-02, +1.172838973544289e-02, +1.209201783148431e-02, +1.246260014549782e-02, +1.284114967210881e-02, +1.322773320467288e-02, +1.362147156562462e-02, +1.402244719763268e-02, +1.443170227861997e-02, +1.484928966105225e-02, +1.527427503031274e-02, +1.570673344965518e-02, +1.614774906895406e-02, +1.659741217225623e-02, +1.705481769961258e-02, +1.752003567982498e-02, +1.799411192217523e-02, +1.847711280171765e-02, +1.896812570518296e-02, +1.946722405557199e-02, +1.997546609433320e-02, +2.049290306467406e-02, +2.101858037652682e-02, +2.155255505248360e-02, +2.209589582354997e-02, +2.264866778978731e-02, +2.320993080187466e-02, +2.377971919482778e-02, +2.435904568934701e-02, +2.494800748775296e-02, +2.554578281793083e-02, +2.615244880416785e-02, +2.676898100961685e-02, +2.739542549965559e-02, +2.803090209537370e-02, +2.867550388692567e-02, +2.933029464839461e-02, +2.999535245144327e-02, +3.066976865911597e-02, +3.135358217583060e-02, +3.204778132642869e-02, +3.275241094528637e-02, +3.346657321987338e-02, +3.419033915994245e-02, +3.492474656851959e-02, +3.566984393450434e-02, +3.642469098112518e-02, +3.718932683936013e-02, +3.796477227376223e-02, +3.875111047720054e-02, +3.954748420753697e-02, +4.035395199977597e-02, +4.117148855800665e-02, +4.200013716597904e-02, +4.283901138210502e-02, +4.368817991890082e-02, +4.454866443036003e-02, +4.542050595471842e-02, +4.630276577789394e-02, +4.719547798640356e-02, +4.809965043366945e-02, +4.901533344583754e-02, +4.994161943600844e-02, +5.087856571149934e-02, +5.182719384692941e-02, +5.278755308483513e-02, +5.375872122678868e-02, +5.474076083738614e-02, +5.573471840677637e-02, +5.674064972230924e-02, +5.775761981233486e-02, +5.878567633813699e-02, +5.982584998609648e-02, +6.087818970335195e-02, +6.194176167634657e-02, +6.301659162319866e-02, +6.410366584958441e-02, +6.520301218579141e-02, +6.631369927165530e-02, +6.743573988811077e-02, +6.857009288032996e-02, +6.971680213521406e-02, +7.087499583595998e-02, +7.204473108503576e-02, +7.322699135891000e-02, +7.442178588912410e-02, +7.562815385274406e-02, +7.684615718122945e-02, +7.807687861830234e-02, +7.932038618419741e-02, +8.057572953286415e-02, +8.184289534616669e-02, +8.312281225703541e-02, +8.441550376460240e-02, +8.572008755967025e-02, +8.703660776989294e-02, +8.836603137189772e-02, +8.970833701278809e-02, +9.106251913073614e-02, +9.242858978650852e-02, +9.380757856153675e-02, +9.519952848393795e-02, +9.660349396690321e-02, +9.801949952722568e-02, +9.944854075501454e-02, +1.008906469288751e-01,
+1.023448810132759e-01, +1.038112769854394e-01, +1.052908387348570e-01, +1.067835785257166e-01,
+1.082885168352610e-01, +1.098056403352340e-01, +1.113359035023070e-01, +1.128793060660070e-01,
+1.144348917022365e-01, +1.160026418427939e-01, +1.175834766182813e-01, +1.191773817925584e-01,
+1.207834098631640e-01, +1.224015773361210e-01, +1.240328627276697e-01, +1.256772653276007e-01,
+1.273338065186211e-01, +1.290025000390856e-01, +1.306843522870102e-01, +1.323793987456491e-01,
+1.340867011604515e-01, +1.358062490065425e-01, +1.375389612590117e-01, +1.392848238717889e-01,
+1.410428901194039e-01, +1.428131506368226e-01, +1.445965317426731e-01, +1.463929885103623e-01,
+1.482015069292479e-01, +1.500220583792976e-01, +1.518555991923989e-01, +1.537021065265166e-01,
+1.555605782414143e-01, +1.574309942903742e-01, +1.593143180431248e-01, +1.612105639985474e-01,
+1.631187954209520e-01, +1.650390046254505e-01, +1.669721131327860e-01, +1.689180947901775e-01,
+1.708759773387028e-01, +1.728457537748600e-01, +1.748283801430888e-01, +1.768238156096776e-01,
+1.788310228663131e-01, +1.808499369342717e-01, +1.828814674176937e-01, +1.849255792714432e-01,
+1.869812912624581e-01, +1.890485613515956e-01, +1.911282864915418e-01, +1.932204127989935e-01,
+1.953239376543276e-01, +1.974388457221676e-01, +1.995661075971730e-01, +2.017057139908492e-01,
+2.038566744769371e-01, +2.060189557031752e-01, +2.081934824879514e-01, +2.103802237348733e-01,
+2.125781921411190e-01, +2.147873518665726e-01, +2.170086169288035e-01, +2.192419082234839e-01,
+2.214861559453727e-01, +2.237412958295601e-01, +2.260082674736221e-01, +2.282869811837961e-01,
+2.305763207809758e-01, +2.328762384864272e-01, +2.351877543503455e-01, +2.375108487943784e-01,
+2.398444593573832e-01, +2.421885165595468e-01, +2.445439470704063e-01, +2.469107075411724e-01,
+2.492877833071390e-01, +2.516751260083683e-01, +2.540736535206898e-01, +2.564833108170047e-01,
+2.589030699085996e-01, +2.613328676927456e-01, +2.637736050921935e-01, +2.662251902764728e-01,
+2.686865397612919e-01, +2.711575593740559e-01, +2.736391458519503e-01, +2.761312410342679e-01,
+2.786328295517739e-01, +2.811438338004066e-01, +2.836651148767941e-01, +2.861965981859126e-01,
+2.887372740841138e-01, +2.912870864180725e-01, +2.938469307293017e-01, +2.964167262145285e-01,
+2.989954170150198e-01, +3.015829286213736e-01, +3.041801674023100e-01, +3.067870538332799e-01,
+3.094025219039914e-01, +3.120264728553777e-01, +3.146597759277349e-01, +3.173023310827802e-01,
+3.199530692693200e-01, +3.226118955458964e-01, +3.252796888787393e-01, +3.279563545740858e-01,
+3.306408240998973e-01, +3.333329987313211e-01, +3.360337508241129e-01, +3.387430081844867e-01,
+3.414597523183469e-01, +3.441838955445625e-01, +3.469162810132548e-01, +3.496568059948401e-01,
+3.524044231246164e-01, +3.551590444946287e-01, +3.579215403419018e-01, +3.606918060977176e-01,
+3.634687629020059e-01, +3.662523018706806e-01, +3.690432842592497e-01, +3.718416007949022e-01,
+3.746461722601965e-01, +3.774569030021080e-01, +3.802746797947738e-01, +3.830993933108193e-01,
+3.859299384223780e-01, +3.887661993522015e-01, +3.916090507233831e-01, +3.944583955021906e-01,
+3.973131637447736e-01, +4.001732470818926e-01, +4.030394989766596e-01, +4.059118059100888e-01,
+4.087890872349265e-01, +4.116712207743528e-01, +4.145590432995318e-01, +4.174524354370054e-01,
+4.203503225145663e-01, +4.232526082630496e-01, +4.261601728427663e-01, +4.290728957232506e-01,
+4.319896569618181e-01, +4.349103424521226e-01, +4.378358447638693e-01, +4.407660763679560e-01,
+4.436999665749521e-01, +4.466373809565015e-01, +4.495791232066263e-01, +4.525250566690236e-01,
+4.554741060746665e-01, +4.584261742417322e-01, +4.613821390145840e-01, +4.643418692214444e-01,
+4.673042252463159e-01, +4.702690556535691e-01, +4.732372004975696e-01, +4.762085675098781e-01,
+4.791821288489955e-01, +4.821577734075715e-01, +4.851363063006593e-01, +4.881175853001019e-01,
+4.911005242880451e-01, +4.940850327998220e-01, +4.970720120437943e-01, +5.000613277949747e-01,
+5.030518116390311e-01, +5.060433154467696e-01, +5.090367134250039e-01, +5.120318927612107e-01,
+5.150277508616620e-01, +5.180241439456884e-01, +5.210218879576217e-01, +5.240208300352607e-01,
+5.270198510229556e-01, +5.300188492910082e-01, +5.330187387865785e-01, +5.360194223342527e-01,
+5.390197891039044e-01, +5.420196856030712e-01, +5.450199204515231e-01, +5.480203984293612e-01,
+5.510201184135838e-01, +5.540189939344148e-01, +5.570178491640744e-01, +5.600165101133929e-01,
+5.630138095716375e-01, +5.660096045860781e-01, +5.690047761849362e-01, +5.719992058026786e-01,
+5.749917722935854e-01, +5.779823098049300e-01, +5.809716105476772e-01, +5.839595278786620e-01,
+5.869449780892492e-01, +5.899278766736546e-01, +5.929091339529038e-01, +5.958886225335936e-01,
+5.988651785480291e-01, +6.018386614784691e-01, +6.048099568741729e-01, +6.077789763021885e-01,
+6.107446538724647e-01, +6.137068698395559e-01, +6.166664505621099e-01, +6.196232440099102e-01,
+6.225761217125432e-01, +6.255249461230102e-01, +6.284705701386001e-01, +6.314128591964590e-01,
+6.343506915084997e-01, +6.372839411338272e-01, +6.402134772829997e-01, +6.431391659393545e-01,
+6.460598714450869e-01, +6.489754897736506e-01, +6.518869471124649e-01, +6.547941354100638e-01,
+6.576959114103553e-01, +6.605921398591732e-01, +6.634836963621389e-01, +6.663704870510495e-01,
+6.692514453435826e-01, +6.721264409903913e-01, +6.749962795110787e-01, +6.778607807385375e-01, +6.807187840914061e-01, +6.835701860237697e-01, +6.864159372105746e-01, +6.892559431770480e-01,
+6.920890588499607e-01, +6.949150680560000e-01, +6.977346951975620e-01, +7.005478826218464e-01,
+7.033537849891354e-01, +7.061523680058837e-01, +7.089444008783498e-01, +7.117296915594161e-01,
+7.145070977546192e-01, +7.172765338080037e-01, +7.200389672139186e-01, +7.227943349906750e-01,
+7.255415386736762e-01, +7.282804177906205e-01, +7.310117549409422e-01, +7.337354140683028e-01,
+7.364503418025881e-01, +7.391564587113454e-01, +7.418546544582220e-01, +7.445447900371659e-01,
+7.472257006958800e-01, +7.498972580176051e-01, +7.525603713200814e-01, +7.552149563509314e-01,
+7.578599326607545e-01, +7.604951971158384e-01, +7.631216241889446e-01, +7.657390988438872e-01,
+7.683465174378752e-01, +7.709437746884765e-01, +7.735317637507610e-01, +7.761103909474643e-01,
+7.786785753465276e-01, +7.812362247368221e-01, +7.837842352787271e-01, +7.863225078411482e-01,
+7.888499478365373e-01, +7.913664452543058e-01, +7.938728763542381e-01, +7.963691608881653e-01,
+7.988542608155023e-01, +8.013280948233752e-01, +8.037915368847273e-01, +8.062444700164981e-01,
+8.086857893766403e-01, +8.111154166403033e-01, +8.135342978258457e-01, +8.159423410909078e-01,
+8.183384161720055e-01, +8.207224042595236e-01, +8.230952011363564e-01, +8.254567363530231e-01,
+8.278059715784122e-01, +8.301428451410482e-01, +8.324682688387346e-01, +8.347821132094333e-01,
+8.370832131533167e-01, +8.393715063470556e-01, +8.416480314488108e-01, +8.439127501937738e-01,
+8.461645428100565e-01, +8.484032850727410e-01, +8.506298550754564e-01, +8.528442051510350e-01,
+8.550453592633493e-01, +8.572332837070840e-01, +8.594088830061699e-01, +8.615720389795806e-01,
+8.637216156780773e-01, +8.658575289268042e-01, +8.679807503377460e-01, +8.700913260411943e-01,
+8.721883611259660e-01, +8.742716585927360e-01, +8.763417616681772e-01, +8.783992457627015e-01,
+8.804446862867205e-01, +8.824720518946858e-01, +8.844895714000796e-01, +8.864924067856547e-01,
+8.884810495155143e-01, +8.904559910537616e-01, +8.924176927432972e-01, +8.943659231393618e-01,
+8.962997945931150e-01, +8.982192307568165e-01, +9.001249598283012e-01, +9.020168984242400e-01,
+9.038941561917321e-01, +9.057567533900666e-01, +9.076056139480890e-01, +9.094406951444953e-01,
+9.112609887718295e-01, +9.130664170641334e-01, +9.148578383916375e-01, +9.166352766163086e-01,
+9.183979162084582e-01, +9.201457654565685e-01, +9.218796522413809e-01, +9.235994678560167e-01,
+9.253041759179184e-01, +9.269937646114531e-01, +9.286692422352107e-01, +9.303305869999694e-01,
+9.319767447096182e-01, +9.336076279434850e-01, +9.352241212055423e-01, +9.368261950246144e-01,
+9.384129048732400e-01, +9.399842532824511e-01, +9.415411877758678e-01, +9.430836933050435e-01,
+9.446107932775473e-01, +9.461224797394725e-01, +9.476197145049868e-01, +9.491025238239363e-01,
+9.505699947545118e-01, +9.520221006942875e-01, +9.534597036603291e-01, +9.548827789205158e-01,
+9.562904165806793e-01, +9.576826318703395e-01, +9.590603607072891e-01, +9.604235518327253e-01,
+9.617711703240024e-01, +9.631031827400425e-01, +9.644205605875820e-01, +9.657233714331878e-01,
+9.670107721424878e-01, +9.682827690312492e-01, +9.695402205004198e-01, +9.707831348559515e-01,
+9.720106722663890e-01, +9.732228900099870e-01, +9.744207385215033e-01, +9.756042291745447e-01,
+9.767724349112544e-01, +9.779253363131216e-01, +9.790638238608151e-01, +9.801879015797271e-01,
+9.812966868607661e-01, +9.823902028722666e-01, +9.834693768739560e-01, +9.845342107123233e-01,
+9.855837812929384e-01, +9.866180804760872e-01, +9.876380187637696e-01, +9.886436665180195e-01,
+9.896342515143703e-01, +9.906098638997559e-01, +9.915714515450228e-01, +9.925190128422767e-01,
+9.934516032286224e-01, +9.943692859110803e-01, +9.952731289730088e-01, +9.961631909904601e-01,
+9.970385179500313e-01, +9.978990898252071e-01, +9.987458272559335e-01, +9.995787919228785e-01,
+1.000397182360297e+00, +1.001201041464802e+00, +1.001991256344717e+00, +1.002767847497049e+00,
+1.003529972103569e+00, +1.004277707367492e+00, +1.005012047094235e+00, +1.005733043131263e+00,
+1.006439806897506e+00, +1.007132401590545e+00, +1.007811842988376e+00, +1.008478224880801e+00,
+1.009130715556477e+00, +1.009769355086547e+00, +1.010395057449511e+00, +1.011007859994881e+00,
+1.011606924689628e+00, +1.012192316076366e+00, +1.012765000430642e+00, +1.013325049263210e+00,
+1.013871638199171e+00, +1.014404818816957e+00, +1.014925520781073e+00, +1.015433826923486e+00,
+1.015928972967257e+00, +1.016411066364942e+00, +1.016881083871244e+00, +1.017339099302786e+00,
+1.017784285061100e+00, +1.018216717878600e+00, +1.018637379379835e+00, +1.019046362683200e+00,
+1.019442870837515e+00, +1.019826975825003e+00, +1.020199618679535e+00, +1.020560853084751e+00,
+1.020909847360410e+00, +1.021246684563866e+00, +1.021572361827679e+00, +1.021886975685526e+00,
+1.022189721024281e+00, +1.022480682703848e+00, +1.022760836860466e+00, +1.023030287959746e+00,
+1.023288268237906e+00, +1.023534888355832e+00, +1.023771136381063e+00, +1.023997104737320e+00,
+1.024211990514308e+00, +1.024415875333744e+00, +1.024609726504572e+00, +1.024793642571832e+00,
+1.024966852210664e+00, +1.025129444345768e+00, +1.025282368545871e+00, +1.025425713582690e+00,
+1.025558707847599e+00, +1.025681449959415e+00, +1.025794908567991e+00, +1.025899187425550e+00,
+1.025993525806572e+00, +1.026078042674063e+00, +1.026153736073730e+00, +1.026220725639502e+00,
+1.026278251222302e+00, +1.026326400217514e+00, +1.026366109298213e+00, +1.026397475218959e+00, +1.026419755159132e+00, +1.026433063472609e+00, +1.026438369530571e+00, +1.026435753513555e+00,
+1.026424407896423e+00, +1.026404414325658e+00, +1.026376745497183e+00, +1.026341529591056e+00,
+1.026298047712657e+00, +1.026246413164014e+00, +1.026187571341079e+00, +1.026121618202469e+00,
+1.026047802601159e+00, +1.025966259113017e+00, +1.025878005857533e+00, +1.025783163725466e+00,
+1.025680955378961e+00, +1.025571464026533e+00, +1.025455636062312e+00, +1.025333580354341e+00,
+1.025204567428491e+00, +1.025068712226252e+00, +1.024926972279997e+00, +1.024779424810995e+00,
+1.024625269765159e+00, +1.024464619501421e+00, +1.024298498053110e+00, +1.024127035189888e+00,
+1.023949464567318e+00, +1.023765888955297e+00, +1.023577282345944e+00, +1.023383771098535e+00,
+1.023184632809730e+00, +1.022979990313458e+00, +1.022770810566653e+00, +1.022557186135377e+00,
+1.022338337695996e+00, +1.022114387574851e+00, +1.021886357834243e+00, +1.021654354624439e+00,
+1.021417567672874e+00, +1.021176074694516e+00, +1.020930844259280e+00, +1.020681994464816e+00,
+1.020428792450358e+00, +1.020171385028845e+00, +1.019910795563718e+00, +1.019647124626418e+00,
+1.019379551852598e+00, +1.019108176121263e+00, +1.018834017611273e+00, +1.018557222865231e+00,
+1.018277062013127e+00, +1.017993662628480e+00, +1.017708008483692e+00, +1.017420178311649e+00,
+1.017129349129694e+00, +1.016835630605444e+00, +1.016540064652456e+00, +1.016242782169058e+00,
+1.015943000562828e+00, +1.015640812550351e+00, +1.015337187460531e+00, +1.015032211107897e+00,
+1.014725089526348e+00, +1.014415991238242e+00, +1.014106040189062e+00, +1.013795318041038e+00,
+1.013482869234993e+00, +1.013168810057302e+00, +1.012854327596526e+00, +1.012539547722209e+00,
+1.012223533569952e+00, +1.011906384233988e+00, +1.011589234882839e+00, +1.011272160610958e+00,
+1.010954179972212e+00, +1.010635428864728e+00, +1.010317161995333e+00, +1.009999611212465e+00,
+1.009681947024951e+00, +1.009363573682324e+00, +1.009044325068028e+00, +1.008727479269698e+00,
+1.008418957730006e+00, +1.008106691995008e+00, +1.007763945845098e+00, +1.007443035427814e+00,
+1.007268321305087e+00, +1.007188313360058e+00, +1.006980582693088e+00, +1.006607718427208e+00,
+1.006220813354843e+00, +1.005880191360173e+00, +1.005548147634276e+00, +1.005208505985926e+00,
+1.004870660907557e+00, +1.004538945715620e+00, +1.004211548979837e+00, +1.003887307826199e+00,
+1.003565998252022e+00, +1.003247928753973e+00, +1.002933862630671e+00, +1.002623715011975e+00,
+1.002316573551338e+00, +1.002012456628431e+00, +1.001712307918128e+00, +1.001416118705407e+00,
+1.001122929266782e+00, +1.000832736946922e+00, +1.000546495806722e+00, +1.000264200804259e+00,
+9.999848879324513e-01, +9.997085530666436e-01, +9.994361518334981e-01, +9.991676778789439e-01,
+9.989021630276661e-01, +9.986396025239043e-01, +9.983809548686250e-01, +9.981262129964925e-01,
+9.978744044020248e-01, +9.976255227380388e-01, +9.973805277659410e-01, +9.971394126637049e-01,
+9.969012039797195e-01, +9.966658933095314e-01, +9.964344374346332e-01, +9.962068296990753e-01,
+9.959820998119757e-01, +9.957602381261346e-01, +9.955421958422669e-01, +9.953279652235180e-01,
+9.951165794460692e-01, +9.949080290979398e-01, +9.947032622296315e-01, +9.945022689695088e-01,
+9.943040815876473e-01, +9.941086912851109e-01, +9.939170480434331e-01, +9.937291405239381e-01,
+9.935439962464298e-01, +9.933616056210112e-01, +9.931829218182915e-01, +9.930079338821240e-01,
+9.928356667510468e-01, +9.926661086172732e-01, +9.925002110373203e-01, +9.923379640068731e-01,
+9.921783957486814e-01, +9.920214929714285e-01, +9.918682011153984e-01, +9.917185094982703e-01,
+9.915714511212392e-01, +9.914270132578689e-01, +9.912861375369392e-01, +9.911488111762619e-01,
+9.910140670228395e-01, +9.908818932025615e-01, +9.907532330064230e-01, +9.906280727376265e-01,
+9.905054418160028e-01, +9.903853272281469e-01, +9.902686735168059e-01, +9.901554680972392e-01,
+9.900447411363362e-01, +9.899364775767996e-01, +9.898316173651273e-01, +9.897301484429727e-01,
+9.896311064950427e-01, +9.895344764114521e-01, +9.894411924684042e-01, +9.893512408407925e-01,
+9.892636595590807e-01, +9.891784350480575e-01, +9.890965020344753e-01, +9.890178449763316e-01,
+9.889414982259392e-01, +9.888674481881904e-01, +9.887966331854001e-01, +9.887290383256132e-01,
+9.886636955343167e-01, +9.886005893838439e-01, +9.885406571815547e-01, +9.884838850803949e-01,
+9.884293079255704e-01, +9.883769097708243e-01, +9.883276240055705e-01, +9.882814356355465e-01,
+9.882373812607220e-01, +9.881954463086439e-01, +9.881565649335834e-01, +9.881207205644380e-01,
+9.880869460773882e-01, +9.880552270464479e-01, +9.880265015932943e-01, +9.880007538329854e-01,
+9.879770139187286e-01, +9.879552655810734e-01, +9.879364462155417e-01, +9.879205412712961e-01,
+9.879065840760606e-01, +9.878945575956836e-01, +9.878853946070033e-01, +9.878790797412935e-01,
+9.878746493979034e-01, +9.878720878008731e-01, +9.878723269672057e-01, +9.878753499522159e-01,
+9.878801909638151e-01, +9.878868346314371e-01, +9.878962158879177e-01, +9.879083181018892e-01,
+9.879221731254697e-01, +9.879377642109470e-01, +9.879560260604132e-01, +9.879769430009732e-01,
+9.879995488718708e-01, +9.880238263660437e-01, +9.880507071322525e-01, +9.880801746803725e-01,
+9.881112643600719e-01, +9.881439599864610e-01, +9.881791937541983e-01, +9.882169477221827e-01,
+9.882562539746005e-01, +9.882970966792446e-01, +9.883404119215459e-01, +9.883861819949297e-01,
+9.884334355024147e-01, +9.884821553014376e-01, +9.885332784979397e-01, +9.885867883714737e-01, +9.886417143055318e-01, +9.886980383296721e-01, +9.887566952073135e-01, +9.888176678250945e-01,
+9.888799871475064e-01, +9.889436358294569e-01, +9.890095481884937e-01, +9.890777059811048e-01,
+9.891471384894399e-01, +9.892178286528791e-01, +9.892907129712469e-01, +9.893657732439902e-01,
+9.894420366217603e-01, +9.895194850020712e-01, +9.895990550550585e-01, +9.896807293945533e-01,
+9.897635364818964e-01, +9.898474573387898e-01, +9.899334256730253e-01, +9.900214239316713e-01,
+9.901104832002432e-01, +9.902005849312988e-01, +9.902926609798792e-01, +9.903866926546286e-01,
+9.904817105571495e-01, +9.905776973966729e-01, +9.906755858999687e-01, +9.907753570146928e-01,
+9.908760390079692e-01, +9.909776136318341e-01, +9.910810160568396e-01, +9.911862274458985e-01,
+9.912922749689899e-01, +9.913991395528559e-01, +9.915077559112314e-01, +9.916181054602099e-01,
+9.917292162715997e-01, +9.918410691314309e-01, +9.919545975686356e-01, +9.920697824274926e-01,
+9.921856518839308e-01, +9.923021872317422e-01, +9.924203228138201e-01, +9.925400387231874e-01,
+9.926603609120486e-01, +9.927812708898945e-01, +9.929037056012008e-01, +9.930276450366935e-01,
+9.931521123405382e-01, +9.932770885572193e-01, +9.934035125599263e-01, +9.935313647282036e-01,
+9.936596669792295e-01, +9.937883997783191e-01, +9.939185021388579e-01, +9.940499546103031e-01,
+9.941817792665538e-01, +9.943139564620480e-01, +9.944474248344178e-01, +9.945821646067609e-01,
+9.947171976098198e-01, +9.948525044676624e-01, +9.949890245456261e-01, +9.951267376194471e-01,
+9.952646639522682e-01, +9.954027843196593e-01, +9.955420399208714e-01, +9.956824104013806e-01,
+9.958229139376651e-01, +9.959635310797721e-01, +9.961052046849509e-01, +9.962479146150113e-01,
+9.963906777760744e-01, +9.965334742957022e-01, +9.966772475112751e-01, +9.968219775371954e-01,
+9.969666812541205e-01, +9.971113385049125e-01, +9.972568921184832e-01, +9.974033222384361e-01,
+9.975496462958124e-01, +9.976958440808505e-01, +9.978428577721199e-01, +9.979906675056988e-01,
+9.981382913210521e-01, +9.982857084011294e-01, +9.984338592613343e-01, +9.985827266667445e-01,
+9.987313348873088e-01, +9.988796523949821e-01, +9.990285947364306e-01, +9.991781850354060e-01,
+9.993275431378141e-01, +9.994764863008044e-01, +9.996255698609559e-01, +9.997753812452573e-01,
+9.999265078806980e-01, +1.000073497520791e+00, +1.000224669219663e+00, +1.000374570389487e+00,
+1.000523787909342e+00, +1.000672909364706e+00, +1.000822490899924e+00, +1.000972349809292e+00,
+1.001121604191588e+00, +1.001270276668384e+00, +1.001419284847822e+00, +1.001568597382930e+00,
+1.001717235441161e+00, +1.001865181102795e+00, +1.002013378040221e+00, +1.002161805549920e+00,
+1.002309477314975e+00, +1.002456372686098e+00, +1.002603438051255e+00, +1.002750653220044e+00,
+1.002897030034197e+00, +1.003042547763044e+00, +1.003188154489387e+00, +1.003333829980590e+00,
+1.003478584306210e+00, +1.003622396620552e+00, +1.003766216551067e+00, +1.003910024058434e+00,
+1.004052828034629e+00, +1.004194607298016e+00, +1.004336312014269e+00, +1.004477922478776e+00,
+1.004618447680436e+00, +1.004757866142788e+00, +1.004897127367124e+00, +1.005036211788027e+00,
+1.005174129339999e+00, +1.005310858606722e+00, +1.005447348229275e+00, + 1. 0055835 78404365e+00,
+1.005718559516336e+00, +1.005852270535212e+00, +1.005985660340410e+00, +1.006118708775473e+00,
+1.006250425365265e+00, +1.006380789350186e+00, +1.006510750945005e+00, +1.006640290029854e+00,
+1.006768414896740e+00, +1.006895104560895e+00, +1.007021310029137e+00, +1.007147011697879e+00,
+1.007271218063607e+00, +1.007393907701933e+00, +1.007516030573849e+00, +1.007637567482182e+00,
+1.007757528772291e+00, +1.007875893086371e+00, +1.007993608628118e+00, +1.008110655922241e+00,
+1.008226046614216e+00, +1.008339760080372e+00, +1.008452744553207e+00, +1.008564979989454e+00,
+1.008675477014256e+00, +1.008784215564761e+00, +1.008892145905632e+00, +1.008999248092397e+00,
+1.009104530964226e+00, +1.009207974189350e+00, +1.009310529294049e+00, +1.009412177137242e+00,
+1.009511926856510e+00, +1.009609757696156e+00, +1.009706620067364e+00, +1.009802495163920e+00,
+1.009896393940608e+00, +1.009988296223056e+00, +1.010079151649770e+00, +1.010168940724606e+00,
+1.010256673981368e+00, +1.010342332426681e+00, +1.010426868280804e+00, +1.010510261597171e+00,
+1.010591519577714e+00, +1.010670623429633e+00, +1.010748529051234e+00, +1.010825217388920e+00,
+1.010899693712359e+00, +1.010971938438940e+00, +1.011042907905867e+00, +1.011112584131909e+00,
+1.011179974034890e+00, +1.011245058042453e+00, +1.011308790830468e+00, +1.011371154144579e+00,
+1.011431156159085e+00, +1.011488778523215e+00, +1.011544976893053e+00, +1.011599732403024e+00,
+1.011652051214875e+00, +1.011701915457469e+00, +1.011750283661017e+00, +1.011797137846246e+00,
+1.011841483052088e+00, +1.011883300488277e+00, +1.011923548068040e+00, +1.011962209203063e+00,
+1.011998292246508e+00, +1.012031778271071e+00, +1.012063621581602e+00, +1.012093805289032e+00,
+1.012121340917460e+00, +1.012146211141323e+00, +1.012169370028522e+00, +1.012190799612422e+00,
+1.012209509774826e+00, +1.012225484155619e+00, +1.012239680217839e+00, +1.012252080651208e+00,
+1.012261693287047e+00, +1.012268500924551e+00, +1.012273461473019e+00, +1.012276559127865e+00,
+1.012276804202582e+00, +1.012274179329824e+00, +1.012269639581679e+00, +1.012263168844414e+00,
+1.012253779830287e+00, +1.012241456954404e+00, +1.012227156156870e+00, +1.012210860152664e+00,
+1.012191578747083e+00, +1.012169297374220e+00, +1.012144976732521e+00, +1.012118600449884e+00,

**190**

+1.012089175409008e+00, +1.012056685871527e+00, +1.012022093240567e+00, +1.011985383173782e+00,
+1.011945565763788e+00, +1.011902624776521e+00, +1.011857517445845e+00, +1.011810229432951e+00,
+1.011759775156899e+00, +1.011706140218275e+00, +1.011650280893217e+00, +1.011592181601430e+00,
+1.011530855573595e+00, +1.011466289818154e+00, +1.011399444375047e+00, +1.011330304370585e+00,
+1.011257880752579e+00, +1.011182159707019e+00, +1.011104101993156e+00, +1.011023694799342e+00,
+1.010939952356944e+00, +1.010852860445419e+00, +1.010763375755366e+00, +1.010671485695127e+00,
+1.010576209154936e+00, +1.010477533938561e+00, +1.010376415807060e+00, +1.010272840810986e+00,
+1.010165826445586e+00, +1.010055362601328e+00, +1.009942410277932e+00, +1.009826955798404e+00,
+1.009708012131765e+00, +1.009585568925891e+00, +1.009460591235290e+00, +1.009333067695896e+00,
+1.009202011723081e+00, +1.009067412134881e+00, +1.008930231993351e+00, +1.008790461334113e+00,
+1.008647118373303e+00, +1.008500193172393e+00, +1.008350646299744e+00, +1.008198467170796e+00,
+1.008042675572153e+00, +1.007883264022713e+00, +1.007721196075366e+00, +1.007556460824166e+00,
+1.007388074720253e+00, +1.007216031301935e+00, +1.007041299348476e+00, +1.006863869718207e+00,
+1.006682757156533e+00, +1.006497954572682e+00, +1.006310431304003e+00, +1.006120180721864e+00,
+1.005926221917719e+00, +1.005728547752975e+00, +1.005528123164754e+00, +1.005324942594936e+00,
+1.005118031770913e+00, +1.004907385380564e+00, +1.004693965144879e+00, +1.004477765157871e+00,
+1.004257813991292e+00, +1.004034108834670e+00, +1.003807613226332e+00, +1.003578321293819e+00,
+1.003345260144698e+00, +1.003108428405854e+00, +1.002868793771428e+00, +1.002626351889911e+00,
+1.002380128823734e+00, +1.002130123378852e+00, +1.001877304672605e+00, +1.001621670689409e+00,
+1.001362250678481e+00, +1.001099043542970e+00, +1.000833015458249e+00, +1.000564166270619e+00,
+1.000291531899435e+00, +1.000015112295927e+00, +9.997358689793686e-01, +9.994538026878185e-01,
+9.991679559269192e-01, +9.988783302889642e-01, +9.985858838509232e-01, +9.982906190683758e-01,
+9.979915852192069e-01, +9.976887805584920e-01, +9.973831508544119e-01, +9.970747197397686e-01,
+9.967625861356061e-01, +9.964466729061831e-01, +9.961277448216609e-01, +9.958061137774057e-01,
+9.954815632236269e-01, +9.951529474418550e-01, +9.948184819816882e-01, +9.944824644674363e-01,
+9.941541831614942e-01, +9.938176459160070e-01, +9.934356569036324e-01, +9.930678080460911e-01,
+9.928629897063861e-01, +9.920151198036643e-01, +9.914646039976289e-01, +9.910580786225461e-01,
+9.906661670997940e-01, +9.902352352689523e-01, +9.897945722571376e-01, +9.893565433952757e-01,
+9.889131869680553e-01, +9.884611897966706e-01, +9.880027035297985e-01, +9.875383274623817e-01,
+9.870669099030384e-01, +9.865881954382273e-01, +9.861028679251979e-01, +9.856108490726415e-01,
+9.851112908058255e-01, +9.846041087188396e-01, +9.840899793789135e-01, +9.835687475691413e-01,
+9.830394337851477e-01, +9.825019919189980e-01, +9.819573015637479e-01, +9.814052410296346e-01,
+9.808446911100914e-01, +9.802755449178991e-01, +9.796987091039431e-01, +9.791141208337264e-01,
+9.785207439579823e-01, +9.779184677896273e-01, +9.773081082723492e-01, +9.766895349125904e-01,
+9.760616740194450e-01, +9.754244530504396e-01, +9.747787966745514e-01, +9.741245958128935e-01,
+9.734607083730100e-01, +9.727870063627455e-01, +9.721043782586516e-01, +9.714127339971064e-01,
+9.707110047334955e-01, +9.699991325531057e-01, +9.692780666596675e-01, +9.685476898124051e-01,
+9.678068213341131e-01, +9.670553568518259e-01, +9.662942694162036e-01, +9.655234943873926e-01,
+9.647419268609606e-01, +9.639494801526087e-01, +9.631470850364502e-01, +9.623346145023939e-01,
+9.615108868233452e-01, +9.606758082762421e-01, +9.598303722906686e-01, +9.589744979972803e-01,
+9.581070287387355e-01, +9.572278607616873e-01, +9.563379453266456e-01, +9.554372064329766e-01,
+9.545245399941635e-01, +9.535998779685757e-01, +9.526641870716750e-01, +9.517173763138073e-01,
+9.507582991859514e-01, +9.497868942084339e-01, +9.488041830577462e-01, +9.478100888078225e-01,
+9.468034353946915e-01, +9.457841175975197e-01, +9.447531037006662e-01, +9.437103240778304e-01,
+9.426546695512183e-01, +9.415860667090934e-01, +9.405054771915659e-01, +9.394128066604807e-01,
+9.383069072240268e-01, +9.371877218082764e-01, +9.360562830727714e-01, +9.349125451819119e-01,
+9.337553821450042e-01, +9.325847195259637e-01, +9.314015363873052e-01, +9.302057763482381e-01,
+9.289963473252155e-01, +9.277732047659371e-01, +9.265373496318979e-01, +9.252887007804731e-01,
+9.240260966323954e-01, +9.227494594741956e-01, +9.214597964334704e-01, +9.201570566323493e-01,
+9.188401295674291e-01, +9.175089523148627e-01, +9.161645099567182e-01, +9.148067377557750e-01,
+9.134345222358713e-01, +9.120478227747287e-01, +9.106476709258303e-01, +9.092340339068899e-01,
+9.078058138594686e-01, +9.063629680720371e-01, +9.049065091670875e-01, +9.034363889945074e-01,
+9.019514987490371e-01, +9.004517876609461e-01, +8.989382633487150e-01, +8.974108808873397e-01,
+8.958685426521079e-01, +8.943112058133614e-01, +8.927398817643528e-01, +8.911545160393349e-01,
+8.895539896413210e-01, +8.879382683346716e-01, +8.863084022826353e-01, +8.846643687806315e-01,
+8.830050715882986e-01, +8.813304835012828e-01, +8.796416466159852e-01, +8.779385355821995e-01,
+8.762200577776852e-01, +8.744861938961381e-01, +8.727379973888942e-01, +8.709754415944566e-01,
+8.691974194090119e-01, +8.674038889082810e-01, +8.655958747817611e-01, +8.637733542642025e-01, +8.619352566808824e-01, +8.600815675121538e-01, +8.582133280699462e-01, +8.563305243162549e-01,
+8.544320869868485e-01, +8.525180054943617e-01, +8.505893287555129e-01, +8.486460694867924e-01,
+8.466872027543964e-01, +8.447127297770400e-01, +8.427236779556280e-01, +8.407200377231397e-01,
+8.387007637143141e-01, +8.366658636487900e-01, +8.346163977407922e-01, +8.325523768291012e-01,
+8.304727614321823e-01, +8.283775428310826e-01, +8.262677444285360e-01, +8.241433705663960e-01,
+8.220034073785601e-01, +8.198478927378535e-01, +8.176779138137669e-01, +8.154934833957916e-01,
+8.132935411236417e-01, +8.110781042287996e-01, +8.088482692756163e-01, +8.066040997239516e-01,
+8.043446229495154e-01, +8.020698771287099e-01, +7.997809105802602e-01, +7.974777203962242e-01,
+7.951592558139738e-01, +7.928255537687610e-01, +7.904777397235739e-01, +7.881159103734087e-01,
+7.857391245481645e-01, +7.833473203720548e-01, +7.809413293257642e-01, +7.785212684545030e-01,
+7.760865347057494e-01, +7.736372881515523e-01, +7.711744403395434e-01, +7.686979147929021e-01,
+7.662066652369949e-01, +7.637008160854790e-01, +7.611816536232692e-01, +7.586492915456966e-01,
+7.561026668755407e-01, +7.535417845985437e-01, +7.509677253608117e-01, +7.483805701761127e-01,
+7.457793976748408e-01, +7.431642988739133e-01, +7.405363749469933e-01, +7.378956733994703e-01,
+7.352411918301537e-01, +7.325730245135402e-01, +7.298923618910717e-01, +7.271993327965579e-01,
+7.244930008228270e-01, +7.217734421626190e-01, +7.190417491579090e-01, +7.162980305440977e-01,
+7.135414111237446e-01, +7.107720243445051e-01, +7.079910089690906e-01, +7.051984432364411e-01,
+7.023933467824965e-01, +6.995757887359807e-01, +6.967468908559541e-01, +6.939067884621855e-01,
+6.910546259244099e-01, +6.881904964956265e-01, +6.853154435187701e-01, +6.824295471401947e-01,
+6.795319276046549e-01, +6.766227310314311e-01, +6.737031265887281e-01, +6.707732585543063e-01,
+6.678322438578169e-01, +6.648801659515325e-01, +6.619180818581655e-01, +6.589461833521619e-01,
+6.559637902883004e-01, +6.529710426495826e-01, +6.499688969386536e-01, +6.469573547411541e-01,
+6.439354791990427e-01, +6.409035288603075e-01, +6.378629377753962e-01, +6.348137437689479e-01,
+6.317545972986219e-01, +6.286855280775698e-01, +6.256079561741540e-01, +6.225221695832768e-01,
+6.194273058858271e-01, +6.163234711851669e-01, +6.132117491461520e-01, +6.100922809170846e-01,
+6.069642650584504e-01, +6.038278760531646e-01, +6.006842631336996e-01, +5.975336059686350e-01,
+5.943751066904921e-01, +5.912087588215279e-01, +5.880353659529035e-01, +5.848551837605717e-01,
+5.816678990293079e-01, +5.784735261655043e-01, +5.752724325989095e-01, +5.720650011081139e-01,
+5.688516144717076e-01, +5.656282061898663e-01, +5.624031153715552e-01, +5.591715220043816e-01,
+5.559338788791430e-01, +5.526906296747757e-01, +5.494421930334449e-01, +5.461886187066721e-01,
+5.429296335729603e-01, +5.396656057073835e-01, +5.363974990167699e-01, +5.331253296256703e-01,
+5.298481989939661e-01, +5.265662376610855e-01, +5.232805923025862e-01, +5.199914838946222e-01,
+5.166982164701727e-01, +5.134010079652577e-01, +5.101009713211846e-01, +5.067981651483114e-01,
+5.034916218473716e-01, +5.001816735886107e-01, +4.968699258080247e-01, +4.935565059779667e-01,
+4.902400722563398e-01, +4.869206550924504e-01, +4.835996679580279e-01, +4.802774381791762e-01,
+4.769531954412434e-01, +4.736270399539189e-01, +4.702999408508168e-01, +4.669720784607305e-01,
+4.636428606356920e-01, +4.603125364998776e-01, +4.569821724233974e-01, +4.536519115376573e-01,
+4.503209953849403e-01, +4.469896264032189e-01, +4.436589520558524e-01, +4.403291677455351e-01,
+4.369995283852560e-01, +4.336702110092919e-01, +4.303423032287362e-01, +4.270159791313206e-01,
+4.236905139305585e-01, +4.203661194857656e-01, +4.170439288466521e-01, +4.137241358370239e-01,
+4.104060097514602e-01, +4.070897555089031e-01, +4.037764981593507e-01, +4.004664107465299e-01,
+3.971587296380776e-01, +3.938536636599421e-01, +3.905523798917074e-01, +3.872550507871729e-01,
+3.839608678121244e-01, +3.806700467713708e-01, +3.773838145590149e-01, +3.741023650337649e-01,
+3.708248707285573e-01, +3.675515053070522e-01, +3.642834353302138e-01, +3.610208992409523e-01,
+3.577632145496031e-01, +3.545105744959446e-01, +3.512640341612003e-01, +3.480236943438447e-01,
+3.447887254766508e-01, +3.415594491122957e-01, +3.383373171891836e-01, +3.351225758795442e-01,
+3.319142610233081e-01, +3.287122759768420e-01, +3.255174149216469e-01, +3.223300837378850e-01,
+3.191502945992604e-01, +3.159783340225497e-01, +3.128147301790672e-01, +3.096594366002203e-01,
+3.065118829951374e-01, +3.033724163096057e-01, +3.002422624347096e-01, +2.971215837581699e-01,
+2.940094940665994e-01, +2.909060968951387e-01, +2.878124834032541e-01, +2.847288683996017e-01,
+2.816545966307170e-01, +2.785898831431842e-01, +2.755357983580602e-01, +2.724924992373132e-01,
+2.694592444601876e-01, +2.664361954971699e-01, +2.634244029834191e-01, +2.604240268886862e-01,
+2.574343504718905e-01, +2.544555518459914e-01, +2.514886909115458e-01, +2.485339317782194e-01,
+2.455905549948218e-01, +2.426587307354937e-01, +2.397395063360460e-01, +2.368330357314138e-01,
+2.339385917103926e-01, +2.310563352467077e-01, +2.281873038963940e-01, +2.253316454409216e-01,
+2.224886282863191e-01, +2.196584073367104e-01, +2.168420127437019e-01, +2.140395864128403e-01,
+2.112503945704412e-01, +2.084745870335015e-01, +2.057131843889434e-01, +2.029663241873446e-01,
+2.002332724591127e-01, +1.975141729701546e-01, +1.948100372792062e-01, +1.921209969418309e-01, +1.894463139881238e-01, +1.867861307455174e-01, +1.841414579810843e-01, +1.815124204803960e-01, +1.788982688766118e-01, +1.762991374092110e-01, +1.737160334143236e-01, +1.711490837149136e-01, +1.685975427109672e-01, +1.660615404766350e-01, +1.635420747284597e-01, +1.610392647455030e-01, +1.585523606699242e-01, +1.560814882692011e-01, +1.536276387455411e-01, +1.511909278215991e-01, +1.487706056453130e-01, +1.463667950599714e-01, +1.439804830586271e-01, +1.416117840041388e-01, +1.392599476606263e-01, +1.369250939274206e-01, +1.346082041944543e-01, +1.323093893293406e-01, +1.300278987264480e-01, +1.277638491717384e-01, +1.255182155111709e-01, +1.232911060463692e-01, +1.210817706513393e-01, +1.188903216873087e-01, +1.167177275528689e-01, +1.145640946398680e-01, +1.124286726877977e-01, +1.103115703218860e-01, +1.082137493008784e-01, +1.061353122093495e-01, +1.040755094642518e-01, +1.020344462904939e-01, +1.000130754353283e-01, +9.801149609996949e-02, +9.602895962715033e-02, +9.406556557413213e-02, +9.212225718017839e-02, +9.019912955294541e-02, +8.829543394466111e-02, +8.641126446867767e-02, +8.454755261333674e-02, +8.270438757849537e-02, +8.088102201374671e-02, +7.907754246044904e-02, +7.729486433686708e-02, +7.553307095292439e-02, +7.379141728818767e-02, +7.206998099643694e-02, +7.036965903891536e-02, +6.869052561376873e-02, +6.703183558090599e-02, +6.539365708843246e-02, +6.377686761792192e-02, +6.218153160076208e-02, +6.060690353708294e-02, +5.905303920289844e-02, +5.752079270262547e-02, +5.601021629546108e-02, +5.452056276526779e-02, +5.305187265543028e-02, +5.160497192770200e-02, +5.017990065949564e-02, +4.877591488398978e-02, +4.739303765878024e-02, +4.603205697395506e-02, +4.469299727922284e-02, +4.337512126408456e-02, +4.207843336193631e-02, +4.080367800167834e-02, +3.955086170148164e-02, +3.831925359021936e-02, +3.710883802024247e-02, +3.592031377191350e-02, +3.475367083924110e-02, +3.360819061792393e-02, +3.248382426594506e-02, +3.138119240391853e-02, +3.030027537135876e-02, +2.924041340892334e-02, +2.820153617857359e-02, +2.718416076819826e-02, +2.618823091914950e-02, +2.521312012928253e-02, +2.425872983336824e-02, +2.332548569166988e-02, +2.241332520509764e-02, +2.152170070657781e-02, +2.065047207339204e-02, +1.979990274080047e-02, +1.896992105664513e-02, + 1. 8160 12507709582e-02, +1.737032543754079e-02, +1.660053693426305e-02, +1.585068068878849e-02, +1.512059554489944e-02, +1.441002712765956e-02, +1.371861264850595e-02, +1.304629624757017e-02, +1.239334766429038e-02, +1.175941174949483e-02, + 1.114348079271000e-02, +1.054549096241532e-02, +9.966369456231951e-03, +9.405876078723861e-03, +8.862485552559351e-03, +8.334801852513261e-03, +7.821914540064593e-03, +7.329085750247891e-03, +6.866427280374203e-03, +6.407912160580299e-03, +5.896299968476348e-03, +5.431884551945897e-03, +5.251971150005845e-03, +4.914753459788713e-03, +3.326211257672788e-03, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00, +0.000000000000000e+00, +0.000000000000000e+00, +0.000000000000000e+00,
+0.000000000000000e+00.

37. Appareil selon l'une quelconque des revendications 6 à 21, dans lequel la fonction de division en fenêtres de synthèse est définie de manière à présenter un premier dérivé numérique compris entre -0.01 et +0.01.

38. Appareil selon l'une quelconque des revendications 6 à 21, dans lequel la fonction de division en fenêtres de synthèse est définie de manière à présenter un deuxième dérivé numérique compris entre $-10^{-4}$ et $+10^{-4}$.

39. Appareil selon l'une quelconque des revendications 6 à 21, dans lequel la fonction de division en fenêtres de synthèse est définie de manière à présenter un deuxième dérivé numérique compris entre $-10^{-5}$ et $+10^{-5}$.

40. Procédé de codage d'un signal audio comprenant une pluralité de trames, le procédé comprenant le fait de:

effectuer une analyse de transformation cosinusoïdale modifiée, MDCT, pour transformer une représentation dans le domaine temporel, TD, du signal audio, ou d'une version traitée de ce dernier, en une représentation dans le domaine de la fréquence, FD, à l'aide d'une fonction de division en fenêtres d'analyse (40, 50, 240, 70) présentant une partie de croisement (44, 244) qui passe par une fonction linéaire (40', 240') en correspondance d'au moins quatre points (#1, #2, #3, #4),
dans lequel la fonction de division en fenêtres d'analyse est définie de manière à être asymétrique,
dans lequel la fonction de division en fenêtres d'analyse 40, 240) est définie de manière à être, dans la partie de croisement (44, 94, 244):

supérieure à la fonction linéaire (40', 240') dans un premier intervalle (41,241) entre un premier point de croisement (#1) et un deuxième point de croisement (#2);
inférieure à la fonction linéaire (40', 240') dans un deuxième intervalle (42, 242) entre le deuxième point de croisement (#2) et un troisième point de croisement (#3);

supérieure à la fonction linéaire (40', 240') dans un troisième intervalle (43, 243) entre le troisième point de croisement (#3) et un quatrième point de croisement (#4),

dans lequel la fonction de division en fenêtres d'analyse est définie de sorte que la valeur maximale absolue (41', 241') se situe dans l'un parmi le premier et le troisième intervalle,
**caractérisé par le fait que** la fonction linéaire (40, 240) est une fonction constante de valeur constante 1.

41. Procédé de décodage d'un signal audio, ou d'une version traitée de ce dernier, défini dans le domaine de la fréquence, FD, le procédé comprenant le fait de

effectuer une synthèse de transformation cosinusoïdale modifiée, MDCT, pour transformer la représentation FD d'un signal audio, ou d'une version traitée de ce dernier, en une représentation dans le domaine temporel, TD, à l'aide d'une fonction de division en fenêtres de synthèse (90) présentant une partie de croisement (94) qui passe par une fonction linéaire en correspondance d'au moins quatre points (#1, #2, #3, #4),
dans lequel la fonction de division en fenêtres de synthèse (90, 290) est définie de manière à être, dans la partie de croisement:

supérieure à la fonction linéaire dans un premier intervalle entre un premier point de croisement et un deuxième point de croisement;
inférieure à la fonction linéaire dans un deuxième intervalle entre le deuxième point de croisement et un troisième point de croisement;
supérieure à la fonction linéaire dans un troisième intervalle entre le troisième point de croisement et un quatrième point de croisement,

dans lequel la fonction de division en fenêtres d'analyse est définie de sorte que la valeur maximale absolue se situe dans l'un parmi le premier et le troisième intervalle,
**caractérisé par le fait que** la fonction linéaire est une fonction constante de valeur constante 1.

42. Unité de mémoire non transitoire mémorisant des instructions qui, lorsqu'elles sont exécutées sur un processeur, amènent le processeur à réaliser un procédé selon la revendication 40 ou 41.

Fig. 1
(PRIOR ART)

Fig. 2
(PRIOR ART)

Fig. 3

Fig. 4

Fig. 5

Fig. 6

Fig. 7

analysis
folding: 2N --> N

DCT kernel size N

synthesis
unfolding: N --> 2N and overlap add

Fig. 8

Fig. 9

Fig. 10

Fig. 11

Fig. 12

Fig. 13

Fig. 13A

EP 3 707 711 B1

Fig. 14

Fig. 14A

150

| Update input buffers | S151 |
|---|---|

| Transform from TD to FD | S152 |

Fig. 15

160

| Generate the time domain aliasing buffer | S161 |
|---|---|

| Window the time domain aliasing buffer | S162 |

| Conduct overlap-add operation to get reconstructed time samples | S163 |

Fig. 16

Fig. 17

Fig. 18

Fig. 19

Fig. 20
(PRIOR ART)

Fig. 21

Fig. 22

Fig. 23

EP 3 707 711 B1

Fig. 24

Fig. 25

Fig. 26

Fig. 27

EP 3 707 711 B1

Fig. 28

Fig. 29

Fig. 30

Fig. 31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2017011747 A1, FAURE JULIEN

- US 8847795 B, P. P. Julien Faure

### Non-patent literature cited in the description

- Biorthogonal and Nonuniform Lapped Transforms for Transform Coding with Reduced Blocking and Ringing Artifacts. **HENRIQUE S MALVAR.** IEEE TRANSACTIONS ON SIGNAL PROCESSING. IEEE SERVICE CENTER, April 1998, vol. 46
- ISO/IEC 14496-3:2005/FDAM 9, AAC-ELD. *82. MPEG MEETING;22-10-2007 - 26-10-2007; SHENZHEN; (MOTION PICTURE EXPERT GROUP OR ISO/IEC JTC1/SC29/WG11),* 21 February 2008, (N9499

- **DAVID VIRETTE.** *Low Delay Transform for High Quality Low Delay Audio Coding,* 10 December 2012, 1-195
- **GEIGER.** *Audio Coding based on integer transform,* 2004, https://www.db-thueringen.de/receive/dbt_mods_00010054